(19) Europäisches Patentamt
European Patent Office
Office européen des brevets

(11) EP 4 295 688 A1

# (12) EUROPEAN PATENT APPLICATION

(43) Date of publication:
**27.12.2023 Bulletin 2023/52**

(21) Application number: **22198328.1**

(22) Date of filing: **28.09.2022**

(51) International Patent Classification (IPC):
***A01N 43/82*** *(2006.01)* ***A01P 3/00*** *(2006.01)*

(52) Cooperative Patent Classification (CPC):
(C-Sets available)
**A01P 3/00; A01N 43/82** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer Aktiengesellschaft**
**51373 Leverkusen (DE)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

## (54) ACTIVE COMPOUND COMBINATION

(57) The present invention relates to an active compound combination comprising a compound of formula (I)

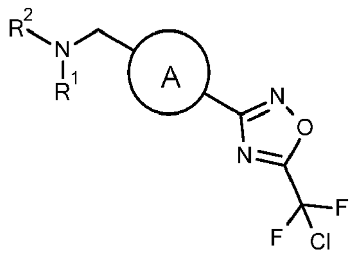

(I)

as defined in the application as well as a further fungicide, to a composition comprising such compound combination, and to the use thereof as biologically active agents, especially for control of harmful microorganisms in crop protection and in the protection of materials and as plant growth regulators.

EP 4 295 688 A1

(52) Cooperative Patent Classification (CPC): (Cont.)

C-Sets
**A01N 43/82, A01N 2300/00**

## Description

The present invention relates to an active compound combination, in particular within a fungicide composition, which comprises as compound (A) a compound of formula (I) and as compound (B) a further fungicide as specified below. Moreover, the invention relates to a fungicide composition comprising such compound combination and to the use of the compound combination and the fungicide composition as biologically active agent, especially for control of phytopathogenic fungi in crop protection and in the protection of industrial materials and as plant growth regulators.

Throughout this application the terms "composition" and "formulation" are used synonymously and refer to mixtures of a compound combination of the invention and at least one agriculturally suitable auxiliary.

Compounds of formula (I), preparation thereof, and their fungicidal efficacy are disclosed in PCT/EP2022/057944 and PCT/EP2022/057936.

Albeit compounds of formula (I) provide excellent means in protecting plants from diseases caused by fungi, there is still need to even improve those means in order to address the ever increasing environmental and economic requirements imposed on modem-day crop protection agents and compositions. This includes, for example, improvement to the spectrum of action, safety profile, selectivity, application rate, formation of residues, and favourable preparation ability, and development of new compositions to deal with potential problems, like resistances.

The present invention provides an active compound combination and composition comprising said combination which at least in some aspects achieve the stated objective.

Accordingly, the present invention provides an active compound combination comprising

(A) a compound of formula (I)

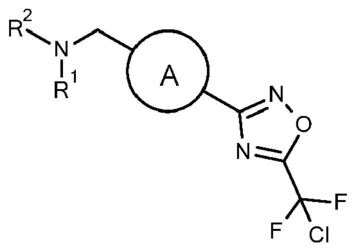

(I)

in which :

A is selected from the group consisting of

$A^1$ = 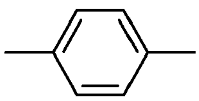 , $A^2$ = 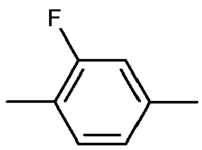 and $A^3$ = 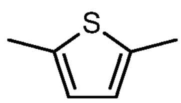 ,

$R^1$ is methoxy and

$R^2$ is (methoxyimino)carbonyl or 2-methoxypropanoyl, or

$R^1$ and $R^2$ form together with the nitrogen to which they are linked a pyrazole ring, which is substituted with one ethoxycarbonyl or ethynyl substituent;

or a salt or N-oxide thereof,
and

(B) a further active compound selected from the following groups

(1) inhibitors of the ergosterol synthesis,
(2) inhibitors of the respiratory chain at complex I or II,
(3) inhibitors of the respiratory chain at complex III,

(4) inhibitors of the mitosis and cell division,
(5) compounds capable of having a multisite action,
(6) compounds capable of inducing a host defense,
(7) inhibitors of the amino acid and/or protein biosynthesis,
(8) inhibitors of the ATP production,
(9) inhibitors of the cell wall synthesis,
(10) inhibitors of the lipid and membrane synthesis,
(11) inhibitors of the melanine biosynthesis,
(12) inhibitors of the nucleic acid synthesis,
(13) inhibitors of the signal transduction,
(14) compounds capable of acting as uncoupler,
(15) other fungicides,
(16) biological control agents.

*Compound (A)*

The active compound combination according to the invention comprises as compound (A) a compound of formula (I) or a salt or N-oxide thereof.

Preferably, the active compound combination comprises as compound (A) a compound of the formula (I) selected from the group consisting of the compounds of formulae (1.01), (1.02), (1.03), (1.04) and (I.05), or a salt or N-oxide thereof:

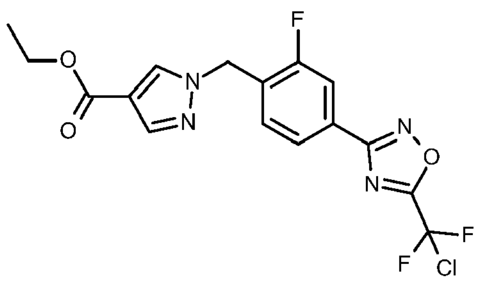
(I.01)

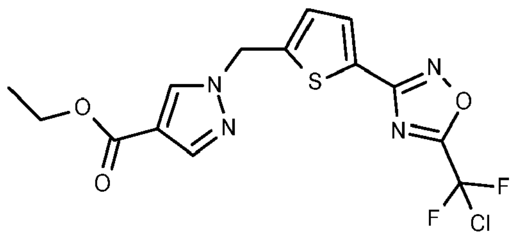
(I.02)

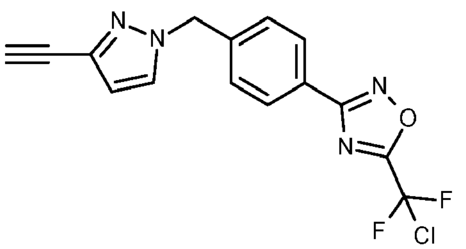
(I.03)

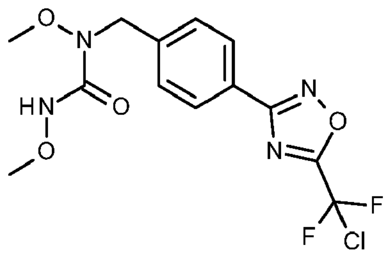
(I.04)

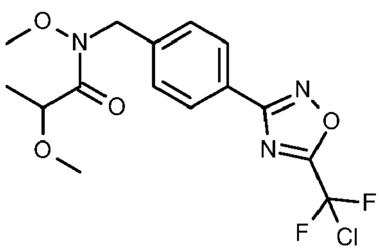
(I.05).

In a preferred embodiment, the active compound combination according to the invention comprises as compound (A) the compound of the formula (1.01)

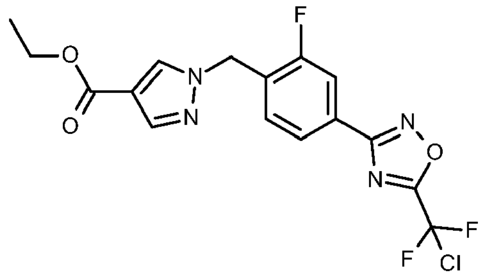

(I.01)

or a salt or N-oxide thereof.

In another preferred embodiment, the active compound combination according to the invention comprises as compound (A) the compound of the formula (1.02)

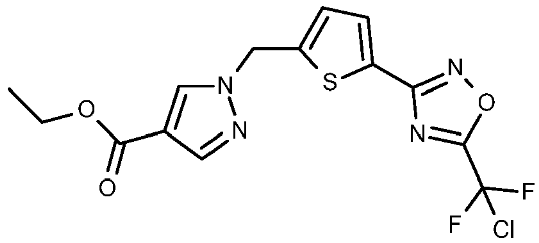

(I.02)

or a salt or N-oxide thereof.

In another preferred embodiment, the active compound combination according to the invention comprises as compound (A) the compound of the formula (1.03)

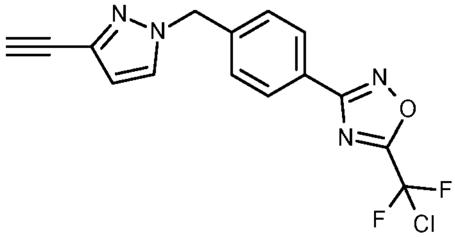

(I.03)

or a salt or N-oxide thereof.

In still another preferred embodiment, the active compound combination according to the invention comprises as compound (A) the compound of the formula (1.04)

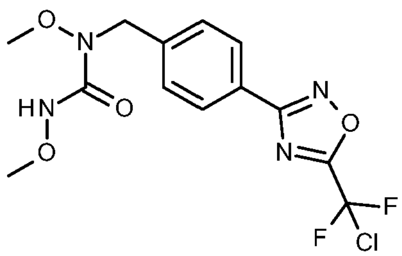

(I.04)

or a salt or N-oxide thereof.

In yet another preferred embodiment, the active compound combination according to the invention comprises as compound (A) the compound of the formula (1.05)

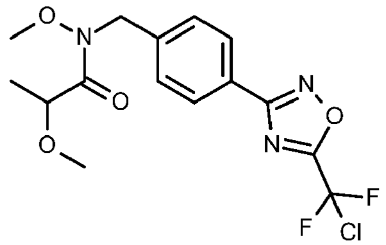

(I.05)

or a salt or N-oxide thereof.

The compound of formula (1.05) can exist in two optical isomer forms:

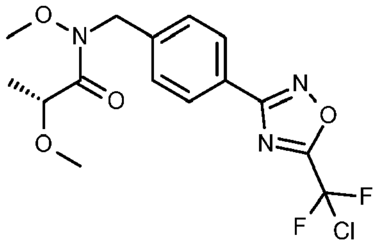

(I.05a) and

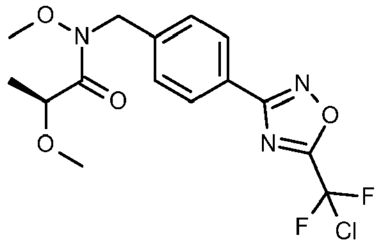

(I.05b).

The compound of formula (1.05) can therefore be present in the compound combination according to the invention in the form of the enantiomer (1.05a), in the form of the enantiomer (I.05b), or as racemic mixture or any scalemic mixture thereof (the term "scalemic" denotes a mixture of enantiomers in different proportions).

The compounds of formula (1.01), (1.02) and (1.03) can be synthesized according to the disclosure of PCT/EP2022/057936 and the compounds of formula (1.04) and (1.05) can be synthesized according to the disclosure of PCT/EP2022/057944 (see chapter "Processes for the preparation of compounds of formula (I) and intermediates in line with the disclosures of PCT/EP2022/057944 and PCT/EP2022/057936" further below).

The compound combination according to the invention may comprise 1, 2 or even more compounds (A). In one embodiment, the compound combination according to the invention comprises 1 or 2 compound(s) (A). In another embodiment, the compound combination according to the invention comprises 1 compound (A).

*Compound (B)*

The active compound combination according to the invention comprises as compound (B) a further active compound selected from the following groups

(1) inhibitors of the ergosterol biosynthesis,
(2) inhibitors of the respiratory chain at complex I or II,
(3) inhibitors of the respiratory chain at complex III,
(4) inhibitors of the mitosis and cell division,
(5) compounds capable of having a multisite action,
(6) compounds capable of inducing a host defense,
(7) inhibitors of the amino acid and/or protein biosynthesis,
(8) inhibitors of the ATP production,
(9) inhibitors of the cell wall synthesis,
(10) inhibitors of the lipid synthesis or transport, or membrane synthesis,
(11) inhibitors of the melanine biosynthesis,
(12) inhibitors of the nucleic acid synthesis,
(13) inhibitors of the signal transduction,
(14) compounds capable of acting as uncoupler,
(15) other fungicides, and
(16) biological fungicides.

Compound (B) is preferably selected from:

1) inhibitors of the ergosterol biosynthesis selected from the group consisting of (1.001) cyproconazole, (1.002) difenoconazole, (1.003) epoxiconazole, (1.004) fenbuconazole, (1.005) fenhexamid, (1.006) fenpropidin, (1.007) fenpropimorph, (1.008) fenpyrazamine, (1.009) Fluoxytioconazole, (1.010) fluquinconazole, (1.011) flutriafol, (1.012) hexaconazole, (1.013) imazalil, (1.014) imazalil sulfate, (1.015) ipconazole, (1.016) ipfentrifluconazole, (1.017) mefentrifluconazole, (1.018) metconazole, (1.019) myclobutanil, (1.020) paclobutrazol, (1.021) penconazole, (1.022) prochloraz, (1.023) propiconazole, (1.024) prothioconazole, (1.025) pyrisoxazole, (1.026) spiroxamine, (1.027) tebuconazole, (1.028) tetraconazole, (1.029) triadimenol, (1.030) tridemorph, (1.031) triticonazole, (1.032) (1R,2S,5S)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.034) (2R)-2-(1-chlorocyclopropyl)-4-[(1R)-2,2-dichlorocyclopropyl]-1-(1H-1,2,4-triazol-1-yl)butan-2-ol, (1.035) (2R)-2-(1-chlorocyclopropyl)-4-[(1S)-2,2-dichlorocyclopropyl]-1-(1H-1,2,4-triazol-1-yl)butan-2-ol, (1.036) (2R)-2-[4-(4-chlorophenoxy)-2-(trifluoromethyl)phenyl]-1-(1H-1,2,4-triazol-1-yl)propan-2-ol, (1.037) (2S)-2-(1-chlorocyclopropyl)-4-[(1R)-2,2-dichlorocyclopropyl]-1-(1H-1,2,4-triazol-1-yl)butan-2-ol, (1.038) (2S)-2-(1-chlorocyclopropyl)-4-[(1S)-2,2-dichlorocyclopropyl]-1-(1H-1,2,4-triazol-1-yl)butan-2-ol, (1.039) (2S)-2-[4-(4-chlorophenoxy)-2-(trifluoromethyl)phenyl]-1-(1H-1,2,4-triazol-1-yl)propan-2-ol, (1.040) (R)-[3-(4-chloro-2-fluorophenyl)-5-(2,4-difluorophenyl)-1,2-oxazol-4-yl](pyridin-3-yl)methanol, (1.041) (S)-[3-(4-chloro-2-fluorophenyl)-5-(2,4-difluorophenyl)-1,2-oxazol-4-yl](pyridin-3-yl)methanol, (1.042) [3-(4-chloro-2-fluorophenyl)-5-(2,4-difluorophenyl)-1,2-oxazol-4-yl](pyridin-3-yl)methanol, (1.043) 1-({(2R,4S)-2-[2-chloro-4-(4-chlorophenoxy)phenyl]-4-methyl-1,3-dioxolan-2-yl}methyl)-1H-1,2,4-triazole, (1.044) 1-({(2S,4S)-2-[2-chloro-4-(4-chlorophenoxy)phenyl]-4-methyl-1,3-dioxolan-2-yl}methyl)-1H-1,2,4-triazole, (1.045) 1-{[3-(2-chlorophenyl)-2-(2,4-difluorophenyl)oxiran-2-yl]methyl}-1H-1,2,4-triazol-5-yl thiocyanate, (1.046) 1-{[rel(2R,3R)-3-(2-chlorophenyl)-2-(2,4-difluorophenyl)oxiran-2-yl]methyl}-1H-1,2,4-triazol-5-yl thiocyanate, (1.047) 1-{[rel(2R,3S)-3-(2-chlorophenyl)-2-(2,4-difluorophenyl)oxiran-2-yl]methyl}-1H-1,2,4-triazol-5-yl thiocyanate, (1.048) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.049) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.050) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.051) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.052) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.053) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.054) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.055) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.056) 2-[1-(2,4-dichlorophenyl)-5-hydroxy-2,6,6-trimethylheptan-4-yl]-2,4-dihydro-3H-1,2,4-triazole-3-thione, (1.057) 2-[6-(4-bromophenoxy)-2-(trifluoromethyl)-3-pyridyl]-1-(1,2,4-triazol-1-yl)propan-2-ol, (1.058) 2-[6-(4-chlorophenoxy)-2-(trifluoromethyl)-3-pyridyl]-1-(1,2,4-triazol-1-yl)propan-2-ol, (1.059) 2-{[3-(2-chlorophenyl)-2-(2,4-difluorophenyl)oxiran-2-yl]methyl}-2,4-dihydro-3H-1,2,4-triazole-3-thione, (1.060) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.061) 2-{[rel(2R,3S)-3-(2-chlorophenyl)-2-(2,4-difluorophenyl)oxiran-2-yl]methyl}-2,4-dihydro-3H-1,2,4-triazole-3 -thione, (1.062) 3-[2-(1-chlorocyclopropyl)-3 -(3 -chloro-2-fluoro-phenyl)-2-hydroxy-propyl]imidazole-4-carbonitrile, (1.063) 5-(4-chlorobenzyl)-2-(chloromethyl)-2-methyl-1-(1H-1,2,4-triazol-1-ylmethyl)cyclopentanol, (1.064) 5-(allylsulfanyl)-1-{[3-(2-chlorophenyl)-2-(2,4-difluorophenyl)oxiran-2-yl]methyl}-1H-1,2,4-triazole, (1.065) 5-(allylsulfanyl)-1-{[rel(2R,3R)-3-(2-chlorophenyl)-2-(2,4-difluorophenyl)oxiran-2-yl]methyl}-1H-1,2,4-triazole, (1.066) 5-(allylsulfanyl)-1-{[rel(2R,3S)-3-(2-chlorophenyl)-2-(2,4-difluorophenyl)oxiran-2-yl]methyl}-1H-1,2,4-triazole, (1.067) methyl 2-[2-chloro-4-(4-chlorophenoxy)phenyl]-2-hydroxy-3-(1H-1,2,4-triazol-1-yl)propanoate, (1.068) N'-(2,5-dimethyl-4-(2-methylbenzyl)phenyl)-N-ethyl-N-methylformimidamide, (1.069) N'-(2-chloro-4-(4-cyanobenzyl)-5-methylphenyl)-N-ethyl-N-methylformimidamide, (1.070) N'-(2-chloro-4-(4-methoxybenzyl)-5-methylphenyl)-N-ethyl-N-methylformimidamide, (1.071) N'-(2-chloro-5-methyl-4-phenoxyphenyl)-N-ethyl-N-methylimidoformamide, (1.072) N'-(4-benzyl-2-chloro-5-methylphenyl)-N-ethyl-N-methylformimidamide, (1.073) N'-[2-chloro-4-(2-fluorophenoxy)-5-methylphenyl]-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-2-methyl-6-[(1-propoxypropan-2-yl)oxy]pyridin-3-yl}-N-ethyl-N-methylimidoformamide, (1.077) N'-{5-bromo-6-[(1R)-1-(3,5-difluorophenyl)ethoxy]-2-methylpyridin-3-yl}-N-ethyl-N-methylimidoformamide, (1.078) N'-{5-bromo-6-[(1S)-1-(3,5-difluorophenyl)ethoxy]-2-methylpyridin-3-yl}-N-ethyl-N-methylimidoformamide, (1.079) N'-{5-bromo-6-[(cis-4-isopropylcyclohexyl)oxy]-2-methylpyridin-3-yl}-N-ethyl-N-methylimidoformamide, (1.080) N'-{5-bromo-6-[(trans-4-isopropylcyclohexyl)oxy]-2-methylpyridin-3-yl}-N-ethyl-N-methylimidoformamide, (1.081) N'-{5-bromo-6-[1-(3,5-difluorophenyl)ethoxy]-2-methylpyridin-3-yl}-N-ethyl-N-methylimidoformamide, (1.082) N-isopropyl-N'-[5-methoxy-2-methyl-4-(2,2,2-trifluoro-1-hydroxy-1-phenylethyl)phenyl]-N-methylimidoformamide and (1.083) p-tolylmethyl 4-[(E)-[ethyl(methyl)amino]methyleneamino]-2,5-dimethyl-benzoate;

2) inhibitors of the respiratory chain at complex I or II selected from the group consisting of (2.001) benzovindiflupyr, (2.002) bixafen, (2.003) boscalid, (2.004) carboxin, (2.005) cyclobutrifluram, (2.006) flubeneteram, (2.007) fluindapyr, (2.008) fluopyram, (2.009) flutolanil, (2.010) fluxapyroxad, (2.011) furametpyr, (2.012) inpyrfluxam, (2.013) Isofetamid, (2.014) isoflucypram, (2.015) isopyrazam, (2.016) penflufen, (2.017) penthiopyrad, (2.018) pydiflumetofen, (2.019) pyrapropoyne, (2.020) pyraziflumid, (2.021) sedaxane, (2.022) Thifluzamide (aka trifluzamide), (2.023) 5,8-difluoro-N-[2-(2-fluoro-4-{[4-(tnfluoromethyl)pyridin-2-yl]oxy}phenyl)ethyl]quinazolin-4-amine, (2.024) 5-chloro-N-[2-[1-(4-chlorophenyl)pyrazol-3-yl]oxyethyl]-6-ethyl-pyrimidin-4-amine, (2.025) N-[2-[1-(4-chlorophenyl)pyrazol-3-yl]oxyethyl]quinazolin-4-amine, (2.026) 1,3-dimethyl-N-(1,1,3-trimethyl-2,3-dihydro-1H-inden-4-yl)-1H-pyrazole-4-carboxamide, (2.027) 1,3-dimethyl-N-[(3R)-1,1,3-trimethyl-2,3-dihydro-1H-inden-4-yl]-1H-pyrazole-4-carboxamide, (2.028) 1,3-dimethyl-N-[(3S)-1,1,3-trimethyl-2,3-dihydro-1H-inden-4-yl]-1H-pyrazole-4-carboxamide, (2.029) 1-methyl-3-(trifluoromethyl)-N-[2'-(trifluoromethyl)biphenyl-2-yl]-1H-pyrazole-4-carboxamide, (2.03 0) 2-fluoro-6-(trifluoromethyl)-N-(1,1,3 -trimethyl-2,3 -dihydro- 1H-inden-4-yl)benzamide, (2.031) 3-(difluoromethyl)-1-methyl-N-(1,1,3-trimethyl-2,3-dihydro-1H-inden-4-yl)-1H-pyrazole-4-carboxamide, (2.032) 3-(difluoromethyl)-1-methyl-N-[(3S)-1,1,3-trimethyl-2,3-dihydro-1H-inden-4-yl]-1H-pyrazole-4-carboxamide, (2.033) 3-(difluoromethyl)-N-[(3R)-7-fluoro-1,1,3-trimethyl-2,3-dihydro-1H-inden-4-yl]-1-methyl-1H-pyrazole-4-carboxamide, (2.034) 3-(difluoromethyl)-N-[(3S)-7-fluoro-1,1,3 -trimethyl-2,3-dihydro-1H-inden-4-yl]-1-methyl- 1H-pyrazole-4-carboxamide, (2.035) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.036) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.037) N-[1-(2,4-dichlorophenyl)-1-methoxypropan-2-yl]-3 -(difluoromethyl)-1-methyl-1H-pyrazole-4-carboxamide and (2.038) N-[rac-(1S,2S)-2-(2,4-dichlorophenyl)cyclobutyl]-2-(trifluoromethyl)nicotinamide;

3) inhibitors of the respiratory chain at complex III selected from the group consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) fenpicoxamid, (3.012) florylpicoxamid, (3.013) flufenoxystrobin, (3.014) fluoxastrobin, (3.015) kresoxim-methyl, (3.016) mandestrobin, (3.017) metarylpicoxamid, (3.018) metominostrobin, (3.019) metyltetraprole, (3.020) orysastrobin, (3.021) picoxystrobin, (3.022) pyraclostrobin, (3.023) pyrametostrobin, (3.024) pyraoxystrobin, (3.025) trifloxystrobin, (3.026) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.027) (2E,3Z)-5-{[1-(4-chloro-2-fluorophenyl)-1H-pyrazol-3-yl]oxy}-2-(methoxyimino)-N,3-dimethylpent-3-enamide, (3.028) (2E,3Z)-5-{[1-(4-chlorophenyl)-1H-pyrazol-3-yl]oxy}-2-(methoxyimino)-N,3-dimethylpent-3-enamide, (3.029) (2R)-2-{2-[(2,5-dimethylphenoxy)methyl]phenyl}-2-methoxy-N-methylacetamide, (3.030) (2S)-2-{2-[(2,5-dimethylphenoxy)methyl]phenyl}-2-methoxy-N-methylacetamide, (3.031) (Z,2E)-5-[1-(2,4-dichlorophenyl)pyrazol-3-yl]oxy-2-methoxyimino-N,3-dimethyl-pent-3-enamide, (3.032) methyl (Z)-2-(5-cyclohexyl-2-methyl-phenoxy)-3-methoxy-prop-2-enoate, (3.033) methyl (Z)-2-(5-cyclopentyl-2-methyl-phenoxy)-3-methoxy-prop-2-enoate, (3.034) methyl (Z)-3-methoxy-2-[2-methyl-5-(3-propylpyrazol-1-yl)phenoxy]prop-2-enoate, (3.035) methyl (Z)-3-methoxy-2-[2-methyl-5-[3-(trifluoromethyl)pyrazol-1-yl]phenoxy]prop-2-enoate, (3.036) methyl {5-[3-(2,4-dimethylphenyl)-1H-pyrazol-1-yl]-2-methylbenzyl}carbamate, (3.037) [rac-2-(4-bromo-7-fluoro-indol-1-yl)-1-methyl-propyl] (2S)-2-[(3-hydroxy-4-methoxy-pyridine-2-carbonyl)amino]propanoate, (3.038) [rac-2-(7-bromo-4-fluoro-indol-1-yl)-1-methyl-propyl] (2S)-2-[(3-acetoxy-4-methoxy-pyridine-2-carbonyl)amino]propanoate, (3.039) [rac-2-(7-bromoindol-1-yl)-1-methyl-propyl] (2S)-2-[(3-hydroxy-4-methoxy-pyridine-2-carbonyl)amino]propanoate, (3.040) [rac-2-(3,5-dichloro-2-pyridyl)-1-methyl-propyl] (2S)-2-[(3-hydroxy-4-methoxy-pyridine-2-carbonyl)amino]propanoate, (3.041) [(1S)-1-[1-(1-naphthyl)cyclopropyl]ethyl] (2S)-2-[(3-acetoxy-4-methoxy-pyridine-2-carbonyl)amino]propanoate, (3.042) [(1S)-1-[1-(1-naphthyl)cyclopropyl]ethyl] (2S)-2-[(3-hydroxy-4-methoxy-pyridine-2-carbonyl)amino]propanoate, (3.043) [(1S)-1-[1-(1-naphthyl)cyclopropyl]ethyl] (2S)-2-[[3-(acetoxymethoxy)-4-methoxy-pyridine-2-carbonyl]amino]propanoate, (3.044) [2-[[(1S)-2-[(1RS,2SR)-2-(3,5-dichloro-2-pyridyl)-1-methyl-propoxy]-1-methyl-2-oxo-ethyl]carbamoyl]-4-methoxy-3-pyridyl]oxymethyl 2-methylpropanoate and (3.045) N-(3 -ethyl-3,5,5-trimethylcyclohexyl)-3-formamido-2-hydroxybenzamide;

4) inhibitors of the mitosis and cell division selected from the group consisting of (4.001) carbendazim, (4.002) diethofencarb, (4.003) ethaboxam, (4.004) fluopicolide, (4.005) fluopimomide, (4.006) metrafenone, (4.007) pencycuron, (4.008) pyridachlometyl, (4.009) pyriofenone (chlazafenone), (4.010) thiabendazole, (4.011) thiophanate-methyl, (4.012) zoxamide, (4.013) 3-chloro-5-(4-chlorophenyl)-4-(2,6-difluorophenyl)-6-methylpyridazine, (4.014) 3-chloro-5-(6-chloropyridin-3-yl)-6-methyl-4-(2,4,6-trifluorophenyl)pyridazine, (4.015) 4-(2-bromo-4-fluorophenyl)-N-(2,6-difluorophenyl)-1,3-dimethyl-1H-pyrazol-5-amine, (4.016) 4-(2-bromo-4-fluorophenyl)-N-(2-bromo-6-fluorophenyl)-1,3-dimethyl-1H-pyrazol-5-amine, (4.017) 4-(2-bromo-4-fluorophenyl)-N-(2-bromophenyl)-1,3-dimethyl-1H-pyrazol-5-amine, (4.018) 4-(2-bromo-4-fluorophenyl)-N-(2-chloro-6-fluorophenyl)-1,3-dimethyl-1H-pyrazol-5-amine, (4.019) 4-(2-bromo-4-fluorophenyl)-N-(2-chlorophenyl)-1,3-dimethyl-1H-pyrazol-5-amine, (4.020) 4-(2-bromo-4-fluorophenyl)-N-(2-fluorophenyl)-1,3-dimethyl-1H-pyrazol-5-amine, (4.021) 4-(2-chloro-4-fluorophenyl)-N-(2,6-difluorophenyl)-1,3-dimethyl-1H-pyrazol-5-amine, (4.022) 4-(2-chloro-4-fluorophenyl)-N-(2-chloro-6-fluorophenyl)-1,3-dimethyl-1H-pyrazol-5-amine, (4.023) 4-(2-chloro-4-fluorophenyl)-N-(2-chlorophenyl)-1,3-dimethyl-1H-pyrazol-5-amine, (4.024) 4-(2-chloro-4-fluorophenyl)-N-(2-fluorophenyl)-1,3-dimethyl-1H-pyrazol-5-amine, (4.025) 4-(4-chlorophenyl)-5-(2,6-difluorophenyl)-3,6-dimethylpyridazine, (4.026) N-(2-bromo-6-fluorophenyl)-4-(2-chloro-4-fluorophenyl)-1,3-dimethyl-1H-pyrazol-5-amine, (4.027) N-(2-bromophenyl)-4-(2-chloro-4-fluorophenyl)-1,3-dimethyl-1H-pyrazol-5-amine and (4.028) N-(4-chloro-2,6-difluorophenyl)-4-(2-chloro-4-fluorophenyl)-1,3-dimethyl-1H-pyrazol-5-amine;

5) compounds capable to have a multisite action selected from the group consisting of (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram and (5.023) 6-ethyl-5,7-dioxo-6,7-dihydro-5H-pyrrolo[3',4':5,6][1,4]dithiino[2,3-c][1,2]thiazole-3-carbonitrile;

6) compounds capable to induce a host defence selected from the group consisting of (6.001) acibenzolar-S-methyl, (6.002) fosetyl-aluminium, (6.003) fosetyl-calcium, (6.004) fosetyl-sodium, (6.005) isotianil, (6.006) phosphorous acid and its salts, (6.007) probenazole and (6.008) tiadinil;

7) inhibitors of the amino acid and/or protein biosynthesis selected from the group consisting of (7.001) cyprodinil, (7.002) kasugamycin, (7.003) kasugamycin hydrochloride hydrate, (7.004) oxytetracycline and (7.005) pyrimethanil;

8) inhibitors of the ATP production: (8.001) silthiofam;

9) inhibitors of the cell wall synthesis selected from the group consisting of (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one and (9.009) (2Z)-3-(4-tert-butylphenyl)-3-(2-chloropyridin-4-yl)-1-(morpholin-4-yl)prop-2-en-1-one;

10) inhibitors of the lipid synthesis or transport, or membrane synthesis selected from the group consisting of (10.001) fluoxapiprolin, (10.002) natamycin, (10.003) oxathiapiprolin, (10.004) propamocarb, (10.005) propamocarb hydrochloride, (10.006) propamocarb-fosetylate, (10.007) tolclofos-methyl, (10.008) 1-(4-{4-[(5R)-5-(2,6-diffuorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.009) 1-(4-{4-[(5S)-5-(2,6-difluorophenyl)-4,5-dihydro-1,2-oxazol-3 -yl] -1,3 -thiazol-2-yl}piperidin-1-yl)-2-[5-methyl-3-(trifluoromethyl)-1H-pyrazol-1-yl]ethanone, (10.010) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (10.011) 2-[3,5-bis(difluoromethyl)-1H-pyrazol-1-yl]-1-[4-(4-{ 5-[2-chloro-6-(prop-2-yn-1-yloxy)phenyl]-4,5-dihydro-1,2-oxazol-3-yl}-1,3-thiazol-2-yl)piperidin-1-yl]ethanone, (10.012) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (10.013) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.014) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.015) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (10.016) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.017) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.018) 3-[2-(1-{[3,5-bis(diffuoromethyl)-1H-pyrazol-1-yl]acetyl}piperidin-4-yl)-1,3 -thiazol-4-yl]-1,5-dihydro-2,4-benzodioxepin-6-yl methanesulfonate and (10.019) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate;

11) inhibitors of the melanin biosynthesis selected from the group consisting of (11.001) tolprocarb and (11.002) tricyclazole;

12) inhibitors of the nucleic acid synthesis selected from the group consisting of (12.001) benalaxyl, (12.002) benalaxyl-M (kiralaxyl), (12.003) metalaxyl and (12.004) metalaxyl-M (mefenoxam);

13) inhibitors of the signal transduction selected from the group consisting of (13.001) fludioxonil, (13.002) iprodione, (13.003) procymidone, (13.004) proquinazid, (13.005) quinoxyfen and (13.006) vinclozolin;

14) compounds capable to act as an uncoupler selected from the group consisting of (14.001) fluazinam and (14.002) meptyldinocap; and

15) further compounds selected from the group consisting of (15.001) abscisic acid, (15.002) aminopyrifen, (15.003) benthiazole, (15.004) bethoxazin, (15.005) capsimycin, (15.006) carvone, (15.007) chinomethionat, (15.008) chloroinconazide, (15.009) cufraneb, (15.010) cyflufenamid, (15.011) cymoxanil, (15.012) cyprosulfamide, (15.013) dipymetitrone, (15.014) D-tagatose, (15.015) flufenoxadiazam, (15.016) flumetylsulforim, (15.017) flutianil, (15.018) ipflufenoquin, (15.019) methyl isothiocyanate, (15.020) mildiomycin, (15.021) nickel dimethyldithiocarbamate, (15.022) nitrothal-isopropyl, (15.023) oxyfenthiin, (15.024) pentachlorophenol and salts, (15.025) picarbutrazox, (15.026) quinofumelin, (15.027) tebufloquin, (15.028) tecloftalam, (15.029) tolnifanide, (15.030) 2-(6-benzylpyridin-2-yl)quinazoline, (15.031) 2-[6-(3-fluoro-4-methoxyphenyl)-5-methylpyridin-2-yl]quinazoline, (15.032) 2-phenylphenol and salts, (15.033) 4-amino-5-fluoropyrimidin-2-ol (tautomeric form: 4-amino-5-fluoropyrimidin-2(1H)-one), (15.034) 4-oxo-4-[(2-phenylethyl)amino]butanoic acid, (15.035) 5-amino-1,3,4-thiadiazole-2-thiol, (15.036) 5-chloro-N'-phenyl-N'-(prop-2-yn-1-yl)thiophene-2-sulfonohydrazide, (15.037) 5-fluoro-2-[(4-fluorobenzyl)oxy]pyrimidin-4-amine, (15.038) 5-fluoro-2-[(4-methylbenzyl)oxy]pyrimidin-4-amine, (15.039) but-3-yn-1-yl {6-[({[(Z)-(1-methyl-1H-tetrazol-5-yl)(phenyl)methylene]amino}oxy)methyl]pyridin-2-yl}carbamate, (15.040) ethyl (2Z)-3-amino-2-cyano-3-phenylacrylate, (15.041) methyl 2-[acetyl-[2-ethylsulfonyl-4-(trifluoromethyl)benzoyl]amino]-5-(trifluoromethoxy)benzoate, (15.042) N-acetyl-N-[2-bromo-4-(trifluoromethoxy)phenyl]-2-ethylsulfonyl-4-(trifluoromethyl)benzamide, (15.043) phenazine-1-carboxylic acid, (15.044) propyl 3,4,5-trihydroxybenzoate, (15.045) quinolin-8-ol, (15.046) quinolin-8-ol sulfate (2:1), (15.047) (2R)-2-benzyl-N-(8-fluoro-2-methyl-3-quinolyl)-2,4-dimethyl-pentanamide, (15.048) (2S)-2-benzyl-N-(8-fluoro-2-methyl-3-quinolyl)-2,4-dimethyl-pentanamide, (15.049) 1-(4,5-dimethyl-1H-benzimidazol-1-yl)-4,4-difluoro-3,3-dimethyl-3,4-dihydroisoquinoline, (15.050) 1-(4,5-dimethylbenzimidazol-1-yl)-4,4,5-trifluoro-3,3-dimethyl-isoquinoline, (15.051) 1-(5-(fluoromethyl)-6-methyl-pyridin-3-yl)-4,4-difluoro-3,3-dimethyl-3,4-dihydroisoquinoline, (15.052) 1-(5,6-dimethylpyridin-3-yl)-4,4-difluoro-3,3-dimethyl-3,4-dihydroisoquinoline, (15.053) 1-(6-(difluoromethyl)-5-methoxy-pyridin-3-yl)-4,4-difluoro-3,3-dimethyl-3,4-dihydroisoquinoline, (15.054) 1-(6-(difluoromethyl)-5-methyl-pyridin-3-yl)-4,4-difluoro-3,3-dimethyl-3,4-dihydroisoquinoline, (15.055) 1-(6,7-dimethylpyrazolo[1,5-a]pyridin-3-yl)-4,4,5-trifluoro-3,3-dimethyl-isoquinoline, (15.056) 1-(6,7-dimethylpyrazolo[1,5-a]pyridin-3-yl)-4,4-difluoro-3,3-dimethyl-3,4-dihydroisoquinoline, (15.057) 2-{2-fluoro-6-[(8-fluoro-2-methylquinolin-3-yl)oxy]phenyl}propan-2-ol, (15.058) 3-(4,4,5-trifluoro-3,3-dimethyl-3,4-dihydroisoquinolin-1-yl)quinoline, (15.059) 3-(4,4-difluoro-3,3-dimethyl-3,4-dihydroisoquinolin-1-yl)-8-fluoroquinoline, (15.060) 3-(4,4-difluoro-5,5-dimethyl-4,5-dihydrothieno[2,3-c]pyridin-7-yl)quinoline, (15.061) 3-(5-fluoro-3,3,4,4-tetramethyl-3,4-dihydroisoquinolin-1-yl)quinoline, (15.062) 4,4-difluoro-3,3 -dimethyl-1-(4-methylbenzimidazol-1-yl)isoquinoline, (15.063) 4,4-difluoro-3,3-dimethyl-1-(6-methylpyrazolo[1,5-a]pyridin-3-yl)isoquinoline, (15.064) 5-bromo-1-(5,6-dimethylpyridin-3-yl)-3,3-dimethyl-3,4-dihydroisoquinoline, (15.065) 7,8-difluoro-N-[rac-1-benzyl-1,3-dimethyl-butyl]quinoline-3-carboxamide, (15.066) 8-fluoro-3-(5-fluoro-3,3,4,4-tetramethyl-3,4-dihydroisoquinolin-1-yl)-quinoline, (15.067) 8-fluoro-3-(5-fluoro-3,3-dimethyl-3,4-dihydroisoquinolin-1-yl)-quinoline, (15.068) 8-fluoro-N-(4,4,4-trifluoro-2-methyl-1-phenylbutan-2-yl)quinoline-3-carboxamide, (15.069) 8-fluoro-N-[(1R)-1-[(3-fluorophenyl)methyl]-1,3-dimethylbutyl]quinoline-3-carboxamide, (15.070) 8-fluoro-N-[(1S)-1-[(3-fluorophenyl)methyl]-1,3-dimethylbutyl]quinoline-3-carboxamide, (15.071) 8-fluoro-N-[(2S)-4,4,4-trifluoro-2-methyl-1-phenylbutan-2-yl]quinoline-3-carboxamide, (15.072) 8-fluoro-N-[rac-1-[(3-fluorophenyl)methyl]-1,3-dimethylbutyl]quinoline-3-carboxamide, (15.073) 9-fluoro-2,2-dimethyl-5-(quinolin-3-yl)-2,3-dihydro-1,4-benzoxazepine, (15.074) N-(2,4-dimethyl-1-phenylpentan-2-yl)-8-fluoroquinoline-3-carboxamide, (15.075) N-[(1R)-1-benzyl-1,3-dimethyl-butyl]-7,8-difluoro-quinoline-3-carboxamide, (15.076) N-[(1S)-1-benzyl-1,3-dimethyl-butyl]-7,8-difluoro-quinoline-3-carboxamide, (15.077) N-[(2R)-2,4-dimethyl-1-phenylpentan-2-yl]-8-fluoroquinoline-3-carboxamide, (15.078) rac-2-benzyl-N-(8-fluoro-2-methyl-3-quinolyl)-2,4-dimethyl-pentanamide, (15.079) 1,1-diethyl-3-[[4-[5-(trifluoromethyl)-1,2,4-oxadiazol-3-yl]phenyl]methyl]urea, (15.080) 1,3-dimethoxy-1-[[4-[5-(trifluoromethyl)-1,2,4-oxadiazol-3-yl]phenyl]methyl]urea, (15.081) 1-[[3-fluoro-4-(5-(trifluoromethyl)-1,2,4-oxadiazol-3-yl)phenyl]methyl]azepan-2-one, (15.082) 1-[[4-[5-(trifluoromethyl)-1,2,4-oxadiazol-3-yl]phenyl]methyl]piperidin-2-one, (15.083) 1-methoxy-1-methyl-3-[[4-[5-(trifluoromethyl)-1,2,4-oxadiazol-3-yl]phenyl]methyl]urea, (15.084) 1-methoxy-3-methyl-1-[[4-[5-(trifluoromethyl)-1,2,4-oxadiazol-3-yl]phenyl]methyl]urea, (15.085) 1-methoxy-3-methyl-1-[[4-[5-(trifluoromethyl)-1,2,4-oxadiazol-3-yl]phenyl]methyl]urea, (15.086) 2-(difluoromethyl)-5-[2-[1-(2,6-difluorophenyl)cyclopropoxy]pyrimidin-5-yl]-1,3,4-oxadiazole, (15.087) 2,2-difluoro-N-methyl-2-[4-[5-(trifluoromethyl)-1,2,4-oxadiazol-3-yl]phenyl]acetamide, (15.088) 3,3-dimethyl-1-[[4-[5-(trifluoromethyl)-1,2,4-oxadiazol-3-yl]phenyl]methyl]piperidin-2-one, (15.089) 3-ethyl-1-methoxy-1-[[4-[5-(trifluoromethyl)-1,2,4-oxadiazol-3-yl]phenyl]methyl]urea, (15.090) 4,4-dimethyl-1-[[4-[5-(trifluoromethyl)-1,2,4-oxadiazol-3-yl]phenyl]methyl]pyrrolidin-2-one, (15.091) 4,4-dimethyl-2-[[4-[5-(trifluoromethyl)-l,2,4-oxadiazol-3-yl]phenyl]methyl]isoxazolidin-3-one, (15.092) 4-[5-(trifluoromethyl)-1,2,4-oxadiazol-3-yl]phenyl dimethylcarbamate, (15.093) 5,5-dimethyl-2-[[4-[5-(trifluoromethyl)-1,2,4-oxadiazol-3-yl]phenyl]methyl]isoxazolidin-3-one, (15.094) 5-[5-(difluoromethyl)-1,3,4-oxadiazol-2-yl]-N-[(1R)-1-(2,6-difluorophenyl)ethyl]pyrimidin-2-amine, (15.095) 5-[5-(difluoromethyl)-1,3,4-oxadiazol-2-yl]-N-[(1R)-1-(2,6-difluorophenyl)propyl]pyrimidin-2-amine, (15.096) 5-[5-(difluoromethyl)-1,3,4-oxadiazol-2-yl]-N-[(1R)-1-(2-fluorophenyl)ethyl]pyrimidin-2-amine, (15.097) 5-[5-(difluorometliyl)-1,3,4-oxadiazol-2-yl]-N-[(1R)-1-(2-fluorophenyl)ethyl]pyrimidin-2-amine, (15.098) 5-[5-(difluorometliyl)-1,3,4-oxadiazol-2-yl]-N-[(1R)-1-(3,5-difluorophenyl)ethyl]pyrimidin-2-amine, (15.099) 5-[5-(difluoromethyl)-1,3,4-oxadiazol-2-yl]-N-[(1R)-1-phenylethyl]pyrimidin-2-amine, (15.100) 5-[5-(difluoromethyl)-1,3,4-oxadiazol-2-yl]-N-[1-(2-fluorophenyl)cyclopropyl]pyrimidin-2-amine, (15.101) 5 -methyl-1-[[4-[5 - (trifluoromethyl)-1,2,4-oxadiazol-3-yl]phenyl]methyl]pyrrolidin-2-one, (15.102) ethyl 1-{4-[5-(trifluoromethyl)-1,2,4-oxadiazol-3-yl]benzyl}-1H-pyrazole-4-carboxylate, (15.103) methyl {4-[5-(trifluoromethyl)-1,2,4-oxadiazol-3-yl]phenyl}carbamate, (15.104) N-(1-methylcyclopropyl)-4-[5-(trifluoromethyl)-1,2,4-oxadiazol-3-yl]benzamide, (15.105) N-(2,4-difluorophenyl)-4-[5-(trifluoromethyl)-1,2,4-oxadiazol-3-yl]benzamide, (15.106) N,2-dimethoxy-N-[[4-[5-(trifluoromethyl)-1,2,4-oxadiazol-3-yl]phenyl]methyl]propanamide, (15.107) N,N-dimethyl-1-{4-[5-(trifluoromethyl)-1,2,4-oxadiazol-3-yl]benzyl}-1H-1,2,4-triazol-3-amine, (15.108) N-[(E)-methoxyiminomethyl]-4-[5-(trifluoromethyl)-1,2,4-oxadiazol-3-yl]benzamide, (15.109) N-[(E)-N-methoxy-C-methyl-carbonimidoyl]-4-[5-(trifluoromethyl)-1,2,4-oxadiazol-3-yl]benzamide, (15.110) N-[(Z)-methoxyiminomethyl]-4-[5-(trifluoromethyl)-1,2,4-oxadiazol-3-yl]benzamide, (15.111) N-[(Z)-N-methoxy-C-methyl-carbonimidoyl]-4-[5-(trifluoromethyl)-1,2,4-oxadiazol-3-yl]benzamide, (15.112) N-[[2,3-difluoro-4-[5-(trifluoromethyl)-1,2,4-oxadiazol-3-yl]phenyl]methyl]-3,3,3-trifluoro-propanamide, (15.113) N-[[4-[5-(trifluoromethyl)-1,2,4-oxadiazol-3-yl]phenyl]methyl]propanamide, (15.114) N-[4-[5-(trifluoromethyl)-1,2,4-oxadiazol-3-yl]phenyl]cyclopropanecarboxamide, (15.115) N-{2,3-difluoro-4-[5-(trifluoromethyl)-1,2,4-oxadiazol-3-yl]benzyl}butanamide, (15.116) N-{4-[5-(trifluoromethyl)-1,2,4-oxadiazol-3-yl]benzyl}cyclopropanecarboxamide, (15.117) N-{4-[5-(trifluoromethyl)-1,2,4-oxadiazol-3-yl]phenyl}propanamide, (15.118) N-allyl-N-[[4-[5-(trifluoromethyl)-1,2,4-oxadiazol-3-yl]phenyl]methyl]acetamide, (15.119) N-allyl-N-[[4-[5-(trifluoromethyl)-1,2,4-oxadiazol-3-yl]phenyl]methyl]propanamide, (15.120) N-ethyl-2-methyl-N-[[4-[5-(trifluoromethyl)-1,2,4-oxadiazol-3-yl]phenyl]methyl]propanamide, (15.121) N-methoxy-N-[[4-[5-(trifluoromethyl)-1,2,4-oxadiazol-3-yl]phenyl]methyl]cyclopropanecarboxamide, (15.122) N-methyl-4-[5-(trifluoromethyl)-1,2,4-oxadiazol-3-yl]benzamide, (15.123) N-methyl-4-[5-(trifluoromethyl)-1,2,4-oxadiazol-3-yl]benzenecarbothioamide and (15.124) N-methyl-N-phenyl-4-[5-(trifluoromethyl)-1,2,4-oxadiazol-3-yl]benzamide;

16) biological fungicides selected from the group consisting of:
(16.01) *Bacillus subtilis,* in particular strain QST713/AQ713 (available as SERENADE OPTI or SERENADE ASO from Bayer CropScience LP, US, having NRRL Accession No. B21661 and described in U.S. Patent No. 6,060,051); (16.02) *Bacillus pumilus,* in particular strain QST2808 (available as SONATA® from Bayer CropScience LP, US, having Accession No. NRRL B-30087 and described in U.S. Patent No. 6,245,551); (16.03) *Bacillus pumilus,* in particular strain GB34 (available as Yield Shield® from Bayer AG, DE); (16.04) *Bacillus pumilus,* in particular strain BU F-33, having NRRL Accession No. 50185 (available as part of the CARTISSA product from BASF, EPA Reg. No. 71840-19); (16.05) *Bacillus amyloliquefaciens,* in particular strain D747 (available as Double Nickel™ from Kumiai Chemical Industry Co., Ltd., having accession number FERM BP-8234, US Patent No. 7,094,592); (16.06) *Bacillus subtilis* Y1336 (available as BIOBAC® WP from Bion-Tech, Taiwan, registered as a biological fungicide in Taiwan under Registration Nos. 4764, 5454, 5096 and 5277); (16.07) *Bacillus subtilis* strain MBI 600 (available as SUBTILEX from BASF SE), having Accession Number NRRL B-50595, U.S. Patent No. 5,061,495; (16.08) *Bacillus subtilis* strain GB03 (available as Kodiak® from Bayer AG, DE); (16.09) *Bacillus subtilis var. amyloliquefaciens* strain FZB24 having Accession No. DSM 10271 (available from Novozymes as TAEGRO® or TAEGRO® ECO (EPA Registration No. 70127-5)); (16.10) *Bacillus mycoides,* isolate J , having Accession No. B-30890 (available as BMJ TGAI® or WG and LifeGard™ from Certis USA LLC, a subsidiary of Mitsui & Co.); (16.11) *Bacillus licheniformis*, in particular strain SB3086 , having Accession No. ATCC 55406, WO 2003/000051 (available as ECOGUARD® Biofungicide and GREEN RELEAF™ from Novozymes); (16.12) a *Paenibacillus* sp. strain having Accession No. NRRL B-50972 or Accession No. NRRL B-67129, WO 2016/154297; (16.13) *Bacillus subtilis* strain BU1814, (available as VELONDIS® PLUS, VELONDIS® FLEX and VELONDIS® EXTRA from BASF SE); (16.14) *Bacillus subtilis* CX-9060 from Certis USA LLC, a subsidiary of Mitsui & Co.; (16.15) *Bacillus amyloliquefaciens* strain F727 (also known as strain MBI110) (NRRL Accession No. B-50768; WO 2014/028521) (STARGUS® from Marrone Bio Innovations); (16.16) *Bacillus amyloliquefaciens* strain FZB42, Accession No. DSM 23117 (available as RHIZOVITAL® from ABiTEP, DE); (16.17) *Bacillus licheniformis* FMCH001 and *Bacillus subtilis* FMCH002 (QUARTZO® (WG) and PRESENCE® (WP) from FMC Corporation); (16.18) *Bacillus mojavensis* strain R3B (Accession No. NCAIM (P) B001389) (WO 2013/034938) from Certis USA LLC, a subsidiary of Mitsui & Co.; (16.19) *Paenibacillus polymyxa* ssp. *plantarum* (WO 2016/020371) from BASF SE; (16.20) *Paenibacillus epiphyticus* (WO 2016/020371) from BASF SE; (B.1.21) *Pseudomonas chlororaphis* strain AFS009, having Accession No. NRRL B-50897, WO 2017/019448 (e.g., HOWLER™ and ZIO® from AgBiome Innovations, US); (16.22) *Pseudomonas chlororaphis,* in particular strain MA342 (e.g. CEDOMON®, CERALL®, and CEDRESS® by Bioagri and Koppert); (16.23) *Streptomyces lydicus* strain WYEC108 (also known as *Streptomyces lydicus* strain WYCD108US) (ACTINO-IRON® and ACTrNOVATE® from Novozymes); (16.24) *Agrobacterium radiobacter* strain K84 (e.g. GALLTROL-A® from AgBioChem, CA); (16.25) *Agrobacterium radiobacter* strain K1026 (e.g. NOGALL™ from BASF SE); (16.26) *Bacillus subtilis* KTSB strain (FOLIACTIVE® from Donaghys); (16.27) *Bacillus subtilis* IAB/BS03 (AVIV™ from STK Bio-Ag Technologies); (16.28) *Bacillus subtilis* strain Y1336 (available as BIOBAC® WP from Bion-Tech, Taiwan, registered as a biological fungicide in Taiwan under Registration Nos. 4764, 5454, 5096 and 5277); (16.29) *Bacillus amyloliquefaciens* isolate B246 (e.g. AVOGREEN™ from University of Pretoria); (16.30) *Bacillus methylotrophicus* strain BAC-9912 (from Chinese Academy of Sciences' Institute of Applied Ecology); (16.31) *Pseudomonas proradix* (e.g. PRORADIX® from Sourcon Padena); (16.32) *Streptomyces griseoviridis* strain K61 (also known as *Streptomyces galbus* strain K61) (Accession No. DSM 7206) (MYCOSTOP® from Verdera; PREFENCE® from BioWorks; cf. Crop Protection 2006, 25, 468-475); (16.33) *Pseudomonas fluorescens* strain A506 (e.g. BLIGHTBAN® A506 by NuFarm); (16.34) *Coniothyrium minitans,* in particular strain CON/M/91-8 (Accession No. DSM-9660; e.g. Contans ® from Bayer CropScience Biologics GmbH); (16.35) *Metschnikowia fructicola,* in particular strain NRRL Y-30752; (16.36) *Microsphaeropsis ochracea;* (16.37) *Trichoderma atroviride,* in particular strain SC1 (having Accession No. CBS 122089, WO 2009/116106 and U.S. Patent No. 8,431,120 (from Bi-PA)), strain 77B (T77 from Andermatt Biocontrol) or strain LU132 (e.g. Sentinel from Agrimm Technologies Limited); (16.38) *Trichoderma harzianum* strain T-22 (e.g. Trianum-P from Andermatt Biocontrol or Koppert) or strain Cepa Simb-T5 (from Simbiose Agro); (16.39) *Gliocladium roseum* (also known as *Clonostachys rosea f. rosea*), in particular strain 321U from Adjuvants Plus, strain ACM941 as disclosed in Xue (Efficacy of Clonostachys rosea strain ACM941 and fungicide seed treatments for controlling the root tot complex of field pea, Can Jour Plant Sci 83(3): 519-524), or strain IK726 (Jensen DF, et al. Development of a biocontrol agent for plant disease control with special emphasis on the near commercial fungal antagonist Clonostachys rosea strain 'IK726'; Australas Plant Pathol. 2007;36:95-101); (16.40) *Talaromyces flavus,* strain V117b; (16.41) *Trichoderma viride,* in particular strain B35 (Pietr et al., 1993, Zesz. Nauk. A R w Szczecinie 161: 125-137); (16.42) *Trichoderma asperellum,* in particular strain SKT-1, having Accession No. FERM P-16510 (e.g. ECO-HOPE® from Kumiai Chemical Industry), strain T34 (e.g. T34 Biocontrol by Biocontrol Technologies S.L., ES) or strain ICC 012 from Isagro; (16.43) *Trichoderma atroviride,* strain CNCM I-1237 (e.g. Esquive® WP from Agrauxine, FR); (16.44) *Trichoderma atroviride,* strain no. V08/002387; (16.45) *Trichoderma atroviride,* strain NMI no. V08/002388; (16.46) *Trichoderma atroviride,* strain NMI no. V08/002389; (16.47) *Trichoderma atroviride,* strain NMI no. V08/002390; (16.48) *Trichoderma atroviride,* strain LC52 (e.g. Tenet by Agrimm Technologies Limited); (16.49) *Trichoderma atroviride,* strain ATCC 20476 (IMI 206040); (16.50) *Trichoderma atroviride,* strain T11 (IMI352941/ CECT20498); (16.51) *Trichoderma harmatum;* (16.52) *Trichoderma harzianum;* (16.53) *Trichoderma harzianum rifai T39* (e.g. Trichodex® from Makhteshim, US); (16.54) *Trichoderma asperellum,* in particular, strain kd (e.g. T-Gro from Andermatt Biocontrol); (16.55) *Trichoderma harzianum,* strain ITEM 908 (e.g. Trianum-P from Koppert); (16.56) *Trichoderma harzianum,* strain TH35 (e.g. Root-Pro by Mycontrol); (16.57) *Trichoderma virens* (also known as *Gliocladium virens),* in particular strain GL-21 (e.g. SoilGard by Certis, US); (16.58) *Trichoderma viride,* strain TV1(e.g. Trianum-P by Koppert); (16.59) *Ampelomyces quisqualis,* in particular strain AQ 10 (e.g. AQ 10® by IntrachemBio Italia); (16.60) *Aureobasidium pullulans,* in particular blastospores of strain DSM14940; (16.61) *Aureobasidium pullulans,* in particular blastospores of strain DSM 14941; (16.62) *Aureobasidium pullulans,* in particular mixtures of blastospores of strains DSM14940 and DSM 14941 (e.g. Botector® by bio-ferm, CH); (16.63) *Cladosporium cladosporioides,* strain H39, having Accession No. CBS122244, US 2010/0291039 (by Stichting Dienst Landbouwkundig Onderzoek); (16.64) *Gliocladium catenulatum* (Synonym: *Clonostachys rosea f. catenulate*) strain J1446 (e.g. Prestop ® by Lallemand); (16.65) *Lecanicillium lecanii* (formerly known as *Verticillium lecanii) conidia* of strain KV01 (e.g. Vertalec® by Koppert/Arysta); (16.66) *Penicillium vermiculatum;* (16.67) *Pichia anomala,* strain WRL-076 (NRRL Y-30842), U.S. Patent No. 7,579,183; (16.68) *Trichoderma atroviride,* strain SKT-1 (FERM P-16510), JP Patent Publication (Kokai) 11-253151 A; (16.69) *Trichoderma atroviride,* strain SKT-2 (FERM P-16511), JP Patent Publication (Kokai) 11-253151 A; (16.70) *Trichoderma atroviride,* strain SKT-3 (FERM P-17021), JP Patent Publication (Kokai) 11-253151 A; (16.71) *Trichoderma gamsii* (formerly *T. viride),* strain ICC080 (IMI CC 392151 CABI, e.g. BioDerma by AGROBIOSOL DE MEXICO, S.A. DE C.V.); (16.72) *Trichoderma harzianum,* strain DB 103 (available as T-GRO® 7456 by Dagutat Biolab); (16.73) *Trichodermapolysporum,* strain IMI 206039 (e.g. Binab TF WP by BINAB Bio-Innovation AB, Sweden); (16.74) *Trichoderma stromaticum,* having Accession No. Ts3550 (e.g. Tricovab by CEPLAC, Brazil); (16.75) *Ulocladium oudemansii strain U3, having Accession No. NM 99/06216 (e.g., BOTRY-ZEN® by Botry-Zen Ltd, New Zealand and BOTRYSTOP® from BioWorks, Inc.);* (16.76) *Verticillium albo-atrum* (formerly *V. dahliae),* strain WCS850 having Accession No. WCS850, deposited at the Central Bureau for Fungi Cultures (e.g., DUTCH TRIG® by Tree Care Innovations); (16.77) *Verticillium chlamydosporium;* (16.78) mixtures of *Trichoderma asperellum* strain ICC 012 (also known as *Trichoderma harzianum* ICC012), having Accession No. CABI CC IMI 392716 and *Trichoderma gamsii* (formerly *T. viride)* strain ICC 080, having Accession No. IMI 392151

(e.g., BIO-TAM™ from Isagro USA, Inc. and BIODERMA® by Agrobiosol de Mexico, S.A. de C.V.); (16.79) *Trichoderma asperelloides* JM41R (Accession No. NRRL B-50759) (TRICHO PLUS® from BASF SE); (16.80) *Aspergillus flavus* strain NRRL 21882 (products known as AFLA-GUARD® from Syngenta/ChemChina); (16.81) *Chaetomium cupreum* (Accession No. CABI 353812) (e.g. BIOKUPRUM™ by AgriLife); (16.82) *Saccharomyces cerevisiae,* in particular strain LASO2 (from Agro-Levures et Dérivés), strain LAS117 cell walls (CEREVISANE® from Lesaffre; ROMEO® from BASF SE), strains CNCM No. I-3936, CNCM No. 1-3937, CNCM No. 1-3938, CNCM No. I-3939 (WO 2010/086790) from Lesaffre et Compagnie, FR; (16.83) *Trichoderma virens* strain G-41, formerly known as *Gliocladium virens* (Accession No. ATCC 20906) (e.g., ROOTSHIELD® PLUS WP and TURFSHIELD® PLUS WP from BioWorks, US); (16.84) *Trichoderma hamatum,* having Accession No. ATCC 28012; (16.85) *Ampelomyces quisqualis* strain AQ10, having Accession No. CNCM I-807 (e.g., AQ 10® by IntrachemBio Italia); (16.86) *Phlebiopsis gigantea* strain VRA 1992 (ROTSTOP® C from Danstar Ferment); (16.87) *Penicillium steckii* (DSM 27859; WO 2015/067800) from BASF SE; (16.88) *Chaetomium globosum* (available as RIVADIOM® by Rivale); (16.89) *Cryptococcus flavescens,* strain 3C (NRRL Y-50378); (16.90) *Dactylaria candida;* (16.91) *Dilophosphora alopecuri* (available as TWIST FUNGUS®); (16.92) *Fusarium oxysporum,* strain Fo47 (available as FUSACLEAN® by Natural Plant Protection); (16.93) *Pseudozyma flocculosa,* strain PF-A22 UL (available as SPORODEX® L by Plant Products Co., CA); (16.94) *Trichoderma gamsii* (formerly *T. viride),* strain ICC 080 (IMI CC 392151 CABI) (available as BIODERMA® by AGROBIOSOL DE MEXICO, S.A. DE C.V.); (16.95) *Trichoderma fertile* (e.g. product TrichoPlus from BASF); (16.96) *Muscodor roseus,* in particular strain A3-5 (Accession No. NRRL 30548); (16.97) *Simplicillium lanosoniveum.*

Compound (B) is more preferably selected from the group consisting of (1.001) cyproconazole, (1.002) difenoconazole, (1.003) epoxiconazole, (1.015) ipconazole, (1.016) ipfentrifluconazole, (1.017) mefentrifluconazole, (1.018) metconazole, (1.024) prothioconazole, (1.026) spiroxamine, (1.027) tebuconazole, (1.032) (1R,2S,5 S)-5 -(4-chlorobenzyl)-2-(chloromethyl)-2-methyl-1-(1H-1,2,4-triazol-1-ylmethyl)cyclopentanol, (1.033) (1S,2R,SR)-5-(4-chlorobenzyl)-2-(chloromethyl)-2-methyl-1-(1H-1,2,4-triazol-1-ylmethyl)cyclopentanol, (1.063) 5-(4-chlorobenzyl)-2-(chloromethyl)-2-methyl-1-(1H-1,2,4-triazol-l-ylmethyl)cyclopentanol, (1.067) methyl 2-[2-chloro-4-(4-chlorophenoxy)phenyl]-2-hydroxy-3-(1,2,4-triazol-1-yl)propanoate, (2.001) benzovindiflupyr, (2.002) bixafen, (2.005) cyclobutriflam, (2.007) fluindapyr, (2.008) fluopyram, (2.010) fluxapyroxad, (2.012) inpyrfluxam, (2.014) isoflucypram, (2.016) penflufen, (2.018) pydiflumetofen, (2.031) 3-(difluoromethyl)-1-methyl-N-(1,1,3-trimethyl-2,3-dihydro-1H-inden-4-yl)-1H-pyrazole-4-carboxamide, (3.003) azoxystrobin, (3.011) fenpicoxamid, (3.012) florylpicoxamid, (3.014) fluoxastrobin, (3.017) metarylpicoxamid, (3.019) metyltetraprole, (3.021) picoxystrobin, (3.022) pyraclostrobin, (3.025) trifloxystrobin, (4.007) pencycuron, (5.004) chlorothalonil, (5.005) copper hydroxide, (5.008) copper oxychloride, (5.009) copper(2+) sulfate, (5.012) folpet, (5.013) mancozeb, (6.005) isotianil, (7.005) pyrimethanil, (8.001) silthiofam, (9.002) dimethomorph, (10.001) fluoxapiprolin, (10.002) natamycin, (12.003) metalaxyl, (12.004) metalaxyl-M (mefenoxam), (13.001) fludioxonil, (13.004) proquinazid, (14.001) fluazinam, (15.025) picarbutrazox, and (16.01) *Bacillus subtilis* strain QST713/AQ713 (available as SERENADE OPTI or SERENADE ASO from Bayer CropScience LP, US, having NRRL Accession No. B21661and described in U.S. Patent No. 6,060,051).

Compound (B) is most preferably selected from the group consisting of (1.002) difenoconazole, (1.024) prothioconazole, (1.027) tebuconazole, (1.032) (1R,2S,SS)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.063) 5-(4-chlorobenzyl)-2-(chloromethyl)-2-methyl-1-(1H-1,2,4-triazol-1-ylmethyl)cyclopentanol, (1.067) methyl 2-[2-chloro-4-(4-chlorophenoxy)phenyl]-2-hydroxy-3-(1,2,4-triazol-1-yl)propanoate, (2.002) bixafen, (2.008) fluopyram, (2.012) inpyrfluxam, (2.014) isoflucypram, (2.016) penflufen, (2.031) 3-(difluoromethyl)-1-methyl-N-(1,1,3-trimethyl-2,3-dihydro-1H-inden-4-yl)-1H-pyrazole-4-carboxamide, (3.003) azoxystrobin, (3.011) fenpicoxamid, (3.017) metarylpicoxamid, (3.025) trifloxystrobin, (4.007) pencycuron, (5.013) mancozeb, (6.005) isotianil, (10.001) fluoxapiprolin, (10.002) natamycin, (12.003) metalaxyl, (12.004) metalaxyl-M (mefenoxam), (13.001) fludioxonil, and (15.025) picarbutrazox.

In some embodiments, compound (B) is selected from the group consisting of (1.001) cyproconazole, (1.002) difenoconazole, (1.003) epoxiconazole, (1.015) ipconazole, (1.016) ipfentrifluconazole, (1.017) mefentrifluconazole, (1.018) metconazole, (1.024) prothioconazole, (1.026) spiroxamine, (1.027) tebuconazole, (1.032) (1R,2S,5 S)-5 -(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.063) 5-(4-chlorobenzyl)-2-(chloromethyl)-2-methyl-1-(1H-1,2,4-triazol-l-ylmethyl)cyclopentanol and (1.067) methyl 2-[2-chloro-4-(4-chlorophenoxy)phenyl]-2-hydroxy-3-(1,2,4-triazol-1-yl)propanoate.

In some other embodiments, compound (B) is selected from the group consisting of (2.001) benzovindiflupyr, (2.002) bixafen, (2.005) cyclobutriflam, (2.007) fluindapyr, (2.008) fluopyram, (2.010) fluxapyroxad, (2.012) inpyrfluxam, (2.014) isoflucypram, (2.016) penflufen, (2.018) pydiflumetofen and (2.031) 3-(difluoromethyl)-1-methyl-N-(1,1,3-trimethyl-2,3-dihydro-1H-inden-4-yl)-1H-pyrazole-4-carboxamide.

In still some other embodiments, compound (B) is selected from the group consisting of (3.003) azoxystrobin,

(3.011) fenpicoxamid, (3.012) florylpicoxamid, (3.014) fluoxastrobin, (3.017) metarylpicoxamid, (3.019) metyltetraprole, (3.021) picoxystrobin, (3.022) pyraclostrobin and (3.025) trifloxystrobin.

In yet some other embodiments, compound (B) is selected from the group consisting of (5.004) chlorothalonil, (5.005) copper hydroxide, (5.008) copper oxychloride, (5.009) copper(2+) sulfate, (5.012) folpet and (5.013) mancozeb.

The compound combinations according to the invention may comprise 1, 2 or even more compounds (B). Preferably, the compound combinations according to the invention comprise 1 or 2 compound(s) (B).

In case two or more compound(s) (B) are present, those compounds may be selected from different groups (1) to (16). For example, if one compound (B) is selected from group (1), the further compound(s) (B) may be selected from groups (2) to (16).

Preferred compound combinations are selected from group (G1) consisting of the following mixtures:

(I.01) + (1.001), (I.01) + (1.002), (I.01) + (1.003), (I.01) + (1.004), (I.01) + (1.005), (I.01) + (1.006), (I.01) + (1.007), (I.01) + (1.008), (I.01) + (1.009), (I.01) + (1.010), (I.01) + (1.011), (I.01) + (1.012), (I.01) + (1.013), (I.01) + (1.014), (I.01) + (1.015), (I.01) + (1.016), (I.01) + (1.017), (I.01) + (1.018), (I.01) + (1.019), (I.01) + (1.020), (I.01) + (1.021), (I.01) + (1.022), (I.01) + (1.023), (I.01) + (1.024), (I.01) + (1.025), (I.01) + (1.026), (I.01) + (1.027), (I.01) + (1.028), (I.01) + (1.029), (I.01) + (1.030), (I.01) + (1.031), (I.01) + (1.032), (1.01) + (1.033), (1.01) + (1.034), (1.01) + (1.035), (1.01) + (1.036), (1.01) + (1.037), (1.01) + (1.038), (1.01) + (1.039), (1.01) + (1.040), (1.01) + (1.041), (1.01) + (1.042), (1.01) + (1.043), (1.01) + (1.044), (1.01) + (1.045), (1.01) + (1.046), (1.01) + (1.047), (1.01) + (1.048), (1.01) + (1.049), (1.01) + (1.050), (1.01) + (1.051), (1.01) + (1.052), (1.01) + (1.053), (1.01) + (1.054), (1.01) + (1.055), (1.01) + (1.056), (1.01) + (1.057), (I.01) + (1.058), (I.01) + (1.059), (I.01) + (1.060), (I.01) + (1.061), (I.01) + (1.062), (I.01) + (1.063), (I.01) + (1.064), (I.01) + (1.065), (I.01) + (1.066), (I.01) + (1.067), (I.01) + (1.068), (I.01) + (1.069), (I.01) + (1.070), (I.01) + (1.071), (I.01) + (1.072), (I.01) + (1.073), (I.01) + (1.074), (I.01) + (1.075), (I.01) + (1.076), (I.01) + (1.077), (I.01) + (1.078), (I.01) + (1.079), (I.01) + (1.080), (I.01) + (1.081), (I.01) + (1.082), (I.01) + (1.083), (I.01) + (2.001), (I.01) + (2.002), (I.01) + (2.003), (I.01) + (2.004), (I.01) + (2.005), (I.01) + (2.006), (I.01) + (2.007), (I.01) + (2.008), (I.01) + (2.009), (I.01) + (2.010), (I.01) + (2.011), (I.01) + (2.012), (I.01) + (2.013), (I.01) + (2.014), (I.01) + (2.015), (I.01) + (2.016), (I.01) + (2.017), (I.01) + (2.018), (I.01) + (2.019), (I.01) + (2.020), (I.01) + (2.021), (I.01) + (2.022), (I.01) + (2.023), (I.01) + (2.024), (I.01) + (2.025), (I.01) + (2.026), (I.01) + (2.027), (I.01) + (2.028), (I.01) + (2.029), (I.01) + (2.030), (I.01) + (2.031), (1.01) + (2.032), (1.01) + (2.033), (1.01) + (2.034), (1.01) + (2.035), (1.01) + (2.036), (1.01) + (2.037), (1.01) + (2.038), (1.01) + (3.001), (1.01) + (3.002), (1.01) + (3.003), (1.01) + (3.004), (1.01) + (3.005), (1.01) + (3.006), (1.01) + (3.007), (1.01) + (3.008), (1.01) + (3.009), (1.01) + (3.010), (1.01) + (3.011), (1.01) + (3.012), (I.01) + (3.013), (1.01) + (3.014), (1.01) + (3.015), (1.01) + (3.016), (1.01) + (3.017), (1.01) + (3.018), (1.01) + (3.019), (1.01) + (3.020), (1.01) + (3.021), (1.01) + (3.022), (1.01) + (3.023), (1.01) + (3.024), (1.01) + (3.025), (1.01) + (3.026), (1.01) + (3.027), (1.01) + (3.028), (1.01) + (3.029), (1.01) + (3.030), (1.01) + (3.031), (1.01) + (3.032), (1.01) + (3.033), (1.01) + (3.034), (1.01) + (3.035), (1.01) + (3.036), (1.01) + (3.037), (1.01) + (3.038), (1.01) + (3.039), (1.01) + (3.040), (1.01) + (3.041), (1.01) + (3.042), (1.01) + (3.043), (1.01) + (3.044), (1.01) + (3.045), (1.01) + (4.001), (1.01) + (4.002), (1.01) + (4.003), (1.01) + (4.004), (1.01) + (4.005), (I.01) + (4.006), (1.01) + (4.007), (1.01) + (4.008), (1.01) + (4.009), (1.01) + (4.010), (1.01) + (4.011), (1.01) + (4.012), (1.01) + (4.013), (1.01) + (4.014), (1.01) + (4.015), (1.01) + (4.016), (1.01) + (4.017), (1.01) + (4.018), (1.01) + (4.019), (1.01) + (4.020), (1.01) + (4.021), (1.01) + (4.022), (1.01) + (4.023), (1.01) + (4.024), (I.01) + (4.025), (1.01) + (4.026), (1.01) + (4.027), (1.01) + (4.028), (1.01) + (5.001), (1.01) + (5.002), (1.01) + (5.003), (1.01) + (5.004), (1.01) + (5.005), (1.01) + (5.006), (1.01) + (5.007), (1.01) + (5.008), (1.01) + (5.009), (1.01) + (5.010), (1.01) + (5.011), (1.01) + (5.012), (1.01) + (5.013), (1.01) + (5.014), (1.01) + (5.015), (1.01) + (5.016), (1.01) + (5.017), (1.01) + (5.018), (1.01) + (5.019), (1.01) + (5.020), (1.01) + (5.021), (1.01) + (5.022), (1.01) + (5.023), (1.01) + (6.001), (1.01) + (6.002), (1.01) + (6.003), (1.01) + (6.004), (1.01) + (6.005), (I.01) + (6.006), (I.01) + (6.007), (I.01) + (6.008), (I.01) + (7.001), (I.01) + (7.002), (I.01) + (7.003), (I.01) + (7.004), (I.01) + (7.005), (I.01) + (8.001), (I.01) + (9.001), (I.01) + (9.002), (I.01) + (9.003), (I.01) + (9.004), (I.01) + (9.005), (I.01) + (9.006), (I.01) + (9.007), (I.01) + (9.008), (I.01) + (9.009), (I.01) + (10.001), (I.01) + (10.002), (I.01) + (10.003), (I.01) + (10.004), (I.01) + (10.005), (I.01) + (10.006), (I.01) + (10.007), (I.01) + (10.008), (I.01) + (10.009), (I.01) + (10.010), (I.01) + (10.011), (I.01) + (10.012), (I.01) + (10.013), (I.01) + (10.014), (I.01) + (10.015), (I.01) + (10.016), (I.01) + (10.017), (I.01) + (10.018), (I.01) + (10.019), (I.01) + (11.001), (I.01) + (11.002), (I.01) + (12.001), (I.01) + (12.002), (I.01) + (12.003), (I.01) + (12.004), (1.01) + (13.001), (1.01) + (13.002), (1.01) + (13.003), (1.01) + (13.004), (1.01) + (13.005), (1.01) + (13.006), (1.01) + (14.001), (1.01) + (14.002), (1.01) + (15.001), (1.01) + (15.002), (1.01) + (15.003), (1.01) + (15.004), (1.01) + (15.005), (1.01) + (15.006), (1.01) + (15.007), (1.01) + (15.008), (1.01) + (15.009), (1.01) + (15.010), (1.01) + (15.011), (1.01) + (15.012), (1.01) + (15.013), (1.01) + (15.014), (1.01) + (15.015), (1.01) + (15.016), (1.01) + (15.017), (1.01) + (15.018), (1.01) + (15.019), (1.01) + (15.020), (1.01) + (15.021), (1.01) + (15.022), (1.01) + (15.023), (1.01) + (15.024), (1.01) + (15.025), (1.01) + (15.026), (1.01) + (15.027), (1.01) + (15.028), (1.01) + (15.029), (1.01) + (15.030), (1.01) + (15.031), (1.01) + (15.032), (1.01) + (15.033), (1.01) + (15.034), (1.01) + (15.035), (1.01) + (15.036), (1.01) + (15.037), (1.01) + (15.038), (1.01) + (15.039), (1.01) + (15.040), (1.01) + (15.041), (1.01) + (15.042), (1.01) + (15.043), (1.01) + (15.044), (1.01) + (15.045), (1.01) + (15.046), (1.01) + (15.047), (1.01) + (15.048), (1.01) + (15.049), (1.01) + (15.050), (1.01) + (15.051), (1.01) + (15.052), (1.01) + (15.053), (1.01) + (15.054), (1.01) + (15.055), (1.01) + (15.056), (1.01) + (15.057), (1.01) + (15.058), (1.01) + (15.059), (1.01) + (15.060), (1.01) + (15.061), (1.01) +

(15.062), (1.01) + (15.063) , (1.01) + (15.064), (1.01) + (15.065), (1.01) + (15.066), (1.01) + (15.067), (1.01) + (15.068), (1.01) + (15.069), (1.01) + (15.070), (1.01) + (15.071), (1.01) + (15.072), (1.01) + (15.073), (1.01) + (15.074), (1.01) + (15.075), (1.01) + (15.076), (1.01) + (15.077), (1.01) + (15.078), (1.01) + (15.079), (1.01) + (15.080), (1.01) + (15.081), (1.01) + (15.082), (1.01) + (15.083), (1.01) + (15.084), (1.01) + (15.085), (1.01) + (15.086), (1.01) + (15.087), (1.01) + (15.088), (1.01) + (15.089), (1.01) + (15.090), (1.01) + (15.091), (1.01) + (15.092), (1.01) + (15.093), (1.01) + (15.094), (1.01) + (15.095), (1.01) + (15.096), (1.01) + (15.097), (1.01) + (15.098), (1.01) + (15.099), (1.01) + (15.100), (1.01) + (15.101), (1.01) + (15.102), (1.01) + (15.103), (1.01) + (15.104), (1.01) + (15.105), (1.01) + (15.106), (1.01) + (15.107), (1.01) + (15.108), (1.01) + (15.109), (1.01) + (15.110), (1.01) + (15.111), (1.01) + (15.112), (1.01) + (15.113), (1.01) + (15.114), (1.01) + (15.115), (1.01) + (15.116), (1.01) + (15.117), (1.01) + (15.118), (1.01) + (15.119), (1.01) + (15.120), (1.01) + (15.121), (1.01) + (15.122), (1.01) + (15.123), (1.01) + (15.124), (1.01) + (16.001), (1.01) + (16.002), (1.01) + (16.003), (1.01) + (16.004), (1.01) + (16.005), (1.01) + (16.006), (I.01) + (16.007), (I.01) + (16.008), (I.01) + (16.009), (I.01) + (16.010), (I.01) + (16.011), (I.01) + (16.012), (I.01) + (16.013), (I.01) + (16.014), (I.01) + (16.015), (I.01) + (16.016), (I.01) + (16.017), (I.01) + (16.018), (I.01) + (16.019), (I.01) + (16.020), (I.01) + (16.021), (I.01) + (16.022), (I.01) + (16.023), (I.01) + (16.024), (I.01) + (16.025), (I.01) + (16.026), (I.01) + (16.027), (I.01) + (16.028), (I.01) + (16.029), (I.01) + (16.030), (1.01) + (16.031), (1.01) + (16.032), (1.01) + (16.033), (1.01) + (16.034), (1.01) + (16.035), (1.01) + (16.036), (1.01) + (16.037), (1.01) + (16.038), (1.01) + (16.039), (1.01) + (16.040), (1.01) + (16.041), (1.01) + (16.042), (1.01) + (16.043), (1.01) + (16.044), (1.01) + (16.045), (1.01) + (16.046), (1.01) + (16.047), (1.01) + (16.048), (1.01) + (16.049), (1.01) + (16.050), (1.01) + (16.051), (1.01) + (16.052), (1.01) + (16.053), (1.01) + (16.054), (1.01) + (16.055), (1.01) + (16.056), (1.01) + (16.057), (1.01) + (16.058), (1.01) + (16.059), (1.01) + (16.060), (I.01) + (16.061), (I.01) + (16.062), (I.01) + (16.063), (I.01) + (16.064), (I.01) + (16.065), (I.01) + (16.066), (I.01) + (16.067), (I.01) + (16.068), (I.01) + (16.069), (I.01) + (16.070), (I.01) + (16.071), (I.01) + (16.072), (I.01) + (16.073), (I.01) + (16.074), (I.01) + (16.075), (I.01) + (16.076), (I.01) + (16.077), (I.01) + (16.078), (I.01) + (16.079), (I.01) + (16.080), (I.01) + (16.081), (I.01) + (16.082), (I.01) + (16.083), (I.01) + (16.084), (I.01) + (16.085), (I.01) + (16.086), (I.01) + (16.087), (I.01) + (16.088), (I.01) + (16.089), (I.01) + (16.090), (I.01) + (16.091), (I.01) + (16.092), (I.01) + (16.093), (I.01) + (16.094), (I.01) + (16.095), (I.01) + (16.096), (I.01) + (16.097).

Also preferred compound combinations are selected from group (G2) consisting of the following mixtures: (1.02) + (1.001), (1.02) + (1.002), (1.02) + (1.003), (1.02) + (1.004), (1.02) + (1.005), (1.02) + (1.006), (1.02) + (1.007), (1.02) + (1.008), (1.02) + (1.009), (1.02) + (1.010), (1.02) + (1.011), (1.02) + (1.012), (1.02) + (1.013), (1.02) + (1.014), (1.02) + (1.015), (1.02) + (1.016), (1.02) + (1.017), (1.02) + (1.018), (1.02) + (1.019), (1.02) + (1.020), (1.02) + (1.021), (1.02) + (1.022), (1.02) + (1.023), (1.02) + (1.024), (1.02) + (1.025), (1.02) + (1.026), (1.02) + (1.027), (1.02) + (1.028), (1.02) + (1.029), (1.02) + (1.030), (1.02) + (1.031), (1.02) + (1.032), (1.02) + (1.033), (1.02) + (1.034), (1.02) + (1.035), (1.02) + (1.036), (1.02) + (1.037), (1.02) + (1.038), (1.02) + (1.039), (1.02) + (1.040), (1.02) + (1.041), (1.02) + (1.042), (1.02) + (1.043), (1.02) + (1.044), (1.02) + (1.045), (1.02) + (1.046), (1.02) + (1.047), (1.02) + (1.048), (1.02) + (1.049), (1.02) + (1.050), (1.02) + (1.051), (1.02) + (1.052), (1.02) + (1.053), (1.02) + (1.054), (1.02) + (1.055), (1.02) + (1.056), (1.02) + (1.057), (1.02) + (1.058), (1.02) + (1.059), (1.02) + (1.060), (1.02) + (1.061), (1.02) + (1.062), (1.02) + (1.063), (1.02) + (1.064), (1.02) + (1.065), (1.02) + (1.066), (1.02) + (1.067), (1.02) + (1.068), (1.02) + (1.069), (1.02) + (1.070), (1.02) + (1.071), (1.02) + (1.072), (1.02) + (1.073), (1.02) + (1.074), (1.02) + (1.075), (1.02) + (1.076), (1.02) + (1.077), (1.02) + (1.078), (1.02) + (1.079), (1.02) + (1.080), (1.02) + (1.081), (1.02) + (1.082), (1.02) + (1.083), (1.02) + (2.001), (1.02) + (2.002), (1.02) + (2.003), (1.02) + (2.004), (1.02) + (2.005), (1.02) + (2.006), (1.02) + (2.007), (1.02) + (2.008), (1.02) + (2.009), (1.02) + (2.010), (1.02) + (2.011), (1.02) + (2.012), (1.02) + (2.013), (1.02) + (2.014), (1.02) + (2.015), (1.02) + (2.016), (1.02) + (2.017), (1.02) + (2.018), (1.02) + (2.019), (1.02) + (2.020), (1.02) + (2.021), (1.02) + (2.022), (1.02) + (2.023), (1.02) + (2.024), (1.02) + (2.025), (1.02) + (2.026), (1.02) + (2.027), (1.02) + (2.028), (1.02) + (2.029), (1.02) + (2.030), (1.02) + (2.031), (1.02) + (2.032), (1.02) + (2.033), (1.02) + (2.034), (1.02) + (2.035), (1.02) + (2.036), (1.02) + (2.037), (1.02) + (2.038), (1.02) + (3.001), (1.02) + (3.002), (1.02) + (3.003), (1.02) + (3.004), (1.02) + (3.005), (1.02) + (3.006), (1.02) + (3.007), (1.02) + (3.008), (1.02) + (3.009), (1.02) + (3.010), (1.02) + (3.011), (1.02) + (3.012), (1.02) + (3.013), (1.02) + (3.014), (1.02) + (3.015), (1.02) + (3.016), (1.02) + (3.017), (1.02) + (3.018), (1.02) + (3.019), (1.02) + (3.020), (1.02) + (3.021), (1.02) + (3.022), (1.02) + (3.023), (1.02) + (3.024), (1.02) + (3.025), (1.02) + (3.026), (1.02) + (3.027), (1.02) + (3.028), (1.02) + (3.029), (1.02) + (3.030), (1.02) + (3.031), (1.02) + (3.032), (1.02) + (3.033), (1.02) + (3.034), (1.02) + (3.035), (1.02) + (3.036), (1.02) + (3.037), (1.02) + (3.038), (1.02) + (3.039), (1.02) + (3.040), (1.02) + (3.041), (1.02) + (3.042), (1.02) + (3.043), (1.02) + (3.044), (1.02) + (3.045), (1.02) + (4.001), (1.02) + (4.002), (1.02) + (4.003), (1.02) + (4.004), (1.02) + (4.005), (1.02) + (4.006), (1.02) + (4.007), (1.02) + (4.008), (1.02) + (4.009), (1.02) + (4.010), (1.02) + (4.011), (1.02) + (4.012), (1.02) + (4.013), (1.02) + (4.014), (1.02) + (4.015), (1.02) + (4.016), (1.02) + (4.017), (1.02) + (4.018), (1.02) + (4.019), (1.02) + (4.020), (1.02) + (4.021), (1.02) + (4.022), (1.02) + (4.023), (1.02) + (4.024), (1.02) + (4.025), (1.02) + (4.026), (1.02) + (4.027), (1.02) + (4.028), (1.02) + (5.001), (1.02) + (5.002), (1.02) + (5.003), (1.02) + (5.004), (1.02) + (5.005), (1.02) + (5.006), (1.02) + (5.007), (1.02) + (5.008), (1.02) + (5.009), (1.02) + (5.010), (1.02) + (5.011), (1.02) + (5.012), (1.02) + (5.013), (1.02) + (5.014), (1.02) + (5.015), (1.02) + (5.016), (1.02) + (5.017), (1.02) + (5.018), (1.02) + (5.019), (1.02) + (5.020), (1.02) + (5.021), (1.02) + (5.022), (1.02) + (5.023), (1.02) + (6.001), (1.02) + (6.002), (1.02) + (6.003), (1.02) + (6.004), (1.02) + (6.005), (1.02) + (6.006), (1.02) + (6.007), (1.02) + (6.008), (1.02) + (7.001), (1.02) + (7.002), (1.02) + (7.003), (1.02) + (7.004), (1.02) + (7.005), (1.02) + (8.001), (1.02)

+ (9.001), (1.02) + (9.002), (1.02) + (9.003), (1.02) + (9.004), (1.02) + (9.005), (1.02) + (9.006), (1.02) + (9.007), (1.02) + (9.008), (1.02) + (9.009), (1.02) + (10.001), (1.02) + (10.002), (1.02) + (10.003), (1.02) + (10.004), (1.02) + (10.005), (1.02) + (10.006), (1.02) + (10.007), (1.02) + (10.008), (1.02) + (10.009), (1.02) + (10.010), (1.02) + (10.011), (1.02) + (10.012), (1.02) + (10.013), (1.02) + (10.014), (1.02) + (10.015), (1.02) + (10.016), (1.02) + (10.017), (1.02) + (10.018), (1.02) + (10.019), (1.02) + (11.001), (1.02) + (11.002), (1.02) + (12.001), (1.02) + (12.002), (1.02) + (12.003), (1.02) + (12.004), (1.02) + (13.001), (1.02) + (13.002), (1.02) + (13.003), (1.02) + (13.004), (1.02) + (13.005), (1.02) + (13.006), (1.02) + (14.001), (1.02) + (14.002), (1.02) + (15.001), (1.02) + (15.002), (1.02) + (15.003), (1.02) + (15.004), (1.02) + (15.005), (1.02) + (15.006), (1.02) + (15.007), (1.02) + (15.008), (1.02) + (15.009), (1.02) + (15.010), (1.02) + (15.011), (1.02) + (15.012), (1.02) + (15.013), (1.02) + (15.014), (1.02) + (15.015), (1.02) + (15.016), (1.02) + (15.017), (1.02) + (15.018), (1.02) + (15.019), (1.02) + (15.020), (1.02) + (15.021), (1.02) + (15.022), (1.02) + (15.023), (1.02) + (15.024), (1.02) + (15.025), (1.02) + (15.026), (1.02) + (15.027), (1.02) + (15.028), (1.02) + (15.029), (1.02) + (15.030), (1.02) + (15.031), (1.02) + (15.032), (1.02) + (15.033), (1.02) + (15.034), (1.02) + (15.035), (1.02) + (15.036), (1.02) + (15.037), (1.02) + (15.038), (1.02) + (15.039), (1.02) + (15.040), (1.02) + (15.041), (1.02) + (15.042), (1.02) + (15.043), (1.02) + (15.044), (1.02) + (15.045), (1.02) + (15.046), (1.02) + (15.047), (1.02) + (15.048), (1.02) + (15.049), (1.02) + (15.050), (1.02) + (15.051), (1.02) + (15.052), (1.02) + (15.053), (1.02) + (15.054), (1.02) + (15.055), (1.02) + (15.056), (1.02) + (15.057), (1.02) + (15.058), (1.02) + (15.059), (1.02) + (15.060), (1.02) + (15.061), (1.02) + (15.062), (1.02) + (15.063) , (1.02) + (15.064), (1.02) + (15.065), (1.02) + (15.066), (1.02) + (15.067), (1.02) + (15.068), (1.02) + (15.069), (1.02) + (15.070), (1.02) + (15.071), (1.02) + (15.072), (1.02) + (15.073), (1.02) + (15.074), (1.02) + (15.075), (1.02) + (15.076), (1.02) + (15.077), (1.02) + (15.078), (1.02) + (15.079), (1.02) + (15.080), (1.02) + (15.081), (1.02) + (15.082), (1.02) + (15.083), (1.02) + (15.084), (1.02) + (15.085), (1.02) + (15.086), (1.02) + (15.087), (1.02) + (15.088), (1.02) + (15.089), (1.02) + (15.090), (1.02) + (15.091), (1.02) + (15.092), (1.02) + (15.093), (1.02) + (15.094), (1.02) + (15.095), (1.02) + (15.096), (1.02) + (15.097), (1.02) + (15.098), (1.02) + (15.099), (1.02) + (15.100), (1.02) + (15.101), (1.02) + (15.102), (1.02) + (15.103), (1.02) + (15.104), (1.02) + (15.105), (1.02) + (15.106), (1.02) + (15.107), (1.02) + (15.108), (1.02) + (15.109), (1.02) + (15.110), (1.02) + (15.111), (1.02) + (15.112), (1.02) + (15.113), (1.02) + (15.114), (1.02) + (15.115), (1.02) + (15.116), (1.02) + (15.117), (1.02) + (15.118), (1.02) + (15.119), (1.02) + (15.120), (1.02) + (15.121), (1.02) + (15.122), (1.02) + (15.123), (1.02) + (15.124), (1.02) + (16.001), (1.02) + (16.002), (1.02) + (16.003), (1.02) + (16.004), (1.02) + (16.005), (1.02) + (16.006), (1.02) + (16.007), (1.02) + (16.008), (1.02) + (16.009), (1.02) + (16.010), (1.02) + (16.011), (1.02) + (16.012), (1.02) + (16.013), (1.02) + (16.014), (1.02) + (16.015), (1.02) + (16.016), (1.02) + (16.017), (1.02) + (16.018), (1.02) + (16.019), (1.02) + (16.020), (1.02) + (16.021), (1.02) + (16.022), (1.02) + (16.023), (1.02) + (16.024), (1.02) + (16.025), (1.02) + (16.026), (1.02) + (16.027), (1.02) + (16.028), (1.02) + (16.029), (1.02) + (16.030), (1.02) + (16.031), (1.02) + (16.032), (1.02) + (16.033), (1.02) + (16.034), (1.02) + (16.035), (1.02) + (16.036), (1.02) + (16.037), (1.02) + (16.038), (1.02) + (16.039), (1.02) + (16.040), (1.02) + (16.041), (1.02) + (16.042), (1.02) + (16.043), (1.02) + (16.044), (1.02) + (16.045), (1.02) + (16.046), (1.02) + (16.047), (1.02) + (16.048), (1.02) + (16.049), (1.02) + (16.050), (1.02) + (16.051), (1.02) + (16.052), (1.02) + (16.053), (1.02) + (16.054), (1.02) + (16.055), (1.02) + (16.056), (1.02) + (16.057), (1.02) + (16.058), (1.02) + (16.059), (1.02) + (16.060), (1.02) + (16.061), (1.02) + (16.062), (1.02) + (16.063), (1.02) + (16.064), (1.02) + (16.065), (1.02) + (16.066), (1.02) + (16.067), (1.02) + (16.068), (1.02) + (16.069), (1.02) + (16.070), (1.02) + (16.071), (1.02) + (16.072), (1.02) + (16.073), (1.02) + (16.074), (1.02) + (16.075), (1.02) + (16.076), (1.02) + (16.077), (1.02) + (16.078), (1.02) + (16.079), (1.02) + (16.080), (1.02) + (16.081), (1.02) + (16.082), (1.02) + (16.083), (1.02) + (16.084), (1.02) + (16.085), (1.02) + (16.086), (1.02) + (16.087), (1.02) + (16.088), (1.02) + (16.089), (1.02) + (16.090), (1.02) + (16.091), (1.02) + (16.092), (1.02) + (16.093), (1.02) + (16.094), (1.02) + (16.095), (1.02) + (16.096), (1.02) + (16.097).

Also preferred compound combinations are selected from group (G3) consisting of the following mixtures: (1.03) + (1.001), (1.03) + (1.002), (1.03) + (1.003), (1.03) + (1.004), (1.03) + (1.005), (1.03) + (1.006), (1.03) + (1.007), (1.03) + (1.008), (1.03) + (1.009), (1.03) + (1.010), (1.03) + (1.011), (1.03) + (1.012), (1.03) + (1.013), (1.03) + (1.014), (1.03) + (1.015), (1.03) + (1.016), (1.03) + (1.017), (1.03) + (1.018), (1.03) + (1.019), (1.03) + (1.020), (1.03) + (1.021), (1.03) + (1.022), (1.03) + (1.023), (1.03) + (1.024), (1.03) + (1.025), (1.03) + (1.026), (1.03) + (1.027), (1.03) + (1.028), (1.03) + (1.029), (1.03) + (1.030), (1.03) + (1.031), (1.03) + (1.032), (1.03) + (1.033), (1.03) + (1.034), (1.03) + (1.035), (1.03) + (1.036), (1.03) + (1.037), (1.03) + (1.038), (1.03) + (1.039), (1.03) + (1.040), (1.03) + (1.041), (1.03) + (1.042), (1.03) + (1.043), (1.03) + (1.044), (1.03) + (1.045), (1.03) + (1.046), (1.03) + (1.047), (1.03) + (1.048), (1.03) + (1.049), (1.03) + (1.050), (1.03) + (1.051), (1.03) + (1.052), (1.03) + (1.053), (1.03) + (1.054), (1.03) + (1.055), (1.03) + (1.056), (1.03) + (1.057), (1.03) + (1.058), (1.03) + (1.059), (1.03) + (1.060), (1.03) + (1.061), (1.03) + (1.062), (1.03) + (1.063), (1.03) + (1.064), (1.03) + (1.065), (1.03) + (1.066), (1.03) + (1.067), (1.03) + (1.068), (1.03) + (1.069), (1.03) + (1.070), (1.03) + (1.071), (1.03) + (1.072), (1.03) + (1.073), (1.03) + (1.074), (1.03) + (1.075), (1.03) + (1.076), (1.03) + (1.077), (1.03) + (1.078), (1.03) + (1.079), (1.03) + (1.080), (1.03) + (1.081), (1.03) + (1.082), (1.03) + (1.083), (1.03) + (2.001), (1.03) + (2.002), (1.03) + (2.003), (1.03) + (2.004), (1.03) + (2.005), (1.03) + (2.006), (1.03) + (2.007), (1.03) + (2.008), (1.03) + (2.009), (1.03) + (2.010), (1.03) + (2.011), (1.03) + (2.012), (1.03) + (2.013), (1.03) + (2.014), (1.03) + (2.015), (1.03) + (2.016), (1.03) + (2.017), (1.03) + (2.018), (1.03) + (2.019), (1.03) + (2.020), (1.03) + (2.021), (1.03) + (2.022), (1.03) + (2.023), (1.03) + (2.024), (1.03) + (2.025), (1.03) + (2.026), (1.03) + (2.027), (1.03) + (2.028), (1.03) + (2.029), (1.03)

+ (2.030), (1.03) + (2.031), (1.03) + (2.032), (1.03) + (2.033), (1.03) + (2.034), (1.03) + (2.035), (1.03) + (2.036), (1.03) + (2.037), (1.03) + (2.038), (1.03) + (3.001), (1.03) + (3.002), (1.03) + (3.003), (1.03) + (3.004), (1.03) + (3.005), (1.03) + (3.006), (1.03) + (3.007), (1.03) + (3.008), (1.03) + (3.009), (1.03) + (3.010), (1.03) + (3.011), (1.03) + (3.012), (1.03) + (3.013), (1.03) + (3.014), (1.03) + (3.015), (1.03) + (3.016), (1.03) + (3.017), (1.03) + (3.018), (1.03) + (3.019), (1.03) + (3.020), (1.03) + (3.021), (1.03) + (3.022), (1.03) + (3.023), (1.03) + (3.024), (1.03) + (3.025), (1.03) + (3.026), (1.03) + (3.027), (1.03) + (3.028), (1.03) + (3.029), (1.03) + (3.030), (1.03) + (3.031), (1.03) + (3.032), (1.03) + (3.033), (1.03) + (3.034), (1.03) + (3.035), (1.03) + (3.036), (1.03) + (3.037), (1.03) + (3.038), (1.03) + (3.039), (1.03) + (3.040), (1.03) + (3.041), (1.03) + (3.042), (1.03) + (3.043), (1.03) + (3.044), (1.03) + (3.045), (1.03) + (4.001), (1.03) + (4.002), (1.03) + (4.003), (1.03) + (4.004), (1.03) + (4.005), (1.03) + (4.006), (1.03) + (4.007), (1.03) + (4.008), (1.03) + (4.009), (1.03) + (4.010), (1.03) + (4.011), (1.03) + (4.012), (1.03) + (4.013), (1.03) + (4.014), (1.03) + (4.015), (1.03) + (4.016), (1.03) + (4.017), (1.03) + (4.018), (1.03) + (4.019), (1.03) + (4.020), (1.03) + (4.021), (1.03) + (4.022), (1.03) + (4.023), (1.03) + (4.024), (1.03) + (4.025), (1.03) + (4.026), (1.03) + (4.027), (1.03) + (4.028), (1.03) + (5.001), (1.03) + (5.002), (1.03) + (5.003), (1.03) + (5.004), (1.03) + (5.005), (1.03) + (5.006), (1.03) + (5.007), (1.03) + (5.008), (1.03) + (5.009), (1.03) + (5.010), (1.03) + (5.011), (1.03) + (5.012), (1.03) + (5.013), (1.03) + (5.014), (1.03) + (5.015), (1.03) + (5.016), (1.03) + (5.017), (1.03) + (5.018), (1.03) + (5.019), (1.03) + (5.020), (1.03) + (5.021), (1.03) + (5.022), (1.03) + (5.023), (1.03) + (6.001), (1.03) + (6.002), (1.03) + (6.003), (1.03) + (6.004), (1.03) + (6.005), (1.03) + (6.006), (1.03) + (6.007), (1.03) + (6.008), (1.03) + (7.001), (1.03) + (7.002), (1.03) + (7.003), (1.03) + (7.004), (1.03) + (7.005), (1.03) + (8.001), (1.03) + (9.001), (1.03) + (9.002), (1.03) + (9.003), (1.03) + (9.004), (1.03) + (9.005), (1.03) + (9.006), (1.03) + (9.007), (1.03) + (9.008), (1.03) + (9.009), (1.03) + (10.001), (1.03) + (10.002), (1.03) + (10.003), (1.03) + (10.004), (1.03) + (10.005), (1.03) + (10.006), (1.03) + (10.007), (1.03) + (10.008), (1.03) + (10.009), (1.03) + (10.010), (1.03) + (10.011), (1.03) + (10.012), (1.03) + (10.013), (1.03) + (10.014), (1.03) + (10.015), (1.03) + (10.016), (1.03) + (10.017), (1.03) + (10.018), (1.03) + (10.019), (1.03) + (11.001), (1.03) + (11.002), (1.03) + (12.001), (1.03) + (12.002), (1.03) + (12.003), (1.03) + (12.004), (1.03) + (13.001), (1.03) + (13.002), (1.03) + (13.003), (1.03) + (13.004), (1.03) + (13.005), (1.03) + (13.006), (1.03) + (14.001), (1.03) + (14.002), (1.03) + (15.001), (1.03) + (15.002), (1.03) + (15.003), (1.03) + (15.004), (1.03) + (15.005), (1.03) + (15.006), (1.03) + (15.007), (1.03) + (15.008), (1.03) + (15.009), (1.03) + (15.010), (1.03) + (15.011), (1.03) + (15.012), (1.03) + (15.013), (1.03) + (15.014), (1.03) + (15.015), (1.03) + (15.016), (1.03) + (15.017), (1.03) + (15.018), (1.03) + (15.019), (1.03) + (15.020), (1.03) + (15.021), (1.03) + (15.022), (1.03) + (15.023), (1.03) + (15.024), (1.03) + (15.025), (1.03) + (15.026), (1.03) + (15.027), (1.03) + (15.028), (1.03) + (15.029), (1.03) + (15.030), (1.03) + (15.031), (1.03) + (15.032), (1.03) + (15.033), (1.03) + (15.034), (1.03) + (15.035), (1.03) + (15.036), (1.03) + (15.037), (1.03) + (15.038), (1.03) + (15.039), (1.03) + (15.040), (1.03) + (15.041), (1.03) + (15.042), (1.03) + (15.043), (1.03) + (15.044), (1.03) + (15.045), (1.03) + (15.046), (1.03) + (15.047), (1.03) + (15.048), (1.03) + (15.049), (1.03) + (15.050), (1.03) + (15.051), (1.03) + (15.052), (1.03) + (15.053), (1.03) + (15.054), (1.03) + (15.055), (1.03) + (15.056), (1.03) + (15.057), (1.03) + (15.058), (1.03) + (15.059), (1.03) + (15.060), (1.03) + (15.061), (1.03) + (15.062), (1.03) + (15.063) , (1.03) + (15.064), (1.03) + (15.065), (1.03) + (15.066), (1.03) + (15.067), (1.03) + (15.068), (1.03) + (15.069), (1.03) + (15.070), (1.03) + (15.071), (1.03) + (15.072), (1.03) + (15.073), (1.03) + (15.074), (1.03) + (15.075), (1.03) + (15.076), (1.03) + (15.077), (1.03) + (15.078), (1.03) + (15.079), (1.03) + (15.080), (1.03) + (15.081), (1.03) + (15.082), (1.03) + (15.083), (1.03) + (15.084), (1.03) + (15.085), (1.03) + (15.086), (1.03) + (15.087), (1.03) + (15.088), (1.03) + (15.089), (1.03) + (15.090), (1.03) + (15.091), (1.03) + (15.092), (1.03) + (15.093), (1.03) + (15.094), (1.03) + (15.095), (1.03) + (15.096), (1.03) + (15.097), (1.03) + (15.098), (1.03) + (15.099), (1.03) + (15.100), (1.03) + (15.101), (1.03) + (15.102), (1.03) + (15.103), (1.03) + (15.104), (1.03) + (15.105), (1.03) + (15.106), (1.03) + (15.107), (1.03) + (15.108), (1.03) + (15.109), (1.03) + (15.110), (1.03) + (15.111), (1.03) + (15.112), (1.03) + (15.113), (1.03) + (15.114), (1.03) + (15.115), (1.03) + (15.116), (1.03) + (15.117), (1.03) + (15.118), (1.03) + (15.119), (1.03) + (15.120), (1.03) + (15.121), (1.03) + (15.122), (1.03) + (15.123), (1.03) + (15.124), (1.03) + (16.001), (1.03) + (16.002), (1.03) + (16.003), (1.03) + (16.004), (1.03) + (16.005), (1.03) + (16.006), (1.03) + (16.007), (1.03) + (16.008), (1.03) + (16.009), (1.03) + (16.010), (1.03) + (16.011), (1.03) + (16.012), (1.03) + (16.013), (1.03) + (16.014), (1.03) + (16.015), (1.03) + (16.016), (1.03) + (16.017), (1.03) + (16.018), (1.03) + (16.019), (1.03) + (16.020), (1.03) + (16.021), (1.03) + (16.022), (1.03) + (16.023), (1.03) + (16.024), (1.03) + (16.025), (1.03) + (16.026), (1.03) + (16.027), (1.03) + (16.028), (1.03) + (16.029), (1.03) + (16.030), (1.03) + (16.031), (1.03) + (16.032), (1.03) + (16.033), (1.03) + (16.034), (1.03) + (16.035), (1.03) + (16.036), (1.03) + (16.037), (1.03) + (16.038), (1.03) + (16.039), (1.03) + (16.040), (1.03) + (16.041), (1.03) + (16.042), (1.03) + (16.043), (1.03) + (16.044), (1.03) + (16.045), (1.03) + (16.046), (1.03) + (16.047), (1.03) + (16.048), (1.03) + (16.049), (1.03) + (16.050), (1.03) + (16.051), (1.03) + (16.052), (1.03) + (16.053), (1.03) + (16.054), (1.03) + (16.055), (1.03) + (16.056), (1.03) + (16.057), (1.03) + (16.058), (1.03) + (16.059), (1.03) + (16.060), (1.03) + (16.061), (1.03) + (16.062), (1.03) + (16.063), (1.03) + (16.064), (1.03) + (16.065), (1.03) + (16.066), (1.03) + (16.067), (1.03) + (16.068), (1.03) + (16.069), (1.03) + (16.070), (1.03) + (16.071), (1.03) + (16.072), (1.03) + (16.073), (1.03) + (16.074), (1.03) + (16.075), (1.03) + (16.076), (1.03) + (16.077), (1.03) + (16.078), (1.03) + (16.079), (1.03) + (16.080), (1.03) + (16.081), (1.03) + (16.082), (1.03) + (16.083), (1.03) + (16.084), (1.03) + (16.085), (1.03) + (16.086), (1.03) + (16.087), (1.03) + (16.088), (1.03) + (16.089), (1.03) + (16.090), (1.03) + (16.091), (1.03) + (16.092), (1.03) + (16.093), (1.03) + (16.094), (1.03) + (16.095), (1.03) + (16.096), (1.03) + (16.097).

Also preferred compound combinations are selected from group (G4) consisting of the following mixtures: (1.04) + (1.001), (1.04) + (1.002), (1.04) + (1.003), (1.04) + (1.004), (1.04) + (1.005), (1.04) + (1.006), (1.04) + (1.007), (1.04) + (1.008), (1.04) + (1.009), (1.04) + (1.010), (1.04) + (1.011), (1.04) + (1.012), (1.04) + (1.013), (1.04) + (1.014), (1.04) + (1.015), (1.04) + (1.016), (1.04) + (1.017), (1.04) + (1.018), (1.04) + (1.019), (1.04) + (1.020), (1.04) + (1.021), (1.04) + (1.022), (1.04) + (1.023), (1.04) + (1.024), (1.04) + (1.025), (1.04) + (1.026), (1.04) + (1.027), (1.04) + (1.028), (1.04) + (1.029), (1.04) + (1.030), (1.04) + (1.031), (1.04) + (1.032), (1.04) + (1.033), (1.04) + (1.034), (1.04) + (1.035), (1.04) + (1.036), (1.04) + (1.037), (1.04) + (1.038), (1.04) + (1.039), (1.04) + (1.040), (1.04) + (1.041), (1.04) + (1.042), (1.04) + (1.043), (1.04) + (1.044), (1.04) + (1.045), (1.04) + (1.046), (1.04) + (1.047), (1.04) + (1.048), (1.04) + (1.049), (1.04) + (1.050), (1.04) + (1.051), (1.04) + (1.052), (1.04) + (1.053), (1.04) + (1.054), (1.04) + (1.055), (1.04) + (1.056), (1.04) + (1.057), (1.04) + (1.058), (1.04) + (1.059), (1.04) + (1.060), (1.04) + (1.061), (1.04) + (1.062), (1.04) + (1.063), (1.04) + (1.064), (1.04) + (1.065), (1.04) + (1.066), (1.04) + (1.067), (1.04) + (1.068), (1.04) + (1.069), (1.04) + (1.070), (1.04) + (1.071), (1.04) + (1.072), (1.04) + (1.073), (1.04) + (1.074), (1.04) + (1.075), (1.04) + (1.076), (1.04) + (1.077), (1.04) + (1.078), (1.04) + (1.079), (1.04) + (1.080), (1.04) + (1.081), (1.04) + (1.082), (1.04) + (1.083), (1.04) + (2.001), (1.04) + (2.002), (1.04) + (2.003), (1.04) + (2.004), (1.04) + (2.005), (1.04) + (2.006), (1.04) + (2.007), (1.04) + (2.008), (1.04) + (2.009), (1.04) + (2.010), (1.04) + (2.011), (1.04) + (2.012), (1.04) + (2.013), (1.04) + (2.014), (1.04) + (2.015), (1.04) + (2.016), (1.04) + (2.017), (1.04) + (2.018), (1.04) + (2.019), (1.04) + (2.020), (1.04) + (2.021), (1.04) + (2.022), (1.04) + (2.023), (1.04) + (2.024), (1.04) + (2.025), (1.04) + (2.026), (1.04) + (2.027), (1.04) + (2.028), (1.04) + (2.029), (1.04) + (2.030), (1.04) + (2.031), (1.04) + (2.032), (1.04) + (2.033), (1.04) + (2.034), (1.04) + (2.035), (1.04) + (2.036), (1.04) + (2.037), (1.04) + (2.038), (1.04) + (3.001), (1.04) + (3.002), (1.04) + (3.003), (1.04) + (3.004), (1.04) + (3.005), (1.04) + (3.006), (1.04) + (3.007), (1.04) + (3.008), (1.04) + (3.009), (1.04) + (3.010), (1.04) + (3.011), (1.04) + (3.012), (1.04) + (3.013), (1.04) + (3.014), (1.04) + (3.015), (1.04) + (3.016), (1.04) + (3.017), (1.04) + (3.018), (1.04) + (3.019), (1.04) + (3.020), (1.04) + (3.021), (1.04) + (3.022), (1.04) + (3.023), (1.04) + (3.024), (1.04) + (3.025), (1.04) + (3.026), (1.04) + (3.027), (1.04) + (3.028), (1.04) + (3.029), (1.04) + (3.030), (1.04) + (3.031), (1.04) + (3.032), (1.04) + (3.033), (1.04) + (3.034), (1.04) + (3.035), (1.04) + (3.036), (1.04) + (3.037), (1.04) + (3.038), (1.04) + (3.039), (1.04) + (3.040), (1.04) + (3.041), (1.04) + (3.042), (1.04) + (3.043), (1.04) + (3.044), (1.04) + (3.045), (1.04) + (4.001), (1.04) + (4.002), (1.04) + (4.003), (1.04) + (4.004), (1.04) + (4.005), (1.04) + (4.006), (1.04) + (4.007), (1.04) + (4.008), (1.04) + (4.009), (1.04) + (4.010), (1.04) + (4.011), (1.04) + (4.012), (1.04) + (4.013), (1.04) + (4.014), (1.04) + (4.015), (1.04) + (4.016), (1.04) + (4.017), (1.04) + (4.018), (1.04) + (4.019), (1.04) + (4.020), (1.04) + (4.021), (1.04) + (4.022), (1.04) + (4.023), (1.04) + (4.024), (1.04) + (4.025), (1.04) + (4.026), (1.04) + (4.027), (1.04) + (4.028), (1.04) + (5.001), (1.04) + (5.002), (1.04) + (5.003), (1.04) + (5.004), (1.04) + (5.005), (1.04) + (5.006), (1.04) + (5.007), (1.04) + (5.008), (1.04) + (5.009), (1.04) + (5.010), (1.04) + (5.011), (1.04) + (5.012), (1.04) + (5.013), (1.04) + (5.014), (1.04) + (5.015), (1.04) + (5.016), (1.04) + (5.017), (1.04) + (5.018), (1.04) + (5.019), (1.04) + (5.020), (1.04) + (5.021), (1.04) + (5.022), (1.04) + (5.023), (1.04) + (6.001), (1.04) + (6.002), (1.04) + (6.003), (1.04) + (6.004), (1.04) + (6.005), (1.04) + (6.006), (1.04) + (6.007), (1.04) + (6.008), (1.04) + (7.001), (1.04) + (7.002), (1.04) + (7.003), (1.04) + (7.004), (1.04) + (7.005), (1.04) + (8.001), (1.04) + (9.001), (1.04) + (9.002), (1.04) + (9.003), (1.04) + (9.004), (1.04) + (9.005), (1.04) + (9.006), (1.04) + (9.007), (1.04) + (9.008), (1.04) + (9.009), (1.04) + (10.001), (1.04) + (10.002), (1.04) + (10.003), (1.04) + (10.004), (1.04) + (10.005), (1.04) + (10.006), (1.04) + (10.007), (1.04) + (10.008), (1.04) + (10.009), (1.04) + (10.010), (1.04) + (10.011), (1.04) + (10.012), (1.04) + (10.013), (1.04) + (10.014), (1.04) + (10.015), (1.04) + (10.016), (1.04) + (10.017), (1.04) + (10.018), (1.04) + (10.019), (1.04) + (11.001), (1.04) + (11.002), (1.04) + (12.001), (1.04) + (12.002), (1.04) + (12.003), (1.04) + (12.004), (1.04) + (13.001), (1.04) + (13.002), (1.04) + (13.003), (1.04) + (13.004), (1.04) + (13.005), (1.04) + (13.006), (1.04) + (14.001), (1.04) + (14.002), (1.04) + (15.001), (1.04) + (15.002), (1.04) + (15.003), (1.04) + (15.004), (1.04) + (15.005), (1.04) + (15.006), (1.04) + (15.007), (1.04) + (15.008), (1.04) + (15.009), (1.04) + (15.010), (1.04) + (15.011), (1.04) + (15.012), (1.04) + (15.013), (1.04) + (15.014), (1.04) + (15.015), (1.04) + (15.016), (1.04) + (15.017), (1.04) + (15.018), (1.04) + (15.019), (1.04) + (15.020), (1.04) + (15.021), (1.04) + (15.022), (1.04) + (15.023), (1.04) + (15.024), (1.04) + (15.025), (1.04) + (15.026), (1.04) + (15.027), (1.04) + (15.028), (1.04) + (15.029), (1.04) + (15.030), (1.04) + (15.031), (1.04) + (15.032), (1.04) + (15.033), (1.04) + (15.034), (1.04) + (15.035), (1.04) + (15.036), (1.04) + (15.037), (1.04) + (15.038), (1.04) + (15.039), (1.04) + (15.040), (1.04) + (15.041), (1.04) + (15.042), (1.04) + (15.043), (1.04) + (15.044), (1.04) + (15.045), (1.04) + (15.046), (1.04) + (15.047), (1.04) + (15.048), (1.04) + (15.049), (1.04) + (15.050), (1.04) + (15.051), (1.04) + (15.052), (1.04) + (15.053), (1.04) + (15.054), (1.04) + (15.055), (1.04) + (15.056), (1.04) + (15.057), (1.04) + (15.058), (1.04) + (15.059), (1.04) + (15.060), (1.04) + (15.061), (1.04) + (15.062), (1.04) + (15.063) , (1.04) + (15.064), (1.04) + (15.065), (1.04) + (15.066), (1.04) + (15.067), (1.04) + (15.068), (1.04) + (15.069), (1.04) + (15.070), (1.04) + (15.071), (1.04) + (15.072), (1.04) + (15.073), (1.04) + (15.074), (1.04) + (15.075), (1.04) + (15.076), (1.04) + (15.077), (1.04) + (15.078), (1.04) + (15.079), (1.04) + (15.080), (1.04) + (15.081), (1.04) + (15.082), (1.04) + (15.083), (1.04) + (15.084), (1.04) + (15.085), (1.04) + (15.086), (1.04) + (15.087), (1.04) + (15.088), (1.04) + (15.089), (1.04) + (15.090), (1.04) + (15.091), (1.04) + (15.092), (1.04) + (15.093), (1.04) + (15.094), (1.04) + (15.095), (1.04) + (15.096), (1.04) + (15.097), (1.04) + (15.098), (1.04) + (15.099), (1.04) + (15.100), (1.04) + (15.101), (1.04) + (15.102), (1.04) + (15.103), (1.04) + (15.104), (1.04) + (15.105), (1.04) + (15.106), (1.04) + (15.107), (1.04) + (15.108), (1.04) + (15.109), (1.04) + (15.110), (1.04) + (15.111), (1.04) + (15.112), (1.04) + (15.113), (1.04) + (15.114), (1.04) + (15.115),

(1.04) + (15.116), (1.04) + (15.117), (1.04) + (15.118), (1.04) + (15.119), (1.04) + (15.120), (1.04) + (15.121), (1.04) + (15.122), (1.04) + (15.123), (1.04) + (15.124), (1.04) + (16.001), (1.04) + (16.002), (1.04) + (16.003), (1.04) + (16.004), (1.04) + (16.005), (1.04) + (16.006), (1.04) + (16.007), (1.04) + (16.008), (1.04) + (16.009), (1.04) + (16.010), (1.04) + (16.011), (1.04) + (16.012), (1.04) + (16.013), (1.04) + (16.014), (1.04) + (16.015), (1.04) + (16.016), (1.04) + (16.017), (1.04) + (16.018), (1.04) + (16.019), (1.04) + (16.020), (1.04) + (16.021), (1.04) + (16.022), (1.04) + (16.023), (1.04) + (16.024), (1.04) + (16.025), (1.04) + (16.026), (1.04) + (16.027), (1.04) + (16.028), (1.04) + (16.029), (1.04) + (16.030), (1.04) + (16.031), (1.04) + (16.032), (1.04) + (16.033), (1.04) + (16.034), (1.04) + (16.035), (1.04) + (16.036), (1.04) + (16.037), (1.04) + (16.038), (1.04) + (16.039), (1.04) + (16.040), (1.04) + (16.041), (1.04) + (16.042), (1.04) + (16.043), (1.04) + (16.044), (1.04) + (16.045), (1.04) + (16.046), (1.04) + (16.047), (1.04) + (16.048), (1.04) + (16.049), (1.04) + (16.050), (1.04) + (16.051), (1.04) + (16.052), (1.04) + (16.053), (1.04) + (16.054), (1.04) + (16.055), (1.04) + (16.056), (1.04) + (16.057), (1.04) + (16.058), (1.04) + (16.059), (1.04) + (16.060), (1.04) + (16.061), (1.04) + (16.062), (1.04) + (16.063), (1.04) + (16.064), (1.04) + (16.065), (1.04) + (16.066), (1.04) + (16.067), (1.04) + (16.068), (1.04) + (16.069), (1.04) + (16.070), (1.04) + (16.071), (1.04) + (16.072), (1.04) + (16.073), (1.04) + (16.074), (1.04) + (16.075), (1.04) + (16.076), (1.04) + (16.077), (1.04) + (16.078), (1.04) + (16.079), (1.04) + (16.080), (1.04) + (16.081), (1.04) + (16.082), (1.04) + (16.083), (1.04) + (16.084), (1.04) + (16.085), (1.04) + (16.086), (1.04) + (16.087), (1.04) + (16.088), (1.04) + (16.089), (1.04) + (16.090), (1.04) + (16.091), (1.04) + (16.092), (1.04) + (16.093), (1.04) + (16.094), (1.04) + (16.095), (1.04) + (16.096), (1.04) + (16.097).

Also preferred compound combinations are selected from group (G5) consisting of the following mixtures: (1.05) + (1.001), (1.05) + (1.002), (1.05) + (1.003), (1.05) + (1.004), (1.05) + (1.005), (1.05) + (1.006), (1.05) + (1.007), (1.05) + (1.008), (1.05) + (1.009), (1.05) + (1.010), (1.05) + (1.011), (1.05) + (1.012), (1.05) + (1.013), (1.05) + (1.014), (1.05) + (1.015), (1.05) + (1.016), (1.05) + (1.017), (1.05) + (1.018), (1.05) + (1.019), (1.05) + (1.020), (1.05) + (1.021), (1.05) + (1.022), (1.05) + (1.023), (1.05) + (1.024), (1.05) + (1.025), (1.05) + (1.026), (1.05) + (1.027), (1.05) + (1.028), (1.05) + (1.029), (1.05) + (1.030), (1.05) + (1.031), (1.05) + (1.032), (1.05) + (1.033), (1.05) + (1.034), (1.05) + (1.035), (1.05) + (1.036), (1.05) + (1.037), (1.05) + (1.038), (1.05) + (1.039), (1.05) + (1.040), (1.05) + (1.041), (1.05) + (1.042), (1.05) + (1.043), (1.05) + (1.044), (1.05) + (1.045), (1.05) + (1.046), (1.05) + (1.047), (1.05) + (1.048), (1.05) + (1.049), (1.05) + (1.050), (1.05) + (1.051), (1.05) + (1.052), (1.05) + (1.053), (1.05) + (1.054), (1.05) + (1.055), (1.05) + (1.056), (1.05) + (1.057), (1.05) + (1.058), (1.05) + (1.059), (1.05) + (1.060), (1.05) + (1.061), (1.05) + (1.062), (1.05) + (1.063), (1.05) + (1.064), (1.05) + (1.065), (1.05) + (1.066), (1.05) + (1.067), (1.05) + (1.068), (1.05) + (1.069), (1.05) + (1.070), (1.05) + (1.071), (1.05) + (1.072), (1.05) + (1.073), (1.05) + (1.074), (1.05) + (1.075), (1.05) + (1.076), (1.05) + (1.077), (1.05) + (1.078), (1.05) + (1.079), (1.05) + (1.080), (1.05) + (1.081), (1.05) + (1.082), (1.05) + (1.083), (1.05) + (2.001), (1.05) + (2.002), (1.05) + (2.003), (1.05) + (2.004), (1.05) + (2.005), (1.05) + (2.006), (1.05) + (2.007), (1.05) + (2.008), (1.05) + (2.009), (1.05) + (2.010), (1.05) + (2.011), (1.05) + (2.012), (1.05) + (2.013), (1.05) + (2.014), (1.05) + (2.015), (1.05) + (2.016), (1.05) + (2.017), (1.05) + (2.018), (1.05) + (2.019), (1.05) + (2.020), (1.05) + (2.021), (1.05) + (2.022), (1.05) + (2.023), (1.05) + (2.024), (1.05) + (2.025), (1.05) + (2.026), (1.05) + (2.027), (1.05) + (2.028), (1.05) + (2.029), (1.05) + (2.030), (1.05) + (2.031), (1.05) + (2.032), (1.05) + (2.033), (1.05) + (2.034), (1.05) + (2.035), (1.05) + (2.036), (1.05) + (2.037), (1.05) + (2.038), (1.05) + (3.001), (1.05) + (3.002), (1.05) + (3.003), (1.05) + (3.004), (1.05) + (3.005), (1.05) + (3.006), (1.05) + (3.007), (1.05) + (3.008), (1.05) + (3.009), (1.05) + (3.010), (1.05) + (3.011), (1.05) + (3.012), (1.05) + (3.013), (1.05) + (3.014), (1.05) + (3.015), (1.05) + (3.016), (1.05) + (3.017), (1.05) + (3.018), (1.05) + (3.019), (1.05) + (3.020), (1.05) + (3.021), (1.05) + (3.022), (1.05) + (3.023), (1.05) + (3.024), (1.05) + (3.025), (1.05) + (3.026), (1.05) + (3.027), (1.05) + (3.028), (1.05) + (3.029), (1.05) + (3.030), (1.05) + (3.031), (1.05) + (3.032), (1.05) + (3.033), (1.05) + (3.034), (1.05) + (3.035), (1.05) + (3.036), (1.05) + (3.037), (1.05) + (3.038), (1.05) + (3.039), (1.05) + (3.040), (1.05) + (3.041), (1.05) + (3.042), (1.05) + (3.043), (1.05) + (3.044), (1.05) + (3.045), (1.05) + (4.001), (1.05) + (4.002), (1.05) + (4.003), (1.05) + (4.004), (1.05) + (4.005), (1.05) + (4.006), (1.05) + (4.007), (1.05) + (4.008), (1.05) + (4.009), (1.05) + (4.010), (1.05) + (4.011), (1.05) + (4.012), (1.05) + (4.013), (1.05) + (4.014), (1.05) + (4.015), (1.05) + (4.016), (1.05) + (4.017), (1.05) + (4.018), (1.05) + (4.019), (1.05) + (4.020), (1.05) + (4.021), (1.05) + (4.022), (1.05) + (4.023), (1.05) + (4.024), (1.05) + (4.025), (1.05) + (4.026), (1.05) + (4.027), (1.05) + (4.028), (1.05) + (5.001), (1.05) + (5.002), (1.05) + (5.003), (1.05) + (5.004), (1.05) + (5.005), (1.05) + (5.006), (1.05) + (5.007), (1.05) + (5.008), (1.05) + (5.009), (1.05) + (5.010), (1.05) + (5.011), (1.05) + (5.012), (1.05) + (5.013), (1.05) + (5.014), (1.05) + (5.015), (1.05) + (5.016), (1.05) + (5.017), (1.05) + (5.018), (1.05) + (5.019), (1.05) + (5.020), (1.05) + (5.021), (1.05) + (5.022), (1.05) + (5.023), (1.05) + (6.001), (1.05) + (6.002), (1.05) + (6.003), (1.05) + (6.004), (1.05) + (6.005), (1.05) + (6.006), (1.05) + (6.007), (1.05) + (6.008), (1.05) + (7.001), (1.05) + (7.002), (1.05) + (7.003), (1.05) + (7.004), (1.05) + (7.005), (1.05) + (8.001), (1.05) + (9.001), (1.05) + (9.002), (1.05) + (9.003), (1.05) + (9.004), (1.05) + (9.005), (1.05) + (9.006), (1.05) + (9.007), (1.05) + (9.008), (1.05) + (9.009), (1.05) + (10.001), (1.05) + (10.002), (1.05) + (10.003), (1.05) + (10.004), (1.05) + (10.005), (1.05) + (10.006), (1.05) + (10.007), (1.05) + (10.008), (1.05) + (10.009), (1.05) + (10.010), (1.05) + (10.011), (1.05) + (10.012), (1.05) + (10.013), (1.05) + (10.014), (1.05) + (10.015), (1.05) + (10.016), (1.05) + (10.017), (1.05) + (10.018), (1.05) + (10.019), (1.05) + (11.001), (1.05) + (11.002), (1.05) + (12.001), (1.05) + (12.002), (1.05) + (12.003), (1.05) + (12.004), (1.05) + (13.001), (1.05) + (13.002), (1.05) + (13.003), (1.05) + (13.004), (1.05) + (13.005), (1.05) + (13.006), (1.05) + (14.001), (1.05) + (14.002), (1.05) + (15.001), (1.05) + (15.002), (1.05) + (15.003), (1.05) + (15.004), (1.05) +

(15.005), (1.05) + (15.006), (1.05) + (15.007), (1.05) + (15.008), (1.05) + (15.009), (1.05) + (15.010), (1.05) + (15.011), (1.05) + (15.012), (1.05) + (15.013), (1.05) + (15.014), (1.05) + (15.015), (1.05) + (15.016), (1.05) + (15.017), (1.05) + (15.018), (1.05) + (15.019), (1.05) + (15.020), (1.05) + (15.021), (1.05) + (15.022), (1.05) + (15.023), (1.05) + (15.024), (1.05) + (15.025), (1.05) + (15.026), (1.05) + (15.027), (1.05) + (15.028), (1.05) + (15.029), (1.05) + (15.030), (1.05) + (15.031), (1.05) + (15.032), (1.05) + (15.033), (1.05) + (15.034), (1.05) + (15.035), (1.05) + (15.036), (1.05) + (15.037), (1.05) + (15.038), (1.05) + (15.039), (1.05) + (15.040), (1.05) + (15.041), (1.05) + (15.042), (1.05) + (15.043), (1.05) + (15.044), (1.05) + (15.045), (1.05) + (15.046), (1.05) + (15.047), (1.05) + (15.048), (1.05) + (15.049), (1.05) + (15.050), (1.05) + (15.051), (1.05) + (15.052), (1.05) + (15.053), (1.05) + (15.054), (1.05) + (15.055), (1.05) + (15.056), (1.05) + (15.057), (1.05) + (15.058), (1.05) + (15.059), (1.05) + (15.060), (1.05) + (15.061), (1.05) + (15.062), (1.05) + (15.063) , (1.05) + (15.064), (1.05) + (15.065), (1.05) + (15.066), (1.05) + (15.067), (1.05) + (15.068), (1.05) + (15.069), (1.05) + (15.070), (1.05) + (15.071), (1.05) + (15.072), (1.05) + (15.073), (1.05) + (15.074), (1.05) + (15.075), (1.05) + (15.076), (1.05) + (15.077), (1.05) + (15.078), (1.05) + (15.079), (1.05) + (15.080), (1.05) + (15.081), (1.05) + (15.082), (1.05) + (15.083), (1.05) + (15.084), (1.05) + (15.085), (1.05) + (15.086), (1.05) + (15.087), (1.05) + (15.088), (1.05) + (15.089), (1.05) + (15.090), (1.05) + (15.091), (1.05) + (15.092), (1.05) + (15.093), (1.05) + (15.094), (1.05) + (15.095), (1.05) + (15.096), (1.05) + (15.097), (1.05) + (15.098), (1.05) + (15.099), (1.05) + (15.100), (1.05) + (15.101), (1.05) + (15.102), (1.05) + (15.103), (1.05) + (15.104), (1.05) + (15.105), (1.05) + (15.106), (1.05) + (15.107), (1.05) + (15.108), (1.05) + (15.109), (1.05) + (15.110), (1.05) + (15.111), (1.05) + (15.112), (1.05) + (15.113), (1.05) + (15.114), (1.05) + (15.115), (1.05) + (15.116), (1.05) + (15.117), (1.05) + (15.118), (1.05) + (15.119), (1.05) + (15.120), (1.05) + (15.121), (1.05) + (15.122), (1.05) + (15.123), (1.05) + (15.124), (1.05) + (16.001), (1.05) + (16.002), (1.05) + (16.003), (1.05) + (16.004), (1.05) + (16.005), (1.05) + (16.006), (1.05) + (16.007), (1.05) + (16.008), (1.05) + (16.009), (1.05) + (16.010), (1.05) + (16.011), (1.05) + (16.012), (1.05) + (16.013), (1.05) + (16.014), (1.05) + (16.015), (1.05) + (16.016), (1.05) + (16.017), (1.05) + (16.018), (1.05) + (16.019), (1.05) + (16.020), (1.05) + (16.021), (1.05) + (16.022), (1.05) + (16.023), (1.05) + (16.024), (1.05) + (16.025), (1.05) + (16.026), (1.05) + (16.027), (1.05) + (16.028), (1.05) + (16.029), (1.05) + (16.030), (1.05) + (16.031), (1.05) + (16.032), (1.05) + (16.033), (1.05) + (16.034), (1.05) + (16.035), (1.05) + (16.036), (1.05) + (16.037), (1.05) + (16.038), (1.05) + (16.039), (1.05) + (16.040), (1.05) + (16.041), (1.05) + (16.042), (1.05) + (16.043), (1.05) + (16.044), (1.05) + (16.045), (1.05) + (16.046), (1.05) + (16.047), (1.05) + (16.048), (1.05) + (16.049), (1.05) + (16.050), (1.05) + (16.051), (1.05) + (16.052), (1.05) + (16.053), (1.05) + (16.054), (1.05) + (16.055), (1.05) + (16.056), (1.05) + (16.057), (1.05) + (16.058), (1.05) + (16.059), (1.05) + (16.060), (1.05) + (16.061), (1.05) + (16.062), (1.05) + (16.063), (1.05) + (16.064), (1.05) + (16.065), (1.05) + (16.066), (1.05) + (16.067), (1.05) + (16.068), (1.05) + (16.069), (1.05) + (16.070), (1.05) + (16.071), (1.05) + (16.072), (1.05) + (16.073), (1.05) + (16.074), (1.05) + (16.075), (1.05) + (16.076), (1.05) + (16.077), (1.05) + (16.078), (1.05) + (16.079), (1.05) + (16.080), (1.05) + (16.081), (1.05) + (16.082), (1.05) + (16.083), (1.05) + (16.084), (1.05) + (16.085), (1.05) + (16.086), (1.05) + (16.087), (1.05) + (16.088), (1.05) + (16.089), (1.05) + (16.090), (1.05) + (16.091), (1.05) + (16.092), (1.05) + (16.093), (1.05) + (16.094), (1.05) + (16.095), (1.05) + (16.096), (1.05) + (16.097).

More preferred compound combinations are selected from group (G1-A) consisting of the following mixtures: (I.01) + (1.001), (I.01) + (1.002), (I.01) + (1.003), (I.01) + (1.015), (I.01) + (1.016), (I.01) + (1.017), (I.01) + (1.018), (I.01) + (1.024), (I.01) + (1.026), (I.01) + (1.027), (I.01) + (1.032), (I.01) + (1.033), (I.01) + (1.063), (I.01) + (1.067), (I.01) + (2.001), (I.01) + (2.002), (I.01) + (2.005), (I.01) + (2.007), (I.01) + (2.008), (I.01) + (2.010), (I.01) + (2.012), (I.01) + (2.014), (I.01) + (2.016), (I.01) + (2.018), (I.01) + (2.031), (I.01) + (3.003), (I.01) + (3.011), (I.01) + (3.012), (I.01) + (3.014), (I.01) + (3.017), (I.01) + (3.019), (I.01) + (3.021), (I.01) + (3.022), (I.01) + (3.025), (I.01) + (4.007), (I.01) + (5.004), (I.01) + (5.005), (I.01) + (5.008), (I.01) + (5.009), (I.01) + (5.012), (I.01) + (5.013), (I.01) + (6.005), (I.01) + (7.005), (I.01) + (8.001), (I.01) + (9.002), (I.01) + (10.001), (I.01) + (10.002), (I.01) + (12.003), (I.01) + (12.004), (I.01) + (13.001), (I.01) + (13.004), (I.01) + (14.001), (I.01) + (15.025), (I.01) + (16.01).

Other more preferred compound combinations are selected from group (G2-A) consisting of the following mixtures:
(1.02) + (1.001), (1.02) + (1.002), (1.02) + (1.003), (1.02) + (1.015), (1.02) + (1.016), (1.02) + (1.017), (1.02) + (1.018), (1.02) + (1.024), (1.02) + (1.026), (1.02) + (1.027), (1.02) + (1.032), (1.02) + (1.033), (1.02) + (1.063), (1.02) + (1.067), (1.02) + (2.001), (1.02) + (2.002), (1.02) + (2.005), (1.02) + (2.007), (1.02) + (2.008), (1.02) + (2.010), (1.02) + (2.012), (1.02) + (2.014), (1.02) + (2.016), (1.02) + (2.018), (1.02) + (2.031), (1.02) + (3.003), (1.02) + (3.011), (1.02) + (3.012), (1.02) + (3.014), (1.02) + (3.017), (1.02) + (3.019), (1.02) + (3.021), (1.02) + (3.022), (1.02) + (3.025), (1.02) + (4.007), (1.02) + (5.004), (1.02) + (5.005), (1.02) + (5.008), (1.02) + (5.009), (1.02) + (5.012), (1.02) + (5.013), (1.02) + (6.005), (1.02) + (7.005), (1.02) + (8.001), (1.02) + (9.002), (1.02) + (10.001), (1.02) + (10.002), (1.02) + (12.003), (1.02) + (12.004), (1.02) + (13.001), (1.02) + (13.004), (1.02) + (14.001), (1.02) + (15.025), (1.02) + (16.01).

Other more preferred compound combinations are selected from group (G3-A) consisting of the following mixtures:
(1.03) + (1.001), (1.03) + (1.002), (1.03) + (1.003), (1.03) + (1.015), (1.03) + (1.016), (1.03) + (1.017), (1.03) + (1.018), (1.03) + (1.024), (1.03) + (1.026), (1.03) + (1.027), (1.03) + (1.032), (1.03) + (1.033), (1.03) + (1.063), (1.03) + (1.067), (1.03) + (2.001), (1.03) + (2.002), (1.03) + (2.005), (1.03) + (2.007), (1.03) + (2.008), (1.03) + (2.010), (1.03) + (2.012),

(1.03) + (2.014), (1.03) + (2.016), (1.03) + (2.018), (1.03) + (2.031), (1.03) + (3.003), (1.03) + (3.011), (1.03) + (3.012), (1.03) + (3.014), (1.03) + (3.017), (1.03) + (3.019), (1.03) + (3.021), (1.03) + (3.022), (1.03) + (3.025), (1.03) + (4.007), (1.03) + (5.004), (1.03) + (5.005), (1.03) + (5.008), (1.03) + (5.009), (1.03) + (5.012), (1.03) + (5.013), (1.03) + (6.005), (1.03) + (7.005), (1.03) + (8.001), (1.03) + (9.002), (1.03) + (10.001), (1.03) + (10.002), (1.03) + (12.003), (1.03) + (12.004), (1.03) + (13.001), (1.03) + (13.004), (1.03) + (14.001), (1.03) + (15.025), (1.03) + (16.01).

Still other more preferred compound combinations are selected from group (G4-A) consisting of the following mixtures:

(1.04) + (1.001), (1.04) + (1.002), (1.04) + (1.003), (1.04) + (1.015), (1.04) + (1.016), (1.04) + (1.017), (1.04) + (1.018), (1.04) + (1.024), (1.04) + (1.026), (1.04) + (1.027), (1.04) + (1.032), (1.04) + (1.033), (1.04) + (1.063), (1.04) + (1.067), (1.04) + (2.001), (1.04) + (2.002), (1.04) + (2.005), (1.04) + (2.007), (1.04) + (2.008), (1.04) + (2.010), (1.04) + (2.012), (1.04) + (2.014), (1.04) + (2.016), (1.04) + (2.018), (1.04) + (2.031), (1.04) + (3.003), (1.04) + (3.011), (1.04) + (3.012), (1.04) + (3.014), (1.04) + (3.017), (1.04) + (3.019), (1.04) + (3.021), (1.04) + (3.022), (1.04) + (3.025), (1.04) + (4.007), (1.04) + (5.004), (1.04) + (5.005), (1.04) + (5.008), (1.04) + (5.009), (1.04) + (5.012), (1.04) + (5.013), (1.04) + (6.005), (1.04) + (7.005), (1.04) + (8.001), (1.04) + (9.002), (1.04) + (10.001), (1.04) + (10.002), (1.04) + (12.003), (1.04) + (12.004), (1.04) + (13.001), (1.04) + (13.004), (1.04) + (14.001), (1.04) + (15.025), (1.04) + (16.01).

Yet other more preferred compound combinations are selected from group (G5-A) consisting of the following mixtures:

(1.05) + (1.001), (1.05) + (1.002), (1.05) + (1.003), (1.05) + (1.015), (1.05) + (1.016), (1.05) + (1.017), (1.05) + (1.018), (1.05) + (1.024), (1.05) + (1.026), (1.05) + (1.027), (1.05) + (1.032), (1.05) + (1.033), (1.05) + (1.063), (1.05) + (1.067), (1.05) + (2.001), (1.05) + (2.002), (1.05) + (2.005), (1.05) + (2.007), (1.05) + (2.008), (1.05) + (2.010), (1.05) + (2.012), (1.05) + (2.014), (1.05) + (2.016), (1.05) + (2.018), (1.05) + (2.031), (1.05) + (3.003), (1.05) + (3.011), (1.05) + (3.012), (1.05) + (3.014), (1.05) + (3.017), (1.05) + (3.019), (1.05) + (3.021), (1.05) + (3.022), (1.05) + (3.025), (1.05) + (4.007), (1.05) + (5.004), (1.05) + (5.005), (1.05) + (5.008), (1.05) + (5.009), (1.05) + (5.012), (1.05) + (5.013), (1.05) + (6.005), (1.05) + (7.005), (1.05) + (8.001), (1.05) + (9.002), (1.05) + (10.001), (1.05) + (10.002), (1.05) + (12.003), (1.05) + (12.004), (1.05) + (13.001), (1.05) + (13.004), (1.05) + (14.001), (1.05) + (15.025), (1.05) + (16.01).

Some particularly preferred compound combinations are selected from group (G1-B) consisting of the following mixtures:

(1.01) + (1.002), (1.01) + (1.024), (1.01) + (1.027), (1.01) + (1.032), (1.01) + (1.033), (1.01) + (1.063), (1.01) + (1.067), (I.01) + (2.002), (I.01) + (2.008), (I.01) + (2.012), (I.01) + (2.014), (I.01) + (2.016), (I.01) + (2.031), (I.01) + (3.003), (I.01) + (3.011), (I.01) + (3.017), (I.01) + (3.025), (I.01) + (4.007), (I.01) + (5.013), (I.01) + (6.005), (I.01) + (10.001), (I.01) + (10.002), (I.01) + (12.003), (I.01) + (12.004), (I.01) + (13.001), (I.01) + (15.025).

Other particularly preferred compound combinations are selected from group (G2-B) consisting of the following mixtures:

(1.02) + (1.002), (1.02) + (1.024), (1.02) + (1.027), (1.02) + (1.032), (1.02) + (1.033), (1.02) + (1.063), (1.02) + (1.067), (1.02) + (2.002), (1.02) + (2.008), (1.02) + (2.012), (1.02) + (2.014), (1.02) + (2.016), (1.02) + (2.031), (1.02) + (3.003), (1.02) + (3.011), (1.02) + (3.017), (1.02) + (3.025), (1.02) + (4.007), (1.02) + (5.013), (1.02) + (6.005), (1.02) + (10.001), (1.02) + (10.002), (1.02) + (12.003), (1.02) + (12.004), (1.02) + (13.001), (1.02) + (15.025).

Other particularly preferred compound combinations are selected from group (G3-B) consisting of the following mixtures:

(1.03) + (1.002), (1.03) + (1.024), (1.03) + (1.027), (1.03) + (1.032), (1.03) + (1.033), (1.03) + (1.063), (1.03) + (1.067), (1.03) + (2.002), (1.03) + (2.008), (1.03) + (2.012), (1.03) + (2.014), (1.03) + (2.016), (1.03) + (2.031), (1.03) + (3.003), (1.03) + (3.011), (1.03) + (3.017), (1.03) + (3.025), (1.03) + (4.007), (1.03) + (5.013), (1.03) + (6.005), (1.03) + (10.001), (1.03) + (10.002), (1.03) + (12.003), (1.03) + (12.004), (1.03) + (13.001), (1.03) + (15.025).

Still other particularly preferred compound combinations are selected from group (G4-B) consisting of the following mixtures:

(1.04) + (1.002), (1.04) + (1.024), (1.04) + (1.027), (1.04) + (1.032), (1.04) + (1.033), (1.04) + (1.063), (1.04) + (1.067), (1.04) + (2.002), (1.04) + (2.008), (1.04) + (2.012), (1.04) + (2.014), (1.04) + (2.016), (1.04) + (2.031), (1.04) + (3.003), (1.04) + (3.011), (1.04) + (3.017), (1.04) + (3.025), (1.04) + (4.007), (1.04) + (5.013), (1.04) + (6.005), (1.04) + (10.001), (1.04) + (10.002), (1.04) + (12.003), (1.04) + (12.004), (1.04) + (13.001), (1.04) + (15.025).

Yet other particularly preferred compound combinations are selected from group (G5-B) consisting of the following mixtures:

(1.05) + (1.002), (1.05) + (1.024), (1.05) + (1.027), (1.05) + (1.032), (1.05) + (1.033), (1.05) + (1.063), (1.05) + (1.067), (1.05) + (2.002), (1.05) + (2.008), (1.05) + (2.012), (1.05) + (2.014), (1.05) + (2.016), (1.05) + (2.031), (1.05) + (3.003), (1.05) + (3.011), (1.05) + (3.017), (1.05) + (3.025), (1.05) + (4.007), (1.05) + (5.013), (1.05) + (6.005), (1.05) + (10.001), (1.05) + (10.002), (1.05) + (12.003), (1.05) + (12.004), (1.05) + (13.001), (1.05) + (15.025).

If two compounds (B) are present in the combinations according to the invention, preferred compound combinations are selected from the group (G1-C) consisting of the following mixtures:

(I.01) + (1.001) + (1.002), (I.01) + (1.001) + (1.003), (I.01) + (1.001) + (1.015), (I.01) + (1.001) + (1.016), (I.01) + (1.001) + (1.017), (I.01) + (1.001) + (1.018), (I.01) + (1.001) + (1.024), (I.01) + (1.001) + (1.026), (I.01) + (1.001) + (1.027), (I.01) + (1.001) + (1.032), (I.01) + (1.001) + (1.033), (I.01) + (1.001) + (1.063), (I.01) + (1.001) + (1.067), (I.01) + (1.001) + (2.001), (I.01) + (1.001) + (2.002), (I.01) + (1.001) + (2.005), (I.01) + (1.001) + (2.007), (I.01) + (1.001) + (2.008), (I.01) + (1.001) + (2.010), (I.01) + (1.001) + (2.012), (I.01) + (1.001) + (2.014), (I.01) + (1.001) + (2.016), (I.01) + (1.001) + (2.018), (I.01) + (1.001) + (2.031), (I.01) + (1.001) + (3.003), (I.01) + (1.001) + (3.011), (I.01) + (1.001) + (3.012), (I.01) + (1.001) + (3.014), (I.01) + (1.001) + (3.017), (I.01) + (1.001) + (3.019), (I.01) + (1.001) + (3.021), (I.01) + (1.001) + (3.022), (I.01) + (1.001) + (3.025), (I.01) + (1.001) + (4.007), (I.01) + (1.001) + (5.004), (I.01) + (1.001) + (5.005), (I.01) + (1.001) + (5.008), (I.01) + (1.001) + (5.009), (I.01) + (1.001) + (5.012), (I.01) + (1.001) + (5.013), (I.01) + (1.001) + (6.005), (I.01) + (1.001) + (7.005), (I.01) + (1.001) + (8.001), (I.01) + (1.001) + (9.002), (I.01) + (1.001) + (10.001), (I.01) + (1.001) + (10.002), (I.01) + (1.001) + (12.003), (I.01) + (1.001) + (12.004), (I.01) + (1.001) + (13.001), (I.01) + (1.001) + (13.004), (I.01) + (1.001) + (14.001), (I.01) + (1.001) + (15.025), (I.01) + (1.001) + (16.01),

(I.01) + (1.002) + (1.001), (I.01) + (1.002) + (1.003), (I.01) + (1.002) + (1.015), (I.01) + (1.002) + (1.016), (I.01) + (1.002) + (1.017), (I.01) + (1.002) + (1.018), (I.01) + (1.002) + (1.024), (I.01) + (1.002) + (1.026), (I.01) + (1.002) + (1.027), (I.01) + (1.002) + (1.032), (I.01) + (1.002) + (1.033), (I.01) + (1.002) + (1.063), (I.01) + (1.002) + (1.067), (I.01) + (1.002) + (2.001), (I.01) + (1.002) + (2.002), (I.01) + (1.002) + (2.005), (I.01) + (1.002) + (2.007), (I.01) + (1.002) + (2.008), (I.01) + (1.002) + (2.010), (I.01) + (1.002) + (2.012), (I.01) + (1.002) + (2.014), (I.01) + (1.002) + (2.016), (I.01) + (1.002) + (2.018), (I.01) + (1.002) + (2.031), (I.01) + (1.002) + (3.003), (I.01) + (1.002) + (3.011), (I.01) + (1.002) + (3.012), (I.01) + (1.002) + (3.014), (I.01) + (1.002) + (3.017), (I.01) + (1.002) + (3.019), (I.01) + (1.002) + (3.021), (I.01) + (1.002) + (3.022), (I.01) + (1.002) + (3.025), (I.01) + (1.002) + (4.007), (I.01) + (1.002) + (5.004), (I.01) + (1.002) + (5.005), (I.01) + (1.002) + (5.008), (I.01) + (1.002) + (5.009), (I.01) + (1.002) + (5.012), (I.01) + (1.002) + (5.013), (I.01) + (1.002) + (6.005), (I.01) + (1.002) + (7.005), (I.01) + (1.002) + (8.001), (I.01) + (1.002) + (9.002), (I.01) + (1.002) + (10.001), (I.01) + (1.002) + (10.002), (I.01) + (1.002) + (12.003), (I.01) + (1.002) + (12.004), (I.01) + (1.002) + (13.001), (I.01) + (1.002) + (13.004), (I.01) + (1.002) + (14.001), (I.01) + (1.002) + (15.025), (I.01) + (1.002) + (16.01),

(I.01) + (1.003) + (1.001), (I.01) + (1.003) + (1.002), (I.01) + (1.003) + (1.015), (I.01) + (1.003) + (1.016), (I.01) + (1.003) + (1.017), (I.01) + (1.003) + (1.018), (I.01) + (1.003) + (1.024), (I.01) + (1.003) + (1.026), (I.01) + (1.003) + (1.027), (I.01) + (1.003) + (1.032), (I.01) + (1.003) + (1.033), (I.01) + (1.003) + (1.063), (I.01) + (1.003) + (1.067), (I.01) + (1.003) + (2.001), (I.01) + (1.003) + (2.002), (I.01) + (1.003) + (2.005), (I.01) + (1.003) + (2.007), (I.01) + (1.003) + (2.008), (I.01) + (1.003) + (2.010), (I.01) + (1.003) + (2.012), (I.01) + (1.003) + (2.014), (I.01) + (1.003) + (2.016), (I.01) + (1.003) + (2.018), (I.01) + (1.003) + (2.031), (1.01) + (1.003) + (3.003), (1.01) + (1.003) + (3.011), (1.01) + (1.003) + (3.012), (1.01) + (1.003) + (3.014), (1.01) + (1.003) + (3.017), (1.01) + (1.003) + (3.019), (1.01) + (1.003) + (3.021), (1.01) + (1.003) + (3.022), (1.01) + (1.003) + (3.025), (1.01) + (1.003) + (4.007), (1.01) + (1.003) + (5.004), (1.01) + (1.003) + (5.005), (1.01) + (1.003) + (5.008), (1.01) + (1.003) + (5.009), (1.01) + (1.003) + (5.012), (1.01) + (1.003) + (5.013), (1.01) + (1.003) + (6.005), (1.01) + (1.003) + (7.005), (1.01) + (1.003) + (8.001), (1.01) + (1.003) + (9.002), (1.01) + (1.003) + (10.001), (1.01) + (1.003) + (10.002), (1.01) + (1.003) + (12.003), (1.01) + (1.003) + (12.004), (1.01) + (1.003) + (13.001), (1.01) + (1.003) + (13.004), (1.01) + (1.003) + (14.001), (1.01) + (1.003) + (15.025), (I.01) + (1.003) + (16.01),

(I.01) + (1.015) + (1.001), (I.01) + (1.015) + (1.002), (I.01) + (1.015) + (1.003), (I.01) + (1.015) + (1.016), (I.01) + (1.015) + (1.017), (I.01) + (1.015) + (1.018), (I.01) + (1.015) + (1.024), (I.01) + (1.015) + (1.026), (I.01) + (1.015) + (1.027), (I.01) + (1.015) + (1.032), (I.01) + (1.015) + (1.033), (I.01) + (1.015) + (1.063), (I.01) + (1.015) + (1.067), (I.01) + (1.015) + (2.001), (I.01) + (1.015) + (2.002), (I.01) + (1.015) + (2.005), (I.01) + (1.015) + (2.007), (I.01) + (1.015) + (2.008), (I.01) + (1.015) + (2.010), (I.01) + (1.015) + (2.012), (I.01) + (1.015) + (2.014), (I.01) + (1.015) + (2.016), (I.01) + (1.015) + (2.018), (I.01) + (1.015) + (2.031), (I.01) + (1.015) + (3.003), (1.01) + (1.015) + (3.011), (1.01) + (1.015) + (3.012), (1.01) + (1.015) + (3.014), (I.01) + (1.015) + (3.017), (1.01) + (1.015) + (3.019), (1.01) + (1.015) + (3.021), (1.01) + (1.015) + (3.022), (I.01) + (1.015) + (3.025), (1.01) + (1.015) + (4.007), (1.01) + (1.015) + (5.004), (1.01) + (1.015) + (5.005), (I.01) + (1.015) + (5.008), (1.01) + (1.015) + (5.009), (1.01) + (1.015) + (5.012), (1.01) + (1.015) + (5.013), (I.01) + (1.015) + (6.005), (1.01) + (1.015) + (7.005), (1.01) + (1.015) + (8.001), (1.01) + (1.015) + (9.002), (1.01) + (1.015) + (10.001), (1.01) + (1.015) + (10.002), (1.01) + (1.015) + (12.003), (1.01) + (1.015) + (12.004), (1.01) + (1.015) + (13.001), (1.01) + (1.015) + (13.004), (1.01) + (1.015) + (14.001), (1.01) + (1.015) + (15.025), (I.01) + (1.015) + (16.01),

(I.01) + (1.016) + (1.001), (I.01) + (1.016) + (1.002), (I.01) + (1.016) + (1.003), (I.01) + (1.016) + (1.015), (I.01) + (1.016) + (1.017), (I.01) + (1.016) + (1.018), (I.01) + (1.016) + (1.024), (I.01) + (1.016) + (1.026), (I.01) + (1.016) +

(1.027), (I.01) + (1.016) + (1.032), (I.01) + (1.016) + (1.033), (I.01) + (1.016) + (1.063), (I.01) + (1.016) + (1.067), (I.01) + (1.016) + (2.001), (I.01) + (1.016) + (2.002), (I.01) + (1.016) + (2.005), (I.01) + (1.016) + (2.007), (I.01) + (1.016) + (2.008), (I.01) + (1.016) + (2.010), (I.01) + (1.016) + (2.012), (I.01) + (1.016) + (2.014), (I.01) + (1.016) + (2.016), (I.01) + (1.016) + (2.018), (I.01) + (1.016) + (2.031), (I.01) + (1.016) + (3.003), (I.01) + (1.016) + (3.011), (I.01) + (1.016) + (3.012), (I.01) + (1.016) + (3.014), (I.01) + (1.016) + (3.017), (I.01) + (1.016) + (3.019), (I.01) + (1.016) + (3.021), (I.01) + (1.016) + (3.022), (I.01) + (1.016) + (3.025), (I.01) + (1.016) + (4.007), (I.01) + (1.016) + (5.004), (I.01) + (1.016) + (5.005), (I.01) + (1.016) + (5.008), (I.01) + (1.016) + (5.009), (I.01) + (1.016) + (5.012), (I.01) + (1.016) + (5.013), (I.01) + (1.016) + (6.005), (I.01) + (1.016) + (7.005), (I.01) + (1.016) + (8.001), (I.01) + (1.016) + (9.002), (I.01) + (1.016) + (10.001), (I.01) + (1.016) + (10.002), (I.01) + (1.016) + (12.003), (I.01) + (1.016) + (12.004), (I.01) + (1.016) + (13.001), (I.01) + (1.016) + (13.004), (I.01) + (1.016) + (14.001), (I.01) + (1.016) + (15.025), (I.01) + (1.016) + (16.01),

(I.01) + (1.017) + (1.001), (I.01) + (1.017) + (1.002), (I.01) + (1.017) + (1.003), (I.01) + (1.017) + (1.015), (I.01) + (1.017) + (1.016), (I.01) + (1.017) + (1.018), (I.01) + (1.017) + (1.024), (I.01) + (1.017) + (1.026), (I.01) + (1.017) + (1.027), (I.01) + (1.017) + (1.032), (I.01) + (1.017) + (1.033), (I.01) + (1.017) + (1.063), (I.01) + (1.017) + (1.067), (I.01) + (1.017) + (2.001), (I.01) + (1.017) + (2.002), (I.01) + (1.017) + (2.005), (I.01) + (1.017) + (2.007), (I.01) + (1.017) + (2.008), (I.01) + (1.017) + (2.010), (I.01) + (1.017) + (2.012), (I.01) + (1.017) + (2.014), (I.01) + (1.017) + (2.016), (I.01) + (1.017) + (2.018), (I.01) + (1.017) + (2.031), (I.01) + (1.017) + (3.003), (I.01) + (1.017) + (3.011), (I.01) + (1.017) + (3.012), (I.01) + (1.017) + (3.014), (I.01) + (1.017) + (3.017), (I.01) + (1.017) + (3.019), (I.01) + (1.017) + (3.021), (I.01) + (1.017) + (3.022), (I.01) + (1.017) + (3.025), (I.01) + (1.017) + (4.007), (I.01) + (1.017) + (5.004), (I.01) + (1.017) + (5.005), (I.01) + (1.017) + (5.008), (I.01) + (1.017) + (5.009), (I.01) + (1.017) + (5.012), (I.01) + (1.017) + (5.013), (I.01) + (1.017) + (6.005), (I.01) + (1.017) + (7.005), (I.01) + (1.017) + (8.001), (I.01) + (1.017) + (9.002), I.01) + (1.017) + (10.001), I.01) + (1.017) + (10.002), I.01) + (1.017) + (12.003), I.01) + (1.017) + (12.004), I.01) + (1.017) + (13.001), I.01) + (1.017) + (13.004), I.01) + (1.017) + (14.001), I.01) + (1.017) + (15.025), I.01) + (1.017) + (16.01),

I.01) + (1.018) + (1.001), I.01) + (1.018) + (1.002), I.01) + (1.018) + (1.003), I.01) + (1.018) + (1.015), I.01) + (1.018) + (1.016), I.01) + (1.018) + (1.017), I.01) + (1.018) + (1.024), I.01) + (1.018) + (1.026), I.01) + (1.018) + (1.027), I.01) + (1.018) + (1.032), I.01) + (1.018) + (1.033), I.01) + (1.018) + (1.063), I.01) + (1.018) + (1.067), I.01) + (1.018) + (2.001), I.01) + (1.018) + (2.002), I.01) + (1.018) + (2.005), I.01) + (1.018) + (2.007), I.01) + (1.018) + (2.008), I.01) + (1.018) + (2.010), I.01) + (1.018) + (2.012), I.01) + (1.018) + (2.014), I.01) + (1.018) + (2.016), I.01) + (1.018) + (2.018), I.01) + (1.018) + (2.031), I.01) + (1.018) + (3.003), I.01) + (1.018) + (3.011), I.01) + (1.018) + (3.012), I.01) + (1.018) + (3.014), I.01) + (1.018) + (3.017), I.01) + (1.018) + (3.019), I.01) + (1.018) + (3.021), I.01) + (1.018) + (3.022), I.01) + (1.018) + (3.025), I.01) + (1.018) + (4.007), I.01) + (1.018) + (5.004), I.01) + (1.018) + (5.005), I.01) + (1.018) + (5.008), I.01) + (1.018) + (5.009), I.01) + (1.018) + (5.012), I.01) + (1.018) + (5.013), I.01) + (1.018) + (6.005), I.01) + (1.018) + (7.005), I.01) + (1.018) + (8.001), I.01) + (1.018) + (9.002), I.01) + (1.018) + (10.001), I.01) + (1.018) + (10.002), I.01) + (1.018) + (12.003), I.01) + (1.018) + (12.004), I.01) + (1.018) + (13.001), I.01) + (1.018) + (13.004), I.01) + (1.018) + (14.001), I.01) + (1.018) + (15.025), I.01) + (1.018) + (16.01),

I.01) + (1.024) + (1.001), I.01) + (1.024) + (1.002), I.01) + (1.024) + (1.003), I.01) + (1.024) + (1.015), I.01) + (1.024) + (1.016), I.01) + (1.024) + (1.017), I.01) + (1.024) + (1.018), I.01) + (1.024) + (1.026), I.01) + (1.024) + (1.027), I.01) + (1.024) + (1.032), I.01) + (1.024) + (1.033), I.01) + (1.024) + (1.063), I.01) + (1.024) + (1.067), I.01) + (1.024) + (2.001), I.01) + (1.024) + (2.002), I.01) + (1.024) + (2.005), I.01) + (1.024) + (2.007), I.01) + (1.024) + (2.008), I.01) + (1.024) + (2.010), I.01) + (1.024) + (2.012), I.01) + (1.024) + (2.014), I.01) + (1.024) + (2.016), I.01) + (1.024) + (2.018), I.01) + (1.024) + (2.031), (1.01) + (1.024) + (3.003), (1.01) + (1.024) + (3.011), (1.01) + (1.024) + (3.012), (1.01) + (1.024) + (3.014), (1.01) + (1.024) + (3.017), (1.01) + (1.024) + (3.019), (1.01) + (1.024) + (3.021), (1.01) + (1.024) + (3.022), (1.01) + (1.024) + (3.025), (1.01) + (1.024) + (4.007), (1.01) + (1.024) + (5.004), (1.01) + (1.024) + (5.005), (1.01) + (1.024) + (5.008), (1.01) + (1.024) + (5.009), (1.01) + (1.024) + (5.012), (1.01) + (1.024) + (5.013), (1.01) + (1.024) + (6.005), (1.01) + (1.024) + (7.005), (1.01) + (1.024) + (8.001), (1.01) + (1.024) + (9.002), (1.01) + (1.024) + (10.001), (1.01) + (1.024) + (10.002), (1.01) + (1.024) + (12.003), (1.01) + (1.024) + (12.004), (1.01) + (1.024) + (13.001), (1.01) + (1.024) + (13.004), (1.01) + (1.024) + (14.001), (1.01) + (1.024) + (15.025), I.01) + (1.024) + (16.01),

I.01) + (1.026) + (1.001), I.01) + (1.026) + (1.002), I.01) + (1.026) + (1.003), I.01) + (1.026) + (1.015), I.01) + (1.026) + (1.016), I.01) + (1.026) + (1.017), I.01) + (1.026) + (1.018), I.01) + (1.026) + (1.024), I.01) + (1.026) + (1.027), I.01) + (1.026) + (1.032), I.01) + (1.026) + (1.033), I.01) + (1.026) + (1.063), I.01) + (1.026) + (1.067), I.01) + (1.026) + (2.001), I.01) + (1.026) + (2.002), I.01) + (1.026) + (2.005), I.01) + (1.026) + (2.007), I.01) + (1.026) + (2.008), I.01) + (1.026) + (2.010), I.01) + (1.026) + (2.012), I.01) + (1.026) + (2.014), I.01) + (1.026) + (2.016), I.01) + (1.026) +

(2.018), I.01) + (1.026) + (2.031), I.01) + (1.026) + (3.003), I.01) + (1.026) + (3.011), I.01) + (1.026) + (3.012), I.01) + (1.026) + (3.014), I.01) + (1.026) + (3.017), I.01) + (1.026) + (3.019), I.01) + (1.026) + (3.021), I.01) + (1.026) + (3.022), I.01) + (1.026) + (3.025), I.01) + (1.026) + (4.007), I.01) + (1.026) + (5.004), I.01) + (1.026) + (5.005), I.01) + (1.026) + (5.008), I.01) + (1.026) + (5.009), I.01) + (1.026) + (5.012), I.01) + (1.026) + (5.013), I.01) + (1.026) + (6.005), I.01) + (1.026) + (7.005), I.01) + (1.026) + (8.001), I.01) + (1.026) + (9.002), I.01) + (1.026) + (10.001), I.01) + (1.026) + (10.002), I.01) + (1.026) + (12.003), I.01) + (1.026) + (12.004), I.01) + (1.026) + (13.001), I.01) + (1.026) + (13.004), I.01) + (1.026) + (14.001), I.01) + (1.026) + (15.025), I.01) + (1.026) + (16.01),

I.01) + (1.027) + (1.001), I.01) + (1.027) + (1.002), I.01) + (1.027) + (1.003), I.01) + (1.027) + (1.015), I.01) + (1.027) + (1.016), I.01) + (1.027) + (1.017), I.01) + (1.027) + (1.018), I.01) + (1.027) + (1.024), I.01) + (1.027) + (1.026), I.01) + (1.027) + (1.032), I.01) + (1.027) + (1.033), I.01) + (1.027) + (1.063), I.01) + (1.027) + (1.067), I.01) + (1.027) + (2.001), I.01) + (1.027) + (2.002), I.01) + (1.027) + (2.005), I.01) + (1.027) + (2.007), I.01) + (1.027) + (2.008), I.01) + (1.027) + (2.010), I.01) + (1.027) + (2.012), I.01) + (1.027) + (2.014), I.01) + (1.027) + (2.016), I.01) + (1.027) + (2.018), I.01) + (1.027) + (2.031), I.01) + (1.027) + (3.003), I.01) + (1.027) + (3.011), I.01) + (1.027) + (3.012), I.01) + (1.027) + (3.014), I.01) + (1.027) + (3.017), I.01) + (1.027) + (3.019), I.01) + (1.027) + (3.021), I.01) + (1.027) + (3.022), I.01) + (1.027) + (3.025), I.01) + (1.027) + (4.007), I.01) + (1.027) + (5.004), I.01) + (1.027) + (5.005), I.01) + (1.027) + (5.008), I.01) + (1.027) + (5.009), I.01) + (1.027) + (5.012), I.01) + (1.027) + (5.013), I.01) + (1.027) + (6.005), I.01) + (1.027) + (7.005), I.01) + (1.027) + (8.001), I.01) + (1.027) + (9.002), I.01) + (1.027) + (10.001), I.01) + (1.027) + (10.002), I.01) + (1.027) + (12.003), I.01) + (1.027) + (12.004), I.01) + (1.027) + (13.001), I.01) + (1.027) + (13.004), I.01) + (1.027) + (14.001), I.01) + (1.027) + (15.025), I.01) + (1.027) + (16.01),

I.01) + (1.032) + (1.001), I.01) + (1.032) + (1.002), I.01) + (1.032) + (1.003), I.01) + (1.032) + (1.015), I.01) + (1.032) + (1.016), I.01) + (1.032) + (1.017), I.01) + (1.032) + (1.018), I.01) + (1.032) + (1.024), I.01) + (1.032) + (1.026), I.01) + (1.032) + (1.027), I.01) + (1.032) + (1.033), I.01) + (1.032) + (1.063), I.01) + (1.032) + (1.067), I.01) + (1.032) + (2.001), I.01) + (1.032) + (2.002), I.01) + (1.032) + (2.005), I.01) + (1.032) + (2.007), I.01) + (1.032) + (2.008), I.01) + (1.032) + (2.010), I.01) + (1.032) + (2.012), I.01) + (1.032) + (2.014), I.01) + (1.032) + (2.016), I.01) + (1.032) + (2.018), I.01) + (1.032) + (2.031), (1.01) + (1.032) + (3.003), (1.01) + (1.032) + (3.011), (1.01) + (1.032) + (3.012), (1.01) + (1.032) + (3.014), (1.01) + (1.032) + (3.017), (1.01) + (1.032) + (3.019), (1.01) + (1.032) + (3.021), (1.01) + (1.032) + (3.022), (1.01) + (1.032) + (3.025), (1.01) + (1.032) + (4.007), (1.01) + (1.032) + (5.004), (1.01) + (1.032) + (5.005), (1.01) + (1.032) + (5.008), (1.01) + (1.032) + (5.009), (1.01) + (1.032) + (5.012), (1.01) + (1.032) + (5.013), (1.01) + (1.032) + (6.005), (1.01) + (1.032) + (7.005), (1.01) + (1.032) + (8.001), (1.01) + (1.032) + (9.002), (1.01) + (1.032) + (10.001), (1.01) + (1.032) + (10.002), (1.01) + (1.032) + (12.003), (1.01) + (1.032) + (12.004), (1.01) + (1.032) + (13.001), (1.01) + (1.032) + (13.004), (1.01) + (1.032) + (14.001), (1.01) + (1.032) + (15.025), I.01) + (1.032) + (16.01),

(1.01) + (1.033) + (1.001), (1.01) + (1.033) + (1.002), (1.01) + (1.033) + (1.003), (1.01) + (1.033) + (1.015), (1.01) + (1.033) + (1.016), (1.01) + (1.033) + (1.017), (1.01) + (1.033) + (1.018), (1.01) + (1.033) + (1.024), (1.01) + (1.033) + (1.026), (1.01) + (1.033) + (1.027), (1.01) + (1.033) + (1.032), (1.01) + (1.033) + (1.063), (1.01) + (1.033) + (1.067), (1.01) + (1.033) + (2.001), (1.01) + (1.033) + (2.002), (1.01) + (1.033) + (2.005), (1.01) + (1.033) + (2.007), (1.01) + (1.033) + (2.008), (1.01) + (1.033) + (2.010), (1.01) + (1.033) + (2.012), (1.01) + (1.033) + (2.014), (1.01) + (1.033) + (2.016), (1.01) + (1.033) + (2.018), (1.01) + (1.033) + (2.031), (1.01) + (1.033) + (3.003), (1.01) + (1.033) + (3.011), (1.01) + (1.033) + (3.012), (1.01) + (1.033) + (3.014), (1.01) + (1.033) + (3.017), (1.01) + (1.033) + (3.019), (1.01) + (1.033) + (3.021), (1.01) + (1.033) + (3.022), (1.01) + (1.033) + (3.025), (1.01) + (1.033) + (4.007), (1.01) + (1.033) + (5.004), (1.01) + (1.033) + (5.005), (1.01) + (1.033) + (5.008), (1.01) + (1.033) + (5.009), (1.01) + (1.033) + (5.012), (1.01) + (1.033) + (5.013), (1.01) + (1.033) + (6.005), (1.01) + (1.033) + (7.005), (1.01) + (1.033) + (8.001), (1.01) + (1.033) + (9.002), (1.01) + (1.033) + (10.001), (1.01) + (1.033) + (10.002), (1.01) + (1.033) + (12.003), (1.01) + (1.033) + (12.004), (1.01) + (1.033) + (13.001), (1.01) + (1.033) + (13.004), (1.01) + (1.033) + (14.001), (1.01) + (1.033) + (15.025), I.01) + (1.033) + (16.01),

I.01) + (1.063) + (1.001), I.01) + (1.063) + (1.002), I.01) + (1.063) + (1.003), I.01) + (1.063) + (1.015), I.01) + (1.063) + (1.016), I.01) + (1.063) + (1.017), I.01) + (1.063) + (1.018), I.01) + (1.063) + (1.024), I.01) + (1.063) + (1.026), I.01) + (1.063) + (1.027), I.01) + (1.063) + (1.032), I.01) + (1.063) + (1.033), I.01) + (1.063) + (1.067), I.01) + (1.063) + (2.001), I.01) + (1.063) + (2.002), I.01) + (1.063) + (2.005), I.01) + (1.063) + (2.007), I.01) + (1.063) + (2.008), I.01) + (1.063) + (2.010), I.01) + (1.063) + (2.012), I.01) + (1.063) + (2.014), I.01) + (1.063) + (2.016), I.01) + (1.063) + (2.018), I.01) + (1.063) + (2.031), (1.01) + (1.063) + (3.003), (1.01) + (1.063) + (3.011), (1.01) + (1.063) + (3.012), (1.01) + (1.063) + (3.014), (1.01) + (1.063) + (3.017), (1.01) + (1.063) + (3.019), (1.01) + (1.063) + (3.021), (1.01) + (1.063) + (3.022), (1.01) + (1.063) + (3.025), (1.01) + (1.063) + (4.007), (1.01) + (1.063) + (5.004), (1.01) + (1.063) + (5.005), (1.01) + (1.063) + (5.008), (1.01) + (1.063) + (5.009), (1.01) + (1.063) + (5.012), (1.01) + (1.063) + (5.013),

(1.01) + (1.063) + (6.005), (1.01) + (1.063) + (7.005), (1.01) + (1.063) + (8.001), (1.01) + (1.063) + (9.002), (1.01) + (1.063) + (10.001), (1.01) + (1.063) + (10.002), (1.01) + (1.063) + (12.003), (1.01) + (1.063) + (12.004), (1.01) + (1.063) + (13.001), (1.01) + (1.063) + (13.004), (1.01) + (1.063) + (14.001), (1.01) + (1.063) + (15.025), I.01) + (1.063) + (16.01),

I.01) + (1.067) + (1.001), I.01) + (1.067) + (1.002), I.01) + (1.067) + (1.003), I.01) + (1.067) + (1.015), I.01) + (1.067) + (1.016), I.01) + (1.067) + (1.017), I.01) + (1.067) + (1.018), I.01) + (1.067) + (1.024), I.01) + (1.067) + (1.026), I.01) + (1.067) + (1.027), I.01) + (1.067) + (1.032), I.01) + (1.067) + (1.033), I.01) + (1.067) + (1.063), I.01) + (1.067) + (2.001), I.01) + (1.067) + (2.002), I.01) + (1.067) + (2.005), I.01) + (1.067) + (2.007), I.01) + (1.067) + (2.008), I.01) + (1.067) + (2.010), I.01) + (1.067) + (2.012), (I.01) + (1.067) + (2.014), (I.01) + (1.067) + (2.016), (I.01) + (1.067) + (2.018), (I.01) + (1.067) + (2.031), (I.01) + (1.067) + (3.003), (I.01) + (1.067) + (3.011), (I.01) + (1.067) + (3.012), (I.01) + (1.067) + (3.014), (I.01) + (1.067) + (3.017), (I.01) + (1.067) + (3.019), (I.01) + (1.067) + (3.021), (I.01) + (1.067) + (3.022), (I.01) + (1.067) + (3.025), (I.01) + (1.067) + (4.007), (I.01) + (1.067) + (5.004), (I.01) + (1.067) + (5.005), (I.01) + (1.067) + (5.008), (I.01) + (1.067) + (5.009), (I.01) + (1.067) + (5.012), (I.01) + (1.067) + (5.013), (I.01) + (1.067) + (6.005), (I.01) + (1.067) + (7.005), (I.01) + (1.067) + (8.001), (I.01) + (1.067) + (9.002), (I.01) + (1.067) + (10.001), (I.01) + (1.067) + (10.002), (I.01) + (1.067) + (12.003), (I.01) + (1.067) + (12.004), (I.01) + (1.067) + (13.001), (I.01) + (1.067) + (13.004), (I.01) + (1.067) + (14.001), (I.01) + (1.067) + (15.025), (I.01) + (1.067) + (16.01),

(I.01) + (2.001) + (1.001), (I.01) + (2.001) + (1.002), (I.01) + (2.001) + (1.003), (I.01) + (2.001) + (1.015), (I.01) + (2.001) + (1.016), (I.01) + (2.001) + (1.017), (I.01) + (2.001) + (1.018), (I.01) + (2.001) + (1.024), (I.01) + (2.001) + (1.026), (I.01) + (2.001) + (1.027), (I.01) + (2.001) + (1.032), (I.01) + (2.001) + (1.033), (I.01) + (2.001) + (1.063), (I.01) + (2.001) + (1.067), (I.01) + (2.001) + (2.002), (I.01) + (2.001) + (2.005), (I.01) + (2.001) + (2.007), (I.01) + (2.001) + (2.008), (I.01) + (2.001) + (2.010), (I.01) + (2.001) + (2.012), (I.01) + (2.001) + (2.014), (I.01) + (2.001) + (2.016), (I.01) + (2.001) + (2.018), (I.01) + (2.001) + (2.031), (I.01) + (2.001) + (3.003), (I.01) + (2.001) + (3.011), (I.01) + (2.001) + (3.012), (I.01) + (2.001) + (3.014), (I.01) + (2.001) + (3.017), (I.01) + (2.001) + (3.019), (I.01) + (2.001) + (3.021), (I.01) + (2.001) + (3.022), (I.01) + (2.001) + (3.025), (I.01) + (2.001) + (4.007), (I.01) + (2.001) + (5.004), (I.01) + (2.001) + (5.005), (I.01) + (2.001) + (5.008), (I.01) + (2.001) + (5.009), (I.01) + (2.001) + (5.012), (I.01) + (2.001) + (5.013), (I.01) + (2.001) + (6.005), (I.01) + (2.001) + (7.005), (I.01) + (2.001) + (8.001), (I.01) + (2.001) + (9.002), (I.01) + (2.001) + (10.001), (I.01) + (2.001) + (10.002), (I.01) + (2.001) + (12.003), (I.01) + (2.001) + (12.004), (I.01) + (2.001) + (13.001), (I.01) + (2.001) + (13.004), (I.01) + (2.001) + (14.001), (I.01) + (2.001) + (15.025), (I.01) + (2.001) + (16.01),

(I.01) + (2.002) + (1.001), (I.01) + (2.002) + (1.002), (I.01) + (2.002) + (1.003), (I.01) + (2.002) + (1.015), (I.01) + (2.002) + (1.016), (I.01) + (2.002) + (1.017), (I.01) + (2.002) + (1.018), (I.01) + (2.002) + (1.024), (I.01) + (2.002) + (1.026), (I.01) + (2.002) + (1.027), (I.01) + (2.002) + (1.032), (I.01) + (2.002) + (1.033), (I.01) + (2.002) + (1.063), (I.01) + (2.002) + (1.067), (I.01) + (2.002) + (2.001), (I.01) + (2.002) + (2.005), (I.01) + (2.002) + (2.007), (I.01) + (2.002) + (2.008), (I.01) + (2.002) + (2.010), (I.01) + (2.002) + (2.012), (I.01) + (2.002) + (2.014), (I.01) + (2.002) + (2.016), (I.01) + (2.002) + (2.018), (I.01) + (2.002) + (2.031), (I.01) + (2.002) + (3.003), (I.01) + (2.002) + (3.011), (I.01) + (2.002) + (3.012), (I.01) + (2.002) + (3.014), (I.01) + (2.002) + (3.017), (I.01) + (2.002) + (3.019), (I.01) + (2.002) + (3.021), (I.01) + (2.002) + (3.022), (I.01) + (2.002) + (3.025), (I.01) + (2.002) + (4.007), (I.01) + (2.002) + (5.004), (I.01) + (2.002) + (5.005), (I.01) + (2.002) + (5.008), (I.01) + (2.002) + (5.009), (I.01) + (2.002) + (5.012), (I.01) + (2.002) + (5.013), (I.01) + (2.002) + (6.005), (I.01) + (2.002) + (7.005), (I.01) + (2.002) + (8.001), (I.01) + (2.002) + (9.002), (I.01) + (2.002) + (10.001), (I.01) + (2.002) + (10.002), (I.01) + (2.002) + (12.003), (I.01) + (2.002) + (12.004), (I.01) + (2.002) + (13.001), (I.01) + (2.002) + (13.004), (I.01) + (2.002) + (14.001), (I.01) + (2.002) + (15.025), (I.01) + (2.002) + (16.01),

(I.01) + (2.005) + (1.001), (I.01) + (2.005) + (1.002), (I.01) + (2.005) + (1.003), (I.01) + (2.005) + (1.015), (I.01) + (2.005) + (1.016), (I.01) + (2.005) + (1.017), (I.01) + (2.005) + (1.018), (I.01) + (2.005) + (1.024), (I.01) + (2.005) + (1.026), (I.01) + (2.005) + (1.027), (I.01) + (2.005) + (1.032), (I.01) + (2.005) + (1.033), (I.01) + (2.005) + (1.063), (I.01) + (2.005) + (1.067), (I.01) + (2.005) + (2.001), (I.01) + (2.005) + (2.002), (I.01) + (2.005) + (2.007), (I.01) + (2.005) + (2.008), (I.01) + (2.005) + (2.010), (I.01) + (2.005) + (2.012), (I.01) + (2.005) + (2.014), (I.01) + (2.005) + (2.016), (I.01) + (2.005) + (2.018), (I.01) + (2.005) + (2.031), (1.01) + (2.005) + (3.003), (1.01) + (2.005) + (3.011), (1.01) + (2.005) + (3.012), (1.01) + (2.005) + (3.014), (1.01) + (2.005) + (3.017), (1.01) + (2.005) + (3.019), (1.01) + (2.005) + (3.021), (1.01) + (2.005) + (3.022), (1.01) + (2.005) + (3.025), (1.01) + (2.005) + (4.007), (1.01) + (2.005) + (5.004), (1.01) + (2.005) + (5.005), (1.01) + (2.005) + (5.008), (1.01) + (2.005) + (5.009), (1.01) + (2.005) + (5.012), (1.01) + (2.005) + (5.013), (1.01) + (2.005) + (6.005), (1.01) + (2.005) + (7.005), (1.01) + (2.005) + (8.001), (1.01) + (2.005) + (9.002), (1.01) + (2.005) + (10.001), (1.01) + (2.005) + (10.002), (1.01) + (2.005) + (12.003), (1.01) + (2.005) + (12.004), (1.01) + (2.005) + (13.001), (1.01) + (2.005) + (13.004), (1.01) + (2.005) + (14.001), (1.01) +

(2.005) + (15.025), (I.01) + (2.005) + (16.01),

(I.01) + (2.007) + (1.001), (I.01) + (2.007) + (1.002), (I.01) + (2.007) + (1.003), (I.01) + (2.007) + (1.015), (I.01) + (2.007) + (1.016), (I.01) + (2.007) + (1.017), (I.01) + (2.007) + (1.018), (I.01) + (2.007) + (1.024), (I.01) + (2.007) + (1.026), (I.01) + (2.007) + (1.027), (I.01) + (2.007) + (1.032), (I.01) + (2.007) + (1.033), (I.01) + (2.007) + (1.063), (I.01) + (2.007) + (1.067), (I.01) + (2.007) + (2.001), (I.01) + (2.007) + (2.002), (I.01) + (2.007) + (2.005), (I.01) + (2.007) + (2.008), (I.01) + (2.007) + (2.010), (I.01) + (2.007) + (2.012), (I.01) + (2.007) + (2.014), (I.01) + (2.007) + (2.016), (I.01) + (2.007) + (2.018), (I.01) + (2.007) + (2.031), (I.01) + (2.007) + (3.003), (I.01) + (2.007) + (3.011), (I.01) + (2.007) + (3.012), (I.01) + (2.007) + (3.014), (I.01) + (2.007) + (3.017), (I.01) + (2.007) + (3.019), (I.01) + (2.007) + (3.021), (I.01) + (2.007) + (3.022), (I.01) + (2.007) + (3.025), (I.01) + (2.007) + (4.007), (I.01) + (2.007) + (5.004), (I.01) + (2.007) + (5.005), (I.01) + (2.007) + (5.008), (I.01) + (2.007) + (5.009), (I.01) + (2.007) + (5.012), (I.01) + (2.007) + (5.013), (I.01) + (2.007) + (6.005), (I.01) + (2.007) + (7.005), (I.01) + (2.007) + (8.001), (I.01) + (2.007) + (9.002), (I.01) + (2.007) + (10.001), (I.01) + (2.007) + (10.002), (I.01) + (2.007) + (12.003), (I.01) + (2.007) + (12.004), (I.01) + (2.007) + (13.001), (I.01) + (2.007) + (13.004), (I.01) + (2.007) + (14.001), (I.01) + (2.007) + (15.025), (I.01) + (2.007) + (16.01),

(I.01) + (2.008) + (1.001), (I.01) + (2.008) + (1.002), (I.01) + (2.008) + (1.003), (I.01) + (2.008) + (1.015), (I.01) + (2.008) + (1.016), (I.01) + (2.008) + (1.017), (I.01) + (2.008) + (1.018), (I.01) + (2.008) + (1.024), (I.01) + (2.008) + (1.026), (I.01) + (2.008) + (1.027), (I.01) + (2.008) + (1.032), (I.01) + (2.008) + (1.033), (I.01) + (2.008) + (1.063), (I.01) + (2.008) + (1.067), (I.01) + (2.008) + (2.001), (I.01) + (2.008) + (2.002), (I.01) + (2.008) + (2.005), (I.01) + (2.008) + (2.007), (I.01) + (2.008) + (2.010), (I.01) + (2.008) + (2.012), (I.01) + (2.008) + (2.014), (I.01) + (2.008) + (2.016), (I.01) + (2.008) + (2.018), (I.01) + (2.008) + (2.031), (I.01) + (2.008) + (3.003), (I.01) + (2.008) + (3.011), (I.01) + (2.008) + (3.012), (I.01) + (2.008) + (3.014), (I.01) + (2.008) + (3.017), (I.01) + (2.008) + (3.019), (I.01) + (2.008) + (3.021), (I.01) + (2.008) + (3.022), (I.01) + (2.008) + (3.025), (I.01) + (2.008) + (4.007), (I.01) + (2.008) + (5.004), (I.01) + (2.008) + (5.005), (I.01) + (2.008) + (5.008), (I.01) + (2.008) + (5.009), (I.01) + (2.008) + (5.012), (I.01) + (2.008) + (5.013), (I.01) + (2.008) + (6.005), (I.01) + (2.008) + (7.005), (I.01) + (2.008) + (8.001), (I.01) + (2.008) + (9.002), (I.01) + (2.008) + (10.001), (I.01) + (2.008) + (10.002), (I.01) + (2.008) + (12.003), (I.01) + (2.008) + (12.004), (I.01) + (2.008) + (13.001), (I.01) + (2.008) + (13.004), (I.01) + (2.008) + (14.001), (I.01) + (2.008) + (15.025), (I.01) + (2.008) + (16.01),

(I.01) + (2.010) + (1.001), (I.01) + (2.010) + (1.002), (I.01) + (2.010) + (1.003), (I.01) + (2.010) + (1.015), (I.01) + (2.010) + (1.016), (I.01) + (2.010) + (1.017), (I.01) + (2.010) + (1.018), (I.01) + (2.010) + (1.024), (I.01) + (2.010) + (1.026), (I.01) + (2.010) + (1.027), (I.01) + (2.010) + (1.032), (I.01) + (2.010) + (1.033), (I.01) + (2.010) + (1.063), (I.01) + (2.010) + (1.067), (I.01) + (2.010) + (2.001), (I.01) + (2.010) + (2.002), (I.01) + (2.010) + (2.005), (I.01) + (2.010) + (2.007), (I.01) + (2.010) + (2.008), (I.01) + (2.010) + (2.012), (I.01) + (2.010) + (2.014), (I.01) + (2.010) + (2.016), (I.01) + (2.010) + (2.018), (I.01) + (2.010) + (2.031), (I.01) + (2.010) + (3.003), (I.01) + (2.010) + (3.011), (I.01) + (2.010) + (3.012), (I.01) + (2.010) + (3.014), (I.01) + (2.010) + (3.017), (I.01) + (2.010) + (3.019), (I.01) + (2.010) + (3.021), (I.01) + (2.010) + (3.022), (I.01) + (2.010) + (3.025), (I.01) + (2.010) + (4.007), (I.01) + (2.010) + (5.004), (I.01) + (2.010) + (5.005), (I.01) + (2.010) + (5.008), (I.01) + (2.010) + (5.009), (I.01) + (2.010) + (5.012), (I.01) + (2.010) + (5.013), (I.01) + (2.010) + (6.005), (I.01) + (2.010) + (7.005), (I.01) + (2.010) + (8.001), (I.01) + (2.010) + (9.002), (I.01) + (2.010) + (10.001), (I.01) + (2.010) + (10.002), (I.01) + (2.010) + (12.003), (I.01) + (2.010) + (12.004), (I.01) + (2.010) + (13.001), (I.01) + (2.010) + (13.004), (I.01) + (2.010) + (14.001), (I.01) + (2.010) + (15.025), (I.01) + (2.010) + (16.01),

(I.01) + (2.012) + (1.001), (I.01) + (2.012) + (1.002), (I.01) + (2.012) + (1.003), (I.01) + (2.012) + (1.015), (I.01) + (2.012) + (1.016), (I.01) + (2.012) + (1.017), (I.01) + (2.012) + (1.018), (I.01) + (2.012) + (1.024), (I.01) + (2.012) + (1.026), (I.01) + (2.012) + (1.027), (I.01) + (2.012) + (1.032), (I.01) + (2.012) + (1.033), (I.01) + (2.012) + (1.063), (I.01) + (2.012) + (1.067), (I.01) + (2.012) + (2.001), (I.01) + (2.012) + (2.002), (I.01) + (2.012) + (2.005), (I.01) + (2.012) + (2.007), (I.01) + (2.012) + (2.008), (I.01) + (2.012) + (2.010), (I.01) + (2.012) + (2.014), (I.01) + (2.012) + (2.016), (I.01) + (2.012) + (2.018), (I.01) + (2.012) + (2.031), (I.01) + (2.012) + (3.003), (I.01) + (2.012) + (3.011), (I.01) + (2.012) + (3.012), (I.01) + (2.012) + (3.014), (I.01) + (2.012) + (3.017), (I.01) + (2.012) + (3.019), (I.01) + (2.012) + (3.021), (I.01) + (2.012) + (3.022), (I.01) + (2.012) + (3.025), (I.01) + (2.012) + (4.007), (I.01) + (2.012) + (5.004), (I.01) + (2.012) + (5.005), (I.01) + (2.012) + (5.008), (I.01) + (2.012) + (5.009), (I.01) + (2.012) + (5.012), (I.01) + (2.012) + (5.013), (I.01) + (2.012) + (6.005), (I.01) + (2.012) + (7.005), (I.01) + (2.012) + (8.001), (I.01) + (2.012) + (9.002), (I.01) + (2.012) + (10.001), (I.01) + (2.012) + (10.002), (I.01) + (2.012) + (12.003), (I.01) + (2.012) + (12.004), (I.01) + (2.012) + (13.001), (I.01) + (2.012) + (13.004), (I.01) + (2.012) + (14.001), (I.01) + (2.012) + (15.025), (I.01) + (2.012) + (16.01),

(I.01) + (2.014) + (1.001), (I.01) + (2.014) + (1.002), (I.01) + (2.014) + (1.003), (I.01) + (2.014) + (1.015), (I.01) + (2.014) + (1.016), (I.01) + (2.014) + (1.017), (I.01) + (2.014) + (1.018), (I.01) + (2.014) + (1.024), (I.01) + (2.014) + (1.026), (I.01) + (2.014) + (1.027), (I.01) + (2.014) + (1.032), (I.01) + (2.014) + (1.033), (I.01) + (2.014) + (1.063), (I.01) + (2.014) + (1.067), (I.01) + (2.014) + (2.001), (I.01) + (2.014) + (2.002), (I.01) + (2.014) + (2.005), (I.01) + (2.014) + (2.007), (I.01) + (2.014) + (2.008), (I.01) + (2.014) + (2.010), (I.01) + (2.014) + (2.012), (I.01) + (2.014) + (2.016), (I.01) + (2.014) + (2.018), (I.01) + (2.014) + (2.031), (1.01) + (2.014) + (3.003), (1.01) + (2.014) + (3.011), (1.01) + (2.014) + (3.012), (1.01) + (2.014) + (3.014), (1.01) + (2.014) + (3.017), (1.01) + (2.014) + (3.019), (1.01) + (2.014) + (3.021), (1.01) + (2.014) + (3.022), (1.01) + (2.014) + (3.025), (1.01) + (2.014) + (4.007), (1.01) + (2.014) + (5.004), (1.01) + (2.014) + (5.005), (1.01) + (2.014) + (5.008), (1.01) + (2.014) + (5.009), (1.01) + (2.014) + (5.012), (1.01) + (2.014) + (5.013), (1.01) + (2.014) + (6.005), (1.01) + (2.014) + (7.005), (1.01) + (2.014) + (8.001), (1.01) + (2.014) + (9.002), (1.01) + (2.014) + (10.001), (1.01) + (2.014) + (10.002), (1.01) + (2.014) + (12.003), (1.01) + (2.014) + (12.004), (1.01) + (2.014) + (13.001), (1.01) + (2.014) + (13.004), (1.01) + (2.014) + (14.001), (1.01) + (2.014) + (15.025), (I.01) + (2.014) + (16.01),

(I.01) + (2.016) + (1.001), (I.01) + (2.016) + (1.002), (I.01) + (2.016) + (1.003), (I.01) + (2.016) + (1.015), (I.01) + (2.016) + (1.016), (I.01) + (2.016) + (1.017), (I.01) + (2.016) + (1.018), (I.01) + (2.016) + (1.024), (I.01) + (2.016) + (1.026), (I.01) + (2.016) + (1.027), (I.01) + (2.016) + (1.032), (I.01) + (2.016) + (1.033), (I.01) + (2.016) + (1.063), (I.01) + (2.016) + (1.067), (I.01) + (2.016) + (2.001), (I.01) + (2.016) + (2.002), (I.01) + (2.016) + (2.005), (I.01) + (2.016) + (2.007), (I.01) + (2.016) + (2.008), (I.01) + (2.016) + (2.010), (I.01) + (2.016) + (2.012), (I.01) + (2.016) + (2.014), (I.01) + (2.016) + (2.018), (I.01) + (2.016) + (2.031), (I.01) + (2.016) + (3.003), (I.01) + (2.016) + (3.011), (I.01) + (2.016) + (3.012), (I.01) + (2.016) + (3.014), (I.01) + (2.016) + (3.017), (I.01) + (2.016) + (3.019), (I.01) + (2.016) + (3.021), (I.01) + (2.016) + (3.022), (I.01) + (2.016) + (3.025), (I.01) + (2.016) + (4.007), (I.01) + (2.016) + (5.004), (I.01) + (2.016) + (5.005), (I.01) + (2.016) + (5.008), (I.01) + (2.016) + (5.009), (I.01) + (2.016) + (5.012), (I.01) + (2.016) + (5.013), (I.01) + (2.016) + (6.005), (I.01) + (2.016) + (7.005), (I.01) + (2.016) + (8.001), (I.01) + (2.016) + (9.002), (I.01) + (2.016) + (10.001), (I.01) + (2.016) + (10.002), (I.01) + (2.016) + (12.003), (I.01) + (2.016) + (12.004), (I.01) + (2.016) + (13.001), (I.01) + (2.016) + (13.004), (I.01) + (2.016) + (14.001), (I.01) + (2.016) + (15.025), (I.01) + (2.016) + (16.01),

(I.01) + (2.018) + (1.001), (I.01) + (2.018) + (1.002), (I.01) + (2.018) + (1.003), (I.01) + (2.018) + (1.015), (I.01) + (2.018) + (1.016), (I.01) + (2.018) + (1.017), (I.01) + (2.018) + (1.018), (I.01) + (2.018) + (1.024), (I.01) + (2.018) + (1.026), (I.01) + (2.018) + (1.027), (I.01) + (2.018) + (1.032), (I.01) + (2.018) + (1.033), (I.01) + (2.018) + (1.063), (I.01) + (2.018) + (1.067), (I.01) + (2.018) + (2.001), (I.01) + (2.018) + (2.002), (I.01) + (2.018) + (2.005), (I.01) + (2.018) + (2.007), (I.01) + (2.018) + (2.008), (I.01) + (2.018) + (2.010), (I.01) + (2.018) + (2.012), (I.01) + (2.018) + (2.014), (I.01) + (2.018) + (2.016), (I.01) + (2.018) + (2.031), (I.01) + (2.018) + (3.003), (I.01) + (2.018) + (3.011), (I.01) + (2.018) + (3.012), (I.01) + (2.018) + (3.014), (I.01) + (2.018) + (3.017), (I.01) + (2.018) + (3.019), (I.01) + (2.018) + (3.021), (I.01) + (2.018) + (3.022), (I.01) + (2.018) + (3.025), (I.01) + (2.018) + (4.007), (I.01) + (2.018) + (5.004), (I.01) + (2.018) + (5.005), (I.01) + (2.018) + (5.008), (I.01) + (2.018) + (5.009), (I.01) + (2.018) + (5.012), (I.01) + (2.018) + (5.013), (I.01) + (2.018) + (6.005), (I.01) + (2.018) + (7.005), (I.01) + (2.018) + (8.001), (I.01) + (2.018) + (9.002), (I.01) + (2.018) + (10.001), (I.01) + (2.018) + (10.002), (I.01) + (2.018) + (12.003), (I.01) + (2.018) + (12.004), (I.01) + (2.018) + (13.001), (I.01) + (2.018) + (13.004), (I.01) + (2.018) + (14.001), (I.01) + (2.018) + (15.025), (I.01) + (2.018) + (16.01),

(I.01) + (2.031) + (1.001), (I.01) + (2.031) + (1.002), (I.01) + (2.031) + (1.003), (I.01) + (2.031) + (1.015), (I.01) + (2.031) + (1.016), (I.01) + (2.031) + (1.017), (I.01) + (2.031) + (1.018), (I.01) + (2.031) + (1.024), (I.01) + (2.031) + (1.026), (I.01) + (2.031) + (1.027), (I.01) + (2.031) + (1.032), (I.01) + (2.031) + (1.033), (I.01) + (2.031) + (1.063), (I.01) + (2.031) + (1.067), (I.01) + (2.031) + (2.001), (I.01) + (2.031) + (2.002), (I.01) + (2.031) + (2.005), (I.01) + (2.031) + (2.007), (I.01) + (2.031) + (2.008), (I.01) + (2.031) + (2.010), (I.01) + (2.031) + (2.012), (I.01) + (2.031) + (2.014), (I.01) + (2.031) + (2.016), (I.01) + (2.031) + (2.018), (1.01) + (2.031) + (3.003), (1.01) + (2.031) + (3.011), (1.01) + (2.031) + (3.012), (1.01) + (2.031) + (3.014), (1.01) + (2.031) + (3.017), (1.01) + (2.031) + (3.019), (1.01) + (2.031) + (3.021), (1.01) + (2.031) + (3.022), (1.01) + (2.031) + (3.025), (1.01) + (2.031) + (4.007), (1.01) + (2.031) + (5.004), (1.01) + (2.031) + (5.005), (1.01) + (2.031) + (5.008), (1.01) + (2.031) + (5.009), (1.01) + (2.031) + (5.012), (1.01) + (2.031) + (5.013), (1.01) + (2.031) + (6.005), (1.01) + (2.031) + (7.005), (1.01) + (2.031) + (8.001), (1.01) + (2.031) + (9.002), (1.01) + (2.031) + (10.001), (1.01) + (2.031) + (10.002), (1.01) + (2.031) + (12.003), (1.01) + (2.031) + (12.004), (1.01) + (2.031) + (13.001), (1.01) + (2.031) + (13.004), (1.01) + (2.031) + (14.001), (1.01) + (2.031) + (15.025), (I.01) + (2.031) + (16.01),

(1.01) + (3.003) + (1.001), (1.01) + (3.003) + (1.002), (1.01) + (3.003) + (1.003), (1.01) + (3.003) + (1.015), (1.01) + (3.003) + (1.016), (1.01) + (3.003) + (1.017), (1.01) + (3.003) + (1.018), (1.01) + (3.003) + (1.024), (1.01) + (3.003)

+ (1.026), (1.01) + (3.003) + (1.027), (1.01) + (3.003) + (1.032), (1.01) + (3.003) + (1.033), (1.01) + (3.003) + (1.063), (1.01) + (3.003) + (1.067), (1.01) + (3.003) + (2.001), (1.01) + (3.003) + (2.002), (1.01) + (3.003) + (2.005), (1.01) + (3.003) + (2.007), (1.01) + (3.003) + (2.008), (1.01) + (3.003) + (2.010), (1.01) + (3.003) + (2.012), (1.01) + (3.003) + (2.014), (1.01) + (3.003) + (2.016), (1.01) + (3.003) + (2.018), (1.01) + (3.003) + (2.031), (1.01) + (3.003) + (3.011), (1.01) + (3.003) + (3.012), (1.01) + (3.003) + (3.014), (1.01) + (3.003) + (3.017), (1.01) + (3.003) + (3.019), (1.01) + (3.003) + (3.021), (1.01) + (3.003) + (3.022), (1.01) + (3.003) + (3.025), (1.01) + (3.003) + (4.007), (1.01) + (3.003) + (5.004), (1.01) + (3.003) + (5.005), (1.01) + (3.003) + (5.008), (1.01) + (3.003) + (5.009), (1.01) + (3.003) + (5.012), (1.01) + (3.003) + (5.013), (1.01) + (3.003) + (6.005), (1.01) + (3.003) + (7.005), (1.01) + (3.003) + (8.001), (1.01) + (3.003) + (9.002), (1.01) + (3.003) + (10.001), (1.01) + (3.003) + (10.002), (1.01) + (3.003) + (12.003), (1.01) + (3.003) + (12.004), (1.01) + (3.003) + (13.001), (1.01) + (3.003) + (13.004), (1.01) + (3.003) + (14.001), (1.01) + (3.003) + (15.025), (I.01) + (3.003) + (16.01),

(I.01) + (3.011) + (1.001), (I.01) + (3.011) + (1.002), (I.01) + (3.011) + (1.003), (I.01) + (3.011) + (1.015), (I.01) + (3.011) + (1.016), (I.01) + (3.011) + (1.017), (I.01) + (3.011) + (1.018), (I.01) + (3.011) + (1.024), (I.01) + (3.011) + (1.026), (I.01) + (3.011) + (1.027), (I.01) + (3.011) + (1.032), (I.01) + (3.011) + (1.033), (I.01) + (3.011) + (1.063), (I.01) + (3.011) + (1.067), (I.01) + (3.011) + (2.001), (I.01) + (3.011) + (2.002), (I.01) + (3.011) + (2.005), (I.01) + (3.011) + (2.007), (I.01) + (3.011) + (2.008), (I.01) + (3.011) + (2.010), (I.01) + (3.011) + (2.012), (I.01) + (3.011) + (2.014), (I.01) + (3.011) + (2.016), (I.01) + (3.011) + (2.018), (1.01) + (3.011) + (2.031), (1.01) + (3.011) + (3.003), (1.01) + (3.011) + (3.012), (1.01) + (3.011) + (3.014), (1.01) + (3.011) + (3.017), (1.01) + (3.011) + (3.019), (1.01) + (3.011) + (3.021), (1.01) + (3.011) + (3.022), (1.01) + (3.011) + (3.025), (1.01) + (3.011) + (4.007), (1.01) + (3.011) + (5.004), (1.01) + (3.011) + (5.005), (1.01) + (3.011) + (5.008), (1.01) + (3.011) + (5.009), (1.01) + (3.011) + (5.012), (1.01) + (3.011) + (5.013), (1.01) + (3.011) + (6.005), (1.01) + (3.011) + (7.005), (1.01) + (3.011) + (8.001), (1.01) + (3.011) + (9.002), (1.01) + (3.011) + (10.001), (1.01) + (3.011) + (10.002), (1.01) + (3.011) + (12.003), (1.01) + (3.011) + (12.004), (1.01) + (3.011) + (13.001), (1.01) + (3.011) + (13.004), (1.01) + (3.011) + (14.001), (1.01) + (3.011) + (15.025), (I.01) + (3.011) + (16.01),

(I.01) + (3.012) + (1.001), (I.01) + (3.012) + (1.002), (I.01) + (3.012) + (1.003), (I.01) + (3.012) + (1.015), (I.01) + (3.012) + (1.016), (I.01) + (3.012) + (1.017), (I.01) + (3.012) + (1.018), (I.01) + (3.012) + (1.024), (I.01) + (3.012) + (1.026), (I.01) + (3.012) + (1.027), (I.01) + (3.012) + (1.032), (I.01) + (3.012) + (1.033), (I.01) + (3.012) + (1.063), (I.01) + (3.012) + (1.067), (I.01) + (3.012) + (2.001), (I.01) + (3.012) + (2.002), (I.01) + (3.012) + (2.005), (I.01) + (3.012) + (2.007), (I.01) + (3.012) + (2.008), (I.01) + (3.012) + (2.010), (I.01) + (3.012) + (2.012), (I.01) + (3.012) + (2.014), (I.01) + (3.012) + (2.016), (I.01) + (3.012) + (2.018), (1.01) + (3.012) + (2.031), (1.01) + (3.012) + (3.003), (1.01) + (3.012) + (3.011), (1.01) + (3.012) + (3.014), (1.01) + (3.012) + (3.017), (1.01) + (3.012) + (3.019), (1.01) + (3.012) + (3.021), (1.01) + (3.012) + (3.022), (1.01) + (3.012) + (3.025), (1.01) + (3.012) + (4.007), (1.01) + (3.012) + (5.004), (1.01) + (3.012) + (5.005), (1.01) + (3.012) + (5.008), (1.01) + (3.012) + (5.009), (1.01) + (3.012) + (5.012), (1.01) + (3.012) + (5.013), (1.01) + (3.012) + (6.005), (1.01) + (3.012) + (7.005), (1.01) + (3.012) + (8.001), (1.01) + (3.012) + (9.002), (1.01) + (3.012) + (10.001), (1.01) + (3.012) + (10.002), (1.01) + (3.012) + (12.003), (1.01) + (3.012) + (12.004), (1.01) + (3.012) + (13.001), (1.01) + (3.012) + (13.004), (1.01) + (3.012) + (14.001), (1.01) + (3.012) + (15.025), (I.01) + (3.012) + (16.01),

(1.01) + (3.014) + (1.001), (1.01) + (3.014) + (1.002), (1.01) + (3.014) + (1.003), (1.01) + (3.014) + (1.015), (1.01) + (3.014) + (1.016), (1.01) + (3.014) + (1.017), (1.01) + (3.014) + (1.018), (1.01) + (3.014) + (1.024), (1.01) + (3.014) + (1.026), (1.01) + (3.014) + (1.027), (1.01) + (3.014) + (1.032), (1.01) + (3.014) + (1.033), (1.01) + (3.014) + (1.063), (1.01) + (3.014) + (1.067), (1.01) + (3.014) + (2.001), (1.01) + (3.014) + (2.002), (1.01) + (3.014) + (2.005), (1.01) + (3.014) + (2.007), (1.01) + (3.014) + (2.008), (1.01) + (3.014) + (2.010), (1.01) + (3.014) + (2.012), (1.01) + (3.014) + (2.014), (1.01) + (3.014) + (2.016), (1.01) + (3.014) + (2.018), (1.01) + (3.014) + (2.031), (1.01) + (3.014) + (3.003), (1.01) + (3.014) + (3.011), (1.01) + (3.014) + (3.012), (1.01) + (3.014) + (3.017), (1.01) + (3.014) + (3.019), (1.01) + (3.014) + (3.021), (1.01) + (3.014) + (3.022), (1.01) + (3.014) + (3.025), (1.01) + (3.014) + (4.007), (1.01) + (3.014) + (5.004), (1.01) + (3.014) + (5.005), (1.01) + (3.014) + (5.008), (1.01) + (3.014) + (5.009), (1.01) + (3.014) + (5.012), (1.01) + (3.014) + (5.013), (1.01) + (3.014) + (6.005), (1.01) + (3.014) + (7.005), (1.01) + (3.014) + (8.001), (1.01) + (3.014) + (9.002), (1.01) + (3.014) + (10.001), (1.01) + (3.014) + (10.002), (1.01) + (3.014) + (12.003), (1.01) + (3.014) + (12.004), (1.01) + (3.014) + (13.001), (1.01) + (3.014) + (13.004), (1.01) + (3.014) + (14.001), (1.01) + (3.014) + (15.025), (I.01) + (3.014) + (16.01),

(I.01) + (3.017) + (1.001), (I.01) + (3.017) + (1.002), (I.01) + (3.017) + (1.003), (I.01) + (3.017) + (1.015), (I.01) + (3.017) + (1.016), (I.01) + (3.017) + (1.017), (I.01) + (3.017) + (1.018), (I.01) + (3.017) + (1.024), (I.01) + (3.017) + (1.026), (I.01) + (3.017) + (1.027), (I.01) + (3.017) + (1.032), (I.01) + (3.017) + (1.033), (I.01) + (3.017) + (1.063), (I.01) + (3.017) + (1.067), (I.01) + (3.017) + (2.001), (I.01) + (3.017) + (2.002), (I.01) + (3.017) + (2.005), (I.01) +

(3.017) + (2.007), (I.01) + (3.017) + (2.008), (I.01) + (3.017) + (2.010), (I.01) + (3.017) + (2.012), (I.01) + (3.017) + (2.014), (I.01) + (3.017) + (2.016), (I.01) + (3.017) + (2.018), (1.01) + (3.017) + (2.031), (1.01) + (3.017) + (3.003), (1.01) + (3.017) + (3.011), (1.01) + (3.017) + (3.012), (1.01) + (3.017) + (3.014), (1.01) + (3.017) + (3.019), (1.01) + (3.017) + (3.021), (1.01) + (3.017) + (3.022), (1.01) + (3.017) + (3.025), (1.01) + (3.017) + (4.007), (1.01) + (3.017) + (5.004), (1.01) + (3.017) + (5.005), (1.01) + (3.017) + (5.008), (1.01) + (3.017) + (5.009), (1.01) + (3.017) + (5.012), (1.01) + (3.017) + (5.013), (1.01) + (3.017) + (6.005), (1.01) + (3.017) + (7.005), (1.01) + (3.017) + (8.001), (1.01) + (3.017) + (9.002), (1.01) + (3.017) + (10.001), (1.01) + (3.017) + (10.002), (1.01) + (3.017) + (12.003), (1.01) + (3.017) + (12.004), (1.01) + (3.017) + (13.001), (1.01) + (3.017) + (13.004), (1.01) + (3.017) + (14.001), (1.01) + (3.017) + (15.025), (I.01) + (3.017) + (16.01),

(I.01) + (3.019) + (1.001), (I.01) + (3.019) + (1.002), (I.01) + (3.019) + (1.003), (I.01) + (3.019) + (1.015), (I.01) + (3.019) + (1.016), (I.01) + (3.019) + (1.017), (I.01) + (3.019) + (1.018), (I.01) + (3.019) + (1.024), (I.01) + (3.019) + (1.026), (I.01) + (3.019) + (1.027), (I.01) + (3.019) + (1.032), (I.01) + (3.019) + (1.033), (I.01) + (3.019) + (1.063), (I.01) + (3.019) + (1.067), (I.01) + (3.019) + (2.001), (I.01) + (3.019) + (2.002), (I.01) + (3.019) + (2.005), (I.01) + (3.019) + (2.007), (I.01) + (3.019) + (2.008), (I.01) + (3.019) + (2.010), (I.01) + (3.019) + (2.012), (I.01) + (3.019) + (2.014), (I.01) + (3.019) + (2.016), (I.01) + (3.019) + (2.018), (1.01) + (3.019) + (2.031), (1.01) + (3.019) + (3.003), (1.01) + (3.019) + (3.011), (1.01) + (3.019) + (3.012), (1.01) + (3.019) + (3.014), (1.01) + (3.019) + (3.017), (1.01) + (3.019) + (3.021), (1.01) + (3.019) + (3.022), (1.01) + (3.019) + (3.025), (1.01) + (3.019) + (4.007), (1.01) + (3.019) + (5.004), (1.01) + (3.019) + (5.005), (1.01) + (3.019) + (5.008), (1.01) + (3.019) + (5.009), (1.01) + (3.019) + (5.012), (1.01) + (3.019) + (5.013), (1.01) + (3.019) + (6.005), (1.01) + (3.019) + (7.005), (1.01) + (3.019) + (8.001), (1.01) + (3.019) + (9.002), (1.01) + (3.019) + (10.001), (1.01) + (3.019) + (10.002), (1.01) + (3.019) + (12.003), (1.01) + (3.019) + (12.004), (1.01) + (3.019) + (13.001), (1.01) + (3.019) + (13.004), (1.01) + (3.019) + (14.001), (1.01) + (3.019) + (15.025), (I.01) + (3.019) + (16.01),

(I.01) + (3.021) + (1.001), (I.01) + (3.021) + (1.002), (I.01) + (3.021) + (1.003), (I.01) + (3.021) + (1.015), (I.01) + (3.021) + (1.016), (I.01) + (3.021) + (1.017), (I.01) + (3.021) + (1.018), (I.01) + (3.021) + (1.024), (I.01) + (3.021) + (1.026), (I.01) + (3.021) + (1.027), (I.01) + (3.021) + (1.032), (I.01) + (3.021) + (1.033), (I.01) + (3.021) + (1.063), (I.01) + (3.021) + (1.067), (I.01) + (3.021) + (2.001), (I.01) + (3.021) + (2.002), (I.01) + (3.021) + (2.005), (I.01) + (3.021) + (2.007), (I.01) + (3.021) + (2.008), (I.01) + (3.021) + (2.010), (I.01) + (3.021) + (2.012), (I.01) + (3.021) + (2.014), (I.01) + (3.021) + (2.016), (I.01) + (3.021) + (2.018), (1.01) + (3.021) + (2.031), (1.01) + (3.021) + (3.003), (1.01) + (3.021) + (3.011), (1.01) + (3.021) + (3.012), (1.01) + (3.021) + (3.014), (1.01) + (3.021) + (3.017), (1.01) + (3.021) + (3.019), (1.01) + (3.021) + (3.022), (1.01) + (3.021) + (3.025), (1.01) + (3.021) + (4.007), (1.01) + (3.021) + (5.004), (1.01) + (3.021) + (5.005), (1.01) + (3.021) + (5.008), (1.01) + (3.021) + (5.009), (1.01) + (3.021) + (5.012), (1.01) + (3.021) + (5.013), (1.01) + (3.021) + (6.005), (1.01) + (3.021) + (7.005), (1.01) + (3.021) + (8.001), (1.01) + (3.021) + (9.002), (1.01) + (3.021) + (10.001), (1.01) + (3.021) + (10.002), (1.01) + (3.021) + (12.003), (1.01) + (3.021) + (12.004), (1.01) + (3.021) + (13.001), (1.01) + (3.021) + (13.004), (1.01) + (3.021) + (14.001), (1.01) + (3.021) + (15.025), (I.01) + (3.021) + (16.01),

(I.01) + (3.022) + (1.001), (I.01) + (3.022) + (1.002), (I.01) + (3.022) + (1.003), (I.01) + (3.022) + (1.015), (I.01) + (3.022) + (1.016), (I.01) + (3.022) + (1.017), (I.01) + (3.022) + (1.018), (I.01) + (3.022) + (1.024), (I.01) + (3.022) + (1.026), (I.01) + (3.022) + (1.027), (I.01) + (3.022) + (1.032), (I.01) + (3.022) + (1.033), (I.01) + (3.022) + (1.063), (I.01) + (3.022) + (1.067), (I.01) + (3.022) + (2.001), (I.01) + (3.022) + (2.002), (I.01) + (3.022) + (2.005), (I.01) + (3.022) + (2.007), (I.01) + (3.022) + (2.008), (I.01) + (3.022) + (2.010), (I.01) + (3.022) + (2.012), (I.01) + (3.022) + (2.014), (I.01) + (3.022) + (2.016), (I.01) + (3.022) + (2.018), (1.01) + (3.022) + (2.031), (1.01) + (3.022) + (3.003), (1.01) + (3.022) + (3.011), (1.01) + (3.022) + (3.012), (I.01) + (3.022) + (3.014), (1.01) + (3.022) + (3.017), (1.01) + (3.022) + (3.019), (1.01) + (3.022) + (3.021), (1.01) + (3.022) + (3.025), (1.01) + (3.022) + (4.007), (1.01) + (3.022) + (5.004), (1.01) + (3.022) + (5.005), (1.01) + (3.022) + (5.008), (1.01) + (3.022) + (5.009), (1.01) + (3.022) + (5.012), (1.01) + (3.022) + (5.013), (1.01) + (3.022) + (6.005), (1.01) + (3.022) + (7.005), (1.01) + (3.022) + (8.001), (1.01) + (3.022) + (9.002), (1.01) + (3.022) + (10.001), (1.01) + (3.022) + (10.002), (1.01) + (3.022) + (12.003), (1.01) + (3.022) + (12.004), (1.01) + (3.022) + (13.001), (1.01) + (3.022) + (13.004), (1.01) + (3.022) + (14.001), (1.01) + (3.022) + (15.025), (I.01) + (3.022) + (16.01),

(1.01) + (3.025) + (1.001), (1.01) + (3.025) + (1.002), (1.01) + (3.025) + (1.003), (1.01) + (3.025) + (1.015), (1.01) + (3.025) + (1.016), (1.01) + (3.025) + (1.017), (1.01) + (3.025) + (1.018), (1.01) + (3.025) + (1.024), (1.01) + (3.025) + (1.026), (1.01) + (3.025) + (1.027), (1.01) + (3.025) + (1.032), (1.01) + (3.025) + (1.033), (1.01) + (3.025) + (1.063), (1.01) + (3.025) + (1.067), (1.01) + (3.025) + (2.001), (1.01) + (3.025) + (2.002), (1.01) + (3.025) + (2.005), (1.01) + (3.025) + (2.007), (1.01) + (3.025) + (2.008), (1.01) + (3.025) + (2.010), (1.01) + (3.025) + (2.012), (1.01) + (3.025) + (2.014), (1.01) + (3.025) + (2.016), (1.01) + (3.025) + (2.018), (1.01) + (3.025) + (2.031), (1.01) + (3.025) + (3.003),

(1.01) + (3.025) + (3.011), (1.01) + (3.025) + (3.012), (I.01) + (3.025) + (3.014), (1.01) + (3.025) + (3.017), (1.01) + (3.025) + (3.019), (1.01) + (3.025) + (3.021), (1.01) + (3.025) + (3.022), (1.01) + (3.025) + (4.007), (1.01) + (3.025) + (5.004), (1.01) + (3.025) + (5.005), (1.01) + (3.025) + (5.008), (1.01) + (3.025) + (5.009), (1.01) + (3.025) + (5.012), (1.01) + (3.025) + (5.013), (1.01) + (3.025) + (6.005), (1.01) + (3.025) + (7.005), (1.01) + (3.025) + (8.001), (1.01) + (3.025) + (9.002), (1.01) + (3.025) + (10.001), (1.01) + (3.025) + (10.002), (1.01) + (3.025) + (12.003), (1.01) + (3.025) + (12.004), (1.01) + (3.025) + (13.001), (1.01) + (3.025) + (13.004), (1.01) + (3.025) + (14.001), (1.01) + (3.025) + (15.025), (I.01) + (3.025) + (16.01),

(I.01) + (4.007) + (1.001), (I.01) + (4.007) + (1.002), (I.01) + (4.007) + (1.003), (I.01) + (4.007) + (1.015), (I.01) + (4.007) + (1.016), (I.01) + (4.007) + (1.017), (I.01) + (4.007) + (1.018), (I.01) + (4.007) + (1.024), (I.01) + (4.007) + (1.026), (I.01) + (4.007) + (1.027), (I.01) + (4.007) + (1.032), (I.01) + (4.007) + (1.033), (I.01) + (4.007) + (1.063), (I.01) + (4.007) + (1.067), (I.01) + (4.007) + (2.001), (I.01) + (4.007) + (2.002), (I.01) + (4.007) + (2.005), (I.01) + (4.007) + (2.007), (I.01) + (4.007) + (2.008), (I.01) + (4.007) + (2.010), (I.01) + (4.007) + (2.012), (I.01) + (4.007) + (2.014), (I.01) + (4.007) + (2.016), (I.01) + (4.007) + (2.018), (1.01) + (4.007) + (2.031), (1.01) + (4.007) + (3.003), (1.01) + (4.007) + (3.011), (1.01) + (4.007) + (3.012), (I.01) + (4.007) + (3.014), (1.01) + (4.007) + (3.017), (1.01) + (4.007) + (3.019), (1.01) + (4.007) + (3.021), (1.01) + (4.007) + (3.022), (1.01) + (4.007) + (3.025), (1.01) + (4.007) + (5.004), (1.01) + (4.007) + (5.005), (1.01) + (4.007) + (5.008), (1.01) + (4.007) + (5.009), (1.01) + (4.007) + (5.012), (1.01) + (4.007) + (5.013), (1.01) + (4.007) + (6.005), (1.01) + (4.007) + (7.005), (1.01) + (4.007) + (8.001), (1.01) + (4.007) + (9.002), (1.01) + (4.007) + (10.001), (1.01) + (4.007) + (10.002), (1.01) + (4.007) + (12.003), (1.01) + (4.007) + (12.004), (1.01) + (4.007) + (13.001), (1.01) + (4.007) + (13.004), (1.01) + (4.007) + (14.001), (1.01) + (4.007) + (15.025), (I.01) + (4.007) + (16.01),

(1.01) + (5.004) + (1.001), (1.01) + (5.004) + (1.002), (1.01) + (5.004) + (1.003), (1.01) + (5.004) + (1.015), (1.01) + (5.004) + (1.016), (1.01) + (5.004) + (1.017), (1.01) + (5.004) + (1.018), (1.01) + (5.004) + (1.024), (1.01) + (5.004) + (1.026), (1.01) + (5.004) + (1.027), (1.01) + (5.004) + (1.032), (1.01) + (5.004) + (1.033), (1.01) + (5.004) + (1.063), (1.01) + (5.004) + (1.067), (1.01) + (5.004) + (2.001), (1.01) + (5.004) + (2.002), (1.01) + (5.004) + (2.005), (1.01) + (5.004) + (2.007), (1.01) + (5.004) + (2.008), (1.01) + (5.004) + (2.010), (1.01) + (5.004) + (2.012), (1.01) + (5.004) + (2.014), (1.01) + (5.004) + (2.016), (1.01) + (5.004) + (2.018), (1.01) + (5.004) + (2.031), (1.01) + (5.004) + (3.003), (1.01) + (5.004) + (3.011), (1.01) + (5.004) + (3.012), (I.01) + (5.004) + (3.014), (1.01) + (5.004) + (3.017), (1.01) + (5.004) + (3.019), (1.01) + (5.004) + (3.021), (1.01) + (5.004) + (3.022), (1.01) + (5.004) + (3.025), (1.01) + (5.004) + (4.007), (1.01) + (5.004) + (5.005), (1.01) + (5.004) + (5.008), (1.01) + (5.004) + (5.009), (1.01) + (5.004) + (5.012), (1.01) + (5.004) + (5.013), (1.01) + (5.004) + (6.005), (1.01) + (5.004) + (7.005), (1.01) + (5.004) + (8.001), (1.01) + (5.004) + (9.002), (1.01) + (5.004) + (10.001), (1.01) + (5.004) + (10.002), (1.01) + (5.004) + (12.003), (1.01) + (5.004) + (12.004), (1.01) + (5.004) + (13.001), (1.01) + (5.004) + (13.004), (1.01) + (5.004) + (14.001), (1.01) + (5.004) + (15.025), (I.01) + (5.004) + (16.01),

(1.01) + (5.005) + (1.001), (1.01) + (5.005) + (1.002), (1.01) + (5.005) + (1.003), (1.01) + (5.005) + (1.015), (1.01) + (5.005) + (1.016), (1.01) + (5.005) + (1.017), (1.01) + (5.005) + (1.018), (1.01) + (5.005) + (1.024), (1.01) + (5.005) + (1.026), (1.01) + (5.005) + (1.027), (1.01) + (5.005) + (1.032), (1.01) + (5.005) + (1.033), (1.01) + (5.005) + (1.063), (1.01) + (5.005) + (1.067), (1.01) + (5.005) + (2.001), (1.01) + (5.005) + (2.002), (1.01) + (5.005) + (2.005), (1.01) + (5.005) + (2.007), (1.01) + (5.005) + (2.008), (1.01) + (5.005) + (2.010), (1.01) + (5.005) + (2.012), (1.01) + (5.005) + (2.014), (1.01) + (5.005) + (2.016), (1.01) + (5.005) + (2.018), (1.01) + (5.005) + (2.031), (1.01) + (5.005) + (3.003), (1.01) + (5.005) + (3.011), (1.01) + (5.005) + (3.012), (I.01) + (5.005) + (3.014), (1.01) + (5.005) + (3.017), (1.01) + (5.005) + (3.019), (1.01) + (5.005) + (3.021), (1.01) + (5.005) + (3.022), (1.01) + (5.005) + (3.025), (1.01) + (5.005) + (4.007), (1.01) + (5.005) + (5.004), (1.01) + (5.005) + (5.008), (1.01) + (5.005) + (5.009), (1.01) + (5.005) + (5.012), (1.01) + (5.005) + (5.013), (1.01) + (5.005) + (6.005), (1.01) + (5.005) + (7.005), (1.01) + (5.005) + (8.001), (1.01) + (5.005) + (9.002), (1.01) + (5.005) + (10.001), (1.01) + (5.005) + (10.002), (1.01) + (5.005) + (12.003), (1.01) + (5.005) + (12.004), (1.01) + (5.005) + (13.001), (1.01) + (5.005) + (13.004), (1.01) + (5.005) + (14.001), (1.01) + (5.005) + (15.025), (I.01) + (5.005) + (16.01),

(I.01) + (5.008) + (1.001), (I.01) + (5.008) + (1.002), (I.01) + (5.008) + (1.003), (I.01) + (5.008) + (1.015), (I.01) + (5.008) + (1.016), (I.01) + (5.008) + (1.017), (I.01) + (5.008) + (1.018), (I.01) + (5.008) + (1.024), (I.01) + (5.008) + (1.026), (I.01) + (5.008) + (1.027), (I.01) + (5.008) + (1.032), (I.01) + (5.008) + (1.033), (I.01) + (5.008) + (1.063), (I.01) + (5.008) + (1.067), (I.01) + (5.008) + (2.001), (I.01) + (5.008) + (2.002), (I.01) + (5.008) + (2.005), (I.01) + (5.008) + (2.007), (I.01) + (5.008) + (2.008), (I.01) + (5.008) + (2.010), (I.01) + (5.008) + (2.012), (I.01) + (5.008) + (2.014), (I.01) + (5.008) + (2.016), (I.01) + (5.008) + (2.018), (1.01) + (5.008) + (2.031), (1.01) + (5.008) + (3.003), (1.01) + (5.008) + (3.011), (1.01) + (5.008) + (3.012), (I.01) + (5.008) + (3.014), (1.01) + (5.008) + (3.017), (1.01) + (5.008) + (3.019), (1.01) + (5.008) + (3.021), (1.01) + (5.008) + (3.022), (1.01) + (5.008) + (3.025), (1.01) + (5.008)

+ (4.007), (1.01) + (5.008) + (5.004), (1.01) + (5.008) + (5.005), (1.01) + (5.008) + (5.009), (1.01) + (5.008) + (5.012), (1.01) + (5.008) + (5.013), (1.01) + (5.008) + (6.005), (1.01) + (5.008) + (7.005), (1.01) + (5.008) + (8.001), (1.01) + (5.008) + (9.002), (1.01) + (5.008) + (10.001), (1.01) + (5.008) + (10.002), (1.01) + (5.008) + (12.003), (1.01) + (5.008) + (12.004), (1.01) + (5.008) + (13.001), (1.01) + (5.008) + (13.004), (1.01) + (5.008) + (14.001), (1.01) + (5.008) + (15.025), (I.01) + (5.008) + (16.01),

(I.01) + (5.009) + (1.001), (I.01) + (5.009) + (1.002), (I.01) + (5.009) + (1.003), (I.01) + (5.009) + (1.015), (I.01) + (5.009) + (1.016), (I.01) + (5.009) + (1.017), (I.01) + (5.009) + (1.018), (I.01) + (5.009) + (1.024), (I.01) + (5.009) + (1.026), (I.01) + (5.009) + (1.027), (I.01) + (5.009) + (1.032), (I.01) + (5.009) + (1.033), (I.01) + (5.009) + (1.063), (I.01) + (5.009) + (1.067), (I.01) + (5.009) + (2.001), (I.01) + (5.009) + (2.002), (I.01) + (5.009) + (2.005), (I.01) + (5.009) + (2.007), (I.01) + (5.009) + (2.008), (I.01) + (5.009) + (2.010), (I.01) + (5.009) + (2.012), (I.01) + (5.009) + (2.014), (I.01) + (5.009) + (2.016), (I.01) + (5.009) + (2.018), (1.01) + (5.009) + (2.031), (1.01) + (5.009) + (3.003), (1.01) + (5.009) + (3.011), (1.01) + (5.009) + (3.012), (I.01) + (5.009) + (3.014), (1.01) + (5.009) + (3.017), (1.01) + (5.009) + (3.019), (1.01) + (5.009) + (3.021), (1.01) + (5.009) + (3.022), (1.01) + (5.009) + (3.025), (1.01) + (5.009) + (4.007), (1.01) + (5.009) + (5.004), (1.01) + (5.009) + (5.005), (1.01) + (5.009) + (5.008), (1.01) + (5.009) + (5.012), (1.01) + (5.009) + (5.013), (1.01) + (5.009) + (6.005), (1.01) + (5.009) + (7.005), (1.01) + (5.009) + (8.001), (1.01) + (5.009) + (9.002), (1.01) + (5.009) + (10.001), (1.01) + (5.009) + (10.002), (1.01) + (5.009) + (12.003), (1.01) + (5.009) + (12.004), (1.01) + (5.009) + (13.001), (1.01) + (5.009) + (13.004), (1.01) + (5.009) + (14.001), (1.01) + (5.009) + (15.025), (I.01) + (5.009) + (16.01),

(I.01) + (5.012) + (1.001), (I.01) + (5.012) + (1.002), (I.01) + (5.012) + (1.003), (I.01) + (5.012) + (1.015), (I.01) + (5.012) + (1.016), (I.01) + (5.012) + (1.017), (I.01) + (5.012) + (1.018), (I.01) + (5.012) + (1.024), (I.01) + (5.012) + (1.026), (I.01) + (5.012) + (1.027), (I.01) + (5.012) + (1.032), (I.01) + (5.012) + (1.033), (I.01) + (5.012) + (1.063), (I.01) + (5.012) + (1.067), (I.01) + (5.012) + (2.001), (I.01) + (5.012) + (2.002), (I.01) + (5.012) + (2.005), (I.01) + (5.012) + (2.007), (I.01) + (5.012) + (2.008), (I.01) + (5.012) + (2.010), (I.01) + (5.012) + (2.012), (I.01) + (5.012) + (2.014), (I.01) + (5.012) + (2.016), (I.01) + (5.012) + (2.018), (1.01) + (5.012) + (2.031), (1.01) + (5.012) + (3.003), (1.01) + (5.012) + (3.011), (1.01) + (5.012) + (3.012), (I.01) + (5.012) + (3.014), (1.01) + (5.012) + (3.017), (1.01) + (5.012) + (3.019), (1.01) + (5.012) + (3.021), (1.01) + (5.012) + (3.022), (1.01) + (5.012) + (3.025), (1.01) + (5.012) + (4.007), (1.01) + (5.012) + (5.004), (1.01) + (5.012) + (5.005), (1.01) + (5.012) + (5.008), (1.01) + (5.012) + (5.009), (1.01) + (5.012) + (5.013), (1.01) + (5.012) + (6.005), (1.01) + (5.012) + (7.005), (1.01) + (5.012) + (8.001), (1.01) + (5.012) + (9.002), (1.01) + (5.012) + (10.001), (1.01) + (5.012) + (10.002), (1.01) + (5.012) + (12.003), (1.01) + (5.012) + (12.004), (1.01) + (5.012) + (13.001), (1.01) + (5.012) + (13.004), (1.01) + (5.012) + (14.001), (1.01) + (5.012) + (15.025), (I.01) + (5.012) + (16.01),

(1.01) + (5.013) + (1.001), (1.01) + (5.013) + (1.002), (1.01) + (5.013) + (1.003), (1.01) + (5.013) + (1.015), (1.01) + (5.013) + (1.016), (1.01) + (5.013) + (1.017), (1.01) + (5.013) + (1.018), (1.01) + (5.013) + (1.024), (1.01) + (5.013) + (1.026), (1.01) + (5.013) + (1.027), (1.01) + (5.013) + (1.032), (1.01) + (5.013) + (1.033), (1.01) + (5.013) + (1.063), (1.01) + (5.013) + (1.067), (1.01) + (5.013) + (2.001), (1.01) + (5.013) + (2.002), (1.01) + (5.013) + (2.005), (1.01) + (5.013) + (2.007), (1.01) + (5.013) + (2.008), (1.01) + (5.013) + (2.010), (1.01) + (5.013) + (2.012), (1.01) + (5.013) + (2.014), (1.01) + (5.013) + (2.016), (1.01) + (5.013) + (2.018), (1.01) + (5.013) + (2.031), (1.01) + (5.013) + (3.003), (1.01) + (5.013) + (3.011), (1.01) + (5.013) + (3.012), (I.01) + (5.013) + (3.014), (1.01) + (5.013) + (3.017), (1.01) + (5.013) + (3.019), (1.01) + (5.013) + (3.021), (1.01) + (5.013) + (3.022), (1.01) + (5.013) + (3.025), (1.01) + (5.013) + (4.007), (1.01) + (5.013) + (5.004), (1.01) + (5.013) + (5.005), (1.01) + (5.013) + (5.008), (1.01) + (5.013) + (5.009), (1.01) + (5.013) + (5.012), (1.01) + (5.013) + (6.005), (1.01) + (5.013) + (7.005), (1.01) + (5.013) + (8.001), (1.01) + (5.013) + (9.002), (1.01) + (5.013) + (10.001), (1.01) + (5.013) + (10.002), (1.01) + (5.013) + (12.003), (1.01) + (5.013) + (12.004), (1.01) + (5.013) + (13.001), (1.01) + (5.013) + (13.004), (1.01) + (5.013) + (14.001), (1.01) + (5.013) + (15.025), (I.01) + (5.013) + (16.01),

(I.01) + (6.005) + (1.001), (I.01) + (6.005) + (1.002), (I.01) + (6.005) + (1.003), (I.01) + (6.005) + (1.015), (I.01) + (6.005) + (1.016), (I.01) + (6.005) + (1.017), (I.01) + (6.005) + (1.018), (I.01) + (6.005) + (1.024), (I.01) + (6.005) + (1.026), (I.01) + (6.005) + (1.027), (I.01) + (6.005) + (1.032), (I.01) + (6.005) + (1.033), (I.01) + (6.005) + (1.063), (I.01) + (6.005) + (1.067), (I.01) + (6.005) + (2.001), (I.01) + (6.005) + (2.002), (I.01) + (6.005) + (2.005), (I.01) + (6.005) + (2.007), (I.01) + (6.005) + (2.008), (I.01) + (6.005) + (2.010), (I.01) + (6.005) + (2.012), (I.01) + (6.005) + (2.014), (I.01) + (6.005) + (2.016), (I.01) + (6.005) + (2.018), (1.01) + (6.005) + (2.031), (1.01) + (6.005) + (3.003), (1.01) + (6.005) + (3.011), (1.01) + (6.005) + (3.012), (I.01) + (6.005) + (3.014), (1.01) + (6.005) + (3.017), (1.01) + (6.005) + (3.019), (1.01) + (6.005) + (3.021), (1.01) + (6.005) + (3.022), (1.01) + (6.005) + (3.025), (1.01) + (6.005) + (4.007), (1.01) + (6.005) + (5.004), (1.01) + (6.005) + (5.005), (1.01) + (6.005) + (5.008), (1.01) + (6.005) + (5.009), (1.01) + (6.005) + (5.012), (1.01) + (6.005) + (5.013), (1.01) + (6.005) + (7.005), (1.01) + (6.005) + (8.001), (1.01)

+ (6.005) + (9.002), (1.01) + (6.005) + (10.001), (1.01) + (6.005) + (10.002), (1.01) + (6.005) + (12.003), (1.01) + (6.005) + (12.004), (1.01) + (6.005) + (13.001), (1.01) + (6.005) + (13.004), (1.01) + (6.005) + (14.001), (1.01) + (6.005) + (15.025), (I.01) + (6.005) + (16.01),

(I.01) + (7.005) + (1.001), (I.01) + (7.005) + (1.002), (I.01) + (7.005) + (1.003), (I.01) + (7.005) + (1.015), (I.01) + (7.005) + (1.016), (I.01) + (7.005) + (1.017), (I.01) + (7.005) + (1.018), (I.01) + (7.005) + (1.024), (I.01) + (7.005) + (1.026), (I.01) + (7.005) + (1.027), (I.01) + (7.005) + (1.032), (I.01) + (7.005) + (1.033), (I.01) + (7.005) + (1.063), (I.01) + (7.005) + (1.067), (I.01) + (7.005) + (2.001), (I.01) + (7.005) + (2.002), (I.01) + (7.005) + (2.005), (I.01) + (7.005) + (2.007), (I.01) + (7.005) + (2.008), (I.01) + (7.005) + (2.010), (I.01) + (7.005) + (2.012), (I.01) + (7.005) + (2.014), (I.01) + (7.005) + (2.016), (I.01) + (7.005) + (2.018), (1.01) + (7.005) + (2.031), (1.01) + (7.005) + (3.003), (1.01) + (7.005) + (3.011), (1.01) + (7.005) + (3.012), (I.01) + (7.005) + (3.014), (1.01) + (7.005) + (3.017), (1.01) + (7.005) + (3.019), (1.01) + (7.005) + (3.021), (1.01) + (7.005) + (3.022), (1.01) + (7.005) + (3.025), (1.01) + (7.005) + (4.007), (1.01) + (7.005) + (5.004), (1.01) + (7.005) + (5.005), (1.01) + (7.005) + (5.008), (1.01) + (7.005) + (5.009), (1.01) + (7.005) + (5.012), (1.01) + (7.005) + (5.013), (1.01) + (7.005) + (6.005), (1.01) + (7.005) + (8.001), (1.01) + (7.005) + (9.002), (1.01) + (7.005) + (10.001), (1.01) + (7.005) + (10.002), (1.01) + (7.005) + (12.003), (1.01) + (7.005) + (12.004), (1.01) + (7.005) + (13.001), (1.01) + (7.005) + (13.004), (1.01) + (7.005) + (14.001), (1.01) + (7.005) + (15.025), (I.01) + (7.005) + (16.01),

(I.01) + (8.001) + (1.001), (I.01) + (8.001) + (1.002), (I.01) + (8.001) + (1.003), (I.01) + (8.001) + (1.015), (I.01) + (8.001) + (1.016), (I.01) + (8.001) + (1.017), (I.01) + (8.001) + (1.018), (I.01) + (8.001) + (1.024), (I.01) + (8.001) + (1.026), (I.01) + (8.001) + (1.027), (I.01) + (8.001) + (1.032), (I.01) + (8.001) + (1.033), (I.01) + (8.001) + (1.063), (I.01) + (8.001) + (1.067), (I.01) + (8.001) + (2.001), (I.01) + (8.001) + (2.002), (I.01) + (8.001) + (2.005), (I.01) + (8.001) + (2.007), (I.01) + (8.001) + (2.008), (I.01) + (8.001) + (2.010), (I.01) + (8.001) + (2.012), (I.01) + (8.001) + (2.014), (I.01) + (8.001) + (2.016), (I.01) + (8.001) + (2.018), (I.01) + (8.001) + (2.031), (I.01) + (8.001) + (3.003), (I.01) + (8.001) + (3.011), (I.01) + (8.001) + (3.012), (I.01) + (8.001) + (3.014), (I.01) + (8.001) + (3.017), (I.01) + (8.001) + (3.019), (I.01) + (8.001) + (3.021), (I.01) + (8.001) + (3.022), (I.01) + (8.001) + (3.025), (I.01) + (8.001) + (4.007), (I.01) + (8.001) + (5.004), (I.01) + (8.001) + (5.005), (I.01) + (8.001) + (5.008), (I.01) + (8.001) + (5.009), (I.01) + (8.001) + (5.012), (I.01) + (8.001) + (5.013), (I.01) + (8.001) + (6.005), (I.01) + (8.001) + (7.005), (I.01) + (8.001) + (9.002), (I.01) + (8.001) + (10.001), (I.01) + (8.001) + (10.002), (I.01) + (8.001) + (12.003), (I.01) + (8.001) + (12.004), (I.01) + (8.001) + (13.001), (I.01) + (8.001) + (13.004), (I.01) + (8.001) + (14.001), (I.01) + (8.001) + (15.025), (I.01) + (8.001) + (16.01),

(I.01) + (9.002) + (1.001), (I.01) + (9.002) + (1.002), (I.01) + (9.002) + (1.003), (I.01) + (9.002) + (1.015), (I.01) + (9.002) + (1.016), (I.01) + (9.002) + (1.017), (I.01) + (9.002) + (1.018), (I.01) + (9.002) + (1.024), (I.01) + (9.002) + (1.026), (I.01) + (9.002) + (1.027), (I.01) + (9.002) + (1.032), (I.01) + (9.002) + (1.033), (I.01) + (9.002) + (1.063), (I.01) + (9.002) + (1.067), (I.01) + (9.002) + (2.001), (I.01) + (9.002) + (2.002), (I.01) + (9.002) + (2.005), (I.01) + (9.002) + (2.007), (I.01) + (9.002) + (2.008), (I.01) + (9.002) + (2.010), (I.01) + (9.002) + (2.012), (I.01) + (9.002) + (2.014), (I.01) + (9.002) + (2.016), (I.01) + (9.002) + (2.018), (I.01) + (9.002) + (2.031), (I.01) + (9.002) + (3.003), (I.01) + (9.002) + (3.011), (I.01) + (9.002) + (3.012), (I.01) + (9.002) + (3.014), (I.01) + (9.002) + (3.017), (I.01) + (9.002) + (3.019), (I.01) + (9.002) + (3.021), (I.01) + (9.002) + (3.022), (I.01) + (9.002) + (3.025), (I.01) + (9.002) + (4.007), (I.01) + (9.002) + (5.004), (I.01) + (9.002) + (5.005), (I.01) + (9.002) + (5.008), (I.01) + (9.002) + (5.009), (I.01) + (9.002) + (5.012), (I.01) + (9.002) + (5.013), (I.01) + (9.002) + (6.005), (I.01) + (9.002) + (7.005), (I.01) + (9.002) + (8.001), (I.01) + (9.002) + (10.001), (I.01) + (9.002) + (10.002), (I.01) + (9.002) + (12.003), (I.01) + (9.002) + (12.004), (I.01) + (9.002) + (13.001), (I.01) + (9.002) + (13.004), (I.01) + (9.002) + (14.001), (I.01) + (9.002) + (15.025), (I.01) + (9.002) + (16.01),

(I.01) + (10.001) + (1.001), (I.01) + (10.001) + (1.002), (I.01) + (10.001) + (1.003), (I.01) + (10.001) + (1.015), (I.01) + (10.001) + (1.016), (I.01) + (10.001) + (1.017), (I.01) + (10.001) + (1.018), (I.01) + (10.001) + (1.024), (I.01) + (10.001) + (1.026), (I.01) + (10.001) + (1.027), (I.01) + (10.001) + (1.032), (I.01) + (10.001) + (1.033), (I.01) + (10.001) + (1.063), (I.01) + (10.001) + (1.067), (I.01) + (10.001) + (2.001), (I.01) + (10.001) + (2.002), (I.01) + (10.001) + (2.005), (I.01) + (10.001) + (2.007), (I.01) + (10.001) + (2.008), (I.01) + (10.001) + (2.010), (I.01) + (10.001) + (2.012), (I.01) + (10.001) + (2.014), (I.01) + (10.001) + (2.016), (I.01) + (10.001) + (2.018), (I.01) + (10.001) + (2.031), (I.01) + (10.001) + (3.003), (I.01) + (10.001) + (3.011), (I.01) + (10.001) + (3.012), (I.01) + (10.001) + (3.014), (I.01) + (10.001) + (3.017), (I.01) + (10.001) + (3.019), (I.01) + (10.001) + (3.021), (I.01) + (10.001) + (3.022), (I.01) + (10.001) + (3.025), (I.01) + (10.001) + (4.007), (I.01) + (10.001) + (5.004), (I.01) + (10.001) + (5.005), (I.01) + (10.001) + (5.008), (I.01) + (10.001) + (5.009), (I.01) + (10.001) + (5.012), (I.01) + (10.001) + (5.013), (I.01) + (10.001) + (6.005), (I.01) + (10.001) + (7.005), (I.01) + (10.001) + (8.001), (I.01) + (10.001) + (9.002), (I.01) + (10.001) + (10.002), (I.01) + (10.001) + (12.003), (I.01) + (10.001) + (12.004), (I.01) + (10.001) + (13.001), (I.01) + (10.001) + (13.004), (I.01)

+ (10.001) + (14.001), (I.01) + (10.001) + (15.025), (I.01) + (10.001) + (16.01),

(I.01) + (10.002) + (1.001), (I.01) + (10.002) + (1.002), (I.01) + (10.002) + (1.003), (I.01) + (10.002) + (1.015), (I.01) + (10.002) + (1.016), (I.01) + (10.002) + (1.017), (I.01) + (10.002) + (1.018), (I.01) + (10.002) + (1.024), (I.01) + (10.002) + (1.026), (I.01) + (10.002) + (1.027), (I.01) + (10.002) + (1.032), (I.01) + (10.002) + (1.033), (I.01) + (10.002) + (1.063), (I.01) + (10.002) + (1.067), (I.01) + (10.002) + (2.001), (I.01) + (10.002) + (2.002), (I.01) + (10.002) + (2.005), (I.01) + (10.002) + (2.007), (I.01) + (10.002) + (2.008), (I.01) + (10.002) + (2.010), (I.01) + (10.002) + (2.012), (I.01) + (10.002) + (2.014), (I.01) + (10.002) + (2.016), (I.01) + (10.002) + (2.018), (I.01) + (10.002) + (2.031), (I.01) + (10.002) + (3.003), (I.01) + (10.002) + (3.011), (I.01) + (10.002) + (3.012), (I.01) + (10.002) + (3.014), (I.01) + (10.002) + (3.017), (I.01) + (10.002) + (3.019), (I.01) + (10.002) + (3.021), (I.01) + (10.002) + (3.022), (I.01) + (10.002) + (3.025), (I.01) + (10.002) + (4.007), (I.01) + (10.002) + (5.004), (I.01) + (10.002) + (5.005), (I.01) + (10.002) + (5.008), (I.01) + (10.002) + (5.009), (I.01) + (10.002) + (5.012), (I.01) + (10.002) + (5.013), (I.01) + (10.002) + (6.005), (I.01) + (10.002) + (7.005), (I.01) + (10.002) + (8.001), (I.01) + (10.002) + (9.002), (I.01) + (10.002) + (10.001), (I.01) + (10.002) + (12.003), (I.01) + (10.002) + (12.004), (I.01) + (10.002) + (13.001), (I.01) + (10.002) + (13.004), (I.01) + (10.002) + (14.001), (I.01) + (10.002) + (15.025), (I.01) + (10.002) + (16.01),

(I.01) + (12.003) + (1.001), (I.01) + (12.003) + (1.002), (I.01) + (12.003) + (1.003), (I.01) + (12.003) + (1.015), (I.01) + (12.003) + (1.016), (I.01) + (12.003) + (1.017), (I.01) + (12.003) + (1.018), (I.01) + (12.003) + (1.024), (I.01) + (12.003) + (1.026), (I.01) + (12.003) + (1.027), (I.01) + (12.003) + (1.032), (I.01) + (12.003) + (1.033), (I.01) + (12.003) + (1.063), (I.01) + (12.003) + (1.067), (I.01) + (12.003) + (2.001), (I.01) + (12.003) + (2.002), (I.01) + (12.003) + (2.005), (I.01) + (12.003) + (2.007), (I.01) + (12.003) + (2.008), (I.01) + (12.003) + (2.010), (I.01) + (12.003) + (2.012), (I.01) + (12.003) + (2.014), (I.01) + (12.003) + (2.016), (I.01) + (12.003) + (2.018), (I.01) + (12.003) + (2.031), (I.01) + (12.003) + (3.003), (I.01) + (12.003) + (3.011), (I.01) + (12.003) + (3.012), (I.01) + (12.003) + (3.014), (I.01) + (12.003) + (3.017), (I.01) + (12.003) + (3.019), (1.01) + (12.003) + (3.021), (1.01) + (12.003) + (3.022), (1.01) + (12.003) + (3.025), (1.01) + (12.003) + (4.007), (1.01) + (12.003) + (5.004), (1.01) + (12.003) + (5.005), (1.01) + (12.003) + (5.008), (1.01) + (12.003) + (5.009), (1.01) + (12.003) + (5.012), (1.01) + (12.003) + (5.013), (1.01) + (12.003) + (6.005), (1.01) + (12.003) + (7.005), (1.01) + (12.003) + (8.001), (1.01) + (12.003) + (9.002), (1.01) + (12.003) + (10.001), (1.01) + (12.003) + (10.002), (1.01) + (12.003) + (12.004), (1.01) + (12.003) + (13.001), (1.01) + (12.003) + (13.004), (1.01) + (12.003) + (14.001), (1.01) + (12.003) + (15.025), (1.01) + (12.003) + (16.01),

(1.01) + (12.004) + (1.001), (1.01) + (12.004) + (1.002), (1.01) + (12.004) + (1.003), (1.01) + (12.004) + (1.015), (1.01) + (12.004) + (1.016), (1.01) + (12.004) + (1.017), (1.01) + (12.004) + (1.018), (1.01) + (12.004) + (1.024), (1.01) + (12.004) + (1.026), (1.01) + (12.004) + (1.027), (1.01) + (12.004) + (1.032), (1.01) + (12.004) + (1.033), (1.01) + (12.004) + (1.063), (1.01) + (12.004) + (1.067), (1.01) + (12.004) + (2.001), (1.01) + (12.004) + (2.002), (1.01) + (12.004) + (2.005), (1.01) + (12.004) + (2.007), (1.01) + (12.004) + (2.008), (I.01) + (12.004) + (2.010), (I.01) + (12.004) + (2.012), (I.01) + (12.004) + (2.014), (I.01) + (12.004) + (2.016), (I.01) + (12.004) + (2.018), (I.01) + (12.004) + (2.031), (I.01) + (12.004) + (3.003), (I.01) + (12.004) + (3.011), (I.01) + (12.004) + (3.012), (I.01) + (12.004) + (3.014), (I.01) + (12.004) + (3.017), (I.01) + (12.004) + (3.019), (1.01) + (12.004) + (3.021), (1.01) + (12.004) + (3.022), (1.01) + (12.004) + (3.025), (1.01) + (12.004) + (4.007), (1.01) + (12.004) + (5.004), (1.01) + (12.004) + (5.005), (1.01) + (12.004) + (5.008), (1.01) + (12.004) + (5.009), (1.01) + (12.004) + (5.012), (1.01) + (12.004) + (5.013), (1.01) + (12.004) + (6.005), (1.01) + (12.004) + (7.005), (1.01) + (12.004) + (8.001), (1.01) + (12.004) + (9.002), (1.01) + (12.004) + (10.001), (1.01) + (12.004) + (10.002), (1.01) + (12.004) + (12.003), (1.01) + (12.004) + (13.001), (1.01) + (12.004) + (13.004), (1.01) + (12.004) + (14.001), (1.01) + (12.004) + (15.025), (1.01) + (12.004) + (16.01),

(1.01) + (13.001) + (1.001), (1.01) + (13.001) + (1.002), (1.01) + (13.001) + (1.003), (1.01) + (13.001) + (1.015), (1.01) + (13.001) + (1.016), (1.01) + (13.001) + (1.017), (1.01) + (13.001) + (1.018), (1.01) + (13.001) + (1.024), (1.01) + (13.001) + (1.026), (1.01) + (13.001) + (1.027), (1.01) + (13.001) + (1.032), (1.01) + (13.001) + (1.033), (1.01) + (13.001) + (1.063), (1.01) + (13.001) + (1.067), (1.01) + (13.001) + (2.001), (1.01) + (13.001) + (2.002), (1.01) + (13.001) + (2.005), (1.01) + (13.001) + (2.007), (1.01) + (13.001) + (2.008), (1.01) + (13.001) + (2.010), (1.01) + (13.001) + (2.012), (1.01) + (13.001) + (2.014), (1.01) + (13.001) + (2.016), (1.01) + (13.001) + (2.018), (1.01) + (13.001) + (2.031), (1.01) + (13.001) + (3.003), (1.01) + (13.001) + (3.011), (1.01) + (13.001) + (3.012), (1.01) + (13.001) + (3.014), (1.01) + (13.001) + (3.017), (1.01) + (13.001) + (3.019), (1.01) + (13.001) + (3.021), (1.01) + (13.001) + (3.022), (1.01) + (13.001) + (3.025), (1.01) + (13.001) + (4.007), (1.01) + (13.001) + (5.004), (1.01) + (13.001) + (5.005), (1.01) + (13.001) + (5.008), (1.01) + (13.001) + (5.009), (1.01) + (13.001) + (5.012), (1.01) + (13.001) + (5.013), (1.01) + (13.001) + (6.005), (1.01) + (13.001) + (7.005), (1.01) + (13.001) + (8.001), (1.01) + (13.001) + (9.002), (1.01) + (13.001) + (10.001), (1.01) + (13.001) + (10.002), (1.01) + (13.001) + (12.003), (1.01) + (13.001) + (12.004), (1.01) + (13.001) + (13.004), (1.01) + (13.001) + (14.001), (1.01) + (13.001) + (15.025),

(1.01) + (13.001) + (16.01),

(1.01) + (13.004) + (1.001), (1.01) + (13.004) + (1.002), (1.01) + (13.004) + (1.003), (1.01) + (13.004) + (1.015), (1.01) + (13.004) + (1.016), (1.01) + (13.004) + (1.017), (1.01) + (13.004) + (1.018), (1.01) + (13.004) + (1.024), (1.01) + (13.004) + (1.026), (1.01) + (13.004) + (1.027), (1.01) + (13.004) + (1.032), (1.01) + (13.004) + (1.033), (1.01) + (13.004) + (1.063), (1.01) + (13.004) + (1.067), (1.01) + (13.004) + (2.001), (1.01) + (13.004) + (2.002), (1.01) + (13.004) + (2.005), (1.01) + (13.004) + (2.007), (1.01) + (13.004) + (2.008), (1.01) + (13.004) + (2.010), (1.01) + (13.004) + (2.012), (1.01) + (13.004) + (2.014), (1.01) + (13.004) + (2.016), (1.01) + (13.004) + (2.018), (1.01) + (13.004) + (2.031), (1.01) + (13.004) + (3.003), (1.01) + (13.004) + (3.011), (1.01) + (13.004) + (3.012), (1.01) + (13.004) + (3.014), (1.01) + (13.004) + (3.017), (1.01) + (13.004) + (3.019), (1.01) + (13.004) + (3.021), (1.01) + (13.004) + (3.022), (1.01) + (13.004) + (3.025), (1.01) + (13.004) + (4.007), (1.01) + (13.004) + (5.004), (1.01) + (13.004) + (5.005), (1.01) + (13.004) + (5.008), (1.01) + (13.004) + (5.009), (1.01) + (13.004) + (5.012), (1.01) + (13.004) + (5.013), (1.01) + (13.004) + (6.005), (1.01) + (13.004) + (7.005), (1.01) + (13.004) + (8.001), (1.01) + (13.004) + (9.002), (1.01) + (13.004) + (10.001), (I.01) + (13.004) + (10.002), (I.01) + (13.004) + (12.003), (I.01) + (13.004) + (12.004), (I.01) + (13.004) + (13.001), (1.01) + (13.004) + (14.001), (1.01) + (13.004) + (15.025), (1.01) + (13.004) + (16.01),

(1.01) + (14.001) + (1.001), (1.01) + (14.001) + (1.002), (1.01) + (14.001) + (1.003), (1.01) + (14.001) + (1.015), (1.01) + (14.001) + (1.016), (1.01) + (14.001) + (1.017), (1.01) + (14.001) + (1.018), (1.01) + (14.001) + (1.024), (1.01) + (14.001) + (1.026), (1.01) + (14.001) + (1.027), (1.01) + (14.001) + (1.032), (1.01) + (14.001) + (1.033), (1.01) + (14.001) + (1.063), (1.01) + (14.001) + (1.067), (1.01) + (14.001) + (2.001), (1.01) + (14.001) + (2.002), (1.01) + (14.001) + (2.005), (1.01) + (14.001) + (2.007), (1.01) + (14.001) + (2.008), (1.01) + (14.001) + (2.010), (1.01) + (14.001) + (2.012), (1.01) + (14.001) + (2.014), (1.01) + (14.001) + (2.016), (1.01) + (14.001) + (2.018), (1.01) + (14.001) + (2.031), (1.01) + (14.001) + (3.003), (1.01) + (14.001) + (3.011), (1.01) + (14.001) + (3.012), (1.01) + (14.001) + (3.014), (1.01) + (14.001) + (3.017), (1.01) + (14.001) + (3.019), (1.01) + (14.001) + (3.021), (1.01) + (14.001) + (3.022), (1.01) + (14.001) + (3.025), (1.01) + (14.001) + (4.007), (1.01) + (14.001) + (5.004), (1.01) + (14.001) + (5.005), (1.01) + (14.001) + (5.008), (1.01) + (14.001) + (5.009), (1.01) + (14.001) + (5.012), (1.01) + (14.001) + (5.013), (1.01) + (14.001) + (6.005), (1.01) + (14.001) + (7.005), (1.01) + (14.001) + (8.001), (1.01) + (14.001) + (9.002), (1.01) + (14.001) + (10.001), (1.01) + (14.001) + (10.002), (1.01) + (14.001) + (12.003), (1.01) + (14.001) + (12.004), (1.01) + (14.001) + (13.001), (1.01) + (14.001) + (13.004), (1.01) + (14.001) + (15.025), (1.01) + (14.001) + (16.01),

(1.01) + (15.025) + (1.001), (1.01) + (15.025) + (1.002), (1.01) + (15.025) + (1.003), (1.01) + (15.025) + (1.015), (1.01) + (15.025) + (1.016), (1.01) + (15.025) + (1.017), (1.01) + (15.025) + (1.018), (1.01) + (15.025) + (1.024), (1.01) + (15.025) + (1.026), (1.01) + (15.025) + (1.027), (1.01) + (15.025) + (1.032), (1.01) + (15.025) + (1.033), (1.01) + (15.025) + (1.063), (1.01) + (15.025) + (1.067), (1.01) + (15.025) + (2.001), (1.01) + (15.025) + (2.002), (1.01) + (15.025) + (2.005), (1.01) + (15.025) + (2.007), (1.01) + (15.025) + (2.008), (1.01) + (15.025) + (2.010), (1.01) + (15.025) + (2.012), (1.01) + (15.025) + (2.014), (1.01) + (15.025) + (2.016), (1.01) + (15.025) + (2.018), (1.01) + (15.025) + (2.031), (1.01) + (15.025) + (3.003), (1.01) + (15.025) + (3.011), (1.01) + (15.025) + (3.012), (1.01) + (15.025) + (3.014), (1.01) + (15.025) + (3.017), (1.01) + (15.025) + (3.019), (1.01) + (15.025) + (3.021), (1.01) + (15.025) + (3.022), (1.01) + (15.025) + (3.025), (1.01) + (15.025) + (4.007), (1.01) + (15.025) + (5.004), (1.01) + (15.025) + (5.005), (1.01) + (15.025) + (5.008), (1.01) + (15.025) + (5.009), (1.01) + (15.025) + (5.012), (1.01) + (15.025) + (5.013), (1.01) + (15.025) + (6.005), (1.01) + (15.025) + (7.005), (1.01) + (15.025) + (8.001), (1.01) + (15.025) + (9.002), (1.01) + (15.025) + (10.001), (1.01) + (15.025) + (10.002), (1.01) + (15.025) + (12.003), (1.01) + (15.025) + (12.004), (1.01) + (15.025) + (13.001), (1.01) + (15.025) + (13.004), (1.01) + (15.025) + (14.001), (1.01) + (15.025) + (16.01),

(I.01) + (16.01) + (1.001), (I.01) + (16.01) + (1.002), (I.01) + (16.01) + (1.003), (I.01) + (16.01) + (1.015), (I.01) + (16.01) + (1.016), (I.01) + (16.01) + (1.017), (I.01) + (16.01) + (1.018), (I.01) + (16.01) + (1.024), (I.01) + (16.01) + (1.026), (I.01) + (16.01) + (1.027), (I.01) + (16.01) + (1.032), (I.01) + (16.01) + (1.033), (I.01) + (16.01) + (1.063), (I.01) + (16.01) + (1.067), (I.01) + (16.01) + (2.001), (I.01) + (16.01) + (2.002), (I.01) + (16.01) + (2.005), (I.01) + (16.01) + (2.007), (I.01) + (16.01) + (2.008), (I.01) + (16.01) + (2.010), (I.01) + (16.01) + (2.012), (I.01) + (16.01) + (2.014), (I.01) + (16.01) + (2.016), (I.01) + (16.01) + (2.018), (I.01) + (16.01) + (2.031), (I.01) + (16.01) + (3.003), (I.01) + (16.01) + (3.011), (I.01) + (16.01) + (3.012), (I.01) + (16.01) + (3.014), (I.01) + (16.01) + (3.017), (I.01) + (16.01) + (3.019), (I.01) + (16.01) + (3.021), (I.01) + (16.01) + (3.022), (I.01) + (16.01) + (3.025), (I.01) + (16.01) + (4.007), (I.01) + (16.01) + (5.004), (I.01) + (16.01) + (5.005), (I.01) + (16.01) + (5.008), (I.01) + (16.01) + (5.009), (I.01) + (16.01) + (5.012), (I.01) + (16.01) + (5.013), (I.01) + (16.01) + (6.005), (I.01) + (16.01) + (7.005), (I.01) + (16.01) + (8.001), (I.01) + (16.01) + (9.002), (I.01) + (16.01) + (10.001), (I.01) + (16.01) + (10.002), (I.01) + (16.01)

+ (12.003), (I.01) + (16.01) + (12.004), (I.01) + (16.01) + (13.001), (I.01) + (16.01) + (13.004), (I.01) + (16.01) + (14.001), (I.01) + (16.01) + (15.025).

If two compounds (B) are present in the combinations according to the invention, other preferred compound combinations are selected from the group (G2-C) consisting of the following mixtures:

(1.02) + (1.001) + (1.002), (1.02) + (1.001) + (1.003), (1.02) + (1.001) + (1.015), (1.02) + (1.001) + (1.016), (1.02) + (1.001) + (1.017), (1.02) + (1.001) + (1.018), (1.02) + (1.001) + (1.024), (1.02) + (1.001) + (1.026), (1.02) + (1.001) + (1.027), (1.02) + (1.001) + (1.032), (1.02) + (1.001) + (1.033), (1.02) + (1.001) + (1.063), (1.02) + (1.001) + (1.067), (1.02) + (1.001) + (2.001), (1.02) + (1.001) + (2.002), (1.02) + (1.001) + (2.005), (1.02) + (1.001) + (2.007), (1.02) + (1.001) + (2.008), (1.02) + (1.001) + (2.010), (1.02) + (1.001) + (2.012), (1.02) + (1.001) + (2.014), (1.02) + (1.001) + (2.016), (1.02) + (1.001) + (2.018), (1.02) + (1.001) + (2.031), (1.02) + (1.001) + (3.003), (1.02) + (1.001) + (3.011), (1.02) + (1.001) + (3.012), (1.02) + (1.001) + (3.014), (1.02) + (1.001) + (3.017), (1.02) + (1.001) + (3.019), (1.02) + (1.001) + (3.021), (1.02) + (1.001) + (3.022), (1.02) + (1.001) + (3.025), (1.02) + (1.001) + (4.007), (1.02) + (1.001) + (5.004), (1.02) + (1.001) + (5.005), (1.02) + (1.001) + (5.008), (1.02) + (1.001) + (5.009), (1.02) + (1.001) + (5.012), (1.02) + (1.001) + (5.013), (1.02) + (1.001) + (6.005), (1.02) + (1.001) + (7.005), (1.02) + (1.001) + (8.001), (1.02) + (1.001) + (9.002), (1.02) + (1.001) + (10.001), (1.02) + (1.001) + (10.002), (1.02) + (1.001) + (12.003), (1.02) + (1.001) + (12.004), (1.02) + (1.001) + (13.001), (1.02) + (1.001) + (13.004), (1.02) + (1.001) + (14.001), (1.02) + (1.001) + (15.025), (1.02) + (1.001) + (16.01),

(1.02) + (1.002) + (1.001), (1.02) + (1.002) + (1.003), (1.02) + (1.002) + (1.015), (1.02) + (1.002) + (1.016), (1.02) + (1.002) + (1.017), (1.02) + (1.002) + (1.018), (1.02) + (1.002) + (1.024), (1.02) + (1.002) + (1.026), (1.02) + (1.002) + (1.027), (1.02) + (1.002) + (1.032), (1.02) + (1.002) + (1.033), (1.02) + (1.002) + (1.063), (1.02) + (1.002) + (1.067), (1.02) + (1.002) + (2.001), (1.02) + (1.002) + (2.002), (1.02) + (1.002) + (2.005), (1.02) + (1.002) + (2.007), (1.02) + (1.002) + (2.008), (1.02) + (1.002) + (2.010), (1.02) + (1.002) + (2.012), (1.02) + (1.002) + (2.014), (1.02) + (1.002) + (2.016), (1.02) + (1.002) + (2.018), (1.02) + (1.002) + (2.031), (1.02) + (1.002) + (3.003), (1.02) + (1.002) + (3.011), (1.02) + (1.002) + (3.012), (1.02) + (1.002) + (3.014), (1.02) + (1.002) + (3.017), (1.02) + (1.002) + (3.019), (1.02) + (1.002) + (3.021), (1.02) + (1.002) + (3.022), (1.02) + (1.002) + (3.025), (1.02) + (1.002) + (4.007), (1.02) + (1.002) + (5.004), (1.02) + (1.002) + (5.005), (1.02) + (1.002) + (5.008), (1.02) + (1.002) + (5.009), (1.02) + (1.002) + (5.012), (1.02) + (1.002) + (5.013), (1.02) + (1.002) + (6.005), (1.02) + (1.002) + (7.005), (1.02) + (1.002) + (8.001), (1.02) + (1.002) + (9.002), (1.02) + (1.002) + (10.001), (1.02) + (1.002) + (10.002), (1.02) + (1.002) + (12.003), (1.02) + (1.002) + (12.004), (1.02) + (1.002) + (13.001), (1.02) + (1.002) + (13.004), (1.02) + (1.002) + (14.001), (1.02) + (1.002) + (15.025), (1.02) + (1.002) + (16.01),

(1.02) + (1.003) + (1.001), (1.02) + (1.003) + (1.002), (1.02) + (1.003) + (1.015), (1.02) + (1.003) + (1.016), (1.02) + (1.003) + (1.017), (1.02) + (1.003) + (1.018), (1.02) + (1.003) + (1.024), (1.02) + (1.003) + (1.026), (1.02) + (1.003) + (1.027), (1.02) + (1.003) + (1.032), (1.02) + (1.003) + (1.033), (1.02) + (1.003) + (1.063), (1.02) + (1.003) + (1.067), (1.02) + (1.003) + (2.001), (1.02) + (1.003) + (2.002), (1.02) + (1.003) + (2.005), (1.02) + (1.003) + (2.007), (1.02) + (1.003) + (2.008), (1.02) + (1.003) + (2.010), (1.02) + (1.003) + (2.012), (1.02) + (1.003) + (2.014), (1.02) + (1.003) + (2.016), (1.02) + (1.003) + (2.018), (1.02) + (1.003) + (2.031), (1.02) + (1.003) + (3.003), (1.02) + (1.003) + (3.011), (1.02) + (1.003) + (3.012), (1.02) + (1.003) + (3.014), (1.02) + (1.003) + (3.017), (1.02) + (1.003) + (3.019), (1.02) + (1.003) + (3.021), (1.02) + (1.003) + (3.022), (1.02) + (1.003) + (3.025), (1.02) + (1.003) + (4.007), (1.02) + (1.003) + (5.004), (1.02) + (1.003) + (5.005), (1.02) + (1.003) + (5.008), (1.02) + (1.003) + (5.009), (1.02) + (1.003) + (5.012), (1.02) + (1.003) + (5.013), (1.02) + (1.003) + (6.005), (1.02) + (1.003) + (7.005), (1.02) + (1.003) + (8.001), (1.02) + (1.003) + (9.002), (1.02) + (1.003) + (10.001), (1.02) + (1.003) + (10.002), (1.02) + (1.003) + (12.003), (1.02) + (1.003) + (12.004), (1.02) + (1.003) + (13.001), (1.02) + (1.003) + (13.004), (1.02) + (1.003) + (14.001), (1.02) + (1.003) + (15.025), (1.02) + (1.003) + (16.01),

(1.02) + (1.015) + (1.001), (1.02) + (1.015) + (1.002), (1.02) + (1.015) + (1.003), (1.02) + (1.015) + (1.016), (1.02) + (1.015) + (1.017), (1.02) + (1.015) + (1.018), (1.02) + (1.015) + (1.024), (1.02) + (1.015) + (1.026), (1.02) + (1.015) + (1.027), (1.02) + (1.015) + (1.032), (1.02) + (1.015) + (1.033), (1.02) + (1.015) + (1.063), (1.02) + (1.015) + (1.067), (1.02) + (1.015) + (2.001), (1.02) + (1.015) + (2.002), (1.02) + (1.015) + (2.005), (1.02) + (1.015) + (2.007), (1.02) + (1.015) + (2.008), (1.02) + (1.015) + (2.010), (1.02) + (1.015) + (2.012), (1.02) + (1.015) + (2.014), (1.02) + (1.015) + (2.016), (1.02) + (1.015) + (2.018), (1.02) + (1.015) + (2.031), (1.02) + (1.015) + (3.003), (1.02) + (1.015) + (3.011), (1.02) + (1.015) + (3.012), (1.02) + (1.015) + (3.014), (1.02) + (1.015) + (3.017), (1.02) + (1.015) + (3.019), (1.02) + (1.015) + (3.021), (1.02) + (1.015) + (3.022), (1.02) + (1.015) + (3.025), (1.02) + (1.015) + (4.007), (1.02) + (1.015) + (5.004), (1.02) + (1.015) + (5.005), (1.02) + (1.015) + (5.008), (1.02) + (1.015) + (5.009), (1.02) + (1.015) + (5.012), (1.02) + (1.015) + (5.013), (1.02) + (1.015) + (6.005), (1.02) + (1.015) + (7.005), (1.02) + (1.015) + (8.001), (1.02)

+ (1.015) + (9.002), (1.02) + (1.015) + (10.001), (1.02) + (1.015) + (10.002), (1.02) + (1.015) + (12.003), (1.02) + (1.015) + (12.004), (1.02) + (1.015) + (13.001), (1.02) + (1.015) + (13.004), (1.02) + (1.015) + (14.001), (1.02) + (1.015) + (15.025), (1.02) + (1.015) + (16.01),

(1.02) + (1.016) + (1.001), (1.02) + (1.016) + (1.002), (1.02) + (1.016) + (1.003), (1.02) + (1.016) + (1.015), (1.02) + (1.016) + (1.017), (1.02) + (1.016) + (1.018), (1.02) + (1.016) + (1.024), (1.02) + (1.016) + (1.026), (1.02) + (1.016) + (1.027), (1.02) + (1.016) + (1.032), (1.02) + (1.016) + (1.033), (1.02) + (1.016) + (1.063), (1.02) + (1.016) + (1.067), (1.02) + (1.016) + (2.001), (1.02) + (1.016) + (2.002), (1.02) + (1.016) + (2.005), (1.02) + (1.016) + (2.007), (1.02) + (1.016) + (2.008), (1.02) + (1.016) + (2.010), (1.02) + (1.016) + (2.012), (1.02) + (1.016) + (2.014), (1.02) + (1.016) + (2.016), (1.02) + (1.016) + (2.018), (1.02) + (1.016) + (2.031), (1.02) + (1.016) + (3.003), (1.02) + (1.016) + (3.011), (1.02) + (1.016) + (3.012), (1.02) + (1.016) + (3.014), (1.02) + (1.016) + (3.017), (1.02) + (1.016) + (3.019), (1.02) + (1.016) + (3.021), (1.02) + (1.016) + (3.022), (1.02) + (1.016) + (3.025), (1.02) + (1.016) + (4.007), (1.02) + (1.016) + (5.004), (1.02) + (1.016) + (5.005), (1.02) + (1.016) + (5.008), (1.02) + (1.016) + (5.009), (1.02) + (1.016) + (5.012), (1.02) + (1.016) + (5.013), (1.02) + (1.016) + (6.005), (1.02) + (1.016) + (7.005), (1.02) + (1.016) + (8.001), (1.02) + (1.016) + (9.002), (1.02) + (1.016) + (10.001), (1.02) + (1.016) + (10.002), (1.02) + (1.016) + (12.003), (1.02) + (1.016) + (12.004), (1.02) + (1.016) + (13.001), (1.02) + (1.016) + (13.004), (1.02) + (1.016) + (14.001), (1.02) + (1.016) + (15.025), (1.02) + (1.016) + (16.01),

(1.02) + (1.017) + (1.001), (1.02) + (1.017) + (1.002), (1.02) + (1.017) + (1.003), (1.02) + (1.017) + (1.015), (1.02) + (1.017) + (1.016), (1.02) + (1.017) + (1.018), (1.02) + (1.017) + (1.024), (1.02) + (1.017) + (1.026), (1.02) + (1.017) + (1.027), (1.02) + (1.017) + (1.032), (1.02) + (1.017) + (1.033), (1.02) + (1.017) + (1.063), (1.02) + (1.017) + (1.067), (1.02) + (1.017) + (2.001), (1.02) + (1.017) + (2.002), (1.02) + (1.017) + (2.005), (1.02) + (1.017) + (2.007), (1.02) + (1.017) + (2.008), (1.02) + (1.017) + (2.010), (1.02) + (1.017) + (2.012), (1.02) + (1.017) + (2.014), (1.02) + (1.017) + (2.016), (1.02) + (1.017) + (2.018), (1.02) + (1.017) + (2.031), (1.02) + (1.017) + (3.003), (1.02) + (1.017) + (3.011), (1.02) + (1.017) + (3.012), (1.02) + (1.017) + (3.014), (1.02) + (1.017) + (3.017), (1.02) + (1.017) + (3.019), (1.02) + (1.017) + (3.021), (1.02) + (1.017) + (3.022), (1.02) + (1.017) + (3.025), (1.02) + (1.017) + (4.007), (1.02) + (1.017) + (5.004), (1.02) + (1.017) + (5.005), (1.02) + (1.017) + (5.008), (1.02) + (1.017) + (5.009), (1.02) + (1.017) + (5.012), (1.02) + (1.017) + (5.013), (1.02) + (1.017) + (6.005), (1.02) + (1.017) + (7.005), (1.02) + (1.017) + (8.001), (1.02) + (1.017) + (9.002), (1.02) + (1.017) + (10.001), (1.02) + (1.017) + (10.002), (1.02) + (1.017) + (12.003), (1.02) + (1.017) + (12.004), (1.02) + (1.017) + (13.001), (1.02) + (1.017) + (13.004), (1.02) + (1.017) + (14.001), (1.02) + (1.017) + (15.025), (1.02) + (1.017) + (16.01),

(1.02) + (1.018) + (1.001), (1.02) + (1.018) + (1.002), (1.02) + (1.018) + (1.003), (1.02) + (1.018) + (1.015), (1.02) + (1.018) + (1.016), (1.02) + (1.018) + (1.017), (1.02) + (1.018) + (1.024), (1.02) + (1.018) + (1.026), (1.02) + (1.018) + (1.027), (1.02) + (1.018) + (1.032), (1.02) + (1.018) + (1.033), (1.02) + (1.018) + (1.063), (1.02) + (1.018) + (1.067), (1.02) + (1.018) + (2.001), (1.02) + (1.018) + (2.002), (1.02) + (1.018) + (2.005), (1.02) + (1.018) + (2.007), (1.02) + (1.018) + (2.008), (1.02) + (1.018) + (2.010), (1.02) + (1.018) + (2.012), (1.02) + (1.018) + (2.014), (1.02) + (1.018) + (2.016), (1.02) + (1.018) + (2.018), (1.02) + (1.018) + (2.031), (1.02) + (1.018) + (3.003), (1.02) + (1.018) + (3.011), (1.02) + (1.018) + (3.012), (1.02) + (1.018) + (3.014), (1.02) + (1.018) + (3.017), (1.02) + (1.018) + (3.019), (1.02) + (1.018) + (3.021), (1.02) + (1.018) + (3.022), (1.02) + (1.018) + (3.025), (1.02) + (1.018) + (4.007), (1.02) + (1.018) + (5.004), (1.02) + (1.018) + (5.005), (1.02) + (1.018) + (5.008), (1.02) + (1.018) + (5.009), (1.02) + (1.018) + (5.012), (1.02) + (1.018) + (5.013), (1.02) + (1.018) + (6.005), (1.02) + (1.018) + (7.005), (1.02) + (1.018) + (8.001), (1.02) + (1.018) + (9.002), (1.02) + (1.018) + (10.001), (1.02) + (1.018) + (10.002), (1.02) + (1.018) + (12.003), (1.02) + (1.018) + (12.004), (1.02) + (1.018) + (13.001), (1.02) + (1.018) + (13.004), (1.02) + (1.018) + (14.001), (1.02) + (1.018) + (15.025), (1.02) + (1.018) + (16.01),

(1.02) + (1.024) + (1.001), (1.02) + (1.024) + (1.002), (1.02) + (1.024) + (1.003), (1.02) + (1.024) + (1.015), (1.02) + (1.024) + (1.016), (1.02) + (1.024) + (1.017), (1.02) + (1.024) + (1.018), (1.02) + (1.024) + (1.026), (1.02) + (1.024) + (1.027), (1.02) + (1.024) + (1.032), (1.02) + (1.024) + (1.033), (1.02) + (1.024) + (1.063), (1.02) + (1.024) + (1.067), (1.02) + (1.024) + (2.001), (1.02) + (1.024) + (2.002), (1.02) + (1.024) + (2.005), (1.02) + (1.024) + (2.007), (1.02) + (1.024) + (2.008), (1.02) + (1.024) + (2.010), (1.02) + (1.024) + (2.012), (1.02) + (1.024) + (2.014), (1.02) + (1.024) + (2.016), (1.02) + (1.024) + (2.018), (1.02) + (1.024) + (2.031), (1.02) + (1.024) + (3.003), (1.02) + (1.024) + (3.011), (1.02) + (1.024) + (3.012), (1.02) + (1.024) + (3.014), (1.02) + (1.024) + (3.017), (1.02) + (1.024) + (3.019), (1.02) + (1.024) + (3.021), (1.02) + (1.024) + (3.022), (1.02) + (1.024) + (3.025), (1.02) + (1.024) + (4.007), (1.02) + (1.024) + (5.004), (1.02) + (1.024) + (5.005), (1.02) + (1.024) + (5.008), (1.02) + (1.024) + (5.009), (1.02) + (1.024) + (5.012), (1.02) + (1.024) + (5.013), (1.02) + (1.024) + (6.005), (1.02) + (1.024) + (7.005), (1.02) + (1.024) + (8.001), (1.02) + (1.024) + (9.002), (1.02) + (1.024) + (10.001), (1.02) + (1.024) + (10.002), (1.02) + (1.024) + (12.003), (1.02) + (1.024) + (12.004), (1.02) + (1.024) + (13.001), (1.02) + (1.024) + (13.004), (1.02) + (1.024) + (14.001), (1.02) +

(1.024) + (15.025), (1.02) + (1.024) + (16.01),

(1.02) + (1.026) + (1.001), (1.02) + (1.026) + (1.002), (1.02) + (1.026) + (1.003), (1.02) + (1.026) + (1.015), (1.02) + (1.026) + (1.016), (1.02) + (1.026) + (1.017), (1.02) + (1.026) + (1.018), (1.02) + (1.026) + (1.024), (1.02) + (1.026) + (1.027), (1.02) + (1.026) + (1.032), (1.02) + (1.026) + (1.033), (1.02) + (1.026) + (1.063), (1.02) + (1.026) + (1.067), (1.02) + (1.026) + (2.001), (1.02) + (1.026) + (2.002), (1.02) + (1.026) + (2.005), (1.02) + (1.026) + (2.007), (1.02) + (1.026) + (2.008), (1.02) + (1.026) + (2.010), (1.02) + (1.026) + (2.012), (1.02) + (1.026) + (2.014), (1.02) + (1.026) + (2.016), (1.02) + (1.026) + (2.018), (1.02) + (1.026) + (2.031), (1.02) + (1.026) + (3.003), (1.02) + (1.026) + (3.011), (1.02) + (1.026) + (3.012), (1.02) + (1.026) + (3.014), (1.02) + (1.026) + (3.017), (1.02) + (1.026) + (3.019), (1.02) + (1.026) + (3.021), (1.02) + (1.026) + (3.022), (1.02) + (1.026) + (3.025), (1.02) + (1.026) + (4.007), (1.02) + (1.026) + (5.004), (1.02) + (1.026) + (5.005), (1.02) + (1.026) + (5.008), (1.02) + (1.026) + (5.009), (1.02) + (1.026) + (5.012), (1.02) + (1.026) + (5.013), (1.02) + (1.026) + (6.005), (1.02) + (1.026) + (7.005), (1.02) + (1.026) + (8.001), (1.02) + (1.026) + (9.002), (1.02) + (1.026) + (10.001), (1.02) + (1.026) + (10.002), (1.02) + (1.026) + (12.003), (1.02) + (1.026) + (12.004), (1.02) + (1.026) + (13.001), (1.02) + (1.026) + (13.004), (1.02) + (1.026) + (14.001), (1.02) + (1.026) + (15.025), (1.02) + (1.026) + (16.01),

(1.02) + (1.027) + (1.001), (1.02) + (1.027) + (1.002), (1.02) + (1.027) + (1.003), (1.02) + (1.027) + (1.015), (1.02) + (1.027) + (1.016), (1.02) + (1.027) + (1.017), (1.02) + (1.027) + (1.018), (1.02) + (1.027) + (1.024), (1.02) + (1.027) + (1.026), (1.02) + (1.027) + (1.032), (1.02) + (1.027) + (1.033), (1.02) + (1.027) + (1.063), (1.02) + (1.027) + (1.067), (1.02) + (1.027) + (2.001), (1.02) + (1.027) + (2.002), (1.02) + (1.027) + (2.005), (1.02) + (1.027) + (2.007), (1.02) + (1.027) + (2.008), (1.02) + (1.027) + (2.010), (1.02) + (1.027) + (2.012), (1.02) + (1.027) + (2.014), (1.02) + (1.027) + (2.016), (1.02) + (1.027) + (2.018), (1.02) + (1.027) + (2.031), (1.02) + (1.027) + (3.003), (1.02) + (1.027) + (3.011), (1.02) + (1.027) + (3.012), (1.02) + (1.027) + (3.014), (1.02) + (1.027) + (3.017), (1.02) + (1.027) + (3.019), (1.02) + (1.027) + (3.021), (1.02) + (1.027) + (3.022), (1.02) + (1.027) + (3.025), (1.02) + (1.027) + (4.007), (1.02) + (1.027) + (5.004), (1.02) + (1.027) + (5.005), (1.02) + (1.027) + (5.008), (1.02) + (1.027) + (5.009), (1.02) + (1.027) + (5.012), (1.02) + (1.027) + (5.013), (1.02) + (1.027) + (6.005), (1.02) + (1.027) + (7.005), (1.02) + (1.027) + (8.001), (1.02) + (1.027) + (9.002), (1.02) + (1.027) + (10.001), (1.02) + (1.027) + (10.002), (1.02) + (1.027) + (12.003), (1.02) + (1.027) + (12.004), (1.02) + (1.027) + (13.001), (1.02) + (1.027) + (13.004), (1.02) + (1.027) + (14.001), (1.02) + (1.027) + (15.025), (1.02) + (1.027) + (16.01),

(1.02) + (1.032) + (1.001), (1.02) + (1.032) + (1.002), (1.02) + (1.032) + (1.003), (1.02) + (1.032) + (1.015), (1.02) + (1.032) + (1.016), (1.02) + (1.032) + (1.017), (1.02) + (1.032) + (1.018), (1.02) + (1.032) + (1.024), (1.02) + (1.032) + (1.026), (1.02) + (1.032) + (1.027), (1.02) + (1.032) + (1.033), (1.02) + (1.032) + (1.063), (1.02) + (1.032) + (1.067), (1.02) + (1.032) + (2.001), (1.02) + (1.032) + (2.002), (1.02) + (1.032) + (2.005), (1.02) + (1.032) + (2.007), (1.02) + (1.032) + (2.008), (1.02) + (1.032) + (2.010), (1.02) + (1.032) + (2.012), (1.02) + (1.032) + (2.014), (1.02) + (1.032) + (2.016), (1.02) + (1.032) + (2.018), (1.02) + (1.032) + (2.031), (1.02) + (1.032) + (3.003), (1.02) + (1.032) + (3.011), (1.02) + (1.032) + (3.012), (1.02) + (1.032) + (3.014), (1.02) + (1.032) + (3.017), (1.02) + (1.032) + (3.019), (1.02) + (1.032) + (3.021), (1.02) + (1.032) + (3.022), (1.02) + (1.032) + (3.025), (1.02) + (1.032) + (4.007), (1.02) + (1.032) + (5.004), (1.02) + (1.032) + (5.005), (1.02) + (1.032) + (5.008), (1.02) + (1.032) + (5.009), (1.02) + (1.032) + (5.012), (1.02) + (1.032) + (5.013), (1.02) + (1.032) + (6.005), (1.02) + (1.032) + (7.005), (1.02) + (1.032) + (8.001), (1.02) + (1.032) + (9.002), (1.02) + (1.032) + (10.001), (1.02) + (1.032) + (10.002), (1.02) + (1.032) + (12.003), (1.02) + (1.032) + (12.004), (1.02) + (1.032) + (13.001), (1.02) + (1.032) + (13.004), (1.02) + (1.032) + (14.001), (1.02) + (1.032) + (15.025), (1.02) + (1.032) + (16.01),

(1.02) + (1.033) + (1.001), (1.02) + (1.033) + (1.002), (1.02) + (1.033) + (1.003), (1.02) + (1.033) + (1.015), (1.02) + (1.033) + (1.016), (1.02) + (1.033) + (1.017), (1.02) + (1.033) + (1.018), (1.02) + (1.033) + (1.024), (1.02) + (1.033) + (1.026), (1.02) + (1.033) + (1.027), (1.02) + (1.033) + (1.032), (1.02) + (1.033) + (1.063), (1.02) + (1.033) + (1.067), (1.02) + (1.033) + (2.001), (1.02) + (1.033) + (2.002), (1.02) + (1.033) + (2.005), (1.02) + (1.033) + (2.007), (1.02) + (1.033) + (2.008), (1.02) + (1.033) + (2.010), (1.02) + (1.033) + (2.012), (1.02) + (1.033) + (2.014), (1.02) + (1.033) + (2.016), (1.02) + (1.033) + (2.018), (1.02) + (1.033) + (2.031), (1.02) + (1.033) + (3.003), (1.02) + (1.033) + (3.011), (1.02) + (1.033) + (3.012), (1.02) + (1.033) + (3.014), (1.02) + (1.033) + (3.017), (1.02) + (1.033) + (3.019), (1.02) + (1.033) + (3.021), (1.02) + (1.033) + (3.022), (1.02) + (1.033) + (3.025), (1.02) + (1.033) + (4.007), (1.02) + (1.033) + (5.004), (1.02) + (1.033) + (5.005), (1.02) + (1.033) + (5.008), (1.02) + (1.033) + (5.009), (1.02) + (1.033) + (5.012), (1.02) + (1.033) + (5.013), (1.02) + (1.033) + (6.005), (1.02) + (1.033) + (7.005), (1.02) + (1.033) + (8.001), (1.02) + (1.033) + (9.002), (1.02) + (1.033) + (10.001), (1.02) + (1.033) + (10.002), (1.02) + (1.033) + (12.003), (1.02) + (1.033) + (12.004), (1.02) + (1.033) + (13.001), (1.02) + (1.033) + (13.004), (1.02) + (1.033) + (14.001), (1.02) + (1.033) + (15.025), (1.02) + (1.033) + (16.01),

(1.02) + (1.063) + (1.001), (1.02) + (1.063) + (1.002), (1.02) + (1.063) + (1.003), (1.02) + (1.063) + (1.015), (1.02) + (1.063) + (1.016), (1.02) + (1.063) + (1.017), (1.02) + (1.063) + (1.018), (1.02) + (1.063) + (1.024), (1.02) + (1.063) + (1.026), (1.02) + (1.063) + (1.027), (1.02) + (1.063) + (1.032), (1.02) + (1.063) + (1.033), (1.02) + (1.063) + (1.067), (1.02) + (1.063) + (2.001), (1.02) + (1.063) + (2.002), (1.02) + (1.063) + (2.005), (1.02) + (1.063) + (2.007), (1.02) + (1.063) + (2.008), (1.02) + (1.063) + (2.010), (1.02) + (1.063) + (2.012), (1.02) + (1.063) + (2.014), (1.02) + (1.063) + (2.016), (1.02) + (1.063) + (2.018), (1.02) + (1.063) + (2.031), (1.02) + (1.063) + (3.003), (1.02) + (1.063) + (3.011), (1.02) + (1.063) + (3.012), (1.02) + (1.063) + (3.014), (1.02) + (1.063) + (3.017), (1.02) + (1.063) + (3.019), (1.02) + (1.063) + (3.021), (1.02) + (1.063) + (3.022), (1.02) + (1.063) + (3.025), (1.02) + (1.063) + (4.007), (1.02) + (1.063) + (5.004), (1.02) + (1.063) + (5.005), (1.02) + (1.063) + (5.008), (1.02) + (1.063) + (5.009), (1.02) + (1.063) + (5.012), (1.02) + (1.063) + (5.013), (1.02) + (1.063) + (6.005), (1.02) + (1.063) + (7.005), (1.02) + (1.063) + (8.001), (1.02) + (1.063) + (9.002), (1.02) + (1.063) + (10.001), (1.02) + (1.063) + (10.002), (1.02) + (1.063) + (12.003), (1.02) + (1.063) + (12.004), (1.02) + (1.063) + (13.001), (1.02) + (1.063) + (13.004), (1.02) + (1.063) + (14.001), (1.02) + (1.063) + (15.025), (1.02) + (1.063) + (16.01),

(1.02) + (1.067) + (1.001), (1.02) + (1.067) + (1.002), (1.02) + (1.067) + (1.003), (1.02) + (1.067) + (1.015), (1.02) + (1.067) + (1.016), (1.02) + (1.067) + (1.017), (1.02) + (1.067) + (1.018), (1.02) + (1.067) + (1.024), (1.02) + (1.067) + (1.026), (1.02) + (1.067) + (1.027), (1.02) + (1.067) + (1.032), (1.02) + (1.067) + (1.033), (1.02) + (1.067) + (1.063), (1.02) + (1.067) + (2.001), (1.02) + (1.067) + (2.002), (1.02) + (1.067) + (2.005), (1.02) + (1.067) + (2.007), (1.02) + (1.067) + (2.008), (1.02) + (1.067) + (2.010), (1.02) + (1.067) + (2.012), (1.02) + (1.067) + (2.014), (1.02) + (1.067) + (2.016), (1.02) + (1.067) + (2.018), (1.02) + (1.067) + (2.031), (1.02) + (1.067) + (3.003), (1.02) + (1.067) + (3.011), (1.02) + (1.067) + (3.012), (1.02) + (1.067) + (3.014), (1.02) + (1.067) + (3.017), (1.02) + (1.067) + (3.019), (1.02) + (1.067) + (3.021), (1.02) + (1.067) + (3.022), (1.02) + (1.067) + (3.025), (1.02) + (1.067) + (4.007), (1.02) + (1.067) + (5.004), (1.02) + (1.067) + (5.005), (1.02) + (1.067) + (5.008), (1.02) + (1.067) + (5.009), (1.02) + (1.067) + (5.012), (1.02) + (1.067) + (5.013), (1.02) + (1.067) + (6.005), (1.02) + (1.067) + (7.005), (1.02) + (1.067) + (8.001), (1.02) + (1.067) + (9.002), (1.02) + (1.067) + (10.001), (1.02) + (1.067) + (10.002), (1.02) + (1.067) + (12.003), (1.02) + (1.067) + (12.004), (1.02) + (1.067) + (13.001), (1.02) + (1.067) + (13.004), (1.02) + (1.067) + (14.001), (1.02) + (1.067) + (15.025), (1.02) + (1.067) + (16.01),

(1.02) + (2.001) + (1.001), (1.02) + (2.001) + (1.002), (1.02) + (2.001) + (1.003), (1.02) + (2.001) + (1.015), (1.02) + (2.001) + (1.016), (1.02) + (2.001) + (1.017), (1.02) + (2.001) + (1.018), (1.02) + (2.001) + (1.024), (1.02) + (2.001) + (1.026), (1.02) + (2.001) + (1.027), (1.02) + (2.001) + (1.032), (1.02) + (2.001) + (1.033), (1.02) + (2.001) + (1.063), (1.02) + (2.001) + (1.067), (1.02) + (2.001) + (2.002), (1.02) + (2.001) + (2.005), (1.02) + (2.001) + (2.007), (1.02) + (2.001) + (2.008), (1.02) + (2.001) + (2.010), (1.02) + (2.001) + (2.012), (1.02) + (2.001) + (2.014), (1.02) + (2.001) + (2.016), (1.02) + (2.001) + (2.018), (1.02) + (2.001) + (2.031), (1.02) + (2.001) + (3.003), (1.02) + (2.001) + (3.011), (1.02) + (2.001) + (3.012), (1.02) + (2.001) + (3.014), (1.02) + (2.001) + (3.017), (1.02) + (2.001) + (3.019), (1.02) + (2.001) + (3.021), (1.02) + (2.001) + (3.022), (1.02) + (2.001) + (3.025), (1.02) + (2.001) + (4.007), (1.02) + (2.001) + (5.004), (1.02) + (2.001) + (5.005), (1.02) + (2.001) + (5.008), (1.02) + (2.001) + (5.009), (1.02) + (2.001) + (5.012), (1.02) + (2.001) + (5.013), (1.02) + (2.001) + (6.005), (1.02) + (2.001) + (7.005), (1.02) + (2.001) + (8.001), (1.02) + (2.001) + (9.002), (1.02) + (2.001) + (10.001), (1.02) + (2.001) + (10.002), (1.02) + (2.001) + (12.003), (1.02) + (2.001) + (12.004), (1.02) + (2.001) + (13.001), (1.02) + (2.001) + (13.004), (1.02) + (2.001) + (14.001), (1.02) + (2.001) + (15.025), (1.02) + (2.001) + (16.01),

(1.02) + (2.002) + (1.001), (1.02) + (2.002) + (1.002), (1.02) + (2.002) + (1.003), (1.02) + (2.002) + (1.015), (1.02) + (2.002) + (1.016), (1.02) + (2.002) + (1.017), (1.02) + (2.002) + (1.018), (1.02) + (2.002) + (1.024), (1.02) + (2.002) + (1.026), (1.02) + (2.002) + (1.027), (1.02) + (2.002) + (1.032), (1.02) + (2.002) + (1.033), (1.02) + (2.002) + (1.063), (1.02) + (2.002) + (1.067), (1.02) + (2.002) + (2.001), (1.02) + (2.002) + (2.005), (1.02) + (2.002) + (2.007), (1.02) + (2.002) + (2.008), (1.02) + (2.002) + (2.010), (1.02) + (2.002) + (2.012), (1.02) + (2.002) + (2.014), (1.02) + (2.002) + (2.016), (1.02) + (2.002) + (2.018), (1.02) + (2.002) + (2.031), (1.02) + (2.002) + (3.003), (1.02) + (2.002) + (3.011), (1.02) + (2.002) + (3.012), (1.02) + (2.002) + (3.014), (1.02) + (2.002) + (3.017), (1.02) + (2.002) + (3.019), (1.02) + (2.002) + (3.021), (1.02) + (2.002) + (3.022), (1.02) + (2.002) + (3.025), (1.02) + (2.002) + (4.007), (1.02) + (2.002) + (5.004), (1.02) + (2.002) + (5.005), (1.02) + (2.002) + (5.008), (1.02) + (2.002) + (5.009), (1.02) + (2.002) + (5.012), (1.02) + (2.002) + (5.013), (1.02) + (2.002) + (6.005), (1.02) + (2.002) + (7.005), (1.02) + (2.002) + (8.001), (1.02) + (2.002) + (9.002), (1.02) + (2.002) + (10.001), (1.02) + (2.002) + (10.002), (1.02) + (2.002) + (12.003), (1.02) + (2.002) + (12.004), (1.02) + (2.002) + (13.001), (1.02) + (2.002) + (13.004), (1.02) + (2.002) + (14.001), (1.02) + (2.002) + (15.025), (1.02) + (2.002) + (16.01),

(1.02) + (2.005) + (1.001), (1.02) + (2.005) + (1.002), (1.02) + (2.005) + (1.003), (1.02) + (2.005) + (1.015), (1.02) + (2.005) + (1.016), (1.02) + (2.005) + (1.017), (1.02) + (2.005) + (1.018), (1.02) + (2.005) + (1.024), (1.02) + (2.005)

+ (1.026), (1.02) + (2.005) + (1.027), (1.02) + (2.005) + (1.032), (1.02) + (2.005) + (1.033), (1.02) + (2.005) + (1.063), (1.02) + (2.005) + (1.067), (1.02) + (2.005) + (2.001), (1.02) + (2.005) + (2.002), (1.02) + (2.005) + (2.007), (1.02) + (2.005) + (2.008), (1.02) + (2.005) + (2.010), (1.02) + (2.005) + (2.012), (1.02) + (2.005) + (2.014), (1.02) + (2.005) + (2.016), (1.02) + (2.005) + (2.018), (1.02) + (2.005) + (2.031), (1.02) + (2.005) + (3.003), (1.02) + (2.005) + (3.011), (1.02) + (2.005) + (3.012), (1.02) + (2.005) + (3.014), (1.02) + (2.005) + (3.017), (1.02) + (2.005) + (3.019), (1.02) + (2.005) + (3.021), (1.02) + (2.005) + (3.022), (1.02) + (2.005) + (3.025), (1.02) + (2.005) + (4.007), (1.02) + (2.005) + (5.004), (1.02) + (2.005) + (5.005), (1.02) + (2.005) + (5.008), (1.02) + (2.005) + (5.009), (1.02) + (2.005) + (5.012), (1.02) + (2.005) + (5.013), (1.02) + (2.005) + (6.005), (1.02) + (2.005) + (7.005), (1.02) + (2.005) + (8.001), (1.02) + (2.005) + (9.002), (1.02) + (2.005) + (10.001), (1.02) + (2.005) + (10.002), (1.02) + (2.005) + (12.003), (1.02) + (2.005) + (12.004), (1.02) + (2.005) + (13.001), (1.02) + (2.005) + (13.004), (1.02) + (2.005) + (14.001), (1.02) + (2.005) + (15.025), (1.02) + (2.005) + (16.01),

(1.02) + (2.007) + (1.001), (1.02) + (2.007) + (1.002), (1.02) + (2.007) + (1.003), (1.02) + (2.007) + (1.015), (1.02) + (2.007) + (1.016), (1.02) + (2.007) + (1.017), (1.02) + (2.007) + (1.018), (1.02) + (2.007) + (1.024), (1.02) + (2.007) + (1.026), (1.02) + (2.007) + (1.027), (1.02) + (2.007) + (1.032), (1.02) + (2.007) + (1.033), (1.02) + (2.007) + (1.063), (1.02) + (2.007) + (1.067), (1.02) + (2.007) + (2.001), (1.02) + (2.007) + (2.002), (1.02) + (2.007) + (2.005), (1.02) + (2.007) + (2.008), (1.02) + (2.007) + (2.010), (1.02) + (2.007) + (2.012), (1.02) + (2.007) + (2.014), (1.02) + (2.007) + (2.016), (1.02) + (2.007) + (2.018), (1.02) + (2.007) + (2.031), (1.02) + (2.007) + (3.003), (1.02) + (2.007) + (3.011), (1.02) + (2.007) + (3.012), (1.02) + (2.007) + (3.014), (1.02) + (2.007) + (3.017), (1.02) + (2.007) + (3.019), (1.02) + (2.007) + (3.021), (1.02) + (2.007) + (3.022), (1.02) + (2.007) + (3.025), (1.02) + (2.007) + (4.007), (1.02) + (2.007) + (5.004), (1.02) + (2.007) + (5.005), (1.02) + (2.007) + (5.008), (1.02) + (2.007) + (5.009), (1.02) + (2.007) + (5.012), (1.02) + (2.007) + (5.013), (1.02) + (2.007) + (6.005), (1.02) + (2.007) + (7.005), (1.02) + (2.007) + (8.001), (1.02) + (2.007) + (9.002), (1.02) + (2.007) + (10.001), (1.02) + (2.007) + (10.002), (1.02) + (2.007) + (12.003), (1.02) + (2.007) + (12.004), (1.02) + (2.007) + (13.001), (1.02) + (2.007) + (13.004), (1.02) + (2.007) + (14.001), (1.02) + (2.007) + (15.025), (1.02) + (2.007) + (16.01),

(1.02) + (2.008) + (1.001), (1.02) + (2.008) + (1.002), (1.02) + (2.008) + (1.003), (1.02) + (2.008) + (1.015), (1.02) + (2.008) + (1.016), (1.02) + (2.008) + (1.017), (1.02) + (2.008) + (1.018), (1.02) + (2.008) + (1.024), (1.02) + (2.008) + (1.026), (1.02) + (2.008) + (1.027), (1.02) + (2.008) + (1.032), (1.02) + (2.008) + (1.033), (1.02) + (2.008) + (1.063), (1.02) + (2.008) + (1.067), (1.02) + (2.008) + (2.001), (1.02) + (2.008) + (2.002), (1.02) + (2.008) + (2.005), (1.02) + (2.008) + (2.007), (1.02) + (2.008) + (2.010), (1.02) + (2.008) + (2.012), (1.02) + (2.008) + (2.014), (1.02) + (2.008) + (2.016), (1.02) + (2.008) + (2.018), (1.02) + (2.008) + (2.031), (1.02) + (2.008) + (3.003), (1.02) + (2.008) + (3.011), (1.02) + (2.008) + (3.012), (1.02) + (2.008) + (3.014), (1.02) + (2.008) + (3.017), (1.02) + (2.008) + (3.019), (1.02) + (2.008) + (3.021), (1.02) + (2.008) + (3.022), (1.02) + (2.008) + (3.025), (1.02) + (2.008) + (4.007), (1.02) + (2.008) + (5.004), (1.02) + (2.008) + (5.005), (1.02) + (2.008) + (5.008), (1.02) + (2.008) + (5.009), (1.02) + (2.008) + (5.012), (1.02) + (2.008) + (5.013), (1.02) + (2.008) + (6.005), (1.02) + (2.008) + (7.005), (1.02) + (2.008) + (8.001), (1.02) + (2.008) + (9.002), (1.02) + (2.008) + (10.001), (1.02) + (2.008) + (10.002), (1.02) + (2.008) + (12.003), (1.02) + (2.008) + (12.004), (1.02) + (2.008) + (13.001), (1.02) + (2.008) + (13.004), (1.02) + (2.008) + (14.001), (1.02) + (2.008) + (15.025), (1.02) + (2.008) + (16.01),

(1.02) + (2.010) + (1.001), (1.02) + (2.010) + (1.002), (1.02) + (2.010) + (1.003), (1.02) + (2.010) + (1.015), (1.02) + (2.010) + (1.016), (1.02) + (2.010) + (1.017), (1.02) + (2.010) + (1.018), (1.02) + (2.010) + (1.024), (1.02) + (2.010) + (1.026), (1.02) + (2.010) + (1.027), (1.02) + (2.010) + (1.032), (1.02) + (2.010) + (1.033), (1.02) + (2.010) + (1.063), (1.02) + (2.010) + (1.067), (1.02) + (2.010) + (2.001), (1.02) + (2.010) + (2.002), (1.02) + (2.010) + (2.005), (1.02) + (2.010) + (2.007), (1.02) + (2.010) + (2.008), (1.02) + (2.010) + (2.012), (1.02) + (2.010) + (2.014), (1.02) + (2.010) + (2.016), (1.02) + (2.010) + (2.018), (1.02) + (2.010) + (2.031), (1.02) + (2.010) + (3.003), (1.02) + (2.010) + (3.011), (1.02) + (2.010) + (3.012), (1.02) + (2.010) + (3.014), (1.02) + (2.010) + (3.017), (1.02) + (2.010) + (3.019), (1.02) + (2.010) + (3.021), (1.02) + (2.010) + (3.022), (1.02) + (2.010) + (3.025), (1.02) + (2.010) + (4.007), (1.02) + (2.010) + (5.004), (1.02) + (2.010) + (5.005), (1.02) + (2.010) + (5.008), (1.02) + (2.010) + (5.009), (1.02) + (2.010) + (5.012), (1.02) + (2.010) + (5.013), (1.02) + (2.010) + (6.005), (1.02) + (2.010) + (7.005), (1.02) + (2.010) + (8.001), (1.02) + (2.010) + (9.002), (1.02) + (2.010) + (10.001), (1.02) + (2.010) + (10.002), (1.02) + (2.010) + (12.003), (1.02) + (2.010) + (12.004), (1.02) + (2.010) + (13.001), (1.02) + (2.010) + (13.004), (1.02) + (2.010) + (14.001), (1.02) + (2.010) + (15.025), (1.02) + (2.010) + (16.01),

(1.02) + (2.012) + (1.001), (1.02) + (2.012) + (1.002), (1.02) + (2.012) + (1.003), (1.02) + (2.012) + (1.015), (1.02) + (2.012) + (1.016), (1.02) + (2.012) + (1.017), (1.02) + (2.012) + (1.018), (1.02) + (2.012) + (1.024), (1.02) + (2.012) + (1.026), (1.02) + (2.012) + (1.027), (1.02) + (2.012) + (1.032), (1.02) + (2.012) + (1.033), (1.02) + (2.012) + (1.063), (1.02) + (2.012) + (1.067), (1.02) + (2.012) + (2.001), (1.02) + (2.012) + (2.002), (1.02) + (2.012) + (2.005), (1.02)

+ (2.012) + (2.007), (1.02) + (2.012) + (2.008), (1.02) + (2.012) + (2.010), (1.02) + (2.012) + (2.014), (1.02) + (2.012) + (2.016), (1.02) + (2.012) + (2.018), (1.02) + (2.012) + (2.031), (1.02) + (2.012) + (3.003), (1.02) + (2.012) + (3.011), (1.02) + (2.012) + (3.012), (1.02) + (2.012) + (3.014), (1.02) + (2.012) + (3.017), (1.02) + (2.012) + (3.019), (1.02) + (2.012) + (3.021), (1.02) + (2.012) + (3.022), (1.02) + (2.012) + (3.025), (1.02) + (2.012) + (4.007), (1.02) + (2.012) + (5.004), (1.02) + (2.012) + (5.005), (1.02) + (2.012) + (5.008), (1.02) + (2.012) + (5.009), (1.02) + (2.012) + (5.012), (1.02) + (2.012) + (5.013), (1.02) + (2.012) + (6.005), (1.02) + (2.012) + (7.005), (1.02) + (2.012) + (8.001), (1.02) + (2.012) + (9.002), (1.02) + (2.012) + (10.001), (1.02) + (2.012) + (10.002), (1.02) + (2.012) + (12.003), (1.02) + (2.012) + (12.004), (1.02) + (2.012) + (13.001), (1.02) + (2.012) + (13.004), (1.02) + (2.012) + (14.001), (1.02) + (2.012) + (15.025), (1.02) + (2.012) + (16.01),

(1.02) + (2.014) + (1.001), (1.02) + (2.014) + (1.002), (1.02) + (2.014) + (1.003), (1.02) + (2.014) + (1.015), (1.02) + (2.014) + (1.016), (1.02) + (2.014) + (1.017), (1.02) + (2.014) + (1.018), (1.02) + (2.014) + (1.024), (1.02) + (2.014) + (1.026), (1.02) + (2.014) + (1.027), (1.02) + (2.014) + (1.032), (1.02) + (2.014) + (1.033), (1.02) + (2.014) + (1.063), (1.02) + (2.014) + (1.067), (1.02) + (2.014) + (2.001), (1.02) + (2.014) + (2.002), (1.02) + (2.014) + (2.005), (1.02) + (2.014) + (2.007), (1.02) + (2.014) + (2.008), (1.02) + (2.014) + (2.010), (1.02) + (2.014) + (2.012), (1.02) + (2.014) + (2.016), (1.02) + (2.014) + (2.018), (1.02) + (2.014) + (2.031), (1.02) + (2.014) + (3.003), (1.02) + (2.014) + (3.011), (1.02) + (2.014) + (3.012), (1.02) + (2.014) + (3.014), (1.02) + (2.014) + (3.017), (1.02) + (2.014) + (3.019), (1.02) + (2.014) + (3.021), (1.02) + (2.014) + (3.022), (1.02) + (2.014) + (3.025), (1.02) + (2.014) + (4.007), (1.02) + (2.014) + (5.004), (1.02) + (2.014) + (5.005), (1.02) + (2.014) + (5.008), (1.02) + (2.014) + (5.009), (1.02) + (2.014) + (5.012), (1.02) + (2.014) + (5.013), (1.02) + (2.014) + (6.005), (1.02) + (2.014) + (7.005), (1.02) + (2.014) + (8.001), (1.02) + (2.014) + (9.002), (1.02) + (2.014) + (10.001), (1.02) + (2.014) + (10.002), (1.02) + (2.014) + (12.003), (1.02) + (2.014) + (12.004), (1.02) + (2.014) + (13.001), (1.02) + (2.014) + (13.004), (1.02) + (2.014) + (14.001), (1.02) + (2.014) + (15.025), (1.02) + (2.014) + (16.01),

(1.02) + (2.016) + (1.001), (1.02) + (2.016) + (1.002), (1.02) + (2.016) + (1.003), (1.02) + (2.016) + (1.015), (1.02) + (2.016) + (1.016), (1.02) + (2.016) + (1.017), (1.02) + (2.016) + (1.018), (1.02) + (2.016) + (1.024), (1.02) + (2.016) + (1.026), (1.02) + (2.016) + (1.027), (1.02) + (2.016) + (1.032), (1.02) + (2.016) + (1.033), (1.02) + (2.016) + (1.063), (1.02) + (2.016) + (1.067), (1.02) + (2.016) + (2.001), (1.02) + (2.016) + (2.002), (1.02) + (2.016) + (2.005), (1.02) + (2.016) + (2.007), (1.02) + (2.016) + (2.008), (1.02) + (2.016) + (2.010), (1.02) + (2.016) + (2.012), (1.02) + (2.016) + (2.014), (1.02) + (2.016) + (2.018), (1.02) + (2.016) + (2.031), (1.02) + (2.016) + (3.003), (1.02) + (2.016) + (3.011), (1.02) + (2.016) + (3.012), (1.02) + (2.016) + (3.014), (1.02) + (2.016) + (3.017), (1.02) + (2.016) + (3.019), (1.02) + (2.016) + (3.021), (1.02) + (2.016) + (3.022), (1.02) + (2.016) + (3.025), (1.02) + (2.016) + (4.007), (1.02) + (2.016) + (5.004), (1.02) + (2.016) + (5.005), (1.02) + (2.016) + (5.008), (1.02) + (2.016) + (5.009), (1.02) + (2.016) + (5.012), (1.02) + (2.016) + (5.013), (1.02) + (2.016) + (6.005), (1.02) + (2.016) + (7.005), (1.02) + (2.016) + (8.001), (1.02) + (2.016) + (9.002), (1.02) + (2.016) + (10.001), (1.02) + (2.016) + (10.002), (1.02) + (2.016) + (12.003), (1.02) + (2.016) + (12.004), (1.02) + (2.016) + (13.001), (1.02) + (2.016) + (13.004), (1.02) + (2.016) + (14.001), (1.02) + (2.016) + (15.025), (1.02) + (2.016) + (16.01),

(1.02) + (2.018) + (1.001), (1.02) + (2.018) + (1.002), (1.02) + (2.018) + (1.003), (1.02) + (2.018) + (1.015), (1.02) + (2.018) + (1.016), (1.02) + (2.018) + (1.017), (1.02) + (2.018) + (1.018), (1.02) + (2.018) + (1.024), (1.02) + (2.018) + (1.026), (1.02) + (2.018) + (1.027), (1.02) + (2.018) + (1.032), (1.02) + (2.018) + (1.033), (1.02) + (2.018) + (1.063), (1.02) + (2.018) + (1.067), (1.02) + (2.018) + (2.001), (1.02) + (2.018) + (2.002), (1.02) + (2.018) + (2.005), (1.02) + (2.018) + (2.007), (1.02) + (2.018) + (2.008), (1.02) + (2.018) + (2.010), (1.02) + (2.018) + (2.012), (1.02) + (2.018) + (2.014), (1.02) + (2.018) + (2.016), (1.02) + (2.018) + (2.031), (1.02) + (2.018) + (3.003), (1.02) + (2.018) + (3.011), (1.02) + (2.018) + (3.012), (1.02) + (2.018) + (3.014), (1.02) + (2.018) + (3.017), (1.02) + (2.018) + (3.019), (1.02) + (2.018) + (3.021), (1.02) + (2.018) + (3.022), (1.02) + (2.018) + (3.025), (1.02) + (2.018) + (4.007), (1.02) + (2.018) + (5.004), (1.02) + (2.018) + (5.005), (1.02) + (2.018) + (5.008), (1.02) + (2.018) + (5.009), (1.02) + (2.018) + (5.012), (1.02) + (2.018) + (5.013), (1.02) + (2.018) + (6.005), (1.02) + (2.018) + (7.005), (1.02) + (2.018) + (8.001), (1.02) + (2.018) + (9.002), (1.02) + (2.018) + (10.001), (1.02) + (2.018) + (10.002), (1.02) + (2.018) + (12.003), (1.02) + (2.018) + (12.004), (1.02) + (2.018) + (13.001), (1.02) + (2.018) + (13.004), (1.02) + (2.018) + (14.001), (1.02) + (2.018) + (15.025), (1.02) + (2.018) + (16.01),

(1.02) + (2.031) + (1.001), (1.02) + (2.031) + (1.002), (1.02) + (2.031) + (1.003), (1.02) + (2.031) + (1.015), (1.02) + (2.031) + (1.016), (1.02) + (2.031) + (1.017), (1.02) + (2.031) + (1.018), (1.02) + (2.031) + (1.024), (1.02) + (2.031) + (1.026), (1.02) + (2.031) + (1.027), (1.02) + (2.031) + (1.032), (1.02) + (2.031) + (1.033), (1.02) + (2.031) + (1.063), (1.02) + (2.031) + (1.067), (1.02) + (2.031) + (2.001), (1.02) + (2.031) + (2.002), (1.02) + (2.031) + (2.005), (1.02) + (2.031) + (2.007), (1.02) + (2.031) + (2.008), (1.02) + (2.031) + (2.010), (1.02) + (2.031) + (2.012), (1.02) + (2.031) + (2.014), (1.02) + (2.031) + (2.016), (1.02) + (2.031) + (2.018), (1.02) + (2.031) + (3.003), (1.02) + (2.031) + (3.011),

(1.02) + (2.031) + (3.012), (1.02) + (2.031) + (3.014), (1.02) + (2.031) + (3.017), (1.02) + (2.031) + (3.019), (1.02) + (2.031) + (3.021), (1.02) + (2.031) + (3.022), (1.02) + (2.031) + (3.025), (1.02) + (2.031) + (4.007), (1.02) + (2.031) + (5.004), (1.02) + (2.031) + (5.005), (1.02) + (2.031) + (5.008), (1.02) + (2.031) + (5.009), (1.02) + (2.031) + (5.012), (1.02) + (2.031) + (5.013), (1.02) + (2.031) + (6.005), (1.02) + (2.031) + (7.005), (1.02) + (2.031) + (8.001), (1.02) + (2.031) + (9.002), (1.02) + (2.031) + (10.001), (1.02) + (2.031) + (10.002), (1.02) + (2.031) + (12.003), (1.02) + (2.031) + (12.004), (1.02) + (2.031) + (13.001), (1.02) + (2.031) + (13.004), (1.02) + (2.031) + (14.001), (1.02) + (2.031) + (15.025), (1.02) + (2.031) + (16.01),

(1.02) + (3.003) + (1.001), (1.02) + (3.003) + (1.002), (1.02) + (3.003) + (1.003), (1.02) + (3.003) + (1.015), (1.02) + (3.003) + (1.016), (1.02) + (3.003) + (1.017), (1.02) + (3.003) + (1.018), (1.02) + (3.003) + (1.024), (1.02) + (3.003) + (1.026), (1.02) + (3.003) + (1.027), (1.02) + (3.003) + (1.032), (1.02) + (3.003) + (1.033), (1.02) + (3.003) + (1.063), (1.02) + (3.003) + (1.067), (1.02) + (3.003) + (2.001), (1.02) + (3.003) + (2.002), (1.02) + (3.003) + (2.005), (1.02) + (3.003) + (2.007), (1.02) + (3.003) + (2.008), (1.02) + (3.003) + (2.010), (1.02) + (3.003) + (2.012), (1.02) + (3.003) + (2.014), (1.02) + (3.003) + (2.016), (1.02) + (3.003) + (2.018), (1.02) + (3.003) + (2.031), (1.02) + (3.003) + (3.011), (1.02) + (3.003) + (3.012), (1.02) + (3.003) + (3.014), (1.02) + (3.003) + (3.017), (1.02) + (3.003) + (3.019), (1.02) + (3.003) + (3.021), (1.02) + (3.003) + (3.022), (1.02) + (3.003) + (3.025), (1.02) + (3.003) + (4.007), (1.02) + (3.003) + (5.004), (1.02) + (3.003) + (5.005), (1.02) + (3.003) + (5.008), (1.02) + (3.003) + (5.009), (1.02) + (3.003) + (5.012), (1.02) + (3.003) + (5.013), (1.02) + (3.003) + (6.005), (1.02) + (3.003) + (7.005), (1.02) + (3.003) + (8.001), (1.02) + (3.003) + (9.002), (1.02) + (3.003) + (10.001), (1.02) + (3.003) + (10.002), (1.02) + (3.003) + (12.003), (1.02) + (3.003) + (12.004), (1.02) + (3.003) + (13.001), (1.02) + (3.003) + (13.004), (1.02) + (3.003) + (14.001), (1.02) + (3.003) + (15.025), (1.02) + (3.003) + (16.01),

(1.02) + (3.011) + (1.001), (1.02) + (3.011) + (1.002), (1.02) + (3.011) + (1.003), (1.02) + (3.011) + (1.015), (1.02) + (3.011) + (1.016), (1.02) + (3.011) + (1.017), (1.02) + (3.011) + (1.018), (1.02) + (3.011) + (1.024), (1.02) + (3.011) + (1.026), (1.02) + (3.011) + (1.027), (1.02) + (3.011) + (1.032), (1.02) + (3.011) + (1.033), (1.02) + (3.011) + (1.063), (1.02) + (3.011) + (1.067), (1.02) + (3.011) + (2.001), (1.02) + (3.011) + (2.002), (1.02) + (3.011) + (2.005), (1.02) + (3.011) + (2.007), (1.02) + (3.011) + (2.008), (1.02) + (3.011) + (2.010), (1.02) + (3.011) + (2.012), (1.02) + (3.011) + (2.014), (1.02) + (3.011) + (2.016), (1.02) + (3.011) + (2.018), (1.02) + (3.011) + (2.031), (1.02) + (3.011) + (3.003), (1.02) + (3.011) + (3.012), (1.02) + (3.011) + (3.014), (1.02) + (3.011) + (3.017), (1.02) + (3.011) + (3.019), (1.02) + (3.011) + (3.021), (1.02) + (3.011) + (3.022), (1.02) + (3.011) + (3.025), (1.02) + (3.011) + (4.007), (1.02) + (3.011) + (5.004), (1.02) + (3.011) + (5.005), (1.02) + (3.011) + (5.008), (1.02) + (3.011) + (5.009), (1.02) + (3.011) + (5.012), (1.02) + (3.011) + (5.013), (1.02) + (3.011) + (6.005), (1.02) + (3.011) + (7.005), (1.02) + (3.011) + (8.001), (1.02) + (3.011) + (9.002), (1.02) + (3.011) + (10.001), (1.02) + (3.011) + (10.002), (1.02) + (3.011) + (12.003), (1.02) + (3.011) + (12.004), (1.02) + (3.011) + (13.001), (1.02) + (3.011) + (13.004), (1.02) + (3.011) + (14.001), (1.02) + (3.011) + (15.025), (1.02) + (3.011) + (16.01),

(1.02) + (3.012) + (1.001), (1.02) + (3.012) + (1.002), (1.02) + (3.012) + (1.003), (1.02) + (3.012) + (1.015), (1.02) + (3.012) + (1.016), (1.02) + (3.012) + (1.017), (1.02) + (3.012) + (1.018), (1.02) + (3.012) + (1.024), (1.02) + (3.012) + (1.026), (1.02) + (3.012) + (1.027), (1.02) + (3.012) + (1.032), (1.02) + (3.012) + (1.033), (1.02) + (3.012) + (1.063), (1.02) + (3.012) + (1.067), (1.02) + (3.012) + (2.001), (1.02) + (3.012) + (2.002), (1.02) + (3.012) + (2.005), (1.02) + (3.012) + (2.007), (1.02) + (3.012) + (2.008), (1.02) + (3.012) + (2.010), (1.02) + (3.012) + (2.012), (1.02) + (3.012) + (2.014), (1.02) + (3.012) + (2.016), (1.02) + (3.012) + (2.018), (1.02) + (3.012) + (2.031), (1.02) + (3.012) + (3.003), (1.02) + (3.012) + (3.011), (1.02) + (3.012) + (3.014), (1.02) + (3.012) + (3.017), (1.02) + (3.012) + (3.019), (1.02) + (3.012) + (3.021), (1.02) + (3.012) + (3.022), (1.02) + (3.012) + (3.025), (1.02) + (3.012) + (4.007), (1.02) + (3.012) + (5.004), (1.02) + (3.012) + (5.005), (1.02) + (3.012) + (5.008), (1.02) + (3.012) + (5.009), (1.02) + (3.012) + (5.012), (1.02) + (3.012) + (5.013), (1.02) + (3.012) + (6.005), (1.02) + (3.012) + (7.005), (1.02) + (3.012) + (8.001), (1.02) + (3.012) + (9.002), (1.02) + (3.012) + (10.001), (1.02) + (3.012) + (10.002), (1.02) + (3.012) + (12.003), (1.02) + (3.012) + (12.004), (1.02) + (3.012) + (13.001), (1.02) + (3.012) + (13.004), (1.02) + (3.012) + (14.001), (1.02) + (3.012) + (15.025), (1.02) + (3.012) + (16.01),

(1.02) + (3.014) + (1.001), (1.02) + (3.014) + (1.002), (1.02) + (3.014) + (1.003), (1.02) + (3.014) + (1.015), (1.02) + (3.014) + (1.016), (1.02) + (3.014) + (1.017), (1.02) + (3.014) + (1.018), (1.02) + (3.014) + (1.024), (1.02) + (3.014) + (1.026), (1.02) + (3.014) + (1.027), (1.02) + (3.014) + (1.032), (1.02) + (3.014) + (1.033), (1.02) + (3.014) + (1.063), (1.02) + (3.014) + (1.067), (1.02) + (3.014) + (2.001), (1.02) + (3.014) + (2.002), (1.02) + (3.014) + (2.005), (1.02) + (3.014) + (2.007), (1.02) + (3.014) + (2.008), (1.02) + (3.014) + (2.010), (1.02) + (3.014) + (2.012), (1.02) + (3.014) + (2.014), (1.02) + (3.014) + (2.016), (1.02) + (3.014) + (2.018), (1.02) + (3.014) + (2.031), (1.02) + (3.014) + (3.003), (1.02) + (3.014) + (3.011), (1.02) + (3.014) + (3.012), (1.02) + (3.014) + (3.017), (1.02) + (3.014) + (3.019), (1.02) + (3.014) + (3.021), (1.02) + (3.014) + (3.022), (1.02) + (3.014) + (3.025), (1.02) + (3.014) + (4.007), (1.02) + (3.014)

+ (5.004), (1.02) + (3.014) + (5.005), (1.02) + (3.014) + (5.008), (1.02) + (3.014) + (5.009), (1.02) + (3.014) + (5.012), (1.02) + (3.014) + (5.013), (1.02) + (3.014) + (6.005), (1.02) + (3.014) + (7.005), (1.02) + (3.014) + (8.001), (1.02) + (3.014) + (9.002), (1.02) + (3.014) + (10.001), (1.02) + (3.014) + (10.002), (1.02) + (3.014) + (12.003), (1.02) + (3.014) + (12.004), (1.02) + (3.014) + (13.001), (1.02) + (3.014) + (13.004), (1.02) + (3.014) + (14.001), (1.02) + (3.014) + (15.025), (1.02) + (3.014) + (16.01),

(1.02) + (3.017) + (1.001), (1.02) + (3.017) + (1.002), (1.02) + (3.017) + (1.003), (1.02) + (3.017) + (1.015), (1.02) + (3.017) + (1.016), (1.02) + (3.017) + (1.017), (1.02) + (3.017) + (1.018), (1.02) + (3.017) + (1.024), (1.02) + (3.017) + (1.026), (1.02) + (3.017) + (1.027), (1.02) + (3.017) + (1.032), (1.02) + (3.017) + (1.033), (1.02) + (3.017) + (1.063), (1.02) + (3.017) + (1.067), (1.02) + (3.017) + (2.001), (1.02) + (3.017) + (2.002), (1.02) + (3.017) + (2.005), (1.02) + (3.017) + (2.007), (1.02) + (3.017) + (2.008), (1.02) + (3.017) + (2.010), (1.02) + (3.017) + (2.012), (1.02) + (3.017) + (2.014), (1.02) + (3.017) + (2.016), (1.02) + (3.017) + (2.018), (1.02) + (3.017) + (2.031), (1.02) + (3.017) + (3.003), (1.02) + (3.017) + (3.011), (1.02) + (3.017) + (3.012), (1.02) + (3.017) + (3.014), (1.02) + (3.017) + (3.019), (1.02) + (3.017) + (3.021), (1.02) + (3.017) + (3.022), (1.02) + (3.017) + (3.025), (1.02) + (3.017) + (4.007), (1.02) + (3.017) + (5.004), (1.02) + (3.017) + (5.005), (1.02) + (3.017) + (5.008), (1.02) + (3.017) + (5.009), (1.02) + (3.017) + (5.012), (1.02) + (3.017) + (5.013), (1.02) + (3.017) + (6.005), (1.02) + (3.017) + (7.005), (1.02) + (3.017) + (8.001), (1.02) + (3.017) + (9.002), (1.02) + (3.017) + (10.001), (1.02) + (3.017) + (10.002), (1.02) + (3.017) + (12.003), (1.02) + (3.017) + (12.004), (1.02) + (3.017) + (13.001), (1.02) + (3.017) + (13.004), (1.02) + (3.017) + (14.001), (1.02) + (3.017) + (15.025), (1.02) + (3.017) + (16.01),

(1.02) + (3.019) + (1.001), (1.02) + (3.019) + (1.002), (1.02) + (3.019) + (1.003), (1.02) + (3.019) + (1.015), (1.02) + (3.019) + (1.016), (1.02) + (3.019) + (1.017), (1.02) + (3.019) + (1.018), (1.02) + (3.019) + (1.024), (1.02) + (3.019) + (1.026), (1.02) + (3.019) + (1.027), (1.02) + (3.019) + (1.032), (1.02) + (3.019) + (1.033), (1.02) + (3.019) + (1.063), (1.02) + (3.019) + (1.067), (1.02) + (3.019) + (2.001), (1.02) + (3.019) + (2.002), (1.02) + (3.019) + (2.005), (1.02) + (3.019) + (2.007), (1.02) + (3.019) + (2.008), (1.02) + (3.019) + (2.010), (1.02) + (3.019) + (2.012), (1.02) + (3.019) + (2.014), (1.02) + (3.019) + (2.016), (1.02) + (3.019) + (2.018), (1.02) + (3.019) + (2.031), (1.02) + (3.019) + (3.003), (1.02) + (3.019) + (3.011), (1.02) + (3.019) + (3.012), (1.02) + (3.019) + (3.014), (1.02) + (3.019) + (3.017), (1.02) + (3.019) + (3.021), (1.02) + (3.019) + (3.022), (1.02) + (3.019) + (3.025), (1.02) + (3.019) + (4.007), (1.02) + (3.019) + (5.004), (1.02) + (3.019) + (5.005), (1.02) + (3.019) + (5.008), (1.02) + (3.019) + (5.009), (1.02) + (3.019) + (5.012), (1.02) + (3.019) + (5.013), (1.02) + (3.019) + (6.005), (1.02) + (3.019) + (7.005), (1.02) + (3.019) + (8.001), (1.02) + (3.019) + (9.002), (1.02) + (3.019) + (10.001), (1.02) + (3.019) + (10.002), (1.02) + (3.019) + (12.003), (1.02) + (3.019) + (12.004), (1.02) + (3.019) + (13.001), (1.02) + (3.019) + (13.004), (1.02) + (3.019) + (14.001), (1.02) + (3.019) + (15.025), (1.02) + (3.019) + (16.01),

(1.02) + (3.021) + (1.001), (1.02) + (3.021) + (1.002), (1.02) + (3.021) + (1.003), (1.02) + (3.021) + (1.015), (1.02) + (3.021) + (1.016), (1.02) + (3.021) + (1.017), (1.02) + (3.021) + (1.018), (1.02) + (3.021) + (1.024), (1.02) + (3.021) + (1.026), (1.02) + (3.021) + (1.027), (1.02) + (3.021) + (1.032), (1.02) + (3.021) + (1.033), (1.02) + (3.021) + (1.063), (1.02) + (3.021) + (1.067), (1.02) + (3.021) + (2.001), (1.02) + (3.021) + (2.002), (1.02) + (3.021) + (2.005), (1.02) + (3.021) + (2.007), (1.02) + (3.021) + (2.008), (1.02) + (3.021) + (2.010), (1.02) + (3.021) + (2.012), (1.02) + (3.021) + (2.014), (1.02) + (3.021) + (2.016), (1.02) + (3.021) + (2.018), (1.02) + (3.021) + (2.031), (1.02) + (3.021) + (3.003), (1.02) + (3.021) + (3.011), (1.02) + (3.021) + (3.012), (1.02) + (3.021) + (3.014), (1.02) + (3.021) + (3.017), (1.02) + (3.021) + (3.019), (1.02) + (3.021) + (3.022), (1.02) + (3.021) + (3.025), (1.02) + (3.021) + (4.007), (1.02) + (3.021) + (5.004), (1.02) + (3.021) + (5.005), (1.02) + (3.021) + (5.008), (1.02) + (3.021) + (5.009), (1.02) + (3.021) + (5.012), (1.02) + (3.021) + (5.013), (1.02) + (3.021) + (6.005), (1.02) + (3.021) + (7.005), (1.02) + (3.021) + (8.001), (1.02) + (3.021) + (9.002), (1.02) + (3.021) + (10.001), (1.02) + (3.021) + (10.002), (1.02) + (3.021) + (12.003), (1.02) + (3.021) + (12.004), (1.02) + (3.021) + (13.001), (1.02) + (3.021) + (13.004), (1.02) + (3.021) + (14.001), (1.02) + (3.021) + (15.025), (1.02) + (3.021) + (16.01),

(1.02) + (3.022) + (1.001), (1.02) + (3.022) + (1.002), (1.02) + (3.022) + (1.003), (1.02) + (3.022) + (1.015), (1.02) + (3.022) + (1.016), (1.02) + (3.022) + (1.017), (1.02) + (3.022) + (1.018), (1.02) + (3.022) + (1.024), (1.02) + (3.022) + (1.026), (1.02) + (3.022) + (1.027), (1.02) + (3.022) + (1.032), (1.02) + (3.022) + (1.033), (1.02) + (3.022) + (1.063), (1.02) + (3.022) + (1.067), (1.02) + (3.022) + (2.001), (1.02) + (3.022) + (2.002), (1.02) + (3.022) + (2.005), (1.02) + (3.022) + (2.007), (1.02) + (3.022) + (2.008), (1.02) + (3.022) + (2.010), (1.02) + (3.022) + (2.012), (1.02) + (3.022) + (2.014), (1.02) + (3.022) + (2.016), (1.02) + (3.022) + (2.018), (1.02) + (3.022) + (2.031), (1.02) + (3.022) + (3.003), (1.02) + (3.022) + (3.011), (1.02) + (3.022) + (3.012), (1.02) + (3.022) + (3.014), (1.02) + (3.022) + (3.017), (1.02) + (3.022) + (3.019), (1.02) + (3.022) + (3.021), (1.02) + (3.022) + (3.025), (1.02) + (3.022) + (4.007), (1.02) + (3.022) + (5.004), (1.02) + (3.022) + (5.005), (1.02) + (3.022) + (5.008), (1.02) + (3.022) + (5.009), (1.02) + (3.022) + (5.012), (1.02) + (3.022) + (5.013), (1.02) + (3.022) + (6.005), (1.02) + (3.022) + (7.005), (1.02) + (3.022) + (8.001), (1.02)

+ (3.022) + (9.002), (1.02) + (3.022) + (10.001), (1.02) + (3.022) + (10.002), (1.02) + (3.022) + (12.003), (1.02) + (3.022) + (12.004), (1.02) + (3.022) + (13.001), (1.02) + (3.022) + (13.004), (1.02) + (3.022) + (14.001), (1.02) + (3.022) + (15.025), (1.02) + (3.022) + (16.01),

(1.02) + (3.025) + (1.001), (1.02) + (3.025) + (1.002), (1.02) + (3.025) + (1.003), (1.02) + (3.025) + (1.015), (1.02) + (3.025) + (1.016), (1.02) + (3.025) + (1.017), (1.02) + (3.025) + (1.018), (1.02) + (3.025) + (1.024), (1.02) + (3.025) + (1.026), (1.02) + (3.025) + (1.027), (1.02) + (3.025) + (1.032), (1.02) + (3.025) + (1.033), (1.02) + (3.025) + (1.063), (1.02) + (3.025) + (1.067), (1.02) + (3.025) + (2.001), (1.02) + (3.025) + (2.002), (1.02) + (3.025) + (2.005), (1.02) + (3.025) + (2.007), (1.02) + (3.025) + (2.008), (1.02) + (3.025) + (2.010), (1.02) + (3.025) + (2.012), (1.02) + (3.025) + (2.014), (1.02) + (3.025) + (2.016), (1.02) + (3.025) + (2.018), (1.02) + (3.025) + (2.031), (1.02) + (3.025) + (3.003), (1.02) + (3.025) + (3.011), (1.02) + (3.025) + (3.012), (1.02) + (3.025) + (3.014), (1.02) + (3.025) + (3.017), (1.02) + (3.025) + (3.019), (1.02) + (3.025) + (3.021), (1.02) + (3.025) + (3.022), (1.02) + (3.025) + (4.007), (1.02) + (3.025) + (5.004), (1.02) + (3.025) + (5.005), (1.02) + (3.025) + (5.008), (1.02) + (3.025) + (5.009), (1.02) + (3.025) + (5.012), (1.02) + (3.025) + (5.013), (1.02) + (3.025) + (6.005), (1.02) + (3.025) + (7.005), (1.02) + (3.025) + (8.001), (1.02) + (3.025) + (9.002), (1.02) + (3.025) + (10.001), (1.02) + (3.025) + (10.002), (1.02) + (3.025) + (12.003), (1.02) + (3.025) + (12.004), (1.02) + (3.025) + (13.001), (1.02) + (3.025) + (13.004), (1.02) + (3.025) + (14.001), (1.02) + (3.025) + (15.025), (1.02) + (3.025) + (16.01),

(1.02) + (4.007) + (1.001), (1.02) + (4.007) + (1.002), (1.02) + (4.007) + (1.003), (1.02) + (4.007) + (1.015), (1.02) + (4.007) + (1.016), (1.02) + (4.007) + (1.017), (1.02) + (4.007) + (1.018), (1.02) + (4.007) + (1.024), (1.02) + (4.007) + (1.026), (1.02) + (4.007) + (1.027), (1.02) + (4.007) + (1.032), (1.02) + (4.007) + (1.033), (1.02) + (4.007) + (1.063), (1.02) + (4.007) + (1.067), (1.02) + (4.007) + (2.001), (1.02) + (4.007) + (2.002), (1.02) + (4.007) + (2.005), (1.02) + (4.007) + (2.007), (1.02) + (4.007) + (2.008), (1.02) + (4.007) + (2.010), (1.02) + (4.007) + (2.012), (1.02) + (4.007) + (2.014), (1.02) + (4.007) + (2.016), (1.02) + (4.007) + (2.018), (1.02) + (4.007) + (2.031), (1.02) + (4.007) + (3.003), (1.02) + (4.007) + (3.011), (1.02) + (4.007) + (3.012), (1.02) + (4.007) + (3.014), (1.02) + (4.007) + (3.017), (1.02) + (4.007) + (3.019), (1.02) + (4.007) + (3.021), (1.02) + (4.007) + (3.022), (1.02) + (4.007) + (3.025), (1.02) + (4.007) + (5.004), (1.02) + (4.007) + (5.005), (1.02) + (4.007) + (5.008), (1.02) + (4.007) + (5.009), (1.02) + (4.007) + (5.012), (1.02) + (4.007) + (5.013), (1.02) + (4.007) + (6.005), (1.02) + (4.007) + (7.005), (1.02) + (4.007) + (8.001), (1.02) + (4.007) + (9.002), (1.02) + (4.007) + (10.001), (1.02) + (4.007) + (10.002), (1.02) + (4.007) + (12.003), (1.02) + (4.007) + (12.004), (1.02) + (4.007) + (13.001), (1.02) + (4.007) + (13.004), (1.02) + (4.007) + (14.001), (1.02) + (4.007) + (15.025), (1.02) + (4.007) + (16.01),

(1.02) + (5.004) + (1.001), (1.02) + (5.004) + (1.002), (1.02) + (5.004) + (1.003), (1.02) + (5.004) + (1.015), (1.02) + (5.004) + (1.016), (1.02) + (5.004) + (1.017), (1.02) + (5.004) + (1.018), (1.02) + (5.004) + (1.024), (1.02) + (5.004) + (1.026), (1.02) + (5.004) + (1.027), (1.02) + (5.004) + (1.032), (1.02) + (5.004) + (1.033), (1.02) + (5.004) + (1.063), (1.02) + (5.004) + (1.067), (1.02) + (5.004) + (2.001), (1.02) + (5.004) + (2.002), (1.02) + (5.004) + (2.005), (1.02) + (5.004) + (2.007), (1.02) + (5.004) + (2.008), (1.02) + (5.004) + (2.010), (1.02) + (5.004) + (2.012), (1.02) + (5.004) + (2.014), (1.02) + (5.004) + (2.016), (1.02) + (5.004) + (2.018), (1.02) + (5.004) + (2.031), (1.02) + (5.004) + (3.003), (1.02) + (5.004) + (3.011), (1.02) + (5.004) + (3.012), (1.02) + (5.004) + (3.014), (1.02) + (5.004) + (3.017), (1.02) + (5.004) + (3.019), (1.02) + (5.004) + (3.021), (1.02) + (5.004) + (3.022), (1.02) + (5.004) + (3.025), (1.02) + (5.004) + (4.007), (1.02) + (5.004) + (5.005), (1.02) + (5.004) + (5.008), (1.02) + (5.004) + (5.009), (1.02) + (5.004) + (5.012), (1.02) + (5.004) + (5.013), (1.02) + (5.004) + (6.005), (1.02) + (5.004) + (7.005), (1.02) + (5.004) + (8.001), (1.02) + (5.004) + (9.002), (1.02) + (5.004) + (10.001), (1.02) + (5.004) + (10.002), (1.02) + (5.004) + (12.003), (1.02) + (5.004) + (12.004), (1.02) + (5.004) + (13.001), (1.02) + (5.004) + (13.004), (1.02) + (5.004) + (14.001), (1.02) + (5.004) + (15.025), (1.02) + (5.004) + (16.01),

(1.02) + (5.005) + (1.001), (1.02) + (5.005) + (1.002), (1.02) + (5.005) + (1.003), (1.02) + (5.005) + (1.015), (1.02) + (5.005) + (1.016), (1.02) + (5.005) + (1.017), (1.02) + (5.005) + (1.018), (1.02) + (5.005) + (1.024), (1.02) + (5.005) + (1.026), (1.02) + (5.005) + (1.027), (1.02) + (5.005) + (1.032), (1.02) + (5.005) + (1.033), (1.02) + (5.005) + (1.063), (1.02) + (5.005) + (1.067), (1.02) + (5.005) + (2.001), (1.02) + (5.005) + (2.002), (1.02) + (5.005) + (2.005), (1.02) + (5.005) + (2.007), (1.02) + (5.005) + (2.008), (1.02) + (5.005) + (2.010), (1.02) + (5.005) + (2.012), (1.02) + (5.005) + (2.014), (1.02) + (5.005) + (2.016), (1.02) + (5.005) + (2.018), (1.02) + (5.005) + (2.031), (1.02) + (5.005) + (3.003), (1.02) + (5.005) + (3.011), (1.02) + (5.005) + (3.012), (1.02) + (5.005) + (3.014), (1.02) + (5.005) + (3.017), (1.02) + (5.005) + (3.019), (1.02) + (5.005) + (3.021), (1.02) + (5.005) + (3.022), (1.02) + (5.005) + (3.025), (1.02) + (5.005) + (4.007), (1.02) + (5.005) + (5.004), (1.02) + (5.005) + (5.008), (1.02) + (5.005) + (5.009), (1.02) + (5.005) + (5.012), (1.02) + (5.005) + (5.013), (1.02) + (5.005) + (6.005), (1.02) + (5.005) + (7.005), (1.02) + (5.005) + (8.001), (1.02) + (5.005) + (9.002), (1.02) + (5.005) + (10.001), (1.02) + (5.005) + (10.002), (1.02) + (5.005) + (12.003), (1.02) + (5.005) + (12.004), (1.02) + (5.005) + (13.001), (1.02) + (5.005) + (13.004), (1.02) + (5.005) + (14.001), (1.02) +

(5.005) + (15.025), (1.02) + (5.005) + (16.01),

(1.02) + (5.008) + (1.001), (1.02) + (5.008) + (1.002), (1.02) + (5.008) + (1.003), (1.02) + (5.008) + (1.015), (1.02) + (5.008) + (1.016), (1.02) + (5.008) + (1.017), (1.02) + (5.008) + (1.018), (1.02) + (5.008) + (1.024), (1.02) + (5.008) + (1.026), (1.02) + (5.008) + (1.027), (1.02) + (5.008) + (1.032), (1.02) + (5.008) + (1.033), (1.02) + (5.008) + (1.063), (1.02) + (5.008) + (1.067), (1.02) + (5.008) + (2.001), (1.02) + (5.008) + (2.002), (1.02) + (5.008) + (2.005), (1.02) + (5.008) + (2.007), (1.02) + (5.008) + (2.008), (1.02) + (5.008) + (2.010), (1.02) + (5.008) + (2.012), (1.02) + (5.008) + (2.014), (1.02) + (5.008) + (2.016), (1.02) + (5.008) + (2.018), (1.02) + (5.008) + (2.031), (1.02) + (5.008) + (3.003), (1.02) + (5.008) + (3.011), (1.02) + (5.008) + (3.012), (1.02) + (5.008) + (3.014), (1.02) + (5.008) + (3.017), (1.02) + (5.008) + (3.019), (1.02) + (5.008) + (3.021), (1.02) + (5.008) + (3.022), (1.02) + (5.008) + (3.025), (1.02) + (5.008) + (4.007), (1.02) + (5.008) + (5.004), (1.02) + (5.008) + (5.005), (1.02) + (5.008) + (5.009), (1.02) + (5.008) + (5.012), (1.02) + (5.008) + (5.013), (1.02) + (5.008) + (6.005), (1.02) + (5.008) + (7.005), (1.02) + (5.008) + (8.001), (1.02) + (5.008) + (9.002), (1.02) + (5.008) + (10.001), (1.02) + (5.008) + (10.002), (1.02) + (5.008) + (12.003), (1.02) + (5.008) + (12.004), (1.02) + (5.008) + (13.001), (1.02) + (5.008) + (13.004), (1.02) + (5.008) + (14.001), (1.02) + (5.008) + (15.025), (1.02) + (5.008) + (16.01),

(1.02) + (5.009) + (1.001), (1.02) + (5.009) + (1.002), (1.02) + (5.009) + (1.003), (1.02) + (5.009) + (1.015), (1.02) + (5.009) + (1.016), (1.02) + (5.009) + (1.017), (1.02) + (5.009) + (1.018), (1.02) + (5.009) + (1.024), (1.02) + (5.009) + (1.026), (1.02) + (5.009) + (1.027), (1.02) + (5.009) + (1.032), (1.02) + (5.009) + (1.033), (1.02) + (5.009) + (1.063), (1.02) + (5.009) + (1.067), (1.02) + (5.009) + (2.001), (1.02) + (5.009) + (2.002), (1.02) + (5.009) + (2.005), (1.02) + (5.009) + (2.007), (1.02) + (5.009) + (2.008), (1.02) + (5.009) + (2.010), (1.02) + (5.009) + (2.012), (1.02) + (5.009) + (2.014), (1.02) + (5.009) + (2.016), (1.02) + (5.009) + (2.018), (1.02) + (5.009) + (2.031), (1.02) + (5.009) + (3.003), (1.02) + (5.009) + (3.011), (1.02) + (5.009) + (3.012), (1.02) + (5.009) + (3.014), (1.02) + (5.009) + (3.017), (1.02) + (5.009) + (3.019), (1.02) + (5.009) + (3.021), (1.02) + (5.009) + (3.022), (1.02) + (5.009) + (3.025), (1.02) + (5.009) + (4.007), (1.02) + (5.009) + (5.004), (1.02) + (5.009) + (5.005), (1.02) + (5.009) + (5.008), (1.02) + (5.009) + (5.012), (1.02) + (5.009) + (5.013), (1.02) + (5.009) + (6.005), (1.02) + (5.009) + (7.005), (1.02) + (5.009) + (8.001), (1.02) + (5.009) + (9.002), (1.02) + (5.009) + (10.001), (1.02) + (5.009) + (10.002), (1.02) + (5.009) + (12.003), (1.02) + (5.009) + (12.004), (1.02) + (5.009) + (13.001), (1.02) + (5.009) + (13.004), (1.02) + (5.009) + (14.001), (1.02) + (5.009) + (15.025), (1.02) + (5.009) + (16.01),

(1.02) + (5.012) + (1.001), (1.02) + (5.012) + (1.002), (1.02) + (5.012) + (1.003), (1.02) + (5.012) + (1.015), (1.02) + (5.012) + (1.016), (1.02) + (5.012) + (1.017), (1.02) + (5.012) + (1.018), (1.02) + (5.012) + (1.024), (1.02) + (5.012) + (1.026), (1.02) + (5.012) + (1.027), (1.02) + (5.012) + (1.032), (1.02) + (5.012) + (1.033), (1.02) + (5.012) + (1.063), (1.02) + (5.012) + (1.067), (1.02) + (5.012) + (2.001), (1.02) + (5.012) + (2.002), (1.02) + (5.012) + (2.005), (1.02) + (5.012) + (2.007), (1.02) + (5.012) + (2.008), (1.02) + (5.012) + (2.010), (1.02) + (5.012) + (2.012), (1.02) + (5.012) + (2.014), (1.02) + (5.012) + (2.016), (1.02) + (5.012) + (2.018), (1.02) + (5.012) + (2.031), (1.02) + (5.012) + (3.003), (1.02) + (5.012) + (3.011), (1.02) + (5.012) + (3.012), (1.02) + (5.012) + (3.014), (1.02) + (5.012) + (3.017), (1.02) + (5.012) + (3.019), (1.02) + (5.012) + (3.021), (1.02) + (5.012) + (3.022), (1.02) + (5.012) + (3.025), (1.02) + (5.012) + (4.007), (1.02) + (5.012) + (5.004), (1.02) + (5.012) + (5.005), (1.02) + (5.012) + (5.008), (1.02) + (5.012) + (5.009), (1.02) + (5.012) + (5.013), (1.02) + (5.012) + (6.005), (1.02) + (5.012) + (7.005), (1.02) + (5.012) + (8.001), (1.02) + (5.012) + (9.002), (1.02) + (5.012) + (10.001), (1.02) + (5.012) + (10.002), (1.02) + (5.012) + (12.003), (1.02) + (5.012) + (12.004), (1.02) + (5.012) + (13.001), (1.02) + (5.012) + (13.004), (1.02) + (5.012) + (14.001), (1.02) + (5.012) + (15.025), (1.02) + (5.012) + (16.01),

(1.02) + (5.013) + (1.001), (1.02) + (5.013) + (1.002), (1.02) + (5.013) + (1.003), (1.02) + (5.013) + (1.015), (1.02) + (5.013) + (1.016), (1.02) + (5.013) + (1.017), (1.02) + (5.013) + (1.018), (1.02) + (5.013) + (1.024), (1.02) + (5.013) + (1.026), (1.02) + (5.013) + (1.027), (1.02) + (5.013) + (1.032), (1.02) + (5.013) + (1.033), (1.02) + (5.013) + (1.063), (1.02) + (5.013) + (1.067), (1.02) + (5.013) + (2.001), (1.02) + (5.013) + (2.002), (1.02) + (5.013) + (2.005), (1.02) + (5.013) + (2.007), (1.02) + (5.013) + (2.008), (1.02) + (5.013) + (2.010), (1.02) + (5.013) + (2.012), (1.02) + (5.013) + (2.014), (1.02) + (5.013) + (2.016), (1.02) + (5.013) + (2.018), (1.02) + (5.013) + (2.031), (1.02) + (5.013) + (3.003), (1.02) + (5.013) + (3.011), (1.02) + (5.013) + (3.012), (1.02) + (5.013) + (3.014), (1.02) + (5.013) + (3.017), (1.02) + (5.013) + (3.019), (1.02) + (5.013) + (3.021), (1.02) + (5.013) + (3.022), (1.02) + (5.013) + (3.025), (1.02) + (5.013) + (4.007), (1.02) + (5.013) + (5.004), (1.02) + (5.013) + (5.005), (1.02) + (5.013) + (5.008), (1.02) + (5.013) + (5.009), (1.02) + (5.013) + (5.012), (1.02) + (5.013) + (6.005), (1.02) + (5.013) + (7.005), (1.02) + (5.013) + (8.001), (1.02) + (5.013) + (9.002), (1.02) + (5.013) + (10.001), (1.02) + (5.013) + (10.002), (1.02) + (5.013) + (12.003), (1.02) + (5.013) + (12.004), (1.02) + (5.013) + (13.001), (1.02) + (5.013) + (13.004), (1.02) + (5.013) + (14.001), (1.02) + (5.013) + (15.025), (1.02) + (5.013) + (16.01),

(1.02) + (6.005) + (1.001), (1.02) + (6.005) + (1.002), (1.02) + (6.005) + (1.003), (1.02) + (6.005) + (1.015), (1.02) + (6.005) + (1.016), (1.02) + (6.005) + (1.017), (1.02) + (6.005) + (1.018), (1.02) + (6.005) + (1.024), (1.02) + (6.005) + (1.026), (1.02) + (6.005) + (1.027), (1.02) + (6.005) + (1.032), (1.02) + (6.005) + (1.033), (1.02) + (6.005) + (1.063), (1.02) + (6.005) + (1.067), (1.02) + (6.005) + (2.001), (1.02) + (6.005) + (2.002), (1.02) + (6.005) + (2.005), (1.02) + (6.005) + (2.007), (1.02) + (6.005) + (2.008), (1.02) + (6.005) + (2.010), (1.02) + (6.005) + (2.012), (1.02) + (6.005) + (2.014), (1.02) + (6.005) + (2.016), (1.02) + (6.005) + (2.018), (1.02) + (6.005) + (2.031), (1.02) + (6.005) + (3.003), (1.02) + (6.005) + (3.011), (1.02) + (6.005) + (3.012), (1.02) + (6.005) + (3.014), (1.02) + (6.005) + (3.017), (1.02) + (6.005) + (3.019), (1.02) + (6.005) + (3.021), (1.02) + (6.005) + (3.022), (1.02) + (6.005) + (3.025), (1.02) + (6.005) + (4.007), (1.02) + (6.005) + (5.004), (1.02) + (6.005) + (5.005), (1.02) + (6.005) + (5.008), (1.02) + (6.005) + (5.009), (1.02) + (6.005) + (5.012), (1.02) + (6.005) + (5.013), (1.02) + (6.005) + (7.005), (1.02) + (6.005) + (8.001), (1.02) + (6.005) + (9.002), (1.02) + (6.005) + (10.001), (1.02) + (6.005) + (10.002), (1.02) + (6.005) + (12.003), (1.02) + (6.005) + (12.004), (1.02) + (6.005) + (13.001), (1.02) + (6.005) + (13.004), (1.02) + (6.005) + (14.001), (1.02) + (6.005) + (15.025), (1.02) + (6.005) + (16.01),

(I.02) + (7.005) + (1.001), (1.02) + (7.005) + (1.002), (1.02) + (7.005) + (1.003), (1.02) + (7.005) + (1.015), (I.02) + (7.005) + (1.016), (1.02) + (7.005) + (1.017), (1.02) + (7.005) + (1.018), (1.02) + (7.005) + (1.024), (I.02) + (7.005) + (1.026), (1.02) + (7.005) + (1.027), (1.02) + (7.005) + (1.032), (1.02) + (7.005) + (1.033), (I.02) + (7.005) + (1.063), (1.02) + (7.005) + (1.067), (1.02) + (7.005) + (2.001), (1.02) + (7.005) + (2.002), (I.02) + (7.005) + (2.005), (1.02) + (7.005) + (2.007), (1.02) + (7.005) + (2.008), (1.02) + (7.005) + (2.010), (I.02) + (7.005) + (2.012), (1.02) + (7.005) + (2.014), (1.02) + (7.005) + (2.016), (1.02) + (7.005) + (2.018), (I.02) + (7.005) + (2.031), (1.02) + (7.005) + (3.003), (1.02) + (7.005) + (3.011), (1.02) + (7.005) + (3.012), (I.02) + (7.005) + (3.014), (1.02) + (7.005) + (3.017), (1.02) + (7.005) + (3.019), (1.02) + (7.005) + (3.021), (I.02) + (7.005) + (3.022), (1.02) + (7.005) + (3.025), (1.02) + (7.005) + (4.007), (1.02) + (7.005) + (5.004), (I.02) + (7.005) + (5.005), (1.02) + (7.005) + (5.008), (1.02) + (7.005) + (5.009), (1.02) + (7.005) + (5.012), (I.02) + (7.005) + (5.013), (1.02) + (7.005) + (6.005), (1.02) + (7.005) + (8.001), (1.02) + (7.005) + (9.002), (I.02) + (7.005) + (10.001), (1.02) + (7.005) + (10.002), (1.02) + (7.005) + (12.003), (1.02) + (7.005) + (12.004), (1.02) + (7.005) + (13.001), (1.02) + (7.005) + (13.004), (1.02) + (7.005) + (14.001), (1.02) + (7.005) + (15.025), (1.02) + (7.005) + (16.01),

(I.02) + (8.001) + (1.001), (1.02) + (8.001) + (1.002), (1.02) + (8.001) + (1.003), (1.02) + (8.001) + (1.015), (I.02) + (8.001) + (1.016), (1.02) + (8.001) + (1.017), (1.02) + (8.001) + (1.018), (1.02) + (8.001) + (1.024), (I.02) + (8.001) + (1.026), (1.02) + (8.001) + (1.027), (1.02) + (8.001) + (1.032), (1.02) + (8.001) + (1.033), (I.02) + (8.001) + (1.063), (1.02) + (8.001) + (1.067), (1.02) + (8.001) + (2.001), (1.02) + (8.001) + (2.002), (I.02) + (8.001) + (2.005), (1.02) + (8.001) + (2.007), (1.02) + (8.001) + (2.008), (1.02) + (8.001) + (2.010), (I.02) + (8.001) + (2.012), (1.02) + (8.001) + (2.014), (1.02) + (8.001) + (2.016), (1.02) + (8.001) + (2.018), (I.02) + (8.001) + (2.031), (1.02) + (8.001) + (3.003), (1.02) + (8.001) + (3.011), (1.02) + (8.001) + (3.012), (I.02) + (8.001) + (3.014), (1.02) + (8.001) + (3.017), (1.02) + (8.001) + (3.019), (1.02) + (8.001) + (3.021), (I.02) + (8.001) + (3.022), (1.02) + (8.001) + (3.025), (1.02) + (8.001) + (4.007), (1.02) + (8.001) + (5.004), (I.02) + (8.001) + (5.005), (1.02) + (8.001) + (5.008), (1.02) + (8.001) + (5.009), (1.02) + (8.001) + (5.012), (I.02) + (8.001) + (5.013), (1.02) + (8.001) + (6.005), (1.02) + (8.001) + (7.005), (1.02) + (8.001) + (9.002), (I.02) + (8.001) + (10.001), (1.02) + (8.001) + (10.002), (1.02) + (8.001) + (12.003), (1.02) + (8.001) + (12.004), (1.02) + (8.001) + (13.001), (1.02) + (8.001) + (13.004), (1.02) + (8.001) + (14.001), (1.02) + (8.001) + (15.025), (1.02) + (8.001) + (16.01),

(I.02) + (9.002) + (1.001), (1.02) + (9.002) + (1.002), (1.02) + (9.002) + (1.003), (1.02) + (9.002) + (1.015), (I.02) + (9.002) + (1.016), (1.02) + (9.002) + (1.017), (1.02) + (9.002) + (1.018), (1.02) + (9.002) + (1.024), (I.02) + (9.002) + (1.026), (1.02) + (9.002) + (1.027), (1.02) + (9.002) + (1.032), (1.02) + (9.002) + (1.033), (I.02) + (9.002) + (1.063), (1.02) + (9.002) + (1.067), (1.02) + (9.002) + (2.001), (1.02) + (9.002) + (2.002), (I.02) + (9.002) + (2.005), (1.02) + (9.002) + (2.007), (1.02) + (9.002) + (2.008), (1.02) + (9.002) + (2.010), (I.02) + (9.002) + (2.012), (1.02) + (9.002) + (2.014), (1.02) + (9.002) + (2.016), (1.02) + (9.002) + (2.018), (I.02) + (9.002) + (2.031), (1.02) + (9.002) + (3.003), (1.02) + (9.002) + (3.011), (1.02) + (9.002) + (3.012), (I.02) + (9.002) + (3.014), (1.02) + (9.002) + (3.017), (1.02) + (9.002) + (3.019), (1.02) + (9.002) + (3.021), (I.02) + (9.002) + (3.022), (1.02) + (9.002) + (3.025), (1.02) + (9.002) + (4.007), (1.02) + (9.002) + (5.004), (I.02) + (9.002) + (5.005), (1.02) + (9.002) + (5.008), (1.02) + (9.002) + (5.009), (1.02) + (9.002) + (5.012), (I.02) + (9.002) + (5.013), (1.02) + (9.002) + (6.005), (1.02) + (9.002) + (7.005), (1.02) + (9.002) + (8.001), (I.02) + (9.002) + (10.001), (1.02) + (9.002) + (10.002), (1.02) + (9.002) + (12.003), (1.02) + (9.002) + (12.004), (1.02) + (9.002) + (13.001), (1.02) + (9.002) + (13.004), (1.02) + (9.002) + (14.001), (1.02) + (9.002) + (15.025), (1.02) + (9.002) + (16.01),

(I.02) + (10.001) + (1.001), (1.02) + (10.001) + (1.002), (1.02) + (10.001) + (1.003), (1.02) + (10.001) + (1.015), (1.02) + (10.001) + (1.016), (1.02) + (10.001) + (1.017), (1.02) + (10.001) + (1.018), (1.02) + (10.001) + (1.024),

(1.02) + (10.001) + (1.026), (1.02) + (10.001) + (1.027), (1.02) + (10.001) + (1.032), (1.02) + (10.001) + (1.033), (1.02) + (10.001) + (1.063), (1.02) + (10.001) + (1.067), (1.02) + (10.001) + (2.001), (1.02) + (10.001) + (2.002), (1.02) + (10.001) + (2.005), (1.02) + (10.001) + (2.007), (1.02) + (10.001) + (2.008), (I.02) + (10.001) + (2.010), (1.02) + (10.001) + (2.012), (1.02) + (10.001) + (2.014), (1.02) + (10.001) + (2.016), (1.02) + (10.001) + (2.018), (1.02) + (10.001) + (2.031), (1.02) + (10.001) + (3.003), (1.02) + (10.001) + (3.011), (1.02) + (10.001) + (3.012), (1.02) + (10.001) + (3.014), (1.02) + (10.001) + (3.017), (1.02) + (10.001) + (3.019), (1.02) + (10.001) + (3.021), (1.02) + (10.001) + (3.022), (1.02) + (10.001) + (3.025), (1.02) + (10.001) + (4.007), (1.02) + (10.001) + (5.004), (1.02) + (10.001) + (5.005), (1.02) + (10.001) + (5.008), (I.02) + (10.001) + (5.009), (1.02) + (10.001) + (5.012), (1.02) + (10.001) + (5.013), (1.02) + (10.001) + (6.005), (1.02) + (10.001) + (7.005), (1.02) + (10.001) + (8.001), (1.02) + (10.001) + (9.002), (1.02) + (10.001) + (10.002), (1.02) + (10.001) + (12.003), (1.02) + (10.001) + (12.004), (1.02) + (10.001) + (13.001), (1.02) + (10.001) + (13.004), (1.02) + (10.001) + (14.001), (1.02) + (10.001) + (15.025), (1.02) + (10.001) + (16.01),

(I.02) + (10.002) + (1.001), (1.02) + (10.002) + (1.002), (1.02) + (10.002) + (1.003), (1.02) + (10.002) + (1.015), (1.02) + (10.002) + (1.016), (1.02) + (10.002) + (1.017), (1.02) + (10.002) + (1.018), (1.02) + (10.002) + (1.024), (1.02) + (10.002) + (1.026), (1.02) + (10.002) + (1.027), (1.02) + (10.002) + (1.032), (1.02) + (10.002) + (1.033), (1.02) + (10.002) + (1.063), (1.02) + (10.002) + (1.067), (1.02) + (10.002) + (2.001), (1.02) + (10.002) + (2.002), (1.02) + (10.002) + (2.005), (1.02) + (10.002) + (2.007), (1.02) + (10.002) + (2.008), (I.02) + (10.002) + (2.010), (1.02) + (10.002) + (2.012), (1.02) + (10.002) + (2.014), (1.02) + (10.002) + (2.016), (1.02) + (10.002) + (2.018), (1.02) + (10.002) + (2.031), (1.02) + (10.002) + (3.003), (1.02) + (10.002) + (3.011), (1.02) + (10.002) + (3.012), (1.02) + (10.002) + (3.014), (1.02) + (10.002) + (3.017), (1.02) + (10.002) + (3.019), (1.02) + (10.002) + (3.021), (1.02) + (10.002) + (3.022), (1.02) + (10.002) + (3.025), (1.02) + (10.002) + (4.007), (1.02) + (10.002) + (5.004), (1.02) + (10.002) + (5.005), (1.02) + (10.002) + (5.008), (I.02) + (10.002) + (5.009), (1.02) + (10.002) + (5.012), (1.02) + (10.002) + (5.013), (1.02) + (10.002) + (6.005), (1.02) + (10.002) + (7.005), (1.02) + (10.002) + (8.001), (1.02) + (10.002) + (9.002), (1.02) + (10.002) + (10.001), (1.02) + (10.002) + (12.003), (1.02) + (10.002) + (12.004), (1.02) + (10.002) + (13.001), (1.02) + (10.002) + (13.004), (1.02) + (10.002) + (14.001), (1.02) + (10.002) + (15.025), (1.02) + (10.002) + (16.01),

(I.02) + (12.003) + (1.001), (1.02) + (12.003) + (1.002), (1.02) + (12.003) + (1.003), (1.02) + (12.003) + (1.015), (1.02) + (12.003) + (1.016), (1.02) + (12.003) + (1.017), (1.02) + (12.003) + (1.018), (1.02) + (12.003) + (1.024), (1.02) + (12.003) + (1.026), (1.02) + (12.003) + (1.027), (1.02) + (12.003) + (1.032), (1.02) + (12.003) + (1.033), (1.02) + (12.003) + (1.063), (1.02) + (12.003) + (1.067), (1.02) + (12.003) + (2.001), (1.02) + (12.003) + (2.002), (1.02) + (12.003) + (2.005), (1.02) + (12.003) + (2.007), (1.02) + (12.003) + (2.008), (I.02) + (12.003) + (2.010), (1.02) + (12.003) + (2.012), (1.02) + (12.003) + (2.014), (1.02) + (12.003) + (2.016), (1.02) + (12.003) + (2.018), (1.02) + (12.003) + (2.031), (1.02) + (12.003) + (3.003), (1.02) + (12.003) + (3.011), (1.02) + (12.003) + (3.012), (1.02) + (12.003) + (3.014), (1.02) + (12.003) + (3.017), (1.02) + (12.003) + (3.019), (1.02) + (12.003) + (3.021), (1.02) + (12.003) + (3.022), (1.02) + (12.003) + (3.025), (1.02) + (12.003) + (4.007), (1.02) + (12.003) + (5.004), (1.02) + (12.003) + (5.005), (1.02) + (12.003) + (5.008), (I.02) + (12.003) + (5.009), (1.02) + (12.003) + (5.012), (1.02) + (12.003) + (5.013), (1.02) + (12.003) + (6.005), (1.02) + (12.003) + (7.005), (1.02) + (12.003) + (8.001), (1.02) + (12.003) + (9.002), (1.02) + (12.003) + (10.001), (1.02) + (12.003) + (10.002), (1.02) + (12.003) + (12.004), (1.02) + (12.003) + (13.001), (1.02) + (12.003) + (13.004), (1.02) + (12.003) + (14.001), (1.02) + (12.003) + (15.025), (1.02) + (12.003) + (16.01),

(I.02) + (12.004) + (1.001), (1.02) + (12.004) + (1.002), (1.02) + (12.004) + (1.003), (1.02) + (12.004) + (1.015), (1.02) + (12.004) + (1.016), (1.02) + (12.004) + (1.017), (1.02) + (12.004) + (1.018), (1.02) + (12.004) + (1.024), (1.02) + (12.004) + (1.026), (1.02) + (12.004) + (1.027), (1.02) + (12.004) + (1.032), (1.02) + (12.004) + (1.033), (1.02) + (12.004) + (1.063), (1.02) + (12.004) + (1.067), (1.02) + (12.004) + (2.001), (1.02) + (12.004) + (2.002), (1.02) + (12.004) + (2.005), (1.02) + (12.004) + (2.007), (1.02) + (12.004) + (2.008), (I.02) + (12.004) + (2.010), (1.02) + (12.004) + (2.012), (1.02) + (12.004) + (2.014), (1.02) + (12.004) + (2.016), (1.02) + (12.004) + (2.018), (1.02) + (12.004) + (2.031), (1.02) + (12.004) + (3.003), (1.02) + (12.004) + (3.011), (1.02) + (12.004) + (3.012), (1.02) + (12.004) + (3.014), (1.02) + (12.004) + (3.017), (1.02) + (12.004) + (3.019), (1.02) + (12.004) + (3.021), (1.02) + (12.004) + (3.022), (1.02) + (12.004) + (3.025), (1.02) + (12.004) + (4.007), (1.02) + (12.004) + (5.004), (1.02) + (12.004) + (5.005), (1.02) + (12.004) + (5.008), (I.02) + (12.004) + (5.009), (1.02) + (12.004) + (5.012), (1.02) + (12.004) + (5.013), (1.02) + (12.004) + (6.005), (1.02) + (12.004) + (7.005), (1.02) + (12.004) + (8.001), (1.02) + (12.004) + (9.002), (1.02) + (12.004) + (10.001), (1.02) + (12.004) + (10.002), (1.02) + (12.004) + (12.003), (1.02) + (12.004) + (13.001), (1.02) + (12.004) + (13.004), (1.02) + (12.004) + (14.001), (1.02) + (12.004) + (15.025), (1.02) + (12.004) + (16.01),

(I.02) + (13.001) + (1.001), (1.02) + (13.001) + (1.002), (1.02) + (13.001) + (1.003), (1.02) + (13.001) + (1.015), (1.02) + (13.001) + (1.016), (1.02) + (13.001) + (1.017), (1.02) + (13.001) + (1.018), (1.02) + (13.001) + (1.024), (1.02) + (13.001) + (1.026), (1.02) + (13.001) + (1.027), (1.02) + (13.001) + (1.032), (1.02) + (13.001) + (1.033), (1.02) + (13.001) + (1.063), (1.02) + (13.001) + (1.067), (1.02) + (13.001) + (2.001), (1.02) + (13.001) + (2.002), (1.02) + (13.001) + (2.005), (1.02) + (13.001) + (2.007), (1.02) + (13.001) + (2.008), (I.02) + (13.001) + (2.010), (1.02) + (13.001) + (2.012), (1.02) + (13.001) + (2.014), (1.02) + (13.001) + (2.016), (1.02) + (13.001) + (2.018), (1.02) + (13.001) + (2.031), (1.02) + (13.001) + (3.003), (1.02) + (13.001) + (3.011), (1.02) + (13.001) + (3.012), (1.02) + (13.001) + (3.014), (1.02) + (13.001) + (3.017), (1.02) + (13.001) + (3.019), (1.02) + (13.001) + (3.021), (1.02) + (13.001) + (3.022), (1.02) + (13.001) + (3.025), (1.02) + (13.001) + (4.007), (1.02) + (13.001) + (5.004), (1.02) + (13.001) + (5.005), (1.02) + (13.001) + (5.008), (I.02) + (13.001) + (5.009), (1.02) + (13.001) + (5.012), (1.02) + (13.001) + (5.013), (1.02) + (13.001) + (6.005), (1.02) + (13.001) + (7.005), (1.02) + (13.001) + (8.001), (1.02) + (13.001) + (9.002), (1.02) + (13.001) + (10.001), (1.02) + (13.001) + (10.002), (1.02) + (13.001) + (12.003), (1.02) + (13.001) + (12.004), (1.02) + (13.001) + (13.004), (1.02) + (13.001) + (14.001), (1.02) + (13.001) + (15.025), (1.02) + (13.001) + (16.01),

(I.02) + (13.004) + (1.001), (1.02) + (13.004) + (1.002), (1.02) + (13.004) + (1.003), (1.02) + (13.004) + (1.015), (1.02) + (13.004) + (1.016), (1.02) + (13.004) + (1.017), (1.02) + (13.004) + (1.018), (1.02) + (13.004) + (1.024), (1.02) + (13.004) + (1.026), (1.02) + (13.004) + (1.027), (1.02) + (13.004) + (1.032), (1.02) + (13.004) + (1.033), (1.02) + (13.004) + (1.063), (1.02) + (13.004) + (1.067), (1.02) + (13.004) + (2.001), (1.02) + (13.004) + (2.002), (1.02) + (13.004) + (2.005), (1.02) + (13.004) + (2.007), (1.02) + (13.004) + (2.008), (I.02) + (13.004) + (2.010), (1.02) + (13.004) + (2.012), (1.02) + (13.004) + (2.014), (1.02) + (13.004) + (2.016), (1.02) + (13.004) + (2.018), (1.02) + (13.004) + (2.031), (1.02) + (13.004) + (3.003), (1.02) + (13.004) + (3.011), (1.02) + (13.004) + (3.012), (1.02) + (13.004) + (3.014), (1.02) + (13.004) + (3.017), (1.02) + (13.004) + (3.019), (1.02) + (13.004) + (3.021), (1.02) + (13.004) + (3.022), (1.02) + (13.004) + (3.025), (1.02) + (13.004) + (4.007), (1.02) + (13.004) + (5.004), (1.02) + (13.004) + (5.005), (1.02) + (13.004) + (5.008), (I.02) + (13.004) + (5.009), (1.02) + (13.004) + (5.012), (1.02) + (13.004) + (5.013), (1.02) + (13.004) + (6.005), (1.02) + (13.004) + (7.005), (1.02) + (13.004) + (8.001), (1.02) + (13.004) + (9.002), (1.02) + (13.004) + (10.001), (1.02) + (13.004) + (10.002), (1.02) + (13.004) + (12.003), (1.02) + (13.004) + (12.004), (1.02) + (13.004) + (13.001), (1.02) + (13.004) + (14.001), (1.02) + (13.004) + (15.025), (1.02) + (13.004) + (16.01),

(I.02) + (14.001) + (1.001), (1.02) + (14.001) + (1.002), (1.02) + (14.001) + (1.003), (1.02) + (14.001) + (1.015), (1.02) + (14.001) + (1.016), (1.02) + (14.001) + (1.017), (1.02) + (14.001) + (1.018), (1.02) + (14.001) + (1.024), (1.02) + (14.001) + (1.026), (1.02) + (14.001) + (1.027), (1.02) + (14.001) + (1.032), (1.02) + (14.001) + (1.033), (1.02) + (14.001) + (1.063), (1.02) + (14.001) + (1.067), (1.02) + (14.001) + (2.001), (1.02) + (14.001) + (2.002), (1.02) + (14.001) + (2.005), (1.02) + (14.001) + (2.007), (1.02) + (14.001) + (2.008), (I.02) + (14.001) + (2.010), (1.02) + (14.001) + (2.012), (1.02) + (14.001) + (2.014), (1.02) + (14.001) + (2.016), (1.02) + (14.001) + (2.018), (1.02) + (14.001) + (2.031), (1.02) + (14.001) + (3.003), (1.02) + (14.001) + (3.011), (1.02) + (14.001) + (3.012), (1.02) + (14.001) + (3.014), (1.02) + (14.001) + (3.017), (1.02) + (14.001) + (3.019), (1.02) + (14.001) + (3.021), (1.02) + (14.001) + (3.022), (1.02) + (14.001) + (3.025), (1.02) + (14.001) + (4.007), (1.02) + (14.001) + (5.004), (1.02) + (14.001) + (5.005), (1.02) + (14.001) + (5.008), (I.02) + (14.001) + (5.009), (1.02) + (14.001) + (5.012), (1.02) + (14.001) + (5.013), (1.02) + (14.001) + (6.005), (1.02) + (14.001) + (7.005), (1.02) + (14.001) + (8.001), (1.02) + (14.001) + (9.002), (1.02) + (14.001) + (10.001), (1.02) + (14.001) + (10.002), (1.02) + (14.001) + (12.003), (1.02) + (14.001) + (12.004), (1.02) + (14.001) + (13.001), (1.02) + (14.001) + (13.004), (1.02) + (14.001) + (15.025), (1.02) + (14.001) + (16.01),

(I.02) + (15.025) + (1.001), (1.02) + (15.025) + (1.002), (1.02) + (15.025) + (1.003), (1.02) + (15.025) + (1.015), (1.02) + (15.025) + (1.016), (1.02) + (15.025) + (1.017), (1.02) + (15.025) + (1.018), (1.02) + (15.025) + (1.024), (1.02) + (15.025) + (1.026), (1.02) + (15.025) + (1.027), (1.02) + (15.025) + (1.032), (1.02) + (15.025) + (1.033), (1.02) + (15.025) + (1.063), (1.02) + (15.025) + (1.067), (1.02) + (15.025) + (2.001), (1.02) + (15.025) + (2.002), (1.02) + (15.025) + (2.005), (1.02) + (15.025) + (2.007), (1.02) + (15.025) + (2.008), (I.02) + (15.025) + (2.010), (1.02) + (15.025) + (2.012), (1.02) + (15.025) + (2.014), (1.02) + (15.025) + (2.016), (1.02) + (15.025) + (2.018), (1.02) + (15.025) + (2.031), (1.02) + (15.025) + (3.003), (1.02) + (15.025) + (3.011), (1.02) + (15.025) + (3.012), (1.02) + (15.025) + (3.014), (1.02) + (15.025) + (3.017), (1.02) + (15.025) + (3.019), (1.02) + (15.025) + (3.021), (1.02) + (15.025) + (3.022), (1.02) + (15.025) + (3.025), (1.02) + (15.025) + (4.007), (1.02) + (15.025) + (5.004), (1.02) + (15.025) + (5.005), (1.02) + (15.025) + (5.008), (I.02) + (15.025) + (5.009), (1.02) + (15.025) + (5.012), (1.02) + (15.025) + (5.013), (1.02) + (15.025) + (6.005), (1.02) + (15.025) + (7.005), (1.02) + (15.025) + (8.001), (1.02) + (15.025) + (9.002), (1.02) + (15.025) + (10.001), (1.02) + (15.025) + (10.002), (1.02) + (15.025) + (12.003), (1.02) + (15.025) + (12.004), (1.02) + (15.025) + (13.001), (1.02) + (15.025) + (13.004), (1.02) + (15.025) + (14.001),

(1.02) + (15.025) + (16.01),

(I.02) + (16.01) + (1.001), (1.02) + (16.01) + (1.002), (1.02) + (16.01) + (1.003), (1.02) + (16.01) + (1.015), (I.02) + (16.01) + (1.016), (1.02) + (16.01) + (1.017), (1.02) + (16.01) + (1.018), (1.02) + (16.01) + (1.024), (I.02) + (16.01) + (1.026), (1.02) + (16.01) + (1.027), (1.02) + (16.01) + (1.032), (1.02) + (16.01) + (1.033), (I.02) + (16.01) + (1.063), (1.02) + (16.01) + (1.067), (1.02) + (16.01) + (2.001), (1.02) + (16.01) + (2.002), (I.02) + (16.01) + (2.005), (1.02) + (16.01) + (2.007), (1.02) + (16.01) + (2.008), (1.02) + (16.01) + (2.010), (I.02) + (16.01) + (2.012), (1.02) + (16.01) + (2.014), (1.02) + (16.01) + (2.016), (1.02) + (16.01) + (2.018), (I.02) + (16.01) + (2.031), (1.02) + (16.01) + (3.003), (1.02) + (16.01) + (3.011), (1.02) + (16.01) + (3.012), (I.02) + (16.01) + (3.014), (1.02) + (16.01) + (3.017), (1.02) + (16.01) + (3.019), (1.02) + (16.01) + (3.021), (I.02) + (16.01) + (3.022), (1.02) + (16.01) + (3.025), (1.02) + (16.01) + (4.007), (1.02) + (16.01) + (5.004), (I.02) + (16.01) + (5.005), (1.02) + (16.01) + (5.008), (1.02) + (16.01) + (5.009), (1.02) + (16.01) + (5.012), (I.02) + (16.01) + (5.013), (1.02) + (16.01) + (6.005), (1.02) + (16.01) + (7.005), (1.02) + (16.01) + (8.001), (I.02) + (16.01) + (9.002), (1.02) + (16.01) + (10.001), (1.02) + (16.01) + (10.002), (1.02) + (16.01) + (12.003), (I.02) + (16.01) + (12.004), (1.02) + (16.01) + (13.001), (1.02) + (16.01) + (13.004), (1.02) + (16.01) + (14.001), (1.02) + (16.01) + (15.025).

If two compounds (B) are present in the combinations according to the invention, still other preferred compound combinations are selected from the group (G3-C) consisting of the following mixtures:

(I.03) + (1.001) + (1.002), (1.03) + (1.001) + (1.003), (1.03) + (1.001) + (1.015), (1.03) + (1.001) + (1.016), (I.03) + (1.001) + (1.017), (1.03) + (1.001) + (1.018), (1.03) + (1.001) + (1.024), (1.03) + (1.001) + (1.026), (I.03) + (1.001) + (1.027), (1.03) + (1.001) + (1.032), (1.03) + (1.001) + (1.033), (1.03) + (1.001) + (1.063), (I.03) + (1.001) + (1.067), (1.03) + (1.001) + (2.001), (1.03) + (1.001) + (2.002), (1.03) + (1.001) + (2.005), (I.03) + (1.001) + (2.007), (1.03) + (1.001) + (2.008), (1.03) + (1.001) + (2.010), (1.03) + (1.001) + (2.012), (I.03) + (1.001) + (2.014), (1.03) + (1.001) + (2.016), (1.03) + (1.001) + (2.018), (1.03) + (1.001) + (2.031), (I.03) + (1.001) + (3.003), (1.03) + (1.001) + (3.011), (1.03) + (1.001) + (3.012), (1.03) + (1.001) + (3.014), (I.03) + (1.001) + (3.017), (1.03) + (1.001) + (3.019), (1.03) + (1.001) + (3.021), (1.03) + (1.001) + (3.022), (I.03) + (1.001) + (3.025), (1.03) + (1.001) + (4.007), (1.03) + (1.001) + (5.004), (1.03) + (1.001) + (5.005), (I.03) + (1.001) + (5.008), (1.03) + (1.001) + (5.009), (1.03) + (1.001) + (5.012), (1.03) + (1.001) + (5.013), (I.03) + (1.001) + (6.005), (1.03) + (1.001) + (7.005), (1.03) + (1.001) + (8.001), (1.03) + (1.001) + (9.002), (I.03) + (1.001) + (10.001), (1.03) + (1.001) + (10.002), (1.03) + (1.001) + (12.003), (1.03) + (1.001) + (12.004), (1.03) + (1.001) + (13.001), (1.03) + (1.001) + (13.004), (1.03) + (1.001) + (14.001), (1.03) + (1.001) + (15.025), (1.03) + (1.001) + (16.01),

(I.03) + (1.002) + (1.001), (1.03) + (1.002) + (1.003), (1.03) + (1.002) + (1.015), (1.03) + (1.002) + (1.016), (I.03) + (1.002) + (1.017), (1.03) + (1.002) + (1.018), (1.03) + (1.002) + (1.024), (1.03) + (1.002) + (1.026), (I.03) + (1.002) + (1.027), (1.03) + (1.002) + (1.032), (1.03) + (1.002) + (1.033), (1.03) + (1.002) + (1.063), (I.03) + (1.002) + (1.067), (1.03) + (1.002) + (2.001), (1.03) + (1.002) + (2.002), (1.03) + (1.002) + (2.005), (I.03) + (1.002) + (2.007), (1.03) + (1.002) + (2.008), (1.03) + (1.002) + (2.010), (1.03) + (1.002) + (2.012), (I.03) + (1.002) + (2.014), (1.03) + (1.002) + (2.016), (1.03) + (1.002) + (2.018), (1.03) + (1.002) + (2.031), (I.03) + (1.002) + (3.003), (1.03) + (1.002) + (3.011), (1.03) + (1.002) + (3.012), (1.03) + (1.002) + (3.014), (I.03) + (1.002) + (3.017), (1.03) + (1.002) + (3.019), (1.03) + (1.002) + (3.021), (1.03) + (1.002) + (3.022), (I.03) + (1.002) + (3.025), (1.03) + (1.002) + (4.007), (1.03) + (1.002) + (5.004), (1.03) + (1.002) + (5.005), (I.03) + (1.002) + (5.008), (1.03) + (1.002) + (5.009), (1.03) + (1.002) + (5.012), (1.03) + (1.002) + (5.013), (I.03) + (1.002) + (6.005), (1.03) + (1.002) + (7.005), (1.03) + (1.002) + (8.001), (1.03) + (1.002) + (9.002), (I.03) + (1.002) + (10.001), (1.03) + (1.002) + (10.002), (1.03) + (1.002) + (12.003), (1.03) + (1.002) + (12.004), (1.03) + (1.002) + (13.001), (1.03) + (1.002) + (13.004), (1.03) + (1.002) + (14.001), (1.03) + (1.002) + (15.025), (1.03) + (1.002) + (16.01),

(I.03) + (1.003) + (1.001), (1.03) + (1.003) + (1.002), (1.03) + (1.003) + (1.015), (1.03) + (1.003) + (1.016), (I.03) + (1.003) + (1.017), (1.03) + (1.003) + (1.018), (1.03) + (1.003) + (1.024), (1.03) + (1.003) + (1.026), (I.03) + (1.003) + (1.027), (1.03) + (1.003) + (1.032), (1.03) + (1.003) + (1.033), (1.03) + (1.003) + (1.063), (I.03) + (1.003) + (1.067), (1.03) + (1.003) + (2.001), (1.03) + (1.003) + (2.002), (1.03) + (1.003) + (2.005), (I.03) + (1.003) + (2.007), (1.03) + (1.003) + (2.008), (1.03) + (1.003) + (2.010), (1.03) + (1.003) + (2.012), (I.03) + (1.003) + (2.014), (1.03) + (1.003) + (2.016), (1.03) + (1.003) + (2.018), (1.03) + (1.003) + (2.031), (I.03) + (1.003) + (3.003), (1.03) + (1.003) + (3.011), (1.03) + (1.003) + (3.012), (1.03) + (1.003) + (3.014), (I.03) + (1.003) + (3.017), (1.03) + (1.003) + (3.019), (1.03) + (1.003) + (3.021), (1.03) + (1.003) + (3.022), (I.03) + (1.003) + (3.025), (1.03) + (1.003) + (4.007), (1.03) + (1.003) + (5.004), (1.03) + (1.003) + (5.005), (I.03) + (1.003) + (5.008), (1.03) + (1.003) + (5.009), (1.03) + (1.003) + (5.012), (1.03) + (1.003) + (5.013), (I.03) + (1.003) + (6.005), (1.03) + (1.003) + (7.005), (1.03) + (1.003) + (8.001), (1.03) + (1.003) + (9.002), (I.03) + (1.003) + (10.001), (1.03) + (1.003) + (10.002), (1.03) + (1.003) + (12.003), (1.03) + (1.003)

+ (12.004), (1.03) + (1.003) + (13.001), (1.03) + (1.003) + (13.004), (1.03) + (1.003) + (14.001), (1.03) + (1.003) + (15.025), (1.03) + (1.003) + (16.01),

(I.03) + (1.015) + (1.001), (1.03) + (1.015) + (1.002), (1.03) + (1.015) + (1.003), (1.03) + (1.015) + (1.016), (I.03) + (1.015) + (1.017), (1.03) + (1.015) + (1.018), (1.03) + (1.015) + (1.024), (1.03) + (1.015) + (1.026), (I.03) + (1.015) + (1.027), (1.03) + (1.015) + (1.032), (1.03) + (1.015) + (1.033), (1.03) + (1.015) + (1.063), (I.03) + (1.015) + (1.067), (1.03) + (1.015) + (2.001), (1.03) + (1.015) + (2.002), (1.03) + (1.015) + (2.005), (I.03) + (1.015) + (2.007), (1.03) + (1.015) + (2.008), (1.03) + (1.015) + (2.010), (1.03) + (1.015) + (2.012), (I.03) + (1.015) + (2.014), (1.03) + (1.015) + (2.016), (1.03) + (1.015) + (2.018), (1.03) + (1.015) + (2.031), (I.03) + (1.015) + (3.003), (1.03) + (1.015) + (3.011), (1.03) + (1.015) + (3.012), (1.03) + (1.015) + (3.014), (I.03) + (1.015) + (3.017), (1.03) + (1.015) + (3.019), (1.03) + (1.015) + (3.021), (1.03) + (1.015) + (3.022), (I.03) + (1.015) + (3.025), (1.03) + (1.015) + (4.007), (1.03) + (1.015) + (5.004), (1.03) + (1.015) + (5.005), (I.03) + (1.015) + (5.008), (1.03) + (1.015) + (5.009), (1.03) + (1.015) + (5.012), (1.03) + (1.015) + (5.013), (I.03) + (1.015) + (6.005), (1.03) + (1.015) + (7.005), (1.03) + (1.015) + (8.001), (1.03) + (1.015) + (9.002), (I.03) + (1.015) + (10.001), (1.03) + (1.015) + (10.002), (1.03) + (1.015) + (12.003), (1.03) + (1.015) + (12.004), (1.03) + (1.015) + (13.001), (1.03) + (1.015) + (13.004), (1.03) + (1.015) + (14.001), (1.03) + (1.015) + (15.025), (1.03) + (1.015) + (16.01),

(I.03) + (1.016) + (1.001), (1.03) + (1.016) + (1.002), (1.03) + (1.016) + (1.003), (1.03) + (1.016) + (1.015), (I.03) + (1.016) + (1.017), (1.03) + (1.016) + (1.018), (1.03) + (1.016) + (1.024), (1.03) + (1.016) + (1.026), (I.03) + (1.016) + (1.027), (1.03) + (1.016) + (1.032), (1.03) + (1.016) + (1.033), (1.03) + (1.016) + (1.063), (I.03) + (1.016) + (1.067), (1.03) + (1.016) + (2.001), (1.03) + (1.016) + (2.002), (1.03) + (1.016) + (2.005), (I.03) + (1.016) + (2.007), (1.03) + (1.016) + (2.008), (1.03) + (1.016) + (2.010), (1.03) + (1.016) + (2.012), (I.03) + (1.016) + (2.014), (1.03) + (1.016) + (2.016), (1.03) + (1.016) + (2.018), (1.03) + (1.016) + (2.031), (I.03) + (1.016) + (3.003), (1.03) + (1.016) + (3.011), (1.03) + (1.016) + (3.012), (1.03) + (1.016) + (3.014), (I.03) + (1.016) + (3.017), (1.03) + (1.016) + (3.019), (1.03) + (1.016) + (3.021), (1.03) + (1.016) + (3.022), (I.03) + (1.016) + (3.025), (1.03) + (1.016) + (4.007), (1.03) + (1.016) + (5.004), (1.03) + (1.016) + (5.005), (I.03) + (1.016) + (5.008), (1.03) + (1.016) + (5.009), (1.03) + (1.016) + (5.012), (1.03) + (1.016) + (5.013), (I.03) + (1.016) + (6.005), (1.03) + (1.016) + (7.005), (1.03) + (1.016) + (8.001), (1.03) + (1.016) + (9.002), (I.03) + (1.016) + (10.001), (1.03) + (1.016) + (10.002), (1.03) + (1.016) + (12.003), (1.03) + (1.016) + (12.004), (1.03) + (1.016) + (13.001), (1.03) + (1.016) + (13.004), (1.03) + (1.016) + (14.001), (1.03) + (1.016) + (15.025), (1.03) + (1.016) + (16.01),

(I.03) + (1.017) + (1.001), (1.03) + (1.017) + (1.002), (1.03) + (1.017) + (1.003), (1.03) + (1.017) + (1.015), (I.03) + (1.017) + (1.016), (1.03) + (1.017) + (1.018), (1.03) + (1.017) + (1.024), (1.03) + (1.017) + (1.026), (I.03) + (1.017) + (1.027), (1.03) + (1.017) + (1.032), (1.03) + (1.017) + (1.033), (1.03) + (1.017) + (1.063), (I.03) + (1.017) + (1.067), (1.03) + (1.017) + (2.001), (1.03) + (1.017) + (2.002), (1.03) + (1.017) + (2.005), (I.03) + (1.017) + (2.007), (1.03) + (1.017) + (2.008), (1.03) + (1.017) + (2.010), (1.03) + (1.017) + (2.012), (I.03) + (1.017) + (2.014), (1.03) + (1.017) + (2.016), (1.03) + (1.017) + (2.018), (1.03) + (1.017) + (2.031), (I.03) + (1.017) + (3.003), (1.03) + (1.017) + (3.011), (1.03) + (1.017) + (3.012), (1.03) + (1.017) + (3.014), (I.03) + (1.017) + (3.017), (1.03) + (1.017) + (3.019), (1.03) + (1.017) + (3.021), (1.03) + (1.017) + (3.022), (I.03) + (1.017) + (3.025), (1.03) + (1.017) + (4.007), (1.03) + (1.017) + (5.004), (1.03) + (1.017) + (5.005), (I.03) + (1.017) + (5.008), (1.03) + (1.017) + (5.009), (1.03) + (1.017) + (5.012), (1.03) + (1.017) + (5.013), (I.03) + (1.017) + (6.005), (1.03) + (1.017) + (7.005), (1.03) + (1.017) + (8.001), (1.03) + (1.017) + (9.002), (I.03) + (1.017) + (10.001), (1.03) + (1.017) + (10.002), (1.03) + (1.017) + (12.003), (1.03) + (1.017) + (12.004), (1.03) + (1.017) + (13.001), (1.03) + (1.017) + (13.004), (1.03) + (1.017) + (14.001), (1.03) + (1.017) + (15.025), (1.03) + (1.017) + (16.01),

(I.03) + (1.018) + (1.001), (1.03) + (1.018) + (1.002), (1.03) + (1.018) + (1.003), (1.03) + (1.018) + (1.015), (I.03) + (1.018) + (1.016), (1.03) + (1.018) + (1.017), (1.03) + (1.018) + (1.024), (1.03) + (1.018) + (1.026), (I.03) + (1.018) + (1.027), (1.03) + (1.018) + (1.032), (1.03) + (1.018) + (1.033), (1.03) + (1.018) + (1.063), (I.03) + (1.018) + (1.067), (1.03) + (1.018) + (2.001), (1.03) + (1.018) + (2.002), (1.03) + (1.018) + (2.005), (I.03) + (1.018) + (2.007), (1.03) + (1.018) + (2.008), (1.03) + (1.018) + (2.010), (1.03) + (1.018) + (2.012), (I.03) + (1.018) + (2.014), (1.03) + (1.018) + (2.016), (1.03) + (1.018) + (2.018), (1.03) + (1.018) + (2.031), (I.03) + (1.018) + (3.003), (1.03) + (1.018) + (3.011), (1.03) + (1.018) + (3.012), (1.03) + (1.018) + (3.014), (I.03) + (1.018) + (3.017), (1.03) + (1.018) + (3.019), (1.03) + (1.018) + (3.021), (1.03) + (1.018) + (3.022), (I.03) + (1.018) + (3.025), (1.03) + (1.018) + (4.007), (1.03) + (1.018) + (5.004), (1.03) + (1.018) + (5.005), (I.03) + (1.018) + (5.008), (1.03) + (1.018) + (5.009), (1.03) + (1.018) + (5.012), (1.03) + (1.018) + (5.013), (I.03) + (1.018) + (6.005), (1.03) + (1.018) + (7.005), (1.03) + (1.018) + (8.001), (1.03) + (1.018) + (9.002), (I.03) + (1.018) + (10.001), (1.03) + (1.018) + (10.002), (1.03) + (1.018) + (12.003), (1.03) + (1.018) + (12.004), (1.03) + (1.018) + (13.001), (1.03) + (1.018) + (13.004), (1.03) + (1.018) + (14.001), (1.03) + (1.018) + (15.025), (1.03) + (1.018) + (16.01),

(I.03) + (1.024) + (1.001), (1.03) + (1.024) + (1.002), (1.03) + (1.024) + (1.003), (1.03) + (1.024) + (1.015), (I.03) + (1.024) + (1.016), (1.03) + (1.024) + (1.017), (1.03) + (1.024) + (1.018), (1.03) + (1.024) + (1.026), (I.03) + (1.024) + (1.027), (1.03) + (1.024) + (1.032), (1.03) + (1.024) + (1.033), (1.03) + (1.024) + (1.063), (I.03) + (1.024) + (1.067), (1.03) + (1.024) + (2.001), (1.03) + (1.024) + (2.002), (1.03) + (1.024) + (2.005), (I.03) + (1.024) + (2.007), (1.03) + (1.024) + (2.008), (1.03) + (1.024) + (2.010), (1.03) + (1.024) + (2.012), (I.03) + (1.024) + (2.014), (1.03) + (1.024) + (2.016), (1.03) + (1.024) + (2.018), (1.03) + (1.024) + (2.031), (I.03) + (1.024) + (3.003), (1.03) + (1.024) + (3.011), (1.03) + (1.024) + (3.012), (1.03) + (1.024) + (3.014), (I.03) + (1.024) + (3.017), (1.03) + (1.024) + (3.019), (1.03) + (1.024) + (3.021), (1.03) + (1.024) + (3.022), (I.03) + (1.024) + (3.025), (1.03) + (1.024) + (4.007), (1.03) + (1.024) + (5.004), (1.03) + (1.024) + (5.005), (I.03) + (1.024) + (5.008), (1.03) + (1.024) + (5.009), (1.03) + (1.024) + (5.012), (1.03) + (1.024) + (5.013), (I.03) + (1.024) + (6.005), (1.03) + (1.024) + (7.005), (1.03) + (1.024) + (8.001), (1.03) + (1.024) + (9.002), (I.03) + (1.024) + (10.001), (1.03) + (1.024) + (10.002), (1.03) + (1.024) + (12.003), (1.03) + (1.024) + (12.004), (1.03) + (1.024) + (13.001), (1.03) + (1.024) + (13.004), (1.03) + (1.024) + (14.001), (1.03) + (1.024) + (15.025), (1.03) + (1.024) + (16.01),

(I.03) + (1.026) + (1.001), (1.03) + (1.026) + (1.002), (1.03) + (1.026) + (1.003), (1.03) + (1.026) + (1.015), (I.03) + (1.026) + (1.016), (1.03) + (1.026) + (1.017), (1.03) + (1.026) + (1.018), (1.03) + (1.026) + (1.024), (I.03) + (1.026) + (1.027), (1.03) + (1.026) + (1.032), (1.03) + (1.026) + (1.033), (1.03) + (1.026) + (1.063), (I.03) + (1.026) + (1.067), (1.03) + (1.026) + (2.001), (1.03) + (1.026) + (2.002), (1.03) + (1.026) + (2.005), (I.03) + (1.026) + (2.007), (1.03) + (1.026) + (2.008), (1.03) + (1.026) + (2.010), (1.03) + (1.026) + (2.012), (I.03) + (1.026) + (2.014), (1.03) + (1.026) + (2.016), (1.03) + (1.026) + (2.018), (1.03) + (1.026) + (2.031), (I.03) + (1.026) + (3.003), (1.03) + (1.026) + (3.011), (1.03) + (1.026) + (3.012), (1.03) + (1.026) + (3.014), (I.03) + (1.026) + (3.017), (1.03) + (1.026) + (3.019), (1.03) + (1.026) + (3.021), (1.03) + (1.026) + (3.022), (I.03) + (1.026) + (3.025), (1.03) + (1.026) + (4.007), (1.03) + (1.026) + (5.004), (1.03) + (1.026) + (5.005), (I.03) + (1.026) + (5.008), (1.03) + (1.026) + (5.009), (1.03) + (1.026) + (5.012), (1.03) + (1.026) + (5.013), (I.03) + (1.026) + (6.005), (1.03) + (1.026) + (7.005), (1.03) + (1.026) + (8.001), (1.03) + (1.026) + (9.002), (I.03) + (1.026) + (10.001), (1.03) + (1.026) + (10.002), (1.03) + (1.026) + (12.003), (1.03) + (1.026) + (12.004), (1.03) + (1.026) + (13.001), (1.03) + (1.026) + (13.004), (1.03) + (1.026) + (14.001), (1.03) + (1.026) + (15.025), (1.03) + (1.026) + (16.01),

(I.03) + (1.027) + (1.001), (1.03) + (1.027) + (1.002), (1.03) + (1.027) + (1.003), (1.03) + (1.027) + (1.015), (I.03) + (1.027) + (1.016), (1.03) + (1.027) + (1.017), (1.03) + (1.027) + (1.018), (1.03) + (1.027) + (1.024), (I.03) + (1.027) + (1.026), (1.03) + (1.027) + (1.032), (1.03) + (1.027) + (1.033), (1.03) + (1.027) + (1.063), (I.03) + (1.027) + (1.067), (1.03) + (1.027) + (2.001), (1.03) + (1.027) + (2.002), (1.03) + (1.027) + (2.005), (I.03) + (1.027) + (2.007), (1.03) + (1.027) + (2.008), (1.03) + (1.027) + (2.010), (1.03) + (1.027) + (2.012), (I.03) + (1.027) + (2.014), (1.03) + (1.027) + (2.016), (1.03) + (1.027) + (2.018), (1.03) + (1.027) + (2.031), (I.03) + (1.027) + (3.003), (1.03) + (1.027) + (3.011), (1.03) + (1.027) + (3.012), (1.03) + (1.027) + (3.014), (I.03) + (1.027) + (3.017), (1.03) + (1.027) + (3.019), (1.03) + (1.027) + (3.021), (1.03) + (1.027) + (3.022), (I.03) + (1.027) + (3.025), (1.03) + (1.027) + (4.007), (1.03) + (1.027) + (5.004), (1.03) + (1.027) + (5.005), (I.03) + (1.027) + (5.008), (1.03) + (1.027) + (5.009), (1.03) + (1.027) + (5.012), (1.03) + (1.027) + (5.013), (I.03) + (1.027) + (6.005), (1.03) + (1.027) + (7.005), (1.03) + (1.027) + (8.001), (1.03) + (1.027) + (9.002), (I.03) + (1.027) + (10.001), (1.03) + (1.027) + (10.002), (1.03) + (1.027) + (12.003), (1.03) + (1.027) + (12.004), (1.03) + (1.027) + (13.001), (1.03) + (1.027) + (13.004), (1.03) + (1.027) + (14.001), (1.03) + (1.027) + (15.025), (1.03) + (1.027) + (16.01),

(I.03) + (1.032) + (1.001), (1.03) + (1.032) + (1.002), (1.03) + (1.032) + (1.003), (1.03) + (1.032) + (1.015), (I.03) + (1.032) + (1.016), (1.03) + (1.032) + (1.017), (1.03) + (1.032) + (1.018), (1.03) + (1.032) + (1.024), (I.03) + (1.032) + (1.026), (1.03) + (1.032) + (1.027), (1.03) + (1.032) + (1.033), (1.03) + (1.032) + (1.063), (I.03) + (1.032) + (1.067), (1.03) + (1.032) + (2.001), (1.03) + (1.032) + (2.002), (1.03) + (1.032) + (2.005), (I.03) + (1.032) + (2.007), (1.03) + (1.032) + (2.008), (1.03) + (1.032) + (2.010), (1.03) + (1.032) + (2.012), (I.03) + (1.032) + (2.014), (1.03) + (1.032) + (2.016), (1.03) + (1.032) + (2.018), (1.03) + (1.032) + (2.031), (I.03) + (1.032) + (3.003), (1.03) + (1.032) + (3.011), (1.03) + (1.032) + (3.012), (1.03) + (1.032) + (3.014), (I.03) + (1.032) + (3.017), (1.03) + (1.032) + (3.019), (1.03) + (1.032) + (3.021), (1.03) + (1.032) + (3.022), (I.03) + (1.032) + (3.025), (1.03) + (1.032) + (4.007), (1.03) + (1.032) + (5.004), (1.03) + (1.032) + (5.005), (I.03) + (1.032) + (5.008), (1.03) + (1.032) + (5.009), (1.03) + (1.032) + (5.012), (1.03) + (1.032) + (5.013), (I.03) + (1.032) + (6.005), (1.03) + (1.032) + (7.005), (1.03) + (1.032) + (8.001), (1.03) + (1.032) + (9.002), (I.03) + (1.032) + (10.001), (1.03) + (1.032) + (10.002), (1.03) + (1.032) + (12.003), (1.03) + (1.032) + (12.004), (1.03) + (1.032) + (13.001), (1.03) + (1.032) + (13.004), (1.03) + (1.032) + (14.001), (1.03) + (1.032) + (15.025), (1.03) + (1.032) + (16.01),

(I.03) + (1.033) + (1.001), (1.03) + (1.033) + (1.002), (1.03) + (1.033) + (1.003), (1.03) + (1.033) + (1.015), (I.03) + (1.033) + (1.016), (1.03) + (1.033) + (1.017), (1.03) + (1.033) + (1.018), (1.03) + (1.033) + (1.024), (I.03) + (1.033)

+ (1.026), (1.03) + (1.033) + (1.027), (1.03) + (1.033) + (1.032), (1.03) + (1.033) + (1.063), (I.03) + (1.033) + (1.067), (1.03) + (1.033) + (2.001), (1.03) + (1.033) + (2.002), (1.03) + (1.033) + (2.005), (I.03) + (1.033) + (2.007), (1.03) + (1.033) + (2.008), (1.03) + (1.033) + (2.010), (1.03) + (1.033) + (2.012), (I.03) + (1.033) + (2.014), (1.03) + (1.033) + (2.016), (1.03) + (1.033) + (2.018), (1.03) + (1.033) + (2.031), (I.03) + (1.033) + (3.003), (1.03) + (1.033) + (3.011), (1.03) + (1.033) + (3.012), (1.03) + (1.033) + (3.014), (I.03) + (1.033) + (3.017), (1.03) + (1.033) + (3.019), (1.03) + (1.033) + (3.021), (1.03) + (1.033) + (3.022), (I.03) + (1.033) + (3.025), (1.03) + (1.033) + (4.007), (1.03) + (1.033) + (5.004), (1.03) + (1.033) + (5.005), (I.03) + (1.033) + (5.008), (1.03) + (1.033) + (5.009), (1.03) + (1.033) + (5.012), (1.03) + (1.033) + (5.013), (I.03) + (1.033) + (6.005), (1.03) + (1.033) + (7.005), (1.03) + (1.033) + (8.001), (1.03) + (1.033) + (9.002), (I.03) + (1.033) + (10.001), (1.03) + (1.033) + (10.002), (1.03) + (1.033) + (12.003), (1.03) + (1.033) + (12.004), (1.03) + (1.033) + (13.001), (1.03) + (1.033) + (13.004), (1.03) + (1.033) + (14.001), (1.03) + (1.033) + (15.025), (1.03) + (1.033) + (16.01),

(I.03) + (1.063) + (1.001), (1.03) + (1.063) + (1.002), (1.03) + (1.063) + (1.003), (1.03) + (1.063) + (1.015), (I.03) + (1.063) + (1.016), (1.03) + (1.063) + (1.017), (1.03) + (1.063) + (1.018), (1.03) + (1.063) + (1.024), (I.03) + (1.063) + (1.026), (1.03) + (1.063) + (1.027), (1.03) + (1.063) + (1.032), (1.03) + (1.063) + (1.033), (I.03) + (1.063) + (1.067), (1.03) + (1.063) + (2.001), (1.03) + (1.063) + (2.002), (1.03) + (1.063) + (2.005), (I.03) + (1.063) + (2.007), (1.03) + (1.063) + (2.008), (1.03) + (1.063) + (2.010), (1.03) + (1.063) + (2.012), (I.03) + (1.063) + (2.014), (1.03) + (1.063) + (2.016), (1.03) + (1.063) + (2.018), (1.03) + (1.063) + (2.031), (I.03) + (1.063) + (3.003), (1.03) + (1.063) + (3.011), (1.03) + (1.063) + (3.012), (1.03) + (1.063) + (3.014), (I.03) + (1.063) + (3.017), (1.03) + (1.063) + (3.019), (1.03) + (1.063) + (3.021), (1.03) + (1.063) + (3.022), (I.03) + (1.063) + (3.025), (1.03) + (1.063) + (4.007), (1.03) + (1.063) + (5.004), (1.03) + (1.063) + (5.005), (I.03) + (1.063) + (5.008), (1.03) + (1.063) + (5.009), (1.03) + (1.063) + (5.012), (1.03) + (1.063) + (5.013), (I.03) + (1.063) + (6.005), (1.03) + (1.063) + (7.005), (1.03) + (1.063) + (8.001), (1.03) + (1.063) + (9.002), (I.03) + (1.063) + (10.001), (1.03) + (1.063) + (10.002), (1.03) + (1.063) + (12.003), (1.03) + (1.063) + (12.004), (1.03) + (1.063) + (13.001), (1.03) + (1.063) + (13.004), (1.03) + (1.063) + (14.001), (1.03) + (1.063) + (15.025), (1.03) + (1.063) + (16.01),

(I.03) + (1.067) + (1.001), (1.03) + (1.067) + (1.002), (1.03) + (1.067) + (1.003), (1.03) + (1.067) + (1.015), (I.03) + (1.067) + (1.016), (1.03) + (1.067) + (1.017), (1.03) + (1.067) + (1.018), (1.03) + (1.067) + (1.024), (I.03) + (1.067) + (1.026), (1.03) + (1.067) + (1.027), (1.03) + (1.067) + (1.032), (1.03) + (1.067) + (1.033), (I.03) + (1.067) + (1.063), (1.03) + (1.067) + (2.001), (1.03) + (1.067) + (2.002), (1.03) + (1.067) + (2.005), (I.03) + (1.067) + (2.007), (1.03) + (1.067) + (2.008), (1.03) + (1.067) + (2.010), (1.03) + (1.067) + (2.012), (I.03) + (1.067) + (2.014), (1.03) + (1.067) + (2.016), (1.03) + (1.067) + (2.018), (1.03) + (1.067) + (2.031), (I.03) + (1.067) + (3.003), (1.03) + (1.067) + (3.011), (1.03) + (1.067) + (3.012), (1.03) + (1.067) + (3.014), (I.03) + (1.067) + (3.017), (1.03) + (1.067) + (3.019), (1.03) + (1.067) + (3.021), (1.03) + (1.067) + (3.022), (I.03) + (1.067) + (3.025), (1.03) + (1.067) + (4.007), (1.03) + (1.067) + (5.004), (1.03) + (1.067) + (5.005), (I.03) + (1.067) + (5.008), (1.03) + (1.067) + (5.009), (1.03) + (1.067) + (5.012), (1.03) + (1.067) + (5.013), (I.03) + (1.067) + (6.005), (1.03) + (1.067) + (7.005), (1.03) + (1.067) + (8.001), (1.03) + (1.067) + (9.002), (I.03) + (1.067) + (10.001), (1.03) + (1.067) + (10.002), (1.03) + (1.067) + (12.003), (1.03) + (1.067) + (12.004), (1.03) + (1.067) + (13.001), (1.03) + (1.067) + (13.004), (1.03) + (1.067) + (14.001), (1.03) + (1.067) + (15.025), (1.03) + (1.067) + (16.01),

(I.03) + (2.001) + (1.001), (1.03) + (2.001) + (1.002), (1.03) + (2.001) + (1.003), (1.03) + (2.001) + (1.015), (I.03) + (2.001) + (1.016), (1.03) + (2.001) + (1.017), (1.03) + (2.001) + (1.018), (1.03) + (2.001) + (1.024), (I.03) + (2.001) + (1.026), (1.03) + (2.001) + (1.027), (1.03) + (2.001) + (1.032), (1.03) + (2.001) + (1.033), (I.03) + (2.001) + (1.063), (1.03) + (2.001) + (1.067), (1.03) + (2.001) + (2.002), (1.03) + (2.001) + (2.005), (I.03) + (2.001) + (2.007), (1.03) + (2.001) + (2.008), (1.03) + (2.001) + (2.010), (1.03) + (2.001) + (2.012), (I.03) + (2.001) + (2.014), (1.03) + (2.001) + (2.016), (1.03) + (2.001) + (2.018), (1.03) + (2.001) + (2.031), (I.03) + (2.001) + (3.003), (1.03) + (2.001) + (3.011), (1.03) + (2.001) + (3.012), (1.03) + (2.001) + (3.014), (I.03) + (2.001) + (3.017), (1.03) + (2.001) + (3.019), (1.03) + (2.001) + (3.021), (1.03) + (2.001) + (3.022), (I.03) + (2.001) + (3.025), (1.03) + (2.001) + (4.007), (1.03) + (2.001) + (5.004), (1.03) + (2.001) + (5.005), (I.03) + (2.001) + (5.008), (1.03) + (2.001) + (5.009), (1.03) + (2.001) + (5.012), (1.03) + (2.001) + (5.013), (I.03) + (2.001) + (6.005), (1.03) + (2.001) + (7.005), (1.03) + (2.001) + (8.001), (1.03) + (2.001) + (9.002), (I.03) + (2.001) + (10.001), (1.03) + (2.001) + (10.002), (1.03) + (2.001) + (12.003), (1.03) + (2.001) + (12.004), (1.03) + (2.001) + (13.001), (1.03) + (2.001) + (13.004), (1.03) + (2.001) + (14.001), (1.03) + (2.001) + (15.025), (1.03) + (2.001) + (16.01),

(I.03) + (2.002) + (1.001), (1.03) + (2.002) + (1.002), (1.03) + (2.002) + (1.003), (1.03) + (2.002) + (1.015), (I.03) + (2.002) + (1.016), (1.03) + (2.002) + (1.017), (1.03) + (2.002) + (1.018), (1.03) + (2.002) + (1.024), (I.03) + (2.002) + (1.026), (1.03) + (2.002) + (1.027), (1.03) + (2.002) + (1.032), (1.03) + (2.002) + (1.033), (I.03) + (2.002) + (1.063), (1.03) + (2.002) + (1.067), (1.03) + (2.002) + (2.001), (1.03) + (2.002) + (2.005), (I.03) + (2.002) + (2.007), (1.03) +

(2.002) + (2.008), (1.03) + (2.002) + (2.010), (1.03) + (2.002) + (2.012), (I.03) + (2.002) + (2.014), (1.03) + (2.002) + (2.016), (1.03) + (2.002) + (2.018), (1.03) + (2.002) + (2.031), (I.03) + (2.002) + (3.003), (1.03) + (2.002) + (3.011), (1.03) + (2.002) + (3.012), (1.03) + (2.002) + (3.014), (I.03) + (2.002) + (3.017), (1.03) + (2.002) + (3.019), (1.03) + (2.002) + (3.021), (1.03) + (2.002) + (3.022), (I.03) + (2.002) + (3.025), (1.03) + (2.002) + (4.007), (1.03) + (2.002) + (5.004), (1.03) + (2.002) + (5.005), (I.03) + (2.002) + (5.008), (1.03) + (2.002) + (5.009), (1.03) + (2.002) + (5.012), (1.03) + (2.002) + (5.013), (I.03) + (2.002) + (6.005), (1.03) + (2.002) + (7.005), (1.03) + (2.002) + (8.001), (1.03) + (2.002) + (9.002), (I.03) + (2.002) + (10.001), (1.03) + (2.002) + (10.002), (1.03) + (2.002) + (12.003), (1.03) + (2.002) + (12.004), (1.03) + (2.002) + (13.001), (1.03) + (2.002) + (13.004), (1.03) + (2.002) + (14.001), (1.03) + (2.002) + (15.025), (1.03) + (2.002) + (16.01),

(I.03) + (2.005) + (1.001), (1.03) + (2.005) + (1.002), (1.03) + (2.005) + (1.003), (1.03) + (2.005) + (1.015), (I.03) + (2.005) + (1.016), (1.03) + (2.005) + (1.017), (1.03) + (2.005) + (1.018), (1.03) + (2.005) + (1.024), (I.03) + (2.005) + (1.026), (1.03) + (2.005) + (1.027), (1.03) + (2.005) + (1.032), (1.03) + (2.005) + (1.033), (I.03) + (2.005) + (1.063), (1.03) + (2.005) + (1.067), (1.03) + (2.005) + (2.001), (1.03) + (2.005) + (2.002), (I.03) + (2.005) + (2.007), (1.03) + (2.005) + (2.008), (1.03) + (2.005) + (2.010), (1.03) + (2.005) + (2.012), (I.03) + (2.005) + (2.014), (1.03) + (2.005) + (2.016), (1.03) + (2.005) + (2.018), (1.03) + (2.005) + (2.031), (I.03) + (2.005) + (3.003), (1.03) + (2.005) + (3.011), (1.03) + (2.005) + (3.012), (1.03) + (2.005) + (3.014), (I.03) + (2.005) + (3.017), (1.03) + (2.005) + (3.019), (1.03) + (2.005) + (3.021), (1.03) + (2.005) + (3.022), (I.03) + (2.005) + (3.025), (1.03) + (2.005) + (4.007), (1.03) + (2.005) + (5.004), (1.03) + (2.005) + (5.005), (I.03) + (2.005) + (5.008), (1.03) + (2.005) + (5.009), (1.03) + (2.005) + (5.012), (1.03) + (2.005) + (5.013), (I.03) + (2.005) + (6.005), (1.03) + (2.005) + (7.005), (1.03) + (2.005) + (8.001), (1.03) + (2.005) + (9.002), (I.03) + (2.005) + (10.001), (1.03) + (2.005) + (10.002), (1.03) + (2.005) + (12.003), (1.03) + (2.005) + (12.004), (1.03) + (2.005) + (13.001), (1.03) + (2.005) + (13.004), (1.03) + (2.005) + (14.001), (1.03) + (2.005) + (15.025), (1.03) + (2.005) + (16.01),

(I.03) + (2.007) + (1.001), (1.03) + (2.007) + (1.002), (1.03) + (2.007) + (1.003), (1.03) + (2.007) + (1.015), (I.03) + (2.007) + (1.016), (1.03) + (2.007) + (1.017), (1.03) + (2.007) + (1.018), (1.03) + (2.007) + (1.024), (I.03) + (2.007) + (1.026), (1.03) + (2.007) + (1.027), (1.03) + (2.007) + (1.032), (1.03) + (2.007) + (1.033), (I.03) + (2.007) + (1.063), (1.03) + (2.007) + (1.067), (1.03) + (2.007) + (2.001), (1.03) + (2.007) + (2.002), (I.03) + (2.007) + (2.005), (1.03) + (2.007) + (2.008), (1.03) + (2.007) + (2.010), (1.03) + (2.007) + (2.012), (I.03) + (2.007) + (2.014), (1.03) + (2.007) + (2.016), (1.03) + (2.007) + (2.018), (1.03) + (2.007) + (2.031), (I.03) + (2.007) + (3.003), (1.03) + (2.007) + (3.011), (1.03) + (2.007) + (3.012), (1.03) + (2.007) + (3.014), (I.03) + (2.007) + (3.017), (1.03) + (2.007) + (3.019), (1.03) + (2.007) + (3.021), (1.03) + (2.007) + (3.022), (I.03) + (2.007) + (3.025), (1.03) + (2.007) + (4.007), (1.03) + (2.007) + (5.004), (1.03) + (2.007) + (5.005), (I.03) + (2.007) + (5.008), (1.03) + (2.007) + (5.009), (1.03) + (2.007) + (5.012), (1.03) + (2.007) + (5.013), (I.03) + (2.007) + (6.005), (1.03) + (2.007) + (7.005), (1.03) + (2.007) + (8.001), (1.03) + (2.007) + (9.002), (I.03) + (2.007) + (10.001), (1.03) + (2.007) + (10.002), (1.03) + (2.007) + (12.003), (1.03) + (2.007) + (12.004), (1.03) + (2.007) + (13.001), (1.03) + (2.007) + (13.004), (1.03) + (2.007) + (14.001), (1.03) + (2.007) + (15.025), (1.03) + (2.007) + (16.01),

(I.03) + (2.008) + (1.001), (1.03) + (2.008) + (1.002), (1.03) + (2.008) + (1.003), (1.03) + (2.008) + (1.015), (I.03) + (2.008) + (1.016), (1.03) + (2.008) + (1.017), (1.03) + (2.008) + (1.018), (1.03) + (2.008) + (1.024), (I.03) + (2.008) + (1.026), (1.03) + (2.008) + (1.027), (1.03) + (2.008) + (1.032), (1.03) + (2.008) + (1.033), (I.03) + (2.008) + (1.063), (1.03) + (2.008) + (1.067), (1.03) + (2.008) + (2.001), (1.03) + (2.008) + (2.002), (I.03) + (2.008) + (2.005), (1.03) + (2.008) + (2.007), (1.03) + (2.008) + (2.010), (1.03) + (2.008) + (2.012), (I.03) + (2.008) + (2.014), (1.03) + (2.008) + (2.016), (1.03) + (2.008) + (2.018), (1.03) + (2.008) + (2.031), (I.03) + (2.008) + (3.003), (1.03) + (2.008) + (3.011), (1.03) + (2.008) + (3.012), (1.03) + (2.008) + (3.014), (I.03) + (2.008) + (3.017), (1.03) + (2.008) + (3.019), (1.03) + (2.008) + (3.021), (1.03) + (2.008) + (3.022), (I.03) + (2.008) + (3.025), (1.03) + (2.008) + (4.007), (1.03) + (2.008) + (5.004), (1.03) + (2.008) + (5.005), (I.03) + (2.008) + (5.008), (1.03) + (2.008) + (5.009), (1.03) + (2.008) + (5.012), (1.03) + (2.008) + (5.013), (I.03) + (2.008) + (6.005), (1.03) + (2.008) + (7.005), (1.03) + (2.008) + (8.001), (1.03) + (2.008) + (9.002), (I.03) + (2.008) + (10.001), (1.03) + (2.008) + (10.002), (1.03) + (2.008) + (12.003), (1.03) + (2.008) + (12.004), (1.03) + (2.008) + (13.001), (1.03) + (2.008) + (13.004), (1.03) + (2.008) + (14.001), (1.03) + (2.008) + (15.025), (1.03) + (2.008) + (16.01),

(I.03) + (2.010) + (1.001), (1.03) + (2.010) + (1.002), (1.03) + (2.010) + (1.003), (1.03) + (2.010) + (1.015), (I.03) + (2.010) + (1.016), (1.03) + (2.010) + (1.017), (1.03) + (2.010) + (1.018), (1.03) + (2.010) + (1.024), (I.03) + (2.010) + (1.026), (1.03) + (2.010) + (1.027), (1.03) + (2.010) + (1.032), (1.03) + (2.010) + (1.033), (I.03) + (2.010) + (1.063), (1.03) + (2.010) + (1.067), (1.03) + (2.010) + (2.001), (1.03) + (2.010) + (2.002), (I.03) + (2.010) + (2.005), (1.03) + (2.010) + (2.007), (1.03) + (2.010) + (2.008), (1.03) + (2.010) + (2.012), (I.03) + (2.010) + (2.014), (1.03) + (2.010) + (2.016), (1.03) + (2.010) + (2.018), (1.03) + (2.010) + (2.031), (I.03) + (2.010) + (3.003), (1.03) + (2.010) + (3.011),

(1.03) + (2.010) + (3.012), (1.03) + (2.010) + (3.014), (I.03) + (2.010) + (3.017), (1.03) + (2.010) + (3.019), (1.03) + (2.010) + (3.021), (1.03) + (2.010) + (3.022), (I.03) + (2.010) + (3.025), (1.03) + (2.010) + (4.007), (1.03) + (2.010) + (5.004), (1.03) + (2.010) + (5.005), (I.03) + (2.010) + (5.008), (1.03) + (2.010) + (5.009), (1.03) + (2.010) + (5.012), (1.03) + (2.010) + (5.013), (I.03) + (2.010) + (6.005), (1.03) + (2.010) + (7.005), (1.03) + (2.010) + (8.001), (1.03) + (2.010) + (9.002), (I.03) + (2.010) + (10.001), (1.03) + (2.010) + (10.002), (1.03) + (2.010) + (12.003), (1.03) + (2.010) + (12.004), (1.03) + (2.010) + (13.001), (1.03) + (2.010) + (13.004), (1.03) + (2.010) + (14.001), (1.03) + (2.010) + (15.025), (1.03) + (2.010) + (16.01),

(I.03) + (2.012) + (1.001), (1.03) + (2.012) + (1.002), (1.03) + (2.012) + (1.003), (1.03) + (2.012) + (1.015), (I.03) + (2.012) + (1.016), (1.03) + (2.012) + (1.017), (1.03) + (2.012) + (1.018), (1.03) + (2.012) + (1.024), (I.03) + (2.012) + (1.026), (1.03) + (2.012) + (1.027), (1.03) + (2.012) + (1.032), (1.03) + (2.012) + (1.033), (I.03) + (2.012) + (1.063), (1.03) + (2.012) + (1.067), (1.03) + (2.012) + (2.001), (1.03) + (2.012) + (2.002), (I.03) + (2.012) + (2.005), (1.03) + (2.012) + (2.007), (1.03) + (2.012) + (2.008), (1.03) + (2.012) + (2.010), (I.03) + (2.012) + (2.014), (1.03) + (2.012) + (2.016), (1.03) + (2.012) + (2.018), (1.03) + (2.012) + (2.031), (I.03) + (2.012) + (3.003), (1.03) + (2.012) + (3.011), (1.03) + (2.012) + (3.012), (1.03) + (2.012) + (3.014), (I.03) + (2.012) + (3.017), (1.03) + (2.012) + (3.019), (1.03) + (2.012) + (3.021), (1.03) + (2.012) + (3.022), (I.03) + (2.012) + (3.025), (1.03) + (2.012) + (4.007), (1.03) + (2.012) + (5.004), (1.03) + (2.012) + (5.005), (I.03) + (2.012) + (5.008), (1.03) + (2.012) + (5.009), (1.03) + (2.012) + (5.012), (1.03) + (2.012) + (5.013), (I.03) + (2.012) + (6.005), (1.03) + (2.012) + (7.005), (1.03) + (2.012) + (8.001), (1.03) + (2.012) + (9.002), (I.03) + (2.012) + (10.001), (1.03) + (2.012) + (10.002), (1.03) + (2.012) + (12.003), (1.03) + (2.012) + (12.004), (1.03) + (2.012) + (13.001), (1.03) + (2.012) + (13.004), (1.03) + (2.012) + (14.001), (1.03) + (2.012) + (15.025), (1.03) + (2.012) + (16.01),

(I.03) + (2.014) + (1.001), (1.03) + (2.014) + (1.002), (1.03) + (2.014) + (1.003), (1.03) + (2.014) + (1.015), (I.03) + (2.014) + (1.016), (1.03) + (2.014) + (1.017), (1.03) + (2.014) + (1.018), (1.03) + (2.014) + (1.024), (I.03) + (2.014) + (1.026), (1.03) + (2.014) + (1.027), (1.03) + (2.014) + (1.032), (1.03) + (2.014) + (1.033), (I.03) + (2.014) + (1.063), (1.03) + (2.014) + (1.067), (1.03) + (2.014) + (2.001), (1.03) + (2.014) + (2.002), (I.03) + (2.014) + (2.005), (1.03) + (2.014) + (2.007), (1.03) + (2.014) + (2.008), (1.03) + (2.014) + (2.010), (I.03) + (2.014) + (2.012), (1.03) + (2.014) + (2.016), (1.03) + (2.014) + (2.018), (1.03) + (2.014) + (2.031), (I.03) + (2.014) + (3.003), (1.03) + (2.014) + (3.011), (1.03) + (2.014) + (3.012), (1.03) + (2.014) + (3.014), (I.03) + (2.014) + (3.017), (1.03) + (2.014) + (3.019), (1.03) + (2.014) + (3.021), (1.03) + (2.014) + (3.022), (I.03) + (2.014) + (3.025), (1.03) + (2.014) + (4.007), (1.03) + (2.014) + (5.004), (1.03) + (2.014) + (5.005), (I.03) + (2.014) + (5.008), (1.03) + (2.014) + (5.009), (1.03) + (2.014) + (5.012), (1.03) + (2.014) + (5.013), (I.03) + (2.014) + (6.005), (1.03) + (2.014) + (7.005), (1.03) + (2.014) + (8.001), (1.03) + (2.014) + (9.002), (I.03) + (2.014) + (10.001), (1.03) + (2.014) + (10.002), (1.03) + (2.014) + (12.003), (1.03) + (2.014) + (12.004), (1.03) + (2.014) + (13.001), (1.03) + (2.014) + (13.004), (1.03) + (2.014) + (14.001), (1.03) + (2.014) + (15.025), (1.03) + (2.014) + (16.01),

(I.03) + (2.016) + (1.001), (1.03) + (2.016) + (1.002), (1.03) + (2.016) + (1.003), (1.03) + (2.016) + (1.015), (I.03) + (2.016) + (1.016), (1.03) + (2.016) + (1.017), (1.03) + (2.016) + (1.018), (1.03) + (2.016) + (1.024), (I.03) + (2.016) + (1.026), (1.03) + (2.016) + (1.027), (1.03) + (2.016) + (1.032), (1.03) + (2.016) + (1.033), (I.03) + (2.016) + (1.063), (1.03) + (2.016) + (1.067), (1.03) + (2.016) + (2.001), (1.03) + (2.016) + (2.002), (I.03) + (2.016) + (2.005), (1.03) + (2.016) + (2.007), (1.03) + (2.016) + (2.008), (1.03) + (2.016) + (2.010), (I.03) + (2.016) + (2.012), (1.03) + (2.016) + (2.014), (1.03) + (2.016) + (2.018), (1.03) + (2.016) + (2.031), (I.03) + (2.016) + (3.003), (1.03) + (2.016) + (3.011), (1.03) + (2.016) + (3.012), (1.03) + (2.016) + (3.014), (I.03) + (2.016) + (3.017), (1.03) + (2.016) + (3.019), (1.03) + (2.016) + (3.021), (1.03) + (2.016) + (3.022), (I.03) + (2.016) + (3.025), (1.03) + (2.016) + (4.007), (1.03) + (2.016) + (5.004), (1.03) + (2.016) + (5.005), (I.03) + (2.016) + (5.008), (1.03) + (2.016) + (5.009), (1.03) + (2.016) + (5.012), (1.03) + (2.016) + (5.013), (I.03) + (2.016) + (6.005), (1.03) + (2.016) + (7.005), (1.03) + (2.016) + (8.001), (1.03) + (2.016) + (9.002), (I.03) + (2.016) + (10.001), (1.03) + (2.016) + (10.002), (1.03) + (2.016) + (12.003), (1.03) + (2.016) + (12.004), (1.03) + (2.016) + (13.001), (1.03) + (2.016) + (13.004), (1.03) + (2.016) + (14.001), (1.03) + (2.016) + (15.025), (1.03) + (2.016) + (16.01),

(I.03) + (2.018) + (1.001), (1.03) + (2.018) + (1.002), (1.03) + (2.018) + (1.003), (1.03) + (2.018) + (1.015), (I.03) + (2.018) + (1.016), (1.03) + (2.018) + (1.017), (1.03) + (2.018) + (1.018), (1.03) + (2.018) + (1.024), (I.03) + (2.018) + (1.026), (1.03) + (2.018) + (1.027), (1.03) + (2.018) + (1.032), (1.03) + (2.018) + (1.033), (I.03) + (2.018) + (1.063), (1.03) + (2.018) + (1.067), (1.03) + (2.018) + (2.001), (1.03) + (2.018) + (2.002), (I.03) + (2.018) + (2.005), (1.03) + (2.018) + (2.007), (1.03) + (2.018) + (2.008), (1.03) + (2.018) + (2.010), (I.03) + (2.018) + (2.012), (1.03) + (2.018) + (2.014), (1.03) + (2.018) + (2.016), (1.03) + (2.018) + (2.031), (I.03) + (2.018) + (3.003), (1.03) + (2.018) + (3.011), (1.03) + (2.018) + (3.012), (1.03) + (2.018) + (3.014), (I.03) + (2.018) + (3.017), (1.03) + (2.018) + (3.019), (1.03) + (2.018) + (3.021), (1.03) + (2.018) + (3.022), (I.03) + (2.018) + (3.025), (1.03) + (2.018) + (4.007), (1.03) + (2.018)

+ (5.004), (1.03) + (2.018) + (5.005), (I.03) + (2.018) + (5.008), (1.03) + (2.018) + (5.009), (1.03) + (2.018) + (5.012), (1.03) + (2.018) + (5.013), (I.03) + (2.018) + (6.005), (1.03) + (2.018) + (7.005), (1.03) + (2.018) + (8.001), (1.03) + (2.018) + (9.002), (I.03) + (2.018) + (10.001), (1.03) + (2.018) + (10.002), (1.03) + (2.018) + (12.003), (1.03) + (2.018) + (12.004), (1.03) + (2.018) + (13.001), (1.03) + (2.018) + (13.004), (1.03) + (2.018) + (14.001), (1.03) + (2.018) + (15.025), (1.03) + (2.018) + (16.01),

(I.03) + (2.031) + (1.001), (I.03) + (2.031) + (1.002), (I.03) + (2.031) + (1.003), (I.03) + (2.031) + (1.015), (I.03) + (2.031) + (1.016), (1.03) + (2.031) + (1.017), (I.03) + (2.031) + (1.018), (I.03) + (2.031) + (1.024), (I.03) + (2.031) + (1.026), (I.03) + (2.031) + (1.027), (1.03) + (2.031) + (1.032), (1.03) + (2.031) + (1.033), (I.03) + (2.031) + (1.063), (I.03) + (2.031) + (1.067), (1.03) + (2.031) + (2.001), (1.03) + (2.031) + (2.002), (I.03) + (2.031) + (2.005), (I.03) + (2.031) + (2.007), (I.03) + (2.031) + (2.008), (I.03) + (2.031) + (2.010), (I.03) + (2.031) + (2.012), (I.03) + (2.031) + (2.014), (I.03) + (2.031) + (2.016), (1.03) + (2.031) + (2.018), (I.03) + (2.031) + (3.003), (I.03) + (2.031) + (3.011), (I.03) + (2.031) + (3.012), (I.03) + (2.031) + (3.014), (I.03) + (2.031) + (3.017), (I.03) + (2.031) + (3.019), (I.03) + (2.031) + (3.021), (I.03) + (2.031) + (3.022), (I.03) + (2.031) + (3.025), (I.03) + (2.031) + (4.007), (I.03) + (2.031) + (5.004), (I.03) + (2.031) + (5.005), (I.03) + (2.031) + (5.008), (I.03) + (2.031) + (5.009), (I.03) + (2.031) + (5.012), (I.03) + (2.031) + (5.013), (I.03) + (2.031) + (6.005), (I.03) + (2.031) + (7.005), (I.03) + (2.031) + (8.001), (I.03) + (2.031) + (9.002), (I.03) + (2.031) + (10.001), (I.03) + (2.031) + (10.002), (I.03) + (2.031) + (12.003), (I.03) + (2.031) + (12.004), (I.03) + (2.031) + (13.001), (I.03) + (2.031) + (13.004), (I.03) + (2.031) + (14.001), (I.03) + (2.031) + (15.025), (I.03) + (2.031) + (16.01),

(I.03) + (3.003) + (1.001), (I.03) + (3.003) + (1.002), (I.03) + (3.003) + (1.003), (I.03) + (3.003) + (1.015), (I.03) + (3.003) + (1.016), (I.03) + (3.003) + (1.017), (I.03) + (3.003) + (1.018), (I.03) + (3.003) + (1.024), (I.03) + (3.003) + (1.026), (I.03) + (3.003) + (1.027), (I.03) + (3.003) + (1.032), (I.03) + (3.003) + (1.033), (I.03) + (3.003) + (1.063), (I.03) + (3.003) + (1.067), (I.03) + (3.003) + (2.001), (1.03) + (3.003) + (2.002), (I.03) + (3.003) + (2.005), (I.03) + (3.003) + (2.007), (I.03) + (3.003) + (2.008), (1.03) + (3.003) + (2.010), (I.03) + (3.003) + (2.012), (1.03) + (3.003) + (2.014), (1.03) + (3.003) + (2.016), (1.03) + (3.003) + (2.018), (I.03) + (3.003) + (2.031), (1.03) + (3.003) + (3.011), (1.03) + (3.003) + (3.012), (1.03) + (3.003) + (3.014), (I.03) + (3.003) + (3.017), (1.03) + (3.003) + (3.019), (1.03) + (3.003) + (3.021), (1.03) + (3.003) + (3.022), (I.03) + (3.003) + (3.025), (1.03) + (3.003) + (4.007), (1.03) + (3.003) + (5.004), (I.03) + (3.003) + (5.005), (I.03) + (3.003) + (5.008), (I.03) + (3.003) + (5.009), (I.03) + (3.003) + (5.012), (I.03) + (3.003) + (5.013), (I.03) + (3.003) + (6.005), (I.03) + (3.003) + (7.005), (I.03) + (3.003) + (8.001), (1.03) + (3.003) + (9.002), (I.03) + (3.003) + (10.001), (1.03) + (3.003) + (10.002), (1.03) + (3.003) + (12.003), (1.03) + (3.003) + (12.004), (1.03) + (3.003) + (13.001), (1.03) + (3.003) + (13.004), (1.03) + (3.003) + (14.001), (1.03) + (3.003) + (15.025), (1.03) + (3.003) + (16.01),

(I.03) + (3.011) + (1.001), (I.03) + (3.011) + (1.002), (I.03) + (3.011) + (1.003), (I.03) + (3.011) + (1.015), (I.03) + (3.011) + (1.016), (I.03) + (3.011) + (1.017), (I.03) + (3.011) + (1.018), (I.03) + (3.011) + (1.024), (I.03) + (3.011) + (1.026), (I.03) + (3.011) + (1.027), (I.03) + (3.011) + (1.032), (I.03) + (3.011) + (1.033), (I.03) + (3.011) + (1.063), (I.03) + (3.011) + (1.067), (I.03) + (3.011) + (2.001), (I.03) + (3.011) + (2.002), (I.03) + (3.011) + (2.005), (I.03) + (3.011) + (2.007), (I.03) + (3.011) + (2.008), (1.03) + (3.011) + (2.010), (I.03) + (3.011) + (2.012), (I.03) + (3.011) + (2.014), (I.03) + (3.011) + (2.016), (I.03) + (3.011) + (2.018), (I.03) + (3.011) + (2.031), (I.03) + (3.011) + (3.003), (1.03) + (3.011) + (3.012), (1.03) + (3.011) + (3.014), (I.03) + (3.011) + (3.017), (I.03) + (3.011) + (3.019), (I.03) + (3.011) + (3.021), (I.03) + (3.011) + (3.022), (I.03) + (3.011) + (3.025), (I.03) + (3.011) + (4.007), (1.03) + (3.011) + (5.004), (1.03) + (3.011) + (5.005), (I.03) + (3.011) + (5.008), (1.03) + (3.011) + (5.009), (1.03) + (3.011) + (5.012), (1.03) + (3.011) + (5.013), (I.03) + (3.011) + (6.005), (1.03) + (3.011) + (7.005), (1.03) + (3.011) + (8.001), (I.03) + (3.011) + (9.002), (I.03) + (3.011) + (10.001), (I.03) + (3.011) + (10.002), (I.03) + (3.011) + (12.003), (I.03) + (3.011) + (12.004), (I.03) + (3.011) + (13.001), (I.03) + (3.011) + (13.004), (I.03) + (3.011) + (14.001), (1.03) + (3.011) + (15.025), (1.03) + (3.011) + (16.01),

(I.03) + (3.012) + (1.001), (I.03) + (3.012) + (1.002), (I.03) + (3.012) + (1.003), (I.03) + (3.012) + (1.015), (I.03) + (3.012) + (1.016), (I.03) + (3.012) + (1.017), (I.03) + (3.012) + (1.018), (I.03) + (3.012) + (1.024), (I.03) + (3.012) + (1.026), (I.03) + (3.012) + (1.027), (I.03) + (3.012) + (1.032), (I.03) + (3.012) + (1.033), (I.03) + (3.012) + (1.063), (I.03) + (3.012) + (1.067), (I.03) + (3.012) + (2.001), (I.03) + (3.012) + (2.002), (I.03) + (3.012) + (2.005), (I.03) + (3.012) + (2.007), (I.03) + (3.012) + (2.008), (1.03) + (3.012) + (2.010), (I.03) + (3.012) + (2.012), (I.03) + (3.012) + (2.014), (1.03) + (3.012) + (2.016), (I.03) + (3.012) + (2.018), (I.03) + (3.012) + (2.031), (I.03) + (3.012) + (3.003), (I.03) + (3.012) + (3.011), (1.03) + (3.012) + (3.014), (I.03) + (3.012) + (3.017), (I.03) + (3.012) + (3.019), (I.03) + (3.012) + (3.021), (1.03) + (3.012) + (3.022), (I.03) + (3.012) + (3.025), (I.03) + (3.012) + (4.007), (I.03) + (3.012) + (5.004), (1.03) + (3.012) + (5.005), (I.03) + (3.012) + (5.008), (I.03) + (3.012) + (5.009), (I.03) + (3.012) + (5.012), (I.03) + (3.012) + (5.013), (I.03) + (3.012) + (6.005), (1.03) + (3.012) + (7.005), (I.03) + (3.012) + (8.001), (1.03) +

(3.012) + (9.002), (I.03) + (3.012) + (10.001), (I.03) + (3.012) + (10.002), (I.03) + (3.012) + (12.003), (I.03) + (3.012) + (12.004), (1.03) + (3.012) + (13.001), (1.03) + (3.012) + (13.004), (1.03) + (3.012) + (14.001), (1.03) + (3.012) + (15.025), (1.03) + (3.012) + (16.01),

(I.03) + (3.014) + (1.001), (1.03) + (3.014) + (1.002), (1.03) + (3.014) + (1.003), (1.03) + (3.014) + (1.015), (I.03) + (3.014) + (1.016), (1.03) + (3.014) + (1.017), (1.03) + (3.014) + (1.018), (1.03) + (3.014) + (1.024), (I.03) + (3.014) + (1.026), (1.03) + (3.014) + (1.027), (1.03) + (3.014) + (1.032), (1.03) + (3.014) + (1.033), (I.03) + (3.014) + (1.063), (1.03) + (3.014) + (1.067), (1.03) + (3.014) + (2.001), (1.03) + (3.014) + (2.002), (I.03) + (3.014) + (2.005), (1.03) + (3.014) + (2.007), (1.03) + (3.014) + (2.008), (1.03) + (3.014) + (2.010), (I.03) + (3.014) + (2.012), (1.03) + (3.014) + (2.014), (1.03) + (3.014) + (2.016), (1.03) + (3.014) + (2.018), (I.03) + (3.014) + (2.031), (1.03) + (3.014) + (3.003), (1.03) + (3.014) + (3.011), (1.03) + (3.014) + (3.012), (I.03) + (3.014) + (3.017), (1.03) + (3.014) + (3.019), (1.03) + (3.014) + (3.021), (1.03) + (3.014) + (3.022), (I.03) + (3.014) + (3.025), (1.03) + (3.014) + (4.007), (1.03) + (3.014) + (5.004), (1.03) + (3.014) + (5.005), (I.03) + (3.014) + (5.008), (1.03) + (3.014) + (5.009), (1.03) + (3.014) + (5.012), (1.03) + (3.014) + (5.013), (I.03) + (3.014) + (6.005), (1.03) + (3.014) + (7.005), (1.03) + (3.014) + (8.001), (1.03) + (3.014) + (9.002), (I.03) + (3.014) + (10.001), (1.03) + (3.014) + (10.002), (1.03) + (3.014) + (12.003), (1.03) + (3.014) + (12.004), (1.03) + (3.014) + (13.001), (1.03) + (3.014) + (13.004), (1.03) + (3.014) + (14.001), (1.03) + (3.014) + (15.025), (1.03) + (3.014) + (16.01),

(I.03) + (3.017) + (1.001), (1.03) + (3.017) + (1.002), (1.03) + (3.017) + (1.003), (1.03) + (3.017) + (1.015), (I.03) + (3.017) + (1.016), (1.03) + (3.017) + (1.017), (1.03) + (3.017) + (1.018), (1.03) + (3.017) + (1.024), (I.03) + (3.017) + (1.026), (1.03) + (3.017) + (1.027), (1.03) + (3.017) + (1.032), (1.03) + (3.017) + (1.033), (I.03) + (3.017) + (1.063), (1.03) + (3.017) + (1.067), (1.03) + (3.017) + (2.001), (1.03) + (3.017) + (2.002), (I.03) + (3.017) + (2.005), (1.03) + (3.017) + (2.007), (1.03) + (3.017) + (2.008), (1.03) + (3.017) + (2.010), (I.03) + (3.017) + (2.012), (1.03) + (3.017) + (2.014), (1.03) + (3.017) + (2.016), (1.03) + (3.017) + (2.018), (I.03) + (3.017) + (2.031), (1.03) + (3.017) + (3.003), (1.03) + (3.017) + (3.011), (1.03) + (3.017) + (3.012), (I.03) + (3.017) + (3.014), (1.03) + (3.017) + (3.019), (1.03) + (3.017) + (3.021), (1.03) + (3.017) + (3.022), (I.03) + (3.017) + (3.025), (1.03) + (3.017) + (4.007), (1.03) + (3.017) + (5.004), (1.03) + (3.017) + (5.005), (I.03) + (3.017) + (5.008), (1.03) + (3.017) + (5.009), (1.03) + (3.017) + (5.012), (1.03) + (3.017) + (5.013), (I.03) + (3.017) + (6.005), (1.03) + (3.017) + (7.005), (1.03) + (3.017) + (8.001), (1.03) + (3.017) + (9.002), (I.03) + (3.017) + (10.001), (1.03) + (3.017) + (10.002), (1.03) + (3.017) + (12.003), (1.03) + (3.017) + (12.004), (1.03) + (3.017) + (13.001), (1.03) + (3.017) + (13.004), (1.03) + (3.017) + (14.001), (1.03) + (3.017) + (15.025), (1.03) + (3.017) + (16.01),

(I.03) + (3.019) + (1.001), (1.03) + (3.019) + (1.002), (1.03) + (3.019) + (1.003), (1.03) + (3.019) + (1.015), (I.03) + (3.019) + (1.016), (1.03) + (3.019) + (1.017), (1.03) + (3.019) + (1.018), (1.03) + (3.019) + (1.024), (I.03) + (3.019) + (1.026), (1.03) + (3.019) + (1.027), (1.03) + (3.019) + (1.032), (1.03) + (3.019) + (1.033), (I.03) + (3.019) + (1.063), (1.03) + (3.019) + (1.067), (1.03) + (3.019) + (2.001), (1.03) + (3.019) + (2.002), (I.03) + (3.019) + (2.005), (1.03) + (3.019) + (2.007), (1.03) + (3.019) + (2.008), (1.03) + (3.019) + (2.010), (I.03) + (3.019) + (2.012), (1.03) + (3.019) + (2.014), (1.03) + (3.019) + (2.016), (1.03) + (3.019) + (2.018), (I.03) + (3.019) + (2.031), (1.03) + (3.019) + (3.003), (1.03) + (3.019) + (3.011), (1.03) + (3.019) + (3.012), (I.03) + (3.019) + (3.014), (1.03) + (3.019) + (3.017), (1.03) + (3.019) + (3.021), (1.03) + (3.019) + (3.022), (I.03) + (3.019) + (3.025), (1.03) + (3.019) + (4.007), (1.03) + (3.019) + (5.004), (1.03) + (3.019) + (5.005), (I.03) + (3.019) + (5.008), (1.03) + (3.019) + (5.009), (1.03) + (3.019) + (5.012), (1.03) + (3.019) + (5.013), (I.03) + (3.019) + (6.005), (1.03) + (3.019) + (7.005), (1.03) + (3.019) + (8.001), (1.03) + (3.019) + (9.002), (I.03) + (3.019) + (10.001), (1.03) + (3.019) + (10.002), (1.03) + (3.019) + (12.003), (1.03) + (3.019) + (12.004), (1.03) + (3.019) + (13.001), (1.03) + (3.019) + (13.004), (1.03) + (3.019) + (14.001), (1.03) + (3.019) + (15.025), (1.03) + (3.019) + (16.01),

(I.03) + (3.021) + (1.001), (1.03) + (3.021) + (1.002), (1.03) + (3.021) + (1.003), (1.03) + (3.021) + (1.015), (I.03) + (3.021) + (1.016), (1.03) + (3.021) + (1.017), (1.03) + (3.021) + (1.018), (1.03) + (3.021) + (1.024), (I.03) + (3.021) + (1.026), (1.03) + (3.021) + (1.027), (1.03) + (3.021) + (1.032), (1.03) + (3.021) + (1.033), (I.03) + (3.021) + (1.063), (1.03) + (3.021) + (1.067), (1.03) + (3.021) + (2.001), (1.03) + (3.021) + (2.002), (I.03) + (3.021) + (2.005), (1.03) + (3.021) + (2.007), (1.03) + (3.021) + (2.008), (1.03) + (3.021) + (2.010), (I.03) + (3.021) + (2.012), (1.03) + (3.021) + (2.014), (1.03) + (3.021) + (2.016), (1.03) + (3.021) + (2.018), (I.03) + (3.021) + (2.031), (1.03) + (3.021) + (3.003), (1.03) + (3.021) + (3.011), (1.03) + (3.021) + (3.012), (I.03) + (3.021) + (3.014), (1.03) + (3.021) + (3.017), (1.03) + (3.021) + (3.019), (1.03) + (3.021) + (3.022), (I.03) + (3.021) + (3.025), (1.03) + (3.021) + (4.007), (1.03) + (3.021) + (5.004), (1.03) + (3.021) + (5.005), (I.03) + (3.021) + (5.008), (1.03) + (3.021) + (5.009), (1.03) + (3.021) + (5.012), (1.03) + (3.021) + (5.013), (I.03) + (3.021) + (6.005), (1.03) + (3.021) + (7.005), (1.03) + (3.021) + (8.001), (1.03) + (3.021) + (9.002), (I.03) + (3.021) + (10.001), (1.03) + (3.021) + (10.002), (1.03) + (3.021) + (12.003), (1.03) + (3.021) + (12.004), (1.03) + (3.021) + (13.001), (1.03) + (3.021) + (13.004), (1.03) + (3.021) + (14.001), (1.03) + (3.021) +

(15.025), (1.03) + (3.021) + (16.01),

(I.03) + (3.022) + (1.001), (1.03) + (3.022) + (1.002), (1.03) + (3.022) + (1.003), (1.03) + (3.022) + (1.015), (I.03) + (3.022) + (1.016), (1.03) + (3.022) + (1.017), (1.03) + (3.022) + (1.018), (1.03) + (3.022) + (1.024), (I.03) + (3.022) + (1.026), (1.03) + (3.022) + (1.027), (1.03) + (3.022) + (1.032), (1.03) + (3.022) + (1.033), (I.03) + (3.022) + (1.063), (1.03) + (3.022) + (1.067), (1.03) + (3.022) + (2.001), (1.03) + (3.022) + (2.002), (I.03) + (3.022) + (2.005), (1.03) + (3.022) + (2.007), (1.03) + (3.022) + (2.008), (1.03) + (3.022) + (2.010), (I.03) + (3.022) + (2.012), (1.03) + (3.022) + (2.014), (1.03) + (3.022) + (2.016), (1.03) + (3.022) + (2.018), (I.03) + (3.022) + (2.031), (1.03) + (3.022) + (3.003), (1.03) + (3.022) + (3.011), (1.03) + (3.022) + (3.012), (I.03) + (3.022) + (3.014), (1.03) + (3.022) + (3.017), (1.03) + (3.022) + (3.019), (1.03) + (3.022) + (3.021), (I.03) + (3.022) + (3.025), (1.03) + (3.022) + (4.007), (1.03) + (3.022) + (5.004), (1.03) + (3.022) + (5.005), (I.03) + (3.022) + (5.008), (1.03) + (3.022) + (5.009), (1.03) + (3.022) + (5.012), (1.03) + (3.022) + (5.013), (I.03) + (3.022) + (6.005), (1.03) + (3.022) + (7.005), (1.03) + (3.022) + (8.001), (1.03) + (3.022) + (9.002), (I.03) + (3.022) + (10.001), (1.03) + (3.022) + (10.002), (1.03) + (3.022) + (12.003), (1.03) + (3.022) + (12.004), (1.03) + (3.022) + (13.001), (1.03) + (3.022) + (13.004), (1.03) + (3.022) + (14.001), (1.03) + (3.022) + (15.025), (1.03) + (3.022) + (16.01),

(I.03) + (3.025) + (1.001), (1.03) + (3.025) + (1.002), (1.03) + (3.025) + (1.003), (1.03) + (3.025) + (1.015), (I.03) + (3.025) + (1.016), (1.03) + (3.025) + (1.017), (1.03) + (3.025) + (1.018), (1.03) + (3.025) + (1.024), (I.03) + (3.025) + (1.026), (1.03) + (3.025) + (1.027), (1.03) + (3.025) + (1.032), (1.03) + (3.025) + (1.033), (I.03) + (3.025) + (1.063), (1.03) + (3.025) + (1.067), (1.03) + (3.025) + (2.001), (1.03) + (3.025) + (2.002), (I.03) + (3.025) + (2.005), (1.03) + (3.025) + (2.007), (1.03) + (3.025) + (2.008), (1.03) + (3.025) + (2.010), (I.03) + (3.025) + (2.012), (1.03) + (3.025) + (2.014), (1.03) + (3.025) + (2.016), (1.03) + (3.025) + (2.018), (I.03) + (3.025) + (2.031), (1.03) + (3.025) + (3.003), (1.03) + (3.025) + (3.011), (1.03) + (3.025) + (3.012), (I.03) + (3.025) + (3.014), (1.03) + (3.025) + (3.017), (1.03) + (3.025) + (3.019), (1.03) + (3.025) + (3.021), (I.03) + (3.025) + (3.022), (1.03) + (3.025) + (4.007), (1.03) + (3.025) + (5.004), (1.03) + (3.025) + (5.005), (I.03) + (3.025) + (5.008), (1.03) + (3.025) + (5.009), (1.03) + (3.025) + (5.012), (1.03) + (3.025) + (5.013), (I.03) + (3.025) + (6.005), (1.03) + (3.025) + (7.005), (1.03) + (3.025) + (8.001), (1.03) + (3.025) + (9.002), (I.03) + (3.025) + (10.001), (1.03) + (3.025) + (10.002), (1.03) + (3.025) + (12.003), (1.03) + (3.025) + (12.004), (1.03) + (3.025) + (13.001), (1.03) + (3.025) + (13.004), (1.03) + (3.025) + (14.001), (1.03) + (3.025) + (15.025), (1.03) + (3.025) + (16.01),

(I.03) + (4.007) + (1.001), (1.03) + (4.007) + (1.002), (1.03) + (4.007) + (1.003), (1.03) + (4.007) + (1.015), (I.03) + (4.007) + (1.016), (1.03) + (4.007) + (1.017), (1.03) + (4.007) + (1.018), (1.03) + (4.007) + (1.024), (I.03) + (4.007) + (1.026), (1.03) + (4.007) + (1.027), (1.03) + (4.007) + (1.032), (1.03) + (4.007) + (1.033), (I.03) + (4.007) + (1.063), (1.03) + (4.007) + (1.067), (1.03) + (4.007) + (2.001), (1.03) + (4.007) + (2.002), (I.03) + (4.007) + (2.005), (1.03) + (4.007) + (2.007), (1.03) + (4.007) + (2.008), (1.03) + (4.007) + (2.010), (I.03) + (4.007) + (2.012), (1.03) + (4.007) + (2.014), (1.03) + (4.007) + (2.016), (1.03) + (4.007) + (2.018), (I.03) + (4.007) + (2.031), (1.03) + (4.007) + (3.003), (1.03) + (4.007) + (3.011), (1.03) + (4.007) + (3.012), (I.03) + (4.007) + (3.014), (1.03) + (4.007) + (3.017), (1.03) + (4.007) + (3.019), (1.03) + (4.007) + (3.021), (I.03) + (4.007) + (3.022), (1.03) + (4.007) + (3.025), (1.03) + (4.007) + (5.004), (1.03) + (4.007) + (5.005), (I.03) + (4.007) + (5.008), (1.03) + (4.007) + (5.009), (1.03) + (4.007) + (5.012), (1.03) + (4.007) + (5.013), (I.03) + (4.007) + (6.005), (1.03) + (4.007) + (7.005), (1.03) + (4.007) + (8.001), (1.03) + (4.007) + (9.002), (I.03) + (4.007) + (10.001), (1.03) + (4.007) + (10.002), (1.03) + (4.007) + (12.003), (1.03) + (4.007) + (12.004), (1.03) + (4.007) + (13.001), (1.03) + (4.007) + (13.004), (1.03) + (4.007) + (14.001), (1.03) + (4.007) + (15.025), (1.03) + (4.007) + (16.01),

(I.03) + (5.004) + (1.001), (1.03) + (5.004) + (1.002), (1.03) + (5.004) + (1.003), (1.03) + (5.004) + (1.015), (I.03) + (5.004) + (1.016), (1.03) + (5.004) + (1.017), (1.03) + (5.004) + (1.018), (1.03) + (5.004) + (1.024), (I.03) + (5.004) + (1.026), (1.03) + (5.004) + (1.027), (1.03) + (5.004) + (1.032), (1.03) + (5.004) + (1.033), (I.03) + (5.004) + (1.063), (1.03) + (5.004) + (1.067), (1.03) + (5.004) + (2.001), (1.03) + (5.004) + (2.002), (I.03) + (5.004) + (2.005), (1.03) + (5.004) + (2.007), (1.03) + (5.004) + (2.008), (1.03) + (5.004) + (2.010), (I.03) + (5.004) + (2.012), (1.03) + (5.004) + (2.014), (1.03) + (5.004) + (2.016), (1.03) + (5.004) + (2.018), (I.03) + (5.004) + (2.031), (1.03) + (5.004) + (3.003), (1.03) + (5.004) + (3.011), (1.03) + (5.004) + (3.012), (I.03) + (5.004) + (3.014), (1.03) + (5.004) + (3.017), (1.03) + (5.004) + (3.019), (1.03) + (5.004) + (3.021), (I.03) + (5.004) + (3.022), (1.03) + (5.004) + (3.025), (1.03) + (5.004) + (4.007), (1.03) + (5.004) + (5.005), (I.03) + (5.004) + (5.008), (1.03) + (5.004) + (5.009), (1.03) + (5.004) + (5.012), (1.03) + (5.004) + (5.013), (I.03) + (5.004) + (6.005), (1.03) + (5.004) + (7.005), (1.03) + (5.004) + (8.001), (1.03) + (5.004) + (9.002), (I.03) + (5.004) + (10.001), (1.03) + (5.004) + (10.002), (1.03) + (5.004) + (12.003), (1.03) + (5.004) + (12.004), (1.03) + (5.004) + (13.001), (1.03) + (5.004) + (13.004), (1.03) + (5.004) + (14.001), (1.03) + (5.004) + (15.025), (1.03) + (5.004) + (16.01),

(I.03) + (5.005) + (1.001), (1.03) + (5.005) + (1.002), (1.03) + (5.005) + (1.003), (1.03) + (5.005) + (1.015), (I.03) + (5.005) + (1.016), (1.03) + (5.005) + (1.017), (1.03) + (5.005) + (1.018), (1.03) + (5.005) + (1.024), (I.03) + (5.005) + (1.026), (1.03) + (5.005) + (1.027), (1.03) + (5.005) + (1.032), (1.03) + (5.005) + (1.033), (I.03) + (5.005) + (1.063), (1.03) + (5.005) + (1.067), (1.03) + (5.005) + (2.001), (1.03) + (5.005) + (2.002), (I.03) + (5.005) + (2.005), (1.03) + (5.005) + (2.007), (1.03) + (5.005) + (2.008), (1.03) + (5.005) + (2.010), (I.03) + (5.005) + (2.012), (1.03) + (5.005) + (2.014), (1.03) + (5.005) + (2.016), (1.03) + (5.005) + (2.018), (I.03) + (5.005) + (2.031), (1.03) + (5.005) + (3.003), (1.03) + (5.005) + (3.011), (1.03) + (5.005) + (3.012), (I.03) + (5.005) + (3.014), (1.03) + (5.005) + (3.017), (1.03) + (5.005) + (3.019), (1.03) + (5.005) + (3.021), (I.03) + (5.005) + (3.022), (1.03) + (5.005) + (3.025), (1.03) + (5.005) + (4.007), (1.03) + (5.005) + (5.004), (I.03) + (5.005) + (5.008), (1.03) + (5.005) + (5.009), (1.03) + (5.005) + (5.012), (1.03) + (5.005) + (5.013), (I.03) + (5.005) + (6.005), (1.03) + (5.005) + (7.005), (1.03) + (5.005) + (8.001), (1.03) + (5.005) + (9.002), (I.03) + (5.005) + (10.001), (1.03) + (5.005) + (10.002), (1.03) + (5.005) + (12.003), (1.03) + (5.005) + (12.004), (1.03) + (5.005) + (13.001), (1.03) + (5.005) + (13.004), (1.03) + (5.005) + (14.001), (1.03) + (5.005) + (15.025), (1.03) + (5.005) + (16.01),

(I.03) + (5.008) + (1.001), (1.03) + (5.008) + (1.002), (1.03) + (5.008) + (1.003), (1.03) + (5.008) + (1.015), (I.03) + (5.008) + (1.016), (1.03) + (5.008) + (1.017), (1.03) + (5.008) + (1.018), (1.03) + (5.008) + (1.024), (I.03) + (5.008) + (1.026), (1.03) + (5.008) + (1.027), (1.03) + (5.008) + (1.032), (1.03) + (5.008) + (1.033), (I.03) + (5.008) + (1.063), (1.03) + (5.008) + (1.067), (1.03) + (5.008) + (2.001), (1.03) + (5.008) + (2.002), (I.03) + (5.008) + (2.005), (1.03) + (5.008) + (2.007), (1.03) + (5.008) + (2.008), (1.03) + (5.008) + (2.010), (I.03) + (5.008) + (2.012), (1.03) + (5.008) + (2.014), (1.03) + (5.008) + (2.016), (1.03) + (5.008) + (2.018), (I.03) + (5.008) + (2.031), (1.03) + (5.008) + (3.003), (1.03) + (5.008) + (3.011), (1.03) + (5.008) + (3.012), (I.03) + (5.008) + (3.014), (1.03) + (5.008) + (3.017), (1.03) + (5.008) + (3.019), (1.03) + (5.008) + (3.021), (I.03) + (5.008) + (3.022), (1.03) + (5.008) + (3.025), (1.03) + (5.008) + (4.007), (1.03) + (5.008) + (5.004), (I.03) + (5.008) + (5.005), (1.03) + (5.008) + (5.009), (1.03) + (5.008) + (5.012), (1.03) + (5.008) + (5.013), (I.03) + (5.008) + (6.005), (1.03) + (5.008) + (7.005), (1.03) + (5.008) + (8.001), (1.03) + (5.008) + (9.002), (I.03) + (5.008) + (10.001), (1.03) + (5.008) + (10.002), (1.03) + (5.008) + (12.003), (1.03) + (5.008) + (12.004), (1.03) + (5.008) + (13.001), (1.03) + (5.008) + (13.004), (1.03) + (5.008) + (14.001), (1.03) + (5.008) + (15.025), (1.03) + (5.008) + (16.01),

(I.03) + (5.009) + (1.001), (1.03) + (5.009) + (1.002), (1.03) + (5.009) + (1.003), (1.03) + (5.009) + (1.015), (I.03) + (5.009) + (1.016), (1.03) + (5.009) + (1.017), (1.03) + (5.009) + (1.018), (1.03) + (5.009) + (1.024), (I.03) + (5.009) + (1.026), (1.03) + (5.009) + (1.027), (1.03) + (5.009) + (1.032), (1.03) + (5.009) + (1.033), (I.03) + (5.009) + (1.063), (1.03) + (5.009) + (1.067), (1.03) + (5.009) + (2.001), (1.03) + (5.009) + (2.002), (I.03) + (5.009) + (2.005), (1.03) + (5.009) + (2.007), (1.03) + (5.009) + (2.008), (1.03) + (5.009) + (2.010), (I.03) + (5.009) + (2.012), (1.03) + (5.009) + (2.014), (1.03) + (5.009) + (2.016), (1.03) + (5.009) + (2.018), (I.03) + (5.009) + (2.031), (1.03) + (5.009) + (3.003), (1.03) + (5.009) + (3.011), (1.03) + (5.009) + (3.012), (I.03) + (5.009) + (3.014), (1.03) + (5.009) + (3.017), (1.03) + (5.009) + (3.019), (1.03) + (5.009) + (3.021), (I.03) + (5.009) + (3.022), (1.03) + (5.009) + (3.025), (1.03) + (5.009) + (4.007), (1.03) + (5.009) + (5.004), (I.03) + (5.009) + (5.005), (1.03) + (5.009) + (5.008), (1.03) + (5.009) + (5.012), (1.03) + (5.009) + (5.013), (I.03) + (5.009) + (6.005), (1.03) + (5.009) + (7.005), (1.03) + (5.009) + (8.001), (1.03) + (5.009) + (9.002), (I.03) + (5.009) + (10.001), (1.03) + (5.009) + (10.002), (1.03) + (5.009) + (12.003), (1.03) + (5.009) + (12.004), (1.03) + (5.009) + (13.001), (1.03) + (5.009) + (13.004), (1.03) + (5.009) + (14.001), (1.03) + (5.009) + (15.025), (1.03) + (5.009) + (16.01),

(I.03) + (5.012) + (1.001), (1.03) + (5.012) + (1.002), (1.03) + (5.012) + (1.003), (1.03) + (5.012) + (1.015), (I.03) + (5.012) + (1.016), (1.03) + (5.012) + (1.017), (1.03) + (5.012) + (1.018), (1.03) + (5.012) + (1.024), (I.03) + (5.012) + (1.026), (1.03) + (5.012) + (1.027), (1.03) + (5.012) + (1.032), (1.03) + (5.012) + (1.033), (I.03) + (5.012) + (1.063), (1.03) + (5.012) + (1.067), (1.03) + (5.012) + (2.001), (1.03) + (5.012) + (2.002), (I.03) + (5.012) + (2.005), (1.03) + (5.012) + (2.007), (1.03) + (5.012) + (2.008), (1.03) + (5.012) + (2.010), (I.03) + (5.012) + (2.012), (1.03) + (5.012) + (2.014), (1.03) + (5.012) + (2.016), (1.03) + (5.012) + (2.018), (I.03) + (5.012) + (2.031), (1.03) + (5.012) + (3.003), (1.03) + (5.012) + (3.011), (1.03) + (5.012) + (3.012), (I.03) + (5.012) + (3.014), (1.03) + (5.012) + (3.017), (1.03) + (5.012) + (3.019), (1.03) + (5.012) + (3.021), (I.03) + (5.012) + (3.022), (1.03) + (5.012) + (3.025), (1.03) + (5.012) + (4.007), (1.03) + (5.012) + (5.004), (I.03) + (5.012) + (5.005), (1.03) + (5.012) + (5.008), (1.03) + (5.012) + (5.009), (1.03) + (5.012) + (5.013), (I.03) + (5.012) + (6.005), (1.03) + (5.012) + (7.005), (1.03) + (5.012) + (8.001), (1.03) + (5.012) + (9.002), (I.03) + (5.012) + (10.001), (1.03) + (5.012) + (10.002), (1.03) + (5.012) + (12.003), (1.03) + (5.012) + (12.004), (1.03) + (5.012) + (13.001), (1.03) + (5.012) + (13.004), (1.03) + (5.012) + (14.001), (1.03) + (5.012) + (15.025), (1.03) + (5.012) + (16.01),

(I.03) + (5.013) + (1.001), (1.03) + (5.013) + (1.002), (1.03) + (5.013) + (1.003), (1.03) + (5.013) + (1.015), (I.03) + (5.013) + (1.016), (1.03) + (5.013) + (1.017), (1.03) + (5.013) + (1.018), (1.03) + (5.013) + (1.024), (I.03) + (5.013)

+ (1.026), (1.03) + (5.013) + (1.027), (1.03) + (5.013) + (1.032), (1.03) + (5.013) + (1.033), (I.03) + (5.013) + (1.063), (1.03) + (5.013) + (1.067), (1.03) + (5.013) + (2.001), (1.03) + (5.013) + (2.002), (I.03) + (5.013) + (2.005), (1.03) + (5.013) + (2.007), (1.03) + (5.013) + (2.008), (1.03) + (5.013) + (2.010), (I.03) + (5.013) + (2.012), (1.03) + (5.013) + (2.014), (1.03) + (5.013) + (2.016), (1.03) + (5.013) + (2.018), (I.03) + (5.013) + (2.031), (1.03) + (5.013) + (3.003), (1.03) + (5.013) + (3.011), (1.03) + (5.013) + (3.012), (I.03) + (5.013) + (3.014), (1.03) + (5.013) + (3.017), (1.03) + (5.013) + (3.019), (1.03) + (5.013) + (3.021), (I.03) + (5.013) + (3.022), (1.03) + (5.013) + (3.025), (1.03) + (5.013) + (4.007), (1.03) + (5.013) + (5.004), (I.03) + (5.013) + (5.005), (1.03) + (5.013) + (5.008), (1.03) + (5.013) + (5.009), (1.03) + (5.013) + (5.012), (I.03) + (5.013) + (6.005), (1.03) + (5.013) + (7.005), (1.03) + (5.013) + (8.001), (1.03) + (5.013) + (9.002), (I.03) + (5.013) + (10.001), (1.03) + (5.013) + (10.002), (1.03) + (5.013) + (12.003), (1.03) + (5.013) + (12.004), (1.03) + (5.013) + (13.001), (1.03) + (5.013) + (13.004), (1.03) + (5.013) + (14.001), (1.03) + (5.013) + (15.025), (1.03) + (5.013) + (16.01),

(I.03) + (6.005) + (1.001), (1.03) + (6.005) + (1.002), (1.03) + (6.005) + (1.003), (1.03) + (6.005) + (1.015), (I.03) + (6.005) + (1.016), (1.03) + (6.005) + (1.017), (1.03) + (6.005) + (1.018), (1.03) + (6.005) + (1.024), (I.03) + (6.005) + (1.026), (1.03) + (6.005) + (1.027), (1.03) + (6.005) + (1.032), (1.03) + (6.005) + (1.033), (I.03) + (6.005) + (1.063), (1.03) + (6.005) + (1.067), (1.03) + (6.005) + (2.001), (1.03) + (6.005) + (2.002), (I.03) + (6.005) + (2.005), (1.03) + (6.005) + (2.007), (1.03) + (6.005) + (2.008), (1.03) + (6.005) + (2.010), (I.03) + (6.005) + (2.012), (1.03) + (6.005) + (2.014), (1.03) + (6.005) + (2.016), (1.03) + (6.005) + (2.018), (I.03) + (6.005) + (2.031), (1.03) + (6.005) + (3.003), (1.03) + (6.005) + (3.011), (1.03) + (6.005) + (3.012), (I.03) + (6.005) + (3.014), (1.03) + (6.005) + (3.017), (1.03) + (6.005) + (3.019), (1.03) + (6.005) + (3.021), (I.03) + (6.005) + (3.022), (1.03) + (6.005) + (3.025), (1.03) + (6.005) + (4.007), (1.03) + (6.005) + (5.004), (I.03) + (6.005) + (5.005), (1.03) + (6.005) + (5.008), (1.03) + (6.005) + (5.009), (1.03) + (6.005) + (5.012), (I.03) + (6.005) + (5.013), (1.03) + (6.005) + (7.005), (1.03) + (6.005) + (8.001), (1.03) + (6.005) + (9.002), (I.03) + (6.005) + (10.001), (1.03) + (6.005) + (10.002), (1.03) + (6.005) + (12.003), (1.03) + (6.005) + (12.004), (1.03) + (6.005) + (13.001), (1.03) + (6.005) + (13.004), (1.03) + (6.005) + (14.001), (1.03) + (6.005) + (15.025), (1.03) + (6.005) + (16.01),

(I.03) + (7.005) + (1.001), (1.03) + (7.005) + (1.002), (1.03) + (7.005) + (1.003), (1.03) + (7.005) + (1.015), (I.03) + (7.005) + (1.016), (1.03) + (7.005) + (1.017), (1.03) + (7.005) + (1.018), (1.03) + (7.005) + (1.024), (I.03) + (7.005) + (1.026), (1.03) + (7.005) + (1.027), (1.03) + (7.005) + (1.032), (1.03) + (7.005) + (1.033), (I.03) + (7.005) + (1.063), (1.03) + (7.005) + (1.067), (1.03) + (7.005) + (2.001), (1.03) + (7.005) + (2.002), (I.03) + (7.005) + (2.005), (1.03) + (7.005) + (2.007), (1.03) + (7.005) + (2.008), (1.03) + (7.005) + (2.010), (I.03) + (7.005) + (2.012), (1.03) + (7.005) + (2.014), (1.03) + (7.005) + (2.016), (1.03) + (7.005) + (2.018), (I.03) + (7.005) + (2.031), (1.03) + (7.005) + (3.003), (1.03) + (7.005) + (3.011), (1.03) + (7.005) + (3.012), (I.03) + (7.005) + (3.014), (1.03) + (7.005) + (3.017), (1.03) + (7.005) + (3.019), (1.03) + (7.005) + (3.021), (I.03) + (7.005) + (3.022), (1.03) + (7.005) + (3.025), (1.03) + (7.005) + (4.007), (1.03) + (7.005) + (5.004), (I.03) + (7.005) + (5.005), (1.03) + (7.005) + (5.008), (1.03) + (7.005) + (5.009), (1.03) + (7.005) + (5.012), (I.03) + (7.005) + (5.013), (1.03) + (7.005) + (6.005), (1.03) + (7.005) + (8.001), (1.03) + (7.005) + (9.002), (I.03) + (7.005) + (10.001), (1.03) + (7.005) + (10.002), (1.03) + (7.005) + (12.003), (1.03) + (7.005) + (12.004), (1.03) + (7.005) + (13.001), (1.03) + (7.005) + (13.004), (1.03) + (7.005) + (14.001), (1.03) + (7.005) + (15.025), (1.03) + (7.005) + (16.01),

(I.03) + (8.001) + (1.001), (1.03) + (8.001) + (1.002), (1.03) + (8.001) + (1.003), (1.03) + (8.001) + (1.015), (I.03) + (8.001) + (1.016), (1.03) + (8.001) + (1.017), (1.03) + (8.001) + (1.018), (1.03) + (8.001) + (1.024), (I.03) + (8.001) + (1.026), (1.03) + (8.001) + (1.027), (1.03) + (8.001) + (1.032), (1.03) + (8.001) + (1.033), (I.03) + (8.001) + (1.063), (1.03) + (8.001) + (1.067), (1.03) + (8.001) + (2.001), (1.03) + (8.001) + (2.002), (I.03) + (8.001) + (2.005), (1.03) + (8.001) + (2.007), (1.03) + (8.001) + (2.008), (1.03) + (8.001) + (2.010), (I.03) + (8.001) + (2.012), (1.03) + (8.001) + (2.014), (1.03) + (8.001) + (2.016), (1.03) + (8.001) + (2.018), (I.03) + (8.001) + (2.031), (1.03) + (8.001) + (3.003), (1.03) + (8.001) + (3.011), (1.03) + (8.001) + (3.012), (I.03) + (8.001) + (3.014), (1.03) + (8.001) + (3.017), (1.03) + (8.001) + (3.019), (1.03) + (8.001) + (3.021), (I.03) + (8.001) + (3.022), (1.03) + (8.001) + (3.025), (1.03) + (8.001) + (4.007), (1.03) + (8.001) + (5.004), (I.03) + (8.001) + (5.005), (1.03) + (8.001) + (5.008), (1.03) + (8.001) + (5.009), (1.03) + (8.001) + (5.012), (I.03) + (8.001) + (5.013), (1.03) + (8.001) + (6.005), (1.03) + (8.001) + (7.005), (1.03) + (8.001) + (9.002), (I.03) + (8.001) + (10.001), (1.03) + (8.001) + (10.002), (1.03) + (8.001) + (12.003), (1.03) + (8.001) + (12.004), (1.03) + (8.001) + (13.001), (1.03) + (8.001) + (13.004), (1.03) + (8.001) + (14.001), (1.03) + (8.001) + (15.025), (1.03) + (8.001) + (16.01),

(I.03) + (9.002) + (1.001), (1.03) + (9.002) + (1.002), (1.03) + (9.002) + (1.003), (1.03) + (9.002) + (1.015), (I.03) + (9.002) + (1.016), (1.03) + (9.002) + (1.017), (1.03) + (9.002) + (1.018), (1.03) + (9.002) + (1.024), (I.03) + (9.002) + (1.026), (1.03) + (9.002) + (1.027), (1.03) + (9.002) + (1.032), (1.03) + (9.002) + (1.033), (I.03) + (9.002) + (1.063), (1.03) + (9.002) + (1.067), (1.03) + (9.002) + (2.001), (1.03) + (9.002) + (2.002), (I.03) + (9.002) + (2.005), (1.03) +

(9.002) + (2.007), (1.03) + (9.002) + (2.008), (1.03) + (9.002) + (2.010), (I.03) + (9.002) + (2.012), (1.03) + (9.002) + (2.014), (1.03) + (9.002) + (2.016), (1.03) + (9.002) + (2.018), (I.03) + (9.002) + (2.031), (1.03) + (9.002) + (3.003), (1.03) + (9.002) + (3.011), (1.03) + (9.002) + (3.012), (I.03) + (9.002) + (3.014), (1.03) + (9.002) + (3.017), (1.03) + (9.002) + (3.019), (1.03) + (9.002) + (3.021), (I.03) + (9.002) + (3.022), (1.03) + (9.002) + (3.025), (1.03) + (9.002) + (4.007), (1.03) + (9.002) + (5.004), (I.03) + (9.002) + (5.005), (1.03) + (9.002) + (5.008), (1.03) + (9.002) + (5.009), (1.03) + (9.002) + (5.012), (I.03) + (9.002) + (5.013), (1.03) + (9.002) + (6.005), (1.03) + (9.002) + (7.005), (1.03) + (9.002) + (8.001), (I.03) + (9.002) + (10.001), (1.03) + (9.002) + (10.002), (1.03) + (9.002) + (12.003), (1.03) + (9.002) + (12.004), (1.03) + (9.002) + (13.001), (1.03) + (9.002) + (13.004), (1.03) + (9.002) + (14.001), (1.03) + (9.002) + (15.025), (1.03) + (9.002) + (16.01),

(I.03) + (10.001) + (1.001), (1.03) + (10.001) + (1.002), (1.03) + (10.001) + (1.003), (1.03) + (10.001) + (1.015), (1.03) + (10.001) + (1.016), (1.03) + (10.001) + (1.017), (1.03) + (10.001) + (1.018), (1.03) + (10.001) + (1.024), (1.03) + (10.001) + (1.026), (1.03) + (10.001) + (1.027), (1.03) + (10.001) + (1.032), (1.03) + (10.001) + (1.033), (1.03) + (10.001) + (1.063), (1.03) + (10.001) + (1.067), (1.03) + (10.001) + (2.001), (1.03) + (10.001) + (2.002), (1.03) + (10.001) + (2.005), (1.03) + (10.001) + (2.007), (1.03) + (10.001) + (2.008), (I.03) + (10.001) + (2.010), (1.03) + (10.001) + (2.012), (1.03) + (10.001) + (2.014), (1.03) + (10.001) + (2.016), (1.03) + (10.001) + (2.018), (1.03) + (10.001) + (2.031), (1.03) + (10.001) + (3.003), (1.03) + (10.001) + (3.011), (1.03) + (10.001) + (3.012), (1.03) + (10.001) + (3.014), (1.03) + (10.001) + (3.017), (1.03) + (10.001) + (3.019), (1.03) + (10.001) + (3.021), (1.03) + (10.001) + (3.022), (1.03) + (10.001) + (3.025), (1.03) + (10.001) + (4.007), (1.03) + (10.001) + (5.004), (1.03) + (10.001) + (5.005), (1.03) + (10.001) + (5.008), (I.03) + (10.001) + (5.009), (1.03) + (10.001) + (5.012), (1.03) + (10.001) + (5.013), (1.03) + (10.001) + (6.005), (1.03) + (10.001) + (7.005), (1.03) + (10.001) + (8.001), (1.03) + (10.001) + (9.002), (1.03) + (10.001) + (10.002), (1.03) + (10.001) + (12.003), (1.03) + (10.001) + (12.004), (1.03) + (10.001) + (13.001), (1.03) + (10.001) + (13.004), (1.03) + (10.001) + (14.001), (1.03) + (10.001) + (15.025), (1.03) + (10.001) + (16.01),

(I.03) + (10.002) + (1.001), (1.03) + (10.002) + (1.002), (1.03) + (10.002) + (1.003), (1.03) + (10.002) + (1.015), (1.03) + (10.002) + (1.016), (1.03) + (10.002) + (1.017), (1.03) + (10.002) + (1.018), (1.03) + (10.002) + (1.024), (1.03) + (10.002) + (1.026), (1.03) + (10.002) + (1.027), (1.03) + (10.002) + (1.032), (1.03) + (10.002) + (1.033), (1.03) + (10.002) + (1.063), (1.03) + (10.002) + (1.067), (1.03) + (10.002) + (2.001), (1.03) + (10.002) + (2.002), (1.03) + (10.002) + (2.005), (1.03) + (10.002) + (2.007), (1.03) + (10.002) + (2.008), (I.03) + (10.002) + (2.010), (1.03) + (10.002) + (2.012), (1.03) + (10.002) + (2.014), (1.03) + (10.002) + (2.016), (1.03) + (10.002) + (2.018), (1.03) + (10.002) + (2.031), (1.03) + (10.002) + (3.003), (1.03) + (10.002) + (3.011), (1.03) + (10.002) + (3.012), (1.03) + (10.002) + (3.014), (1.03) + (10.002) + (3.017), (1.03) + (10.002) + (3.019), (1.03) + (10.002) + (3.021), (1.03) + (10.002) + (3.022), (1.03) + (10.002) + (3.025), (1.03) + (10.002) + (4.007), (1.03) + (10.002) + (5.004), (1.03) + (10.002) + (5.005), (1.03) + (10.002) + (5.008), (I.03) + (10.002) + (5.009), (1.03) + (10.002) + (5.012), (1.03) + (10.002) + (5.013), (1.03) + (10.002) + (6.005), (1.03) + (10.002) + (7.005), (1.03) + (10.002) + (8.001), (1.03) + (10.002) + (9.002), (1.03) + (10.002) + (10.001), (1.03) + (10.002) + (12.003), (1.03) + (10.002) + (12.004), (1.03) + (10.002) + (13.001), (1.03) + (10.002) + (13.004), (1.03) + (10.002) + (14.001), (1.03) + (10.002) + (15.025), (1.03) + (10.002) + (16.01),

(I.03) + (12.003) + (1.001), (1.03) + (12.003) + (1.002), (1.03) + (12.003) + (1.003), (1.03) + (12.003) + (1.015), (1.03) + (12.003) + (1.016), (1.03) + (12.003) + (1.017), (1.03) + (12.003) + (1.018), (1.03) + (12.003) + (1.024), (1.03) + (12.003) + (1.026), (1.03) + (12.003) + (1.027), (1.03) + (12.003) + (1.032), (1.03) + (12.003) + (1.033), (1.03) + (12.003) + (1.063), (1.03) + (12.003) + (1.067), (1.03) + (12.003) + (2.001), (1.03) + (12.003) + (2.002), (1.03) + (12.003) + (2.005), (1.03) + (12.003) + (2.007), (1.03) + (12.003) + (2.008), (I.03) + (12.003) + (2.010), (1.03) + (12.003) + (2.012), (1.03) + (12.003) + (2.014), (1.03) + (12.003) + (2.016), (1.03) + (12.003) + (2.018), (1.03) + (12.003) + (2.031), (1.03) + (12.003) + (3.003), (1.03) + (12.003) + (3.011), (1.03) + (12.003) + (3.012), (1.03) + (12.003) + (3.014), (1.03) + (12.003) + (3.017), (1.03) + (12.003) + (3.019), (1.03) + (12.003) + (3.021), (1.03) + (12.003) + (3.022), (1.03) + (12.003) + (3.025), (1.03) + (12.003) + (4.007), (1.03) + (12.003) + (5.004), (1.03) + (12.003) + (5.005), (1.03) + (12.003) + (5.008), (I.03) + (12.003) + (5.009), (1.03) + (12.003) + (5.012), (1.03) + (12.003) + (5.013), (1.03) + (12.003) + (6.005), (1.03) + (12.003) + (7.005), (1.03) + (12.003) + (8.001), (1.03) + (12.003) + (9.002), (1.03) + (12.003) + (10.001), (1.03) + (12.003) + (10.002), (1.03) + (12.003) + (12.004), (1.03) + (12.003) + (13.001), (1.03) + (12.003) + (13.004), (1.03) + (12.003) + (14.001), (1.03) + (12.003) + (15.025), (1.03) + (12.003) + (16.01),

(I.03) + (12.004) + (1.001), (1.03) + (12.004) + (1.002), (1.03) + (12.004) + (1.003), (1.03) + (12.004) + (1.015), (1.03) + (12.004) + (1.016), (1.03) + (12.004) + (1.017), (1.03) + (12.004) + (1.018), (1.03) + (12.004) + (1.024), (1.03) + (12.004) + (1.026), (1.03) + (12.004) + (1.027), (1.03) + (12.004) + (1.032), (1.03) + (12.004) + (1.033),

(1.03) + (12.004) + (1.063), (1.03) + (12.004) + (1.067), (1.03) + (12.004) + (2.001), (1.03) + (12.004) + (2.002), (1.03) + (12.004) + (2.005), (1.03) + (12.004) + (2.007), (1.03) + (12.004) + (2.008), (I.03) + (12.004) + (2.010), (1.03) + (12.004) + (2.012), (1.03) + (12.004) + (2.014), (1.03) + (12.004) + (2.016), (1.03) + (12.004) + (2.018), (1.03) + (12.004) + (2.031), (1.03) + (12.004) + (3.003), (1.03) + (12.004) + (3.011), (1.03) + (12.004) + (3.012), (1.03) + (12.004) + (3.014), (1.03) + (12.004) + (3.017), (1.03) + (12.004) + (3.019), (1.03) + (12.004) + (3.021), (1.03) + (12.004) + (3.022), (1.03) + (12.004) + (3.025), (1.03) + (12.004) + (4.007), (1.03) + (12.004) + (5.004), (1.03) + (12.004) + (5.005), (1.03) + (12.004) + (5.008), (I.03) + (12.004) + (5.009), (1.03) + (12.004) + (5.012), (1.03) + (12.004) + (5.013), (1.03) + (12.004) + (6.005), (1.03) + (12.004) + (7.005), (1.03) + (12.004) + (8.001), (1.03) + (12.004) + (9.002), (1.03) + (12.004) + (10.001), (1.03) + (12.004) + (10.002), (1.03) + (12.004) + (12.003), (1.03) + (12.004) + (13.001), (1.03) + (12.004) + (13.004), (1.03) + (12.004) + (14.001), (1.03) + (12.004) + (15.025), (1.03) + (12.004) + (16.01),

(I.03) + (13.001) + (1.001), (1.03) + (13.001) + (1.002), (1.03) + (13.001) + (1.003), (1.03) + (13.001) + (1.015), (1.03) + (13.001) + (1.016), (1.03) + (13.001) + (1.017), (1.03) + (13.001) + (1.018), (1.03) + (13.001) + (1.024), (1.03) + (13.001) + (1.026), (1.03) + (13.001) + (1.027), (1.03) + (13.001) + (1.032), (1.03) + (13.001) + (1.033), (1.03) + (13.001) + (1.063), (1.03) + (13.001) + (1.067), (1.03) + (13.001) + (2.001), (1.03) + (13.001) + (2.002), (1.03) + (13.001) + (2.005), (1.03) + (13.001) + (2.007), (1.03) + (13.001) + (2.008), (I.03) + (13.001) + (2.010), (1.03) + (13.001) + (2.012), (1.03) + (13.001) + (2.014), (1.03) + (13.001) + (2.016), (1.03) + (13.001) + (2.018), (1.03) + (13.001) + (2.031), (1.03) + (13.001) + (3.003), (1.03) + (13.001) + (3.011), (1.03) + (13.001) + (3.012), (1.03) + (13.001) + (3.014), (1.03) + (13.001) + (3.017), (1.03) + (13.001) + (3.019), (1.03) + (13.001) + (3.021), (1.03) + (13.001) + (3.022), (1.03) + (13.001) + (3.025), (1.03) + (13.001) + (4.007), (1.03) + (13.001) + (5.004), (1.03) + (13.001) + (5.005), (1.03) + (13.001) + (5.008), (I.03) + (13.001) + (5.009), (1.03) + (13.001) + (5.012), (1.03) + (13.001) + (5.013), (1.03) + (13.001) + (6.005), (1.03) + (13.001) + (7.005), (1.03) + (13.001) + (8.001), (1.03) + (13.001) + (9.002), (1.03) + (13.001) + (10.001), (1.03) + (13.001) + (10.002), (1.03) + (13.001) + (12.003), (1.03) + (13.001) + (12.004), (1.03) + (13.001) + (13.004), (1.03) + (13.001) + (14.001), (1.03) + (13.001) + (15.025), (1.03) + (13.001) + (16.01),

(I.03) + (13.004) + (1.001), (1.03) + (13.004) + (1.002), (1.03) + (13.004) + (1.003), (1.03) + (13.004) + (1.015), (1.03) + (13.004) + (1.016), (1.03) + (13.004) + (1.017), (1.03) + (13.004) + (1.018), (1.03) + (13.004) + (1.024), (1.03) + (13.004) + (1.026), (1.03) + (13.004) + (1.027), (1.03) + (13.004) + (1.032), (1.03) + (13.004) + (1.033), (1.03) + (13.004) + (1.063), (1.03) + (13.004) + (1.067), (1.03) + (13.004) + (2.001), (1.03) + (13.004) + (2.002), (1.03) + (13.004) + (2.005), (1.03) + (13.004) + (2.007), (1.03) + (13.004) + (2.008), (I.03) + (13.004) + (2.010), (1.03) + (13.004) + (2.012), (1.03) + (13.004) + (2.014), (1.03) + (13.004) + (2.016), (1.03) + (13.004) + (2.018), (1.03) + (13.004) + (2.031), (1.03) + (13.004) + (3.003), (1.03) + (13.004) + (3.011), (1.03) + (13.004) + (3.012), (1.03) + (13.004) + (3.014), (1.03) + (13.004) + (3.017), (1.03) + (13.004) + (3.019), (1.03) + (13.004) + (3.021), (1.03) + (13.004) + (3.022), (1.03) + (13.004) + (3.025), (1.03) + (13.004) + (4.007), (1.03) + (13.004) + (5.004), (1.03) + (13.004) + (5.005), (1.03) + (13.004) + (5.008), (I.03) + (13.004) + (5.009), (1.03) + (13.004) + (5.012), (1.03) + (13.004) + (5.013), (1.03) + (13.004) + (6.005), (1.03) + (13.004) + (7.005), (1.03) + (13.004) + (8.001), (1.03) + (13.004) + (9.002), (1.03) + (13.004) + (10.001), (1.03) + (13.004) + (10.002), (1.03) + (13.004) + (12.003), (1.03) + (13.004) + (12.004), (1.03) + (13.004) + (13.001), (1.03) + (13.004) + (14.001), (1.03) + (13.004) + (15.025), (1.03) + (13.004) + (16.01),

(I.03) + (14.001) + (1.001), (1.03) + (14.001) + (1.002), (1.03) + (14.001) + (1.003), (1.03) + (14.001) + (1.015), (1.03) + (14.001) + (1.016), (1.03) + (14.001) + (1.017), (1.03) + (14.001) + (1.018), (1.03) + (14.001) + (1.024), (1.03) + (14.001) + (1.026), (1.03) + (14.001) + (1.027), (1.03) + (14.001) + (1.032), (1.03) + (14.001) + (1.033), (1.03) + (14.001) + (1.063), (1.03) + (14.001) + (1.067), (1.03) + (14.001) + (2.001), (1.03) + (14.001) + (2.002), (1.03) + (14.001) + (2.005), (1.03) + (14.001) + (2.007), (1.03) + (14.001) + (2.008), (I.03) + (14.001) + (2.010), (1.03) + (14.001) + (2.012), (1.03) + (14.001) + (2.014), (1.03) + (14.001) + (2.016), (1.03) + (14.001) + (2.018), (1.03) + (14.001) + (2.031), (1.03) + (14.001) + (3.003), (1.03) + (14.001) + (3.011), (1.03) + (14.001) + (3.012), (1.03) + (14.001) + (3.014), (1.03) + (14.001) + (3.017), (1.03) + (14.001) + (3.019), (1.03) + (14.001) + (3.021), (1.03) + (14.001) + (3.022), (1.03) + (14.001) + (3.025), (1.03) + (14.001) + (4.007), (1.03) + (14.001) + (5.004), (1.03) + (14.001) + (5.005), (1.03) + (14.001) + (5.008), (I.03) + (14.001) + (5.009), (1.03) + (14.001) + (5.012), (1.03) + (14.001) + (5.013), (1.03) + (14.001) + (6.005), (1.03) + (14.001) + (7.005), (1.03) + (14.001) + (8.001), (1.03) + (14.001) + (9.002), (1.03) + (14.001) + (10.001), (1.03) + (14.001) + (10.002), (1.03) + (14.001) + (12.003), (1.03) + (14.001) + (12.004), (1.03) + (14.001) + (13.001), (1.03) + (14.001) + (13.004), (1.03) + (14.001) + (15.025), (1.03) + (14.001) + (16.01),

(I.03) + (15.025) + (1.001), (1.03) + (15.025) + (1.002), (1.03) + (15.025) + (1.003), (1.03) + (15.025) + (1.015),

(1.03) + (15.025) + (1.016), (1.03) + (15.025) + (1.017), (1.03) + (15.025) + (1.018), (1.03) + (15.025) + (1.024), (1.03) + (15.025) + (1.026), (1.03) + (15.025) + (1.027), (1.03) + (15.025) + (1.032), (1.03) + (15.025) + (1.033), (1.03) + (15.025) + (1.063), (1.03) + (15.025) + (1.067), (1.03) + (15.025) + (2.001), (1.03) + (15.025) + (2.002), (1.03) + (15.025) + (2.005), (1.03) + (15.025) + (2.007), (1.03) + (15.025) + (2.008), (I.03) + (15.025) + (2.010), (1.03) + (15.025) + (2.012), (1.03) + (15.025) + (2.014), (1.03) + (15.025) + (2.016), (1.03) + (15.025) + (2.018), (1.03) + (15.025) + (2.031), (1.03) + (15.025) + (3.003), (1.03) + (15.025) + (3.011), (1.03) + (15.025) + (3.012), (1.03) + (15.025) + (3.014), (1.03) + (15.025) + (3.017), (1.03) + (15.025) + (3.019), (1.03) + (15.025) + (3.021), (1.03) + (15.025) + (3.022), (1.03) + (15.025) + (3.025), (1.03) + (15.025) + (4.007), (1.03) + (15.025) + (5.004), (1.03) + (15.025) + (5.005), (1.03) + (15.025) + (5.008), (I.03) + (15.025) + (5.009), (1.03) + (15.025) + (5.012), (1.03) + (15.025) + (5.013), (1.03) + (15.025) + (6.005), (1.03) + (15.025) + (7.005), (1.03) + (15.025) + (8.001), (1.03) + (15.025) + (9.002), (1.03) + (15.025) + (10.001), (1.03) + (15.025) + (10.002), (1.03) + (15.025) + (12.003), (1.03) + (15.025) + (12.004), (1.03) + (15.025) + (13.001), (1.03) + (15.025) + (13.004), (1.03) + (15.025) + (14.001), (1.03) + (15.025) + (16.01),

(I.03) + (16.01) + (1.001), (1.03) + (16.01) + (1.002), (1.03) + (16.01) + (1.003), (1.03) + (16.01) + (1.015), (I.03) + (16.01) + (1.016), (1.03) + (16.01) + (1.017), (1.03) + (16.01) + (1.018), (1.03) + (16.01) + (1.024), (I.03) + (16.01) + (1.026), (1.03) + (16.01) + (1.027), (1.03) + (16.01) + (1.032), (1.03) + (16.01) + (1.033), (I.03) + (16.01) + (1.063), (1.03) + (16.01) + (1.067), (1.03) + (16.01) + (2.001), (1.03) + (16.01) + (2.002), (I.03) + (16.01) + (2.005), (1.03) + (16.01) + (2.007), (1.03) + (16.01) + (2.008), (1.03) + (16.01) + (2.010), (I.03) + (16.01) + (2.012), (1.03) + (16.01) + (2.014), (1.03) + (16.01) + (2.016), (1.03) + (16.01) + (2.018), (I.03) + (16.01) + (2.031), (1.03) + (16.01) + (3.003), (1.03) + (16.01) + (3.011), (1.03) + (16.01) + (3.012), (I.03) + (16.01) + (3.014), (1.03) + (16.01) + (3.017), (1.03) + (16.01) + (3.019), (1.03) + (16.01) + (3.021), (I.03) + (16.01) + (3.022), (1.03) + (16.01) + (3.025), (1.03) + (16.01) + (4.007), (1.03) + (16.01) + (5.004), (I.03) + (16.01) + (5.005), (1.03) + (16.01) + (5.008), (1.03) + (16.01) + (5.009), (1.03) + (16.01) + (5.012), (I.03) + (16.01) + (5.013), (1.03) + (16.01) + (6.005), (1.03) + (16.01) + (7.005), (1.03) + (16.01) + (8.001), (I.03) + (16.01) + (9.002), (1.03) + (16.01) + (10.001), (1.03) + (16.01) + (10.002), (1.03) + (16.01) + (12.003), (I.03) + (16.01) + (12.004), (1.03) + (16.01) + (13.001), (1.03) + (16.01) + (13.004), (1.03) + (16.01) + (14.001), (1.03) + (16.01) + (15.025).

If two compounds (B) are present in the combinations according to the invention, yet other preferred compound combinations are selected from the group (G4-C) consisting of the following mixtures:

(I.04) + (1.001) + (1.002), (1.04) + (1.001) + (1.003), (1.04) + (1.001) + (1.015), (1.04) + (1.001) + (1.016), (I.04) + (1.001) + (1.017), (1.04) + (1.001) + (1.018), (1.04) + (1.001) + (1.024), (1.04) + (1.001) + (1.026), (I.04) + (1.001) + (1.027), (1.04) + (1.001) + (1.032), (1.04) + (1.001) + (1.033), (1.04) + (1.001) + (1.063), (I.04) + (1.001) + (1.067), (1.04) + (1.001) + (2.001), (1.04) + (1.001) + (2.002), (1.04) + (1.001) + (2.005), (I.04) + (1.001) + (2.007), (1.04) + (1.001) + (2.008), (1.04) + (1.001) + (2.010), (1.04) + (1.001) + (2.012), (I.04) + (1.001) + (2.014), (1.04) + (1.001) + (2.016), (1.04) + (1.001) + (2.018), (1.04) + (1.001) + (2.031), (I.04) + (1.001) + (3.003), (1.04) + (1.001) + (3.011), (1.04) + (1.001) + (3.012), (1.04) + (1.001) + (3.014), (I.04) + (1.001) + (3.017), (1.04) + (1.001) + (3.019), (1.04) + (1.001) + (3.021), (1.04) + (1.001) + (3.022), (I.04) + (1.001) + (3.025), (1.04) + (1.001) + (4.007), (1.04) + (1.001) + (5.004), (1.04) + (1.001) + (5.005), (I.04) + (1.001) + (5.008), (1.04) + (1.001) + (5.009), (1.04) + (1.001) + (5.012), (1.04) + (1.001) + (5.013), (I.04) + (1.001) + (6.005), (1.04) + (1.001) + (7.005), (1.04) + (1.001) + (8.001), (1.04) + (1.001) + (9.002), (I.04) + (1.001) + (10.001), (1.04) + (1.001) + (10.002), (1.04) + (1.001) + (12.003), (1.04) + (1.001) + (12.004), (1.04) + (1.001) + (13.001), (1.04) + (1.001) + (13.004), (1.04) + (1.001) + (14.001), (1.04) + (1.001) + (15.025), (1.04) + (1.001) + (16.01),

(I.04) + (1.002) + (1.001), (1.04) + (1.002) + (1.003), (1.04) + (1.002) + (1.015), (1.04) + (1.002) + (1.016), (I.04) + (1.002) + (1.017), (1.04) + (1.002) + (1.018), (1.04) + (1.002) + (1.024), (1.04) + (1.002) + (1.026), (I.04) + (1.002) + (1.027), (1.04) + (1.002) + (1.032), (1.04) + (1.002) + (1.033), (1.04) + (1.002) + (1.063), (I.04) + (1.002) + (1.067), (1.04) + (1.002) + (2.001), (1.04) + (1.002) + (2.002), (1.04) + (1.002) + (2.005), (I.04) + (1.002) + (2.007), (1.04) + (1.002) + (2.008), (1.04) + (1.002) + (2.010), (1.04) + (1.002) + (2.012), (I.04) + (1.002) + (2.014), (1.04) + (1.002) + (2.016), (1.04) + (1.002) + (2.018), (1.04) + (1.002) + (2.031), (I.04) + (1.002) + (3.003), (1.04) + (1.002) + (3.011), (1.04) + (1.002) + (3.012), (1.04) + (1.002) + (3.014), (I.04) + (1.002) + (3.017), (1.04) + (1.002) + (3.019), (1.04) + (1.002) + (3.021), (1.04) + (1.002) + (3.022), (I.04) + (1.002) + (3.025), (1.04) + (1.002) + (4.007), (1.04) + (1.002) + (5.004), (1.04) + (1.002) + (5.005), (I.04) + (1.002) + (5.008), (1.04) + (1.002) + (5.009), (1.04) + (1.002) + (5.012), (1.04) + (1.002) + (5.013), (I.04) + (1.002) + (6.005), (1.04) + (1.002) + (7.005), (1.04) + (1.002) + (8.001), (1.04) + (1.002) + (9.002), (I.04) + (1.002) + (10.001), (1.04) + (1.002) + (10.002), (1.04) + (1.002) + (12.003), (1.04) + (1.002) + (12.004), (1.04) + (1.002) + (13.001), (1.04) + (1.002) + (13.004), (1.04) + (1.002) + (14.001), (1.04) + (1.002) + (15.025), (1.04) + (1.002) + (16.01),

(I.04) + (1.003) + (1.001), (1.04) + (1.003) + (1.002), (1.04) + (1.003) + (1.015), (1.04) + (1.003) + (1.016), (I.04) + (1.003) + (1.017), (1.04) + (1.003) + (1.018), (1.04) + (1.003) + (1.024), (1.04) + (1.003) + (1.026), (I.04) + (1.003) + (1.027), (1.04) + (1.003) + (1.032), (1.04) + (1.003) + (1.033), (1.04) + (1.003) + (1.063), (I.04) + (1.003) + (1.067), (1.04) + (1.003) + (2.001), (1.04) + (1.003) + (2.002), (1.04) + (1.003) + (2.005), (I.04) + (1.003) + (2.007), (1.04) + (1.003) + (2.008), (1.04) + (1.003) + (2.010), (1.04) + (1.003) + (2.012), (I.04) + (1.003) + (2.014), (1.04) + (1.003) + (2.016), (1.04) + (1.003) + (2.018), (1.04) + (1.003) + (2.031), (I.04) + (1.003) + (3.003), (1.04) + (1.003) + (3.011), (1.04) + (1.003) + (3.012), (1.04) + (1.003) + (3.014), (I.04) + (1.003) + (3.017), (1.04) + (1.003) + (3.019), (1.04) + (1.003) + (3.021), (1.04) + (1.003) + (3.022), (I.04) + (1.003) + (3.025), (1.04) + (1.003) + (4.007), (1.04) + (1.003) + (5.004), (1.04) + (1.003) + (5.005), (I.04) + (1.003) + (5.008), (1.04) + (1.003) + (5.009), (1.04) + (1.003) + (5.012), (1.04) + (1.003) + (5.013), (I.04) + (1.003) + (6.005), (1.04) + (1.003) + (7.005), (1.04) + (1.003) + (8.001), (1.04) + (1.003) + (9.002), (I.04) + (1.003) + (10.001), (1.04) + (1.003) + (10.002), (1.04) + (1.003) + (12.003), (1.04) + (1.003) + (12.004), (1.04) + (1.003) + (13.001), (1.04) + (1.003) + (13.004), (1.04) + (1.003) + (14.001), (1.04) + (1.003) + (15.025), (1.04) + (1.003) + (16.01),

(I.04) + (1.015) + (1.001), (1.04) + (1.015) + (1.002), (1.04) + (1.015) + (1.003), (1.04) + (1.015) + (1.016), (I.04) + (1.015) + (1.017), (1.04) + (1.015) + (1.018), (1.04) + (1.015) + (1.024), (1.04) + (1.015) + (1.026), (I.04) + (1.015) + (1.027), (1.04) + (1.015) + (1.032), (1.04) + (1.015) + (1.033), (1.04) + (1.015) + (1.063), (I.04) + (1.015) + (1.067), (1.04) + (1.015) + (2.001), (1.04) + (1.015) + (2.002), (1.04) + (1.015) + (2.005), (I.04) + (1.015) + (2.007), (1.04) + (1.015) + (2.008), (1.04) + (1.015) + (2.010), (1.04) + (1.015) + (2.012), (I.04) + (1.015) + (2.014), (1.04) + (1.015) + (2.016), (1.04) + (1.015) + (2.018), (1.04) + (1.015) + (2.031), (I.04) + (1.015) + (3.003), (1.04) + (1.015) + (3.011), (1.04) + (1.015) + (3.012), (1.04) + (1.015) + (3.014), (I.04) + (1.015) + (3.017), (1.04) + (1.015) + (3.019), (1.04) + (1.015) + (3.021), (1.04) + (1.015) + (3.022), (I.04) + (1.015) + (3.025), (1.04) + (1.015) + (4.007), (1.04) + (1.015) + (5.004), (1.04) + (1.015) + (5.005), (I.04) + (1.015) + (5.008), (1.04) + (1.015) + (5.009), (1.04) + (1.015) + (5.012), (1.04) + (1.015) + (5.013), (I.04) + (1.015) + (6.005), (1.04) + (1.015) + (7.005), (1.04) + (1.015) + (8.001), (1.04) + (1.015) + (9.002), (I.04) + (1.015) + (10.001), (1.04) + (1.015) + (10.002), (1.04) + (1.015) + (12.003), (1.04) + (1.015) + (12.004), (1.04) + (1.015) + (13.001), (1.04) + (1.015) + (13.004), (1.04) + (1.015) + (14.001), (1.04) + (1.015) + (15.025), (1.04) + (1.015) + (16.01),

(I.04) + (1.016) + (1.001), (1.04) + (1.016) + (1.002), (1.04) + (1.016) + (1.003), (1.04) + (1.016) + (1.015), (I.04) + (1.016) + (1.017), (1.04) + (1.016) + (1.018), (1.04) + (1.016) + (1.024), (1.04) + (1.016) + (1.026), (I.04) + (1.016) + (1.027), (1.04) + (1.016) + (1.032), (1.04) + (1.016) + (1.033), (1.04) + (1.016) + (1.063), (I.04) + (1.016) + (1.067), (1.04) + (1.016) + (2.001), (1.04) + (1.016) + (2.002), (1.04) + (1.016) + (2.005), (I.04) + (1.016) + (2.007), (1.04) + (1.016) + (2.008), (1.04) + (1.016) + (2.010), (1.04) + (1.016) + (2.012), (I.04) + (1.016) + (2.014), (1.04) + (1.016) + (2.016), (1.04) + (1.016) + (2.018), (1.04) + (1.016) + (2.031), (I.04) + (1.016) + (3.003), (1.04) + (1.016) + (3.011), (1.04) + (1.016) + (3.012), (1.04) + (1.016) + (3.014), (I.04) + (1.016) + (3.017), (1.04) + (1.016) + (3.019), (1.04) + (1.016) + (3.021), (1.04) + (1.016) + (3.022), (I.04) + (1.016) + (3.025), (1.04) + (1.016) + (4.007), (1.04) + (1.016) + (5.004), (1.04) + (1.016) + (5.005), (I.04) + (1.016) + (5.008), (1.04) + (1.016) + (5.009), (1.04) + (1.016) + (5.012), (1.04) + (1.016) + (5.013), (I.04) + (1.016) + (6.005), (1.04) + (1.016) + (7.005), (1.04) + (1.016) + (8.001), (1.04) + (1.016) + (9.002), (I.04) + (1.016) + (10.001), (1.04) + (1.016) + (10.002), (1.04) + (1.016) + (12.003), (1.04) + (1.016) + (12.004), (1.04) + (1.016) + (13.001), (1.04) + (1.016) + (13.004), (1.04) + (1.016) + (14.001), (1.04) + (1.016) + (15.025), (1.04) + (1.016) + (16.01),

(I.04) + (1.017) + (1.001), (1.04) + (1.017) + (1.002), (1.04) + (1.017) + (1.003), (1.04) + (1.017) + (1.015), (I.04) + (1.017) + (1.016), (1.04) + (1.017) + (1.018), (1.04) + (1.017) + (1.024), (1.04) + (1.017) + (1.026), (I.04) + (1.017) + (1.027), (1.04) + (1.017) + (1.032), (1.04) + (1.017) + (1.033), (1.04) + (1.017) + (1.063), (I.04) + (1.017) + (1.067), (1.04) + (1.017) + (2.001), (1.04) + (1.017) + (2.002), (1.04) + (1.017) + (2.005), (I.04) + (1.017) + (2.007), (1.04) + (1.017) + (2.008), (1.04) + (1.017) + (2.010), (1.04) + (1.017) + (2.012), (I.04) + (1.017) + (2.014), (1.04) + (1.017) + (2.016), (1.04) + (1.017) + (2.018), (1.04) + (1.017) + (2.031), (I.04) + (1.017) + (3.003), (1.04) + (1.017) + (3.011), (1.04) + (1.017) + (3.012), (1.04) + (1.017) + (3.014), (I.04) + (1.017) + (3.017), (1.04) + (1.017) + (3.019), (1.04) + (1.017) + (3.021), (1.04) + (1.017) + (3.022), (I.04) + (1.017) + (3.025), (1.04) + (1.017) + (4.007), (1.04) + (1.017) + (5.004), (1.04) + (1.017) + (5.005), (I.04) + (1.017) + (5.008), (1.04) + (1.017) + (5.009), (1.04) + (1.017) + (5.012), (1.04) + (1.017) + (5.013), (I.04) + (1.017) + (6.005), (1.04) + (1.017) + (7.005), (1.04) + (1.017) + (8.001), (1.04) + (1.017) + (9.002), (I.04) + (1.017) + (10.001), (1.04) + (1.017) + (10.002), (1.04) + (1.017) + (12.003), (1.04) + (1.017) + (12.004), (1.04) + (1.017) + (13.001), (1.04) + (1.017) + (13.004), (1.04) + (1.017) + (14.001), (1.04) + (1.017) + (15.025), (1.04) + (1.017) + (16.01),

(I.04) + (1.018) + (1.001), (1.04) + (1.018) + (1.002), (1.04) + (1.018) + (1.003), (1.04) + (1.018) + (1.015), (I.04) + (1.018) + (1.016), (1.04) + (1.018) + (1.017), (1.04) + (1.018) + (1.024), (1.04) + (1.018) + (1.026), (I.04) + (1.018)

+ (1.027), (1.04) + (1.018) + (1.032), (1.04) + (1.018) + (1.033), (1.04) + (1.018) + (1.063), (I.04) + (1.018) + (1.067), (1.04) + (1.018) + (2.001), (1.04) + (1.018) + (2.002), (1.04) + (1.018) + (2.005), (I.04) + (1.018) + (2.007), (1.04) + (1.018) + (2.008), (1.04) + (1.018) + (2.010), (1.04) + (1.018) + (2.012), (I.04) + (1.018) + (2.014), (1.04) + (1.018) + (2.016), (1.04) + (1.018) + (2.018), (1.04) + (1.018) + (2.031), (I.04) + (1.018) + (3.003), (1.04) + (1.018) + (3.011), (1.04) + (1.018) + (3.012), (1.04) + (1.018) + (3.014), (I.04) + (1.018) + (3.017), (1.04) + (1.018) + (3.019), (1.04) + (1.018) + (3.021), (1.04) + (1.018) + (3.022), (I.04) + (1.018) + (3.025), (1.04) + (1.018) + (4.007), (1.04) + (1.018) + (5.004), (1.04) + (1.018) + (5.005), (I.04) + (1.018) + (5.008), (1.04) + (1.018) + (5.009), (1.04) + (1.018) + (5.012), (1.04) + (1.018) + (5.013), (I.04) + (1.018) + (6.005), (1.04) + (1.018) + (7.005), (1.04) + (1.018) + (8.001), (1.04) + (1.018) + (9.002), (I.04) + (1.018) + (10.001), (1.04) + (1.018) + (10.002), (1.04) + (1.018) + (12.003), (1.04) + (1.018) + (12.004), (1.04) + (1.018) + (13.001), (1.04) + (1.018) + (13.004), (1.04) + (1.018) + (14.001), (1.04) + (1.018) + (15.025), (1.04) + (1.018) + (16.01),

(I.04) + (1.024) + (1.001), (1.04) + (1.024) + (1.002), (1.04) + (1.024) + (1.003), (1.04) + (1.024) + (1.015), (I.04) + (1.024) + (1.016), (1.04) + (1.024) + (1.017), (1.04) + (1.024) + (1.018), (1.04) + (1.024) + (1.026), (I.04) + (1.024) + (1.027), (1.04) + (1.024) + (1.032), (1.04) + (1.024) + (1.033), (1.04) + (1.024) + (1.063), (I.04) + (1.024) + (1.067), (1.04) + (1.024) + (2.001), (1.04) + (1.024) + (2.002), (1.04) + (1.024) + (2.005), (I.04) + (1.024) + (2.007), (1.04) + (1.024) + (2.008), (1.04) + (1.024) + (2.010), (1.04) + (1.024) + (2.012), (I.04) + (1.024) + (2.014), (1.04) + (1.024) + (2.016), (1.04) + (1.024) + (2.018), (1.04) + (1.024) + (2.031), (I.04) + (1.024) + (3.003), (1.04) + (1.024) + (3.011), (1.04) + (1.024) + (3.012), (1.04) + (1.024) + (3.014), (I.04) + (1.024) + (3.017), (1.04) + (1.024) + (3.019), (1.04) + (1.024) + (3.021), (1.04) + (1.024) + (3.022), (I.04) + (1.024) + (3.025), (1.04) + (1.024) + (4.007), (1.04) + (1.024) + (5.004), (1.04) + (1.024) + (5.005), (I.04) + (1.024) + (5.008), (1.04) + (1.024) + (5.009), (1.04) + (1.024) + (5.012), (1.04) + (1.024) + (5.013), (I.04) + (1.024) + (6.005), (1.04) + (1.024) + (7.005), (1.04) + (1.024) + (8.001), (1.04) + (1.024) + (9.002), (I.04) + (1.024) + (10.001), (1.04) + (1.024) + (10.002), (1.04) + (1.024) + (12.003), (1.04) + (1.024) + (12.004), (1.04) + (1.024) + (13.001), (1.04) + (1.024) + (13.004), (1.04) + (1.024) + (14.001), (1.04) + (1.024) + (15.025), (1.04) + (1.024) + (16.01),

(I.04) + (1.026) + (1.001), (1.04) + (1.026) + (1.002), (1.04) + (1.026) + (1.003), (1.04) + (1.026) + (1.015), (I.04) + (1.026) + (1.016), (1.04) + (1.026) + (1.017), (1.04) + (1.026) + (1.018), (1.04) + (1.026) + (1.024), (I.04) + (1.026) + (1.027), (1.04) + (1.026) + (1.032), (1.04) + (1.026) + (1.033), (1.04) + (1.026) + (1.063), (I.04) + (1.026) + (1.067), (1.04) + (1.026) + (2.001), (1.04) + (1.026) + (2.002), (1.04) + (1.026) + (2.005), (I.04) + (1.026) + (2.007), (1.04) + (1.026) + (2.008), (1.04) + (1.026) + (2.010), (1.04) + (1.026) + (2.012), (I.04) + (1.026) + (2.014), (1.04) + (1.026) + (2.016), (1.04) + (1.026) + (2.018), (1.04) + (1.026) + (2.031), (I.04) + (1.026) + (3.003), (1.04) + (1.026) + (3.011), (1.04) + (1.026) + (3.012), (1.04) + (1.026) + (3.014), (I.04) + (1.026) + (3.017), (1.04) + (1.026) + (3.019), (1.04) + (1.026) + (3.021), (1.04) + (1.026) + (3.022), (I.04) + (1.026) + (3.025), (1.04) + (1.026) + (4.007), (1.04) + (1.026) + (5.004), (1.04) + (1.026) + (5.005), (I.04) + (1.026) + (5.008), (1.04) + (1.026) + (5.009), (1.04) + (1.026) + (5.012), (1.04) + (1.026) + (5.013), (I.04) + (1.026) + (6.005), (1.04) + (1.026) + (7.005), (1.04) + (1.026) + (8.001), (1.04) + (1.026) + (9.002), (I.04) + (1.026) + (10.001), (1.04) + (1.026) + (10.002), (1.04) + (1.026) + (12.003), (1.04) + (1.026) + (12.004), (1.04) + (1.026) + (13.001), (1.04) + (1.026) + (13.004), (1.04) + (1.026) + (14.001), (1.04) + (1.026) + (15.025), (1.04) + (1.026) + (16.01),

(I.04) + (1.027) + (1.001), (1.04) + (1.027) + (1.002), (1.04) + (1.027) + (1.003), (1.04) + (1.027) + (1.015), (I.04) + (1.027) + (1.016), (1.04) + (1.027) + (1.017), (1.04) + (1.027) + (1.018), (1.04) + (1.027) + (1.024), (I.04) + (1.027) + (1.026), (1.04) + (1.027) + (1.032), (1.04) + (1.027) + (1.033), (1.04) + (1.027) + (1.063), (I.04) + (1.027) + (1.067), (1.04) + (1.027) + (2.001), (1.04) + (1.027) + (2.002), (1.04) + (1.027) + (2.005), (I.04) + (1.027) + (2.007), (1.04) + (1.027) + (2.008), (1.04) + (1.027) + (2.010), (1.04) + (1.027) + (2.012), (I.04) + (1.027) + (2.014), (1.04) + (1.027) + (2.016), (1.04) + (1.027) + (2.018), (1.04) + (1.027) + (2.031), (I.04) + (1.027) + (3.003), (1.04) + (1.027) + (3.011), (1.04) + (1.027) + (3.012), (1.04) + (1.027) + (3.014), (I.04) + (1.027) + (3.017), (1.04) + (1.027) + (3.019), (1.04) + (1.027) + (3.021), (1.04) + (1.027) + (3.022), (I.04) + (1.027) + (3.025), (1.04) + (1.027) + (4.007), (1.04) + (1.027) + (5.004), (1.04) + (1.027) + (5.005), (I.04) + (1.027) + (5.008), (1.04) + (1.027) + (5.009), (1.04) + (1.027) + (5.012), (1.04) + (1.027) + (5.013), (I.04) + (1.027) + (6.005), (1.04) + (1.027) + (7.005), (1.04) + (1.027) + (8.001), (1.04) + (1.027) + (9.002), (I.04) + (1.027) + (10.001), (1.04) + (1.027) + (10.002), (1.04) + (1.027) + (12.003), (1.04) + (1.027) + (12.004), (1.04) + (1.027) + (13.001), (1.04) + (1.027) + (13.004), (1.04) + (1.027) + (14.001), (1.04) + (1.027) + (15.025), (1.04) + (1.027) + (16.01),

(I.04) + (1.032) + (1.001), (1.04) + (1.032) + (1.002), (1.04) + (1.032) + (1.003), (1.04) + (1.032) + (1.015), (I.04) + (1.032) + (1.016), (1.04) + (1.032) + (1.017), (1.04) + (1.032) + (1.018), (1.04) + (1.032) + (1.024), (I.04) + (1.032) + (1.026), (1.04) + (1.032) + (1.027), (1.04) + (1.032) + (1.033), (1.04) + (1.032) + (1.063), (I.04) + (1.032) + (1.067), (1.04) + (1.032) + (2.001), (1.04) + (1.032) + (2.002), (1.04) + (1.032) + (2.005), (I.04) + (1.032) + (2.007), (1.04) +

(1.032) + (2.008), (1.04) + (1.032) + (2.010), (1.04) + (1.032) + (2.012), (I.04) + (1.032) + (2.014), (1.04) + (1.032) + (2.016), (1.04) + (1.032) + (2.018), (1.04) + (1.032) + (2.031), (I.04) + (1.032) + (3.003), (1.04) + (1.032) + (3.011), (1.04) + (1.032) + (3.012), (1.04) + (1.032) + (3.014), (I.04) + (1.032) + (3.017), (1.04) + (1.032) + (3.019), (1.04) + (1.032) + (3.021), (1.04) + (1.032) + (3.022), (I.04) + (1.032) + (3.025), (1.04) + (1.032) + (4.007), (1.04) + (1.032) + (5.004), (1.04) + (1.032) + (5.005), (I.04) + (1.032) + (5.008), (1.04) + (1.032) + (5.009), (1.04) + (1.032) + (5.012), (1.04) + (1.032) + (5.013), (I.04) + (1.032) + (6.005), (1.04) + (1.032) + (7.005), (1.04) + (1.032) + (8.001), (1.04) + (1.032) + (9.002), (I.04) + (1.032) + (10.001), (1.04) + (1.032) + (10.002), (1.04) + (1.032) + (12.003), (1.04) + (1.032) + (12.004), (1.04) + (1.032) + (13.001), (1.04) + (1.032) + (13.004), (1.04) + (1.032) + (14.001), (1.04) + (1.032) + (15.025), (1.04) + (1.032) + (16.01),

(I.04) + (1.033) + (1.001), (1.04) + (1.033) + (1.002), (1.04) + (1.033) + (1.003), (1.04) + (1.033) + (1.015), (I.04) + (1.033) + (1.016), (1.04) + (1.033) + (1.017), (1.04) + (1.033) + (1.018), (1.04) + (1.033) + (1.024), (I.04) + (1.033) + (1.026), (1.04) + (1.033) + (1.027), (1.04) + (1.033) + (1.032), (1.04) + (1.033) + (1.063), (I.04) + (1.033) + (1.067), (1.04) + (1.033) + (2.001), (1.04) + (1.033) + (2.002), (1.04) + (1.033) + (2.005), (I.04) + (1.033) + (2.007), (1.04) + (1.033) + (2.008), (1.04) + (1.033) + (2.010), (1.04) + (1.033) + (2.012), (I.04) + (1.033) + (2.014), (1.04) + (1.033) + (2.016), (1.04) + (1.033) + (2.018), (1.04) + (1.033) + (2.031), (I.04) + (1.033) + (3.003), (1.04) + (1.033) + (3.011), (1.04) + (1.033) + (3.012), (1.04) + (1.033) + (3.014), (I.04) + (1.033) + (3.017), (1.04) + (1.033) + (3.019), (1.04) + (1.033) + (3.021), (1.04) + (1.033) + (3.022), (I.04) + (1.033) + (3.025), (1.04) + (1.033) + (4.007), (1.04) + (1.033) + (5.004), (1.04) + (1.033) + (5.005), (I.04) + (1.033) + (5.008), (1.04) + (1.033) + (5.009), (1.04) + (1.033) + (5.012), (1.04) + (1.033) + (5.013), (I.04) + (1.033) + (6.005), (1.04) + (1.033) + (7.005), (1.04) + (1.033) + (8.001), (1.04) + (1.033) + (9.002), (I.04) + (1.033) + (10.001), (1.04) + (1.033) + (10.002), (1.04) + (1.033) + (12.003), (1.04) + (1.033) + (12.004), (1.04) + (1.033) + (13.001), (1.04) + (1.033) + (13.004), (1.04) + (1.033) + (14.001), (1.04) + (1.033) + (15.025), (1.04) + (1.033) + (16.01),

(I.04) + (1.063) + (1.001), (1.04) + (1.063) + (1.002), (1.04) + (1.063) + (1.003), (1.04) + (1.063) + (1.015), (I.04) + (1.063) + (1.016), (1.04) + (1.063) + (1.017), (1.04) + (1.063) + (1.018), (1.04) + (1.063) + (1.024), (I.04) + (1.063) + (1.026), (1.04) + (1.063) + (1.027), (1.04) + (1.063) + (1.032), (1.04) + (1.063) + (1.033), (I.04) + (1.063) + (1.067), (1.04) + (1.063) + (2.001), (1.04) + (1.063) + (2.002), (1.04) + (1.063) + (2.005), (I.04) + (1.063) + (2.007), (1.04) + (1.063) + (2.008), (1.04) + (1.063) + (2.010), (1.04) + (1.063) + (2.012), (I.04) + (1.063) + (2.014), (1.04) + (1.063) + (2.016), (1.04) + (1.063) + (2.018), (1.04) + (1.063) + (2.031), (I.04) + (1.063) + (3.003), (1.04) + (1.063) + (3.011), (1.04) + (1.063) + (3.012), (1.04) + (1.063) + (3.014), (I.04) + (1.063) + (3.017), (1.04) + (1.063) + (3.019), (1.04) + (1.063) + (3.021), (1.04) + (1.063) + (3.022), (I.04) + (1.063) + (3.025), (1.04) + (1.063) + (4.007), (1.04) + (1.063) + (5.004), (1.04) + (1.063) + (5.005), (I.04) + (1.063) + (5.008), (1.04) + (1.063) + (5.009), (1.04) + (1.063) + (5.012), (1.04) + (1.063) + (5.013), (I.04) + (1.063) + (6.005), (1.04) + (1.063) + (7.005), (1.04) + (1.063) + (8.001), (1.04) + (1.063) + (9.002), (I.04) + (1.063) + (10.001), (1.04) + (1.063) + (10.002), (1.04) + (1.063) + (12.003), (1.04) + (1.063) + (12.004), (1.04) + (1.063) + (13.001), (1.04) + (1.063) + (13.004), (1.04) + (1.063) + (14.001), (1.04) + (1.063) + (15.025), (1.04) + (1.063) + (16.01),

(I.04) + (1.067) + (1.001), (1.04) + (1.067) + (1.002), (1.04) + (1.067) + (1.003), (1.04) + (1.067) + (1.015), (I.04) + (1.067) + (1.016), (1.04) + (1.067) + (1.017), (1.04) + (1.067) + (1.018), (1.04) + (1.067) + (1.024), (I.04) + (1.067) + (1.026), (1.04) + (1.067) + (1.027), (1.04) + (1.067) + (1.032), (1.04) + (1.067) + (1.033), (I.04) + (1.067) + (1.063), (1.04) + (1.067) + (2.001), (1.04) + (1.067) + (2.002), (1.04) + (1.067) + (2.005), (I.04) + (1.067) + (2.007), (1.04) + (1.067) + (2.008), (1.04) + (1.067) + (2.010), (1.04) + (1.067) + (2.012), (I.04) + (1.067) + (2.014), (1.04) + (1.067) + (2.016), (1.04) + (1.067) + (2.018), (1.04) + (1.067) + (2.031), (I.04) + (1.067) + (3.003), (1.04) + (1.067) + (3.011), (1.04) + (1.067) + (3.012), (1.04) + (1.067) + (3.014), (I.04) + (1.067) + (3.017), (1.04) + (1.067) + (3.019), (1.04) + (1.067) + (3.021), (1.04) + (1.067) + (3.022), (I.04) + (1.067) + (3.025), (1.04) + (1.067) + (4.007), (1.04) + (1.067) + (5.004), (1.04) + (1.067) + (5.005), (I.04) + (1.067) + (5.008), (1.04) + (1.067) + (5.009), (1.04) + (1.067) + (5.012), (1.04) + (1.067) + (5.013), (I.04) + (1.067) + (6.005), (1.04) + (1.067) + (7.005), (1.04) + (1.067) + (8.001), (1.04) + (1.067) + (9.002), (I.04) + (1.067) + (10.001), (1.04) + (1.067) + (10.002), (1.04) + (1.067) + (12.003), (1.04) + (1.067) + (12.004), (1.04) + (1.067) + (13.001), (1.04) + (1.067) + (13.004), (1.04) + (1.067) + (14.001), (1.04) + (1.067) + (15.025), (1.04) + (1.067) + (16.01),

(I.04) + (2.001) + (1.001), (1.04) + (2.001) + (1.002), (1.04) + (2.001) + (1.003), (1.04) + (2.001) + (1.015), (I.04) + (2.001) + (1.016), (1.04) + (2.001) + (1.017), (1.04) + (2.001) + (1.018), (1.04) + (2.001) + (1.024), (I.04) + (2.001) + (1.026), (1.04) + (2.001) + (1.027), (1.04) + (2.001) + (1.032), (1.04) + (2.001) + (1.033), (I.04) + (2.001) + (1.063), (1.04) + (2.001) + (1.067), (1.04) + (2.001) + (2.002), (1.04) + (2.001) + (2.005), (I.04) + (2.001) + (2.007), (1.04) + (2.001) + (2.008), (1.04) + (2.001) + (2.010), (1.04) + (2.001) + (2.012), (I.04) + (2.001) + (2.014), (1.04) + (2.001) + (2.016), (1.04) + (2.001) + (2.018), (1.04) + (2.001) + (2.031), (I.04) + (2.001) + (3.003), (1.04) + (2.001) + (3.011),

(1.04) + (2.001) + (3.012), (1.04) + (2.001) + (3.014), (I.04) + (2.001) + (3.017), (1.04) + (2.001) + (3.019), (1.04) + (2.001) + (3.021), (1.04) + (2.001) + (3.022), (I.04) + (2.001) + (3.025), (1.04) + (2.001) + (4.007), (1.04) + (2.001) + (5.004), (1.04) + (2.001) + (5.005), (I.04) + (2.001) + (5.008), (1.04) + (2.001) + (5.009), (1.04) + (2.001) + (5.012), (1.04) + (2.001) + (5.013), (I.04) + (2.001) + (6.005), (1.04) + (2.001) + (7.005), (1.04) + (2.001) + (8.001), (1.04) + (2.001) + (9.002), (I.04) + (2.001) + (10.001), (1.04) + (2.001) + (10.002), (1.04) + (2.001) + (12.003), (1.04) + (2.001) + (12.004), (1.04) + (2.001) + (13.001), (1.04) + (2.001) + (13.004), (1.04) + (2.001) + (14.001), (1.04) + (2.001) + (15.025), (1.04) + (2.001) + (16.01),

(I.04) + (2.002) + (1.001), (1.04) + (2.002) + (1.002), (1.04) + (2.002) + (1.003), (1.04) + (2.002) + (1.015), (I.04) + (2.002) + (1.016), (1.04) + (2.002) + (1.017), (1.04) + (2.002) + (1.018), (1.04) + (2.002) + (1.024), (I.04) + (2.002) + (1.026), (1.04) + (2.002) + (1.027), (1.04) + (2.002) + (1.032), (1.04) + (2.002) + (1.033), (I.04) + (2.002) + (1.063), (1.04) + (2.002) + (1.067), (1.04) + (2.002) + (2.001), (1.04) + (2.002) + (2.005), (I.04) + (2.002) + (2.007), (1.04) + (2.002) + (2.008), (1.04) + (2.002) + (2.010), (1.04) + (2.002) + (2.012), (I.04) + (2.002) + (2.014), (1.04) + (2.002) + (2.016), (1.04) + (2.002) + (2.018), (1.04) + (2.002) + (2.031), (I.04) + (2.002) + (3.003), (1.04) + (2.002) + (3.011), (1.04) + (2.002) + (3.012), (1.04) + (2.002) + (3.014), (I.04) + (2.002) + (3.017), (1.04) + (2.002) + (3.019), (1.04) + (2.002) + (3.021), (1.04) + (2.002) + (3.022), (I.04) + (2.002) + (3.025), (1.04) + (2.002) + (4.007), (1.04) + (2.002) + (5.004), (1.04) + (2.002) + (5.005), (I.04) + (2.002) + (5.008), (1.04) + (2.002) + (5.009), (1.04) + (2.002) + (5.012), (1.04) + (2.002) + (5.013), (I.04) + (2.002) + (6.005), (1.04) + (2.002) + (7.005), (1.04) + (2.002) + (8.001), (1.04) + (2.002) + (9.002), (I.04) + (2.002) + (10.001), (1.04) + (2.002) + (10.002), (1.04) + (2.002) + (12.003), (1.04) + (2.002) + (12.004), (1.04) + (2.002) + (13.001), (1.04) + (2.002) + (13.004), (1.04) + (2.002) + (14.001), (1.04) + (2.002) + (15.025), (1.04) + (2.002) + (16.01),

(I.04) + (2.005) + (1.001), (1.04) + (2.005) + (1.002), (1.04) + (2.005) + (1.003), (1.04) + (2.005) + (1.015), (I.04) + (2.005) + (1.016), (1.04) + (2.005) + (1.017), (1.04) + (2.005) + (1.018), (1.04) + (2.005) + (1.024), (I.04) + (2.005) + (1.026), (1.04) + (2.005) + (1.027), (1.04) + (2.005) + (1.032), (1.04) + (2.005) + (1.033), (I.04) + (2.005) + (1.063), (1.04) + (2.005) + (1.067), (1.04) + (2.005) + (2.001), (1.04) + (2.005) + (2.002), (I.04) + (2.005) + (2.007), (1.04) + (2.005) + (2.008), (1.04) + (2.005) + (2.010), (1.04) + (2.005) + (2.012), (I.04) + (2.005) + (2.014), (1.04) + (2.005) + (2.016), (1.04) + (2.005) + (2.018), (1.04) + (2.005) + (2.031), (I.04) + (2.005) + (3.003), (1.04) + (2.005) + (3.011), (1.04) + (2.005) + (3.012), (1.04) + (2.005) + (3.014), (I.04) + (2.005) + (3.017), (1.04) + (2.005) + (3.019), (1.04) + (2.005) + (3.021), (1.04) + (2.005) + (3.022), (I.04) + (2.005) + (3.025), (1.04) + (2.005) + (4.007), (1.04) + (2.005) + (5.004), (1.04) + (2.005) + (5.005), (I.04) + (2.005) + (5.008), (1.04) + (2.005) + (5.009), (1.04) + (2.005) + (5.012), (1.04) + (2.005) + (5.013), (I.04) + (2.005) + (6.005), (1.04) + (2.005) + (7.005), (1.04) + (2.005) + (8.001), (1.04) + (2.005) + (9.002), (I.04) + (2.005) + (10.001), (1.04) + (2.005) + (10.002), (1.04) + (2.005) + (12.003), (1.04) + (2.005) + (12.004), (1.04) + (2.005) + (13.001), (1.04) + (2.005) + (13.004), (1.04) + (2.005) + (14.001), (1.04) + (2.005) + (15.025), (1.04) + (2.005) + (16.01),

(I.04) + (2.007) + (1.001), (1.04) + (2.007) + (1.002), (1.04) + (2.007) + (1.003), (1.04) + (2.007) + (1.015), (I.04) + (2.007) + (1.016), (1.04) + (2.007) + (1.017), (1.04) + (2.007) + (1.018), (1.04) + (2.007) + (1.024), (I.04) + (2.007) + (1.026), (1.04) + (2.007) + (1.027), (1.04) + (2.007) + (1.032), (1.04) + (2.007) + (1.033), (I.04) + (2.007) + (1.063), (1.04) + (2.007) + (1.067), (1.04) + (2.007) + (2.001), (1.04) + (2.007) + (2.002), (I.04) + (2.007) + (2.005), (1.04) + (2.007) + (2.008), (1.04) + (2.007) + (2.010), (1.04) + (2.007) + (2.012), (I.04) + (2.007) + (2.014), (1.04) + (2.007) + (2.016), (1.04) + (2.007) + (2.018), (1.04) + (2.007) + (2.031), (I.04) + (2.007) + (3.003), (1.04) + (2.007) + (3.011), (1.04) + (2.007) + (3.012), (1.04) + (2.007) + (3.014), (I.04) + (2.007) + (3.017), (1.04) + (2.007) + (3.019), (1.04) + (2.007) + (3.021), (1.04) + (2.007) + (3.022), (I.04) + (2.007) + (3.025), (1.04) + (2.007) + (4.007), (1.04) + (2.007) + (5.004), (1.04) + (2.007) + (5.005), (I.04) + (2.007) + (5.008), (1.04) + (2.007) + (5.009), (1.04) + (2.007) + (5.012), (1.04) + (2.007) + (5.013), (I.04) + (2.007) + (6.005), (1.04) + (2.007) + (7.005), (1.04) + (2.007) + (8.001), (1.04) + (2.007) + (9.002), (I.04) + (2.007) + (10.001), (1.04) + (2.007) + (10.002), (1.04) + (2.007) + (12.003), (1.04) + (2.007) + (12.004), (1.04) + (2.007) + (13.001), (1.04) + (2.007) + (13.004), (1.04) + (2.007) + (14.001), (1.04) + (2.007) + (15.025), (1.04) + (2.007) + (16.01),

(I.04) + (2.008) + (1.001), (1.04) + (2.008) + (1.002), (1.04) + (2.008) + (1.003), (1.04) + (2.008) + (1.015), (I.04) + (2.008) + (1.016), (1.04) + (2.008) + (1.017), (1.04) + (2.008) + (1.018), (1.04) + (2.008) + (1.024), (I.04) + (2.008) + (1.026), (1.04) + (2.008) + (1.027), (1.04) + (2.008) + (1.032), (1.04) + (2.008) + (1.033), (I.04) + (2.008) + (1.063), (1.04) + (2.008) + (1.067), (1.04) + (2.008) + (2.001), (1.04) + (2.008) + (2.002), (I.04) + (2.008) + (2.005), (1.04) + (2.008) + (2.007), (1.04) + (2.008) + (2.010), (1.04) + (2.008) + (2.012), (I.04) + (2.008) + (2.014), (1.04) + (2.008) + (2.016), (1.04) + (2.008) + (2.018), (1.04) + (2.008) + (2.031), (I.04) + (2.008) + (3.003), (1.04) + (2.008) + (3.011), (1.04) + (2.008) + (3.012), (1.04) + (2.008) + (3.014), (I.04) + (2.008) + (3.017), (1.04) + (2.008) + (3.019), (1.04) + (2.008) + (3.021), (1.04) + (2.008) + (3.022), (I.04) + (2.008) + (3.025), (1.04) + (2.008) + (4.007), (1.04) + (2.008)

+ (5.004), (1.04) + (2.008) + (5.005), (I.04) + (2.008) + (5.008), (1.04) + (2.008) + (5.009), (1.04) + (2.008) + (5.012), (1.04) + (2.008) + (5.013), (I.04) + (2.008) + (6.005), (1.04) + (2.008) + (7.005), (1.04) + (2.008) + (8.001), (1.04) + (2.008) + (9.002), (I.04) + (2.008) + (10.001), (1.04) + (2.008) + (10.002), (1.04) + (2.008) + (12.003), (1.04) + (2.008) + (12.004), (1.04) + (2.008) + (13.001), (1.04) + (2.008) + (13.004), (1.04) + (2.008) + (14.001), (1.04) + (2.008) + (15.025), (1.04) + (2.008) + (16.01),

(I.04) + (2.010) + (1.001), (1.04) + (2.010) + (1.002), (1.04) + (2.010) + (1.003), (1.04) + (2.010) + (1.015), (I.04) + (2.010) + (1.016), (1.04) + (2.010) + (1.017), (1.04) + (2.010) + (1.018), (1.04) + (2.010) + (1.024), (I.04) + (2.010) + (1.026), (1.04) + (2.010) + (1.027), (1.04) + (2.010) + (1.032), (1.04) + (2.010) + (1.033), (I.04) + (2.010) + (1.063), (1.04) + (2.010) + (1.067), (1.04) + (2.010) + (2.001), (1.04) + (2.010) + (2.002), (I.04) + (2.010) + (2.005), (1.04) + (2.010) + (2.007), (1.04) + (2.010) + (2.008), (1.04) + (2.010) + (2.012), (I.04) + (2.010) + (2.014), (1.04) + (2.010) + (2.016), (1.04) + (2.010) + (2.018), (1.04) + (2.010) + (2.031), (I.04) + (2.010) + (3.003), (1.04) + (2.010) + (3.011), (1.04) + (2.010) + (3.012), (1.04) + (2.010) + (3.014), (I.04) + (2.010) + (3.017), (1.04) + (2.010) + (3.019), (1.04) + (2.010) + (3.021), (1.04) + (2.010) + (3.022), (I.04) + (2.010) + (3.025), (1.04) + (2.010) + (4.007), (1.04) + (2.010) + (5.004), (1.04) + (2.010) + (5.005), (I.04) + (2.010) + (5.008), (1.04) + (2.010) + (5.009), (1.04) + (2.010) + (5.012), (1.04) + (2.010) + (5.013), (I.04) + (2.010) + (6.005), (1.04) + (2.010) + (7.005), (1.04) + (2.010) + (8.001), (1.04) + (2.010) + (9.002), (I.04) + (2.010) + (10.001), (1.04) + (2.010) + (10.002), (1.04) + (2.010) + (12.003), (1.04) + (2.010) + (12.004), (1.04) + (2.010) + (13.001), (1.04) + (2.010) + (13.004), (1.04) + (2.010) + (14.001), (1.04) + (2.010) + (15.025), (1.04) + (2.010) + (16.01),

(I.04) + (2.012) + (1.001), (1.04) + (2.012) + (1.002), (1.04) + (2.012) + (1.003), (1.04) + (2.012) + (1.015), (I.04) + (2.012) + (1.016), (1.04) + (2.012) + (1.017), (1.04) + (2.012) + (1.018), (1.04) + (2.012) + (1.024), (I.04) + (2.012) + (1.026), (1.04) + (2.012) + (1.027), (1.04) + (2.012) + (1.032), (1.04) + (2.012) + (1.033), (I.04) + (2.012) + (1.063), (1.04) + (2.012) + (1.067), (1.04) + (2.012) + (2.001), (1.04) + (2.012) + (2.002), (I.04) + (2.012) + (2.005), (1.04) + (2.012) + (2.007), (1.04) + (2.012) + (2.008), (1.04) + (2.012) + (2.010), (I.04) + (2.012) + (2.014), (1.04) + (2.012) + (2.016), (1.04) + (2.012) + (2.018), (1.04) + (2.012) + (2.031), (I.04) + (2.012) + (3.003), (1.04) + (2.012) + (3.011), (1.04) + (2.012) + (3.012), (1.04) + (2.012) + (3.014), (I.04) + (2.012) + (3.017), (1.04) + (2.012) + (3.019), (1.04) + (2.012) + (3.021), (1.04) + (2.012) + (3.022), (I.04) + (2.012) + (3.025), (1.04) + (2.012) + (4.007), (1.04) + (2.012) + (5.004), (1.04) + (2.012) + (5.005), (I.04) + (2.012) + (5.008), (1.04) + (2.012) + (5.009), (1.04) + (2.012) + (5.012), (1.04) + (2.012) + (5.013), (I.04) + (2.012) + (6.005), (1.04) + (2.012) + (7.005), (1.04) + (2.012) + (8.001), (1.04) + (2.012) + (9.002), (I.04) + (2.012) + (10.001), (1.04) + (2.012) + (10.002), (1.04) + (2.012) + (12.003), (1.04) + (2.012) + (12.004), (1.04) + (2.012) + (13.001), (1.04) + (2.012) + (13.004), (1.04) + (2.012) + (14.001), (1.04) + (2.012) + (15.025), (1.04) + (2.012) + (16.01),

(I.04) + (2.014) + (1.001), (1.04) + (2.014) + (1.002), (1.04) + (2.014) + (1.003), (1.04) + (2.014) + (1.015), (I.04) + (2.014) + (1.016), (1.04) + (2.014) + (1.017), (1.04) + (2.014) + (1.018), (1.04) + (2.014) + (1.024), (I.04) + (2.014) + (1.026), (1.04) + (2.014) + (1.027), (1.04) + (2.014) + (1.032), (1.04) + (2.014) + (1.033), (I.04) + (2.014) + (1.063), (1.04) + (2.014) + (1.067), (1.04) + (2.014) + (2.001), (1.04) + (2.014) + (2.002), (I.04) + (2.014) + (2.005), (1.04) + (2.014) + (2.007), (1.04) + (2.014) + (2.008), (1.04) + (2.014) + (2.010), (I.04) + (2.014) + (2.012), (1.04) + (2.014) + (2.016), (1.04) + (2.014) + (2.018), (1.04) + (2.014) + (2.031), (I.04) + (2.014) + (3.003), (1.04) + (2.014) + (3.011), (1.04) + (2.014) + (3.012), (1.04) + (2.014) + (3.014), (I.04) + (2.014) + (3.017), (1.04) + (2.014) + (3.019), (1.04) + (2.014) + (3.021), (1.04) + (2.014) + (3.022), (I.04) + (2.014) + (3.025), (1.04) + (2.014) + (4.007), (1.04) + (2.014) + (5.004), (1.04) + (2.014) + (5.005), (I.04) + (2.014) + (5.008), (1.04) + (2.014) + (5.009), (1.04) + (2.014) + (5.012), (1.04) + (2.014) + (5.013), (I.04) + (2.014) + (6.005), (1.04) + (2.014) + (7.005), (1.04) + (2.014) + (8.001), (1.04) + (2.014) + (9.002), (I.04) + (2.014) + (10.001), (1.04) + (2.014) + (10.002), (1.04) + (2.014) + (12.003), (1.04) + (2.014) + (12.004), (1.04) + (2.014) + (13.001), (1.04) + (2.014) + (13.004), (1.04) + (2.014) + (14.001), (1.04) + (2.014) + (15.025), (1.04) + (2.014) + (16.01),

(I.04) + (2.016) + (1.001), (1.04) + (2.016) + (1.002), (1.04) + (2.016) + (1.003), (1.04) + (2.016) + (1.015), (I.04) + (2.016) + (1.016), (1.04) + (2.016) + (1.017), (1.04) + (2.016) + (1.018), (1.04) + (2.016) + (1.024), (I.04) + (2.016) + (1.026), (1.04) + (2.016) + (1.027), (1.04) + (2.016) + (1.032), (1.04) + (2.016) + (1.033), (I.04) + (2.016) + (1.063), (1.04) + (2.016) + (1.067), (1.04) + (2.016) + (2.001), (1.04) + (2.016) + (2.002), (I.04) + (2.016) + (2.005), (1.04) + (2.016) + (2.007), (1.04) + (2.016) + (2.008), (1.04) + (2.016) + (2.010), (I.04) + (2.016) + (2.012), (1.04) + (2.016) + (2.014), (1.04) + (2.016) + (2.018), (1.04) + (2.016) + (2.031), (I.04) + (2.016) + (3.003), (1.04) + (2.016) + (3.011), (1.04) + (2.016) + (3.012), (1.04) + (2.016) + (3.014), (I.04) + (2.016) + (3.017), (1.04) + (2.016) + (3.019), (1.04) + (2.016) + (3.021), (1.04) + (2.016) + (3.022), (I.04) + (2.016) + (3.025), (1.04) + (2.016) + (4.007), (1.04) + (2.016) + (5.004), (1.04) + (2.016) + (5.005), (I.04) + (2.016) + (5.008), (1.04) + (2.016) + (5.009), (1.04) + (2.016) + (5.012), (1.04) + (2.016) + (5.013), (I.04) + (2.016) + (6.005), (1.04) + (2.016) + (7.005), (1.04) + (2.016) + (8.001), (1.04) +

(2.016) + (9.002), (I.04) + (2.016) + (10.001), (1.04) + (2.016) + (10.002), (1.04) + (2.016) + (12.003), (1.04) + (2.016) + (12.004), (1.04) + (2.016) + (13.001), (1.04) + (2.016) + (13.004), (1.04) + (2.016) + (14.001), (1.04) + (2.016) + (15.025), (1.04) + (2.016) + (16.01),

(I.04) + (2.018) + (1.001), (1.04) + (2.018) + (1.002), (1.04) + (2.018) + (1.003), (1.04) + (2.018) + (1.015), (I.04) + (2.018) + (1.016), (1.04) + (2.018) + (1.017), (1.04) + (2.018) + (1.018), (1.04) + (2.018) + (1.024), (I.04) + (2.018) + (1.026), (1.04) + (2.018) + (1.027), (1.04) + (2.018) + (1.032), (1.04) + (2.018) + (1.033), (I.04) + (2.018) + (1.063), (1.04) + (2.018) + (1.067), (1.04) + (2.018) + (2.001), (1.04) + (2.018) + (2.002), (I.04) + (2.018) + (2.005), (1.04) + (2.018) + (2.007), (1.04) + (2.018) + (2.008), (1.04) + (2.018) + (2.010), (I.04) + (2.018) + (2.012), (1.04) + (2.018) + (2.014), (1.04) + (2.018) + (2.016), (1.04) + (2.018) + (2.031), (I.04) + (2.018) + (3.003), (1.04) + (2.018) + (3.011), (1.04) + (2.018) + (3.012), (1.04) + (2.018) + (3.014), (I.04) + (2.018) + (3.017), (1.04) + (2.018) + (3.019), (1.04) + (2.018) + (3.021), (1.04) + (2.018) + (3.022), (I.04) + (2.018) + (3.025), (1.04) + (2.018) + (4.007), (1.04) + (2.018) + (5.004), (1.04) + (2.018) + (5.005), (I.04) + (2.018) + (5.008), (1.04) + (2.018) + (5.009), (1.04) + (2.018) + (5.012), (1.04) + (2.018) + (5.013), (I.04) + (2.018) + (6.005), (1.04) + (2.018) + (7.005), (1.04) + (2.018) + (8.001), (1.04) + (2.018) + (9.002), (I.04) + (2.018) + (10.001), (1.04) + (2.018) + (10.002), (1.04) + (2.018) + (12.003), (1.04) + (2.018) + (12.004), (1.04) + (2.018) + (13.001), (1.04) + (2.018) + (13.004), (1.04) + (2.018) + (14.001), (1.04) + (2.018) + (15.025), (1.04) + (2.018) + (16.01),

(I.04) + (2.031) + (1.001), (1.04) + (2.031) + (1.002), (1.04) + (2.031) + (1.003), (1.04) + (2.031) + (1.015), (I.04) + (2.031) + (1.016), (1.04) + (2.031) + (1.017), (1.04) + (2.031) + (1.018), (1.04) + (2.031) + (1.024), (I.04) + (2.031) + (1.026), (1.04) + (2.031) + (1.027), (1.04) + (2.031) + (1.032), (1.04) + (2.031) + (1.033), (I.04) + (2.031) + (1.063), (1.04) + (2.031) + (1.067), (1.04) + (2.031) + (2.001), (1.04) + (2.031) + (2.002), (I.04) + (2.031) + (2.005), (1.04) + (2.031) + (2.007), (1.04) + (2.031) + (2.008), (1.04) + (2.031) + (2.010), (I.04) + (2.031) + (2.012), (1.04) + (2.031) + (2.014), (1.04) + (2.031) + (2.016), (1.04) + (2.031) + (2.018), (I.04) + (2.031) + (3.003), (1.04) + (2.031) + (3.011), (1.04) + (2.031) + (3.012), (1.04) + (2.031) + (3.014), (I.04) + (2.031) + (3.017), (1.04) + (2.031) + (3.019), (1.04) + (2.031) + (3.021), (1.04) + (2.031) + (3.022), (I.04) + (2.031) + (3.025), (1.04) + (2.031) + (4.007), (1.04) + (2.031) + (5.004), (1.04) + (2.031) + (5.005), (I.04) + (2.031) + (5.008), (1.04) + (2.031) + (5.009), (1.04) + (2.031) + (5.012), (1.04) + (2.031) + (5.013), (I.04) + (2.031) + (6.005), (1.04) + (2.031) + (7.005), (1.04) + (2.031) + (8.001), (1.04) + (2.031) + (9.002), (I.04) + (2.031) + (10.001), (1.04) + (2.031) + (10.002), (1.04) + (2.031) + (12.003), (1.04) + (2.031) + (12.004), (1.04) + (2.031) + (13.001), (1.04) + (2.031) + (13.004), (1.04) + (2.031) + (14.001), (1.04) + (2.031) + (15.025), (1.04) + (2.031) + (16.01),

(I.04) + (3.003) + (1.001), (1.04) + (3.003) + (1.002), (1.04) + (3.003) + (1.003), (1.04) + (3.003) + (1.015), (I.04) + (3.003) + (1.016), (1.04) + (3.003) + (1.017), (1.04) + (3.003) + (1.018), (1.04) + (3.003) + (1.024), (I.04) + (3.003) + (1.026), (1.04) + (3.003) + (1.027), (1.04) + (3.003) + (1.032), (1.04) + (3.003) + (1.033), (I.04) + (3.003) + (1.063), (1.04) + (3.003) + (1.067), (1.04) + (3.003) + (2.001), (1.04) + (3.003) + (2.002), (I.04) + (3.003) + (2.005), (1.04) + (3.003) + (2.007), (1.04) + (3.003) + (2.008), (1.04) + (3.003) + (2.010), (I.04) + (3.003) + (2.012), (1.04) + (3.003) + (2.014), (1.04) + (3.003) + (2.016), (1.04) + (3.003) + (2.018), (I.04) + (3.003) + (2.031), (1.04) + (3.003) + (3.011), (1.04) + (3.003) + (3.012), (1.04) + (3.003) + (3.014), (I.04) + (3.003) + (3.017), (1.04) + (3.003) + (3.019), (1.04) + (3.003) + (3.021), (1.04) + (3.003) + (3.022), (I.04) + (3.003) + (3.025), (1.04) + (3.003) + (4.007), (1.04) + (3.003) + (5.004), (1.04) + (3.003) + (5.005), (I.04) + (3.003) + (5.008), (1.04) + (3.003) + (5.009), (1.04) + (3.003) + (5.012), (1.04) + (3.003) + (5.013), (I.04) + (3.003) + (6.005), (1.04) + (3.003) + (7.005), (1.04) + (3.003) + (8.001), (1.04) + (3.003) + (9.002), (I.04) + (3.003) + (10.001), (1.04) + (3.003) + (10.002), (1.04) + (3.003) + (12.003), (1.04) + (3.003) + (12.004), (1.04) + (3.003) + (13.001), (1.04) + (3.003) + (13.004), (1.04) + (3.003) + (14.001), (1.04) + (3.003) + (15.025), (1.04) + (3.003) + (16.01),

(I.04) + (3.011) + (1.001), (1.04) + (3.011) + (1.002), (1.04) + (3.011) + (1.003), (1.04) + (3.011) + (1.015), (I.04) + (3.011) + (1.016), (1.04) + (3.011) + (1.017), (1.04) + (3.011) + (1.018), (1.04) + (3.011) + (1.024), (I.04) + (3.011) + (1.026), (1.04) + (3.011) + (1.027), (1.04) + (3.011) + (1.032), (1.04) + (3.011) + (1.033), (I.04) + (3.011) + (1.063), (1.04) + (3.011) + (1.067), (1.04) + (3.011) + (2.001), (1.04) + (3.011) + (2.002), (I.04) + (3.011) + (2.005), (1.04) + (3.011) + (2.007), (1.04) + (3.011) + (2.008), (1.04) + (3.011) + (2.010), (I.04) + (3.011) + (2.012), (1.04) + (3.011) + (2.014), (1.04) + (3.011) + (2.016), (1.04) + (3.011) + (2.018), (I.04) + (3.011) + (2.031), (1.04) + (3.011) + (3.003), (1.04) + (3.011) + (3.012), (1.04) + (3.011) + (3.014), (I.04) + (3.011) + (3.017), (1.04) + (3.011) + (3.019), (1.04) + (3.011) + (3.021), (1.04) + (3.011) + (3.022), (I.04) + (3.011) + (3.025), (1.04) + (3.011) + (4.007), (1.04) + (3.011) + (5.004), (1.04) + (3.011) + (5.005), (I.04) + (3.011) + (5.008), (1.04) + (3.011) + (5.009), (1.04) + (3.011) + (5.012), (1.04) + (3.011) + (5.013), (I.04) + (3.011) + (6.005), (1.04) + (3.011) + (7.005), (1.04) + (3.011) + (8.001), (1.04) + (3.011) + (9.002), (I.04) + (3.011) + (10.001), (1.04) + (3.011) + (10.002), (1.04) + (3.011) + (12.003), (1.04) + (3.011) + (12.004), (1.04) + (3.011) + (13.001), (1.04) + (3.011) + (13.004), (1.04) + (3.011) + (14.001), (1.04) + (3.011) +

(15.025), (1.04) + (3.011) + (16.01),

(I.04) + (3.012) + (1.001), (1.04) + (3.012) + (1.002), (1.04) + (3.012) + (1.003), (1.04) + (3.012) + (1.015), (I.04) + (3.012) + (1.016), (1.04) + (3.012) + (1.017), (1.04) + (3.012) + (1.018), (1.04) + (3.012) + (1.024), (I.04) + (3.012) + (1.026), (1.04) + (3.012) + (1.027), (1.04) + (3.012) + (1.032), (1.04) + (3.012) + (1.033), (I.04) + (3.012) + (1.063), (1.04) + (3.012) + (1.067), (1.04) + (3.012) + (2.001), (1.04) + (3.012) + (2.002), (I.04) + (3.012) + (2.005), (1.04) + (3.012) + (2.007), (1.04) + (3.012) + (2.008), (1.04) + (3.012) + (2.010), (I.04) + (3.012) + (2.012), (1.04) + (3.012) + (2.014), (1.04) + (3.012) + (2.016), (1.04) + (3.012) + (2.018), (I.04) + (3.012) + (2.031), (1.04) + (3.012) + (3.003), (1.04) + (3.012) + (3.011), (1.04) + (3.012) + (3.014), (I.04) + (3.012) + (3.017), (1.04) + (3.012) + (3.019), (1.04) + (3.012) + (3.021), (1.04) + (3.012) + (3.022), (I.04) + (3.012) + (3.025), (1.04) + (3.012) + (4.007), (1.04) + (3.012) + (5.004), (1.04) + (3.012) + (5.005), (I.04) + (3.012) + (5.008), (1.04) + (3.012) + (5.009), (1.04) + (3.012) + (5.012), (1.04) + (3.012) + (5.013), (I.04) + (3.012) + (6.005), (1.04) + (3.012) + (7.005), (1.04) + (3.012) + (8.001), (1.04) + (3.012) + (9.002), (I.04) + (3.012) + (10.001), (1.04) + (3.012) + (10.002), (1.04) + (3.012) + (12.003), (1.04) + (3.012) + (12.004), (1.04) + (3.012) + (13.001), (1.04) + (3.012) + (13.004), (1.04) + (3.012) + (14.001), (1.04) + (3.012) + (15.025), (1.04) + (3.012) + (16.01),

(I.04) + (3.014) + (1.001), (1.04) + (3.014) + (1.002), (1.04) + (3.014) + (1.003), (1.04) + (3.014) + (1.015), (I.04) + (3.014) + (1.016), (1.04) + (3.014) + (1.017), (1.04) + (3.014) + (1.018), (1.04) + (3.014) + (1.024), (I.04) + (3.014) + (1.026), (1.04) + (3.014) + (1.027), (1.04) + (3.014) + (1.032), (1.04) + (3.014) + (1.033), (I.04) + (3.014) + (1.063), (1.04) + (3.014) + (1.067), (1.04) + (3.014) + (2.001), (1.04) + (3.014) + (2.002), (I.04) + (3.014) + (2.005), (1.04) + (3.014) + (2.007), (1.04) + (3.014) + (2.008), (1.04) + (3.014) + (2.010), (I.04) + (3.014) + (2.012), (1.04) + (3.014) + (2.014), (1.04) + (3.014) + (2.016), (1.04) + (3.014) + (2.018), (I.04) + (3.014) + (2.031), (1.04) + (3.014) + (3.003), (1.04) + (3.014) + (3.011), (1.04) + (3.014) + (3.012), (I.04) + (3.014) + (3.017), (1.04) + (3.014) + (3.019), (1.04) + (3.014) + (3.021), (1.04) + (3.014) + (3.022), (I.04) + (3.014) + (3.025), (1.04) + (3.014) + (4.007), (1.04) + (3.014) + (5.004), (1.04) + (3.014) + (5.005), (I.04) + (3.014) + (5.008), (1.04) + (3.014) + (5.009), (1.04) + (3.014) + (5.012), (1.04) + (3.014) + (5.013), (I.04) + (3.014) + (6.005), (1.04) + (3.014) + (7.005), (1.04) + (3.014) + (8.001), (1.04) + (3.014) + (9.002), (I.04) + (3.014) + (10.001), (1.04) + (3.014) + (10.002), (1.04) + (3.014) + (12.003), (1.04) + (3.014) + (12.004), (1.04) + (3.014) + (13.001), (1.04) + (3.014) + (13.004), (1.04) + (3.014) + (14.001), (1.04) + (3.014) + (15.025), (1.04) + (3.014) + (16.01),

(I.04) + (3.017) + (1.001), (1.04) + (3.017) + (1.002), (1.04) + (3.017) + (1.003), (1.04) + (3.017) + (1.015), (I.04) + (3.017) + (1.016), (1.04) + (3.017) + (1.017), (1.04) + (3.017) + (1.018), (1.04) + (3.017) + (1.024), (I.04) + (3.017) + (1.026), (1.04) + (3.017) + (1.027), (1.04) + (3.017) + (1.032), (1.04) + (3.017) + (1.033), (I.04) + (3.017) + (1.063), (1.04) + (3.017) + (1.067), (1.04) + (3.017) + (2.001), (1.04) + (3.017) + (2.002), (I.04) + (3.017) + (2.005), (1.04) + (3.017) + (2.007), (1.04) + (3.017) + (2.008), (1.04) + (3.017) + (2.010), (I.04) + (3.017) + (2.012), (1.04) + (3.017) + (2.014), (1.04) + (3.017) + (2.016), (1.04) + (3.017) + (2.018), (I.04) + (3.017) + (2.031), (1.04) + (3.017) + (3.003), (1.04) + (3.017) + (3.011), (1.04) + (3.017) + (3.012), (I.04) + (3.017) + (3.014), (1.04) + (3.017) + (3.019), (1.04) + (3.017) + (3.021), (1.04) + (3.017) + (3.022), (I.04) + (3.017) + (3.025), (1.04) + (3.017) + (4.007), (1.04) + (3.017) + (5.004), (1.04) + (3.017) + (5.005), (I.04) + (3.017) + (5.008), (1.04) + (3.017) + (5.009), (1.04) + (3.017) + (5.012), (1.04) + (3.017) + (5.013), (I.04) + (3.017) + (6.005), (1.04) + (3.017) + (7.005), (1.04) + (3.017) + (8.001), (1.04) + (3.017) + (9.002), (I.04) + (3.017) + (10.001), (1.04) + (3.017) + (10.002), (1.04) + (3.017) + (12.003), (1.04) + (3.017) + (12.004), (1.04) + (3.017) + (13.001), (1.04) + (3.017) + (13.004), (1.04) + (3.017) + (14.001), (1.04) + (3.017) + (15.025), (1.04) + (3.017) + (16.01),

(I.04) + (3.019) + (1.001), (1.04) + (3.019) + (1.002), (1.04) + (3.019) + (1.003), (1.04) + (3.019) + (1.015), (I.04) + (3.019) + (1.016), (1.04) + (3.019) + (1.017), (1.04) + (3.019) + (1.018), (1.04) + (3.019) + (1.024), (I.04) + (3.019) + (1.026), (1.04) + (3.019) + (1.027), (1.04) + (3.019) + (1.032), (1.04) + (3.019) + (1.033), (I.04) + (3.019) + (1.063), (1.04) + (3.019) + (1.067), (1.04) + (3.019) + (2.001), (1.04) + (3.019) + (2.002), (I.04) + (3.019) + (2.005), (1.04) + (3.019) + (2.007), (1.04) + (3.019) + (2.008), (1.04) + (3.019) + (2.010), (I.04) + (3.019) + (2.012), (1.04) + (3.019) + (2.014), (1.04) + (3.019) + (2.016), (1.04) + (3.019) + (2.018), (I.04) + (3.019) + (2.031), (1.04) + (3.019) + (3.003), (1.04) + (3.019) + (3.011), (1.04) + (3.019) + (3.012), (I.04) + (3.019) + (3.014), (1.04) + (3.019) + (3.017), (1.04) + (3.019) + (3.021), (1.04) + (3.019) + (3.022), (I.04) + (3.019) + (3.025), (1.04) + (3.019) + (4.007), (1.04) + (3.019) + (5.004), (1.04) + (3.019) + (5.005), (I.04) + (3.019) + (5.008), (1.04) + (3.019) + (5.009), (1.04) + (3.019) + (5.012), (1.04) + (3.019) + (5.013), (I.04) + (3.019) + (6.005), (1.04) + (3.019) + (7.005), (1.04) + (3.019) + (8.001), (1.04) + (3.019) + (9.002), (I.04) + (3.019) + (10.001), (1.04) + (3.019) + (10.002), (1.04) + (3.019) + (12.003), (1.04) + (3.019) + (12.004), (1.04) + (3.019) + (13.001), (1.04) + (3.019) + (13.004), (1.04) + (3.019) + (14.001), (1.04) + (3.019) + (15.025), (1.04) + (3.019) + (16.01),

(I.04) + (3.021) + (1.001), (1.04) + (3.021) + (1.002), (1.04) + (3.021) + (1.003), (1.04) + (3.021) + (1.015), (I.04) + (3.021) + (1.016), (1.04) + (3.021) + (1.017), (1.04) + (3.021) + (1.018), (1.04) + (3.021) + (1.024), (I.04) + (3.021) + (1.026), (1.04) + (3.021) + (1.027), (1.04) + (3.021) + (1.032), (1.04) + (3.021) + (1.033), (I.04) + (3.021) + (1.063), (1.04) + (3.021) + (1.067), (1.04) + (3.021) + (2.001), (1.04) + (3.021) + (2.002), (I.04) + (3.021) + (2.005), (1.04) + (3.021) + (2.007), (1.04) + (3.021) + (2.008), (1.04) + (3.021) + (2.010), (I.04) + (3.021) + (2.012), (1.04) + (3.021) + (2.014), (1.04) + (3.021) + (2.016), (1.04) + (3.021) + (2.018), (I.04) + (3.021) + (2.031), (1.04) + (3.021) + (3.003), (1.04) + (3.021) + (3.011), (1.04) + (3.021) + (3.012), (I.04) + (3.021) + (3.014), (1.04) + (3.021) + (3.017), (1.04) + (3.021) + (3.019), (1.04) + (3.021) + (3.022), (I.04) + (3.021) + (3.025), (1.04) + (3.021) + (4.007), (1.04) + (3.021) + (5.004), (1.04) + (3.021) + (5.005), (I.04) + (3.021) + (5.008), (1.04) + (3.021) + (5.009), (1.04) + (3.021) + (5.012), (1.04) + (3.021) + (5.013), (I.04) + (3.021) + (6.005), (1.04) + (3.021) + (7.005), (1.04) + (3.021) + (8.001), (1.04) + (3.021) + (9.002), (I.04) + (3.021) + (10.001), (1.04) + (3.021) + (10.002), (1.04) + (3.021) + (12.003), (1.04) + (3.021) + (12.004), (1.04) + (3.021) + (13.001), (1.04) + (3.021) + (13.004), (1.04) + (3.021) + (14.001), (1.04) + (3.021) + (15.025), (1.04) + (3.021) + (16.01),

(I.04) + (3.022) + (1.001), (1.04) + (3.022) + (1.002), (1.04) + (3.022) + (1.003), (1.04) + (3.022) + (1.015), (I.04) + (3.022) + (1.016), (1.04) + (3.022) + (1.017), (1.04) + (3.022) + (1.018), (1.04) + (3.022) + (1.024), (I.04) + (3.022) + (1.026), (1.04) + (3.022) + (1.027), (1.04) + (3.022) + (1.032), (1.04) + (3.022) + (1.033), (I.04) + (3.022) + (1.063), (1.04) + (3.022) + (1.067), (1.04) + (3.022) + (2.001), (1.04) + (3.022) + (2.002), (I.04) + (3.022) + (2.005), (1.04) + (3.022) + (2.007), (1.04) + (3.022) + (2.008), (1.04) + (3.022) + (2.010), (I.04) + (3.022) + (2.012), (1.04) + (3.022) + (2.014), (1.04) + (3.022) + (2.016), (1.04) + (3.022) + (2.018), (I.04) + (3.022) + (2.031), (1.04) + (3.022) + (3.003), (1.04) + (3.022) + (3.011), (1.04) + (3.022) + (3.012), (I.04) + (3.022) + (3.014), (1.04) + (3.022) + (3.017), (1.04) + (3.022) + (3.019), (1.04) + (3.022) + (3.021), (I.04) + (3.022) + (3.025), (1.04) + (3.022) + (4.007), (1.04) + (3.022) + (5.004), (1.04) + (3.022) + (5.005), (I.04) + (3.022) + (5.008), (1.04) + (3.022) + (5.009), (1.04) + (3.022) + (5.012), (1.04) + (3.022) + (5.013), (I.04) + (3.022) + (6.005), (1.04) + (3.022) + (7.005), (1.04) + (3.022) + (8.001), (1.04) + (3.022) + (9.002), (I.04) + (3.022) + (10.001), (1.04) + (3.022) + (10.002), (1.04) + (3.022) + (12.003), (1.04) + (3.022) + (12.004), (1.04) + (3.022) + (13.001), (1.04) + (3.022) + (13.004), (1.04) + (3.022) + (14.001), (1.04) + (3.022) + (15.025), (1.04) + (3.022) + (16.01),

(I.04) + (3.025) + (1.001), (1.04) + (3.025) + (1.002), (1.04) + (3.025) + (1.003), (1.04) + (3.025) + (1.015), (I.04) + (3.025) + (1.016), (1.04) + (3.025) + (1.017), (1.04) + (3.025) + (1.018), (1.04) + (3.025) + (1.024), (I.04) + (3.025) + (1.026), (1.04) + (3.025) + (1.027), (1.04) + (3.025) + (1.032), (1.04) + (3.025) + (1.033), (I.04) + (3.025) + (1.063), (1.04) + (3.025) + (1.067), (1.04) + (3.025) + (2.001), (1.04) + (3.025) + (2.002), (I.04) + (3.025) + (2.005), (1.04) + (3.025) + (2.007), (1.04) + (3.025) + (2.008), (1.04) + (3.025) + (2.010), (I.04) + (3.025) + (2.012), (1.04) + (3.025) + (2.014), (1.04) + (3.025) + (2.016), (1.04) + (3.025) + (2.018), (I.04) + (3.025) + (2.031), (1.04) + (3.025) + (3.003), (1.04) + (3.025) + (3.011), (1.04) + (3.025) + (3.012), (I.04) + (3.025) + (3.014), (1.04) + (3.025) + (3.017), (1.04) + (3.025) + (3.019), (1.04) + (3.025) + (3.021), (I.04) + (3.025) + (3.022), (1.04) + (3.025) + (4.007), (1.04) + (3.025) + (5.004), (1.04) + (3.025) + (5.005), (I.04) + (3.025) + (5.008), (1.04) + (3.025) + (5.009), (1.04) + (3.025) + (5.012), (1.04) + (3.025) + (5.013), (I.04) + (3.025) + (6.005), (1.04) + (3.025) + (7.005), (1.04) + (3.025) + (8.001), (1.04) + (3.025) + (9.002), (I.04) + (3.025) + (10.001), (1.04) + (3.025) + (10.002), (1.04) + (3.025) + (12.003), (1.04) + (3.025) + (12.004), (1.04) + (3.025) + (13.001), (1.04) + (3.025) + (13.004), (1.04) + (3.025) + (14.001), (1.04) + (3.025) + (15.025), (1.04) + (3.025) + (16.01),

(I.04) + (4.007) + (1.001), (1.04) + (4.007) + (1.002), (1.04) + (4.007) + (1.003), (1.04) + (4.007) + (1.015), (I.04) + (4.007) + (1.016), (1.04) + (4.007) + (1.017), (1.04) + (4.007) + (1.018), (1.04) + (4.007) + (1.024), (I.04) + (4.007) + (1.026), (1.04) + (4.007) + (1.027), (1.04) + (4.007) + (1.032), (1.04) + (4.007) + (1.033), (I.04) + (4.007) + (1.063), (1.04) + (4.007) + (1.067), (1.04) + (4.007) + (2.001), (1.04) + (4.007) + (2.002), (I.04) + (4.007) + (2.005), (1.04) + (4.007) + (2.007), (1.04) + (4.007) + (2.008), (1.04) + (4.007) + (2.010), (I.04) + (4.007) + (2.012), (1.04) + (4.007) + (2.014), (1.04) + (4.007) + (2.016), (1.04) + (4.007) + (2.018), (I.04) + (4.007) + (2.031), (1.04) + (4.007) + (3.003), (1.04) + (4.007) + (3.011), (1.04) + (4.007) + (3.012), (I.04) + (4.007) + (3.014), (1.04) + (4.007) + (3.017), (1.04) + (4.007) + (3.019), (1.04) + (4.007) + (3.021), (I.04) + (4.007) + (3.022), (1.04) + (4.007) + (3.025), (1.04) + (4.007) + (5.004), (1.04) + (4.007) + (5.005), (I.04) + (4.007) + (5.008), (1.04) + (4.007) + (5.009), (1.04) + (4.007) + (5.012), (1.04) + (4.007) + (5.013), (I.04) + (4.007) + (6.005), (1.04) + (4.007) + (7.005), (1.04) + (4.007) + (8.001), (1.04) + (4.007) + (9.002), (I.04) + (4.007) + (10.001), (1.04) + (4.007) + (10.002), (1.04) + (4.007) + (12.003), (1.04) + (4.007) + (12.004), (1.04) + (4.007) + (13.001), (1.04) + (4.007) + (13.004), (1.04) + (4.007) + (14.001), (1.04) + (4.007) + (15.025), (1.04) + (4.007) + (16.01),

(I.04) + (5.004) + (1.001), (1.04) + (5.004) + (1.002), (1.04) + (5.004) + (1.003), (1.04) + (5.004) + (1.015), (I.04) + (5.004) + (1.016), (1.04) + (5.004) + (1.017), (1.04) + (5.004) + (1.018), (1.04) + (5.004) + (1.024), (I.04) + (5.004)

+ (1.026), (1.04) + (5.004) + (1.027), (1.04) + (5.004) + (1.032), (1.04) + (5.004) + (1.033), (I.04) + (5.004) + (1.063), (1.04) + (5.004) + (1.067), (1.04) + (5.004) + (2.001), (1.04) + (5.004) + (2.002), (I.04) + (5.004) + (2.005), (1.04) + (5.004) + (2.007), (1.04) + (5.004) + (2.008), (1.04) + (5.004) + (2.010), (I.04) + (5.004) + (2.012), (1.04) + (5.004) + (2.014), (1.04) + (5.004) + (2.016), (1.04) + (5.004) + (2.018), (I.04) + (5.004) + (2.031), (1.04) + (5.004) + (3.003), (1.04) + (5.004) + (3.011), (1.04) + (5.004) + (3.012), (I.04) + (5.004) + (3.014), (1.04) + (5.004) + (3.017), (1.04) + (5.004) + (3.019), (1.04) + (5.004) + (3.021), (I.04) + (5.004) + (3.022), (1.04) + (5.004) + (3.025), (1.04) + (5.004) + (4.007), (1.04) + (5.004) + (5.005), (I.04) + (5.004) + (5.008), (1.04) + (5.004) + (5.009), (1.04) + (5.004) + (5.012), (1.04) + (5.004) + (5.013), (I.04) + (5.004) + (6.005), (1.04) + (5.004) + (7.005), (1.04) + (5.004) + (8.001), (1.04) + (5.004) + (9.002), (I.04) + (5.004) + (10.001), (1.04) + (5.004) + (10.002), (1.04) + (5.004) + (12.003), (1.04) + (5.004) + (12.004), (1.04) + (5.004) + (13.001), (1.04) + (5.004) + (13.004), (1.04) + (5.004) + (14.001), (1.04) + (5.004) + (15.025), (1.04) + (5.004) + (16.01),

(I.04) + (5.005) + (1.001), (1.04) + (5.005) + (1.002), (1.04) + (5.005) + (1.003), (1.04) + (5.005) + (1.015), (I.04) + (5.005) + (1.016), (1.04) + (5.005) + (1.017), (1.04) + (5.005) + (1.018), (1.04) + (5.005) + (1.024), (I.04) + (5.005) + (1.026), (1.04) + (5.005) + (1.027), (1.04) + (5.005) + (1.032), (1.04) + (5.005) + (1.033), (I.04) + (5.005) + (1.063), (1.04) + (5.005) + (1.067), (1.04) + (5.005) + (2.001), (1.04) + (5.005) + (2.002), (I.04) + (5.005) + (2.005), (1.04) + (5.005) + (2.007), (1.04) + (5.005) + (2.008), (1.04) + (5.005) + (2.010), (I.04) + (5.005) + (2.012), (1.04) + (5.005) + (2.014), (1.04) + (5.005) + (2.016), (1.04) + (5.005) + (2.018), (I.04) + (5.005) + (2.031), (1.04) + (5.005) + (3.003), (1.04) + (5.005) + (3.011), (1.04) + (5.005) + (3.012), (I.04) + (5.005) + (3.014), (1.04) + (5.005) + (3.017), (1.04) + (5.005) + (3.019), (1.04) + (5.005) + (3.021), (I.04) + (5.005) + (3.022), (1.04) + (5.005) + (3.025), (1.04) + (5.005) + (4.007), (1.04) + (5.005) + (5.004), (I.04) + (5.005) + (5.008), (1.04) + (5.005) + (5.009), (1.04) + (5.005) + (5.012), (1.04) + (5.005) + (5.013), (I.04) + (5.005) + (6.005), (1.04) + (5.005) + (7.005), (1.04) + (5.005) + (8.001), (1.04) + (5.005) + (9.002), (I.04) + (5.005) + (10.001), (1.04) + (5.005) + (10.002), (1.04) + (5.005) + (12.003), (1.04) + (5.005) + (12.004), (1.04) + (5.005) + (13.001), (1.04) + (5.005) + (13.004), (1.04) + (5.005) + (14.001), (1.04) + (5.005) + (15.025), (1.04) + (5.005) + (16.01),

(I.04) + (5.008) + (1.001), (1.04) + (5.008) + (1.002), (1.04) + (5.008) + (1.003), (1.04) + (5.008) + (1.015), (I.04) + (5.008) + (1.016), (1.04) + (5.008) + (1.017), (1.04) + (5.008) + (1.018), (1.04) + (5.008) + (1.024), (I.04) + (5.008) + (1.026), (1.04) + (5.008) + (1.027), (1.04) + (5.008) + (1.032), (1.04) + (5.008) + (1.033), (I.04) + (5.008) + (1.063), (1.04) + (5.008) + (1.067), (1.04) + (5.008) + (2.001), (1.04) + (5.008) + (2.002), (I.04) + (5.008) + (2.005), (1.04) + (5.008) + (2.007), (1.04) + (5.008) + (2.008), (1.04) + (5.008) + (2.010), (I.04) + (5.008) + (2.012), (1.04) + (5.008) + (2.014), (1.04) + (5.008) + (2.016), (1.04) + (5.008) + (2.018), (I.04) + (5.008) + (2.031), (1.04) + (5.008) + (3.003), (1.04) + (5.008) + (3.011), (1.04) + (5.008) + (3.012), (I.04) + (5.008) + (3.014), (1.04) + (5.008) + (3.017), (1.04) + (5.008) + (3.019), (1.04) + (5.008) + (3.021), (I.04) + (5.008) + (3.022), (1.04) + (5.008) + (3.025), (1.04) + (5.008) + (4.007), (1.04) + (5.008) + (5.004), (I.04) + (5.008) + (5.005), (1.04) + (5.008) + (5.009), (1.04) + (5.008) + (5.012), (1.04) + (5.008) + (5.013), (I.04) + (5.008) + (6.005), (1.04) + (5.008) + (7.005), (1.04) + (5.008) + (8.001), (1.04) + (5.008) + (9.002), (I.04) + (5.008) + (10.001), (1.04) + (5.008) + (10.002), (1.04) + (5.008) + (12.003), (1.04) + (5.008) + (12.004), (1.04) + (5.008) + (13.001), (1.04) + (5.008) + (13.004), (1.04) + (5.008) + (14.001), (1.04) + (5.008) + (15.025), (1.04) + (5.008) + (16.01),

(I.04) + (5.009) + (1.001), (1.04) + (5.009) + (1.002), (1.04) + (5.009) + (1.003), (1.04) + (5.009) + (1.015), (I.04) + (5.009) + (1.016), (1.04) + (5.009) + (1.017), (1.04) + (5.009) + (1.018), (1.04) + (5.009) + (1.024), (I.04) + (5.009) + (1.026), (1.04) + (5.009) + (1.027), (1.04) + (5.009) + (1.032), (1.04) + (5.009) + (1.033), (I.04) + (5.009) + (1.063), (1.04) + (5.009) + (1.067), (1.04) + (5.009) + (2.001), (1.04) + (5.009) + (2.002), (I.04) + (5.009) + (2.005), (1.04) + (5.009) + (2.007), (1.04) + (5.009) + (2.008), (1.04) + (5.009) + (2.010), (I.04) + (5.009) + (2.012), (1.04) + (5.009) + (2.014), (1.04) + (5.009) + (2.016), (1.04) + (5.009) + (2.018), (I.04) + (5.009) + (2.031), (1.04) + (5.009) + (3.003), (1.04) + (5.009) + (3.011), (1.04) + (5.009) + (3.012), (I.04) + (5.009) + (3.014), (1.04) + (5.009) + (3.017), (1.04) + (5.009) + (3.019), (1.04) + (5.009) + (3.021), (I.04) + (5.009) + (3.022), (1.04) + (5.009) + (3.025), (1.04) + (5.009) + (4.007), (1.04) + (5.009) + (5.004), (I.04) + (5.009) + (5.005), (1.04) + (5.009) + (5.008), (1.04) + (5.009) + (5.012), (1.04) + (5.009) + (5.013), (I.04) + (5.009) + (6.005), (1.04) + (5.009) + (7.005), (1.04) + (5.009) + (8.001), (1.04) + (5.009) + (9.002), (I.04) + (5.009) + (10.001), (1.04) + (5.009) + (10.002), (1.04) + (5.009) + (12.003), (1.04) + (5.009) + (12.004), (1.04) + (5.009) + (13.001), (1.04) + (5.009) + (13.004), (1.04) + (5.009) + (14.001), (1.04) + (5.009) + (15.025), (1.04) + (5.009) + (16.01),

(I.04) + (5.012) + (1.001), (1.04) + (5.012) + (1.002), (1.04) + (5.012) + (1.003), (1.04) + (5.012) + (1.015), (I.04) + (5.012) + (1.016), (1.04) + (5.012) + (1.017), (1.04) + (5.012) + (1.018), (1.04) + (5.012) + (1.024), (I.04) + (5.012) + (1.026), (1.04) + (5.012) + (1.027), (1.04) + (5.012) + (1.032), (1.04) + (5.012) + (1.033), (I.04) + (5.012) + (1.063), (1.04) + (5.012) + (1.067), (1.04) + (5.012) + (2.001), (1.04) + (5.012) + (2.002), (I.04) + (5.012) + (2.005), (1.04) +

(5.012) + (2.007), (1.04) + (5.012) + (2.008), (1.04) + (5.012) + (2.010), (I.04) + (5.012) + (2.012), (1.04) + (5.012) + (2.014), (1.04) + (5.012) + (2.016), (1.04) + (5.012) + (2.018), (I.04) + (5.012) + (2.031), (1.04) + (5.012) + (3.003), (1.04) + (5.012) + (3.011), (1.04) + (5.012) + (3.012), (I.04) + (5.012) + (3.014), (1.04) + (5.012) + (3.017), (1.04) + (5.012) + (3.019), (1.04) + (5.012) + (3.021), (I.04) + (5.012) + (3.022), (1.04) + (5.012) + (3.025), (1.04) + (5.012) + (4.007), (1.04) + (5.012) + (5.004), (I.04) + (5.012) + (5.005), (1.04) + (5.012) + (5.008), (1.04) + (5.012) + (5.009), (1.04) + (5.012) + (5.013), (I.04) + (5.012) + (6.005), (1.04) + (5.012) + (7.005), (1.04) + (5.012) + (8.001), (1.04) + (5.012) + (9.002), (I.04) + (5.012) + (10.001), (1.04) + (5.012) + (10.002), (1.04) + (5.012) + (12.003), (1.04) + (5.012) + (12.004), (1.04) + (5.012) + (13.001), (1.04) + (5.012) + (13.004), (1.04) + (5.012) + (14.001), (1.04) + (5.012) + (15.025), (1.04) + (5.012) + (16.01),

(I.04) + (5.013) + (1.001), (1.04) + (5.013) + (1.002), (1.04) + (5.013) + (1.003), (1.04) + (5.013) + (1.015), (I.04) + (5.013) + (1.016), (1.04) + (5.013) + (1.017), (1.04) + (5.013) + (1.018), (1.04) + (5.013) + (1.024), (I.04) + (5.013) + (1.026), (1.04) + (5.013) + (1.027), (1.04) + (5.013) + (1.032), (1.04) + (5.013) + (1.033), (I.04) + (5.013) + (1.063), (1.04) + (5.013) + (1.067), (1.04) + (5.013) + (2.001), (1.04) + (5.013) + (2.002), (I.04) + (5.013) + (2.005), (1.04) + (5.013) + (2.007), (1.04) + (5.013) + (2.008), (1.04) + (5.013) + (2.010), (I.04) + (5.013) + (2.012), (1.04) + (5.013) + (2.014), (1.04) + (5.013) + (2.016), (1.04) + (5.013) + (2.018), (I.04) + (5.013) + (2.031), (1.04) + (5.013) + (3.003), (1.04) + (5.013) + (3.011), (1.04) + (5.013) + (3.012), (I.04) + (5.013) + (3.014), (1.04) + (5.013) + (3.017), (1.04) + (5.013) + (3.019), (1.04) + (5.013) + (3.021), (I.04) + (5.013) + (3.022), (1.04) + (5.013) + (3.025), (1.04) + (5.013) + (4.007), (1.04) + (5.013) + (5.004), (I.04) + (5.013) + (5.005), (1.04) + (5.013) + (5.008), (1.04) + (5.013) + (5.009), (1.04) + (5.013) + (5.012), (I.04) + (5.013) + (6.005), (1.04) + (5.013) + (7.005), (1.04) + (5.013) + (8.001), (1.04) + (5.013) + (9.002), (I.04) + (5.013) + (10.001), (1.04) + (5.013) + (10.002), (1.04) + (5.013) + (12.003), (1.04) + (5.013) + (12.004), (1.04) + (5.013) + (13.001), (1.04) + (5.013) + (13.004), (1.04) + (5.013) + (14.001), (1.04) + (5.013) + (15.025), (1.04) + (5.013) + (16.01),

(I.04) + (6.005) + (1.001), (1.04) + (6.005) + (1.002), (1.04) + (6.005) + (1.003), (1.04) + (6.005) + (1.015), (I.04) + (6.005) + (1.016), (1.04) + (6.005) + (1.017), (1.04) + (6.005) + (1.018), (1.04) + (6.005) + (1.024), (I.04) + (6.005) + (1.026), (1.04) + (6.005) + (1.027), (1.04) + (6.005) + (1.032), (1.04) + (6.005) + (1.033), (I.04) + (6.005) + (1.063), (1.04) + (6.005) + (1.067), (1.04) + (6.005) + (2.001), (1.04) + (6.005) + (2.002), (I.04) + (6.005) + (2.005), (1.04) + (6.005) + (2.007), (1.04) + (6.005) + (2.008), (1.04) + (6.005) + (2.010), (I.04) + (6.005) + (2.012), (1.04) + (6.005) + (2.014), (1.04) + (6.005) + (2.016), (1.04) + (6.005) + (2.018), (I.04) + (6.005) + (2.031), (1.04) + (6.005) + (3.003), (1.04) + (6.005) + (3.011), (1.04) + (6.005) + (3.012), (I.04) + (6.005) + (3.014), (1.04) + (6.005) + (3.017), (1.04) + (6.005) + (3.019), (1.04) + (6.005) + (3.021), (I.04) + (6.005) + (3.022), (1.04) + (6.005) + (3.025), (1.04) + (6.005) + (4.007), (1.04) + (6.005) + (5.004), (I.04) + (6.005) + (5.005), (1.04) + (6.005) + (5.008), (1.04) + (6.005) + (5.009), (1.04) + (6.005) + (5.012), (I.04) + (6.005) + (5.013), (1.04) + (6.005) + (7.005), (1.04) + (6.005) + (8.001), (1.04) + (6.005) + (9.002), (I.04) + (6.005) + (10.001), (1.04) + (6.005) + (10.002), (1.04) + (6.005) + (12.003), (1.04) + (6.005) + (12.004), (1.04) + (6.005) + (13.001), (1.04) + (6.005) + (13.004), (1.04) + (6.005) + (14.001), (1.04) + (6.005) + (15.025), (1.04) + (6.005) + (16.01),

(I.04) + (7.005) + (1.001), (1.04) + (7.005) + (1.002), (1.04) + (7.005) + (1.003), (1.04) + (7.005) + (1.015), (I.04) + (7.005) + (1.016), (1.04) + (7.005) + (1.017), (1.04) + (7.005) + (1.018), (1.04) + (7.005) + (1.024), (I.04) + (7.005) + (1.026), (1.04) + (7.005) + (1.027), (1.04) + (7.005) + (1.032), (1.04) + (7.005) + (1.033), (I.04) + (7.005) + (1.063), (1.04) + (7.005) + (1.067), (1.04) + (7.005) + (2.001), (1.04) + (7.005) + (2.002), (I.04) + (7.005) + (2.005), (1.04) + (7.005) + (2.007), (1.04) + (7.005) + (2.008), (1.04) + (7.005) + (2.010), (I.04) + (7.005) + (2.012), (1.04) + (7.005) + (2.014), (1.04) + (7.005) + (2.016), (1.04) + (7.005) + (2.018), (I.04) + (7.005) + (2.031), (1.04) + (7.005) + (3.003), (1.04) + (7.005) + (3.011), (1.04) + (7.005) + (3.012), (I.04) + (7.005) + (3.014), (1.04) + (7.005) + (3.017), (1.04) + (7.005) + (3.019), (1.04) + (7.005) + (3.021), (I.04) + (7.005) + (3.022), (1.04) + (7.005) + (3.025), (1.04) + (7.005) + (4.007), (1.04) + (7.005) + (5.004), (I.04) + (7.005) + (5.005), (1.04) + (7.005) + (5.008), (1.04) + (7.005) + (5.009), (1.04) + (7.005) + (5.012), (I.04) + (7.005) + (5.013), (1.04) + (7.005) + (6.005), (1.04) + (7.005) + (8.001), (1.04) + (7.005) + (9.002), (I.04) + (7.005) + (10.001), (1.04) + (7.005) + (10.002), (1.04) + (7.005) + (12.003), (1.04) + (7.005) + (12.004), (1.04) + (7.005) + (13.001), (1.04) + (7.005) + (13.004), (1.04) + (7.005) + (14.001), (1.04) + (7.005) + (15.025), (1.04) + (7.005) + (16.01),

(I.04) + (8.001) + (1.001), (1.04) + (8.001) + (1.002), (1.04) + (8.001) + (1.003), (1.04) + (8.001) + (1.015), (I.04) + (8.001) + (1.016), (1.04) + (8.001) + (1.017), (1.04) + (8.001) + (1.018), (1.04) + (8.001) + (1.024), (I.04) + (8.001) + (1.026), (1.04) + (8.001) + (1.027), (1.04) + (8.001) + (1.032), (1.04) + (8.001) + (1.033), (I.04) + (8.001) + (1.063), (1.04) + (8.001) + (1.067), (1.04) + (8.001) + (2.001), (1.04) + (8.001) + (2.002), (I.04) + (8.001) + (2.005), (1.04) + (8.001) + (2.007), (1.04) + (8.001) + (2.008), (1.04) + (8.001) + (2.010), (I.04) + (8.001) + (2.012), (1.04) + (8.001) + (2.014), (1.04) + (8.001) + (2.016), (1.04) + (8.001) + (2.018), (I.04) + (8.001) + (2.031), (1.04) + (8.001) + (3.003),

(1.04) + (8.001) + (3.011), (1.04) + (8.001) + (3.012), (I.04) + (8.001) + (3.014), (1.04) + (8.001) + (3.017), (1.04) + (8.001) + (3.019), (1.04) + (8.001) + (3.021), (I.04) + (8.001) + (3.022), (1.04) + (8.001) + (3.025), (1.04) + (8.001) + (4.007), (1.04) + (8.001) + (5.004), (I.04) + (8.001) + (5.005), (1.04) + (8.001) + (5.008), (1.04) + (8.001) + (5.009), (1.04) + (8.001) + (5.012), (I.04) + (8.001) + (5.013), (1.04) + (8.001) + (6.005), (1.04) + (8.001) + (7.005), (1.04) + (8.001) + (9.002), (I.04) + (8.001) + (10.001), (1.04) + (8.001) + (10.002), (1.04) + (8.001) + (12.003), (1.04) + (8.001) + (12.004), (I.04) + (8.001) + (13.001), (I.04) + (8.001) + (13.004), (I.04) + (8.001) + (14.001), (I.04) + (8.001) + (15.025), (I.04) + (8.001) + (16.01),

(I.04) + (9.002) + (1.001), (I.04) + (9.002) + (1.002), (I.04) + (9.002) + (1.003), (I.04) + (9.002) + (1.015), (I.04) + (9.002) + (1.016), (I.04) + (9.002) + (1.017), (I.04) + (9.002) + (1.018), (I.04) + (9.002) + (1.024), (I.04) + (9.002) + (1.026), (1.04) + (9.002) + (1.027), (1.04) + (9.002) + (1.032), (I.04) + (9.002) + (1.033), (I.04) + (9.002) + (1.063), (1.04) + (9.002) + (1.067), (1.04) + (9.002) + (2.001), (I.04) + (9.002) + (2.002), (I.04) + (9.002) + (2.005), (1.04) + (9.002) + (2.007), (1.04) + (9.002) + (2.008), (I.04) + (9.002) + (2.010), (I.04) + (9.002) + (2.012), (1.04) + (9.002) + (2.014), (1.04) + (9.002) + (2.016), (I.04) + (9.002) + (2.018), (I.04) + (9.002) + (2.031), (1.04) + (9.002) + (3.003), (1.04) + (9.002) + (3.011), (I.04) + (9.002) + (3.012), (I.04) + (9.002) + (3.014), (1.04) + (9.002) + (3.017), (1.04) + (9.002) + (3.019), (I.04) + (9.002) + (3.021), (I.04) + (9.002) + (3.022), (1.04) + (9.002) + (3.025), (1.04) + (9.002) + (4.007), (I.04) + (9.002) + (5.004), (I.04) + (9.002) + (5.005), (1.04) + (9.002) + (5.008), (1.04) + (9.002) + (5.009), (I.04) + (9.002) + (5.012), (I.04) + (9.002) + (5.013), (1.04) + (9.002) + (6.005), (1.04) + (9.002) + (7.005), (I.04) + (9.002) + (8.001), (I.04) + (9.002) + (10.001), (1.04) + (9.002) + (10.002), (1.04) + (9.002) + (12.003), (I.04) + (9.002) + (12.004), (1.04) + (9.002) + (13.001), (1.04) + (9.002) + (13.004), (1.04) + (9.002) + (14.001), (I.04) + (9.002) + (15.025), (1.04) + (9.002) + (16.01),

(I.04) + (10.001) + (1.001), (1.04) + (10.001) + (1.002), (1.04) + (10.001) + (1.003), (1.04) + (10.001) + (1.015), (1.04) + (10.001) + (1.016), (1.04) + (10.001) + (1.017), (1.04) + (10.001) + (1.018), (1.04) + (10.001) + (1.024), (1.04) + (10.001) + (1.026), (1.04) + (10.001) + (1.027), (1.04) + (10.001) + (1.032), (1.04) + (10.001) + (1.033), (1.04) + (10.001) + (1.063), (1.04) + (10.001) + (1.067), (1.04) + (10.001) + (2.001), (1.04) + (10.001) + (2.002), (1.04) + (10.001) + (2.005), (1.04) + (10.001) + (2.007), (1.04) + (10.001) + (2.008), (I.04) + (10.001) + (2.010), (1.04) + (10.001) + (2.012), (1.04) + (10.001) + (2.014), (1.04) + (10.001) + (2.016), (1.04) + (10.001) + (2.018), (1.04) + (10.001) + (2.031), (1.04) + (10.001) + (3.003), (1.04) + (10.001) + (3.011), (1.04) + (10.001) + (3.012), (1.04) + (10.001) + (3.014), (1.04) + (10.001) + (3.017), (1.04) + (10.001) + (3.019), (1.04) + (10.001) + (3.021), (1.04) + (10.001) + (3.022), (1.04) + (10.001) + (3.025), (1.04) + (10.001) + (4.007), (1.04) + (10.001) + (5.004), (1.04) + (10.001) + (5.005), (1.04) + (10.001) + (5.008), (I.04) + (10.001) + (5.009), (1.04) + (10.001) + (5.012), (1.04) + (10.001) + (5.013), (1.04) + (10.001) + (6.005), (1.04) + (10.001) + (7.005), (1.04) + (10.001) + (8.001), (1.04) + (10.001) + (9.002), (1.04) + (10.001) + (10.002), (1.04) + (10.001) + (12.003), (1.04) + (10.001) + (12.004), (1.04) + (10.001) + (13.001), (1.04) + (10.001) + (13.004), (1.04) + (10.001) + (14.001), (1.04) + (10.001) + (15.025), (1.04) + (10.001) + (16.01),

(I.04) + (10.002) + (1.001), (1.04) + (10.002) + (1.002), (1.04) + (10.002) + (1.003), (1.04) + (10.002) + (1.015), (1.04) + (10.002) + (1.016), (1.04) + (10.002) + (1.017), (1.04) + (10.002) + (1.018), (1.04) + (10.002) + (1.024), (1.04) + (10.002) + (1.026), (1.04) + (10.002) + (1.027), (1.04) + (10.002) + (1.032), (1.04) + (10.002) + (1.033), (1.04) + (10.002) + (1.063), (1.04) + (10.002) + (1.067), (1.04) + (10.002) + (2.001), (1.04) + (10.002) + (2.002), (1.04) + (10.002) + (2.005), (1.04) + (10.002) + (2.007), (1.04) + (10.002) + (2.008), (I.04) + (10.002) + (2.010), (1.04) + (10.002) + (2.012), (1.04) + (10.002) + (2.014), (1.04) + (10.002) + (2.016), (1.04) + (10.002) + (2.018), (1.04) + (10.002) + (2.031), (1.04) + (10.002) + (3.003), (1.04) + (10.002) + (3.011), (1.04) + (10.002) + (3.012), (1.04) + (10.002) + (3.014), (1.04) + (10.002) + (3.017), (1.04) + (10.002) + (3.019), (1.04) + (10.002) + (3.021), (1.04) + (10.002) + (3.022), (1.04) + (10.002) + (3.025), (1.04) + (10.002) + (4.007), (1.04) + (10.002) + (5.004), (1.04) + (10.002) + (5.005), (1.04) + (10.002) + (5.008), (I.04) + (10.002) + (5.009), (1.04) + (10.002) + (5.012), (1.04) + (10.002) + (5.013), (1.04) + (10.002) + (6.005), (1.04) + (10.002) + (7.005), (1.04) + (10.002) + (8.001), (1.04) + (10.002) + (9.002), (1.04) + (10.002) + (10.001), (1.04) + (10.002) + (12.003), (1.04) + (10.002) + (12.004), (1.04) + (10.002) + (13.001), (1.04) + (10.002) + (13.004), (1.04) + (10.002) + (14.001), (1.04) + (10.002) + (15.025), (1.04) + (10.002) + (16.01),

(I.04) + (12.003) + (1.001), (1.04) + (12.003) + (1.002), (1.04) + (12.003) + (1.003), (1.04) + (12.003) + (1.015), (1.04) + (12.003) + (1.016), (1.04) + (12.003) + (1.017), (1.04) + (12.003) + (1.018), (1.04) + (12.003) + (1.024), (1.04) + (12.003) + (1.026), (1.04) + (12.003) + (1.027), (1.04) + (12.003) + (1.032), (1.04) + (12.003) + (1.033), (1.04) + (12.003) + (1.063), (1.04) + (12.003) + (1.067), (1.04) + (12.003) + (2.001), (1.04) + (12.003) + (2.002), (1.04) + (12.003) + (2.005), (1.04) + (12.003) + (2.007), (1.04) + (12.003) + (2.008), (I.04) + (12.003) + (2.010), (1.04) + (12.003) + (2.012), (1.04) + (12.003) + (2.014), (1.04) + (12.003) + (2.016), (1.04) + (12.003) + (2.018),

(1.04) + (12.003) + (2.031), (1.04) + (12.003) + (3.003), (1.04) + (12.003) + (3.011), (1.04) + (12.003) + (3.012), (1.04) + (12.003) + (3.014), (1.04) + (12.003) + (3.017), (1.04) + (12.003) + (3.019), (1.04) + (12.003) + (3.021), (1.04) + (12.003) + (3.022), (1.04) + (12.003) + (3.025), (1.04) + (12.003) + (4.007), (1.04) + (12.003) + (5.004), (1.04) + (12.003) + (5.005), (1.04) + (12.003) + (5.008), (I.04) + (12.003) + (5.009), (1.04) + (12.003) + (5.012), (1.04) + (12.003) + (5.013), (1.04) + (12.003) + (6.005), (1.04) + (12.003) + (7.005), (1.04) + (12.003) + (8.001), (1.04) + (12.003) + (9.002), (1.04) + (12.003) + (10.001), (1.04) + (12.003) + (10.002), (1.04) + (12.003) + (12.004), (1.04) + (12.003) + (13.001), (1.04) + (12.003) + (13.004), (1.04) + (12.003) + (14.001), (1.04) + (12.003) + (15.025), (1.04) + (12.003) + (16.01),

(I.04) + (12.004) + (1.001), (1.04) + (12.004) + (1.002), (1.04) + (12.004) + (1.003), (1.04) + (12.004) + (1.015), (1.04) + (12.004) + (1.016), (1.04) + (12.004) + (1.017), (1.04) + (12.004) + (1.018), (1.04) + (12.004) + (1.024), (1.04) + (12.004) + (1.026), (1.04) + (12.004) + (1.027), (1.04) + (12.004) + (1.032), (1.04) + (12.004) + (1.033), (1.04) + (12.004) + (1.063), (1.04) + (12.004) + (1.067), (1.04) + (12.004) + (2.001), (1.04) + (12.004) + (2.002), (1.04) + (12.004) + (2.005), (1.04) + (12.004) + (2.007), (1.04) + (12.004) + (2.008), (I.04) + (12.004) + (2.010), (1.04) + (12.004) + (2.012), (1.04) + (12.004) + (2.014), (1.04) + (12.004) + (2.016), (1.04) + (12.004) + (2.018), (1.04) + (12.004) + (2.031), (1.04) + (12.004) + (3.003), (1.04) + (12.004) + (3.011), (1.04) + (12.004) + (3.012), (1.04) + (12.004) + (3.014), (1.04) + (12.004) + (3.017), (1.04) + (12.004) + (3.019), (1.04) + (12.004) + (3.021), (1.04) + (12.004) + (3.022), (1.04) + (12.004) + (3.025), (1.04) + (12.004) + (4.007), (1.04) + (12.004) + (5.004), (1.04) + (12.004) + (5.005), (1.04) + (12.004) + (5.008), (I.04) + (12.004) + (5.009), (1.04) + (12.004) + (5.012), (1.04) + (12.004) + (5.013), (1.04) + (12.004) + (6.005), (1.04) + (12.004) + (7.005), (1.04) + (12.004) + (8.001), (1.04) + (12.004) + (9.002), (1.04) + (12.004) + (10.001), (1.04) + (12.004) + (10.002), (1.04) + (12.004) + (12.003), (1.04) + (12.004) + (13.001), (1.04) + (12.004) + (13.004), (1.04) + (12.004) + (14.001), (1.04) + (12.004) + (15.025), (1.04) + (12.004) + (16.01),

(I.04) + (13.001) + (1.001), (1.04) + (13.001) + (1.002), (1.04) + (13.001) + (1.003), (1.04) + (13.001) + (1.015), (1.04) + (13.001) + (1.016), (1.04) + (13.001) + (1.017), (1.04) + (13.001) + (1.018), (1.04) + (13.001) + (1.024), (1.04) + (13.001) + (1.026), (1.04) + (13.001) + (1.027), (1.04) + (13.001) + (1.032), (1.04) + (13.001) + (1.033), (1.04) + (13.001) + (1.063), (1.04) + (13.001) + (1.067), (1.04) + (13.001) + (2.001), (1.04) + (13.001) + (2.002), (1.04) + (13.001) + (2.005), (1.04) + (13.001) + (2.007), (1.04) + (13.001) + (2.008), (I.04) + (13.001) + (2.010), (1.04) + (13.001) + (2.012), (1.04) + (13.001) + (2.014), (1.04) + (13.001) + (2.016), (1.04) + (13.001) + (2.018), (1.04) + (13.001) + (2.031), (1.04) + (13.001) + (3.003), (1.04) + (13.001) + (3.011), (1.04) + (13.001) + (3.012), (1.04) + (13.001) + (3.014), (1.04) + (13.001) + (3.017), (1.04) + (13.001) + (3.019), (1.04) + (13.001) + (3.021), (1.04) + (13.001) + (3.022), (1.04) + (13.001) + (3.025), (1.04) + (13.001) + (4.007), (1.04) + (13.001) + (5.004), (1.04) + (13.001) + (5.005), (1.04) + (13.001) + (5.008), (I.04) + (13.001) + (5.009), (1.04) + (13.001) + (5.012), (1.04) + (13.001) + (5.013), (1.04) + (13.001) + (6.005), (1.04) + (13.001) + (7.005), (1.04) + (13.001) + (8.001), (1.04) + (13.001) + (9.002), (1.04) + (13.001) + (10.001), (1.04) + (13.001) + (10.002), (1.04) + (13.001) + (12.003), (1.04) + (13.001) + (12.004), (1.04) + (13.001) + (13.004), (1.04) + (13.001) + (14.001), (1.04) + (13.001) + (15.025), (1.04) + (13.001) + (16.01),

(I.04) + (13.004) + (1.001), (1.04) + (13.004) + (1.002), (1.04) + (13.004) + (1.003), (1.04) + (13.004) + (1.015), (1.04) + (13.004) + (1.016), (1.04) + (13.004) + (1.017), (1.04) + (13.004) + (1.018), (1.04) + (13.004) + (1.024), (1.04) + (13.004) + (1.026), (1.04) + (13.004) + (1.027), (1.04) + (13.004) + (1.032), (1.04) + (13.004) + (1.033), (1.04) + (13.004) + (1.063), (1.04) + (13.004) + (1.067), (1.04) + (13.004) + (2.001), (1.04) + (13.004) + (2.002), (1.04) + (13.004) + (2.005), (1.04) + (13.004) + (2.007), (1.04) + (13.004) + (2.008), (I.04) + (13.004) + (2.010), (1.04) + (13.004) + (2.012), (1.04) + (13.004) + (2.014), (1.04) + (13.004) + (2.016), (1.04) + (13.004) + (2.018), (1.04) + (13.004) + (2.031), (1.04) + (13.004) + (3.003), (1.04) + (13.004) + (3.011), (1.04) + (13.004) + (3.012), (1.04) + (13.004) + (3.014), (1.04) + (13.004) + (3.017), (1.04) + (13.004) + (3.019), (1.04) + (13.004) + (3.021), (1.04) + (13.004) + (3.022), (1.04) + (13.004) + (3.025), (1.04) + (13.004) + (4.007), (1.04) + (13.004) + (5.004), (1.04) + (13.004) + (5.005), (1.04) + (13.004) + (5.008), (I.04) + (13.004) + (5.009), (1.04) + (13.004) + (5.012), (1.04) + (13.004) + (5.013), (1.04) + (13.004) + (6.005), (1.04) + (13.004) + (7.005), (1.04) + (13.004) + (8.001), (1.04) + (13.004) + (9.002), (1.04) + (13.004) + (10.001), (1.04) + (13.004) + (10.002), (1.04) + (13.004) + (12.003), (1.04) + (13.004) + (12.004), (1.04) + (13.004) + (13.001), (1.04) + (13.004) + (14.001), (1.04) + (13.004) + (15.025), (1.04) + (13.004) + (16.01),

(I.04) + (14.001) + (1.001), (1.04) + (14.001) + (1.002), (1.04) + (14.001) + (1.003), (1.04) + (14.001) + (1.015), (1.04) + (14.001) + (1.016), (1.04) + (14.001) + (1.017), (1.04) + (14.001) + (1.018), (1.04) + (14.001) + (1.024), (1.04) + (14.001) + (1.026), (1.04) + (14.001) + (1.027), (1.04) + (14.001) + (1.032), (1.04) + (14.001) + (1.033), (1.04) + (14.001) + (1.063), (1.04) + (14.001) + (1.067), (1.04) + (14.001) + (2.001), (1.04) + (14.001) + (2.002),

(1.04) + (14.001) + (2.005), (1.04) + (14.001) + (2.007), (1.04) + (14.001) + (2.008), (I.04) + (14.001) + (2.010), (1.04) + (14.001) + (2.012), (1.04) + (14.001) + (2.014), (1.04) + (14.001) + (2.016), (1.04) + (14.001) + (2.018), (1.04) + (14.001) + (2.031), (1.04) + (14.001) + (3.003), (1.04) + (14.001) + (3.011), (1.04) + (14.001) + (3.012), (1.04) + (14.001) + (3.014), (1.04) + (14.001) + (3.017), (1.04) + (14.001) + (3.019), (1.04) + (14.001) + (3.021), (1.04) + (14.001) + (3.022), (1.04) + (14.001) + (3.025), (1.04) + (14.001) + (4.007), (1.04) + (14.001) + (5.004), (1.04) + (14.001) + (5.005), (1.04) + (14.001) + (5.008), (I.04) + (14.001) + (5.009), (1.04) + (14.001) + (5.012), (1.04) + (14.001) + (5.013), (1.04) + (14.001) + (6.005), (1.04) + (14.001) + (7.005), (1.04) + (14.001) + (8.001), (1.04) + (14.001) + (9.002), (1.04) + (14.001) + (10.001), (1.04) + (14.001) + (10.002), (1.04) + (14.001) + (12.003), (1.04) + (14.001) + (12.004), (1.04) + (14.001) + (13.001), (1.04) + (14.001) + (13.004), (1.04) + (14.001) + (15.025), (1.04) + (14.001) + (16.01),

(I.04) + (15.025) + (1.001), (1.04) + (15.025) + (1.002), (1.04) + (15.025) + (1.003), (1.04) + (15.025) + (1.015), (1.04) + (15.025) + (1.016), (1.04) + (15.025) + (1.017), (1.04) + (15.025) + (1.018), (1.04) + (15.025) + (1.024), (1.04) + (15.025) + (1.026), (1.04) + (15.025) + (1.027), (1.04) + (15.025) + (1.032), (1.04) + (15.025) + (1.033), (1.04) + (15.025) + (1.063), (1.04) + (15.025) + (1.067), (1.04) + (15.025) + (2.001), (1.04) + (15.025) + (2.002), (1.04) + (15.025) + (2.005), (1.04) + (15.025) + (2.007), (1.04) + (15.025) + (2.008), (I.04) + (15.025) + (2.010), (1.04) + (15.025) + (2.012), (1.04) + (15.025) + (2.014), (1.04) + (15.025) + (2.016), (1.04) + (15.025) + (2.018), (1.04) + (15.025) + (2.031), (1.04) + (15.025) + (3.003), (1.04) + (15.025) + (3.011), (1.04) + (15.025) + (3.012), (1.04) + (15.025) + (3.014), (1.04) + (15.025) + (3.017), (1.04) + (15.025) + (3.019), (1.04) + (15.025) + (3.021), (1.04) + (15.025) + (3.022), (1.04) + (15.025) + (3.025), (1.04) + (15.025) + (4.007), (1.04) + (15.025) + (5.004), (1.04) + (15.025) + (5.005), (1.04) + (15.025) + (5.008), (I.04) + (15.025) + (5.009), (1.04) + (15.025) + (5.012), (1.04) + (15.025) + (5.013), (1.04) + (15.025) + (6.005), (1.04) + (15.025) + (7.005), (1.04) + (15.025) + (8.001), (1.04) + (15.025) + (9.002), (1.04) + (15.025) + (10.001), (1.04) + (15.025) + (10.002), (1.04) + (15.025) + (12.003), (1.04) + (15.025) + (12.004), (1.04) + (15.025) + (13.001), (1.04) + (15.025) + (13.004), (1.04) + (15.025) + (14.001), (1.04) + (15.025) + (16.01),

(I.04) + (16.01) + (1.001), (1.04) + (16.01) + (1.002), (1.04) + (16.01) + (1.003), (1.04) + (16.01) + (1.015), (I.04) + (16.01) + (1.016), (1.04) + (16.01) + (1.017), (1.04) + (16.01) + (1.018), (1.04) + (16.01) + (1.024), (I.04) + (16.01) + (1.026), (1.04) + (16.01) + (1.027), (1.04) + (16.01) + (1.032), (1.04) + (16.01) + (1.033), (I.04) + (16.01) + (1.063), (1.04) + (16.01) + (1.067), (1.04) + (16.01) + (2.001), (1.04) + (16.01) + (2.002), (I.04) + (16.01) + (2.005), (1.04) + (16.01) + (2.007), (1.04) + (16.01) + (2.008), (1.04) + (16.01) + (2.010), (I.04) + (16.01) + (2.012), (1.04) + (16.01) + (2.014), (1.04) + (16.01) + (2.016), (1.04) + (16.01) + (2.018), (I.04) + (16.01) + (2.031), (1.04) + (16.01) + (3.003), (1.04) + (16.01) + (3.011), (1.04) + (16.01) + (3.012), (I.04) + (16.01) + (3.014), (1.04) + (16.01) + (3.017), (1.04) + (16.01) + (3.019), (1.04) + (16.01) + (3.021), (I.04) + (16.01) + (3.022), (1.04) + (16.01) + (3.025), (1.04) + (16.01) + (4.007), (1.04) + (16.01) + (5.004), (I.04) + (16.01) + (5.005), (1.04) + (16.01) + (5.008), (1.04) + (16.01) + (5.009), (1.04) + (16.01) + (5.012), (I.04) + (16.01) + (5.013), (1.04) + (16.01) + (6.005), (1.04) + (16.01) + (7.005), (1.04) + (16.01) + (8.001), (I.04) + (16.01) + (9.002), (1.04) + (16.01) + (10.001), (1.04) + (16.01) + (10.002), (1.04) + (16.01) + (12.003), (1.04) + (16.01) + (12.004), (1.04) + (16.01) + (13.001), (1.04) + (16.01) + (13.004), (1.04) + (16.01) + (14.001), (1.04) + (16.01) + (15.025).

If two compounds (B) are present in the combinations according to the invention, yet other preferred compound combinations are selected from the group (G5-C) consisting of the following mixtures:

(I.05) + (1.001) + (1.002), (1.05) + (1.001) + (1.003), (1.05) + (1.001) + (1.015), (1.05) + (1.001) + (1.016), (I.05) + (1.001) + (1.017), (1.05) + (1.001) + (1.018), (1.05) + (1.001) + (1.024), (1.05) + (1.001) + (1.026), (I.05) + (1.001) + (1.027), (1.05) + (1.001) + (1.032), (1.05) + (1.001) + (1.033), (1.05) + (1.001) + (1.063), (I.05) + (1.001) + (1.067), (1.05) + (1.001) + (2.001), (1.05) + (1.001) + (2.002), (1.05) + (1.001) + (2.005), (I.05) + (1.001) + (2.007), (1.05) + (1.001) + (2.008), (1.05) + (1.001) + (2.010), (1.05) + (1.001) + (2.012), (I.05) + (1.001) + (2.014), (1.05) + (1.001) + (2.016), (1.05) + (1.001) + (2.018), (1.05) + (1.001) + (2.031), (I.05) + (1.001) + (3.003), (1.05) + (1.001) + (3.011), (1.05) + (1.001) + (3.012), (1.05) + (1.001) + (3.014), (I.05) + (1.001) + (3.017), (1.05) + (1.001) + (3.019), (1.05) + (1.001) + (3.021), (1.05) + (1.001) + (3.022), (I.05) + (1.001) + (3.025), (1.05) + (1.001) + (4.007), (1.05) + (1.001) + (5.004), (1.05) + (1.001) + (5.005), (I.05) + (1.001) + (5.008), (1.05) + (1.001) + (5.009), (1.05) + (1.001) + (5.012), (1.05) + (1.001) + (5.013), (I.05) + (1.001) + (6.005), (1.05) + (1.001) + (7.005), (1.05) + (1.001) + (8.001), (1.05) + (1.001) + (9.002), (I.05) + (1.001) + (10.001), (1.05) + (1.001) + (10.002), (1.05) + (1.001) + (12.003), (1.05) + (1.001) + (12.004), (1.05) + (1.001) + (13.001), (1.05) + (1.001) + (13.004), (1.05) + (1.001) + (14.001), (1.05) + (1.001) + (15.025), (1.05) + (1.001) + (16.01),

(I.05) + (1.002) + (1.001), (1.05) + (1.002) + (1.003), (1.05) + (1.002) + (1.015), (1.05) + (1.002) + (1.016), (I.05) +

(1.002) + (1.017), (1.05) + (1.002) + (1.018), (1.05) + (1.002) + (1.024), (1.05) + (1.002) + (1.026), (I.05) + (1.002) + (1.027), (1.05) + (1.002) + (1.032), (1.05) + (1.002) + (1.033), (1.05) + (1.002) + (1.063), (I.05) + (1.002) + (1.067), (1.05) + (1.002) + (2.001), (1.05) + (1.002) + (2.002), (1.05) + (1.002) + (2.005), (I.05) + (1.002) + (2.007), (1.05) + (1.002) + (2.008), (1.05) + (1.002) + (2.010), (1.05) + (1.002) + (2.012), (I.05) + (1.002) + (2.014), (1.05) + (1.002) + (2.016), (1.05) + (1.002) + (2.018), (1.05) + (1.002) + (2.031), (I.05) + (1.002) + (3.003), (1.05) + (1.002) + (3.011), (1.05) + (1.002) + (3.012), (1.05) + (1.002) + (3.014), (I.05) + (1.002) + (3.017), (1.05) + (1.002) + (3.019), (1.05) + (1.002) + (3.021), (1.05) + (1.002) + (3.022), (I.05) + (1.002) + (3.025), (1.05) + (1.002) + (4.007), (1.05) + (1.002) + (5.004), (1.05) + (1.002) + (5.005), (I.05) + (1.002) + (5.008), (1.05) + (1.002) + (5.009), (1.05) + (1.002) + (5.012), (1.05) + (1.002) + (5.013), (I.05) + (1.002) + (6.005), (1.05) + (1.002) + (7.005), (1.05) + (1.002) + (8.001), (1.05) + (1.002) + (9.002), (I.05) + (1.002) + (10.001), (1.05) + (1.002) + (10.002), (1.05) + (1.002) + (12.003), (1.05) + (1.002) + (12.004), (1.05) + (1.002) + (13.001), (1.05) + (1.002) + (13.004), (1.05) + (1.002) + (14.001), (1.05) + (1.002) + (15.025), (1.05) + (1.002) + (16.01),

(I.05) + (1.003) + (1.001), (1.05) + (1.003) + (1.002), (1.05) + (1.003) + (1.015), (1.05) + (1.003) + (1.016), (I.05) + (1.003) + (1.017), (1.05) + (1.003) + (1.018), (1.05) + (1.003) + (1.024), (1.05) + (1.003) + (1.026), (I.05) + (1.003) + (1.027), (1.05) + (1.003) + (1.032), (1.05) + (1.003) + (1.033), (1.05) + (1.003) + (1.063), (I.05) + (1.003) + (1.067), (1.05) + (1.003) + (2.001), (1.05) + (1.003) + (2.002), (1.05) + (1.003) + (2.005), (I.05) + (1.003) + (2.007), (1.05) + (1.003) + (2.008), (1.05) + (1.003) + (2.010), (1.05) + (1.003) + (2.012), (I.05) + (1.003) + (2.014), (1.05) + (1.003) + (2.016), (1.05) + (1.003) + (2.018), (1.05) + (1.003) + (2.031), (I.05) + (1.003) + (3.003), (1.05) + (1.003) + (3.011), (1.05) + (1.003) + (3.012), (1.05) + (1.003) + (3.014), (I.05) + (1.003) + (3.017), (1.05) + (1.003) + (3.019), (1.05) + (1.003) + (3.021), (1.05) + (1.003) + (3.022), (I.05) + (1.003) + (3.025), (1.05) + (1.003) + (4.007), (1.05) + (1.003) + (5.004), (1.05) + (1.003) + (5.005), (I.05) + (1.003) + (5.008), (1.05) + (1.003) + (5.009), (1.05) + (1.003) + (5.012), (1.05) + (1.003) + (5.013), (I.05) + (1.003) + (6.005), (1.05) + (1.003) + (7.005), (1.05) + (1.003) + (8.001), (1.05) + (1.003) + (9.002), (I.05) + (1.003) + (10.001), (1.05) + (1.003) + (10.002), (1.05) + (1.003) + (12.003), (1.05) + (1.003) + (12.004), (1.05) + (1.003) + (13.001), (1.05) + (1.003) + (13.004), (1.05) + (1.003) + (14.001), (1.05) + (1.003) + (15.025), (1.05) + (1.003) + (16.01),

(I.05) + (1.015) + (1.001), (1.05) + (1.015) + (1.002), (1.05) + (1.015) + (1.003), (1.05) + (1.015) + (1.016), (I.05) + (1.015) + (1.017), (1.05) + (1.015) + (1.018), (1.05) + (1.015) + (1.024), (1.05) + (1.015) + (1.026), (I.05) + (1.015) + (1.027), (1.05) + (1.015) + (1.032), (1.05) + (1.015) + (1.033), (1.05) + (1.015) + (1.063), (I.05) + (1.015) + (1.067), (1.05) + (1.015) + (2.001), (1.05) + (1.015) + (2.002), (1.05) + (1.015) + (2.005), (I.05) + (1.015) + (2.007), (1.05) + (1.015) + (2.008), (1.05) + (1.015) + (2.010), (1.05) + (1.015) + (2.012), (I.05) + (1.015) + (2.014), (1.05) + (1.015) + (2.016), (1.05) + (1.015) + (2.018), (1.05) + (1.015) + (2.031), (I.05) + (1.015) + (3.003), (1.05) + (1.015) + (3.011), (1.05) + (1.015) + (3.012), (1.05) + (1.015) + (3.014), (I.05) + (1.015) + (3.017), (1.05) + (1.015) + (3.019), (1.05) + (1.015) + (3.021), (1.05) + (1.015) + (3.022), (I.05) + (1.015) + (3.025), (1.05) + (1.015) + (4.007), (1.05) + (1.015) + (5.004), (1.05) + (1.015) + (5.005), (I.05) + (1.015) + (5.008), (1.05) + (1.015) + (5.009), (1.05) + (1.015) + (5.012), (1.05) + (1.015) + (5.013), (I.05) + (1.015) + (6.005), (1.05) + (1.015) + (7.005), (1.05) + (1.015) + (8.001), (1.05) + (1.015) + (9.002), (I.05) + (1.015) + (10.001), (1.05) + (1.015) + (10.002), (1.05) + (1.015) + (12.003), (1.05) + (1.015) + (12.004), (1.05) + (1.015) + (13.001), (1.05) + (1.015) + (13.004), (1.05) + (1.015) + (14.001), (1.05) + (1.015) + (15.025), (1.05) + (1.015) + (16.01),

(I.05) + (1.016) + (1.001), (1.05) + (1.016) + (1.002), (1.05) + (1.016) + (1.003), (1.05) + (1.016) + (1.015), (I.05) + (1.016) + (1.017), (1.05) + (1.016) + (1.018), (1.05) + (1.016) + (1.024), (1.05) + (1.016) + (1.026), (I.05) + (1.016) + (1.027), (1.05) + (1.016) + (1.032), (1.05) + (1.016) + (1.033), (1.05) + (1.016) + (1.063), (I.05) + (1.016) + (1.067), (1.05) + (1.016) + (2.001), (1.05) + (1.016) + (2.002), (1.05) + (1.016) + (2.005), (I.05) + (1.016) + (2.007), (1.05) + (1.016) + (2.008), (1.05) + (1.016) + (2.010), (1.05) + (1.016) + (2.012), (I.05) + (1.016) + (2.014), (1.05) + (1.016) + (2.016), (1.05) + (1.016) + (2.018), (1.05) + (1.016) + (2.031), (I.05) + (1.016) + (3.003), (1.05) + (1.016) + (3.011), (1.05) + (1.016) + (3.012), (1.05) + (1.016) + (3.014), (I.05) + (1.016) + (3.017), (1.05) + (1.016) + (3.019), (1.05) + (1.016) + (3.021), (1.05) + (1.016) + (3.022), (I.05) + (1.016) + (3.025), (1.05) + (1.016) + (4.007), (1.05) + (1.016) + (5.004), (1.05) + (1.016) + (5.005), (I.05) + (1.016) + (5.008), (1.05) + (1.016) + (5.009), (1.05) + (1.016) + (5.012), (1.05) + (1.016) + (5.013), (I.05) + (1.016) + (6.005), (1.05) + (1.016) + (7.005), (1.05) + (1.016) + (8.001), (1.05) + (1.016) + (9.002), (I.05) + (1.016) + (10.001), (1.05) + (1.016) + (10.002), (1.05) + (1.016) + (12.003), (1.05) + (1.016) + (12.004), (1.05) + (1.016) + (13.001), (1.05) + (1.016) + (13.004), (1.05) + (1.016) + (14.001), (1.05) + (1.016) + (15.025), (1.05) + (1.016) + (16.01),

(I.05) + (1.017) + (1.001), (1.05) + (1.017) + (1.002), (1.05) + (1.017) + (1.003), (1.05) + (1.017) + (1.015), (I.05) + (1.017) + (1.016), (1.05) + (1.017) + (1.018), (1.05) + (1.017) + (1.024), (1.05) + (1.017) + (1.026), (I.05) + (1.017) + (1.027), (1.05) + (1.017) + (1.032), (1.05) + (1.017) + (1.033), (1.05) + (1.017) + (1.063), (I.05) + (1.017) + (1.067),

(1.05) + (1.017) + (2.001), (1.05) + (1.017) + (2.002), (1.05) + (1.017) + (2.005), (I.05) + (1.017) + (2.007), (1.05) + (1.017) + (2.008), (1.05) + (1.017) + (2.010), (1.05) + (1.017) + (2.012), (I.05) + (1.017) + (2.014), (1.05) + (1.017) + (2.016), (1.05) + (1.017) + (2.018), (1.05) + (1.017) + (2.031), (I.05) + (1.017) + (3.003), (1.05) + (1.017) + (3.011), (1.05) + (1.017) + (3.012), (1.05) + (1.017) + (3.014), (I.05) + (1.017) + (3.017), (1.05) + (1.017) + (3.019), (1.05) + (1.017) + (3.021), (1.05) + (1.017) + (3.022), (I.05) + (1.017) + (3.025), (1.05) + (1.017) + (4.007), (1.05) + (1.017) + (5.004), (1.05) + (1.017) + (5.005), (I.05) + (1.017) + (5.008), (1.05) + (1.017) + (5.009), (1.05) + (1.017) + (5.012), (1.05) + (1.017) + (5.013), (I.05) + (1.017) + (6.005), (1.05) + (1.017) + (7.005), (1.05) + (1.017) + (8.001), (1.05) + (1.017) + (9.002), (I.05) + (1.017) + (10.001), (1.05) + (1.017) + (10.002), (1.05) + (1.017) + (12.003), (1.05) + (1.017) + (12.004), (1.05) + (1.017) + (13.001), (1.05) + (1.017) + (13.004), (1.05) + (1.017) + (14.001), (1.05) + (1.017) + (15.025), (1.05) + (1.017) + (16.01),

(I.05) + (1.018) + (1.001), (1.05) + (1.018) + (1.002), (1.05) + (1.018) + (1.003), (1.05) + (1.018) + (1.015), (I.05) + (1.018) + (1.016), (1.05) + (1.018) + (1.017), (1.05) + (1.018) + (1.024), (1.05) + (1.018) + (1.026), (I.05) + (1.018) + (1.027), (1.05) + (1.018) + (1.032), (1.05) + (1.018) + (1.033), (1.05) + (1.018) + (1.063), (I.05) + (1.018) + (1.067), (1.05) + (1.018) + (2.001), (1.05) + (1.018) + (2.002), (1.05) + (1.018) + (2.005), (I.05) + (1.018) + (2.007), (1.05) + (1.018) + (2.008), (1.05) + (1.018) + (2.010), (1.05) + (1.018) + (2.012), (I.05) + (1.018) + (2.014), (1.05) + (1.018) + (2.016), (1.05) + (1.018) + (2.018), (1.05) + (1.018) + (2.031), (I.05) + (1.018) + (3.003), (1.05) + (1.018) + (3.011), (1.05) + (1.018) + (3.012), (1.05) + (1.018) + (3.014), (I.05) + (1.018) + (3.017), (1.05) + (1.018) + (3.019), (1.05) + (1.018) + (3.021), (1.05) + (1.018) + (3.022), (I.05) + (1.018) + (3.025), (1.05) + (1.018) + (4.007), (1.05) + (1.018) + (5.004), (1.05) + (1.018) + (5.005), (I.05) + (1.018) + (5.008), (1.05) + (1.018) + (5.009), (1.05) + (1.018) + (5.012), (1.05) + (1.018) + (5.013), (I.05) + (1.018) + (6.005), (1.05) + (1.018) + (7.005), (1.05) + (1.018) + (8.001), (1.05) + (1.018) + (9.002), (I.05) + (1.018) + (10.001), (1.05) + (1.018) + (10.002), (1.05) + (1.018) + (12.003), (1.05) + (1.018) + (12.004), (1.05) + (1.018) + (13.001), (1.05) + (1.018) + (13.004), (1.05) + (1.018) + (14.001), (1.05) + (1.018) + (15.025), (1.05) + (1.018) + (16.01),

(I.05) + (1.024) + (1.001), (1.05) + (1.024) + (1.002), (1.05) + (1.024) + (1.003), (1.05) + (1.024) + (1.015), (I.05) + (1.024) + (1.016), (1.05) + (1.024) + (1.017), (1.05) + (1.024) + (1.018), (1.05) + (1.024) + (1.026), (I.05) + (1.024) + (1.027), (1.05) + (1.024) + (1.032), (1.05) + (1.024) + (1.033), (1.05) + (1.024) + (1.063), (I.05) + (1.024) + (1.067), (1.05) + (1.024) + (2.001), (1.05) + (1.024) + (2.002), (1.05) + (1.024) + (2.005), (I.05) + (1.024) + (2.007), (1.05) + (1.024) + (2.008), (1.05) + (1.024) + (2.010), (1.05) + (1.024) + (2.012), (I.05) + (1.024) + (2.014), (1.05) + (1.024) + (2.016), (1.05) + (1.024) + (2.018), (1.05) + (1.024) + (2.031), (I.05) + (1.024) + (3.003), (1.05) + (1.024) + (3.011), (1.05) + (1.024) + (3.012), (1.05) + (1.024) + (3.014), (I.05) + (1.024) + (3.017), (1.05) + (1.024) + (3.019), (1.05) + (1.024) + (3.021), (1.05) + (1.024) + (3.022), (I.05) + (1.024) + (3.025), (1.05) + (1.024) + (4.007), (1.05) + (1.024) + (5.004), (1.05) + (1.024) + (5.005), (I.05) + (1.024) + (5.008), (1.05) + (1.024) + (5.009), (1.05) + (1.024) + (5.012), (1.05) + (1.024) + (5.013), (I.05) + (1.024) + (6.005), (1.05) + (1.024) + (7.005), (1.05) + (1.024) + (8.001), (1.05) + (1.024) + (9.002), (I.05) + (1.024) + (10.001), (1.05) + (1.024) + (10.002), (1.05) + (1.024) + (12.003), (1.05) + (1.024) + (12.004), (1.05) + (1.024) + (13.001), (1.05) + (1.024) + (13.004), (1.05) + (1.024) + (14.001), (1.05) + (1.024) + (15.025), (1.05) + (1.024) + (16.01),

(I.05) + (1.026) + (1.001), (1.05) + (1.026) + (1.002), (1.05) + (1.026) + (1.003), (1.05) + (1.026) + (1.015), (I.05) + (1.026) + (1.016), (1.05) + (1.026) + (1.017), (1.05) + (1.026) + (1.018), (1.05) + (1.026) + (1.024), (I.05) + (1.026) + (1.027), (1.05) + (1.026) + (1.032), (1.05) + (1.026) + (1.033), (1.05) + (1.026) + (1.063), (I.05) + (1.026) + (1.067), (1.05) + (1.026) + (2.001), (1.05) + (1.026) + (2.002), (1.05) + (1.026) + (2.005), (I.05) + (1.026) + (2.007), (1.05) + (1.026) + (2.008), (1.05) + (1.026) + (2.010), (1.05) + (1.026) + (2.012), (I.05) + (1.026) + (2.014), (1.05) + (1.026) + (2.016), (1.05) + (1.026) + (2.018), (1.05) + (1.026) + (2.031), (I.05) + (1.026) + (3.003), (1.05) + (1.026) + (3.011), (1.05) + (1.026) + (3.012), (1.05) + (1.026) + (3.014), (I.05) + (1.026) + (3.017), (1.05) + (1.026) + (3.019), (1.05) + (1.026) + (3.021), (1.05) + (1.026) + (3.022), (I.05) + (1.026) + (3.025), (1.05) + (1.026) + (4.007), (1.05) + (1.026) + (5.004), (1.05) + (1.026) + (5.005), (I.05) + (1.026) + (5.008), (1.05) + (1.026) + (5.009), (1.05) + (1.026) + (5.012), (1.05) + (1.026) + (5.013), (I.05) + (1.026) + (6.005), (1.05) + (1.026) + (7.005), (1.05) + (1.026) + (8.001), (1.05) + (1.026) + (9.002), (I.05) + (1.026) + (10.001), (1.05) + (1.026) + (10.002), (1.05) + (1.026) + (12.003), (1.05) + (1.026) + (12.004), (1.05) + (1.026) + (13.001), (1.05) + (1.026) + (13.004), (1.05) + (1.026) + (14.001), (1.05) + (1.026) + (15.025), (1.05) + (1.026) + (16.01),

(I.05) + (1.027) + (1.001), (1.05) + (1.027) + (1.002), (1.05) + (1.027) + (1.003), (1.05) + (1.027) + (1.015), (I.05) + (1.027) + (1.016), (1.05) + (1.027) + (1.017), (1.05) + (1.027) + (1.018), (1.05) + (1.027) + (1.024), (I.05) + (1.027) + (1.026), (1.05) + (1.027) + (1.032), (1.05) + (1.027) + (1.033), (1.05) + (1.027) + (1.063), (I.05) + (1.027) + (1.067), (1.05) + (1.027) + (2.001), (1.05) + (1.027) + (2.002), (1.05) + (1.027) + (2.005), (I.05) + (1.027) + (2.007), (1.05) + (1.027) + (2.008), (1.05) + (1.027) + (2.010), (1.05) + (1.027) + (2.012), (I.05) + (1.027) + (2.014), (1.05) + (1.027)

+ (2.016), (1.05) + (1.027) + (2.018), (1.05) + (1.027) + (2.031), (I.05) + (1.027) + (3.003), (1.05) + (1.027) + (3.011), (1.05) + (1.027) + (3.012), (1.05) + (1.027) + (3.014), (I.05) + (1.027) + (3.017), (1.05) + (1.027) + (3.019), (1.05) + (1.027) + (3.021), (1.05) + (1.027) + (3.022), (I.05) + (1.027) + (3.025), (1.05) + (1.027) + (4.007), (1.05) + (1.027) + (5.004), (1.05) + (1.027) + (5.005), (I.05) + (1.027) + (5.008), (1.05) + (1.027) + (5.009), (1.05) + (1.027) + (5.012), (1.05) + (1.027) + (5.013), (I.05) + (1.027) + (6.005), (1.05) + (1.027) + (7.005), (1.05) + (1.027) + (8.001), (1.05) + (1.027) + (9.002), (I.05) + (1.027) + (10.001), (1.05) + (1.027) + (10.002), (1.05) + (1.027) + (12.003), (1.05) + (1.027) + (12.004), (1.05) + (1.027) + (13.001), (1.05) + (1.027) + (13.004), (1.05) + (1.027) + (14.001), (1.05) + (1.027) + (15.025), (1.05) + (1.027) + (16.01),

(I.05) + (1.032) + (1.001), (1.05) + (1.032) + (1.002), (1.05) + (1.032) + (1.003), (1.05) + (1.032) + (1.015), (I.05) + (1.032) + (1.016), (1.05) + (1.032) + (1.017), (1.05) + (1.032) + (1.018), (1.05) + (1.032) + (1.024), (I.05) + (1.032) + (1.026), (1.05) + (1.032) + (1.027), (1.05) + (1.032) + (1.033), (1.05) + (1.032) + (1.063), (I.05) + (1.032) + (1.067), (1.05) + (1.032) + (2.001), (1.05) + (1.032) + (2.002), (1.05) + (1.032) + (2.005), (I.05) + (1.032) + (2.007), (1.05) + (1.032) + (2.008), (1.05) + (1.032) + (2.010), (1.05) + (1.032) + (2.012), (I.05) + (1.032) + (2.014), (1.05) + (1.032) + (2.016), (1.05) + (1.032) + (2.018), (1.05) + (1.032) + (2.031), (I.05) + (1.032) + (3.003), (1.05) + (1.032) + (3.011), (1.05) + (1.032) + (3.012), (1.05) + (1.032) + (3.014), (I.05) + (1.032) + (3.017), (1.05) + (1.032) + (3.019), (1.05) + (1.032) + (3.021), (1.05) + (1.032) + (3.022), (I.05) + (1.032) + (3.025), (1.05) + (1.032) + (4.007), (1.05) + (1.032) + (5.004), (1.05) + (1.032) + (5.005), (I.05) + (1.032) + (5.008), (1.05) + (1.032) + (5.009), (1.05) + (1.032) + (5.012), (1.05) + (1.032) + (5.013), (I.05) + (1.032) + (6.005), (1.05) + (1.032) + (7.005), (1.05) + (1.032) + (8.001), (1.05) + (1.032) + (9.002), (I.05) + (1.032) + (10.001), (1.05) + (1.032) + (10.002), (1.05) + (1.032) + (12.003), (1.05) + (1.032) + (12.004), (1.05) + (1.032) + (13.001), (1.05) + (1.032) + (13.004), (1.05) + (1.032) + (14.001), (1.05) + (1.032) + (15.025), (1.05) + (1.032) + (16.01),

(I.05) + (1.033) + (1.001), (1.05) + (1.033) + (1.002), (1.05) + (1.033) + (1.003), (1.05) + (1.033) + (1.015), (I.05) + (1.033) + (1.016), (1.05) + (1.033) + (1.017), (1.05) + (1.033) + (1.018), (1.05) + (1.033) + (1.024), (I.05) + (1.033) + (1.026), (1.05) + (1.033) + (1.027), (1.05) + (1.033) + (1.032), (1.05) + (1.033) + (1.063), (I.05) + (1.033) + (1.067), (1.05) + (1.033) + (2.001), (1.05) + (1.033) + (2.002), (1.05) + (1.033) + (2.005), (I.05) + (1.033) + (2.007), (1.05) + (1.033) + (2.008), (1.05) + (1.033) + (2.010), (1.05) + (1.033) + (2.012), (I.05) + (1.033) + (2.014), (1.05) + (1.033) + (2.016), (1.05) + (1.033) + (2.018), (1.05) + (1.033) + (2.031), (I.05) + (1.033) + (3.003), (1.05) + (1.033) + (3.011), (1.05) + (1.033) + (3.012), (1.05) + (1.033) + (3.014), (I.05) + (1.033) + (3.017), (1.05) + (1.033) + (3.019), (1.05) + (1.033) + (3.021), (1.05) + (1.033) + (3.022), (I.05) + (1.033) + (3.025), (1.05) + (1.033) + (4.007), (1.05) + (1.033) + (5.004), (1.05) + (1.033) + (5.005), (I.05) + (1.033) + (5.008), (1.05) + (1.033) + (5.009), (1.05) + (1.033) + (5.012), (1.05) + (1.033) + (5.013), (I.05) + (1.033) + (6.005), (1.05) + (1.033) + (7.005), (1.05) + (1.033) + (8.001), (1.05) + (1.033) + (9.002), (I.05) + (1.033) + (10.001), (1.05) + (1.033) + (10.002), (1.05) + (1.033) + (12.003), (1.05) + (1.033) + (12.004), (1.05) + (1.033) + (13.001), (1.05) + (1.033) + (13.004), (1.05) + (1.033) + (14.001), (1.05) + (1.033) + (15.025), (1.05) + (1.033) + (16.01),

(I.05) + (1.063) + (1.001), (1.05) + (1.063) + (1.002), (1.05) + (1.063) + (1.003), (1.05) + (1.063) + (1.015), (I.05) + (1.063) + (1.016), (1.05) + (1.063) + (1.017), (1.05) + (1.063) + (1.018), (1.05) + (1.063) + (1.024), (I.05) + (1.063) + (1.026), (1.05) + (1.063) + (1.027), (1.05) + (1.063) + (1.032), (1.05) + (1.063) + (1.033), (I.05) + (1.063) + (1.067), (1.05) + (1.063) + (2.001), (1.05) + (1.063) + (2.002), (1.05) + (1.063) + (2.005), (I.05) + (1.063) + (2.007), (1.05) + (1.063) + (2.008), (1.05) + (1.063) + (2.010), (1.05) + (1.063) + (2.012), (I.05) + (1.063) + (2.014), (1.05) + (1.063) + (2.016), (1.05) + (1.063) + (2.018), (1.05) + (1.063) + (2.031), (I.05) + (1.063) + (3.003), (1.05) + (1.063) + (3.011), (1.05) + (1.063) + (3.012), (1.05) + (1.063) + (3.014), (I.05) + (1.063) + (3.017), (1.05) + (1.063) + (3.019), (1.05) + (1.063) + (3.021), (1.05) + (1.063) + (3.022), (I.05) + (1.063) + (3.025), (1.05) + (1.063) + (4.007), (1.05) + (1.063) + (5.004), (1.05) + (1.063) + (5.005), (I.05) + (1.063) + (5.008), (1.05) + (1.063) + (5.009), (1.05) + (1.063) + (5.012), (1.05) + (1.063) + (5.013), (I.05) + (1.063) + (6.005), (1.05) + (1.063) + (7.005), (1.05) + (1.063) + (8.001), (1.05) + (1.063) + (9.002), (I.05) + (1.063) + (10.001), (1.05) + (1.063) + (10.002), (1.05) + (1.063) + (12.003), (1.05) + (1.063) + (12.004), (1.05) + (1.063) + (13.001), (1.05) + (1.063) + (13.004), (1.05) + (1.063) + (14.001), (1.05) + (1.063) + (15.025), (1.05) + (1.063) + (16.01),

(I.05) + (1.067) + (1.001), (1.05) + (1.067) + (1.002), (1.05) + (1.067) + (1.003), (1.05) + (1.067) + (1.015), (I.05) + (1.067) + (1.016), (1.05) + (1.067) + (1.017), (1.05) + (1.067) + (1.018), (1.05) + (1.067) + (1.024), (I.05) + (1.067) + (1.026), (1.05) + (1.067) + (1.027), (1.05) + (1.067) + (1.032), (1.05) + (1.067) + (1.033), (I.05) + (1.067) + (1.063), (1.05) + (1.067) + (2.001), (1.05) + (1.067) + (2.002), (1.05) + (1.067) + (2.005), (I.05) + (1.067) + (2.007), (1.05) + (1.067) + (2.008), (1.05) + (1.067) + (2.010), (1.05) + (1.067) + (2.012), (I.05) + (1.067) + (2.014), (1.05) + (1.067) + (2.016), (1.05) + (1.067) + (2.018), (1.05) + (1.067) + (2.031), (I.05) + (1.067) + (3.003), (1.05) + (1.067) + (3.011), (1.05) + (1.067) + (3.012), (1.05) + (1.067) + (3.014), (I.05) + (1.067) + (3.017), (1.05) + (1.067) + (3.019), (1.05) +

(1.067) + (3.021), (1.05) + (1.067) + (3.022), (I.05) + (1.067) + (3.025), (1.05) + (1.067) + (4.007), (1.05) + (1.067) + (5.004), (1.05) + (1.067) + (5.005), (I.05) + (1.067) + (5.008), (1.05) + (1.067) + (5.009), (1.05) + (1.067) + (5.012), (1.05) + (1.067) + (5.013), (I.05) + (1.067) + (6.005), (1.05) + (1.067) + (7.005), (1.05) + (1.067) + (8.001), (1.05) + (1.067) + (9.002), (I.05) + (1.067) + (10.001), (1.05) + (1.067) + (10.002), (1.05) + (1.067) + (12.003), (1.05) + (1.067) + (12.004), (1.05) + (1.067) + (13.001), (1.05) + (1.067) + (13.004), (1.05) + (1.067) + (14.001), (1.05) + (1.067) + (15.025), (1.05) + (1.067) + (16.01),

(I.05) + (2.001) + (1.001), (1.05) + (2.001) + (1.002), (1.05) + (2.001) + (1.003), (1.05) + (2.001) + (1.015), (I.05) + (2.001) + (1.016), (1.05) + (2.001) + (1.017), (1.05) + (2.001) + (1.018), (1.05) + (2.001) + (1.024), (I.05) + (2.001) + (1.026), (1.05) + (2.001) + (1.027), (1.05) + (2.001) + (1.032), (1.05) + (2.001) + (1.033), (I.05) + (2.001) + (1.063), (1.05) + (2.001) + (1.067), (1.05) + (2.001) + (2.002), (1.05) + (2.001) + (2.005), (I.05) + (2.001) + (2.007), (1.05) + (2.001) + (2.008), (1.05) + (2.001) + (2.010), (1.05) + (2.001) + (2.012), (I.05) + (2.001) + (2.014), (1.05) + (2.001) + (2.016), (1.05) + (2.001) + (2.018), (1.05) + (2.001) + (2.031), (I.05) + (2.001) + (3.003), (1.05) + (2.001) + (3.011), (1.05) + (2.001) + (3.012), (1.05) + (2.001) + (3.014), (I.05) + (2.001) + (3.017), (1.05) + (2.001) + (3.019), (1.05) + (2.001) + (3.021), (1.05) + (2.001) + (3.022), (I.05) + (2.001) + (3.025), (1.05) + (2.001) + (4.007), (1.05) + (2.001) + (5.004), (1.05) + (2.001) + (5.005), (I.05) + (2.001) + (5.008), (1.05) + (2.001) + (5.009), (1.05) + (2.001) + (5.012), (1.05) + (2.001) + (5.013), (I.05) + (2.001) + (6.005), (1.05) + (2.001) + (7.005), (1.05) + (2.001) + (8.001), (1.05) + (2.001) + (9.002), (I.05) + (2.001) + (10.001), (1.05) + (2.001) + (10.002), (1.05) + (2.001) + (12.003), (1.05) + (2.001) + (12.004), (1.05) + (2.001) + (13.001), (1.05) + (2.001) + (13.004), (1.05) + (2.001) + (14.001), (1.05) + (2.001) + (15.025), (1.05) + (2.001) + (16.01),

(I.05) + (2.002) + (1.001), (1.05) + (2.002) + (1.002), (1.05) + (2.002) + (1.003), (1.05) + (2.002) + (1.015), (I.05) + (2.002) + (1.016), (1.05) + (2.002) + (1.017), (1.05) + (2.002) + (1.018), (1.05) + (2.002) + (1.024), (I.05) + (2.002) + (1.026), (1.05) + (2.002) + (1.027), (1.05) + (2.002) + (1.032), (1.05) + (2.002) + (1.033), (I.05) + (2.002) + (1.063), (1.05) + (2.002) + (1.067), (1.05) + (2.002) + (2.001), (1.05) + (2.002) + (2.005), (I.05) + (2.002) + (2.007), (1.05) + (2.002) + (2.008), (1.05) + (2.002) + (2.010), (1.05) + (2.002) + (2.012), (I.05) + (2.002) + (2.014), (1.05) + (2.002) + (2.016), (1.05) + (2.002) + (2.018), (1.05) + (2.002) + (2.031), (I.05) + (2.002) + (3.003), (1.05) + (2.002) + (3.011), (1.05) + (2.002) + (3.012), (1.05) + (2.002) + (3.014), (I.05) + (2.002) + (3.017), (1.05) + (2.002) + (3.019), (1.05) + (2.002) + (3.021), (1.05) + (2.002) + (3.022), (I.05) + (2.002) + (3.025), (1.05) + (2.002) + (4.007), (1.05) + (2.002) + (5.004), (1.05) + (2.002) + (5.005), (I.05) + (2.002) + (5.008), (1.05) + (2.002) + (5.009), (1.05) + (2.002) + (5.012), (1.05) + (2.002) + (5.013), (I.05) + (2.002) + (6.005), (1.05) + (2.002) + (7.005), (1.05) + (2.002) + (8.001), (1.05) + (2.002) + (9.002), (I.05) + (2.002) + (10.001), (1.05) + (2.002) + (10.002), (1.05) + (2.002) + (12.003), (1.05) + (2.002) + (12.004), (1.05) + (2.002) + (13.001), (1.05) + (2.002) + (13.004), (1.05) + (2.002) + (14.001), (1.05) + (2.002) + (15.025), (1.05) + (2.002) + (16.01),

(I.05) + (2.005) + (1.001), (1.05) + (2.005) + (1.002), (1.05) + (2.005) + (1.003), (1.05) + (2.005) + (1.015), (I.05) + (2.005) + (1.016), (1.05) + (2.005) + (1.017), (1.05) + (2.005) + (1.018), (1.05) + (2.005) + (1.024), (I.05) + (2.005) + (1.026), (1.05) + (2.005) + (1.027), (1.05) + (2.005) + (1.032), (1.05) + (2.005) + (1.033), (I.05) + (2.005) + (1.063), (1.05) + (2.005) + (1.067), (1.05) + (2.005) + (2.001), (1.05) + (2.005) + (2.002), (I.05) + (2.005) + (2.007), (1.05) + (2.005) + (2.008), (1.05) + (2.005) + (2.010), (1.05) + (2.005) + (2.012), (I.05) + (2.005) + (2.014), (1.05) + (2.005) + (2.016), (1.05) + (2.005) + (2.018), (1.05) + (2.005) + (2.031), (I.05) + (2.005) + (3.003), (1.05) + (2.005) + (3.011), (1.05) + (2.005) + (3.012), (1.05) + (2.005) + (3.014), (I.05) + (2.005) + (3.017), (1.05) + (2.005) + (3.019), (1.05) + (2.005) + (3.021), (1.05) + (2.005) + (3.022), (I.05) + (2.005) + (3.025), (1.05) + (2.005) + (4.007), (1.05) + (2.005) + (5.004), (1.05) + (2.005) + (5.005), (I.05) + (2.005) + (5.008), (1.05) + (2.005) + (5.009), (1.05) + (2.005) + (5.012), (1.05) + (2.005) + (5.013), (I.05) + (2.005) + (6.005), (1.05) + (2.005) + (7.005), (1.05) + (2.005) + (8.001), (1.05) + (2.005) + (9.002), (I.05) + (2.005) + (10.001), (1.05) + (2.005) + (10.002), (1.05) + (2.005) + (12.003), (1.05) + (2.005) + (12.004), (1.05) + (2.005) + (13.001), (1.05) + (2.005) + (13.004), (1.05) + (2.005) + (14.001), (1.05) + (2.005) + (15.025), (1.05) + (2.005) + (16.01),

(I.05) + (2.007) + (1.001), (1.05) + (2.007) + (1.002), (1.05) + (2.007) + (1.003), (1.05) + (2.007) + (1.015), (I.05) + (2.007) + (1.016), (1.05) + (2.007) + (1.017), (1.05) + (2.007) + (1.018), (1.05) + (2.007) + (1.024), (I.05) + (2.007) + (1.026), (1.05) + (2.007) + (1.027), (1.05) + (2.007) + (1.032), (1.05) + (2.007) + (1.033), (I.05) + (2.007) + (1.063), (1.05) + (2.007) + (1.067), (1.05) + (2.007) + (2.001), (1.05) + (2.007) + (2.002), (I.05) + (2.007) + (2.005), (1.05) + (2.007) + (2.008), (1.05) + (2.007) + (2.010), (1.05) + (2.007) + (2.012), (I.05) + (2.007) + (2.014), (1.05) + (2.007) + (2.016), (1.05) + (2.007) + (2.018), (1.05) + (2.007) + (2.031), (I.05) + (2.007) + (3.003), (1.05) + (2.007) + (3.011), (1.05) + (2.007) + (3.012), (1.05) + (2.007) + (3.014), (I.05) + (2.007) + (3.017), (1.05) + (2.007) + (3.019), (1.05) + (2.007) + (3.021), (1.05) + (2.007) + (3.022), (I.05) + (2.007) + (3.025), (1.05) + (2.007) + (4.007), (1.05) + (2.007) + (5.004), (1.05) + (2.007) + (5.005), (I.05) + (2.007) + (5.008), (1.05) + (2.007) + (5.009), (1.05) + (2.007) + (5.012),

(1.05) + (2.007) + (5.013), (I.05) + (2.007) + (6.005), (1.05) + (2.007) + (7.005), (1.05) + (2.007) + (8.001), (1.05) + (2.007) + (9.002), (I.05) + (2.007) + (10.001), (1.05) + (2.007) + (10.002), (1.05) + (2.007) + (12.003), (1.05) + (2.007) + (12.004), (1.05) + (2.007) + (13.001), (1.05) + (2.007) + (13.004), (1.05) + (2.007) + (14.001), (1.05) + (2.007) + (15.025), (1.05) + (2.007) + (16.01),

(I.05) + (2.008) + (1.001), (1.05) + (2.008) + (1.002), (1.05) + (2.008) + (1.003), (1.05) + (2.008) + (1.015), (I.05) + (2.008) + (1.016), (1.05) + (2.008) + (1.017), (1.05) + (2.008) + (1.018), (1.05) + (2.008) + (1.024), (I.05) + (2.008) + (1.026), (1.05) + (2.008) + (1.027), (1.05) + (2.008) + (1.032), (1.05) + (2.008) + (1.033), (I.05) + (2.008) + (1.063), (1.05) + (2.008) + (1.067), (1.05) + (2.008) + (2.001), (1.05) + (2.008) + (2.002), (I.05) + (2.008) + (2.005), (1.05) + (2.008) + (2.007), (1.05) + (2.008) + (2.010), (1.05) + (2.008) + (2.012), (I.05) + (2.008) + (2.014), (1.05) + (2.008) + (2.016), (1.05) + (2.008) + (2.018), (1.05) + (2.008) + (2.031), (I.05) + (2.008) + (3.003), (1.05) + (2.008) + (3.011), (1.05) + (2.008) + (3.012), (1.05) + (2.008) + (3.014), (I.05) + (2.008) + (3.017), (1.05) + (2.008) + (3.019), (1.05) + (2.008) + (3.021), (1.05) + (2.008) + (3.022), (I.05) + (2.008) + (3.025), (1.05) + (2.008) + (4.007), (1.05) + (2.008) + (5.004), (1.05) + (2.008) + (5.005), (I.05) + (2.008) + (5.008), (1.05) + (2.008) + (5.009), (1.05) + (2.008) + (5.012), (1.05) + (2.008) + (5.013), (I.05) + (2.008) + (6.005), (1.05) + (2.008) + (7.005), (1.05) + (2.008) + (8.001), (1.05) + (2.008) + (9.002), (I.05) + (2.008) + (10.001), (1.05) + (2.008) + (10.002), (1.05) + (2.008) + (12.003), (1.05) + (2.008) + (12.004), (1.05) + (2.008) + (13.001), (1.05) + (2.008) + (13.004), (1.05) + (2.008) + (14.001), (1.05) + (2.008) + (15.025), (1.05) + (2.008) + (16.01),

(I.05) + (2.010) + (1.001), (1.05) + (2.010) + (1.002), (1.05) + (2.010) + (1.003), (1.05) + (2.010) + (1.015), (I.05) + (2.010) + (1.016), (1.05) + (2.010) + (1.017), (1.05) + (2.010) + (1.018), (1.05) + (2.010) + (1.024), (I.05) + (2.010) + (1.026), (1.05) + (2.010) + (1.027), (1.05) + (2.010) + (1.032), (1.05) + (2.010) + (1.033), (I.05) + (2.010) + (1.063), (1.05) + (2.010) + (1.067), (1.05) + (2.010) + (2.001), (1.05) + (2.010) + (2.002), (I.05) + (2.010) + (2.005), (1.05) + (2.010) + (2.007), (1.05) + (2.010) + (2.008), (1.05) + (2.010) + (2.012), (I.05) + (2.010) + (2.014), (1.05) + (2.010) + (2.016), (1.05) + (2.010) + (2.018), (1.05) + (2.010) + (2.031), (I.05) + (2.010) + (3.003), (1.05) + (2.010) + (3.011), (1.05) + (2.010) + (3.012), (1.05) + (2.010) + (3.014), (I.05) + (2.010) + (3.017), (1.05) + (2.010) + (3.019), (1.05) + (2.010) + (3.021), (1.05) + (2.010) + (3.022), (I.05) + (2.010) + (3.025), (1.05) + (2.010) + (4.007), (1.05) + (2.010) + (5.004), (1.05) + (2.010) + (5.005), (I.05) + (2.010) + (5.008), (1.05) + (2.010) + (5.009), (1.05) + (2.010) + (5.012), (1.05) + (2.010) + (5.013), (I.05) + (2.010) + (6.005), (1.05) + (2.010) + (7.005), (1.05) + (2.010) + (8.001), (1.05) + (2.010) + (9.002), (I.05) + (2.010) + (10.001), (1.05) + (2.010) + (10.002), (1.05) + (2.010) + (12.003), (1.05) + (2.010) + (12.004), (1.05) + (2.010) + (13.001), (1.05) + (2.010) + (13.004), (1.05) + (2.010) + (14.001), (1.05) + (2.010) + (15.025), (1.05) + (2.010) + (16.01),

(I.05) + (2.012) + (1.001), (1.05) + (2.012) + (1.002), (1.05) + (2.012) + (1.003), (1.05) + (2.012) + (1.015), (I.05) + (2.012) + (1.016), (1.05) + (2.012) + (1.017), (1.05) + (2.012) + (1.018), (1.05) + (2.012) + (1.024), (I.05) + (2.012) + (1.026), (1.05) + (2.012) + (1.027), (1.05) + (2.012) + (1.032), (1.05) + (2.012) + (1.033), (I.05) + (2.012) + (1.063), (1.05) + (2.012) + (1.067), (1.05) + (2.012) + (2.001), (1.05) + (2.012) + (2.002), (I.05) + (2.012) + (2.005), (1.05) + (2.012) + (2.007), (1.05) + (2.012) + (2.008), (1.05) + (2.012) + (2.010), (I.05) + (2.012) + (2.014), (1.05) + (2.012) + (2.016), (1.05) + (2.012) + (2.018), (1.05) + (2.012) + (2.031), (I.05) + (2.012) + (3.003), (1.05) + (2.012) + (3.011), (1.05) + (2.012) + (3.012), (1.05) + (2.012) + (3.014), (I.05) + (2.012) + (3.017), (1.05) + (2.012) + (3.019), (1.05) + (2.012) + (3.021), (1.05) + (2.012) + (3.022), (I.05) + (2.012) + (3.025), (1.05) + (2.012) + (4.007), (1.05) + (2.012) + (5.004), (1.05) + (2.012) + (5.005), (I.05) + (2.012) + (5.008), (1.05) + (2.012) + (5.009), (1.05) + (2.012) + (5.012), (1.05) + (2.012) + (5.013), (I.05) + (2.012) + (6.005), (1.05) + (2.012) + (7.005), (1.05) + (2.012) + (8.001), (1.05) + (2.012) + (9.002), (I.05) + (2.012) + (10.001), (1.05) + (2.012) + (10.002), (1.05) + (2.012) + (12.003), (1.05) + (2.012) + (12.004), (1.05) + (2.012) + (13.001), (1.05) + (2.012) + (13.004), (1.05) + (2.012) + (14.001), (1.05) + (2.012) + (15.025), (1.05) + (2.012) + (16.01),

(I.05) + (2.014) + (1.001), (1.05) + (2.014) + (1.002), (1.05) + (2.014) + (1.003), (1.05) + (2.014) + (1.015), (I.05) + (2.014) + (1.016), (1.05) + (2.014) + (1.017), (1.05) + (2.014) + (1.018), (1.05) + (2.014) + (1.024), (I.05) + (2.014) + (1.026), (1.05) + (2.014) + (1.027), (1.05) + (2.014) + (1.032), (1.05) + (2.014) + (1.033), (I.05) + (2.014) + (1.063), (1.05) + (2.014) + (1.067), (1.05) + (2.014) + (2.001), (1.05) + (2.014) + (2.002), (I.05) + (2.014) + (2.005), (1.05) + (2.014) + (2.007), (1.05) + (2.014) + (2.008), (1.05) + (2.014) + (2.010), (I.05) + (2.014) + (2.012), (1.05) + (2.014) + (2.016), (1.05) + (2.014) + (2.018), (1.05) + (2.014) + (2.031), (I.05) + (2.014) + (3.003), (1.05) + (2.014) + (3.011), (1.05) + (2.014) + (3.012), (1.05) + (2.014) + (3.014), (I.05) + (2.014) + (3.017), (1.05) + (2.014) + (3.019), (1.05) + (2.014) + (3.021), (1.05) + (2.014) + (3.022), (I.05) + (2.014) + (3.025), (1.05) + (2.014) + (4.007), (1.05) + (2.014) + (5.004), (1.05) + (2.014) + (5.005), (I.05) + (2.014) + (5.008), (1.05) + (2.014) + (5.009), (1.05) + (2.014) + (5.012), (1.05) + (2.014) + (5.013), (I.05) + (2.014) + (6.005), (1.05) + (2.014) + (7.005), (1.05) + (2.014) + (8.001), (1.05) + (2.014) + (9.002), (I.05) + (2.014) + (10.001), (1.05) + (2.014) + (10.002), (1.05) + (2.014) + (12.003), (1.05) + (2.014)

+ (12.004), (1.05) + (2.014) + (13.001), (1.05) + (2.014) + (13.004), (1.05) + (2.014) + (14.001), (1.05) + (2.014) + (15.025), (1.05) + (2.014) + (16.01),

(I.05) + (2.016) + (1.001), (1.05) + (2.016) + (1.002), (1.05) + (2.016) + (1.003), (1.05) + (2.016) + (1.015), (I.05) + (2.016) + (1.016), (1.05) + (2.016) + (1.017), (1.05) + (2.016) + (1.018), (1.05) + (2.016) + (1.024), (I.05) + (2.016) + (1.026), (1.05) + (2.016) + (1.027), (1.05) + (2.016) + (1.032), (1.05) + (2.016) + (1.033), (I.05) + (2.016) + (1.063), (1.05) + (2.016) + (1.067), (1.05) + (2.016) + (2.001), (1.05) + (2.016) + (2.002), (I.05) + (2.016) + (2.005), (1.05) + (2.016) + (2.007), (1.05) + (2.016) + (2.008), (1.05) + (2.016) + (2.010), (I.05) + (2.016) + (2.012), (1.05) + (2.016) + (2.014), (1.05) + (2.016) + (2.018), (1.05) + (2.016) + (2.031), (I.05) + (2.016) + (3.003), (1.05) + (2.016) + (3.011), (1.05) + (2.016) + (3.012), (1.05) + (2.016) + (3.014), (I.05) + (2.016) + (3.017), (1.05) + (2.016) + (3.019), (1.05) + (2.016) + (3.021), (1.05) + (2.016) + (3.022), (I.05) + (2.016) + (3.025), (1.05) + (2.016) + (4.007), (1.05) + (2.016) + (5.004), (1.05) + (2.016) + (5.005), (I.05) + (2.016) + (5.008), (1.05) + (2.016) + (5.009), (1.05) + (2.016) + (5.012), (1.05) + (2.016) + (5.013), (I.05) + (2.016) + (6.005), (1.05) + (2.016) + (7.005), (1.05) + (2.016) + (8.001), (1.05) + (2.016) + (9.002), (I.05) + (2.016) + (10.001), (1.05) + (2.016) + (10.002), (1.05) + (2.016) + (12.003), (1.05) + (2.016) + (12.004), (1.05) + (2.016) + (13.001), (1.05) + (2.016) + (13.004), (1.05) + (2.016) + (14.001), (1.05) + (2.016) + (15.025), (1.05) + (2.016) + (16.01),

(I.05) + (2.018) + (1.001), (1.05) + (2.018) + (1.002), (1.05) + (2.018) + (1.003), (1.05) + (2.018) + (1.015), (I.05) + (2.018) + (1.016), (1.05) + (2.018) + (1.017), (1.05) + (2.018) + (1.018), (1.05) + (2.018) + (1.024), (I.05) + (2.018) + (1.026), (1.05) + (2.018) + (1.027), (1.05) + (2.018) + (1.032), (1.05) + (2.018) + (1.033), (I.05) + (2.018) + (1.063), (1.05) + (2.018) + (1.067), (1.05) + (2.018) + (2.001), (1.05) + (2.018) + (2.002), (I.05) + (2.018) + (2.005), (1.05) + (2.018) + (2.007), (1.05) + (2.018) + (2.008), (1.05) + (2.018) + (2.010), (I.05) + (2.018) + (2.012), (1.05) + (2.018) + (2.014), (1.05) + (2.018) + (2.016), (1.05) + (2.018) + (2.031), (I.05) + (2.018) + (3.003), (1.05) + (2.018) + (3.011), (1.05) + (2.018) + (3.012), (1.05) + (2.018) + (3.014), (I.05) + (2.018) + (3.017), (1.05) + (2.018) + (3.019), (1.05) + (2.018) + (3.021), (1.05) + (2.018) + (3.022), (I.05) + (2.018) + (3.025), (1.05) + (2.018) + (4.007), (1.05) + (2.018) + (5.004), (1.05) + (2.018) + (5.005), (I.05) + (2.018) + (5.008), (1.05) + (2.018) + (5.009), (1.05) + (2.018) + (5.012), (1.05) + (2.018) + (5.013), (I.05) + (2.018) + (6.005), (1.05) + (2.018) + (7.005), (1.05) + (2.018) + (8.001), (1.05) + (2.018) + (9.002), (I.05) + (2.018) + (10.001), (1.05) + (2.018) + (10.002), (1.05) + (2.018) + (12.003), (1.05) + (2.018) + (12.004), (1.05) + (2.018) + (13.001), (1.05) + (2.018) + (13.004), (1.05) + (2.018) + (14.001), (1.05) + (2.018) + (15.025), (1.05) + (2.018) + (16.01),

(I.05) + (2.031) + (1.001), (1.05) + (2.031) + (1.002), (1.05) + (2.031) + (1.003), (1.05) + (2.031) + (1.015), (I.05) + (2.031) + (1.016), (1.05) + (2.031) + (1.017), (1.05) + (2.031) + (1.018), (1.05) + (2.031) + (1.024), (I.05) + (2.031) + (1.026), (1.05) + (2.031) + (1.027), (1.05) + (2.031) + (1.032), (1.05) + (2.031) + (1.033), (I.05) + (2.031) + (1.063), (1.05) + (2.031) + (1.067), (1.05) + (2.031) + (2.001), (1.05) + (2.031) + (2.002), (I.05) + (2.031) + (2.005), (1.05) + (2.031) + (2.007), (1.05) + (2.031) + (2.008), (1.05) + (2.031) + (2.010), (I.05) + (2.031) + (2.012), (1.05) + (2.031) + (2.014), (1.05) + (2.031) + (2.016), (1.05) + (2.031) + (2.018), (I.05) + (2.031) + (3.003), (1.05) + (2.031) + (3.011), (1.05) + (2.031) + (3.012), (1.05) + (2.031) + (3.014), (I.05) + (2.031) + (3.017), (1.05) + (2.031) + (3.019), (1.05) + (2.031) + (3.021), (1.05) + (2.031) + (3.022), (I.05) + (2.031) + (3.025), (1.05) + (2.031) + (4.007), (1.05) + (2.031) + (5.004), (1.05) + (2.031) + (5.005), (I.05) + (2.031) + (5.008), (1.05) + (2.031) + (5.009), (1.05) + (2.031) + (5.012), (1.05) + (2.031) + (5.013), (I.05) + (2.031) + (6.005), (1.05) + (2.031) + (7.005), (1.05) + (2.031) + (8.001), (1.05) + (2.031) + (9.002), (I.05) + (2.031) + (10.001), (1.05) + (2.031) + (10.002), (1.05) + (2.031) + (12.003), (1.05) + (2.031) + (12.004), (1.05) + (2.031) + (13.001), (1.05) + (2.031) + (13.004), (1.05) + (2.031) + (14.001), (1.05) + (2.031) + (15.025), (1.05) + (2.031) + (16.01),

(I.05) + (3.003) + (1.001), (1.05) + (3.003) + (1.002), (1.05) + (3.003) + (1.003), (1.05) + (3.003) + (1.015), (I.05) + (3.003) + (1.016), (1.05) + (3.003) + (1.017), (1.05) + (3.003) + (1.018), (1.05) + (3.003) + (1.024), (I.05) + (3.003) + (1.026), (1.05) + (3.003) + (1.027), (1.05) + (3.003) + (1.032), (1.05) + (3.003) + (1.033), (I.05) + (3.003) + (1.063), (1.05) + (3.003) + (1.067), (1.05) + (3.003) + (2.001), (1.05) + (3.003) + (2.002), (I.05) + (3.003) + (2.005), (1.05) + (3.003) + (2.007), (1.05) + (3.003) + (2.008), (1.05) + (3.003) + (2.010), (I.05) + (3.003) + (2.012), (1.05) + (3.003) + (2.014), (1.05) + (3.003) + (2.016), (1.05) + (3.003) + (2.018), (I.05) + (3.003) + (2.031), (1.05) + (3.003) + (3.011), (1.05) + (3.003) + (3.012), (1.05) + (3.003) + (3.014), (I.05) + (3.003) + (3.017), (1.05) + (3.003) + (3.019), (1.05) + (3.003) + (3.021), (1.05) + (3.003) + (3.022), (I.05) + (3.003) + (3.025), (1.05) + (3.003) + (4.007), (1.05) + (3.003) + (5.004), (1.05) + (3.003) + (5.005), (I.05) + (3.003) + (5.008), (1.05) + (3.003) + (5.009), (1.05) + (3.003) + (5.012), (1.05) + (3.003) + (5.013), (I.05) + (3.003) + (6.005), (1.05) + (3.003) + (7.005), (1.05) + (3.003) + (8.001), (1.05) + (3.003) + (9.002), (I.05) + (3.003) + (10.001), (1.05) + (3.003) + (10.002), (1.05) + (3.003) + (12.003), (1.05) + (3.003) + (12.004), (1.05) + (3.003) + (13.001), (1.05) + (3.003) + (13.004), (1.05) + (3.003) + (14.001), (1.05) + (3.003) + (15.025), (1.05) + (3.003) + (16.01),

(I.05) + (3.011) + (1.001), (1.05) + (3.011) + (1.002), (1.05) + (3.011) + (1.003), (1.05) + (3.011) + (1.015), (I.05) + (3.011) + (1.016), (1.05) + (3.011) + (1.017), (1.05) + (3.011) + (1.018), (1.05) + (3.011) + (1.024), (I.05) + (3.011) + (1.026), (1.05) + (3.011) + (1.027), (1.05) + (3.011) + (1.032), (1.05) + (3.011) + (1.033), (I.05) + (3.011) + (1.063), (1.05) + (3.011) + (1.067), (1.05) + (3.011) + (2.001), (1.05) + (3.011) + (2.002), (I.05) + (3.011) + (2.005), (1.05) + (3.011) + (2.007), (1.05) + (3.011) + (2.008), (1.05) + (3.011) + (2.010), (I.05) + (3.011) + (2.012), (1.05) + (3.011) + (2.014), (1.05) + (3.011) + (2.016), (1.05) + (3.011) + (2.018), (I.05) + (3.011) + (2.031), (1.05) + (3.011) + (3.003), (1.05) + (3.011) + (3.012), (1.05) + (3.011) + (3.014), (I.05) + (3.011) + (3.017), (1.05) + (3.011) + (3.019), (1.05) + (3.011) + (3.021), (1.05) + (3.011) + (3.022), (I.05) + (3.011) + (3.025), (1.05) + (3.011) + (4.007), (1.05) + (3.011) + (5.004), (1.05) + (3.011) + (5.005), (I.05) + (3.011) + (5.008), (1.05) + (3.011) + (5.009), (1.05) + (3.011) + (5.012), (1.05) + (3.011) + (5.013), (I.05) + (3.011) + (6.005), (1.05) + (3.011) + (7.005), (1.05) + (3.011) + (8.001), (1.05) + (3.011) + (9.002), (I.05) + (3.011) + (10.001), (1.05) + (3.011) + (10.002), (1.05) + (3.011) + (12.003), (1.05) + (3.011) + (12.004), (1.05) + (3.011) + (13.001), (1.05) + (3.011) + (13.004), (1.05) + (3.011) + (14.001), (1.05) + (3.011) + (15.025), (1.05) + (3.011) + (16.01),

(I.05) + (3.012) + (1.001), (1.05) + (3.012) + (1.002), (1.05) + (3.012) + (1.003), (1.05) + (3.012) + (1.015), (I.05) + (3.012) + (1.016), (1.05) + (3.012) + (1.017), (1.05) + (3.012) + (1.018), (1.05) + (3.012) + (1.024), (I.05) + (3.012) + (1.026), (1.05) + (3.012) + (1.027), (1.05) + (3.012) + (1.032), (1.05) + (3.012) + (1.033), (I.05) + (3.012) + (1.063), (1.05) + (3.012) + (1.067), (1.05) + (3.012) + (2.001), (1.05) + (3.012) + (2.002), (I.05) + (3.012) + (2.005), (1.05) + (3.012) + (2.007), (1.05) + (3.012) + (2.008), (1.05) + (3.012) + (2.010), (I.05) + (3.012) + (2.012), (1.05) + (3.012) + (2.014), (1.05) + (3.012) + (2.016), (1.05) + (3.012) + (2.018), (I.05) + (3.012) + (2.031), (1.05) + (3.012) + (3.003), (1.05) + (3.012) + (3.011), (1.05) + (3.012) + (3.014), (I.05) + (3.012) + (3.017), (1.05) + (3.012) + (3.019), (1.05) + (3.012) + (3.021), (1.05) + (3.012) + (3.022), (I.05) + (3.012) + (3.025), (1.05) + (3.012) + (4.007), (1.05) + (3.012) + (5.004), (1.05) + (3.012) + (5.005), (I.05) + (3.012) + (5.008), (1.05) + (3.012) + (5.009), (1.05) + (3.012) + (5.012), (1.05) + (3.012) + (5.013), (I.05) + (3.012) + (6.005), (1.05) + (3.012) + (7.005), (1.05) + (3.012) + (8.001), (1.05) + (3.012) + (9.002), (I.05) + (3.012) + (10.001), (1.05) + (3.012) + (10.002), (1.05) + (3.012) + (12.003), (1.05) + (3.012) + (12.004), (1.05) + (3.012) + (13.001), (1.05) + (3.012) + (13.004), (1.05) + (3.012) + (14.001), (1.05) + (3.012) + (15.025), (1.05) + (3.012) + (16.01),

(I.05) + (3.014) + (1.001), (1.05) + (3.014) + (1.002), (1.05) + (3.014) + (1.003), (1.05) + (3.014) + (1.015), (I.05) + (3.014) + (1.016), (1.05) + (3.014) + (1.017), (1.05) + (3.014) + (1.018), (1.05) + (3.014) + (1.024), (I.05) + (3.014) + (1.026), (1.05) + (3.014) + (1.027), (1.05) + (3.014) + (1.032), (1.05) + (3.014) + (1.033), (I.05) + (3.014) + (1.063), (1.05) + (3.014) + (1.067), (1.05) + (3.014) + (2.001), (1.05) + (3.014) + (2.002), (I.05) + (3.014) + (2.005), (1.05) + (3.014) + (2.007), (1.05) + (3.014) + (2.008), (1.05) + (3.014) + (2.010), (I.05) + (3.014) + (2.012), (1.05) + (3.014) + (2.014), (1.05) + (3.014) + (2.016), (1.05) + (3.014) + (2.018), (I.05) + (3.014) + (2.031), (1.05) + (3.014) + (3.003), (1.05) + (3.014) + (3.011), (1.05) + (3.014) + (3.012), (I.05) + (3.014) + (3.017), (1.05) + (3.014) + (3.019), (1.05) + (3.014) + (3.021), (1.05) + (3.014) + (3.022), (I.05) + (3.014) + (3.025), (1.05) + (3.014) + (4.007), (1.05) + (3.014) + (5.004), (1.05) + (3.014) + (5.005), (I.05) + (3.014) + (5.008), (1.05) + (3.014) + (5.009), (1.05) + (3.014) + (5.012), (1.05) + (3.014) + (5.013), (I.05) + (3.014) + (6.005), (1.05) + (3.014) + (7.005), (1.05) + (3.014) + (8.001), (1.05) + (3.014) + (9.002), (I.05) + (3.014) + (10.001), (1.05) + (3.014) + (10.002), (1.05) + (3.014) + (12.003), (1.05) + (3.014) + (12.004), (1.05) + (3.014) + (13.001), (1.05) + (3.014) + (13.004), (1.05) + (3.014) + (14.001), (1.05) + (3.014) + (15.025), (1.05) + (3.014) + (16.01),

(I.05) + (3.017) + (1.001), (1.05) + (3.017) + (1.002), (1.05) + (3.017) + (1.003), (1.05) + (3.017) + (1.015), (I.05) + (3.017) + (1.016), (1.05) + (3.017) + (1.017), (1.05) + (3.017) + (1.018), (1.05) + (3.017) + (1.024), (I.05) + (3.017) + (1.026), (1.05) + (3.017) + (1.027), (1.05) + (3.017) + (1.032), (1.05) + (3.017) + (1.033), (I.05) + (3.017) + (1.063), (1.05) + (3.017) + (1.067), (1.05) + (3.017) + (2.001), (1.05) + (3.017) + (2.002), (I.05) + (3.017) + (2.005), (1.05) + (3.017) + (2.007), (1.05) + (3.017) + (2.008), (1.05) + (3.017) + (2.010), (I.05) + (3.017) + (2.012), (1.05) + (3.017) + (2.014), (1.05) + (3.017) + (2.016), (1.05) + (3.017) + (2.018), (I.05) + (3.017) + (2.031), (1.05) + (3.017) + (3.003), (1.05) + (3.017) + (3.011), (1.05) + (3.017) + (3.012), (I.05) + (3.017) + (3.014), (1.05) + (3.017) + (3.019), (1.05) + (3.017) + (3.021), (1.05) + (3.017) + (3.022), (I.05) + (3.017) + (3.025), (1.05) + (3.017) + (4.007), (1.05) + (3.017) + (5.004), (1.05) + (3.017) + (5.005), (I.05) + (3.017) + (5.008), (1.05) + (3.017) + (5.009), (1.05) + (3.017) + (5.012), (1.05) + (3.017) + (5.013), (I.05) + (3.017) + (6.005), (1.05) + (3.017) + (7.005), (1.05) + (3.017) + (8.001), (1.05) + (3.017) + (9.002), (I.05) + (3.017) + (10.001), (1.05) + (3.017) + (10.002), (1.05) + (3.017) + (12.003), (1.05) + (3.017) + (12.004), (1.05) + (3.017) + (13.001), (1.05) + (3.017) + (13.004), (1.05) + (3.017) + (14.001), (1.05) + (3.017) + (15.025), (1.05) + (3.017) + (16.01),

(I.05) + (3.019) + (1.001), (1.05) + (3.019) + (1.002), (1.05) + (3.019) + (1.003), (1.05) + (3.019) + (1.015), (I.05) + (3.019) + (1.016), (1.05) + (3.019) + (1.017), (1.05) + (3.019) + (1.018), (1.05) + (3.019) + (1.024), (I.05) + (3.019)

+ (1.026), (1.05) + (3.019) + (1.027), (1.05) + (3.019) + (1.032), (1.05) + (3.019) + (1.033), (I.05) + (3.019) + (1.063), (1.05) + (3.019) + (1.067), (1.05) + (3.019) + (2.001), (1.05) + (3.019) + (2.002), (I.05) + (3.019) + (2.005), (1.05) + (3.019) + (2.007), (1.05) + (3.019) + (2.008), (1.05) + (3.019) + (2.010), (I.05) + (3.019) + (2.012), (1.05) + (3.019) + (2.014), (1.05) + (3.019) + (2.016), (1.05) + (3.019) + (2.018), (I.05) + (3.019) + (2.031), (1.05) + (3.019) + (3.003), (1.05) + (3.019) + (3.011), (1.05) + (3.019) + (3.012), (I.05) + (3.019) + (3.014), (1.05) + (3.019) + (3.017), (1.05) + (3.019) + (3.021), (1.05) + (3.019) + (3.022), (I.05) + (3.019) + (3.025), (1.05) + (3.019) + (4.007), (1.05) + (3.019) + (5.004), (1.05) + (3.019) + (5.005), (I.05) + (3.019) + (5.008), (1.05) + (3.019) + (5.009), (1.05) + (3.019) + (5.012), (1.05) + (3.019) + (5.013), (I.05) + (3.019) + (6.005), (1.05) + (3.019) + (7.005), (1.05) + (3.019) + (8.001), (1.05) + (3.019) + (9.002), (I.05) + (3.019) + (10.001), (1.05) + (3.019) + (10.002), (1.05) + (3.019) + (12.003), (1.05) + (3.019) + (12.004), (1.05) + (3.019) + (13.001), (1.05) + (3.019) + (13.004), (1.05) + (3.019) + (14.001), (1.05) + (3.019) + (15.025), (1.05) + (3.019) + (16.01),

(I.05) + (3.021) + (1.001), (1.05) + (3.021) + (1.002), (1.05) + (3.021) + (1.003), (1.05) + (3.021) + (1.015), (I.05) + (3.021) + (1.016), (1.05) + (3.021) + (1.017), (1.05) + (3.021) + (1.018), (1.05) + (3.021) + (1.024), (I.05) + (3.021) + (1.026), (1.05) + (3.021) + (1.027), (1.05) + (3.021) + (1.032), (1.05) + (3.021) + (1.033), (I.05) + (3.021) + (1.063), (1.05) + (3.021) + (1.067), (1.05) + (3.021) + (2.001), (1.05) + (3.021) + (2.002), (I.05) + (3.021) + (2.005), (1.05) + (3.021) + (2.007), (1.05) + (3.021) + (2.008), (1.05) + (3.021) + (2.010), (I.05) + (3.021) + (2.012), (1.05) + (3.021) + (2.014), (1.05) + (3.021) + (2.016), (1.05) + (3.021) + (2.018), (I.05) + (3.021) + (2.031), (1.05) + (3.021) + (3.003), (1.05) + (3.021) + (3.011), (1.05) + (3.021) + (3.012), (I.05) + (3.021) + (3.014), (1.05) + (3.021) + (3.017), (1.05) + (3.021) + (3.019), (1.05) + (3.021) + (3.022), (I.05) + (3.021) + (3.025), (1.05) + (3.021) + (4.007), (1.05) + (3.021) + (5.004), (1.05) + (3.021) + (5.005), (I.05) + (3.021) + (5.008), (1.05) + (3.021) + (5.009), (1.05) + (3.021) + (5.012), (1.05) + (3.021) + (5.013), (I.05) + (3.021) + (6.005), (1.05) + (3.021) + (7.005), (1.05) + (3.021) + (8.001), (1.05) + (3.021) + (9.002), (I.05) + (3.021) + (10.001), (1.05) + (3.021) + (10.002), (1.05) + (3.021) + (12.003), (1.05) + (3.021) + (12.004), (1.05) + (3.021) + (13.001), (1.05) + (3.021) + (13.004), (1.05) + (3.021) + (14.001), (1.05) + (3.021) + (15.025), (1.05) + (3.021) + (16.01),

(I.05) + (3.022) + (1.001), (1.05) + (3.022) + (1.002), (1.05) + (3.022) + (1.003), (1.05) + (3.022) + (1.015), (I.05) + (3.022) + (1.016), (1.05) + (3.022) + (1.017), (1.05) + (3.022) + (1.018), (1.05) + (3.022) + (1.024), (I.05) + (3.022) + (1.026), (1.05) + (3.022) + (1.027), (1.05) + (3.022) + (1.032), (1.05) + (3.022) + (1.033), (I.05) + (3.022) + (1.063), (1.05) + (3.022) + (1.067), (1.05) + (3.022) + (2.001), (1.05) + (3.022) + (2.002), (I.05) + (3.022) + (2.005), (1.05) + (3.022) + (2.007), (1.05) + (3.022) + (2.008), (1.05) + (3.022) + (2.010), (I.05) + (3.022) + (2.012), (1.05) + (3.022) + (2.014), (1.05) + (3.022) + (2.016), (1.05) + (3.022) + (2.018), (I.05) + (3.022) + (2.031), (1.05) + (3.022) + (3.003), (1.05) + (3.022) + (3.011), (1.05) + (3.022) + (3.012), (I.05) + (3.022) + (3.014), (1.05) + (3.022) + (3.017), (1.05) + (3.022) + (3.019), (1.05) + (3.022) + (3.021), (I.05) + (3.022) + (3.025), (1.05) + (3.022) + (4.007), (1.05) + (3.022) + (5.004), (1.05) + (3.022) + (5.005), (I.05) + (3.022) + (5.008), (1.05) + (3.022) + (5.009), (1.05) + (3.022) + (5.012), (1.05) + (3.022) + (5.013), (I.05) + (3.022) + (6.005), (1.05) + (3.022) + (7.005), (1.05) + (3.022) + (8.001), (1.05) + (3.022) + (9.002), (I.05) + (3.022) + (10.001), (1.05) + (3.022) + (10.002), (1.05) + (3.022) + (12.003), (1.05) + (3.022) + (12.004), (1.05) + (3.022) + (13.001), (1.05) + (3.022) + (13.004), (1.05) + (3.022) + (14.001), (1.05) + (3.022) + (15.025), (1.05) + (3.022) + (16.01),

(I.05) + (3.025) + (1.001), (1.05) + (3.025) + (1.002), (1.05) + (3.025) + (1.003), (1.05) + (3.025) + (1.015), (I.05) + (3.025) + (1.016), (1.05) + (3.025) + (1.017), (1.05) + (3.025) + (1.018), (1.05) + (3.025) + (1.024), (I.05) + (3.025) + (1.026), (1.05) + (3.025) + (1.027), (1.05) + (3.025) + (1.032), (1.05) + (3.025) + (1.033), (I.05) + (3.025) + (1.063), (1.05) + (3.025) + (1.067), (1.05) + (3.025) + (2.001), (1.05) + (3.025) + (2.002), (I.05) + (3.025) + (2.005), (1.05) + (3.025) + (2.007), (1.05) + (3.025) + (2.008), (1.05) + (3.025) + (2.010), (I.05) + (3.025) + (2.012), (1.05) + (3.025) + (2.014), (1.05) + (3.025) + (2.016), (1.05) + (3.025) + (2.018), (I.05) + (3.025) + (2.031), (1.05) + (3.025) + (3.003), (1.05) + (3.025) + (3.011), (1.05) + (3.025) + (3.012), (I.05) + (3.025) + (3.014), (1.05) + (3.025) + (3.017), (1.05) + (3.025) + (3.019), (1.05) + (3.025) + (3.021), (I.05) + (3.025) + (3.022), (1.05) + (3.025) + (4.007), (1.05) + (3.025) + (5.004), (1.05) + (3.025) + (5.005), (I.05) + (3.025) + (5.008), (1.05) + (3.025) + (5.009), (1.05) + (3.025) + (5.012), (1.05) + (3.025) + (5.013), (I.05) + (3.025) + (6.005), (1.05) + (3.025) + (7.005), (1.05) + (3.025) + (8.001), (1.05) + (3.025) + (9.002), (I.05) + (3.025) + (10.001), (1.05) + (3.025) + (10.002), (1.05) + (3.025) + (12.003), (1.05) + (3.025) + (12.004), (1.05) + (3.025) + (13.001), (1.05) + (3.025) + (13.004), (1.05) + (3.025) + (14.001), (1.05) + (3.025) + (15.025), (1.05) + (3.025) + (16.01),

(I.05) + (4.007) + (1.001), (1.05) + (4.007) + (1.002), (1.05) + (4.007) + (1.003), (1.05) + (4.007) + (1.015), (I.05) + (4.007) + (1.016), (1.05) + (4.007) + (1.017), (1.05) + (4.007) + (1.018), (1.05) + (4.007) + (1.024), (I.05) + (4.007) + (1.026), (1.05) + (4.007) + (1.027), (1.05) + (4.007) + (1.032), (1.05) + (4.007) + (1.033), (I.05) + (4.007) + (1.063), (1.05) + (4.007) + (1.067), (1.05) + (4.007) + (2.001), (1.05) + (4.007) + (2.002), (I.05) + (4.007) + (2.005), (1.05) +

(4.007) + (2.007), (1.05) + (4.007) + (2.008), (1.05) + (4.007) + (2.010), (I.05) + (4.007) + (2.012), (1.05) + (4.007) + (2.014), (1.05) + (4.007) + (2.016), (1.05) + (4.007) + (2.018), (I.05) + (4.007) + (2.031), (1.05) + (4.007) + (3.003), (1.05) + (4.007) + (3.011), (1.05) + (4.007) + (3.012), (I.05) + (4.007) + (3.014), (1.05) + (4.007) + (3.017), (1.05) + (4.007) + (3.019), (1.05) + (4.007) + (3.021), (I.05) + (4.007) + (3.022), (1.05) + (4.007) + (3.025), (1.05) + (4.007) + (5.004), (1.05) + (4.007) + (5.005), (I.05) + (4.007) + (5.008), (1.05) + (4.007) + (5.009), (1.05) + (4.007) + (5.012), (1.05) + (4.007) + (5.013), (I.05) + (4.007) + (6.005), (1.05) + (4.007) + (7.005), (1.05) + (4.007) + (8.001), (1.05) + (4.007) + (9.002), (I.05) + (4.007) + (10.001), (1.05) + (4.007) + (10.002), (1.05) + (4.007) + (12.003), (1.05) + (4.007) + (12.004), (1.05) + (4.007) + (13.001), (1.05) + (4.007) + (13.004), (1.05) + (4.007) + (14.001), (1.05) + (4.007) + (15.025), (1.05) + (4.007) + (16.01),

(I.05) + (5.004) + (1.001), (1.05) + (5.004) + (1.002), (1.05) + (5.004) + (1.003), (1.05) + (5.004) + (1.015), (I.05) + (5.004) + (1.016), (1.05) + (5.004) + (1.017), (1.05) + (5.004) + (1.018), (1.05) + (5.004) + (1.024), (I.05) + (5.004) + (1.026), (1.05) + (5.004) + (1.027), (1.05) + (5.004) + (1.032), (1.05) + (5.004) + (1.033), (I.05) + (5.004) + (1.063), (1.05) + (5.004) + (1.067), (1.05) + (5.004) + (2.001), (1.05) + (5.004) + (2.002), (I.05) + (5.004) + (2.005), (1.05) + (5.004) + (2.007), (1.05) + (5.004) + (2.008), (1.05) + (5.004) + (2.010), (I.05) + (5.004) + (2.012), (1.05) + (5.004) + (2.014), (1.05) + (5.004) + (2.016), (1.05) + (5.004) + (2.018), (I.05) + (5.004) + (2.031), (1.05) + (5.004) + (3.003), (1.05) + (5.004) + (3.011), (1.05) + (5.004) + (3.012), (I.05) + (5.004) + (3.014), (1.05) + (5.004) + (3.017), (1.05) + (5.004) + (3.019), (1.05) + (5.004) + (3.021), (I.05) + (5.004) + (3.022), (1.05) + (5.004) + (3.025), (1.05) + (5.004) + (4.007), (1.05) + (5.004) + (5.005), (I.05) + (5.004) + (5.008), (1.05) + (5.004) + (5.009), (1.05) + (5.004) + (5.012), (1.05) + (5.004) + (5.013), (I.05) + (5.004) + (6.005), (1.05) + (5.004) + (7.005), (1.05) + (5.004) + (8.001), (1.05) + (5.004) + (9.002), (I.05) + (5.004) + (10.001), (1.05) + (5.004) + (10.002), (1.05) + (5.004) + (12.003), (1.05) + (5.004) + (12.004), (1.05) + (5.004) + (13.001), (1.05) + (5.004) + (13.004), (1.05) + (5.004) + (14.001), (1.05) + (5.004) + (15.025), (1.05) + (5.004) + (16.01),

(I.05) + (5.005) + (1.001), (1.05) + (5.005) + (1.002), (1.05) + (5.005) + (1.003), (1.05) + (5.005) + (1.015), (I.05) + (5.005) + (1.016), (1.05) + (5.005) + (1.017), (1.05) + (5.005) + (1.018), (1.05) + (5.005) + (1.024), (I.05) + (5.005) + (1.026), (1.05) + (5.005) + (1.027), (1.05) + (5.005) + (1.032), (1.05) + (5.005) + (1.033), (I.05) + (5.005) + (1.063), (1.05) + (5.005) + (1.067), (1.05) + (5.005) + (2.001), (1.05) + (5.005) + (2.002), (I.05) + (5.005) + (2.005), (1.05) + (5.005) + (2.007), (1.05) + (5.005) + (2.008), (1.05) + (5.005) + (2.010), (I.05) + (5.005) + (2.012), (1.05) + (5.005) + (2.014), (1.05) + (5.005) + (2.016), (1.05) + (5.005) + (2.018), (I.05) + (5.005) + (2.031), (1.05) + (5.005) + (3.003), (1.05) + (5.005) + (3.011), (1.05) + (5.005) + (3.012), (I.05) + (5.005) + (3.014), (1.05) + (5.005) + (3.017), (1.05) + (5.005) + (3.019), (1.05) + (5.005) + (3.021), (I.05) + (5.005) + (3.022), (1.05) + (5.005) + (3.025), (1.05) + (5.005) + (4.007), (1.05) + (5.005) + (5.004), (I.05) + (5.005) + (5.008), (1.05) + (5.005) + (5.009), (1.05) + (5.005) + (5.012), (1.05) + (5.005) + (5.013), (I.05) + (5.005) + (6.005), (1.05) + (5.005) + (7.005), (1.05) + (5.005) + (8.001), (1.05) + (5.005) + (9.002), (I.05) + (5.005) + (10.001), (1.05) + (5.005) + (10.002), (1.05) + (5.005) + (12.003), (1.05) + (5.005) + (12.004), (1.05) + (5.005) + (13.001), (1.05) + (5.005) + (13.004), (1.05) + (5.005) + (14.001), (1.05) + (5.005) + (15.025), (1.05) + (5.005) + (16.01),

(I.05) + (5.008) + (1.001), (1.05) + (5.008) + (1.002), (1.05) + (5.008) + (1.003), (1.05) + (5.008) + (1.015), (I.05) + (5.008) + (1.016), (1.05) + (5.008) + (1.017), (1.05) + (5.008) + (1.018), (1.05) + (5.008) + (1.024), (I.05) + (5.008) + (1.026), (1.05) + (5.008) + (1.027), (1.05) + (5.008) + (1.032), (1.05) + (5.008) + (1.033), (I.05) + (5.008) + (1.063), (1.05) + (5.008) + (1.067), (1.05) + (5.008) + (2.001), (1.05) + (5.008) + (2.002), (I.05) + (5.008) + (2.005), (1.05) + (5.008) + (2.007), (1.05) + (5.008) + (2.008), (1.05) + (5.008) + (2.010), (I.05) + (5.008) + (2.012), (1.05) + (5.008) + (2.014), (1.05) + (5.008) + (2.016), (1.05) + (5.008) + (2.018), (I.05) + (5.008) + (2.031), (1.05) + (5.008) + (3.003), (1.05) + (5.008) + (3.011), (1.05) + (5.008) + (3.012), (I.05) + (5.008) + (3.014), (1.05) + (5.008) + (3.017), (1.05) + (5.008) + (3.019), (1.05) + (5.008) + (3.021), (I.05) + (5.008) + (3.022), (1.05) + (5.008) + (3.025), (1.05) + (5.008) + (4.007), (1.05) + (5.008) + (5.004), (I.05) + (5.008) + (5.005), (1.05) + (5.008) + (5.009), (1.05) + (5.008) + (5.012), (1.05) + (5.008) + (5.013), (I.05) + (5.008) + (6.005), (1.05) + (5.008) + (7.005), (1.05) + (5.008) + (8.001), (1.05) + (5.008) + (9.002), (I.05) + (5.008) + (10.001), (1.05) + (5.008) + (10.002), (1.05) + (5.008) + (12.003), (1.05) + (5.008) + (12.004), (1.05) + (5.008) + (13.001), (1.05) + (5.008) + (13.004), (1.05) + (5.008) + (14.001), (1.05) + (5.008) + (15.025), (1.05) + (5.008) + (16.01),

(I.05) + (5.009) + (1.001), (1.05) + (5.009) + (1.002), (1.05) + (5.009) + (1.003), (1.05) + (5.009) + (1.015), (I.05) + (5.009) + (1.016), (1.05) + (5.009) + (1.017), (1.05) + (5.009) + (1.018), (1.05) + (5.009) + (1.024), (I.05) + (5.009) + (1.026), (1.05) + (5.009) + (1.027), (1.05) + (5.009) + (1.032), (1.05) + (5.009) + (1.033), (I.05) + (5.009) + (1.063), (1.05) + (5.009) + (1.067), (1.05) + (5.009) + (2.001), (1.05) + (5.009) + (2.002), (I.05) + (5.009) + (2.005), (1.05) + (5.009) + (2.007), (1.05) + (5.009) + (2.008), (1.05) + (5.009) + (2.010), (I.05) + (5.009) + (2.012), (1.05) + (5.009) + (2.014), (1.05) + (5.009) + (2.016), (1.05) + (5.009) + (2.018), (I.05) + (5.009) + (2.031), (1.05) + (5.009) + (3.003),

(1.05) + (5.009) + (3.011), (1.05) + (5.009) + (3.012), (I.05) + (5.009) + (3.014), (1.05) + (5.009) + (3.017), (1.05) + (5.009) + (3.019), (1.05) + (5.009) + (3.021), (I.05) + (5.009) + (3.022), (1.05) + (5.009) + (3.025), (1.05) + (5.009) + (4.007), (1.05) + (5.009) + (5.004), (I.05) + (5.009) + (5.005), (1.05) + (5.009) + (5.008), (1.05) + (5.009) + (5.012), (1.05) + (5.009) + (5.013), (I.05) + (5.009) + (6.005), (1.05) + (5.009) + (7.005), (1.05) + (5.009) + (8.001), (1.05) + (5.009) + (9.002), (I.05) + (5.009) + (10.001), (1.05) + (5.009) + (10.002), (1.05) + (5.009) + (12.003), (1.05) + (5.009) + (12.004), (1.05) + (5.009) + (13.001), (1.05) + (5.009) + (13.004), (1.05) + (5.009) + (14.001), (1.05) + (5.009) + (15.025), (1.05) + (5.009) + (16.01),

(I.05) + (5.012) + (1.001), (1.05) + (5.012) + (1.002), (1.05) + (5.012) + (1.003), (1.05) + (5.012) + (1.015), (I.05) + (5.012) + (1.016), (1.05) + (5.012) + (1.017), (1.05) + (5.012) + (1.018), (1.05) + (5.012) + (1.024), (I.05) + (5.012) + (1.026), (1.05) + (5.012) + (1.027), (1.05) + (5.012) + (1.032), (1.05) + (5.012) + (1.033), (I.05) + (5.012) + (1.063), (1.05) + (5.012) + (1.067), (1.05) + (5.012) + (2.001), (1.05) + (5.012) + (2.002), (I.05) + (5.012) + (2.005), (1.05) + (5.012) + (2.007), (1.05) + (5.012) + (2.008), (1.05) + (5.012) + (2.010), (I.05) + (5.012) + (2.012), (1.05) + (5.012) + (2.014), (1.05) + (5.012) + (2.016), (1.05) + (5.012) + (2.018), (I.05) + (5.012) + (2.031), (1.05) + (5.012) + (3.003), (1.05) + (5.012) + (3.011), (1.05) + (5.012) + (3.012), (I.05) + (5.012) + (3.014), (1.05) + (5.012) + (3.017), (1.05) + (5.012) + (3.019), (1.05) + (5.012) + (3.021), (I.05) + (5.012) + (3.022), (1.05) + (5.012) + (3.025), (1.05) + (5.012) + (4.007), (1.05) + (5.012) + (5.004), (I.05) + (5.012) + (5.005), (1.05) + (5.012) + (5.008), (1.05) + (5.012) + (5.009), (1.05) + (5.012) + (5.013), (I.05) + (5.012) + (6.005), (1.05) + (5.012) + (7.005), (1.05) + (5.012) + (8.001), (1.05) + (5.012) + (9.002), (I.05) + (5.012) + (10.001), (1.05) + (5.012) + (10.002), (1.05) + (5.012) + (12.003), (1.05) + (5.012) + (12.004), (I.05) + (5.012) + (13.001), (I.05) + (5.012) + (13.004), (I.05) + (5.012) + (14.001), (I.05) + (5.012) + (15.025), (I.05) + (5.012) + (16.01),

(I.05) + (5.013) + (1.001), (I.05) + (5.013) + (1.002), (I.05) + (5.013) + (1.003), (I.05) + (5.013) + (1.015), (I.05) + (5.013) + (1.016), (I.05) + (5.013) + (1.017), (I.05) + (5.013) + (1.018), (I.05) + (5.013) + (1.024), (I.05) + (5.013) + (1.026), (I.05) + (5.013) + (1.027), (I.05) + (5.013) + (1.032), (I.05) + (5.013) + (1.033), (I.05) + (5.013) + (1.063), (I.05) + (5.013) + (1.067), (I.05) + (5.013) + (2.001), (I.05) + (5.013) + (2.002), (I.05) + (5.013) + (2.005), (I.05) + (5.013) + (2.007), (I.05) + (5.013) + (2.008), (I.05) + (5.013) + (2.010), (I.05) + (5.013) + (2.012), (I.05) + (5.013) + (2.014), (I.05) + (5.013) + (2.016), (I.05) + (5.013) + (2.018), (I.05) + (5.013) + (2.031), (I.05) + (5.013) + (3.003), (I.05) + (5.013) + (3.011), (I.05) + (5.013) + (3.012), (I.05) + (5.013) + (3.014), (I.05) + (5.013) + (3.017), (I.05) + (5.013) + (3.019), (I.05) + (5.013) + (3.021), (I.05) + (5.013) + (3.022), (I.05) + (5.013) + (3.025), (I.05) + (5.013) + (4.007), (I.05) + (5.013) + (5.004), (I.05) + (5.013) + (5.005), (I.05) + (5.013) + (5.008), (I.05) + (5.013) + (5.009), (I.05) + (5.013) + (5.012), (I.05) + (5.013) + (6.005), (I.05) + (5.013) + (7.005), (I.05) + (5.013) + (8.001), (I.05) + (5.013) + (9.002), (I.05) + (5.013) + (10.001), (I.05) + (5.013) + (10.002), (I.05) + (5.013) + (12.003), (1.05) + (5.013) + (12.004), (I.05) + (5.013) + (13.001), (I.05) + (5.013) + (13.004), (I.05) + (5.013) + (14.001), (I.05) + (5.013) + (15.025), (I.05) + (5.013) + (16.01),

(I.05) + (6.005) + (1.001), (I.05) + (6.005) + (1.002), (I.05) + (6.005) + (1.003), (I.05) + (6.005) + (1.015), (I.05) + (6.005) + (1.016), (I.05) + (6.005) + (1.017), (I.05) + (6.005) + (1.018), (I.05) + (6.005) + (1.024), (I.05) + (6.005) + (1.026), (I.05) + (6.005) + (1.027), (I.05) + (6.005) + (1.032), (I.05) + (6.005) + (1.033), (I.05) + (6.005) + (1.063), (I.05) + (6.005) + (1.067), (I.05) + (6.005) + (2.001), (I.05) + (6.005) + (2.002), (I.05) + (6.005) + (2.005), (I.05) + (6.005) + (2.007), (I.05) + (6.005) + (2.008), (I.05) + (6.005) + (2.010), (I.05) + (6.005) + (2.012), (I.05) + (6.005) + (2.014), (I.05) + (6.005) + (2.016), (I.05) + (6.005) + (2.018), (I.05) + (6.005) + (2.031), (I.05) + (6.005) + (3.003), (I.05) + (6.005) + (3.011), (I.05) + (6.005) + (3.012), (I.05) + (6.005) + (3.014), (I.05) + (6.005) + (3.017), (I.05) + (6.005) + (3.019), (I.05) + (6.005) + (3.021), (I.05) + (6.005) + (3.022), (I.05) + (6.005) + (3.025), (I.05) + (6.005) + (4.007), (I.05) + (6.005) + (5.004), (I.05) + (6.005) + (5.005), (I.05) + (6.005) + (5.008), (I.05) + (6.005) + (5.009), (I.05) + (6.005) + (5.012), (I.05) + (6.005) + (5.013), (I.05) + (6.005) + (7.005), (I.05) + (6.005) + (8.001), (I.05) + (6.005) + (9.002), (I.05) + (6.005) + (10.001), (I.05) + (6.005) + (10.002), (I.05) + (6.005) + (12.003), (I.05) + (6.005) + (12.004), (I.05) + (6.005) + (13.001), (I.05) + (6.005) + (13.004), (I.05) + (6.005) + (14.001), (I.05) + (6.005) + (15.025), (1.05) + (6.005) + (16.01),

(I.05) + (7.005) + (1.001), (I.05) + (7.005) + (1.002), (I.05) + (7.005) + (1.003), (I.05) + (7.005) + (1.015), (I.05) + (7.005) + (1.016), (I.05) + (7.005) + (1.017), (I.05) + (7.005) + (1.018), (I.05) + (7.005) + (1.024), (I.05) + (7.005) + (1.026), (I.05) + (7.005) + (1.027), (I.05) + (7.005) + (1.032), (I.05) + (7.005) + (1.033), (I.05) + (7.005) + (1.063), (I.05) + (7.005) + (1.067), (I.05) + (7.005) + (2.001), (I.05) + (7.005) + (2.002), (I.05) + (7.005) + (2.005), (I.05) + (7.005) + (2.007), (I.05) + (7.005) + (2.008), (I.05) + (7.005) + (2.010), (I.05) + (7.005) + (2.012), (I.05) + (7.005) + (2.014), (I.05) + (7.005) + (2.016), (I.05) + (7.005) + (2.018), (I.05) + (7.005) + (2.031), (I.05) + (7.005) + (3.003), (I.05) + (7.005) + (3.011), (I.05) + (7.005) + (3.012), (I.05) + (7.005) + (3.014), (I.05) + (7.005) + (3.017), (I.05) + (7.005) + (3.019), (I.05) + (7.005) + (3.021), (I.05) + (7.005) + (3.022), (I.05) + (7.005) + (3.025), (I.05) + (7.005) +

(4.007), (I.05) + (7.005) + (5.004), (I.05) + (7.005) + (5.005), (I.05) + (7.005) + (5.008), (I.05) + (7.005) + (5.009), (I.05) + (7.005) + (5.012), (I.05) + (7.005) + (5.013), (I.05) + (7.005) + (6.005), (I.05) + (7.005) + (8.001), (I.05) + (7.005) + (9.002), (I.05) + (7.005) + (10.001), (I.05) + (7.005) + (10.002), (I.05) + (7.005) + (12.003), (I.05) + (7.005) + (12.004), (I.05) + (7.005) + (13.001), (I.05) + (7.005) + (13.004), (I.05) + (7.005) + (14.001), (I.05) + (7.005) + (15.025), (I.05) + (7.005) + (16.01),

(I.05) + (8.001) + (1.001), (I.05) + (8.001) + (1.002), (I.05) + (8.001) + (1.003), (I.05) + (8.001) + (1.015), (I.05) + (8.001) + (1.016), (I.05) + (8.001) + (1.017), (I.05) + (8.001) + (1.018), (I.05) + (8.001) + (1.024), (I.05) + (8.001) + (1.026), (I.05) + (8.001) + (1.027), (I.05) + (8.001) + (1.032), (I.05) + (8.001) + (1.033), (I.05) + (8.001) + (1.063), (I.05) + (8.001) + (1.067), (I.05) + (8.001) + (2.001), (I.05) + (8.001) + (2.002), (I.05) + (8.001) + (2.005), (I.05) + (8.001) + (2.007), (I.05) + (8.001) + (2.008), (I.05) + (8.001) + (2.010), (I.05) + (8.001) + (2.012), (I.05) + (8.001) + (2.014), (I.05) + (8.001) + (2.016), (I.05) + (8.001) + (2.018), (I.05) + (8.001) + (2.031), (I.05) + (8.001) + (3.003), (I.05) + (8.001) + (3.011), (I.05) + (8.001) + (3.012), (I.05) + (8.001) + (3.014), (I.05) + (8.001) + (3.017), (I.05) + (8.001) + (3.019), (I.05) + (8.001) + (3.021), (I.05) + (8.001) + (3.022), (I.05) + (8.001) + (3.025), (I.05) + (8.001) + (4.007), (I.05) + (8.001) + (5.004), (I.05) + (8.001) + (5.005), (I.05) + (8.001) + (5.008), (I.05) + (8.001) + (5.009), (I.05) + (8.001) + (5.012), (I.05) + (8.001) + (5.013), (I.05) + (8.001) + (6.005), (I.05) + (8.001) + (7.005), (I.05) + (8.001) + (9.002), (I.05) + (8.001) + (10.001), (I.05) + (8.001) + (10.002), (I.05) + (8.001) + (12.003), (I.05) + (8.001) + (12.004), (I.05) + (8.001) + (13.001), (I.05) + (8.001) + (13.004), (I.05) + (8.001) + (14.001), (I.05) + (8.001) + (15.025), (I.05) + (8.001) + (16.01),

(I.05) + (9.002) + (1.001), (I.05) + (9.002) + (1.002), (I.05) + (9.002) + (1.003), (I.05) + (9.002) + (1.015), (I.05) + (9.002) + (1.016), (I.05) + (9.002) + (1.017), (I.05) + (9.002) + (1.018), (I.05) + (9.002) + (1.024), (I.05) + (9.002) + (1.026), (I.05) + (9.002) + (1.027), (I.05) + (9.002) + (1.032), (I.05) + (9.002) + (1.033), (I.05) + (9.002) + (1.063), (I.05) + (9.002) + (1.067), (I.05) + (9.002) + (2.001), (I.05) + (9.002) + (2.002), (I.05) + (9.002) + (2.005), (I.05) + (9.002) + (2.007), (I.05) + (9.002) + (2.008), (I.05) + (9.002) + (2.010), (I.05) + (9.002) + (2.012), (I.05) + (9.002) + (2.014), (I.05) + (9.002) + (2.016), (I.05) + (9.002) + (2.018), (I.05) + (9.002) + (2.031), (I.05) + (9.002) + (3.003), (I.05) + (9.002) + (3.011), (I.05) + (9.002) + (3.012), (I.05) + (9.002) + (3.014), (I.05) + (9.002) + (3.017), (I.05) + (9.002) + (3.019), (I.05) + (9.002) + (3.021), (I.05) + (9.002) + (3.022), (I.05) + (9.002) + (3.025), (I.05) + (9.002) + (4.007), (I.05) + (9.002) + (5.004), (I.05) + (9.002) + (5.005), (I.05) + (9.002) + (5.008), (I.05) + (9.002) + (5.009), (I.05) + (9.002) + (5.012), (I.05) + (9.002) + (5.013), (I.05) + (9.002) + (6.005), (I.05) + (9.002) + (7.005), (I.05) + (9.002) + (8.001), (I.05) + (9.002) + (10.001), (I.05) + (9.002) + (10.002), (I.05) + (9.002) + (12.003), (I.05) + (9.002) + (12.004), (I.05) + (9.002) + (13.001), (1.05) + (9.002) + (13.004), (1.05) + (9.002) + (14.001), (1.05) + (9.002) + (15.025), (I.05) + (9.002) + (16.01),

(I.05) + (10.001) + (1.001), (I.05) + (10.001) + (1.002), (1.05) + (10.001) + (1.003), (1.05) + (10.001) + (1.015), (I.05) + (10.001) + (1.016), (I.05) + (10.001) + (1.017), (1.05) + (10.001) + (1.018), (1.05) + (10.001) + (1.024), (1.05) + (10.001) + (1.026), (I.05) + (10.001) + (1.027), (1.05) + (10.001) + (1.032), (1.05) + (10.001) + (1.033), (I.05) + (10.001) + (1.063), (I.05) + (10.001) + (1.067), (1.05) + (10.001) + (2.001), (1.05) + (10.001) + (2.002), (I.05) + (10.001) + (2.005), (I.05) + (10.001) + (2.007), (1.05) + (10.001) + (2.008), (I.05) + (10.001) + (2.010), (I.05) + (10.001) + (2.012), (I.05) + (10.001) + (2.014), (1.05) + (10.001) + (2.016), (1.05) + (10.001) + (2.018), (I.05) + (10.001) + (2.031), (1.05) + (10.001) + (3.003), (1.05) + (10.001) + (3.011), (1.05) + (10.001) + (3.012), (I.05) + (10.001) + (3.014), (1.05) + (10.001) + (3.017), (1.05) + (10.001) + (3.019), (1.05) + (10.001) + (3.021), (I.05) + (10.001) + (3.022), (1.05) + (10.001) + (3.025), (1.05) + (10.001) + (4.007), (1.05) + (10.001) + (5.004), (I.05) + (10.001) + (5.005), (1.05) + (10.001) + (5.008), (I.05) + (10.001) + (5.009), (1.05) + (10.001) + (5.012), (I.05) + (10.001) + (5.013), (1.05) + (10.001) + (6.005), (1.05) + (10.001) + (7.005), (1.05) + (10.001) + (8.001), (I.05) + (10.001) + (9.002), (1.05) + (10.001) + (10.002), (I.05) + (10.001) + (12.003), (I.05) + (10.001) + (12.004), (I.05) + (10.001) + (13.001), (1.05) + (10.001) + (13.004), (I.05) + (10.001) + (14.001), (I.05) + (10.001) + (15.025), (I.05) + (10.001) + (16.01),

(I.05) + (10.002) + (1.001), (I.05) + (10.002) + (1.002), (I.05) + (10.002) + (1.003), (I.05) + (10.002) + (1.015), (I.05) + (10.002) + (1.016), (I.05) + (10.002) + (1.017), (I.05) + (10.002) + (1.018), (I.05) + (10.002) + (1.024), (I.05) + (10.002) + (1.026), (I.05) + (10.002) + (1.027), (I.05) + (10.002) + (1.032), (I.05) + (10.002) + (1.033), (I.05) + (10.002) + (1.063), (I.05) + (10.002) + (1.067), (I.05) + (10.002) + (2.001), (1.05) + (10.002) + (2.002), (I.05) + (10.002) + (2.005), (I.05) + (10.002) + (2.007), (1.05) + (10.002) + (2.008), (I.05) + (10.002) + (2.010), (I.05) + (10.002) + (2.012), (1.05) + (10.002) + (2.014), (1.05) + (10.002) + (2.016), (1.05) + (10.002) + (2.018), (I.05) + (10.002) + (2.031), (I.05) + (10.002) + (3.003), (I.05) + (10.002) + (3.011), (I.05) + (10.002) + (3.012), (1.05) + (10.002) + (3.014), (1.05) + (10.002) + (3.017), (1.05) + (10.002) + (3.019), (I.05) + (10.002) + (3.021), (1.05) + (10.002) + (3.022), (1.05) + (10.002) + (3.025), (1.05) + (10.002) + (4.007), (I.05) + (10.002) + (5.004), (1.05) + (10.002) + (5.005), (1.05) +

(10.002) + (5.008), (I.05) + (10.002) + (5.009), (I.05) + (10.002) + (5.012), (1.05) + (10.002) + (5.013), (1.05) + (10.002) + (6.005), (1.05) + (10.002) + (7.005), (I.05) + (10.002) + (8.001), (I.05) + (10.002) + (9.002), (1.05) + (10.002) + (10.001), (1.05) + (10.002) + (12.003), (I.05) + (10.002) + (12.004), (I.05) + (10.002) + (13.001), (1.05) + (10.002) + (13.004), (1.05) + (10.002) + (14.001), (I.05) + (10.002) + (15.025), (I.05) + (10.002) + (16.01),

(I.05) + (12.003) + (1.001), (1.05) + (12.003) + (1.002), (I.05) + (12.003) + (1.003), (I.05) + (12.003) + (1.015), (1.05) + (12.003) + (1.016), (1.05) + (12.003) + (1.017), (I.05) + (12.003) + (1.018), (I.05) + (12.003) + (1.024), (1.05) + (12.003) + (1.026), (1.05) + (12.003) + (1.027), (I.05) + (12.003) + (1.032), (I.05) + (12.003) + (1.033), (1.05) + (12.003) + (1.063), (1.05) + (12.003) + (1.067), (I.05) + (12.003) + (2.001), (1.05) + (12.003) + (2.002), (1.05) + (12.003) + (2.005), (1.05) + (12.003) + (2.007), (I.05) + (12.003) + (2.008), (I.05) + (12.003) + (2.010), (1.05) + (12.003) + (2.012), (1.05) + (12.003) + (2.014), (1.05) + (12.003) + (2.016), (1.05) + (12.003) + (2.018), (1.05) + (12.003) + (2.031), (1.05) + (12.003) + (3.003), (1.05) + (12.003) + (3.011), (1.05) + (12.003) + (3.012), (1.05) + (12.003) + (3.014), (1.05) + (12.003) + (3.017), (1.05) + (12.003) + (3.019), (1.05) + (12.003) + (3.021), (1.05) + (12.003) + (3.022), (1.05) + (12.003) + (3.025), (1.05) + (12.003) + (4.007), (1.05) + (12.003) + (5.004), (1.05) + (12.003) + (5.005), (1.05) + (12.003) + (5.008), (I.05) + (12.003) + (5.009), (1.05) + (12.003) + (5.012), (1.05) + (12.003) + (5.013), (1.05) + (12.003) + (6.005), (1.05) + (12.003) + (7.005), (1.05) + (12.003) + (8.001), (1.05) + (12.003) + (9.002), (1.05) + (12.003) + (10.001), (1.05) + (12.003) + (10.002), (1.05) + (12.003) + (12.004), (1.05) + (12.003) + (13.001), (1.05) + (12.003) + (13.004), (1.05) + (12.003) + (14.001), (1.05) + (12.003) + (15.025), (1.05) + (12.003) + (16.01),

(I.05) + (12.004) + (1.001), (1.05) + (12.004) + (1.002), (1.05) + (12.004) + (1.003), (1.05) + (12.004) + (1.015), (1.05) + (12.004) + (1.016), (1.05) + (12.004) + (1.017), (1.05) + (12.004) + (1.018), (1.05) + (12.004) + (1.024), (1.05) + (12.004) + (1.026), (1.05) + (12.004) + (1.027), (1.05) + (12.004) + (1.032), (1.05) + (12.004) + (1.033), (1.05) + (12.004) + (1.063), (1.05) + (12.004) + (1.067), (1.05) + (12.004) + (2.001), (1.05) + (12.004) + (2.002), (1.05) + (12.004) + (2.005), (1.05) + (12.004) + (2.007), (1.05) + (12.004) + (2.008), (I.05) + (12.004) + (2.010), (1.05) + (12.004) + (2.012), (1.05) + (12.004) + (2.014), (1.05) + (12.004) + (2.016), (1.05) + (12.004) + (2.018), (1.05) + (12.004) + (2.031), (1.05) + (12.004) + (3.003), (1.05) + (12.004) + (3.011), (1.05) + (12.004) + (3.012), (1.05) + (12.004) + (3.014), (1.05) + (12.004) + (3.017), (1.05) + (12.004) + (3.019), (1.05) + (12.004) + (3.021), (1.05) + (12.004) + (3.022), (1.05) + (12.004) + (3.025), (1.05) + (12.004) + (4.007), (1.05) + (12.004) + (5.004), (1.05) + (12.004) + (5.005), (1.05) + (12.004) + (5.008), (I.05) + (12.004) + (5.009), (1.05) + (12.004) + (5.012), (1.05) + (12.004) + (5.013), (1.05) + (12.004) + (6.005), (1.05) + (12.004) + (7.005), (1.05) + (12.004) + (8.001), (1.05) + (12.004) + (9.002), (1.05) + (12.004) + (10.001), (1.05) + (12.004) + (10.002), (1.05) + (12.004) + (12.003), (1.05) + (12.004) + (13.001), (1.05) + (12.004) + (13.004), (1.05) + (12.004) + (14.001), (1.05) + (12.004) + (15.025), (1.05) + (12.004) + (16.01),

(I.05) + (13.001) + (1.001), (1.05) + (13.001) + (1.002), (1.05) + (13.001) + (1.003), (1.05) + (13.001) + (1.015), (1.05) + (13.001) + (1.016), (1.05) + (13.001) + (1.017), (1.05) + (13.001) + (1.018), (1.05) + (13.001) + (1.024), (1.05) + (13.001) + (1.026), (1.05) + (13.001) + (1.027), (1.05) + (13.001) + (1.032), (1.05) + (13.001) + (1.033), (1.05) + (13.001) + (1.063), (1.05) + (13.001) + (1.067), (1.05) + (13.001) + (2.001), (1.05) + (13.001) + (2.002), (1.05) + (13.001) + (2.005), (1.05) + (13.001) + (2.007), (1.05) + (13.001) + (2.008), (I.05) + (13.001) + (2.010), (1.05) + (13.001) + (2.012), (1.05) + (13.001) + (2.014), (1.05) + (13.001) + (2.016), (1.05) + (13.001) + (2.018), (1.05) + (13.001) + (2.031), (1.05) + (13.001) + (3.003), (1.05) + (13.001) + (3.011), (1.05) + (13.001) + (3.012), (1.05) + (13.001) + (3.014), (1.05) + (13.001) + (3.017), (1.05) + (13.001) + (3.019), (1.05) + (13.001) + (3.021), (1.05) + (13.001) + (3.022), (1.05) + (13.001) + (3.025), (1.05) + (13.001) + (4.007), (1.05) + (13.001) + (5.004), (1.05) + (13.001) + (5.005), (1.05) + (13.001) + (5.008), (I.05) + (13.001) + (5.009), (1.05) + (13.001) + (5.012), (1.05) + (13.001) + (5.013), (1.05) + (13.001) + (6.005), (1.05) + (13.001) + (7.005), (1.05) + (13.001) + (8.001), (1.05) + (13.001) + (9.002), (1.05) + (13.001) + (10.001), (1.05) + (13.001) + (10.002), (1.05) + (13.001) + (12.003), (1.05) + (13.001) + (12.004), (1.05) + (13.001) + (13.004), (1.05) + (13.001) + (14.001), (1.05) + (13.001) + (15.025), (1.05) + (13.001) + (16.01),

(I.05) + (13.004) + (1.001), (1.05) + (13.004) + (1.002), (1.05) + (13.004) + (1.003), (1.05) + (13.004) + (1.015), (1.05) + (13.004) + (1.016), (1.05) + (13.004) + (1.017), (1.05) + (13.004) + (1.018), (1.05) + (13.004) + (1.024), (1.05) + (13.004) + (1.026), (1.05) + (13.004) + (1.027), (1.05) + (13.004) + (1.032), (1.05) + (13.004) + (1.033), (1.05) + (13.004) + (1.063), (1.05) + (13.004) + (1.067), (1.05) + (13.004) + (2.001), (1.05) + (13.004) + (2.002), (1.05) + (13.004) + (2.005), (1.05) + (13.004) + (2.007), (1.05) + (13.004) + (2.008), (I.05) + (13.004) + (2.010), (1.05) + (13.004) + (2.012), (1.05) + (13.004) + (2.014), (1.05) + (13.004) + (2.016), (1.05) + (13.004) + (2.018), (1.05) + (13.004) + (2.031), (1.05) + (13.004) + (3.003), (1.05) + (13.004) + (3.011), (1.05) + (13.004) + (3.012), (1.05) + (13.004) + (3.014), (1.05) + (13.004) + (3.017), (1.05) + (13.004) + (3.019), (1.05) + (13.004) + (3.021),

(1.05) + (13.004) + (3.022), (1.05) + (13.004) + (3.025), (1.05) + (13.004) + (4.007), (1.05) + (13.004) + (5.004), (1.05) + (13.004) + (5.005), (1.05) + (13.004) + (5.008), (I.05) + (13.004) + (5.009), (1.05) + (13.004) + (5.012), (1.05) + (13.004) + (5.013), (1.05) + (13.004) + (6.005), (1.05) + (13.004) + (7.005), (1.05) + (13.004) + (8.001), (1.05) + (13.004) + (9.002), (1.05) + (13.004) + (10.001), (1.05) + (13.004) + (10.002), (1.05) + (13.004) + (12.003), (1.05) + (13.004) + (12.004), (1.05) + (13.004) + (13.001), (1.05) + (13.004) + (14.001), (1.05) + (13.004) + (15.025), (1.05) + (13.004) + (16.01),

(I.05) + (14.001) + (1.001), (1.05) + (14.001) + (1.002), (1.05) + (14.001) + (1.003), (1.05) + (14.001) + (1.015), (1.05) + (14.001) + (1.016), (1.05) + (14.001) + (1.017), (1.05) + (14.001) + (1.018), (1.05) + (14.001) + (1.024), (1.05) + (14.001) + (1.026), (1.05) + (14.001) + (1.027), (1.05) + (14.001) + (1.032), (1.05) + (14.001) + (1.033), (1.05) + (14.001) + (1.063), (1.05) + (14.001) + (1.067), (1.05) + (14.001) + (2.001), (1.05) + (14.001) + (2.002), (1.05) + (14.001) + (2.005), (1.05) + (14.001) + (2.007), (1.05) + (14.001) + (2.008), (I.05) + (14.001) + (2.010), (1.05) + (14.001) + (2.012), (1.05) + (14.001) + (2.014), (1.05) + (14.001) + (2.016), (1.05) + (14.001) + (2.018), (1.05) + (14.001) + (2.031), (1.05) + (14.001) + (3.003), (1.05) + (14.001) + (3.011), (1.05) + (14.001) + (3.012), (1.05) + (14.001) + (3.014), (1.05) + (14.001) + (3.017), (1.05) + (14.001) + (3.019), (1.05) + (14.001) + (3.021), (1.05) + (14.001) + (3.022), (1.05) + (14.001) + (3.025), (1.05) + (14.001) + (4.007), (1.05) + (14.001) + (5.004), (1.05) + (14.001) + (5.005), (1.05) + (14.001) + (5.008), (I.05) + (14.001) + (5.009), (1.05) + (14.001) + (5.012), (1.05) + (14.001) + (5.013), (1.05) + (14.001) + (6.005), (1.05) + (14.001) + (7.005), (1.05) + (14.001) + (8.001), (1.05) + (14.001) + (9.002), (1.05) + (14.001) + (10.001), (1.05) + (14.001) + (10.002), (1.05) + (14.001) + (12.003), (1.05) + (14.001) + (12.004), (1.05) + (14.001) + (13.001), (1.05) + (14.001) + (13.004), (1.05) + (14.001) + (15.025), (1.05) + (14.001) + (16.01),

(I.05) + (15.025) + (1.001), (1.05) + (15.025) + (1.002), (1.05) + (15.025) + (1.003), (1.05) + (15.025) + (1.015), (1.05) + (15.025) + (1.016), (1.05) + (15.025) + (1.017), (1.05) + (15.025) + (1.018), (1.05) + (15.025) + (1.024), (1.05) + (15.025) + (1.026), (1.05) + (15.025) + (1.027), (1.05) + (15.025) + (1.032), (1.05) + (15.025) + (1.033), (1.05) + (15.025) + (1.063), (1.05) + (15.025) + (1.067), (1.05) + (15.025) + (2.001), (1.05) + (15.025) + (2.002), (1.05) + (15.025) + (2.005), (1.05) + (15.025) + (2.007), (1.05) + (15.025) + (2.008), (I.05) + (15.025) + (2.010), (1.05) + (15.025) + (2.012), (1.05) + (15.025) + (2.014), (1.05) + (15.025) + (2.016), (1.05) + (15.025) + (2.018), (1.05) + (15.025) + (2.031), (1.05) + (15.025) + (3.003), (1.05) + (15.025) + (3.011), (1.05) + (15.025) + (3.012), (1.05) + (15.025) + (3.014), (1.05) + (15.025) + (3.017), (1.05) + (15.025) + (3.019), (1.05) + (15.025) + (3.021), (1.05) + (15.025) + (3.022), (1.05) + (15.025) + (3.025), (1.05) + (15.025) + (4.007), (1.05) + (15.025) + (5.004), (1.05) + (15.025) + (5.005), (1.05) + (15.025) + (5.008), (I.05) + (15.025) + (5.009), (1.05) + (15.025) + (5.012), (1.05) + (15.025) + (5.013), (1.05) + (15.025) + (6.005), (1.05) + (15.025) + (7.005), (1.05) + (15.025) + (8.001), (1.05) + (15.025) + (9.002), (1.05) + (15.025) + (10.001), (1.05) + (15.025) + (10.002), (1.05) + (15.025) + (12.003), (1.05) + (15.025) + (12.004), (1.05) + (15.025) + (13.001), (1.05) + (15.025) + (13.004), (1.05) + (15.025) + (14.001), (1.05) + (15.025) + (16.01),

(I.05) + (16.01) + (1.001), (1.05) + (16.01) + (1.002), (1.05) + (16.01) + (1.003), (1.05) + (16.01) + (1.015), (I.05) + (16.01) + (1.016), (1.05) + (16.01) + (1.017), (1.05) + (16.01) + (1.018), (1.05) + (16.01) + (1.024), (I.05) + (16.01) + (1.026), (1.05) + (16.01) + (1.027), (1.05) + (16.01) + (1.032), (1.05) + (16.01) + (1.033), (I.05) + (16.01) + (1.063), (1.05) + (16.01) + (1.067), (1.05) + (16.01) + (2.001), (1.05) + (16.01) + (2.002), (I.05) + (16.01) + (2.005), (1.05) + (16.01) + (2.007), (1.05) + (16.01) + (2.008), (1.05) + (16.01) + (2.010), (I.05) + (16.01) + (2.012), (1.05) + (16.01) + (2.014), (1.05) + (16.01) + (2.016), (1.05) + (16.01) + (2.018), (I.05) + (16.01) + (2.031), (1.05) + (16.01) + (3.003), (1.05) + (16.01) + (3.011), (1.05) + (16.01) + (3.012), (I.05) + (16.01) + (3.014), (1.05) + (16.01) + (3.017), (1.05) + (16.01) + (3.019), (1.05) + (16.01) + (3.021), (I.05) + (16.01) + (3.022), (1.05) + (16.01) + (3.025), (1.05) + (16.01) + (4.007), (1.05) + (16.01) + (5.004), (I.05) + (16.01) + (5.005), (1.05) + (16.01) + (5.008), (1.05) + (16.01) + (5.009), (1.05) + (16.01) + (5.012), (I.05) + (16.01) + (5.013), (1.05) + (16.01) + (6.005), (1.05) + (16.01) + (7.005), (1.05) + (16.01) + (8.001), (I.05) + (16.01) + (9.002), (1.05) + (16.01) + (10.001), (1.05) + (16.01) + (10.002), (1.05) + (16.01) + (12.003), (I.05) + (16.01) + (12.004), (1.05) + (16.01) + (13.001), (1.05) + (16.01) + (13.004), (1.05) + (16.01) + (14.001), (1.05) + (16.01) + (15.025).

## Combination

According to the invention, the expression "combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other within a reasonably short period, such as a few hours or days. Preferably the order of applying the compounds (A) and (B) is not essential for working the present invention.

Preferably, the active compounds in the active compound combinations according to the invention are present in certain weight ratios. However, the weight ratios of the active compounds in the active compound combinations can be varied within a relatively wide range. Preferably, the combinations according to the invention comprise an active compound (A) and an active compound (B) in a weight ratio of 5000:1 to 1:5000, more preferably in a weight ratio of 2500:1 to 1:2500, and most preferably in a weight ratio of 1000:1 to 1:2500.

Further ratios of A:B which can be used according to the present invention are: 2000:1 to 1:2000, 1500:1 to 1:1500, 1000:1 to 1:1000, 750:1 to 1:750, 500:1 to 1:500, 250:1 to 1:250 and 100:1 to 1:100.

Further ratios of A:B which can be used according to the present invention are: 1000:1 to 1:1, 500:1 to 1:1, 250:1 to 1:1, 100:1 to 1:1, 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 50:1 to 1:1, 45:1 to 1:1, 40:1 to 1:1, 35:1 to 1:1, 30:1 to 1:1, 25:1 to 1:1, 20:1 to 1:1, 15:1 to 1:1, 10:1 to 1:1, 5:1 to 1:1, 4:1 to 1:1, 3:1 to 1:1, 2:1 to 1:1.

Further ratios of A:B which can be used according to the present invention are: 1:1 to 1:1000, 1:1 to 1:500, 1:1 to 1:250, 1:1 to 1:100, 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:50, 1:1 to 1:45, 1:1 to 1:40, 1:1 to 1:35, 1:1 to 1:30, 1:1 to 1:25, 1:1 to 1:20, 1:1 to 1:15, 1:1 to 1:10, 1:1 to 1:5, 1:1 to 1:4, 1:1 to 1:3, 1:1 to 1:2.

Further ratios of A:B which can be used according to the present invention are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 50:1 to 1:50, 45:1 to 1:45, 40:1 to 1:40, 35:1 to 1:35, 30:1 to 1:30, 25:1 to 1:25, 20:1 to 1:20, 15:1 to 1:15, 10:1 to 1:10, 5:1 to 1:5, 4:1 to 1:4, 3:1 to 1:3,2:1 to 1:2.

Particularly preferred mixing ratios for some specific combinations of a compound (A), preferably compound (1.1), (I.2), (1.3), (1.4) or (1.5), and a compound (B) are provided in table 1. Thus, each individual active compound combination of a compound (A) and a compound (B) in each of the indicated mixing ratios is a preferred embodiment of the invention.

Table 1:

| Compound B | Preferred mixing ratio A:B | More preferred mixing ratio A:B | Most preferred mixing ratio A:B |
|---|---|---|---|
| (1.002) difenoconazole | 2000:1 to 1: 100 | 1000:1 to 1:50 | 625:1 to 1:25 |
| (1.024) prothioconazole | 2000:1 to 1: 100 | 1000:1 to 1:50 | 625:1 to 1:25 |
| (1.027) tebuconazole | 2000:1 to 1: 500 | 1000:1 to 1:250 | 625:1 to 1:125 |
| (1.067) methyl 2-[2-chloro-4-(4-chlorophenoxy) phenyl]-2-hydroxy-3-(1,2,4-triazol-1-yl)propanoate | 1000:1 to 1: 250 | 500:1 to 1:100 | 350:1 to 1:50 |
| (2.002) bixafen | 2000:1 to 1: 500 | 1000:1 to 1:250 | 625:1 to 1:125 |
| (2.008) fluopyram | 250:1 to 1: 1000 | 100:1 to 1:750 | 75:1 to 1:500 |
| (2.012) inpyrfluxam | 2000:1 to 1: 100 | 1000:1 to 1:50 | 625:1 to 1:25 |
| (2.014) isoflucypram | 2000:1 to 1: 100 | 1000:1 to 1:50 | 625:1 to 1:25 |
| (2.016) penflufen | 500:1 to 1: 500 | 250:1 to 1:250 | 125:1 to 1:125 |
| (3.003) azoxystrobin | 100:1 to 1: 100 | 50:1 to 1:10 | 10:1 to 1:2 |
| (3.017) metarylpicoxamid | 250:1 to 1: 1000 | 100:1 to 1:500 | 75:1 to 1:250 |
| (3.025) trifloxystrobin | 2000:1 to 1: 500 | 1000:1 to 1:250 | 625:1 to 1:125 |

(continued)

| Compound B | Preferred mixing ratio A:B | More preferred mixing ratio A:B | Most preferred mixing ratio A:B |
|---|---|---|---|
| (4.007) pencycuron | 100:1 to 1: 5000 | 50:1 to 1:3000 | 25:1 to 1:2500 |
| (5.013) mancozeb | 250:1 to 1: 1000 | 100:1 to 1:750 | 75:1 to 1:500 |
| (6.005) isotianil | 100:1 to 1: 5000 | 25:1 to 1:3000 | 10:1 to 1:2500 |
| (10.001) fluoxapiprolin | 100:1 to 1: 1000 | 50:1 to 1:750 | 35:1 to 1:500 |
| (10.002) natamycin | 100:1 to 1: 2500 | 50:1 to 1:1500 | 25:1 to 1:1250 |
| (12.004) metalaxyl-M (mefenoxam) | 100:1 to 1: 5000 | 25:1 to 1:3000 | 10:1 to 1:2500 |
| (13.001) fludioxonil | 500:1 to 1: 500 | 250:1 to 1:250 | 125:1 to 1:125 |
| (15.025) picarbutrazox | 100:1 to 1: 5000 | 25:1 to 1:2500 | 15:1 to 1:1250 |

If more than one, e.g. 2 or 3, compounds (B) are present in the combinations according to the invention the individual compounds (B) can be present in a broad range of effective weight ratios, in relation to one another and also each in relation to compound (A).

If for example two compounds (B) are present, which are in the following referred to as compounds (B1) and (B2) the effective weight ratios of A:B1 and A:B2 are preferably both within the range of from 5000:1 to 1:5000, more preferably 2500:1 to 1:2500, and even more preferably 1000:1 to 1:2500.

When two of the compounds B listed in table 1 are present, the effective weight ratios of A:B1 and A:B2 are independently of one another preferably, more preferably and most preferably as indicated in table 1.

If two compounds (B) are present, which are in the following referred to as compounds (B1) and (B2) the effective weight ratio of B1:B2, can vary for example in a range of 100:1 to 1:100, preferably in a weight ratio of 50:1 to 1:50, most preferably in a weight ratio of 20:1 to 1:20. Further ratios of B1:B2 which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60,55:1 to 1:55, 50:1 to 1:50,45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3,2:1 to 1:2.

Further ratios of B1:B2 which can be used according to the present invention are: 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 50:1 to 1:1,45:1 to 1:1,40:1 to 1:1, 35:1 to 1:1, 30:1 to 1:1, 25:1 to 1:1, 20:1 to 1:1, 15:1 to 1:1, 10:1 to 1:1, 5:1 to 1:1, 4:1 to 1:1, 3:1 to 1:1, 2:1 to 1:1.

Further ratios of B1:B2 which can be used according to the present invention are: 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:50, 1:1 to 1:45, 1:1 to 1:40, 1:1 to 1:35, 1:1 to 1:30, 1:1 to 1:25, 1:1 to 1:20, 1:1 to 1:15, 1:1 to 1:10, 1:1 to 1:5, 1:1 to 1:4, 1:1 to 1:3, 1:1 to 1:2.

If compound (B) is a biological fungicide, preferably 16.01, compounds (A) and (B) can be present in a broad range of effective weight ratio of A:B, for example in a range of 1:10 to 1:250000, 1:10 to 1:500, 1:10 to 1:200, 1:12 to 1:150, 1:12 to 1:200000, 1:14 to 1:180000, 1:10 to 1:200, 1:12 to 1:150, 1:1000:1:250000, 1:10000 to 1:250000, or 1:100000 to 1:200000. In this embodiment, the ratio is preferably in the range of from 1:10 to 1:500, more preferably 1:10 to 1:200, such as 1:12 to 1:150.

Depending on the nature of compound (B), compound (B) may be present in the compound combinations of the invention in the form of different stereoisomers. These stereoisomers are, for example, enantiomers, diastereomers, atropisomers or geometric isomers. Accordingly, the invention encompasses both pure stereoisomers and any mixture of these isomers. Where a compound can be present in two or more tautomer forms in equilibrium, reference to the compound by means of one tautomeric description is to be considered to include all tautomer forms. Where a compound can be present in isomeric forms and/or tautomeric forms, such a compound is understood hereinabove and hereinbelow also to include, where applicable, corresponding isomeric and/or tautomeric forms or mixtures thereof, even when these

are not specifically mentioned in each case.

The compounds present in the compound combination of the invention may be present in all suitable isotopic variants. An isotopic variant of such a compound is understood to mean a compound in which at least one atom is replaced by another atom of the same atomic number, but with a different atomic mass than the atomic mass usually or predominantly occurring in nature. Examples of isotopes that can be incorporated into a compound present in the compound combination of the invention are those of hydrogen, carbon, nitrogen, oxygen, phosphorus, sulfur, fluorine, chlorine, bromine and iodine, such as $^{2}H$ (deuterium), $^{3}H$ (tritium), $^{13}C$, $^{14}C$, $^{15}N$, $^{17}O$, $^{18}O$, $^{32}P$, $^{33}P$, $^{33}S$, $^{34}S$, $^{35}S$, $^{36}S$, $^{18}F$, $^{36}Cl$, $^{82}Br$, $^{123}I$, $^{124}I$, $^{129}I$ and $^{131}I$. Certain isotopic variants of a compound, such as in particular those in which one or more radioactive isotopes are incorporated, can be useful, for example, for investigating the mechanism of action or the active ingredient distribution, for example in the body of a pathogen; for this purpose, compounds labeled with $^{3}H$ or $^{14}C$ isotopes are particularly suitable, because their production and detection which is comparatively easy. In addition, the incorporation of isotopes, such as, for example, deuterium, can lead to advantages, for example as a result of greater metabolic stability of the compound, such as, for example, an extension of the half-life or a reduction in the required effective dose. Isotopic modifications of the compounds present in the compound combination of the invention can therefore also represent a preferred embodiment of the invention. Isotopic variants of a compound which is present in the compound combination according to the invention can be prepared analogously to the known processes for producing said compound using appropriate isotopic modifications of the respective reagents and/or starting compounds (educts).

The compounds present in the compound combination of the invention may independently of one another be present in the form of the free compound or, if applicable, an agrochemically active salt or N-oxide thereof.

Agrochemically active salts include acid addition salts of inorganic and organic acids well as salts of customary bases. Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as sodium bisulfate and potassium bisulfate. Useful organic acids include, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, saturated or mono- or diunsaturated fatty acids having 6 to 20 carbon atoms, alkylsulphuric monoesters, alkylsulphonic acids (sulphonic acids having straight-chain or branched alkyl radicals having 1 to 20 carbon atoms), arylsulphonic acids or aryldisulphonic acids (aromatic radicals, such as phenyl and naphthyl, which bear one or two sulphonic acid groups), alkylphosphonic acids (phosphonic acids having straight-chain or branched alkyl radicals having 1 to 20 carbon atoms), arylphosphonic acids or aryldiphosphonic acids (aromatic radicals, such as phenyl and naphthyl, which bear one or two phosphonic acid radicals), where the alkyl and aryl radicals may bear further substituents, for example p-toluenesulphonic acid, salicylic acid, p-aminosalicylic acid, 2-phenoxybenzoic acid, 2-acetoxybenzoic acid.

N-oxides of compounds present in the compound combination of the invention or intermediates thereof can be obtained in a simple manner by customary processes, for example by N-oxidation with hydrogen peroxide ($H_2O_2$), peracids, for example peroxy sulfuric acid or peroxy carboxylic acids, such as meta-chloroperoxybenzoic acid or peroxymonosulfuric acid (Caro's acid).

E.g. the corresponding N-oxides may be prepared starting from the respective compounds using conventional oxidation methods, e.g. by treating the compounds with an organic peracid such as metachloroperbenzoic acid (e.g. WO-A 2003/64572 or J. Med. Chem. 38 (11), 1892-1903, 1995); or with inorganic oxidizing agents such as hydrogen peroxide (e.g. J. Heterocyc. Chem. 18 (7), 1305-1308, 1981) or oxone (e.g. J. Am. Chem. Soc. 123 (25), 5962-5973, 2001). The oxidation may lead to pure mono-N-oxides or to a mixture of different N-oxides, which can be separated by conventional methods such as chromatography.

*Crystalline Form*

The compounds present in the compound combinations of the invention may exist in multiple crystalline and/or amorphous forms. Crystalline forms include unsolvated crystalline forms, solvates and hydrates, in each case of the individual compounds or adducts thereof.

Solvates of the compounds present in the compound combinations of the invention or their salts are stoichiometric compositions of the compounds with solvents.

*Compositions/Formulations*

The present invention further relates to compositions for controlling unwanted microorganisms, comprising the compound combination according to the invention. The compositions may be applied to the microorganisms and/or in their habitat.

The composition comprises the compound combination of the invention and at least one agriculturally suitable auxiliary, e.g. carrier(s) and/or surfactant(s).

A carrier is a solid or liquid, natural or synthetic, organic or inorganic substance that is generally inert. The carrier generally improves the application of the compounds, for instance, to plants, plants parts or seeds. Examples of suitable *solid carriers* include, but are not limited to, ammonium salts, in particular ammonium sulfates, ammonium phosphates and ammonium nitrates, natural rock flours, such as kaolins, clays, talc, chalk, quartz, attapulgite, montmorillonite and diatomaceous earth, silica gel and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks. Examples of suitable *liquid carriers* include, but are not limited to, water, organic solvents and combinations thereof. Examples of suitable *solvents* include polar and nonpolar organic chemical liquids, for example from the classes of aromatic and nonaromatic hydrocarbons (such as cyclohexane, paraffins, alkylbenzenes, xylene, toluene, tetrahydronaphthalene, alkylnaphthalenes, chlorinated aromatics or chlorinated aliphatic hydrocarbons such as chlorobenzenes, chloroethylenes or methylene chloride), alcohols and polyols (which may optionally also be substituted, etherified and/or esterified, such as ethanol, propanol, butanol, benzylalcohol, cyclohexanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide or fatty acid amides) and esters thereof, lactams (such as N-alkylpyrrolidones, in particular N-methylpyrrolidone) and lactones, sulfones and sulfoxides (such as dimethyl sulfoxide), oils of vegetable or animal origin. The carrier may also be a liquefied gaseous extender, i.e. liquid which is gaseous at standard temperature and under standard pressure, for example aerosol propellants such as halohydrocarbons, butane, propane, nitrogen and carbon dioxide.

Preferred solid carriers are selected from clays, talc and silica.

Preferred liquid carriers are selected from water, fatty acid amides and esters thereof, aromatic and nonaromatic hydrocarbons, lactams and carbonic acid esters.

The amount of carrier typically ranges from 1 to 99.99%, preferably from 5 to 99.9%, more preferably from 10 to 99.5%, and most preferably from 20 to 99% by weight of the composition.

Liquid carriers are typically present in a range of from 20 to 90%, for example 30 to 80% by weight of the composition.

Solid carriers are typically present in a range of from 0 to 50%, preferably 5 to 45%, for example 10 to 30% by weight of the composition.

If the composition comprises two or more carriers, the outlined ranges refer to the total amount of carriers.

The surfactant can be an ionic (cationic or anionic), amphoteric or non-ionic surfactant, such as ionic or non-ionic emulsifier(s), foam former(s), dispersant(s), wetting agent(s), penetration enhancer(s) and any mixtures thereof. Examples of suitable surfactants include, but are not limited to, salts of polyacrylic acid, salts of lignosulfonic acid (such as sodium lignosulfonate), salts of phenolsulfonic acid or naphthalenesulfonic acid, polycondensates of ethylene oxide and/or propylene oxide with fatty alcohols, fatty acids or fatty amines (for example, polyoxyethylene fatty acid esters such as castor oil ethoxylate, polyoxyethylene fatty alcohol ethers, for example alkylaryl polyglycol ethers), substituted phenols (preferably alkylphenols or arylphenols) and ethoxylates thereof (such as tristyrylphenol ethoxylate), salts of sulfosuccinic esters, taurine derivatives (preferably alkyl taurates), phosphoric esters of polyethoxylated alcohols or phenols, fatty esters of polyols (such a fatty acid esters of glycerol, sorbitol or sucrose), sulfates (such as alkyl sulfates and alkyl ether sulfates), sulfonates (for example, alkylsulfonates, arylsulfonates and alkylbenzene sulfonates), phosphate esters, protein hydrolysates, lignosulfite waste liquors and methylcellulose. Any reference to salts in this paragraph refers preferably to the respective alkali, alkaline earth and ammonium salts.

Preferred surfactants are selected from polyoxyethylene fatty alcohol ethers, polyoxyethylene fatty acid esters, alkylbenzene sulfonates, such as calcium dodecylbenzenesulfonate, castor oil ethoxylate, sodium lignosulfonate and arylphenol ethoxylates, such as tristyrylphenol ethoxylate.

The amount of surfactants typically ranges from 5 to 40%, for example 10 to 20%, by weight of the composition.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone and tylose), thickeners and secondary thickeners (such as cellulose ethers, acrylic acid derivatives, xanthan gum, modified clays, e.g. the products available under the name Bentone, and finely divided silica), stabilizers (e.g. cold stabilizers, preservatives (e.g. dichlorophene and benzyl alcohol hemiformal), antioxidants, light stabilizers, in particular UV stabilizers, or other agents which improve chemical and/or physical stability), dyes or pigments (such as inorganic pigments, e.g. iron oxide, titanium oxide and Prussian Blue; organic dyes, e.g. alizarin, azo and metal phthalocyanine dyes), antifoams (e.g. silicone antifoams and magnesium stearate), antifreezes, stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The choice of the auxiliaries depends on the intended mode of application of the compound combination of the invention and/or on the physical properties of the active compound(s) present in said compound combination. Furthermore, the auxiliaries may be chosen to impart particular properties (technical, physical and/or biological properties) to the compositions or use forms prepared therefrom. The choice of auxiliaries may allow customizing the compositions to specific needs.

The composition of the invention may be provided to the end user as ready-for-use formulation, i.e. the compositions may be directly applied to the plants or seeds by a suitable device, such as a spraying or dusting device. Alternatively, the compositions may be provided to the end user in the form of concentrates which have to be diluted, preferably with water, prior to use.

The composition of the invention can be prepared in conventional manners, for example by mixing the compound combination of the invention with one or more suitable auxiliaries, such as disclosed herein above.

The composition comprises a fungicidally effective amount of a compound combination of the invention. The term "effective amount" denotes an amount, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific compound combination of the invention used. Usually, the composition according to the invention contains from 0.01 to 99% by weight, preferably from 0.05 to 98% by weight, more preferred from 0.1 to 95% by weight, even more preferably from 0.5 to 90% by weight, most preferably from 1 to 80% by weight of the compound combination of the invention.

The composition of the invention may be in any customary composition type, such as solutions (e.g. aqueous solutions), emulsions, water- and oil-based suspensions, powders (e.g. wettable powders, soluble powders), dusts, pastes, granules (e.g. soluble granules, granules for broadcasting), suspoemulsion concentrates, natural or synthetic products impregnated with the compound combination of the invention, fertilizers and also microencapsulations in polymeric substances. The compound combination of the invention may be present in a suspended, emulsified or dissolved form. Examples of particular suitable composition types are solutions, watersoluble concentrates (e.g. SL, LS), dispersible concentrates (DC), suspensions and suspension concentrates (e.g. SC, OD, OF, FS), emulsifiable concentrates (e.g. EC), emulsions (e.g. EW, EO, ES, ME, SE), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GW, GF). These and further compositions types are defined by the Food and Agriculture Organization of the United Nations (FAO). An overview is given in the "Catalogue of pesticide formulation types and international coding system", Technical Monograph No. 2, 6th Ed. May 2008, Croplife International.

Preferably, the composition of the invention is in form of one of the following types: EC, SC, FS, SE, OD and WG, more preferred EC, SC, OD and WG.

Further details about examples of composition types and their preparation are given below. The outlined amount of compound combination of the invention refers to the total amount of compounds (A) and (B) present in the compound combination of the present invention. If two or more representatives of any further component of the composition, e.g. wetting agent, binder, are present, the outlined amounts of the respective component refers to the total amount of all representatives of said component, e.g. all wetting agents, all binders, all solvents and so on.

i) Water-soluble concentrates (SL, LS)

10-60 % by weight of the compound combination of the invention and 5-15 % by weight surfactant (e.g. polyoxyethylene fatty alcohol ether) are dissolved in such amount of water and/or water-soluble solvent (e.g. alcohols such as propylene glycol or carbonates such as propylene carbonate) to result in a total amount of 100 % by weight. Before application the concentrate is diluted with water.

ii) Dispersible concentrates (DC)

5-25 % by weight of the compound combination of the invention and 1-10 % by weight surfactant and/or binder (e.g. polyvinylpyrrolidone) are dissolved in such amount of organic solvent (e.g. cyclohexanone) to result in a total amount of 100 % by weight. Dilution with water gives a dispersion.

iii) Emulsifiable concentrates (EC)

15-70 % by weight of the compound combination of the invention and 5-10 % by weight surfactant (e.g. a mixture of calcium dodecylbenzenesulfonate and castor oil ethoxylate) are dissolved in such amount of water-insoluble organic solvent (e.g. aromatic hydrocarbon or fatty acid amide) and if needed additional water-soluble solvent to result

in a total amount of 100 % by weight. Dilution with water gives an emulsion.

iv) Emulsions (EW, EO, ES)

5-40 % by weight of the compound combination of the invention and 1-10 % by weight surfactant (e.g. a mixture of calcium dodecylbenzenesulfonate and castor oil ethoxylate) are dissolved in 20-40 % by weight water-insoluble organic solvent (e.g. aromatic hydrocarbon). This mixture is added to such amount of water by means of an emulsifying machine to result in a total amount of 100 % by weight. The resulting composition is a homogeneous emulsion. Before application the emulsion may be further diluted with water.

v) Suspensions and suspension concentrates

v-1) Water-based (SC, FS)

In a suitable grinding equipment, e.g. an agitated ball mill, 20-60 % by weight of the compound combination of the invention are comminuted with addition of 2-10 % by weight surfactant (e.g. sodium lignosulfonate and polyoxyethylene fatty alcohol ether), 0.1-2 % by weight thickener (e.g. xanthan gum) and water to give a fine active substance suspension. Water is added in such amount to result in a total amount of 100 % by weight. Dilution with water gives a stable suspension of the active substances. For FS type compositions up to 40 % by weight binder (e.g. polyvinylalcohol) is added.

v-2) Oil-based (OD, OF)

In a suitable grinding equipment, e.g. an agitated ball mill, 20-60 % by weight of the compound combination of the invention are comminuted with addition of 2-10 % by weight surfactant (e.g. sodium lignosulfonate and polyoxyethylene fatty alcohol ether), 0.1-2 % by weight thickener (e.g. modified clay, in particular Bentone, or silica) and an organic carrier to give a fine active substance oil suspension. The organic carrier is added in such amount to result in a total amount of 100 % by weight. Dilution with water gives a stable dispersion of the active substances.

vi) Water-dispersible granules and water-soluble granules (WG, SG)

50-80 % by weight of the compound combination of the invention are ground finely with addition of surfactant (e.g. sodium lignosulfonate and polyoxyethylene fatty alcohol ether) and converted to water-dispersible or water-soluble granules by means of technical appliances (e. g. extrusion, spray tower, fluidized bed). The surfactant is used in such amount to result in a total amount of 100 % by weight. Dilution with water gives a stable dispersion or solution of the active substances.

vii) Water-dispersible powders and water-soluble powders (WP, SP, WS)

50-80 % by weight of the compound combination of the invention are ground in a suitable mill, preferably a rotor-stator mill, with addition of 1-8 % by weight surfactant (e.g. sodium lignosulfonate, polyoxyethylene fatty alcohol ether) and such amount of solid carrier, e.g. silica gel, to result in a total amount of 100 % by weight. Dilution with water gives a stable dispersion or solution of the active substances.

viii) Gel (GW, GF)

In a suitable mill, e.g. an agitated ball mill, 5-25 % by weight of the compound combination of the invention are comminuted with addition of 3-10 % by weight surfactant (e.g. sodium lignosulfonate), 1-5 % by weight binder (e.g. carboxymethylcellulose) and such amount of water to result in a total amount of 100 % by weight. This results in a fine suspension of the active substance. Dilution with water gives a stable suspension of the active substances.

ix) Microemulsion (ME)

5-20 % by weight of the compound combination of the invention are added to 5-30 % by weight organic solvent blend (e.g. fatty acid dimethylamide and cyclohexanone), 10-25 % by weight surfactant blend (e.g. polyoxyethylene fatty alcohol ether and arylphenol ethoxylate), and such amount of water to result in a total amount of 100 % by weight. This mixture is stirred for 1 h to produce spontaneously a thermodynamically stable microemulsion.

x) Microcapsules (CS)

An oil phase comprising 5-50 % by weight of the compound combination of the invention, 0-40 % by weight water-insoluble organic solvent (e.g. aromatic hydrocarbon), 2-15 % by weight acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 % by weight of the compound combination of the invention, 0-40 % by weight water-insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 % by weight of the total CS composition.

xi) Dustable powders (DP, DS)

1-10 % by weight of the compound combination of the invention are ground finely and mixed intimately with such amount of solid carrier, e.g. finely divided kaolin, to result in a total amount of 100 % by weight.

xii) Granules (GR, FG)

0.5-30 % by weight of the compound combination of the invention are ground finely and associated with such amount of solid carrier (e.g. silicate) to result in a total amount of 100 % by weight. Granulation is achieved by extrusion, spray-drying or the fluidized bed.

xiii) Ultra-low volume liquids (UL)

1-50 % by weight of the compound combination of the invention are dissolved in such amount of organic solvent, e.g. aromatic hydrocarbon, to result in a total amount of 100 % by weight.

The compositions types i) to xiii) may optionally comprise further auxiliaries, such as 0.1-1 % by weight preservatives, 0.1-1 % by weight antifoams, 0.1-1 % by weight dyes and/or pigments, and 5-10% by weight antifreezes.

*Further active ingredients*

Compound combinations according to the invention can be used as such or in compositions / formulations thereof and can be mixed with further known active ingredients, for example biological control agents, bactericides, acaricides, nematicides or insecticides, in order thus to broaden, for example, the activity spectrum or to prevent development of resistance.

A mixture with other known active ingredients, such as herbicides, fertilizers, growth regulators, safeners, nitrification inhibitors, semiochemicals and/or other agriculturally beneficial agents is also possible.

"Insecticides" as well as the term "insecticidal" refers to the ability of a substance to increase mortality or inhibit growth rate of insects. As used herein, the term "insects" comprises all organisms in the class "Insecta".

"Nematicide" and "nematicidal" refers to the ability of a substance to increase mortality or inhibit the growth rate of nematodes. In general, the term "nematode" comprises eggs, larvae, juvenile and mature forms of said organism.

"Acaricide" and "acaricidal" refers to the ability of a substance to increase mortality or inhibit growth rate of ectoparasites belonging to the class Arachnida, sub-class Acari.

As used herein, the term "biological control" is defined as control of harmful organisms such as a phytopathogenic fungi and/or insects and/or acarids and/or nematodes by the use or employment of a biological control agent.

As used herein, the term "biological control agent" is defined as an organism other than the harmful organisms and / or proteins or secondary metabolites produced by such an organism for the purpose of biological control. Mutants of the second organism shall be included within the definition of the biological control agent. The term "mutant" refers to a variant of the parental strain as well as methods for obtaining a mutant or variant in which the pesticidal activity is greater than that expressed by the parental strain. The "parent strain" is defined herein as the original strain before mutagenesis. To obtain such mutants the parental strain may be treated with a chemical such as N-methyl-N'-nitro-N-nitrosoguanidine, ethylmethanesulfone, or by irradiation using gamma, x-ray, or UV-irradiation, or by other means well known to those skilled in the art. Known mechanisms of biological control agents comprise enteric bacteria that control root rot by out-competing fungi for space on the surface of the root. Bacterial toxins, such as antibiotics, have been used to control pathogens. The toxin can be isolated and applied directly to the plant or the bacterial species may be administered so it produces the toxin *in situ.*

A "variant" is a strain having all the identifying characteristics of the NRRL or ATCC Accession Numbers as

indicated in this text and can be identified as having a genome that hybridizes under conditions of high stringency to the genome of the NRRL or ATCC Accession Numbers.

"Hybridization" refers to a reaction in which one or more polynucleotides react to form a complex that is stabilized via hydrogen bonding between the bases of the nucleotide residues. The hydrogen bonding may occur by Watson-Crick base pairing, Hoogstein binding, or in any other sequence-specific manner. The complex may comprise two strands forming a duplex structure, three or more strands forming a multi-stranded complex, a single self-hybridizing strand, or any combination of these. Hybridization reactions can be performed under conditions of different "stringency". In general, a low stringency hybridization reaction is carried out at about 40 °C in 10 X SSC or a solution of equivalent ionic strength/temperature. A moderate stringency hybridization is typically performed at about 50 °C in 6 X SSC, and a high stringency hybridization reaction is generally performed at about 60 °C in 1 X SSC.

A variant of the indicated NRRL or ATCC Accession Number may also be defined as a strain having a genomic sequence that is greater than 85%, more preferably greater than 90% or more preferably greater than 95% sequence identity to the genome of the indicated NRRL or ATCC Accession Number. A polynucleotide or polynucleotide region (or a polypeptide or polypeptide region) has a certain percentage (for example, 80%, 85%, 90%, or 95%) of "sequence identity" to another sequence means that, when aligned, that percentage of bases (or amino acids) are the same in comparing the two sequences. This alignment and the percent homology or sequence identity can be determined using software programs known in the art, for example, those described in Current Protocols in Molecular Biology (F. M. Ausubel et al., eds., 1987).

NRRL is the abbreviation for the Agricultural Research Service Culture Collection, an international depositary authority for the purposes of deposing microorganism strains under the Budapest treaty on the international recognition of the deposit of microorganisms for the purposes of patent procedure, having the address National Center for Agricultural Utilization Research, Agricultural Research service, U.S. Department of Agriculture, 1815 North university Street, Peroira, Illinois 61604 USA.

ATCC is the abbreviation for the American Type Culture Collection, an international depositary authority for the purposes of deposing microorganism strains under the Budapest treaty on the international recognition of the deposit of microorganisms for the purposes of patent procedure, having the address ATCC Patent Depository, 10801 University Blvd., Manassas, VA 10110 USA.

Examples of biological control agents which may be combined with the compound combinations of the invention are:

(A) antibacterial agents selected from the group of:

(A1) bacteria, such as (A1.01) *Bacillus subtilis,* in particular strain QST713/AQ713 (available as SERENADE OPTI or SERENADE ASO from Bayer CropScience LP, US, having NRRL Accession No. B21661, U.S. Patent No. 6,060,051); (A1.02) *Bacillus* sp., in particular strain D747 (available as DOUBLE NICKEL® from Kumiai Chemical Industry Co., Ltd.), having Accession No. FERM BP-8234, U.S. Patent No. 7,094,592; (A1.03) *Bacillus pumilus*, in particular strain BU F-33, having NRRL Accession No. 50185 (available as part of the CARTISSA® product from BASF, EPA Reg. No. 71840-19); (A1.04) *Bacillus subtilis var. amyloliquefaciens* strain FZB24 having Accession No. DSM 10271 (available from Novozymes as TAEGRO® or TAEGRO® ECO (EPA Registration No. 70127-5)); (A1.05) a *Paenibacillus* sp. strain having Accession No. NRRL B-50972 or Accession No. NRRL B-67129, WO 2016/154297; (A1.06) *Bacillus subtilis* strain BU1814, (available as VELONDIS® PLUS, VELONDIS® FLEX and VELONDIS® EXTRA from BASF SE); (A1.07) *Bacillus mojavensis* strain R3B (Accession No. NCAIM (P) B001389) (WO 2013/034938) from Certis USA LLC, a subsidiary of Mitsui & Co.; (A1.08) *Bacillus subtilis* CX-9060 from Certis USA LLC, a subsidiary of Mitsui & Co.; (A1.09) *Paenibacillus polymyxa*, in particular strain AC-1 (e.g. TOPSEED® from Green Biotech Company Ltd.); (A1.10) *Pseudomonas proradix* (e.g. PRORADIX® from Sourcon Padena); (A1.11) *Pantoea agglomerans*, in particular strain E325 (Accession No. NRRL B-21856) (available as BLOOMTIME BIOLOGICAL™ FD BIOPESTICIDE from Northwest Agri Products); and

(A2) fungi, such as (A2.01) *Aureobasidium pullulans,* in particular blastospores of strain DSM14940, blastospores of strain DSM 14941 ormixtures of blastospores of strains DSM14940 and DSM14941 (e.g., BOTECTOR® and BLOSSOM PROTECT®from bio-ferm, CH); (A2.02) *Pseudozyma aphidis* (as disclosed in WO2011/151819 by Yissum Research Development Company of the Hebrew University of Jerusalem); (A2.03) *Saccharomyces cerevisiae,* in particular strains CNCM No. 1-3936, CNCM No. I-3937, CNCM No. I-3938 or CNCM No. I-3939 (WO 2010/086790) from Lesaffre et Compagnie, FR;

biological control agents having an effect for improving plant growth and/or plant health which may be combined in the compound combinations according to the invention including

(C1) bacteria selected from the group consisting of (C1.01) *Bacillus pumilus,* in particular strain QST2808 (having Accession No. NRRL No. B-30087); (C1.02) *Bacillus subtilis,* in particular strain QST713/AQ713 (having NRRL Accession No. B-21661and described in U.S. Patent No. 6,060,051; available as SERENADE® OPTI or SERENADE® ASO from Bayer CropScience LP, US); (C1.03) *Bacillus subtilis,* in particular strain AQ30002 (having Accession Nos. NRRL B-50421 and described in U.S. Patent Application No. 13/330,576); (C1.04) *Bacillus subtilis,* in particular strain AQ30004 (and NRRL B-50455 and described in U.S. Patent Application No. 13/330,576); (C1.05) *Sinorhizobium meliloti* strain NRG-185-1 (NITRAGIN® GOLD from Bayer CropScience); (C1.06) *Bacillus subtilis* strain BU1814, (available as TEQUALIS® from BASF SE); (C1.07) *Bacillus subtilis* rm303 (RHIZOMAX® from Biofilm Crop Protection); (C1.08) *Bacillus amyloliquefaciens* pm414 (LOLI-PEPTA® from Biofilm Crop Protection); (C1.09) *Bacillus mycoides* BT155 (NRRL No. B-50921), (C1.10) *Bacillus mycoides* EE118 (NRRL No. B-50918), (C1.11) *Bacillus mycoides* EE141 (NRRL No. B-50916), (C1.12) *Bacillus mycoides* BT46-3 (NRRL No. B-50922), (C1.13) *Bacillus cereus* family member EE128 (NRRL No. B-50917), (C1.14) *Bacillus thuringiensis* BT013A (NRRL No. B-50924) also known as *Bacillus thuringiensis* 4Q7, (C1.15) *Bacillus cereus* family member EE349 (NRRL No. B-50928), (C1.16) *Bacillus amyloliquefaciens* SB3281 (ATCC # PTA-7542; WO 2017/205258), (C1.17) *Bacillus amyloliquefaciens* TJ1000 (available as QUIKROOTS® from Novozymes); (C1.18) *Bacillus firmus,* in particular strain CNMC 1-1582 (e.g. VOTIVO® from BASF SE); (C1.19) *Bacillus pumilus,* in particular strain GB34 (e.g. YIELD SHIELD® from Bayer Crop Science, DE); (C1.20) *Bacillus amyloliquefaciens,* in particular strain IN937a; (C1.21) *Bacillus amyloliquefaciens,* in particular strain FZB42 (e.g. RHIZOVITAL® from ABiTEP, DE); (C1.22) *Bacillus amyloliquefaciens* BS27 (Accession No. NRRL B-5015); (C1.23) a mixture of *Bacillus licheniformis* FMCH001 and *Bacillus subtilis* FMCH002 (available as QUARTZO® (WG), PRESENCE® (WP) from FMC Corporation); (C1.24) *Bacillus cereus*, in particular strain BP01 (ATCC 55675; e.g. MEPICHLOR® from Arysta Lifescience, US); (C1.25) *Bacillus subtilis,* in particular strain MBI 600 (e.g. SUBTILEX® from BASF SE); (C1.26) *Bradyrhizobium japonicum* (e.g. OPTIMIZE® from Novozymes); (C1.27) *Mesorhizobium cicer* (e.g., NODULATOR from BASF SE); (C1.28) *Rhizobium leguminosarium biovar viciae* (e.g., NODULATOR from BASF SE); (C1.29) *Delftia acidovorans*, in particular strain RAY209 (e.g. BIOBOOST® from Brett Young Seeds); (C1.30) *Lactobacillus sp.* (e.g. LACTOPLANT® from LactoPAFI); (C1.31) *Paenibacillus polymyxa*, in particular strain AC-1 (e.g. TOPSEED® from Green Biotech Company Ltd.); (C1.32) *Pseudomonas proradix* (e.g. PRORADIX® from Sourcon Padena); (C1.33) *Azospirillum brasilense* (e.g., VIGOR® from KALO, Inc.); (C1.34) *Azospirillum lipoferum* (e.g., VERTEX-IF™ from TerraMax, Inc.); (C1.35) a mixture of *Azotobacter vinelandii* and *Clostridium pasteurianum* (available as INVIGORATE® from Agrinos); (C1.36) *Pseudomonas aeruginosa*, in particular strain PN1; (C1.37) *Rhizobium leguminosarum,* in particular bv. *viceae* strain Z25 (Accession No. CECT 4585); (C1.38) *Azorhizobium caulinodans,* in particular strain ZB-SK-5; (C1.39) *Azotobacter chroococcum,* in particular strain H23; (C1.40) *Azotobacter vinelandii*, in particular strain ATCC 12837; (C1.41) *Bacillus siamensis,* in particular strain KCTC 13613T; (C1.42) *Bacillus tequilensis*, in particular strain NII-0943; (C1.43) *Serratia marcescens,* in particular strain SRM (Accession No. MTCC 8708); (C1.44) *Thiobacillus sp.* (e.g. CROPAID® from Cropaid Ltd UK); and

(C2) fungi selected from the group consisting of (C2.01) *Purpureocillium lilacinum* (previously known as *Paecilomyces lilacinus*) strain 251 (AGAL 89/030550; e.g. BioAct from Bayer CropScience Biologics GmbH), (C2.02) *Penicillium bilaii*, strain ATCC 22348 (e.g. JumpStart® from Acceleron BioAg), (C2.03) *Talaromyces flavus*,strain V117b; (C2.04) *Trichoderma atroviride* strain CNCM 1-1237 (e.g. Esquive® WP from Agrauxine, FR), (C2.05) *Trichoderma viride,* e.g. strain B35 (Pietr et al., 1993, Zesz. Nauk. A R w Szczecinie 161: 125-137); (C2.06) *Trichoderma atroviride* strain LC52 (also known as *Trichoderma atroviride* strain LU132; e.g. Sentinel from Agrimm Technologies Limited); (C2.07) *Trichoderma atroviride* strain SC1 described in International Application No. PCT/IT2008/000196); (C2.08) *Trichoderma asperellum* strain kd (e.g. T-Gro from Andermatt Biocontrol); (C2.09) *Trichoderma asperellum* strain Eco-T (Plant Health Products, ZA); (C2.10) *Trichoderma harzianum* strain T-22 (e.g. Trianum-P from Andermatt Biocontrol or Koppert); (C2.11) *Myrothecium verrucaria* strain AARC-0255 (e.g. DiTera™ from Valent Biosciences); (C2.12) *Penicillium bilaii* strain ATCC ATCC20851; (C2.13) *Pythium oligandrum* strain M1 (ATCC 38472; e.g. Polyversum from Bioprepraty, CZ); (C2.14) *Trichoderma virens* strain GL-21 (e.g. SoilGard® from Certis, USA); (C2.15) *Verticillium albo-atrum* (formerly *V. dahliae)* strain WCS850 (CBS 276.92; e.g. Dutch Trig from Tree Care Innovations); (C2.16) *Trichoderma atroviride*, in particular strain no. V08/002387, strain no. NMI No. V08/002388, strain no. NMI No. V08/002389, strain no. NMI No. V08/002390; (C2.17) *Trichoderma harzianum* strain ITEM 908; (C2.18) *Trichoderma harzianum,* strain TSTh20; (C2.19) *Trichoderma harzianum* strain 1295-22; (C2.20) *Pythium oligandrum* strain DV74; (C2.21) *Rhizopogon amylopogon* (e.g. comprised in Myco-Sol from Helena Chemical Company); (C2.22) *Rhizopogon fulvigleba* (e.g. comprised in Myco-Sol from Helena Chemical Company); and (C2.23) *Trichoderma virens* strain GI-3;

insecticidally active biological control agents selected from

(D1) bacteria selected from the group consisting of (D1.01) *Bacillus thuringiensis subsp. aizawai*, in particular strain ABTS-1857 (SD-1372; e.g. XENTARI® from Valent BioSciences); (D1.02) *Bacillus mycoides,* isolate J. (e.g. BmJ from Certis USA LLC, a subsidiary of Mitsui & Co.); (D1.03) *Bacillus sphaericus,* in particular Serotype H5a5b strain 2362 (strain ABTS-1743) (e.g. VECTOLEX® from Valent BioSciences, US); (D1.04) *Bacillus thuringiensis subsp.* kurstaki strain BMP 123 from Becker Microbial Products, IL; (D1.05) *Bacillus thuringiensis subsp. aizawai*, in particular serotype H-7 (e.g. FLORBAC® WG from Valent BioSciences, US); (D1.06) *Bacillus thuringiensis subsp. kurstaki* strain HD-1 (e.g. DIPEL® ES from Valent BioSciences, US); (D1.07) *Bacillus thuringiensis subsp. kurstaki* strain BMP 123 by Becker Microbial Products, IL; (D1.08) *Bacillus thuringiensis israelensis* strain BMP 144 (e.g. AQUABAC® by Becker Microbial Products IL); (D1.09) *Burkholderia spp.,* in particular *Burkholderia rinojensis* strain A396 (also known as *Burkholderia rinojensis* strain MBI 305) (Accession No. NRRL B-50319; WO 2011/106491 and WO 2013/032693; e.g. MBI-206 TGAI and ZELTO® from Marrone Bio Innovations); (D1.10) *Chromobacterium subtsugae,* in particular strain PRAA4-1T (MBI-203; e.g. GRANDEVO® from Marrone Bio Innovations); (D1.11) *Paenibacillus popilliae* (formerly *Bacillus popilliae;* e.g. MILKY SPORE POWDER™ and MILKY SPORE GRANULAR™ from St. Gabriel Laboratories); (D1.12) *Bacillus thuringiensis* subsp. *israelensis* (serotype H-14) strain AM65-52 (Accession No. ATCC 1276) (e.g. VECTOBAC® by Valent BioSciences, US); (D1.13) *Bacillus thuringiensis* var. *kurstaki* strain EVB-113-19 (e.g., BIOPROTEC® from AEF Global); (D1.14) *Bacillus thuringiensis subsp. tenebrionis* strain NB 176 (SD-5428; e.g. NOVODOR® FC from BioFa DE); (D1.15) *Bacillus thuringiensis var. japonensis* strain Buibui; (D1.16) *Bacillus thuringiensis subsp. kurstaki* strain ABTS 351; (D1.17) *Bacillus thuringiensis subsp. kurstaki* strain PB 54; (D1.18) *Bacillus thuringiensis subsp. kurstaki* strain SA 11; (D1.19) *Bacillus thuringiensis subsp. kurstaki* strain SA 12; (D1.20) *Bacillus thuringiensis subsp. kurstaki* strain EG 2348; (D1.21) *Bacillus thuringiensis* var. *Colmeri* (e.g. TIANBAOBTC by Changzhou Jianghai Chemical Factory); (D1.22) *Bacillus thuringiensis subsp. aizawai* strain GC-91; (D1.23) *Serratia entomophila* (e.g. INVADE® by Wrightson Seeds); (D1.24) *Serratia marcescens,* in particular strain SRM (Accession No. MTCC 8708); and (D1.25) *Wolbachia pipientis* ZAP strain (e.g., ZAP MALES® from MosquitoMate); and

(D2) fungi selected from the group consisting of (D2.01) *Isaria fumosorosea* (previously known as *Paecilomyces fumosoroseus*) strain apopka 97; (D2.02) *Beauveria bassiana* strain ATCC 74040 (e.g. NATURALIS® from Intrachem Bio Italia); (D2.03) *Beauveria bassiana* strain GHA (Accession No. ATCC74250; e.g. BOTANIGUARD® ES and MYCONTROL-O® from Laverlam International Corporation); (D2.04) *Zoophtora radicans;* (D2.05) *Metarhizium robertsii* 15013-1 (deposited under NRRL accession number 67073), (D2.06) *Metarhizium robertsii* 23013-3 (deposited under NRRL accession number 67075), and (D2.07) *Metarhizium anisopliae* 3213-1 (deposited under NRRL accession number 67074) (WO 2017/066094; Pioneer Hi-Bred International); (D2.08) *Beauveria bassiana* strain ATP02 (Accession No. DSM 24665);

(E) viruses selected from the group consisting of *Adoxophyes orana* (summer fruit tortrix) granulosis virus (GV), *Cydia pomonella* (codling moth) granulosis virus (GV), *Helicoverpa armigera* (cotton bollworm) nuclear polyhedrosis virus (NPV), *Spodoptera exigua* (beet armyworm) mNPV, *Spodoptera frugiperda* (fall armyworm) mNPV, and *Spodoptera littoralis* (African cotton leafworm) NPV;

(F) bacteria and fungi which can be added as 'inoculant' to plants or plant parts or plant organs and which, by virtue of their particular properties, promote plant growth and plant health. Examples are: *Agrobacterium spp., Azorhizobium caulinodans, Azospirillum spp., Azotobacter spp., Bradyrhizobium spp., Burkholderia spp.,* in particular *Burkholderia cepacia* (formerly known as *Pseudomonas cepacia*), *Gigaspora spp.,* or *Gigaspora monosporum, Glomus spp., Laccaria spp., Lactobacillus buchneri, Paraglomus spp., Pisolithus tinctorus*, *Pseudomonas spp., Rhizobium spp.,* in particular *Rhizobium trifolii*, *Rhizopogon spp., Scleroderma spp., Suillus spp.,* and *Streptomyces spp.;* and

(G) plant extracts and products formed by microorganisms including proteins and secondary metabolites which can be used as biological control agents, such as *Allium sativum, Artemisia absinthium*, azadirachtin, Biokeeper WP, *Cassia nigricans, Celastrus angulatus*, *Chenopodium anthelminticum*, chitin, Armour-Zen, *Dryopteris filix-mas*, *Equisetum arvense,* Fortune Aza, Fungastop, Heads Up *(Chenopodium quinoa* saponin extract), *Pyrethrum*/*Pyrethrins*, *Quassia amara*, *Quercus, Quillaja*, Regalia, "Requiem ™ Insecticide", rotenone, *ryania*/ryanodine, *Symphytum officinale, Tanacetum vulgare,* thymol, Triact 70, TriCon, *Tropaeulum majus, Urtica dioica*, Veratrin, *Viscum album, Brassicaceae* extract, in particular oilseed rape powder or mustard powder, as well as bioinsecticidal / acaricidal active substances obtained from olive oil, in particular unsaturated fatty/carboxylic acids having carbon chain lengths $C_{16}$-$C_{20}$ as active ingredients, such as, for example, contained in the product with the trade name FLiPPER®.

Examples of insecticides, acaricides and nematicides, respectively, which could be mixed with the compound combination of the invention are:

(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, preferably cyclodiene-organochlorines selected from chlordane and endosulfan, or phenylpyrazoles (fiproles) selected from ethiprole and fipronil.

(3) Sodium channel modulators, preferably pyrethroids selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)- isomer)], tralomethrin and transfluthrin, or DDT or methoxychlor.

(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolids selected from flupyradifurone, or mesoionics selected from triflumezopyrim, or pyridylidenes selected from Flupyrimin.

(5) Nicotinic acetylcholine receptor (nAChR) allosteric modulators (site I), preferably spinosyns selected from spinetoram and spinosad.

(6) Glutamate-gated chloride channel (GluCl) allosteric modulators, preferably avermectins/milbemycins selected from abamectin, emamectin benzoate, lepimectin and milbemectin.

(7) Juvenile hormone mimics, preferably juvenile hormone analogues selected from hydroprene, kinoprene and methoprene, or fenoxycarb or pyriproxyfen.

(8) Miscellaneous non-specific (multi-site) inhibitors, preferably alkyl halides selected from methyl bromide and other alkyl halides, or chloropicrine or sulphuryl fluoride or borax or tartar emetic or methyl isocyanate generators selected from diazomet and metam.

(9) Chordotonal organ TRPV channel modulators, preferably pyridine azomethanes selected from pymetrozine and pyrifluquinazone, or pyropenes selected from afidopyropen.

(10) Mite growth inhibitors affecting CHS1 selected from clofentezine, hexythiazox, diflovidazin and etoxazole.

(11) Microbial disruptors of the insect gut membranes selected from *Bacillus thuringiensis* subspecies *israelensis, Bacillus sphaericus, Bacillus thuringiensis* subspecies *aizawai*, *Bacillus thuringiensis* subspecies *kurstaki*, *Bacillus thuringiensis* subspecies *tenebrionis,* and *B.t.* plant proteins selected from Cry1Ab, Cry1Ac, Cry1Fa, Cry1A.105, Cry2Ab, Vip3A, mCry3A, Cry3Ab, Cry3Bb and Cry34Ab1/35Ab1.

(12) Inhibitors of mitochondrial ATP synthase, preferably ATP disruptors selected from diafenthiuron, or organotin compounds selected from azocyclotin, cyhexatin and fenbutatin oxide, or propargite or tetradifon.

(13) Uncouplers of oxidative phosphorylation via disruption of the proton gradient selected from chlorfenapyr, DNOC and sulfluramid.

(14) Nicotinic acetylcholine receptor channel blockers selected from bensultap, cartap hydrochloride, thiocylam and thiosultap-sodium.

(15) Inhibitors of chitin biosynthesis affecting CHS1, preferably benzoylureas selected from bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1 selected from buprofezin.

(17) Moulting disruptors (in particular for Diptera, i.e. dipterans) selected from cyromazine.

(18) Ecdysone receptor agonists, preferably diacylhydrazines selected from chromafenozide, halofenozide, methoxyfenozide and tebufenozide.

(19) Octopamine receptor agonists selected from amitraz.

(20) Mitochondrial complex III electron transport inhibitors selected from hydramethylnone, acequinocyl, fluacrypyrim and bifenazate.

(21) Mitochondrial complex I electron transport inhibitors, preferably METI acaricides and insecticides selected from fenazaquin, fenpyroximate, pyrimidifen, pyridaben, tebufenpyrad and tolfenpyrad, or rotenone (Derris).

(22) Voltage-dependent sodium channel blockers, preferably oxadiazines selected from indoxacarb, or semicarbazones selected from metaflumizone.

(23) Inhibitors of acetyl CoA carboxylase, preferably tetronic and tetramic acid derivatives selected from spirodiclofen, spiromesifen, spiropidion and spirotetramat.

(24) Mitochondrial complex IV electron transport inhibitors, preferably phosphides selected from aluminium phosphide, calcium phosphide, phosphine and zinc phosphide, or cyanides selected from calcium cyanide, potassium cyanide and sodium cyanide.

(25) Mitochondrial complex II electron transport inhibitors, preferably *beta*-ketonitrile derivatives selected from cyenopyrafen and cyflumetofen, or carboxanilides selected from pyflubumide.

(28) Ryanodine receptor modulators, preferably diamides selected from chlorantraniliprole, cyantraniliprole, cyclaniliprole, flubendiamide and tetraniliprole.

(29) Chordotonal organ Modulators (with undefined target site) selected from flonicamid.

(30) GABA-gated chlorid channel allosteric modulators, preferably *meta*-diamides selected from broflanilide, or isoxazoles selected from fluxametamide.

(31) Baculoviruses, preferably Granuloviruses (GVs) selected from *Cydia pomonella* GV and *Thaumatotibia leucotreta* (GV), or Nucleopolyhedroviruses (NPVs) selected from *Anticarsia gemmatalis* MNPV, Flucypyriprole and *Helicoverpa armigera* NPV.

(32) Nicotinic acetylcholine receptor allosteric modulators (site II) selected from GS-omega/kappa HXTX-Hv1a peptide.

(33) Calcium-activated potassium channel KCa2 modulators, selected from acynonapyr.

(34) Mitochondrial complex III electron transfer inhibitors (non-Qo site), selected from flometoquin.

(UN) Compounds of unknown or uncertain MoA (Target protein responsible for biological activity is unknown,

or uncharacterized), selected from azadirachtin, benzoximate, bromopropylate, chinomethionat, dicofol, lime sulfur, mancozeb, pyridalyl, and sulfur.

(UNB) Bacterial agents (non-Bt) of unknown or uncertain MoA (Target protein responsible for biological activity is unknown or uncharacterized), selected from Burkholderia spp., and Wolbachia pipientis (Zap).

(UNE) Botanical essence including synthetic, extracts and unrefined oils with unknown or uncertain MoA (Target protein responsible for biological activity is unknown, or uncharacterized), selected from Chenopodium ambrosioides near ambrosioides extract and fatty acid monoesters with glycerol or propanediol neem oil.

(UNF) Fungal agents of unknown or uncertain MoA (Target protein responsible for biological activity is unknown, or uncharacterized), selected from Beauveria bassiana strains, Metarhizium anisopliae strain F52, and Paecilomyces fumosoroseus Apopka strain 97.

(UNM) Non-specific mechanical and physical disruptors (Target protein responsible for biological activity is unknown, or uncharacterized), selected from Diatomaceous earth, and mineral oil.

Further active compounds selected from Afoxolaner, Benclothiaz, Benzpyrimoxan, Chloroprallethrin, Cryolite, Cyclobutrifluram, Cycloxaprid, Cyetpyrafen, Cyhalodiamide, Cyproflanilide (CAS 2375110-88-4), Dicloromezotiaz, Dimpropyridaz, epsilon-Metofluthrin, epsilon-Momfluthrin, Fenmezoditiaz, Fluazaindolizine, Fluchlordiniliprole, Fluensulfone, Flufenerim, Flufenoxystrobin, Flufiprole, Fluhexafon, Fluopyram, Fluralaner, Fufenozide, Flupentiofenox, Guadipyr, Heptafluthrin, Imidaclothiz, Indazapyroxamet, Iprodione, Isocycloseram, kappa-Bifenthrin, kappa-Tefluthrin, Lotilaner, Meperfluthrin, Nicofluprole (CAS 1771741-86-6), Oxazosulfyl, Paichongding, Pyrifluquinazon, Pyriminostrobin, Sarolaner, Spidoxamat, Spirobudifen, Tetramethylfluthrin, Tetrachlorantraniliprole, Tigolaner, Tiorantraniliprole, Tioxazafen, Thiofluoximat, Trifluenfuronate (CAS 2074661-82-6), Tyclopyrazoflor, Iodomethane; furthermore preparations based on *Bacillus firmus* (1-1582, Votivo) and azadirachtin (BioNeem), and also the following compounds: 1-{2-fluoro-4-methyl-5-[(2,2,2-trifluoroethyl)sulphinyl]phenyl} -3-(trifluoromethyl)-1H-1,2,4-triazole-5-amine (known from WO2006/043635) (CAS 885026-50-6), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3-(4-chloro-2,6-dimethylphenyl)-8-methoxy-2-oxo-1,8-diazaspiro[4.5]dec-3-en-4-yl ethyl carbonate (known from EP2647626) (CAS 1440516-42-6), PF1364 (known from JP2010/018586) (CAS 1204776-60-2), (3*E*)-3-[1-[(6-chloro-3-pyridyl)methyl]-2-pyndylidene]-1,1,1-trifluoro-propan-2-one (known from WO2013/144213) (CAS 1461743-15-6), *N*-[3-(benzylcarbamoyl)-4-chlorophenyl]-1-methyl-3-(pentafluoroethyl)-4-(trifluoromethyl)-1*H*-pyrazole-5-carboxamide (known from WO2010/051926) (CAS 1226889-14-0), 5-bromo-4-chloro-*N*-[4-chloro-2-methyl-6-(methylcarbamoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-*N*-(*trans*-1-oxido-3-thietanyl)-benzamide and 4-[(5*S*)-5-(3,5-dichlorophenyl)-4,5 -dihydro-5-(trifluoromethyl)-3 -isoxazolyl] -2-methyl-*N*-(*cis*-1-oxido-3-thietanyl) benzamide (known from WO 2013/050317 A1) (CAS 1332628-83-7), *N*-[3-chloro-1-(3-pyridinyl)-1*H*-pyrazol-4-yl]-*N*-ethyl-3-[(3,3,3-trifluoropropyl)sulfinyl]-propanamide, (+)-*N*-[3-chloro-1-(3-pyridinyl)-1*H* pyrazol-4-yl]-*N*-ethyl-3-[(3,3,3-trifluoropropyl)sulfinyl]-propanamide and (-)-*N*-[3-chloro-1-(3-pyridinyl)-1*H*-pyrazol-4-yl]-*N*-ethyl-3-[(3,3,3-trifluoropropyl)sulfinyl]-propanamide (known from WO 2013/162715 A2, WO 2013/162716 A2, US 2014/0213448 A1) (CAS 1477923-37-7), 5-[[(2*E*)-3-chloro-2-propen-1-yl]amino]-1-[2,6-dichloro-4-(trifluoromethyl)phenyl]-4-[(trifluoromethyl)sulfinyl]-1*H*-pyrazole-3-carbonitrile (known from CN 101337937 A) (CAS 1105672-77-2), 3-bromo-*N*-[4-chloro-2-methyl-6-[(methylamino)thioxomethyl]phenyl]-1-(3-chloro-2-pyridinyl)-1*H*-pyrazole-5-carboxamide, (Liudaibenjiaxuanan, known from CN 103109816 A) (CAS 1232543-85-9); *N*-[4-chloro-2-[[(1,1-dimethylethyl)amino]carbonyl] -6-methylphenyl]-1-(3-chloro-2-pyridinyl)-3-(fluoromethoxy)-1*H*-pyrazole-5-carboxamide (known from WO 2012/034403 A1) (CAS 1268277-22-0), *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A) (CAS 1108184-52-6); (2*E*)- and 2(*Z*)-2-[2-(4-cyanophenyl)-1-[3-(trifluoromethyl)phenyl]ethylidene]-*N*-[4-(difluoromethoxy)phenyl]-hydrazinecarboxamide (known from CN 101715774 A) (CAS 1232543-85-9); 3-(2,2-dichloroethenyl)-2,2-dimethyl-4-(1*H*-benzimidazol-2-yl)phenyl-cyclopropanecarboxylic acid ester (known from CN 103524422 A) (CAS 1542271-46-4); (4a*S*)-7-chloro-2,5-dihydro-2-[[(methoxycarbonyl) [4-[(trifluoromethyl)thio]phenyl]amino]carbonyl]-indeno[1,2-*e*][1,3,4]oxadiazine-4a(3*H*)-carboxylic acid methyl ester (known from CN 102391261 A) (CAS 1370358-69-2); 6-deoxy-3-*O*-ethyl-2,4-di-*O*-methyl-, 1-[*N*-[4-[1-[4-(1,1,2,2,2-pentafluoroethoxy)phenyl]-1*H*-1,2,4-triazol-3-yl]phenyl]carbarnate]-α-L-mannopyranose (known from US 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1 ]octane (CAS 1253850-56-4), (8-*anti*)-8-(2-cyclopropylmethoxy-4-trifluoromethyl-phenoxy)-3-(6-trifluoromethyl-pyridazin-3-yl)-3-aza-bicyclo[3.2.1 ]octane (CAS 933798-27-7), (8-*syn*)-8-(2-cyclopropylmethoxy-4-trifluoromethyl-phenoxy)-3-(6-trifluoromethyl-pyridazin-3-yl)-3-aza-bicyclo[3.2.1]octane (known from WO 2007040280 A1, WO 2007040282 A1) (CAS 934001-66-8), N-[4-(aminothioxomethyl)-2-methyl-6-[(methylamino)carbonyl]phenyl]-3-bromo-1-(3-chloro-2-pyridinyl)-1*H*-pyrazole-5-carboxamide (known from CN 103265527 A)

(CAS 1452877-50-7), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2, 6-dimethylphenyl)-8-methoxy-1-methyl-2-oxo-1,8-diazaspiro[4.5]dec-3-en-4-yl-carbonic acid ethyl ester (known from WO 2010/066780 A1, WO 2011151146 A1) (CAS 1229023-00-0), *N*-[1-(2,6-difluorophenyl) -1H-pyrazol-3-yl]-2-(trifluoromethyl)benzamide (known from WO 2014/053450 A1) (CAS 1594624-87-9), N-[2-(2,6-difluorophenyl)-2H-1,2,3-triazol-4-yl]-2-(trifluoromethyl)benzamide (known from WO 2014/053450 A1) (CAS 1594637-65-6), N-[1-(3,5-difluoro-2-pyridinyl)-1H-pyrazol-3-yl]-2-(trifluoromethyl)benzamide (known from WO 2014/053450 A1) (CAS 1594626-19-3), *N*-[3-chloro-1-(3-pyridinyl)-1H-pyrazol-4-yl]-2-(methylsulfonyl)-propanamide (known from WO 2019/236274 A1) (CAS 2396747-83-2), N-[2-bromo-4-[1,2,2,2-tetrafluoro-1-(trifluoromethyl)ethyl]-6-(trifluoromethyl)phenyl]-2-fluoro-3-[(4-fluorobenzoyl)amino]-benzamide (known from WO 2019059412 A1) (CAS 1207977-87-4).

Examples of nematicides which could be mixed with the compound and the composition of the invention are:

(Group N-1) Acetylcholinesterase (AChE) inhibitors, preferably (N-1A) carbamates selected from aldicarb, benfuracarb, carbofuran, carbosulfan and thiodicarb, or (N-1B) organophosphates selected from cadusafos, ethoprofos, fenamiphos, fosthiazate, imicyafos, phorate and terbufos.

(Group N-2) Glutamate-gated chloride channel (GluCl) allosteric modulators, preferably avermectins selected from abamectin and emamectin benzoate.

(Group N-3) Mitochondrial complex II electron transport inhibitors, especially inhibitors of succinatecoenzyme Q reductase, preferably pyridinylmethyl-benzamides selected from fluopyram.

(Group N-4) Lipid synthesis/growth regulation modulators, especially inhibitors of acetyl CoA carboxylase, preferably tetronic and tetramic acid derivatives selected from spirotetramat.

(Group N-UN) Compounds of unknown or uncertain mode of action with various chemistries, selected from fluensulfone, fluazaindolizine, furfural, iprodione, tioxazafen and trifluenfuronate.

(Group N-UNX) Compounds of unknown or uncertain mode of action: Presumed multi-site inhibitors, preferably volatile sulphur generators selected from carbon disulphide and dimethyl disulphide (DMDS), or carbon disulphide liberators selected from sodium tetrathiocarbonate, or alkyl halides selected from methyl bromide and methyl iodide (iodomethane), or halogenated hydrocarbons selected from 1,2-dibromo-3-chloropropane (DBCP) and 1,3-dichloropropene, or chloropicrin, or methyl isothiocyanate generators selected from allyl isothiocyanate, diazomet, metam potassium and metam sodium.

(Group N-UNB) Bacterial agents (non-*Bt*) of unknown or uncertain mode of action, preferably bacterium or bacterium-derived, selected from *Burkholderia* spp., e.g. *rinojensis* A396, *Bacillus* spp., e.g. *firmus, licheniformis*, *amyloliquefaciens* or *subtilis, Pasteuria* spp., e.g. *penetrans* or *nishizawae, Pseudomonas* spp., e.g. *chlororaphis orfluorescens,* and *Streptomyces* spp., e.g. *lydicus, dicklowii* or *albogriseolus.*

(Group N-UNF) Fungal agents of unknown or uncertain mode of action, preferably fungus or fungusderived, selected from *Actinomyces* spp., e.g. *streptococcus, Arthrobotrys* spp., e.g. *oligospora, Aspergillus* spp., e.g. *niger, Muscodor* spp., e.g. *albus, Myrothecium* spp., e.g. *verrucaria, Paecilomyces* spp., e.g. l*ilacinus* (*Purpureocillium lilacinum*), *carneus* or *fumosoroseus, Pochonia* spp., e.g. *chlamydosporia,* and *Trichoderma* spp., e.g. *harzianum, virens, atroviride* or *viride.*

(Group N-UNE) Botanical or animal derived agents, including synthetic extracts and unrefined oils, with unknown or uncertain mode of action, preferably botanical or animal derived agents selected from azadirachtin, camellia seed cake, essential oils, garlic extract, pongamia oil, terpenes, e.g. carvacrol, geraniol and thymol, and *Quillaja saponaria* extract.

Examples of herbicides which could be mixed with the compound combination of the invention are:
acetochlor, acifluorfen, acifluorfen-methyl, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlorpotassium, aminocyclopyrachlor-methyl, aminopyralid, aminopyralid-dimethylammonium, aminopyralidtripromine, amitrole, ammoniumsulfamate, anilofos, asulam, asulam-potassium, asulam sodium, atrazine, azafenidin, azimsulfuron, beflubutamid, (S)-(-)-beflubutamid, beflubutamid-M, benazolin, benazolin-ethyl, benazolin-dimethylammonium, benazolin-potassium, benfluralin, benfuresate,

bensulfuron, bensulfuronmethyl, bensulide, bentazone, bentazone-sodium, benzobicyclon, benzofenap, bicyclopyrone, bifenox, bilanafos, bilanafos-sodium, bipyrazone, bispyribac, bispyribac-sodium, bixlozone, bromacil, bromacillithium, bromacil-sodium, bromobutide, bromofenoxim, bromoxynil, bromoxynil-butyrate, -potassium, - heptanoate und -octanoate, busoxinone, butachlor, butafenacil, butamifos, butenachlor, butralin, butroxydim, butylate, cafenstrole, cambendichlor, carbetamide, carfentrazone, carfentrazone-ethyl, chloramben, chloramben-ammonium, chloramben-diolamine, chlroamben-methyl, chlorambenmethylammonium, chloramben-sodium, chlorbromuron, chlorfenac, chlorfenac-ammonium, chlorfenacsodium, chlorfenprop, chlorfenprop-methyl, chlorflurenol, chlorflurenol-methyl, chloridazon, chlorimuron, chlorimuron-ethyl, chlorophthalim, chlorotoluron, chlorsulfuron, chlorthal, chlorthal-dimethyl, chlorthalmonomethyl, cinidon, cinidon-ethyl, cinmethylin, exo-(+)-cinmethylin, i.e. (1R,2S,4S)-4-isopropyl-1-methyl-2-[(2-methylbenzyl)oxy]-7-oxabicyclo[2.2.1]heptane, exo-(-)-cinmethylin, i.e. (1R,2S,4S)-4-isopropyl-1-methyl-2-[(2-methylbenzyl)oxy]-7-oxabicyclo[2.2.1]heptane, cinosulfuron, clacyfos, clethodim, clodinafop, clodinafop-ethyl, clodinafop-propargyl, clomazone, clomeprop, clopyralid, clopyralid-methyl, clopyralid-olamine, clopyralid-potassium, clopyralid-tripomine, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (including thea mmonium, butotyl, -butyl, choline, diethylammonium, -dimethylammonium, -diolamine, -doboxyl, - dodecylammonium, etexyl, ethyl, 2-ethylhexyl, heptylammonium, isobutyl, isooctyl, isopropyl, isopropylammonium, lithium, meptyl, methyl, potassium, tetradecylammonium, triethylammonium, triisopropanolammonium, tripromine and trolamine salt thereof), 2,4-DB, 2,4-DB-butyl, - dimethylammonium, isooctyl, -potassium und -sodium, daimuron (dymron), dalapon, dalapon-calcium, dalapon-magnesium, dalapon-sodium, dazomet, dazomet-sodium, n-decanol, 7-deoxy-D-sedoheptulose, desmedipham, detosyl-pyrazolate (DTP), dicamba and its salts, e. g. dicamba-biproamine, dicamba-N,N-Bis(3-aminopropyl)methylamine, dicamba-butotyl, dicamba-choline, dicamba-diglycolamine, dicambadimethylammonium, dicamba-diethanolamine ammonium, dicamba-diethylammonium, dicambaisopropylammonium, dicamba-methyl, dicamba-monoethanolamine, dicamba-olamine, dicambapotassium, dicamba-sodium, dicamba-triethanolamine, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorpropbutotyl, dichlorprop-dimethylammonium, dichhlorprop-etexyl, dichlorprop-ethylammonium, dichlorpropisoctyl, dichlorprop-methyl, dichlorprop-potassium, dichlorprop-sodium, dichlorprop-P, dichlorprop-P-dimethylammonium, dichlorprop-P-etexyl, dichlorprop-P-potassium, dichlorprop-sodium, diclofop, diclofop-methyl, diclofop-P, diclofop-P-methyl, diclosulam, difenzoquat, difenzoquat-metilsulfate, diflufenican, diflufenzopyr, diflufenzopyr-sodium, dimefuron, dimepiperate, dimesulfazet, dimethachlor, dimethametryn, dimethenamid, dimethenamid-P, dimetrasulfuron, dinitramine, dinoterb, dinoterb-acetate, diphenamid, diquat, diquat-dibromid, diquat-dichloride, dithiopyr, diuron, DNOC, DNOC-ammonium, DNOC-potassium, DNOC-sodium, endothal, endothal-diammonium, endothal-dipotassium, endothaldisodium, Epyrifenacil (S-3100), EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5 -fluor-2-(trifluormethyl)-1H-benzimidazol-4-yl]-1-methyl-6-(trifluormethyl)pyrimidin-2,4(1H,3H)-dione, fenoxaprop, fenoxaprop-P, fenoxaprop-ethyl, fenoxaprop-P-ethyl, fenoxasulfone, fenpyrazone, fenquinotrione, fentrazamide, flamprop, flamprop-isoproyl, flamprop-methyl, flamprop-M-isopropyl, flamprop-M-methyl, flazasulfuron, florasulam, florpyrauxifen, florpyrauxifen-benzyl, fluazifop, fluazifop-butyl, fluazifop-methyl, fluazifop-P, fluazifop-P-butyl, flucarbazone, flucarbazone-sodium, flucetosulfuron, fluchloralin, flufenacet, flufenpyr, flufenpyr-ethyl, flumetsulam, flumiclorac, flumicloracpentyl, flumioxazin, fluometuron, flurenol, flurenol-butyl, -dimethylammonium und -methyl, fluoroglycofen, fluoroglycofen-ethyl, flupropanate, flupropanate-sdium, flupyrsulfuron, flupyrsulfuron-methyl, flupyrsulfuron-methyl-sodium, fluridone, flurochloridone, fluroxypyr, fluroxypyr-butometyl, fluroxypyr-meptyl, flurtamone, fluthiacet, fluthiacet-methyl, fomesafen, fomesafen-sodium, foramsulfuron, foramsulfuron sodium salt, fosamine, fosamine-ammonium, glufosinate, glufosinate-ammonium, glufosinate-sodium, L-glufosinate-ammonium, L-glufosiante-sodium, glufosinate-P-sodium, glufosinate-P-ammonium, glyphosate, glyphosate-ammonium, -isopropylammonium, -diammonium, - dimethylammonium, -potassium, -sodium, sesquisodium and -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, haloxifop-sodium, hexazinone, HNPC-A8169, i.e. prop-2-yn-1-yl (2S)-2-{3-[(5-tert-butylpyridin-2-yl)oxy]phenoxy}propanoate, HW-02, i.e. 1-(Dimethoxyphosphoryl)-ethyl-(2,4-dichlorphenoxy)acetat, hydantocidin, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazaquin.methyl, imazethapyr, imazethapyr-immonium, imazosulfuron, indanofan, indaziflam, iodosulfuron, iodosulfuron-methyl, iodosulfuron-methyl-sodium, ioxynil, ioxynil-lithium, -octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, ketospiradox-potassium, lactofen, lancotrione, lenacil, linuron, MCPA, MCPA-butotyl, -butyl, -dimethylammonium, -diolamine, -2-ethylhexyl, -ethyl, -isobutyl, isoctyl, -isopropyl, -isopropylammonium, -methyl, olamine, -potassium, -sodium and -trolamine, MCPB, MCPB-methyl, -ethyl und -sodium, mecoprop, mecoprop-butotyl, mecoprop- demethylammonium, mecoprop-diolamine, mecoprop-etexyl, mecopropethadyl, mecoprop-isoctyl, mecoprop-methyl, mecoprop-potassium, mecoprop-sodium, and mecoproptrolamine, mecoprop-P, mecoprop-P-butotyl, -dimethylammonium, -2-ethylhexyl and -potassium, mefenacet, mefluidide, mefluidide-diolamine, mefluidide-potassium, mesosulfuron, mesosulfuron-methyl, mesosulfuron sodium salt, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuronmethyl, molinate, monolinuron, monosulfuron, monosulfuron-methyl, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, NC-656, i.e. 3-[(isopropylsulfonyl)methyl]-N-(5-methyl-1,3,4-oxadiazol-2-yl)-5-(trifluoromethyl)[1,2,4]triazolo[4,3-a]pyridine-8-carboxamide, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefone, oxyfluorfen, paraquat, paraquat-dichloride, paraquat-dimethylsulfate, pebulate, pendimethalin, penoxsulam, pentachlorphenol, pentoxazone, pethoxamid, petroleum oils, phenmedipham, phenmedipham-ethyl, picloram, picloramdimethylammonium, picloram-etexyl, picloram-isoctyl, picloram-methyl, picloram-olamine, piclorampotassium, picloram-triethylammonium, picloram-tripromine, picloram-trolamine, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuronethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinclorac-dimethylammonium, quincloracmethyl, quinmerac, quinoclamine, quizalofop, quizalofop-ethyl, quizalofop-P, quizalofop-P-ethyl, quizalofop-P-tefuryl, QYM201, i.e. 1-{2-chloro-3-[(3-cyclopropyl-5-hydroxy-1-methyl-1H-pyrazol-4-yl)carbonyl]-6-(trifluoromethyl)phenyl}piperidin-2-one, rimsulfuron, saflufenacil, sethoxydim, siduron, simazine, simetryn, SL-261, sulcotrione, sulfentrazone, sulfometuron, sulfometuron-methyl, sulfosulfuron,, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (trichloro acetic acid) and its salts, e.g. TCAammonium, TCA-calcium, TCA-ethyl, TCA-magnesium, TCA-sodium, tebuthiuron, tefuryltrione, tembotrione, tepraloxydim, terbacil, terbucarb, terbumeton, terbuthylazine, terbutryn, tetflupyrolimet, thaxtomin, thenylchlor, thiazopyr, thiencarbazone, thiencarbazone-methyl, thifensulfuron, thifensulfuronmethyl, thiobencarb, tiafenacil, tolpyralate, topramezone, tralkoxydim, triafamone, tri-allate, triasulfuron, triaziflam, tribenuron, tribenuron-methyl, triclopyr, triclopyr-butotyl, triclopyr-choline, triclopyr-ethyl, triclopyr-triethylammonium, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, 3-(2-chloro-4-fluoro-5-(3-methyl-2,6-dioxo-4-trifluoromethyl-3,6-dihydropyrimidin-1 (2H)-yl)phenyl)-5-methyl-4,5-dihydroisoxazole-5-carboxylic acid ethyl ester, ethyl-[(3-{2-chlor-4-fluor-5-[3-methyl-2,6-dioxo-4-(trifluormethyl)-3,6-dihydropyrimidin-1(2H)-yl]phenoxy}pyridin-2-yl)oxy]acetate, 3-chloro-2-[3-(difluoromethyl)isoxazolyl-5-yl]phenyl-5-chloropyrimidin-2-yl ether, 2-(3,4-dimethoxyphenyl)-4-[(2-hydroxy-6-oxocyclohex-1-en-1-yl)carbonyl] -6-methylpyridazine-3(2*H*)-one, 2-({2-[(2-methoxyethoxy)methyl] -6-methylpyridin-3 - yl}carbonyl)cyclohexane-1,3-dione, (5-hydroxy-1-methyl-1H-pyrazol-4-yl)(3,3,4-trimethyl-1,1-dioxido-2,3-dihydro-1-benzothiophen-5-yl)methanone, 1-methyl-4-[(3,3,4-trimethyl-1,1-dioxido-2,3-dihydro-1-benzothiophen-5-yl)carbonyl]-1H-pyrazol-5-yl propane-1-sulfonate, 4-{2-chloro-3-[(3,5-dimethyl-1H-pyrazol-1-yl)methyl]-4-(methylsulfonyl)benzoyl}-1-methyl-1H-pyrazol-5-yl-1,3-dimethyl-1H-pyrazole-4-carboxylate; cyanomethyl 4-amino-3-chloro-5-fluoro-6-(7-fluoro-1H-indol-6-yl)pyridine-2-carboxylate, prop-2-yn-1-yl 4-amino-3-chloro-5-fluoro-6-(7-fluoro-1H-indol-6-yl)pyridine-2-carboxylate, methyl 4-amino-3-chloro-5-fluoro-6-(7-fluoro-1H-indol-6-yl)pyridine-2-carboxylate, 4-amino-3-chloro-5-fluoro-6-(7-fluoro-1H-indol-6-yl)pyridine-2-carboxylic acid, benzyl 4-amino-3-chloro-5-fluoro-6-(7-fluoro-1H-indol-6-yl)pyridine-2-carboxylate, ethyl 4-amino-3-chloro-5-fluoro-6-(7-fluoro-1H-indol-6-yl)pyridine-2-carboxylate, methyl 4-amino-3-chloro-5-fluoro-6-(7-fluoro-1-isobutyryl-1H-indol-6-yl)pyridine-2-carboxylate, methyl 6-(1-acetyl-7-fluoro-1H-indol-6-yl)-4-amino-3-chloro-5-fluoropyridine-2-carboxylate, methyl 4-amino-3-chloro-6-[1-(2,2-dimethylpropanoyl)-7-fluoro-1H-indol-6-yl]-5-fluoropyridine-2-carboxylate, methyl 4-amino-3-chloro-5-fluoro-6-[7-fluoro-1-(methoxyacetyl)-1H-indol-6-yl]pyridine-2-carboxylate, potassium 4-amino-3-chloro-5-fluoro-6-(7-fluoro-1H-indol-6-yl)pyridine-2-carboxylate, sodium 4-amino-3-chloro-5-fluoro-6-(7-fluoro-1H-indol-6-yl)pyridine-2-carboxylate, butyl 4-amino-3-chloro-5-fluoro-6-(7-fluoro-1H-indol-6-yl)pyridine-2-carboxylate, 4-hydroxy-1-methyl-3-[4-(trifluoromethyl)pyridin-2-yl]imidazolidin-2-one, 3-(5-tert-butyl-1,2-oxazol-3-yl)-4-hydroxy-1-methylimidazolidin-2-one, 3-[5-chloro-4-(trifluormethyl)pyridin-2-yl]-4-hydroxy-1-methylimidazolidin-2-one, 4-hydroxy-1-methoxy-5-methyl-3-[4-(trifluormethyl)pyridin-2-yl]imidazolidin-2-one, 6-[(2-hydroxy-6-oxocyclohex-1-en-1-yl)carbonyl]-1,5-dimethyl-3-(2-methylphenyl)quinazolin-2,4(1H,3H)-dione, 3-(2,6-dimethylphenyl)-6-[(2-hydroxy-6-oxocyclohex-1-en-1-yl)carbonyl]-1-methylquinazolin-2,4(1H,3H)-dione, 2-[2-chloro-4-(methylsulfonyl)-3-(morpholin-4-ylmethyl)benzoyl]-3-hydroxycyclohex-2-en-1-one, 1-(2-carboxyethyl)-4-(pyrimidin-2-yl)pyridazin-1-ium salt (with anions such as chloride, acetate or trifluoroacetate), 1-(2-carboxyethyl)-4-(pyridazin-3-yl)pyridazin-1-ium salt (with anions such as chloride, acetate or trifluoroacetate), 4-(pyrimidin-2-yl)-1-(2-sulfoethyl)pyridazin-1-ium salt (with anions such as chloride, acetate or trifluoroacetate), 4-(pyndazin-3-yl)-1-(2-sulfoethyl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate).

Examples of plant growth regulators which could be mixed with the compound combination of the invention are: Abscisic acid and related analogues [e.g. (2Z,4E)-5-[6-Ethynyl-1-hydroxy-2,6-dimethyl-4-oxocyclohex-2-en-1-yl] -3 -methylpenta-2,4-dienoic acid, methyl-(2Z,4E)-5-[6-ethynyl-1-hydroxy-2,6-dimethyl-4-oxocyclohex-2-en-1-yl]-3-methylpenta-2,4-dienoate, (2Z,4E)-3-ethyl-5-(1-hydroxy-2,6,6-trimethyl-4-oxocyclohex-2-en-1-yl)penta-2,4-dienoic acid, (2E,4E)-5-(1-hydroxy-2,6,6-trimethyl-4-oxocyclohex-2-en-1-yl)-3-(trifluoromethyl)penta-2,4-dienoic acid, methyl (2E,4E)-5-(1-hydroxy-2,6,6-trimethyl-4-oxocyclohex-2-en-1-yl)-3-(trifluoromethyl)penta-2,4-dienoate, (2Z,4E)-5-(2-hydroxy-1,3-dimethyl-5-oxobicyclo[4.1.0]hept-3-en-2-yl)-3-methylpenta-2,4-dienoic acid], acibenzolar, acibenzolar-S-methyl, S-adenosylhomocysteine, allantoin, 2-Aminoethoxyvinylglycine (AVG), aminooxyacetic acid and related esters [e.g. (Isopropylidene)-aminooxyacetic acid-2-(methoxy)-2-oxoethylester, (Isopropylidene)-aminooxyacetic acid-2-(hexyloxy)-2-oxoethylester, (Cyclohexylidene)-aminooxyacetic acid-2-(isopropyloxy)-2-oxoethylester], 1-aminocycloprop-1-yl carboxylic acid and derivatives thereof, e.g. disclosed in DE3335514, EP30287, DE2906507 or US5123951, 5-aminolevulinic acid, ancymidol, 6-benzylaminopurine, bikinin, brassinolide, brassinolide-ethyl, L-canaline, catechin and catechines (e.g. (2S,3R)-2-(3,4-Dihydroxyphenyl)-3,4-dihydro-2H-chromen-3,5,7-triol), chitooligosaccharides (CO; COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$, CAS No. 9012-76-4]), chitinous compounds, chlormequat chloride, cloprop, cyclanilide, 3-(Cycloprop-1-enyl)propionic acid, 1-[2-(4-cyano-3,5-dicyclopropylphenyl)acetamido]cyclohexanecarboxylic acid, 1-[2-(4-cyano-3-cyclopropylphenyl)acetamido]cyclohexanecarboxylic acid, daminozide, dazomet, dazomet-sodium, n-decanol, dikegulac, dikegulac-sodium, endothal, endothal-dipotassium, -disodium, and mono(N,N-dimethylalkylammonium), ethephon, flumetralin, flurenol, flurenol-butyl, flurenol-methyl, flurprimidol, forchlorfenuron, gibberellic acid, inabenfide, indol-3-acetic acid (IAA), 4-indol-3-ylbutyric acid, isoprothiolane, probenazole, jasmonic acid, Jasmonic acid or derivatives thereof (e.g. jasmonic acid methyl ester, jasmonic acid ethyl ester), lipo-chitooligosaccharides (LCO, sometimes referred to as symbiotic nodulation (Nod) signals (or Nod factors) or as Myc factors, consist of an oligosaccharide backbone of $\beta$ -1,4-linked *N*-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues), linoleic acid or derivatives thereof, linolenic acid or derivatives thereof, maleic hydrazide, mepiquat chloride, mepiquat pentaborate, 1-methylcyclopropene, 3-methylcyclopropene, 1-ethylcyclopropene, 1-n-propylcyclopropene, 1-cyclopropenylmethanol, methoxyvinylglycin (MVG), 3'-methyl abscisic acid, 1-(4-methylphenyl)-N-(2-oxo-1-propyl-1,2,3,4-tetrahydroquinolin-6-yl)methanesulfonamide and related substituted tetrahydroquinolin-6-yl)methanesulfonamides, (3E,3aR,8bS)-3-({[(2R)-4-Methyl-5-oxo-2,5-dihydrofuran-2-yl]oxy}methylen)-3,3a,4,8b-tetrahydro-2H-indeno[1,2-b]furan-2-one and related lactones as outlined in EP2248421, 2-(1-naphthyl)acetamide, 1-naphthylacetic acid, 2- naphthyloxyacetic acid, nitrophenolate-mixture, 4-Oxo-4[(2-phenylethyl)amino]butyric acid, paclobutrazol, 4-phenylbutyric acid and its related salts (e.g. sodium-4-phenylbutanoate, potassium-4-phenylbutanoate), phenylalanine, N-phenylphthalamic acid, prohexadione, prohexadione-calcium, putrescine, prohydrojasmon, rhizobitoxin, salicylic acid, salicylic acid methyl ester, sarcosine, sodium cycloprop-1-en-1-yl acetate, sodium cycloprop-2-en-1-yl acetate, sodium-3-(cycloprop-2-en-1-yl)propanoate, sodium-3-(cycloprop-1-en-1-yl) propanoate, sidefungin, spermidine, spermine, strigolactone, tecnazene, thidiazuron, triacontanol, trinexapac, trinexapac-ethyl, tryptophan, tsitodef, uniconazole, uniconazole-P, 2-fluoro-N-(3-methoxyphenyl)-*9H*-purin-6-amine.

Examples of safeners which could be mixed with the compound and the composition of the invention are:

S1) Compounds from the group of heterocyclic carboxylic acid derivatives:

S1$^a$) Compounds of the dichlorophenylpyrazoline-3-carboxylic acid type (S1$^a$), preferably compounds such as 1-(2,4-dichlorophenyl)-5-(ethoxycarbonyl)-5-methyl-2-pyrazoline-3-carboxylic acid, ethyl 1-(2,4-dichlorophenyl)-5-(ethoxycarbonyl)-5-methyl-2-pyrazoline-3-carboxylate (S1-1) ("mefenpyr-diethyl"), and related compounds as described in WO-A-91/07874;

S1$^b$) Derivatives of dichlorophenylpyrazolecarboxylic acid (S1$^b$), preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4) and related compounds as described in EP-A-333131 131 and EP-A-269806;

S1$^c$) Derivatives of 1,5-diphenylpyrazole-3-carboxylic acid (S1$^c$), preferably compounds such as ethyl 1-(2,4-dichlorophenyl)-5-phenylpyrazole-3-carboxylate (S1-5), methyl 1-(2-chlorophenyl)-5-phenylpyrazole-3-carboxylate (S1-6) and related compounds as described, for example, in EP-A-268554;

S1[d]) Compounds of the triazolecarboxylic acid type (S1[d]), preferably compounds such as fenchlorazole (ethyl ester), i.e. ethyl 1-(2,4-dichlorophenyl)-5-trichloromethyl-1H-1,2,4-triazole-3-carboxylate (S1-7), and related compounds, as described in EP-A-174562 and EP-A-346620;

S1[e]) Compounds of the 5-benzyl- or 5-phenyl-2-isoxazoline-3-carboxylic acid or of the 5,5-diphenyl-2-isoxazoline-3-carboxylic acid type (S1[e]), preferably compounds such as ethyl 5-(2,4-dichlorobenzyl)-2-isoxazoline-3-carboxylate (S1-8) or ethyl 5-phenyl-2-isoxazoline-3-carboxylate (S1-9) and related compounds as described in WO-A-91/08202, or 5,5-diphenyl-2-isoxazolinecarboxylic acid (S1-10) or ethyl 5,5-diphenyl-2-isoxazoline-3-carboxylate (S1-11) ("isoxadifen-ethyl") or n-propyl 5,5-diphenyl-2-isoxazoline-3-carboxylate (S1-12) or ethyl 5-(4-fluorophenyl)-5-phenyl-2-isoxazoline-3-carboxylate (S1-13), as described in patent application WO-A-95/07897.

S2) Compounds from the group of the 8-quinolinoxy derivatives (S2):

S2[a]) Compounds of the 8-quinolinoxyacetic acid type (S2[a]), preferably 1-methylhexyl (5-chloro-8-quinolinoxy)acetate ("cloquintocet-mexyl") (S2-1), 1,3-dimethylbut-1-yl (5-chloro-8-quinolinoxy)acetate (S2-2), 4-allyloxybutyl (5-chloro-8-quinolinoxy)acetate (S2-3), 1-allyloxyprop-2-yl (5-chloro-8-quinolinoxy)acetate (S2-4), ethyl (5-chloro-8-quinolinoxy)acetate (S2-5), methyl 5-chloro-8-quinolinoxyacetate (S2-6), allyl (5-chloro-8-quinolinoxy)acetate (S2-7), 2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86750, EP-A-94349 and EP-A-191736 or EP-A-0 492 366, and also (5-chloro-8-quinolinoxy)acetic acid (S2-10), hydrates and salts thereof, for example the lithium, sodium, potassium, calcium, magnesium, aluminum, iron, ammonium, quaternary ammonium, sulfonium or phosphonium salts thereof, as described in WO-A-2002/34048;

S2[b]) Compounds of the (5-chloro-8-quinolinoxy)malonic acid type (S2[b]), preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds, as described in EP-A-0 582 198.

S3) Active compounds of the dichloroacetamide type (S3), which are frequently used as pre-emergence safeners (soil-acting safeners), for example "dichlormid" (N,N-diallyl-2,2-dichloroacetamide) (S3-1), "R-29148" (3-dichloroacetyl-2,2,5-trimethyl-1,3-oxazolidine) from Stauffer (S3-2), "R-28725" (3-dichloroacetyl-2,2-dimethyl-1,3-oxazolidine) from Stauffer (S3-3), "benoxacor" (4-dichloroacetyl-3,4-dihydro-3-methyl-2H-1,4-benzoxazine) (S3-4), "PPG-1292" (N-allyl-N-[(1,3-dioxolan-2-yl)methyl]dichloroacetamide) from PPG Industries (S3-5), "DKA-24" (N-allyl-N-[(allylaminocarbonyl)methyl]dichloroacetamide) from Sagro-Chem (S3-6), "AD-67" or "MON 4660" (3-dichloroacetyl-1-oxa-3-azaspiro[4.5]decane) from Nitrokemia or Monsanto (S3-7), "TI-35" (1-dichloroacetylazepane) from TRI-Chemical RT (S3-8), "Diclonon" (Dicyclonon) or "BAS145138" or "LAB145138" (S3-9) ((RS)-1-dichloroacetyl-3,3,8a-trimethylperhydropyrrolo[1,2-a]pyrimidin-6-one) from BASF, "furilazole" or "MON 13900" ((RS)-3-dichloroacetyl-5-(2-furyl)-2,2-dimethyloxazolidine) (S3-10), and the (R) isomer thereof (S3-11).

S4) Compounds from the class of the acylsulfonamides (S4):

S4[a]) N-Acylsulfonamides and salts thereof, as described in WO-A-97/45016,

S4[b]) Compounds of the 4-(benzoylsulfamoyl)benzamide type and salts thereof, as described in WO-A-99/16744,

S4[c]) Compounds from the class of the benzoylsulfamoylphenylureas as described in EP-A-365484,

for example 1-[4-(N-2-methoxybenzoylsulfamoyl)phenyl]-3-methylurea, 1-[4-(N-2-methoxybenzoyl-sulfamoyl)phenyl]-3,3-dimethylurea and 1-[4-(N-4,5-dimethylbenzoylsulfamoyl)phenyl]-3-methylurea;

S4[d]) Compounds of the N-phenylsulfonylterephthalamide type and salts thereof, which are known, for example, from CN 101838227.

S5) Active compounds from the class of the hydroxyaromatics and the aromatic-aliphatic carboxylic acid derivatives (S5), for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicyclic acid, 2-hydroxycinnamic acid, 2,4-dichlorocinnamic acid, as described in

WO-A-2004/084631, WO-A-2005/015994, WO-A-2005/016001.

S6) Active compounds from the class of the 1,2-dihydroquinoxalin-2-ones (S6), for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylarninoethyl)-3-(2-thienyl)-1,2-dihydroquinoxalin-2-one, as described in WO-A-2005/112630.

S7) Compounds from the class of the diphenylmethoxyacetic acid derivatives (S7), e.g. methyl diphenylmethoxyacetate (CAS Reg. No. 41858-19-9) (S7-1), ethyl diphenylmethoxyacetate or diphenylmethoxyacetic acid, as described in WO-A-98/38856.

S8) 2-fluoroacrylic acid derivatives as described in WO-A-98/27049.

S9) active compounds from the class of the 3-(5-tetrazolylcarbonyl)-2-quinolones (S9), for example 1,2-dihydro-4-hydroxy-1-ethyl-3-(5-tetrazolylcarbonyl)-2-quinolone (CAS Reg. No. 219479-18-2), 1,2-dihydro-4-hydroxy-1-methyl-3-(5-tetrazolylcarbonyl)-2-quinolone (CAS Reg. No. 95855-00-8), as described in WO-A-199/000020;

S10) N-acylsulfonamides as described in WO-A-2007/023719 and WO-A-2007/023764.

S11) Active compounds of the oxyimino compound type (S11), which are known as seed-dressing agents, for example

"oxabetrinil" ((Z)-1,3-dioxolan-2-ylmethoxyimino(phenyl)acetonitrile) (S11-1), which is known as a seed-dressing safener for millet/sorghum against metolachlor damage,
"fluxofenim" (1-(4-chlorophenyl)-2,2,2-trifluoro-1-ethanone O-(1,3-dioxolan-2-ylmethyl)oxime) (S11-2), which is known as a seed-dressing safener for millet/sorghum against metolachlor damage, and "cyometrinil" or "CGA-43089" ((Z)-cyanomethoxyimino(phenyl)acetonitrile) (S11-3), which is known as a seed-dressing safener for millet/sorghum against metolachlor damage.

S12) active compounds from the class of the isothiochromanones (S12), for example methyl [(3-oxo-1H-2-benzothiopyran-4(3H)-ylidene)methoxy]acetate (CAS Reg. No. 205121-04-6) (S12-1) and related compounds from WO-A-1998/13361.

S13) One or more compounds from group (S13):

"naphthalic anhydride" (1,8-naphthalenedicarboxylic anhydride) (S13-1), which is known as a seed-dressing safener for corn against thiocarbamate herbicide damage, "fenclorim" (4,6-dichloro-2-phenylpyrimidine) (S13-2), which is known as a safener for pretilachlor in sown rice, "flurazole" (benzyl 2-chloro-4-trifluoromethyl-1,3-thiazole-5-carboxylate) (S13-3), which is known as a seed-dressing safener for millet/sorghum against alachlor and metolachlor damage, "CL 304415" (CAS Reg. No. 31541-57-8) (4-carboxy-3,4-dihydro-2H-1-benzopyran-4-acetic acid) (S13-4) from American Cyanamid, which is known as a safener for corn against damage by imidazolinones, "MG 191" (CAS Reg. No. 96420-72-3) (2-dichloromethyl-2-methyl-1,3-dioxolane) (S13-5) from Nitrokemia, which is known as a safener for corn, "MG 838" (CAS Reg. No. 133993-74-5) (2-propenyl 1-oxa-4-azaspiro[4.5]decane-4-carbodithioate) (S13-6) from Nitrokemia, "disulfoton" (O,O-diethyl S-2-ethylthioethyl phosphorodithioate) (S13-7),
"dietholate" (O,O-diethyl O-phenyl phosphorothioate) (S13-8), "mephenate" (4-chlorophenyl methylcarbamate) (S13-9).

S14) active compounds which, in addition to herbicidal action against weeds, also have safener action on crop plants such as rice, for example "dimepiperate" or "MY-93" (*S*-1-methyl 1-phenylethylpiperidine-1-carbothioate), which is known as a safener for rice against damage by the herbicide molinate, "daimuron" or "SK 23" (1-(1-methyl-1-phenylethyl)-3-p-tolylurea), which is known as safener for rice against imazosulfuron herbicide damage, "cumyluron" = "JC-940" (3-(2-chlorophenylmethyl)-1-(1-methyl-1-phenylethyl)urea, see JP-A-60087254), which is known as safener for rice against damage by some herbicides, "methoxyphenone" or "NK 049" (3,3'-dimethyl-4-methoxybenzophenone), which is known as a safener for rice against damage by some herbicides, "CSB" (1-bromo-4-(chloromethylsulfonyl)benzene) from Kumiai, (CAS Reg. No. 54091-06-4), which is known as a safener against damage by some herbicides in rice.

S15) Pyridine-2-oxy-3-carbonamides as described in WO-A-2008/131861 and WO-A-2008/131860.

S16) Active compounds which are used primarily as herbicides but also have safener action on crop plants, for example (2,4-dichlorophenoxy)acetic acid (2,4-D), (4-chlorophenoxy)acetic acid, (R,S)-2-(4-chloro-o-tolyloxy)propionic acid (mecoprop), 4-(2,4-dichlorophenoxy)butyric acid (2,4-DB), (4-chloro-o-tolyloxy)acetic acid (MCPA), 4-(4-chloro-o-tolyloxy)butyric acid, 4-(4-chlorophenoxy)butyric acid, 3,6-dichloro-2-methoxybenzoic acid (dicamba), 1-(ethoxycarbonyl)ethyl 3,6-dichloro-2-methoxybenzoate (lactidichlor-ethyl) .

Examples of nitrification inhibitors wich could be mixed with the compound combination of the invention are selected from the group consisting of 2-(3,4-dimethyl-1H-pyrazol-1-yl)succinic acid, 2-(4,5-dimethyl-1H-pyrazol-1-yl)succinic acid, 3,4-dimethyl pyrazolium glycolate, 3,4-dimethyl pyrazolium citrate, 3,4-dimethyl pyrazolium lactate, 3,4-dimethyl pyrazolium mandelate, 1 ,2,4-triazole, 4-Chloro-3-methylpyrazole, N-((3(5)-methyl-1H-pyrazole-1-yl)methyl)acetamide, N-((3(5)-methyl-1 H-pyrazole-1-yl)methyl)formamide, N-((3(5),4-dimethylpyrazole-1-yl)methyl)formamide, N-((4-chloro-3(5)-methylpyrazole-1-yl)methyl)formamide; reaction adducts of dicyandiamide, urea and formaldehyde, triazonylformaldehyde-dicyandiamide adducts, 2-cyano-1-((4-oxo-1,3,5-triazinan-1-yl)methyl)guanidine, 1-((2-cyanoguanidino)methyl)urea, 2-cyano-1-((2-cyanoguanidino)methyl)guanidine, 2-chloro-6-(trichloromethyl)-pyridine (nitrapyrin or N-serve), dicyandiamide, 3,4-dimethyl pyrazole phosphate, 4,5-dimethyl pyrazole phosphate, 3,4-dimethylpyrazole, 4,5-dimethyl pyrazole, ammoniumthiosulfate, neem, products based on ingredients of neem, linoleic acid, alpha-linolenic acid, methyl p-coumarate, methyl ferulate, methyl 3-(4-hydroxyphenyl) propionate, karanjin, brachialacton, p-benzoquinone sorgoleone, 4-amino-1,2,4-triazole hydrochloride, 1-amido-2-thiourea, 2-amino-4-chloro-6-methylpyrimidine, 2-mercaptobenzothiazole, 5-ethoxy-3-trichloromethyl-1,2,4-thiodiazole (terrazole, etridiazole), 2-sulfanilamidothiazole, 3-methylpyrazol, 1,2,4-triazol thiourea, cyan amide, melamine, zeolite powder, catechol, benzoquinone, sodium tetraborate, allylthiourea, chlorate salts, and zinc sulfate.

The compound combination of the invention may be combined with one or more agriculturally beneficial agents.

Examples of agriculturally beneficial agents include biostimulants, plant growth regulators, plant signal molecules, growth enhancers, microbial stimulating molecules, biomolecules, soil amendments, nutrients, plant nutrient enhancers, etc., such as lipo-chitooligosaccharides (LCO), chitooligosaccharides (CO), chitinous compounds, flavonoids, jasmonic acid or derivatives thereof (e.g., jasmonates), cytokinins, auxins, gibberellins, absiscic acid, ethylene, brassinosteroids, salicylates, macro- and micro-nutrients, linoleic acid or derivatives thereof, linolenic acid or derivatives thereof, karrikins, and beneficial microorganisms (e.g., *Rhizobium* spp., *Bradyrhizobium* spp., *Sinorhizobium* spp., *Azorhizobium* spp., *Glomus* spp., *Gigaspora* spp., *Hymenoscyphous* spp., *Oidiodendron* spp., *Laccaria* spp., *Pisolithus* spp., *Rhizopogon* spp., *Scleroderma* spp., *Rhizoctonia* spp., *Acinetobacter* spp., *Arthrobacter* spp., *Arthrobotrys* spp., *Aspergillus* spp., *Azospirillum* spp., *Bacillus* spp., *Burkholderia* spp., *Candida* spp., *Chryseomonas* spp., *Enterobacter* spp., *Eupenicillium* spp., *Exiguobacterium* spp., *Klebsiella* spp., *Kluyvera* spp., *Microbacterium* spp., *Mucor* spp., *Paecilomyces* spp., *Paenibacillus* spp., *Penicillium* spp., *Pseudomonas* spp., *Serratia* spp., *Stenotrophomonas* spp., *Streptomyces* spp., *Streptosporangium* spp., *Swaminathania* spp., *Thiobacillus* spp., *Torulospora* spp., *Vibrio* spp., *Xanthobacter* spp., *Xanthomonas* spp., etc.), and combinations thereof.

According to some embodiments, the compound combination and the composition of the invention may be combined with one or more biostimulants. Biostimulants may enhance metabolic or physiological processes such as respiration, photosynthesis, nucleic acid uptake, ion uptake, nutrient delivery, or a combination thereof. Non-limiting examples of biostimulants that may be included or used in the composition of the present invention may include seaweed extracts (e.g., ascophyllum nodosum; BAYFOLAN ALGAE, Aglukon gmbH, Germany), bacterial extracts (e.g., extracts of one or more diazotrophs, phosphate-solubilizing microorgafjaponisms and/or biopesticides), fungal extracts, humic acids (e.g., potassium humate), fulvic acids, myo-inositol, and/or glycine, protein hydrolysates and aminoacids both from animal BAYFOLAN AMBITION & BAYFOLAN cobre, SICIT, Italy) and plant origin, inorganic compounds (e.g silica) and any combinations thereof. According to some embodiments, the biostimulants may comprise one or more *Azospirillum* extracts (e.g., an extract of media comprising *A. brasilense* INTA Az-39), one or more *Bradyrhizobium* extracts (e.g., an extract of media comprising *B. elkanii* SEMIA 501, *B. elkanii* SEMIA 587, *B. elkanii* SEMIA 5019, *B. japonicum* NRRL B-50586 (also deposited as NRRL B-59565), *B. japonicum* NRRL B-50587 (also deposited as NRRL B-59566), *B. japonicum* NRRL B-50588 (also deposited as NRRL B-59567), *B. japonicum* NRRL B-50589 (also deposited as NRRL B-59568), *B. japonicum* NRRL B-50590 (also deposited as NRRL B-59569), *B. japonicum* NRRL B-50591 (also deposited as NRRL B-59570), *B. japonicum* NRRL B-50592 (also deposited as NRRL B-59571), *B. japonicum* NRRL B-50593 (also deposited as NRRL B-59572), *B. japonicum* NRRL B-50594 (also deposited as NRRL B-50493), *B. japonicum* NRRL B-50608, *B. japonicum* NRRL B-50609, *B. japonicum* NRRL B-50610, *B. japonicum* NRRL B-50611, *B. japonicum* NRRL B-50612, *B. japonicum* NRRL B-50726, *B. japonicum* NRRL B-50727, *B. japonicum* NRRL B-50728, *B. japonicum* NRRL B-50729, *B. japonicum* NRRL B-50730, *B. japonicum* SEMIA 566, *B. japonicum* SEMIA 5079, *B. japonicum* SEMIA 5080, *B. japonicum* USDA 6, *B. japonicum* USDA 110, *B. japonicum* USDA 122, *B. japonicum* USDA 123, *B. japonicum* USDA 127, *B. japonicum* USDA 129 and/or *B. japonicum* USDA 532C), one or more *Rhizobium* extracts (e.g., an extract of media comprising *R. leguminosarum* SO12A-2), one or more *Sinorhizobium* extracts (e.g., an extract of media comprising *S. fredii* CCBAU114 and/or *S. fredii* USDA 205), one or more *Penicillium* extracts (e.g., an extract

of media comprising *P. bilaiae* ATCC 18309, *P. bilaiae* ATCC 20851, *P. bilaiae* ATCC 22348, *P. bilaiae* NRRL 50162, *P. bilaiae* NRRL 50169, *P. bilaiae* NRRL 50776, *P. bilaiae* NRRL 50777, *P. bilaiae* NRRL 50778, *P. bilaiae* NRRL 50777, *P. bilaiae* NRRL 50778, *P. bilaiae* NRRL 50779, *P. bilaiae* NRRL 50780, *P. bilaiae* NRRL 50781, *P. bilaiae* NRRL 50782, *P. bilaiae* NRRL 50783, *P. bilaiae* NRRL 50784, *P. bilaiae* NRRL 50785, *P. bilaiae* NRRL 50786, *P. bilaiae* NRRL 50787, *P. bilaiae* NRRL 50788, *P. bilaiae* RS7B-SD1, *P. brevicompactum* AgRF18, *P. canescens* ATCC 10419, *P. expansum* ATCC 24692, *P. expansum* YT02, *P. fellatanum* ATCC 48694, *P. gaestrivorus* NRRL 50170, *P. glabrum* DAOM 239074, *P. glabrum* CBS 229.28, *P. janthinellum* ATCC 10455, *P. lanosocoeruleum* ATCC 48919, *P. radicum* ATCC 201836, *P. radicum* FRR 4717, *P. radicum* FRR 4719, *P. radicum* N93/47267 and/or *P. raistrickii* ATCC 10490), one or more *Pseudomonas* extracts (e.g., an extract of media comprising *P. jessenii* PS06), one or more acaricidal, insecticidal and/or nematicidal extracts (e.g., an extract of media comprising *Bacillus firmus* 1-1582, *Bacillus mycoides* AQ726, NRRL B-21664; *Beauveria bassiana* ATCC-74040, *Beauveria bassiana* ATCC-74250, *Burkholderia* sp. A396 sp. nov. rinojensis, NRRL B-50319, *Chromobacterium subtsugae* NRRL B-30655, *Chromobacterium vaccinii* NRRL B-50880, *Flavobacterium* H492, NRRL B-50584, *Metarhizium anisopliae* F52 (also known as *Metarhizium anisopliae* strain 52, *Metarhizium anisopliae* strain 7, *Metarhizium anisopliae* strain 43 and *Metarhizium anisopliae* BIO-1020, TAE-001; deposited as DSM 3884, DSM 3885, ATCC 90448, SD 170 and ARSEF 7711) and/or *Paecilomyces fumosoroseus* FE991), and/or one or more fungicidal extracts (e.g., an extract of media comprising *Ampelomyces quisqualis* AQ 10® (Intrachem Bio GmbH & Co. KG, Germany), *Aspergillus flavus* AFLA-GUARD® (Syngenta Crop Protection, Inc., CH), *Aureobasidium pullulans* BOTECTOR® (bio-ferm GmbH, Germany), *Bacillus pumilus* AQ717 (NRRL B-21662), *Bacillus pumilus* NRRL B-30087, *Bacillus* AQ175 (ATCC 55608), *Bacillus* AQ177 (ATCC 55609), *Bacillus subtilis* AQ713 (NRRL B-21661), *Bacillus subtilis* AQ743 (NRRL B-21665), *Bacillus amyloliquefaciens* FZB24, *Bacillus amyloliquefaciens* NRRL B-50349, *Bacillus amyloliquefaciens* TJ1000 (also known as 1BE, isolate ATCC BAA-390), *Bacillus thuringiensis* AQ52 (NRRL B-21619), *Candida oleophila* 1-82 (e.g., ASPIRE® from Ecogen Inc., USA), *Candida saitoana* BIOCURE® (in mixture with lysozyme; BASF, USA) and BIOCOAT® (ArystaLife Science, Ltd., Cary, NC), *Clonostachys rosea* f. *catenulata* (also referred to as *Gliocladium catenulatum*) J1446 (PRESTOP®, Verdera, Finland), *Coniothyrium minitans* CONTANS® (Prophyta, Germany), *Cryphonectria parasitica* (CNICM, France), *Cryptococcus albidus* YIELD PLUS® (Anchor Bio-Technologies, South Africa), *Fusarium oxysporum* BIOFOX® (from S.I.A.P.A., Italy) and FUSACLEAN® (Natural Plant Protection, France), *Metschnikowia fructicola* SHEMER® (Agrogreen, Israel), *Microdochium dimerum* ANTIBOT® (Agrauxine, France), *Muscodor albus* NRRL 30547, *Muscodor roseus* NRRL 30548, *Phlebiopsis gigantea* ROTSOP® (Verdera, Finland), *Pseudozyma flocculosa* SPORODEX® (Plant Products Co. Ltd., Canada), *Pythium oligandrum* DV74 (POLYVERSUM®, Remeslo SSRO, Biopreparaty, Czech Rep.), *Reynoutria sachlinensis* (e.g., REGALIA® from Marrone BioInnovations, USA), *Streptomyces* NRRL B-30145, *Streptomyces* M1064, *Streptomyces galbus* NRRL 30232, *Streptomyces lydicus* WYEC 108 (ATCC 55445), *Streptomyces violaceusniger* YCED 9 (ATCC 55660; DE-THATCH-9®, DECOMP-9® and THATCH CONTROL®, Idaho Research Foundation, USA), *Streptomyces* WYE 53 (ATCC 55750; DE-THATCH-9®, DECOMP-9® and THATCH CONTROL®, Idaho Research Foundation, USA), *Talaromyces flavus* V117b (PROTUS®, Prophyta, Germany), *Trichoderma asperellum* SKT-1 (ECO-HOPE®, Kumiai Chemical Industry Co., Ltd., Japan), *Trichoderma atroviride* LC52 (SENTINEL®, Agrimm Technologies Ltd, NZ), *Trichoderma harzianum* T-22 (PLANTSHIELD®, der Firma BioWorks Inc., USA), *Trichoderma harzianum* TH-35 (ROOT PROT, from Mycontrol Ltd., Israel), *Trichoderma harzianum* T-39 (TRICHODEX®, Mycontrol Ltd., Israel; TRICHODERMA 2000®, Makhteshim Ltd., Israel), *Trichoderma harzianum* ICC012 and *Trichoderma viride* TRICHOPEL (Agrimm Technologies Ltd, NZ), *Trichoderma harzianum* ICC012 and *Trichoderma viride* ICC080 (REMEDIER® WP, Isagro Ricerca, Italy), *Trichoderma polysporum* and *Trichoderma harzianum* (BINAB®, BINAB Bio-Innovation AB, Sweden), *Trichoderma stromaticum* TRICOVAB® (C.E.P.L.A.C., Brazil), *Trichoderma virens* GL-21 (SOILGARD®, Certis LLC, USA), *Trichoderma virens* G1-3, ATCC 57678, *Trichoderma virens* G1-21 (Thermo Trilogy Corporation, Wasco, CA), *Trichoderma virens* G1-3 and *Bacillus amyloliquefaciens* FZB2, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO® (Ecosense Labs. (India) Pvt. Ltd., Indien, BIO-CURE® F from T. Stanes & Co. Ltd., Indien), *Trichoderma viride* TV1 (Agribiotec srl, Italy), *Trichoderma viride* ICC080, and/or *Ulocladium oudemansii* HRU3 (BOTRY-ZEN®, Botry-Zen Ltd, NZ)), and combinations thereof.

According to some embodiments, the compound combination and the composition of the invention may be combined with one or more lipo-chitooligosaccharides (LCOs), chitooligosaccharides (COs), and/or chitinous compounds. LCOs, sometimes referred to as symbiotic nodulation (Nod) signals (or Nod factors) or as Myc factors, consist of an oligosaccharide backbone of β-1,4-linked *N*-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues. *See,* e.g., Denarie et al., Ann. Rev. Biochem. 65:503 (1996); Diaz et al., Mol. Plant-Microbe Interactions 13:268 (2000); Hungria et al., Soil Biol. Biochem. 29:819 (1997); Hamel et al., Planta 232:787 (2010); and Prome et al., Pure & Appl. Chem. 70(1):55 (1998).

LCOs (and derivatives thereof) may be included or utilized in various forms of purity and can be used alone or in the form of a culture of LCO-producing bacteria or fungi. For example, OPTIMIZE® (commercially available from Bayer Company) contains a culture of *Bradyrhizobium japonicum* that produces LCO. Methods to provide substantially pure LCOs include removing the microbial cells from a mixture of LCOs and the microbe, or continuing to isolate and purify the LCO molecules through LCO solvent phase separation followed by HPLC chromatography as described, for example, in U.S. Patent No. 5,549,718. Purification can be enhanced by repeated HPLC and the purified LCO molecules can be freeze-dried for long-term storage. Compositions and methods of the present disclosure may comprise analogues, derivatives, hydrates, isomers, salts and/or solvates of LCOs. LCOs may be incorporated into the composition according to the inventionin any suitable amount(s)/concentration(s). For example, the composition according to the invention comprise about $1 \times 10^{-20}$ M to about $1 \times 10^{-1}$ M LCO(s). The amount/concentration of LCO may be an amount effective to impart a positive trait or benefit to a plant, such as to enhance the growth and/or yield of the plant to which the composition is applied. According to some embodiments, the LCO amount/concentration is not effective to enhance the yield of the plant without beneficial contributions from one or more other constituents of the composition, such as CO and/or one or more pesticides.

The compound combination and the composition of the invention may be combined with any suitable COs, perhaps in combination with one or more LCOs. COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$, CAS No. 9012-76-4]. *See, e.g.,* D'Haeze et al., Glycobiol. 12(6):79R (2002); Demont-Caulet et al., Plant Physiol. 120(1):83 (1999); Hanel et al., Planta 232:787 (2010); Muller et al., Plant Physiol. 124:733 (2000); Robina et al., Tetrahedron 58:521-530 (2002); Rouge et al., Docking of Chitin Oligomers and Nod Factors on Lectin Domains of the LysM-RLK Receptors in the Medicago-Rhizobium Symbiosis, in The Molecular Immunology of Complex Carbohydrates-3 (Springer Science, 2011); Van der Holst et al., Curr. Opin. Struc. Biol. 11:608 (2001); and Wan et al., Plant Cell 21:1053 (2009). COs may be obtained from any suitable source. For example, the CO may be derived from an LCO. For example, in an aspect, the composition according to the invention comprise one or more COs derived from an LCO obtained (i.e., isolated and/or purified) from a strain of *Azorhizobium, Bradyrhizobium* (e.g., *B. japonicum*), *Mesorhizobium, Rhizobium* (e.g., *R. leguminosarum*)*, Sinorhizobium* (e.g., *S. meliloti*)*,* or mycorhizzal fungi (e.g., *Glomus intraradicus*)*.* Alternatively, the CO may be synthetic. Methods for the preparation of recombinant COs are known in the art. See, *e.g.,* Cottaz et al., Meth. Eng. 7(4):311 (2005); Samain et al., Carbohydrate Res. 302:35 (1997.); and Samain et al., J. Biotechnol. 72:33 (1999), the contents and disclosures of which are incorporated herein by reference.

COs (and derivatives thereof) may be included or utilized in various forms of purity and can be used alone or in the form of a culture of CO-producing bacteria or fungi. It is to be understood that the compound combination and the composition according to the invention may be combined with hydrates, isomers, salts and/or solvates of COs. COs may be used in any suitable amount(s)/concentration(s). For example, the compound combination and the composition according to the invention may comprise about $1 \times 10^{-20}$ M to about $1 \times 10^{-1}$ M COs. The amount/concentration of CO may be an amount effective to impart or confer a positive trait or benefit to a plant, such as to enhance the soil microbial environment, nutrient uptake, or increase the growth and/or yield of the plant to which the composition is applied. According to some embodiments, a CO amount/concentration may not be effective to enhance the growth of the plant without beneficial contributions from one or more other ingredients of the composition, such as LCO and/or one or more inoculants, biomolecules, nutrients, or pesticides.

The compound combination and the composition of the invention may be combined with one or more suitable chitinous compounds, such as, for example, chitin, chitosan, and isomers, salts and solvates thereof. Chitins and chitosans, which are major components of the cell walls of fungi and the exoskeletons of insects and crustaceans, are composed of GlcNAc residues. Chitins and chitosans may be obtained commercially or prepared from insects, crustacean shells, or fungal cell walls. Methods for the preparation of chitin and chitosan are known in the art. *See, e.g.,* U.S. Patent Nos. 4,536,207 (preparation from crustacean shells) and 5,965,545 (preparation from crab shells and hydrolysis of commercial chitosan); and Pochanavanich et al., Lett. Appl. Microbiol. 35:17 (2002) (preparation from fungal cell walls). Deacetylated chitins and chitosans may be obtained that range from less than 35% to greater than 90% deacetylation and cover a broad spectrum of molecular weights, e.g., low molecular weight chitosan oligomers of less than 15kD and chitin oligomers of 0.5 to 2kD; "practical grade" chitosan with a molecular weight of about 15kD; and high molecular weight chitosan of up to 70kD. Chitin and chitosan compositions formulated for seed treatment are commercially available. Commercial products include, for example, ELEXA® (Plant Defense Boosters, Inc.) and BEYOND™ (Agrihouse, Inc.).

The compound combination and the composition of the invention may be combined with one or more suitable flavonoids, including, but not limited to, anthocyanidins, anthoxanthins, chalcones, coumarins, flavanones, flavanonols, flavans and isoflavonoids, as well as analogues, derivatives, hydrates, isomers, polymers, salts and solvates thereof. Flavonoids are phenolic compounds having the general structure of two aromatic rings connected by a three-carbon bridge. Classes of flavonoids are known in the art. *See, e.g.,* Jain et al., J. Plant Biochem. & Biotechnol. 11:1 (2002);

and Shaw et al., Environ. Microbiol. 11:1867 (2006), the contents and disclosures of which are incorporated herein by reference. Several flavonoid compounds are commercially available. Flavonoid compounds may be isolated from plants or seeds, e.g., as described in U.S. Patents 5,702,752; 5,990,291; and 6,146,668. Flavonoid compounds may also be produced by genetically engineered organisms, such as yeast. *See, e.g.,* Ralston et al., Plant Physiol. 137:1375 (2005).

According to some embodiments, the compound combination and the composition of the invention may be combined with one or more flavanones, such as one or more of butin, eriodictyol, hesperetin, hesperidin, homoeriodictyol, isosakuranetin, naringenin, naringin, pinocembrin, poncirin, sakuranetin, sakuranin, and/or sterubin, one or more flavanonols, such as dihydrokaempferol and/or taxifolin, one or more flavans, such as one or more flavan-3-ols (e.g., catechin (C), catechin 3-gallate (Cg), epicatechins (EC), epigallocatechin (EGC) epicatechin 3-gallate (ECg), epigallcatechin 3-gallate (EGCg), epiafzelechin, fisetinidol, gallocatechin (GC), gallcatechin 3-gallate (GCg), guibourtinidol, mesquitol, robinetinidol, theaflavin-3-gallate, theaflavin-3'-gallate, theflavin-3,3'-digallate, thearubigin), flavan-4-ols (e.g., apiforol and/or luteoforol) and/or flavan-3,4-diols (e.g., leucocyanidin, leucodelphinidin, leucofisetinidin, leucomalvidin, luecopelargonidin, leucopeonidin, leucorobinetinidin, melacacidin and/or teracacidin) and/or dimers, trimers, oligomers and/or polymers thereof (e.g., one or more proanthocyanidins), one or more isoflavonoids, such as one or more isoflavones or flavonoid derivatives (e.g., biochanin A, daidzein, formononetin, genistein and/or glycitein), isoflavanes (e.g., equol, ionchocarpane and/or laxifloorane), isoflavandiols, isoflavenes (e.g., glabrene, haginin D and/or 2-methoxyjudaicin), coumestans (e.g., coumestrol, plicadin and/or wedelolactone), pterocarpans, roetonoids, neoflavonoids (e.g., calophyllolide, coutareagenin, dalbergichromene, dalbergin, nivetin), and/or pterocarpans (e.g., bitucarpin A, bitucarpin B, erybraedin A, erybraedin B, erythrabyssin II, erthyrabissin-1, erycristagallin, glycinol, glyceollidins, glyceollins, glycyrrhizol, maackiain, medicarpin, morisianine, orientanol, phaseolin, pisatin, striatine, trifolirhizin), and combinations thereof. Flavonoids and their derivatives may be included in the present composition in any suitable form, including, but not limited to, polymorphic and crystalline forms. Flavonoids may be included in the composition according to the invention in any suitable amount(s) or concentration(s). The amount/concentration of a flavonoid(s) may be an amount effective to impart a benefit to a plant, which may be indirectly through activity on soil microorganisms or other means, such as to enhance plant nutrition and/or yield. According to some embodiments, a flavonoid amount/concentration may not be effective to enhance the nutrition or yield of the plant without the beneficial contributions from one or more other ingredients of the composition, such as LCO, CO, and/or one or more pesticides.

The compound combination and the composition of the invention may be combined with one or more suitable non-flavonoid nod-gene inducer(s), including, but not limited to, jasmonic acid ([1R-[1$\alpha$,2$\beta$(Z)]]-3-oxo-2-(pentenyl)cyclopentaneacetic acid; JA), linoleic acid ((Z,Z)-9,12-Octadecadienoic acid) and/or linolenic acid ((Z,Z,Z)-9,12,15-octadecatrienoic acid), and analogues, derivatives, hydrates, isomers, polymers, salts and solvates thereof. Jasmonic acid and its methyl ester, methyl jasmonate (MeJA), collectively known as jasmonates, are octadecanoid-based compounds that occur naturally in some plants (e.g., wheat), fungi (e.g., *Botryodiplodia theobromae, Gibbrella fujikuroi*), yeast (e.g., *Saccharomyces cerevisiae*) and bacteria (e.g., *Escherichia coli*). Linoleic acid and linolenic acid may be produced in the course of the biosynthesis of jasmonic acid. Jasmonates, linoleic acid and linolenic acid (and their derivatives) are reported to be inducers of nod gene expression or LCO production by rhizobacteria. See, *e.g.,* Mabood et al., PLANT PHYSIOL. BIOCHEM. 44(11):759 (2006); Mabood et al., AGR. J. 98(2):289 (2006); Mabood et al., FIELD CROPS RES.95(2-3):412 (2006); and Mabood & Smith, Linoleic and linolenic acid induce the expression of nod genes in Bradyrhizobium japonicum USDA 3, PLANT BIOL. (2001).

Derivatives of jasmonic acid, linoleic acid, and linolenic acid that may be included or used in combination with the compound combination and the composition of the invention include esters, amides, glycosides and salts thereof. Representative esters are compounds in which the carboxyl group of linoleic acid, linolenic acid, or jasmonic acid has been replaced with a --COR group, where R is an --$OR^1$ group, in which $R^1$ is: an alkyl group, such as a $C_1$-$C_8$ unbranched or branched alkyl group, e.g., a methyl, ethyl or propyl group; an alkenyl group, such as a $C_2$-$C_8$ unbranched or branched alkenyl group; an alkynyl group, such as a $C_2$-$C_8$ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Representative amides are compounds in which the carboxyl group of linoleic acid, linolenic acid, or jasmonic acid has been replaced with a --COR group, where R is an $NR^2R^3$ group, in which $R^2$ and $R^3$ are each independently: a hydrogen; an alkyl group, such as a $C_1$-$C_8$ unbranched or branched alkyl group, e.g., a methyl, ethyl or propyl group; an alkenyl group, such as a $C_2$-$C_8$ unbranched or branched alkenyl group; an alkynyl group, such as a $C_2$-$C_8$ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Esters may be prepared by known methods, such as acid-catalyzed nucleophilic addition, wherein the carboxylic acid is reacted with an alcohol in the presence of a catalytic amount of a mineral acid. Amides may also be prepared by known methods, such as by reacting the carboxylic acid with the appropriate amine in the presence of a coupling agent, such as dicyclohexyl carbodiimide (DCC), under neutral conditions. Suitable salts of linoleic acid, linolenic acid and jasmonic acid include, for example, base addition salts. The bases that may be used as reagents to prepare metabolically acceptable base salts of these compounds include those derived from cations

such as alkali metal cations (e.g., potassium and sodium) and alkaline earth metal cations (e.g., calcium and magnesium). These salts may be readily prepared by mixing a solution of linoleic acid, linolenic acid, or jasmonic acid with a solution of the base. The salts may be precipitated from solution and collected by filtration, or may be recovered by other means such as by evaporation of the solvent.

Non-flavonoid nod-gene inducers may be used in combination the compound combination and the composition of the invention in any suitable amount(s)/concentration(s). For example, the amount/concentration of non-flavonoid nod-gene inducers may be an amount effective to impart or confer a positive trait or benefit to a plant, such as to enhance the growth and/or yield of the plant to which the composition is applied. According to some embodiments, the amount/concentration of non-flavonoid nod-gene inducers may not be effective to enhance the growth and/or yield of the plant without beneficial contributions from one or more other ingredients of the composition, such as a LCO, CO and/or one or more pesticides.

The compound combination and the composition of the invention may be combined with karrakins, including but not limited to 2H-furo[2,3-c]pyran-2-ones, as well as analogues, derivatives, hydrates, isomers, polymers, salts and solvates thereof. Examples of biologically acceptable salts of karrakins include acid addition salts formed with biologically acceptable acids, examples of which include hydrochloride, hydrobromide, sulphate or bisulphate, phosphate or hydrogen phosphate, acetate, benzoate, succinate, fumarate, maleate, lactate, citrate, tartrate, gluconate; methanesulphonate, benzenesulphonate and p-toluenesulphonic acid. Additional biologically acceptable metal salts may include alkali metal salts, with bases, examples of which include the sodium and potassium salts. Karrakins may be incorporated into the composition according to the invention in any suitable amount(s) or concentration(s). For example, the amount/concentration of a karrakin may be an amount or concentration effective to impart or confer a positive trait or benefit to a plant, such as to enhance the growth and/or yield of the plant to which the composition is applied. In an aspect, a karrakin amount/concentration may not be effective to enhance the growth and/or yield of the plant without beneficial contributions from one or more other ingredients of the composition, such as a LCO, CO and/or one or more pesticides.

The compound combination and the composition of the invention may be combined with one or more anthocyanidins and/or anthoxanthins, such as one or more of cyanidin, delphinidin, malvidin, pelargonidin, peonidin, petunidin, flavones (e.g., apigenin, baicalein, chrysin, 7,8-dihydroxyflavone, diosmin, flavoxate, 6-hydroxyflavone, luteolin, scutellarein, tangeritin and/or wogonin) and/or flavonols (e.g., amurensin, astragalin, azaleatin, azalein, fisetin, furanoflavonols galangin, gossypetin, 3-hydroxyflavone, hyperoside, icariin, isoquercetin, kaempferide, kaempferitrin, kaempferol, isorhamnetin, morin, myricetin, myricitrin, natsudaidain, pachypodol, pyranoflavonols quercetin, quericitin, rhamnazin, rhamnetin, robinin, rutin, spiraeoside, troxerutin and/or zanthorhamnin), and combinations thereof.

The compound combination and the composition of the invention may be combined with gluconolactone and/or an analogue, derivative, hydrate, isomer, polymer, salt and/or solvate thereof. Gluconolactone may be incorporated into the composition according to the inventionin any suitable amount(s)/concentration(s). For example, the amount/concentration of a gluconolactone amount/concentration may be an amount effective to impart or confer a positive trait or benefit to a plant, such as to enhance the growth and/or yield of the plant to which the composition is applied. In an aspect, the gluconolactone amount/concentration may not be effective to enhance the growth and/or yield of the plant without beneficial contributions from one or more other ingredients of the composition, such as a LCO, CO and/or one or more pesticides.

The compound combination and the composition of the invention may be combined with one or more suitable nutrient(s) and/or fertilizer(s), such as organic acids (e.g., acetic acid, citric acid, lactic acid, malic acid, taurine, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), vitamins, (e.g., vitamin A, vitamin B complex (i.e., vitamin $B_1$, vitamin $B_2$, vitamin $B_3$, vitamin $B_5$, vitamin $B_6$, vitamin $B_7$, vitamin $B_8$, vitamin $B_9$, vitamin $B_{12}$, choline) vitamin C, vitamin D, vitamin E, vitamin K.), and/or carotenoids (a-carotene, β-carotene, cryptoxanthin, lutein, lycopene, zeaxanthin, etc.), and combinations thereof. In an aspect, the compound combination and the composition according to the invention may be combined with macro- and micronutrients of plants or microbes, including phosphorous, boron, chlorine, copper, iron, manganese, molybdenum and/or zinc. According to some embodiments, the compound combination and the composition according to the invention may be combined with one or more beneficial micronutrients. Non-limiting examples of micronutrients for use in compositions described herein may include vitamins, (e.g., vitamin A, vitamin B complex (i.e., vitamin B1, vitamin B2, vitamin B3, vitamin B5, vitamin B6, vitamin B7, vitamin B8, vitamin B9, vitamin B12, choline) vitamin C, vitamin D, vitamin E, vitamin K, carotenoids (a-carotene, β-carotene, cryptoxanthin, lutein, lycopene, zeaxanthin, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), organic acids (e.g., acetic acid, citric acid, lactic acid, malic acid, taurine, etc.), and combinations thereof (BAYFOLAN secure, BAYFOLAN complete, BAYFOLAN energy, BAYFOLAN power, Aglukon GmbH, Germany). In a particular aspect, compositions may comprise phosphorous, boron, chlorine, copper, iron, manganese, molybdenum, and/or zinc, and combinations thereof. For compositions comprising phosphorous, it is envisioned that any suitable source of phosphorous may be used. For example, phosphorus may be derived from a rock

phosphate source, such as monoammonium phosphate, diammonium phosphate, monocalcium phosphate, super phosphate, triple super phosphate, and/or ammonium polyphosphate, an organic phosphorous source, or a phosphorous source capable of solubilization by one or more microorganisms (e.g., *Penicillium bilaiae*).

*Methods and uses*

The compound combination and the composition of the invention have potent microbicidal activity and/or plant defense modulating potential. They can be used for controlling unwanted microorganisms, such as unwanted fungi and bacteria, on plants. They can be particularly useful in crop protection (they control microorganisms that cause plants diseases) or for protecting materials (e.g. industrial materials, timber, storage goods) as described in more details herein below. More specifically, compound combination and the composition of the invention can be used to protect seeds, germinating seeds, emerged seedlings, plants, plant parts, fruits, harvest goods and/or the soil in which the plants grow from unwanted microorganisms.

Control or controlling as used herein encompasses protective, curative and eradicative treatment of unwanted microorganisms. Unwanted microorganisms may be pathogenic bacteria, pathogenic virus, pathogenic oomycetes or pathogenic fungi, more specifically phytopathogenic bacteria, phytopathogenic virus, phytopathogenic oomycetes or phytopathogenic fungi. As detailed herein below, these phytopathogenic microorganims are the causal agents of a broad spectrum of plants diseases.

More specifically, the compound combination and the composition of the invention can be used as fungicides. For the purpose of the specification, the term "fungicide" refers to a compound or composition that can be used in crop protection for the control of unwanted fungi, such as Plasmodiophoromycetes, Chytridiomycetes, Zygomycetes, Ascomycetes, Basidiomycetes and Deuteromycetes and/or for the control of Oomycetes.

The compound combination and the composition of the invention may also be used as antibacterial agent. In particular, they may be used in crop protection, for example for the control of unwanted bacteria, such as Pseudomonadaceae, Rhizobiaceae, Xanthomonadaceae, Enterobacteriaceae, Corynebacteriaceae and Streptomycetaceae.

The present invention also relates to a method for controlling unwanted microorganisms, such as unwanted fungi, oomycetes and bacteria, on plants comprising the step of applying the compound combination or the composition of the invention to the microorganisms and/or their habitat (to the plants, plant parts, seeds, fruits or to the soil in which the plants grow), wherein the compounds (A) and (B) may be applied in a simultaneous, separate or sequential manner. If the single compounds are applied in a sequential manner, i.e. at different times, they are applied one after the other within a reasonably short period, such as a few hours or days.

Typically, when the compound combination and the composition of the invention are used in curative or protective methods for controlling phytopathogenic fungi and/or phytopathogenic oomycetes, an effective and plant-compatible amount thereof is applied to the plants, plant parts, fruits, seeds or to the soil or substrates in which the plants grow. Suitable substrates that may be used for cultivating plants include inorganic based substrates, such as mineral wool, in particular stone wool, perlite, sand or gravel; organic substrates, such as peat, pine bark or sawdust; and petroleum based substrates such as polymeric foams or plastic beads. Effective and plant-compatible amount means an amount that is sufficient to control or destroy the fungi present or liable to appear on the cropland and that does not entail any appreciable symptom of phytotoxicity for said crops. Such an amount can vary within a wide range depending on the fungus to be controlled, the type of crop, the crop growth stage, the climatic conditions and the respective compound or composition of the invention used. This amount can be determined by systematic field trials that are within the capabilities of a person skilled in the art.

*Plants and plant parts*

The compound combination and the composition of the invention may be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

Plant cultivars are understood to mean plants which have new properties ("traits") and have been obtained by conventional breeding, by mutagenesis or by recombinant DNA techniques. They can be cultivars, varieties, bio- or genotypes.

Plant parts are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the methods of the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

Plants and plant cultivars which may be treated by the above disclosed methods include plants and plant cultivars which are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigor which results in generally higher yield, vigor, health and resistance towards biotic and abiotic stresses.

*Transgenic plants, seed treatment and integration events*

The compound combination according to the invention can be advantageously used to treat transgenic plants, plant cultivars or plant parts that received genetic material which imparts advantageous and/or useful properties (traits) to these plants, plant cultivars or plant parts. Therefore, it is contemplated that the present invention may be combined with one or more recombinant traits or transgenic event(s) or a combination thereof. For the purposes of this application, a transgenic event is created by the insertion of a specific recombinant DNA molecule into a specific position (locus) within the chromosome of the plant genome. The insertion creates a novel DNA sequence referred to as an "event" and is characterized by the inserted recombinant DNA molecule and some amount of genomic DNA immediately adjacent to/flanking both ends of the inserted DNA. Such trait(s) or transgenic event(s) include, but are not limited to, pest resistance, water use efficiency, yield performance, drought tolerance, seed quality, improved nutritional quality, hybrid seed production, and herbicide tolerance, in which the trait is measured with respect to a plant lacking such trait or transgenic event. Concrete examples of such advantageous and/or useful properties (traits) are better plant growth, vigor, stress tolerance, standability, lodging resistance, nutrient uptake, plant nutrition, and/or yield, in particular improved growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products, and increased resistance against animal and microbial pests, such as against insects, arachnids, nematodes, mites, slugs and snails.

Among DNA sequences encoding proteins which confer properties of tolerance to such animal and microbial pests, in particular insects, mention will particularly be made of the genetic material from *Bacillus thuringiensis* encoding the Bt proteins widely described in the literature and well known to those skilled in the art. Mention will also be made of

proteins extracted from bacteria such as *Photorhabdus* (WO97/17432 and WO98/08932). In particular, mention will be made of the Bt Cry or VIP proteins which include the CryIA, CryIAb, CryIAc, CryIIA, CryIIIA, CryIIIB2, Cry9c Cry2Ab, Cry3Bb and CryIF proteins or toxic fragments thereof and also hybrids or combinations thereof, especially the CryIF protein or hybrids derived from a CryIF protein (e.g. hybrid CryIA-CryIF proteins or toxic fragments thereof), the CryIA-type proteins or toxic fragments thereof, preferably the CryIAc protein or hybrids derived from the CryIAc protein (e.g. hybrid CryIAb-CryIAc proteins) or the CryIAb or Bt2 protein or toxic fragments thereof, the Cry2Ae, Cry2Af or Cry2Ag proteins or toxic fragments thereof, the CryIA.105 protein or a toxic fragment thereof, the VIP3Aa19 protein, the VIP3Aa20 protein, the VIP3A proteins produced in the COT202 or COT203 cotton events, the VIP3Aa protein or a toxic fragment thereof as described in Estruch et al. (1996), Proc Natl Acad Sci US A. 28;93(11):5389-94, the Cry proteins as described in WO2001/47952, the insecticidal proteins from *Xenorhabdus* (as described in WO98/50427), *Serratia* (particularly from S. *entomophila*) or *Photorhabdus* species strains, such as Tc-proteins from Photorhabdus as described in WO98/08932. Also any variants or mutants of any one of these proteins differing in some amino acids (1-10, preferably 1-5) from any of the above named sequences, particularly the sequence of their toxic fragment, or which are fused to a transit peptide, such as a plastid transit peptide, or another protein or peptide, is included herein.

Another and particularly emphasized example of such properties is conferred tolerance to one or more herbicides, for example imidazolinones, sulphonylureas, glyphosate or phosphinothricin. Among DNA sequences encoding proteins which confer properties of tolerance to certain herbicides on the transformed plant cells and plants, mention will be particularly be made to the bar or PAT gene or the Streptomyces coelicolor gene described in WO2009/152359 which confers tolerance to glufosinate herbicides, a gene encoding a suitable EPSPS (5-Enolpyruvywlshikimat-3-phosphat-synthase) which confers tolerance to herbicides having EPSPS as a target, especially herbicides such as glyphosate and its salts, a gene encoding glyphosate-n-acetyltransferase, or a gene encoding glyphosate oxidoreductase. Further suitable herbicide tolerance traits include at least one ALS (acetolactate synthase) inhibitor (e.g. WO2007/024782), a mutated Arabidopsis ALS/AHAS gene (e.g. U.S. Patent 6,855,533), genes encoding 2,4-D-monooxygenases conferring tolerance to 2,4-D (2,4- dichlorophenoxyacetic acid) and genes encoding Dicamba monooxygenases conferring tolerance to dicamba (3,6-dichloro-2- methoxybenzoic acid).

Yet another example of such properties is resistance to one or more phytopathogenic fungi, for example Asian Soybean Rust. Among DNA sequences encoding proteins which confer properties of resistance to such diseases, mention will particularly be made of the genetic material from *glycine tomentella,* for example from any one of publically available accession lines PI441001 , PI483224, PI583970, PI446958, PI499939, PI505220, PI499933, PI441008, PI505256 or PI446961 as described in WO2019/103918.

Further and particularly emphasized examples of such properties are increased resistance against bacteria and/or viruses owing, for example, to systemic acquired resistance (SAR), systemin, phytoalexins, elicitors and also resistance genes and correspondingly expressed proteins and toxins.

Particularly useful transgenic events in transgenic plants or plant cultivars which can be treated with preference in accordance with the invention include Event 531/ PV-GHBK04 (cotton, insect control, described in WO2002/040677), Event 1143-14A (cotton, insect control, not deposited, described in WO2006/128569); Event 1143-51B (cotton, insect control, not deposited, described in WO2006/128570); Event 1445 (cotton, herbicide tolerance, not deposited, described in US-A 2002-120964 or WO2002/034946); Event 17053 (rice, herbicide tolerance, deposited as PTA-9843, described in WO2010/117737); Event 17314 (rice, herbicide tolerance, deposited as PTA-9844, described in WO2010/117735); Event 281-24-236 (cotton, insect control - herbicide tolerance, deposited as PTA-6233, described in WO2005/103266 or US-A 2005-216969); Event 3006-210-23 (cotton, insect control -herbicide tolerance, deposited as PTA-6233, described in US-A 2007-143876 orWO2005/103266); Event 3272 (corn, quality trait, deposited as PTA-9972, described in WO2006/098952 or US-A 2006-230473); Event 33391 (wheat, herbicide tolerance, deposited as PTA-2347, described in WO2002/027004), Event 40416 (corn, insect control - herbicide tolerance, deposited as ATCC PTA-11508, described in WO 11/075593); Event 43A47 (corn, insect control - herbicide tolerance, deposited as ATCC PTA-11509, described in WO2011/075595); Event 5307 (corn, insect control, deposited as ATCC PTA-9561, described in WO2010/077816); Event ASR-368 (bent grass, herbicide tolerance, deposited as ATCC PTA-4816, described in US-A 2006-162007 or WO2004/053062); Event B16 (corn, herbicide tolerance, not deposited, described in US-A 2003-126634); Event BPS-CV127- 9 (soybean, herbicide tolerance, deposited as NCIMB No. 41603, described in WO2010/080829); Event BLRI (oilseed rape, restoration of male sterility, deposited as NCIMB 41193, described in WO2005/074671), Event CE43-67B (cotton, insect control, deposited as DSM ACC2724, described in US-A 2009-217423 or WO2006/128573); Event CE44-69D (cotton, insect control, not deposited, described in US-A 2010- 0024077); Event CE44-69D (cotton, insect control, not deposited, described in WO2006/128571); Event CE46-02A (cotton, insect control, not deposited, described in WO2006/128572); Event COT102 (cotton, insect control, not deposited, described in US-A 2006-130175 or WO2004/039986); Event COT202 (cotton, insect control, not deposited, described in US-A 2007-067868 or WO2005/054479); Event COT203 (cotton, insect control, not deposited, described in WO2005/054480); ); Event DAS21606-3 / 1606 (soybean, herbicide tolerance, deposited as PTA-11028, described in WO2012/033794), Event DAS40278 (corn, herbicide tolerance, deposited as ATCC PTA-10244, described in WO2011/022469); Event DAS-44406-6 / pDAB8264.44.06.1 (soybean, herbicide tolerance, deposited as PTA-11336, described in WO2012/075426), Event DAS-14536-7 /pDAB8291.45.36.2 (soybean, herbicide tolerance, deposited as PTA-11335, described in WO2012/075429), Event DAS-59122-7 (corn, insectcontrol - herbicide tolerance, deposited as ATCC PTA 11384, described in US-A 2006-070139); Event DAS-59132 (corn, insect control - herbicide tolerance, not deposited, described in WO2009/100188); Event DAS68416 (soybean, herbicide tolerance, deposited as ATCC PTA-10442, described in WO2011/066384 or WO2011/066360); Event DP-098140-6 (corn, herbicide tolerance, deposited as ATCC PTA-8296, described in US-A 2009- 137395 orWO 08/112019); Event DP-305423-1 (soybean, quality trait, not deposited, described in US-A 2008-312082 or WO2008/054747); Event DP-32138-1 (corn, hybridization system, deposited as ATCC PTA-9158, described in US-A 2009-0210970 or WO2009/103049); Event DP-356043-5 (soybean, herbicide tolerance, deposited as ATCC PTA-8287, described in US-A 2010-0184079 or WO2008/002872); Event EE-I (brinjal, insect control, not deposited, described in WO 07/091277); Event Fil 17 (corn, herbicide tolerance, deposited as ATCC 209031, described in US-A 2006-059581 or WO 98/044140); Event FG72 (soybean, herbicide tolerance, deposited as PTA-11041, described in WO2011/063413), Event GA21 (corn, herbicide tolerance, deposited as ATCC 209033, described in US-A 2005-086719 or WO 98/044140); Event GG25 (corn, herbicide tolerance, deposited as ATCC 209032, described in US-A 2005-188434 or WO98/044140); Event GHB119 (cotton, insect control - herbicide tolerance, deposited as ATCC PTA-8398, described in WO2008/151780); Event GHB614 (cotton, herbicide tolerance, deposited as ATCC PTA-6878, described in US-A 2010-050282 or WO2007/017186); Event GJ11 (corn, herbicide tolerance, deposited as ATCC 209030, described in US-A 2005-188434 or WO98/044140); Event GM RZ13 (sugar beet, virus resistance, deposited as NCIMB-41601, described in WO2010/076212); Event H7-1 (sugar beet, herbicide tolerance, deposited as NCIMB 41158 or NCIMB 41159, described in US-A 2004-172669 or WO 2004/074492); Event JOPLINI (wheat, disease tolerance, not deposited, described in US-A 2008-064032); Event LL27 (soybean, herbicide tolerance, deposited as NCIMB41658, described in WO2006/108674 or US-A 2008-320616); Event LL55 (soybean, herbicide tolerance, deposited as NCIMB 41660, described in WO 2006/108675 or US-A 2008-196127); Event LLcotton25 (cotton, herbicide tolerance, deposited as ATCC PTA-3343, described in WO2003/013224 or US- A 2003-097687); Event LLRICE06 (rice, herbicide tolerance, deposited as ATCC 203353, described in US 6,468,747 or WO2000/026345); Event LLRice62 ( rice, herbicide tolerance, deposited as ATCC 203352, described in WO2000/026345), Event LLRICE601 (rice, herbicide tolerance, deposited as ATCC PTA-2600, described in US-A 2008-2289060 or WO2000/026356); Event LY038 (corn, quality trait, deposited as ATCC PTA-5623, described in US-A 2007-028322 or WO2005/061720); Event MIR162 (corn, insect control, deposited as PTA-8166, described in US-A 2009-300784 or WO2007/142840); Event MIR604 (corn, insect control, not deposited, described in US-A 2008-167456 or WO2005/103301); Event MON15985 (cotton, insect control, deposited as ATCC PTA-2516, described in US-A 2004-250317 or WO2002/100163); Event MON810 (corn, insect control, not deposited, described in US-A 2002-102582); Event MON863 (corn, insect control, deposited as ATCC PTA-2605, described in WO2004/011601 or US-A 2006-095986); Event MON87427 (corn, pollination control, deposited as ATCC PTA-7899, described in WO2011/062904); Event MON87460 (corn, stress tolerance, deposited as ATCC PTA-8910, described in WO2009/111263 or US-A 2011-0138504); Event MON87701 (soybean, insect control, deposited as ATCC PTA- 8194, described in US-A 2009-130071 or WO2009/064652); Event MON87705 (soybean, quality trait - herbicide tolerance, deposited as ATCC PTA-9241, described in US-A 2010-0080887 or WO2010/037016); Event MON87708 (soybean, herbicide tolerance, deposited as ATCC PTA-9670, described in WO2011/034704); Event MON87712 (soybean, yield, deposited as PTA-10296, described in WO2012/051199), Event MON87754 (soybean, quality trait, deposited as ATCC PTA-9385, described in WO2010/024976); Event MON87769 (soybean, quality trait, deposited as ATCC PTA- 8911, described in US-A 2011-0067141 or WO2009/102873); Event MON88017 (corn, insect control - herbicide tolerance, deposited as ATCC PTA-5582, described in US-A 2008-028482 or WO2005/059103); Event MON88913 (cotton, herbicide tolerance, deposited as ATCC PTA-4854, described in WO2004/072235 or US-A 2006-059590); Event MON88302 (oilseed rape, herbicide tolerance, deposited as PTA-10955, described in WO2011/153186), Event MON88701 (cotton, herbicide tolerance, deposited as PTA-11754, described in WO2012/134808), Event MON89034 (corn, insect control, deposited as ATCC PTA-7455, described in WO 07/140256 or US-A 2008-260932); Event MON89788 (soybean, herbicide tolerance, deposited as ATCC PTA-6708, described in US-A 2006-282915 or WO2006/130436); Event MSI 1 (oilseed rape, pollination control - herbicide tolerance, deposited as ATCC PTA-850 or PTA-2485, described in WO2001/031042); Event MS8 (oilseed rape, pollination control - herbicide tolerance, deposited as ATCC PTA-730, described in WO2001/041558 or US-A 2003-188347); Event NK603 (corn, herbicide tolerance, deposited as ATCC PTA-2478, described in US-A 2007-292854); Event PE-7 (rice, insect control, not deposited, described in WO2008/114282); Event RF3 (oilseed rape, pollination control - herbicide tolerance, deposited as ATCC PTA-730, described in WO2001/041558 or US-A 2003-188347); Event RT73 (oilseed rape, herbicide tolerance, not deposited, described in WO2002/036831 or US-A 2008-070260); Event SYHT0H2 / SYN-000H2-5 (soybean, herbicide tolerance, deposited as PTA-11226, described in WO2012/082548), Event T227-1 (sugar beet, herbicide tolerance, not deposited, described in WO2002/44407 or US-A 2009-265817); Event T25 (corn, herbicide tolerance, not deposited, described in US-A 2001-029014 or WO2001/051654); Event T304-40 (cotton, insect control - herbicide tolerance, deposited as ATCC PTA-8171, described in US-A 2010-077501 or WO2008/122406); Event T342-142 (cotton, insect control, not deposited,

described in WO2006/128568); Event TC1507 (corn, insect control - herbicide tolerance, not deposited, described in US-A 2005-039226 or WO2004/099447); Event VIP 1034 (corn, insect control - herbicide tolerance, deposited as ATCC PTA-3925, described in WO2003/052073), Event 32316 (corn, insect control-herbicide tolerance, deposited as PTA-11507, described in WO2011/084632), Event 4114 (corn, insect control-herbicide tolerance, deposited as PTA-11506, described in WO2011/084621), event EE-GM3 / FG72 (soybean, herbicide tolerance, ATCC Accession N° PTA-11041) optionally stacked with event EE-GM1/LL27 or event EE-GM2/LL55 (WO2011/063413A2), event DAS-68416-4 (soybean, herbicide tolerance, ATCC Accession N° PTA-10442, WO2011/066360A1), event DAS-68416-4 (soybean, herbicide tolerance, ATCC Accession N° PTA-10442, WO2011/066384A1), event DP-040416-8 (corn, insect control, ATCC Accession N° PTA-11508, WO2011/075593A1), event DP-043A47-3 (corn, insect control, ATCC Accession N° PTA-11509, WO2011/075595A1), event DP- 004114-3 (corn, insect control, ATCC Accession N° PTA-11506, WO2011/084621A1), event DP-032316-8 (corn, insect control, ATCC Accession N° PTA-11507, WO2011/084632A1), event MON-88302-9 (oilseed rape, herbicide tolerance, ATCC Accession N° PTA-10955, WO2011/153186A1), event DAS-21606-3 (soybean, herbicide tolerance, ATCC Accession No. PTA-11028, WO2012/033794A2), event MON-87712-4 (soybean, quality trait, ATCC Accession N°. PTA-10296, WO2012/051199A2), event DAS-44406-6 (soybean, stacked herbicide tolerance, ATCC Accession N°. PTA-11336, WO2012/075426A1), event DAS-14536-7 (soybean, stacked herbicide tolerance, ATCC Accession N°. PTA-11335, WO2012/075429A1), event SYN-000H2-5 (soybean, herbicide tolerance, ATCC Accession N°. PTA-11226, WO2012/082548A2), event DP-061061-7 (oilseed rape, herbicide tolerance, no deposit N° available, WO2012071039A1), event DP-073496-4 (oilseed rape, herbicide tolerance, no deposit N° available, US2012131692), event 8264.44.06.1 (soybean, stacked herbicide tolerance, Accession N° PTA-11336, WO2012075426A2), event 8291.45.36.2 (soybean, stacked herbicide tolerance, Accession N°. PTA-11335, WO2012075429A2), event SYHT0H2 (soybean, ATCC Accession N°. PTA-11226, WO2012/082548A2), event MON88701 (cotton, ATCC Accession N° PTA-11754, WO2012/134808A1), event KK179-2 (alfalfa, ATCC Accession N° PTA-11833, WO2013/003558A1), event pDAB8264.42.32.1 (soybean, stacked herbicide tolerance, ATCC Accession N° PTA-11993, WO2013/010094A1), event MZDT09Y (corn, ATCC Accession N° PTA-13025, WO2013/012775A1).

Further, a list of such transgenic event(s) is provided by the United States Department of Agriculture's (USDA) Animal and Plant Health Inspection Service (APHIS) and can be found on their website on the world wide web at aphis.usda.gov. For this application, the status of such list as it is/was on the filing date of this application, is relevant.

The genes/events which impart the desired traits in question may also be present in combinations with one another in the transgenic plants. Examples of transgenic plants which may be mentioned are the important crop plants, such as cereals (wheat, rice, triticale, barley, rye, oats), maize, soya beans, potatoes, sugar beet, sugar cane, tomatoes, peas and other types of vegetable, cotton, tobacco, oilseed rape and also fruit plants (with the fruits apples, pears, citrus fruits and grapes), with particular emphasis being given to maize, soya beans, wheat, rice, potatoes, cotton, sugar cane, tobacco and oilseed rape. Traits which are particularly emphasized are the increased resistance of the plants to insects, arachnids, nematodes and slugs and snails, as well as the increased resistance of the plants to one or more herbicides.

Commercially available examples of such plants, plant parts or plant seeds that may be treated with preference in accordance with the invention include commercial products, such as plant seeds, sold or distributed under the GENUITY®, DROUGHTGARD®, SMARTSTAX®, RIB COMPLETE®, ROUNDUP READY®, VT DOUBLE PROT, VT TRIPLE PROT, BOLLGARD II®, ROUNDUP READY 2 YIELD®, YIELDGARD®, ROUNDUP READY® 2 XTEN$^{DTM}$, INTACTA RR2 PRO®, VISTIVE GOLD®, and/or XTENDFLEX™ trade names.

*Pathogens*

Non-limiting examples of pathogens of fungal diseases which may be treated in accordance with the invention include:

diseases caused by powdery mildew pathogens, for example *Blumeria* species, for example *Blumeria graminis*; *Podosphaera* species, for example *Podosphaera leucotricha*; *Sphaerotheca* species, for example *Sphaerotheca fuliginea*; *Uncinula* species, for example *Erysiphe necator*;

diseases caused by rust disease pathogens, for example *Gymnosporangium* species, for example *Gymnosporangium sabinae*; *Hemileia* species, for example *Hemileia vastatrix*; *Phakopsora* species, for example *Phakopsora pachyrhizi, Phakopsora meibomiae* or *Phakopsora euvitis*; *Puccinia* species, for example *Puccinia recondita, Puccinia graminis* oder *Puccinia striiformis*; *Uromyces* species, for example *Uromyces appendiculatus*;

diseases caused by pathogens from the group of the Oomycetes, for example *Albugo* species, for example *Albugo candida*; *Bremia* species, for example *Bremia lactucae*; *Peronospora* species, for example *Peronospora pisi or P. brassicae*; *Phytophthora* species, for example *Phytophthora infestans*; *Plasmopara* species, for example *Plasmopara viticola*; *Pseudoperonospora* species, for example *Pseudoperonospora humuli* or *Pseudoperonospora*

*cubensis*; *Pythium* species, for example *Pythium ultimum*;

leaf blotch diseases and leaf wilt diseases caused, for example, by *Alternaria* species, for example *Alternaria solani*; *Cercospora* species, for example *Cercospora beticola*; *Cladiosporium* species, for example *Cladiosporium cucumerinum; Cochliobolus* species, for example Cochliobolus sativus (conidial form: *Drechslera*, syn: *Helminthosporium*) or *Cochliobolus miyabeanus*; *Colletotrichum* species, for example *Colletotrichum lindemuthanium*; *Corynespora* species, for example *Corynespora cassiicola*; *Cycloconium* species, for example *Cycloconium oleaginum*; *Diaporthe* species, for example *Diaporthe citri*; *Elsinoe* species, for example *Elsinoe fawcettii*; *Gloeosporium* species, for example *Gloeosporium laeticolor*; *Glomerella* species, for example *Glomerella cingulata*; *Guignardia* species, for example *Guignardia bidwelli*; *Leptosphaeria* species, for example *Leptosphaeria maculans*; *Magnaporthe* species, for example *Magnaporthe grisea*; *Microdochium* species, for example *Microdochium nivale*; *Mycosphaerella* species, for example *Zymoseptoria tritici* (syn: *Mycosphaerella graminicola*), *Mycosphaerella arachidicola* or *Mycosphaerella fijiensis*; *Phaeosphaeria* species, for example *Phaeosphaeria nodorum*; *Phyllachora* species, for example *Phyllachora* maydis, *Pyrenophora* species, for example *Pyrenophora teres* or *Pyrenophora tritici repentis*; *Ramularia* species, for example *Ramularia collo-cygni* or *Ramularia areola*; *Rhynchosporium* species, for example *Rhynchosporium secalis*; *Septoria* species, for example *Septoria apii* or *Septoria lycopersici*; *Stagonospora* species, for example *Stagonospora nodorum*; *Typhula* species, for example *Typhula incarnata*; *Venturia* species, for example *Venturia inaequalis;*

root and stem diseases caused, for example, by *Corticium* species, for example *Corticium graminearum*; *Fusarium* species, for example *Fusarium oxysporum*; *Gaeumannomyces* species, for example *Gaeumannomyces graminis*; *Plasmodiophora* species, for example *Plasmodiophora brassicae*; *Rhizoctonia* species, for example *Rhizoctonia solani*; *Sarocladium* species, for example *Sarocladium oryzae*; *Sclerotium* species, for example *Sclerotium oryzae*; *Tapesia* species, for example *Tapesia acuformis*; *Thielaviopsis* species, for example *Thielaviopsis basicola*;

ear and panicle diseases (including corn cobs) caused, for example, by *Alternaria* species, for example *Alternaria spp*.; *Aspergillus* species, for example *Aspergillus flavus*; *Cladosporium* species, for example *Cladosporium cladosporioides*; *Claviceps* species, for example *Claviceps purpurea*; *Fusarium* species, for example *Fusarium culmorum*; *Gibberella* species, for example *Gibberella zeae*; *Monographella* species, for example *Monographella nivalis*; *Stagnospora* species, for example *Stagnospora nodorum*;

diseases caused by smut fungi, for example *Sphacelotheca* species, for example *Sphacelotheca reiliana; Tilletia* species, for example *Tilletia caries* or *Tilletia controversa; Urocystis* species, for example *Urocystis occulta; Ustilago* species, for example *Ustilago nuda;*

fruit rot caused, for example, by *Aspergillus* species, for example *Aspergillus flavus; Botrytis* species, for example *Botrytis cinerea; Monilinia* species, for example *Monilinia laxa; Penicillium* species, for example *Penicillium expansum* or *Penicillium purpurogenum; Rhizopus* species, for example *Rhizopus stolonifer; Sclerotinia* species, for example *Sclerotinia sclerotiorum; Verticilium* species, for example *Verticilium alboatrum;*

seed- and soil-borne rot and wilt diseases, and also diseases of seedlings, caused, for example, by *Alternaria* species, for example *Alternaria brassicicola; Aphanomyces* species, for example *Aphanomyces euteiches; Ascochyta* species, for example *Ascochyta lentis; Aspergillus* species, for example *Aspergillus flavus; Cladosporium* species, for example *Cladosporium herbarum; Cochliobolus* species, for example *Cochliobolus sativus* (conidial form: *Drechslera,* Bipolaris Syn: *Helminthosporium); Colletotrichum* species, for example *Colletotrichum coccodes; Fusarium* species, for example *Fusarium culmorum; Gibberella* species, for example *Gibberella zeae; Macrophomina* species, for example *Macrophomina phaseolina; Microdochium* species, for example *Microdochium nivale; Monographella* species, for example *Monographella nivalis; Penicillium* species, for example *Penicillium expansum; Phoma* species, for example *Phoma lingam; Phomopsis* species, for example *Phomopsis sojae; Phytophthora* species, for example *Phytophthora cactorum; Pyrenophora* species, for example *Pyrenophora graminea; Pyricularia* species, for example *Pyricularia oryzae; Pythium* species, for example *Pythium ultimum; Rhizoctonia* species, for example *Rhizoctonia solani; Rhizopus* species, for example *Rhizopus oryzae; Sclerotium* species, for example *Sclerotium rolfsii; Septoria* species, for example *Septoria nodorum; Typhula* species, for example *Typhula incarnata; Verticillium* species, for example *Verticillium dahliae;*

cancers, galls and witches' broom caused, for example, by *Nectria* species, for example *Nectria galligena;*

wilt diseases caused, for example, by *Verticillium* species, for example *Verticillium longisporum; Fusarium* species,

for example *Fusarium oxysporum;*

deformations of leaves, flowers and fruits caused, for example, by *Exobasidium* species, for example *Exobasidium vexans; Taphrina* species, for example *Taphrina deformans*;

degenerative diseases in woody plants, caused, for example, by *Esca* species, for example *Phaeomoniella chlamydospora, Phaeoacremonium aleophilum* or *Fomitiporia mediterranea; Ganoderma* species, for example *Ganoderma boninense;*

diseases of plant tubers caused, for example, by *Rhizoctonia* species, for example *Rhizoctonia solani; Helminthosporium* species, for example *Helminthosporium solani;*

diseases caused by bacterial pathogens, for example *Xanthomonas* species, for example *Xanthomonas campestris pv. oryzae; Pseudomonas* species, for example *Pseudomonas syringae pv. lachrymans; Erwinia* species, for example *Erwinia amylovora; Liberibacter* species, for example *Liberibacter asiaticus; Xyella* species, for example *Xylella fastidiosa; Ralstonia* species, for example *Ralstonia solanacearum; Dickeya* species, for example *Dickeya solani; Clavibacter* species, for example *Clavibacter michiganensis; Streptomyces* species, for example *Streptomyces scabies.*

diseases of soya beans:
Fungal diseases on leaves, stems, pods and seeds caused, for example, by *Alternaria* leaf spot *(Alternaria spec. atrans tenuissima), Anthracnose (Colletotrichum gloeosporoides dematium var. truncatum),* brown spot *(Septoria glycines), cercospora* leaf spot and blight *(Cercospora kikuchii), choanephora* leaf blight *(Choanephora infundibulifera trispora (Syn.)), dactuliophora* leaf spot *(Dactuliophora glycines),* downy mildew *(Peronospora manshurica), drechslera* blight *(Drechslera glycini),* frogeye leaf spot *(Cercospora sojina), leptosphaerulina* leaf spot *(Leptosphaerulina trifolii), phyllostica* leaf spot *(Phyllosticta sojaecola),* pod and stem blight *(Phomopsis sojae),* powdery mildew *(Microsphaera diffusa), pyrenochaeta* leaf spot *(Pyrenochaeta glycines),* rhizoctonia aerial, foliage, and web blight *(Rhizoctonia solani),* rust *(Phakopsora pachyrhizi, Phakopsora meibomiae, Phakopsora euvitis),* scab *(Sphaceloma glycines), stemphylium* leaf blight *(Stemphylium botryosum),* sudden death syndrome *(Fusarium virguliforme*), target spot *(Corynespora cassiicola).*

Fungal diseases on roots and the stem base caused, for example, by black root rot *(Calonectria crotalariae),* charcoal rot *(Macrophomina phaseolina),* fusarium blight or wilt, root rot, and pod and collar rot *(Fusarium oxysporum, Fusarium orthoceras, Fusarium semitectum, Fusarium equiseti),* mycoleptodiscus root rot *(Mycoleptodiscus terrestris),* neocosmospora *(Neocosmospora vasinfecta),* pod and stem blight *(Diaporthe phaseolorum),* stem canker *(Diaporthe phaseolorum var. caulivora),* phytophthora rot *(Phytophthora megasperma),* brown stem rot *(Phialophora gregata),* pythium rot *(Pythium aphanidermatum, Pythium irregulare, Pythium debaryanum, Pythium myriotylum, Pythium ultimum),* rhizoctonia root rot, stem decay, and damping-off *(Rhizoctonia solani),* sclerotinia stem decay *(Sclerotinia sclerotiorum),* sclerotinia southern blight *(Sclerotinia rolfsii),* thielaviopsis root rot *(Thielaviopsis basicola).*

*Mycotoxins*

In addition, the compound combination and the composition of the invention may reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides,* and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme*, *P. roqueforti*, *Claviceps* spec., such as *C. purpurea, C. fusiformis*, *C. paspali, C. africana, Stachybotrys* spec. and others.

*Material Protection*

The compound combination and the composition of the invention may also be used in the protection of materials, especially for the protection of industrial materials against attack and destruction by phytopathogenic fungi.

In addition, the compound combination and the composition of the invention may be used as antifouling compositions, alone or in combinations with other active ingredients.

Industrial materials in the present context are understood to mean inanimate materials which have been prepared for use in industry. For example, industrial materials which are to be protected from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The compound combination and the composition of the invention may prevent adverse effects, such as rotting, decay, discoloration, decoloration or formation of mould.

In the case of treatment of wood the compound combination and the composition of the invention may also be used against fungal diseases liable to grow on or inside timber.

Timber means all types of species of wood, and all types of working of this wood intended for construction, for example solid wood, high-density wood, laminated wood, and plywood. In addition, the compound and the composition of the invention may be used to protect objects which come into contact with saltwater or brackish water, especially hulls, screens, nets, buildings, moorings and signalling systems, from fouling.

The compound combination and the composition of the invention may also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, may be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The compound combination and the composition of the invention may prevent adverse effects, such as rotting, decay, discoloration, decoloration or formation of mould.

Microorganisms capable of degrading or altering industrial materials include, for example, bacteria, fungi, yeasts, algae and slime organisms. The compound combination and the composition of the invention preferably act against fungi, especially moulds, wood-discoloring and wood-destroying fungi *(Ascomycetes, Basidiomycetes, Deuteromycetes* and *Zygomycetes),* and against slime organisms and algae. Examples include microorganisms of the following genera: *Alternaria,* such as *Alternaria tenuis; Aspergillus,* such as *Aspergillus niger; Chaetomium,* such as *Chaetomium globosum; Coniophora,* such as *Coniophora puetana; Lentinus,* such as *Lentinus tigrinus; Penicillium,* such as *Penicillium glaucum; Polyporus,* such as *Polyporus versicolor; Aureobasidium,* such as *Aureobasidium pullulans; Sclerophoma,* such as *Sclerophoma pityophila; Trichoderma,* such as *Trichoderma viride; Ophiostoma spp., Ceratocystis spp., Humicola spp., Petriella spp., Trichurus spp., Coriolus spp., Gloeophyllum spp., Pleurotus spp., Poria spp., Serpula spp.* and *Tyromyces spp., Cladosporium spp., Paecilomyces spp. Mucor spp., Escherichia,* such as *Escherichia coli; Pseudomonas,* such as *Pseudomonas aeruginosa; Staphylococcus,* such as *Staphylococcus aureus, Candida spp.* and *Saccharomyces spp.,* such as *Saccharomyces cerevisae.*

*Seed Treatment*

The compound combination and the composition of the invention may also be used to protect seeds from unwanted microorganisms, such as phytopathogenic microorganisms, for instance phytopathogenic fungi or phytopathogenic oomycetes. The term seed(s) as used herein include dormant seeds, primed seeds, pregerminated seeds and seeds with emerged roots and leaves.

Thus, the present invention also relates to a method for protecting seeds from unwanted microorganisms which comprises the step of treating the seeds with the compound combination or the composition of the invention, wherein the seeds may be treated simultaneously, separately or sequentially with the compounds (A) and (B).

The treatment of seeds with the compound combination or the composition of the invention protects the seeds from phytopathogenic microorganisms, but also protects the germinating seeds, the emerging seedlings and the plants after emergence from the treated seeds. Therefore, the present invention also relates to a method for protecting seeds, germinating seeds and emerging seedlings.

The seeds treatment may be performed prior to sowing, at the time of sowing or shortly thereafter.

When the seeds treatment is performed prior to sowing (e.g. so-called on-seed applications), the seeds treatment may be performed as follows: the seeds may be placed into a mixer with a desired amount of the compound combination or the composition of the invention, the seeds and the compound combination or the composition of the invention are

mixed until an homogeneous distribution on seeds is achieved. If appropriate, the seeds may then be dried.

The invention also relates to seeds coated with the compound combination or the composition of the invention.

Preferably, the seeds are treated in a state in which it is sufficiently stable for no damage to occur in the course of treatment. In general, seeds can be treated at any time between harvest and shortly after sowing. It is customary to use seeds which have been separated from the plant and freed from cobs, shells, stalks, coats, hairs or the flesh of the fruits. For example, it is possible to use seeds which have been harvested, cleaned and dried down to a moisture content of less than 15% by weight. Alternatively, it is also possible to use seeds which, after drying, for example, have been treated with water and then dried again, or seeds just after priming, or seeds stored in primed conditions or pre-germinated seeds, or seeds sown on nursery trays, tapes or paper.

The amount of the compound combination or the composition of the invention applied to the seeds is typically such that the germination of the seed is not impaired, or that the resulting plant is not damaged. This must be ensured particularly in case the compounds contained in the compound combination of the invention would exhibit phytotoxic effects at certain application rates. The intrinsic phenotypes of transgenic plants should also be taken into consideration when determining the amount of the compound combination of the invention to be applied to the seed in order to achieve optimum seed and germinating plant protection with a minimum amount of compound being employed.

The compounds contained in the compound combination of the invention can be applied as such, directly to the seeds, i.e. without the use of any other components and without having been diluted. They can be applied in a simultaneous, separate or sequential manner. Also compositions containing the compounds contained in the compound combination of the invention, such as the composition of the invention, can be applied to the seeds.

The compound combination and the composition of the invention are suitable for protecting seeds of any plant variety. Preferred seeds are that of cereals (such as wheat, barley, rye, millet, triticale, and oats), oilseed rape, maize, cotton, soybean, rice, potatoes, sunflower, beans, coffee, peas, beet (e.g. sugar beet and fodder beet), peanut, vegetables (such as tomato, cucumber, onions and lettuce), lawns and ornamental plants. More preferred are seeds of wheat, soybean, oilseed rape, maize and rice.

The compound combination and the composition of the invention may be used for treating transgenic seeds, in particular seeds of plants capable of expressing a polypeptide or protein which acts against pests, herbicidal damage or abiotic stress, thereby increasing the protective effect. Seeds of plants capable of expressing a polypeptide or protein which acts against pests, herbicidal damage or abiotic stress may contain at least one heterologous gene which allows the expression of said polypeptide or protein. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originate from Bacillus sp., in which case the gene product is effective against the European corn borer and/or the Western corn rootworm. Particularly preferably, the heterologous genes originate from Bacillus thuringiensis.

*Application*

The compound combination of the invention can be applied as such, or for example in the form of as ready-to-use solutions, emulsions, water- or oil-based suspensions, powders, wettable powders, pastes, soluble powders, dusts, soluble granules, granules for broadcasting, suspoemulsion concentrates, natural products impregnated with the compound combination of the invention, synthetic substances impregnated with the compound combination of the invention, fertilizers or microencapsulations in polymeric substances.

Application is accomplished in a customary manner, for example by watering, spraying, atomizing, broadcasting, dusting, foaming or spreading-on. It is also possible to deploy the compound combination of the invention by the ultra-low volume method, via a drip irrigation system or drench application, to apply it in-furrow or to inject it into the soil stem or trunk. It is further possible to apply the compound combination of the invention by means of a wound seal, paint or other wound dressing.The effective and plant-compatible amount of the compound combination of the invention which is applied to the plants, plant parts, fruits, seeds or soil will depend on various factors, such as the compound/composition employed, the subject of the treatment (plant, plant part, fruit, seed or soil), the type of treatment (dusting, spraying, seed dressing), the purpose of the treatment (curative and protective), the type of microorganisms, the development stage of the microorganisms, the sensitivity of the microorganisms, the crop growth stage and the environmental conditions.

When the compound combination of the invention is used as a fungicide, the application rates can vary within a relatively wide range, depending on the kind of application. For the treatment of plant parts, such as leaves, the application rate may range from 0.1 to 10 000 g/ha, preferably from 10 to 1000 g/ha, more preferably from 50 to 300 g/ha (in the case of application by watering or dripping, it is even possible to reduce the application rate, especially when inert substrates such as rockwool or perlite are used). For the treatment of seeds, the application rate may range from 0.1 to 200 g per 100 kg of seeds, preferably from 1 to 150 g per 100 kg of seeds, more preferably from 2.5 to 25 g per 100 kg of seeds, even more preferably from 2.5 to 12.5 g per 100 kg of seeds. For the treatment of soil, the application

rate may range from 0.1 to 10 000 g/ha, preferably from 1 to 5000 g/ha. The outlined application rates refer to the total application rates of compounds (A) and (B) present in the compound combination of the present invention.

These application rates are merely examples and are not intended to limit the scope of the present invention.

The compound combination of the invention can be used in combination with models e.g. embedded in computer programs for site specific crop management, satellite farming, precision farming or precision agriculture. Such models support the site specific management of agricultural sites with data from various sources such as soils, weather, crops (e.g. type, growth stage, plant health), weeds (e.g. type, growth stage), diseases, pests, nutrients, water, moisture, biomass, satellite data, yield etc. with the purpose to optimize profitability, sustainability and protection of the environment. In particular, such models can help to optimize agronomical decisions, control the precision of pesticide applications and record the work performed.

As an example, the compound of the invention can be applied to a crop plant according to appropriate dose regime if a model models the development of a fungal disease and calculates that a threshold has been reached for which it is recommendable to apply the compound of the invention to the crop plant.

Commercially available systems which include agronomic models are e.g. FieldScripts™ from The Climate Corporation, Xarvio™ from BASF, AGLogic™ from John Deere, etc.

The compounds of the invention can also be used in combination with smart spraying equipment such as e.g. spot spraying or precision spraying equipment attached to or housed within a farm vehicle such as a tractor, robot, helicopter, airplane, unmanned aerial vehicle (UAV) such as a drone, etc. Such an equipment usually includes input sensors (such as e.g. a camera) and a processing unit configured to analyze the input data and configured to provide a decision based on the analysis of the input data to apply the compound of the invention to the crop plants (respectively the weeds) in a specific and precise manner. The use of such smart spraying equipment usually also requires positions systems (e.g. GPS receivers) to localize recorded data and to guide or to control farm vehicles; geographic information systems (GIS) to represent the information on intelligible maps, and appropriate farm vehicles to perform the required farm action such as the spraying.

In an example, fungal diseases can be detected from imagery acquired by a camera. In an example fungal diseases can be identified and/or classified based on that imagery. Such identification and/ classification can make use of image processing algorithms. Such image processing algorithms can utilize machine learning algorithms, such as trained neutral networks, decision trees and utilize artificial intelligence algorithms. In this manner, the compounds described herein can be applied only where needed.

**Processes** for the preparation of compounds of formula (I) and intermediates (in line with the disclosures of PCT/EP2022/057944 and PCT/EP2022/057936)

Unless indicated otherwise, the radicals and indices $R^1$, $R^2$ and A have the meanings given above for the compounds of formula (I). These definitions apply not only to the end products of formula (I) but also to all intermediates.

Compounds of formula (I) can be prepared, according to process P1, by reacting amidoximes of formula (II) with chlorodifluoroacetic anhydride or chlorodifluoroacetyl chloride in a suitable solvent such as tetrahydrofurane or dichloromethane optionally in presence of a base such as triethylamine or pyridine, preferably at room temperature, as previously described in WO2013080120.

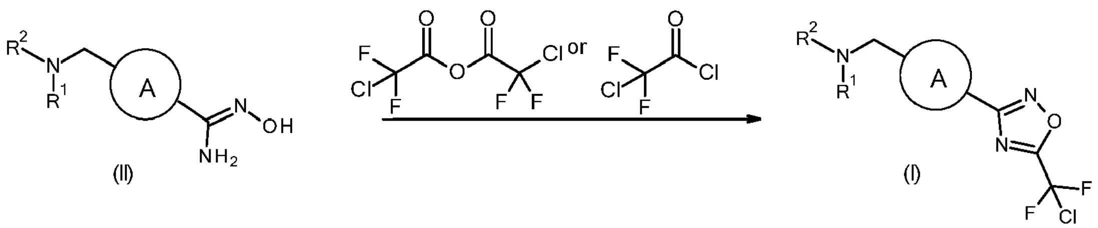

(II) or (I)

Process P1

Amidoximes of formula (II) can be prepared according to known procedures (see for examples WO2013080120), as shown in process P2 by treating nitriles of formula (III) with hydroxylamine (or its hydrochloride salt) in the presence of a base such as triethylamine in a solvent such as ethanol.

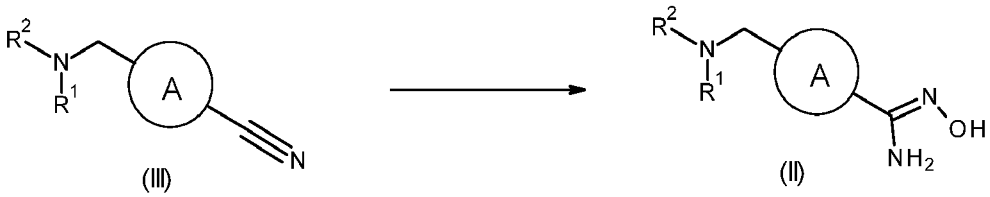

Process P2

Compounds of formula (III) can be commercially available or may be prepared starting from readily available compounds according to known procedures.

Alternatively compounds of formula (III) can be prepared, according to process P3, from compounds of formula (IV), wherein LG1 is a leaving group as for example bromide with a suitable cyanide reagent such as for example zinc cyanide in presence of palladium (0) in a solvent such as N,N-dimethylformamide as described for example in ACS Medicinal Chemistry Letters, 8(9), 919-924, 2017.

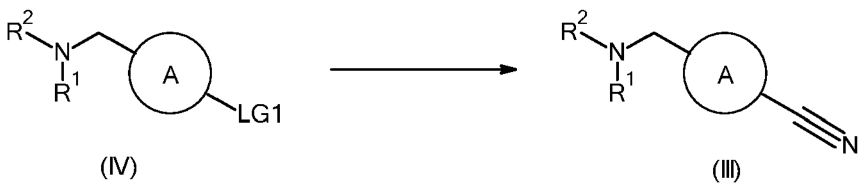

Process P3

Compounds of formula (IV) can be commercially available or may be prepared starting from readily available compounds according to known procedures.

Alternatively compounds of formula (I) in which $R^1$ is methoxy and $R^2$ is (methoxyimino)carbonyl or 2-methoxypropanoyl can be prepared, according to process P4, from a compound of formula (V), with a compound of formula (VI) wherein LG2 is a leaving group in presence of a base like for example triethylamine in a solvent such as for example dichloromethane.

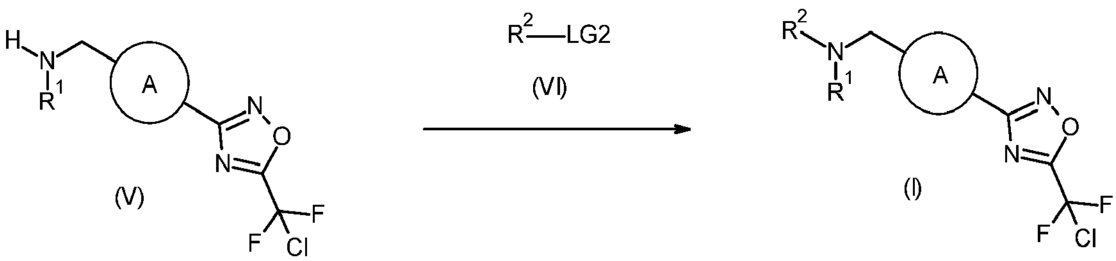

Process P4

Compounds of formula (V) may be prepared starting from readily available compounds analogously to process P1 and P2 or analogously to process P1, P2 and P3.

Compounds of formula (VI) can be commercially available or may be prepared starting from readily available compounds according to known procedures.

Alternatively compounds of formula (V) can be prepared, according to process P5, from a compound of formula (VII), wherein PG is a protecting group by using state of the art deprotecting condition like for example trifluoroacetic acid in dichloromethane when PG is a *tert*-butyloxycarbonyl group.

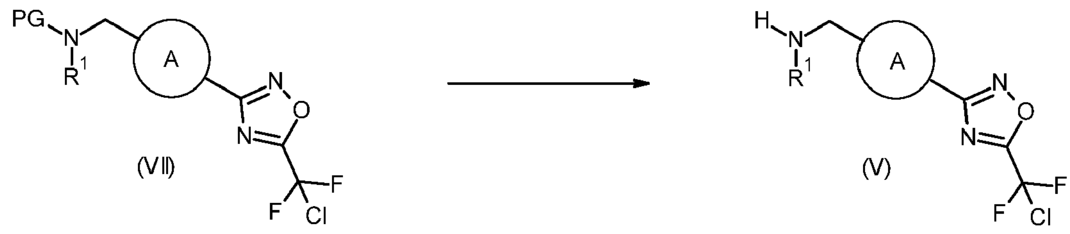

Process P5

Compounds of formula (VII) may be prepared starting from readily available compounds analogously to process P1 and P2 or analogously to process P1, P2 and P3.

Alternatively, compounds of formula (V) can be prepared, according to process P6, by reacting a compound of formula (VIII), wherein W is a leaving group, with a compound of formula (IX) as described for example in Organic Letters 6(14), 2361, 2004 optionally in presence of a base like for example diisopropylethylamine, optionally in presence of a catalyst like for example potassium iodide, in a solvent such as, for example, acetonitrile or dimethylformamide.

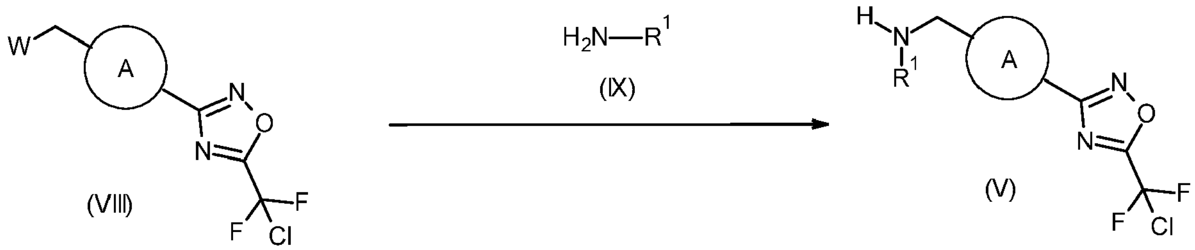

Process P6

Compounds of formula (IX) can be commercially available or may be prepared starting from readily available compounds according to known procedures.

Alternatively, compounds of formula (I) in which $R^1$ and $R^2$ form together with the nitrogen to which they are linked a pyrazole ring, which is substituted with one ethoxycarbonyl or ethynyl substituent can be prepared according to process P7, from a compound of formula (VIII), wherein W is a leaving group by nucleophilic substitution with a compound of formula (IX) (as described for example in Journal of Organic Chemistry, 78, 5218; 2013 or Tetrahedron, 72, 734; 2016) in presence of a base (like for example potassium carbonate or sodium hydride) in a solvent such as for example acetonitrile or DMF.

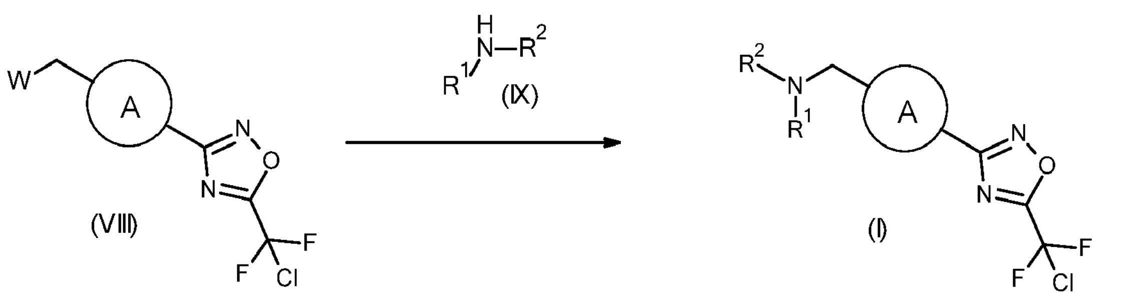

Process P7

Compounds of formula (VIII) may be prepared starting from readily available compounds analogously to process P1 and P2 or analogously to process P1, P2 and P3.

Compounds of formula (IX) can be commercially available or may be prepared starting from readily available compounds according to known procedures.

Alternatively compounds of formula (VIII') where W = Br or Cl can be prepared, according to process P8, from a compound of formula (X) by treatment with an halogenating agent like for example N-chlorosuccinimide or N-bromosuccinimide, in presence of a radical initiator like for ex AIBN or benzoyl peroxide in a suitable solvent such as, for example tetrachloromethane or trichloromethane as described for example in Org. Proc. Res. Dev., 76, 1794, 2012.

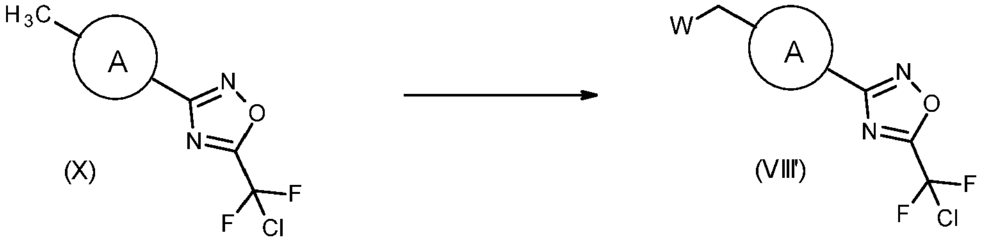

(X) (VIII')

Process P8

Compounds of formula (X) may be prepared starting from readily available compounds analogously to process P1 and P2 or analogously to process P1, P2 and P3.

Alternatively compounds of formula (VIII") (compounds of formula (VIII) with W = OH) can be prepared, according to process P9, from a compound of formula (XI) by treatment with a reducing agent such as sodium borohydride or diisobutylaluminum hydride as described for example in Journal of the American Chemical Society 135(23), 8668-8681, 2013 or Tetrahedron 74(31), 4236-4241, 2018.

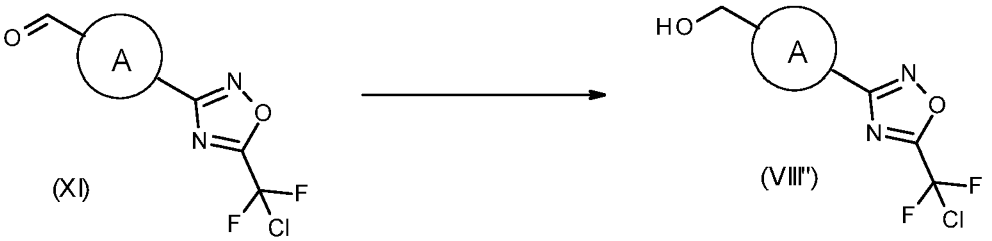

(XI) (VIII")

Process P9

Compounds of formula (XI) may be prepared starting from readily available compounds analogously to process P1 and P2 or analogously to process P1, P2 and P3.

Alternatively compounds of formula (VIII) can be prepared, according to process P10, from a compound of formula (VIII") by treatment with mesyl chloride or triflic anhydride in presence of a base like for example triethylamine in a solvent such as, for example dichloromethane, as described for example in Journal of the American Chemical Society, 135(44), 16288-16291, 2013 or by reaction with an halogenating agent, like for example carbon tetrabromide, optionally in presence of triphenylphosphine in a solvent such as, for example, dichloromethane as described for example in Bioorganic & Medicinal Chemistry Letters, 17(3), 756-760, 2007.

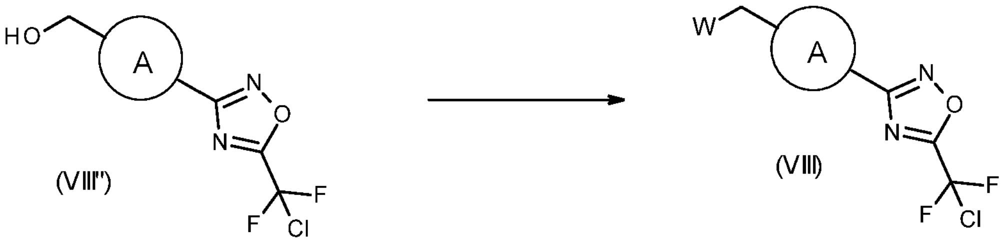

(VIII") (VIII)

Process P10

Compounds of formula (VIII") may be prepared starting from readily available compounds analogously to process P1 and P2 or analogously to process P1, P2 and P3.

Alternatively compounds of formula (VIII") can be prepared, according to process P11, from a compound of formula (XII) wherein R= H or alkyl by treatment with a reducing agent such as for example borane complexed in a solvent such a THF as described for example in Tetrahedron Letter, 23(24), 2475, 1982.

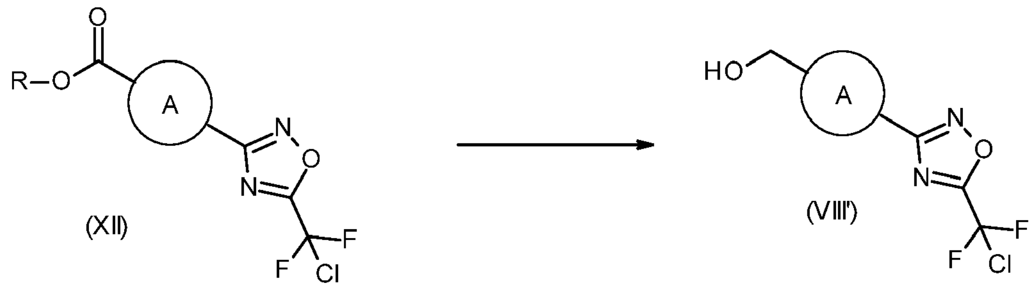

(XII) (VIII')

Process P11

Compounds of formula (XII) can be commercially available or may be prepared starting from readily available compounds according to known procedures.

Alternatively compounds of formula (XII) may be prepared starting from readily available compounds analogously to process P1 and P2 or analogously to process P1, P2 and P3.

Alternatively, compounds of formula (V) can be prepared, according to process P12, from a compound of formula (XIII) by treatment with a reducing agent such as sodium cyanoborohydride in a solvent such as acetic acid as described for example in Journal of Organic Chemistry (1989), 54(23), 5574-80.

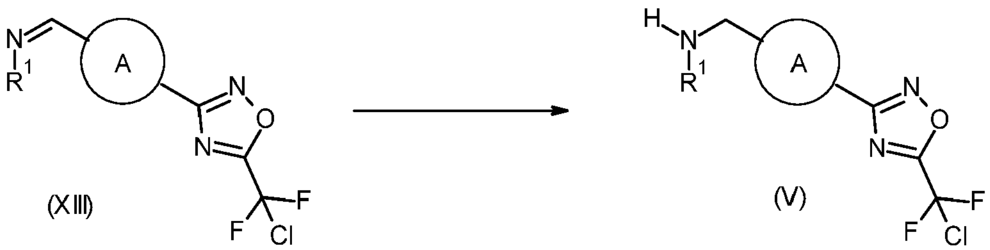

(XIII) (V)

Process P12

Compounds of formula (XIII) may be prepared starting from readily available compounds analogously to process P1 and P2 or analogously to process P1, P2 and P3.

Alternatively, compounds of formula (XIII) can be prepared, according to process P13, by reacting a compound of formula (XI) with a compound of formula (XIV) or a salt thereof, optionally in presence of a base such as sodium acetate in a solvent such as ethanol as described for example Organic & Biomolecular Chemistry (2020), 18(34), 6732-6737.

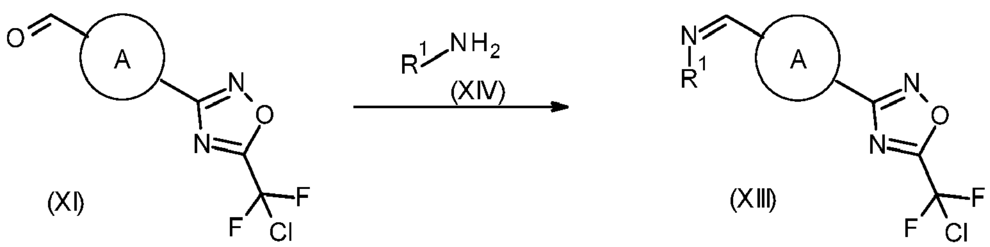


(XI) (XIII)

Process P13

Compounds of formula (XIV) can be commercially available or may be prepared starting from readily available compounds according to known procedures.

Compounds of formula (XI) may be prepared starting from readily available compounds analogously to process P1 and P2 or analogously to process P1, P2 and P3.

Alternatively, compounds of formula (XI) can be prepared, according to process P14, from a compound of formula (VIII") by treatment with an oxidizing agent such as for example manganese oxide in a solvent such as for example chloroform as described for example in Journal of the American Chemical Society (2019), 141(6), 2274-2278.

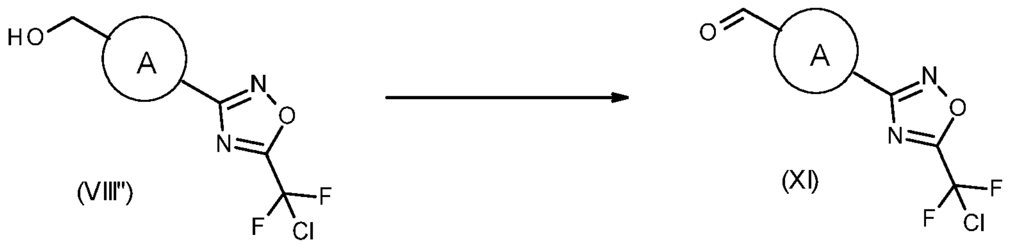

Process P14

Compounds of formula (VIII") may be prepared starting from readily available compounds analogously to process P1 and P2 or analogously to process P1, P2 and P3.

According to the invention, processes P1 to P14 can be performed if appropriate in the presence of a solvent and if appropriate in the presence of a base.

Suitable solvents for carrying out processes P1 to P14 according to the invention are customary inert organic solvents. Preference is given to using optionally halogenated aliphatic, alicyclic or aromatic hydrocarbons, such as petroleum ether, hexane, heptane, cyclohexane, methylcyclohexane, benzene, toluene, xylene or decalin; chlorobenzene, dichlorobenzene, dichloromethane, chloroform, carbon tetrachloride, dichlorethane or trichlorethane ; ethers, such as diethyl ether, diisopropyl ether, methyl tert-butyl ether, methyl tert-amyl ether, dioxane, tetrahydrofuran, 1,2-dimethoxyethane, 1,2-diethoxyethane or anisole; nitriles, such as acetonitrile, propionitrile, n- or iso-butyronitrile or benzonitrile; amides, such as N,N dimethylformamide, N,N-dimethylacetamide, N-methylformanilide, N-methylpyrrolidone or hexamethylphosphoric triamide; esters, such as methyl acetate or ethyl acetate, sulfoxides, such as dimethyl sulfoxide or sulfones, such as sulfolane.

Suitable bases for carrying out processes P1 to P14 according to the invention are inorganic and organic bases which are customary for such reactions. Preference is given to using alkaline earth metal, alkali metal hydride, alkali metal hydroxides or alkali metal alkoxides, such as sodium hydroxide, sodium hydride, calcium hydroxide, potassium hydroxide, potassium tert-butoxide or other ammonium hydroxide, alkali metal carbonates, such as sodium carbonate, potassium carbonate, potassium bicarbonate, sodium bicarbonate, cesium carbonate, alkali metal or alkaline earth metal acetates, such as sodium acetate, potassium acetate, calcium acetate and also tertiary amines, such as trimethylamine, triethylamine, diisopropylethylamine, tributylamine, N,N-dimethylaniline, pyridine, N-methylpiperidine, *N,N*-dimethylaminopyridine, 1,4-diazabicyclo[2.2.2]octane (DABCO), 1,5-diazabicyclo[4.3.0]non-5-ene (DBN) or 1,8-diazabicyclo[5.4.0]undec-7-ene (DBU).

When carrying out processes P1 to P14, according to the invention, the reaction temperature can independently be varied within a relatively wide range. Generally, processes according to the invention are carried out at temperatures between -20°C and 160°C.

Processes P1 to P14 according to the invention are generally independently carried out under atmospheric pressure. However, it is also possible to operate under elevated or reduced pressure.

Work-up is carried out by customary methods. Generally, the reaction mixture is treated with water and the organic phase is separated off and, after drying, concentrated under reduced pressure. If appropriate, the remaining residue can be freed by customary methods, such as chromatography or recrystallization, from any impurities that can still be present.

Compounds according to the invention can be prepared according to the above described processes. It will nevertheless be understood that, on the basis of his general knowledge and of available publications, the skilled worker will be able to adapt these processes according to the specifics of each of the compounds according to the invention that is desired to be synthesized.

## EXAMPLES

Generality

Measurement of LogP values

Measurement of LogP values was performed according to EEC directive 79/831 Annex V.A8 by HPLC (High Performance Liquid Chromatography) on reversed phase columns (Agilent Zorbax Eclipse C18) with the following methods:

[a] LogP value is determined by measurement of LC-UV and/or MS and/or ELS, in an acidic range, with 0.1% formic

acid in water and acetonitrile as eluent (linear gradient from 10% acetonitrile to 95% acetonitrile).

[b] LogP value is determined by measurement of LC-UV and/or MS and/or ELS, in a neutral range, with 0.001 molar ammonium acetate solution in water and acetonitrile as eluent (linear gradient from 10% acetonitrile to 95% acetonitrile).

If more than one LogP value is available within the same method, all the values are given and separated by "+".
Calibration was done with straight-chain alkan2-ones (with 3 to 16 carbon atoms) with known LogP values (measurement of LogP values using retention times with linear interpolation between successive alkanones). Lambda-max-values were determined using UV-spectra from 200 nm to 400 nm and the peak values of the chromatographic signals.

$^1$H-NMR data

$^1$H-NMR data of selected examples as provided herein are written in form of $^1$H-NMR-peak lists. To each signal peak are listed the d-value in ppm and the signal intensity in round brackets. Between the d-value - signal intensity pairs are semicolons as delimiters.
The peak list of an example has therefore the form:
$d_1$ (intensity$_1$); $d_2$ (intensity$_2$);.......; $d_i$ (intensity$_i$);......; $d_n$ (intensity$_n$)
Intensity of sharp signals correlates with the height of the signals in a printed example of a NMR spectrum in cm and shows the real relations of signal intensities. From broad signals several peaks or the middle of the signal and their relative intensity in comparison to the most intensive signal in the spectrum can be shown.
For calibrating chemical shift for $^1$H spectra, we use tetramethylsilane and/or the chemical shift of the solvent used, especially in the case of spectra measured in DMSO. Therefore in NMR peak lists, tetramethylsilane peak can occur but not necessarily.
The $^1$H-NMR peak lists are similar to classical $^1$H-NMR prints and contains therefore usually all peaks, which are listed at classical NMR-interpretation.
Additionally they can show like classical $^1$H-NMR prints signals of solvents, stereoisomers of the target compounds, which are also object of the invention, and/or peaks of impurities.
To show compound signals in the delta-range of solvents and/or water the usual peaks of solvents, for example peaks of DMSO in DMSO-$D_6$ and the peak of water are shown in our $^1$H-NMR peak lists and have usually on average a high intensity .
The peaks of stereoisomers of the target compounds and/or peaks of impurities have usually on average a lower intensity than the peaks of target compounds (for example with a purity >90%).
Such stereoisomers and/or impurities can be typical for the specific preparation process. Therefore their peaks can help to recognize the reproduction of our preparation process via "side-products-fingerprints".
An expert, who calculates the peaks of the target compounds with known methods (MestreC, ACD-simulation, but also with empirically evaluated expectation values) can isolate the peaks of the target compounds as needed optionally using additional intensity filters. This isolation would be similar to relevant peak picking at classical $^1$H-NMR interpretation.
Further details ofNMR-data description with peak lists you find in the publication "Citation of NMR Peaklist Data within Patent Applications" of the Research Disclosure Database Number 564025.
The following examples illustrate in a non-limiting manner the preparation and biological activity of the compound combination according to the invention and of the compounds contained in the compound combination according to the invention.
The following table lists the abbreviations used in the Examples section as far as they are not explained within the text body.

| Abbreviation | Meaning |
|---|---|
| AIBN | azobisisobutyronitrile |
| DMSO | dimethyl sulfoxide |
| equiv | equivalents |
| EtOAc | ethyl acetate |
| GCMS | gas chromatography mass spectrometry |
| h | hours |

(continued)

| Abbreviation | Meaning |
|---|---|
| HPLC | high performance liquid chromatography |
| LC-UV | liquid chromatography with UV detection |
| LC-UV-MS | liquid chromatography coupled to mass spectrometry and UV detection |
| min | minutes |
| MS | mass spectrometry |
| NMR | nuclear magnetic resonance spectroscopy: chemical shifts ($\delta$) are given in ppm. |
| ppm | parts per million |
| THF | tetrahydrofuran |

**SYNTHESIS OF COMPOUNDS OF FORMULA (I) AND INTERMEDIATES**

Table 1 discloses analytical data of compounds of formula (I) of compound combinations according to the invention and their intermediates.

The compounds of formula (I) which are mentioned in table 1 herein below were prepared in accordance with the procedures detailed herein below in connection with specific examples and with the general description of the processes herein disclosed.

Table 1: Analytical Data

| Ex N° | $^1$H-NMR Peak List | LogP |
|---|---|---|
| 1.01 | $^1$H-NMR(600.2 MHz, $d_6$-DMSO): $\delta$= 8.5285 (8.6); 7.9142 (9.0); 7.8983 (2.8); 7.8962 (3.2); 7.8720 (2.7); 7.8703 (2.6); 7.8550 (2.7); 7.8532 (2.6); 7.4548 (1.9); 7.4419 (3.6); 7.4290 (1.8); 5.5669 (12.3); 4.2428 (2.4); 4.2310 (7.5); 4.2191 (7.6); 4.2073 (2.5); 3.3252 (6.6); 2.5104 (2.7); 2.5077 (3.6); 2.5050 (2.8); 1.2831 (7.9); 1.2713 (16.0); 1.2594 (7.9) | 3.98[a] |
| 1.02 | $^1$H-NMR(600.2 MHz, $d_6$-DMSO): $\delta$= 8.5292 (6.0); 7.9342 (5.5); 7.8172 (3.4); 7.8110 (3.6); 7.2965 (3.1); 7.2904 (3.1); 5.7039 (10.1); 4.2372 (1.6); 4.2254 (5.0); 4.2135 (5.1); 4.2017 (1.7); 3.3280 (16.0); 2.5078 (3.6); 1.2785 (5.2); 1.2666 (10.5); 1.2548 (5.2) | 3.81[a] |
| 1.03 | $^1$H-NMR(600.2 MHz, $d_6$-DMSO): $\delta$= 8.0596 (8.1); 8.0459 (8.6); 7.9705 (6.5); 7.9669 (6.6); 7.4502 (8.0); 7.4366 (7.8); 6.5308 (6.4); 6.5271 (6.4); 5.4682 (16.0); 4.1411 (10.6); 3.3347 (6.7); 2.5076 (2.1) | 3.81[a] |
| 1.04 | $^1$H-NMR(600.2 MHz, $d_6$-DMSO): $\delta$= 10.6288 (4.4); 8.0414 (4.0); 8.0277 (4.3); 7.5354 (3.9); 7.5218 (3.8); 4.6763 (7.5); 3.5892 (16.0); 3.5334 (15.6); 3.3300 (1.0); 2.5103 (0.7); 2.5078 (0.9); 2.5053 (0.7) | 2.92[a] |
| 1.05 | $^1$H-NMR(600.2 MHz, $d_6$-DMSO): $\delta$= 8.0443 (4.2); 8.0306 (4.6); 7.5159 (4.0); 7.5023 (4.0); 5.0097 (2.0); 4.9829 (2.7); 4.8408 (1.3); 4.8140 (1.0); 4.2990 (0.6); 4.2881 (1.8); 4.2772 (1.8); 4.2663 (0.6); 3.7329 (9.5); 3.3286 (1.2); 3.2311 (16.0); 1.2316 (8.2); 1.2206 (8.5) | 3.31[a] |
| VIII" -a | $^1$H-NMR(400.1 MHz, CDCl3): $\delta$= 7.9420 (7.6); 7.9383 (7.9); 7.9222 (8.7); 7.9184 (9.1); 7.8125 (8.8); 7.8087 (8.3); 7.7867 (8.7); 7.7829 (8.3); 7.6506 (6.3); 7.6316 (10.7); 7.6124 (5.5); 7.2626 (7.7); 4.8600 (15.8); 4.8457 (16.0); 2.0077 (4.1); 1.9929 (8.1); 1.9778 (3.6); 1.6181 (12.1); -0.0002 (7.9) | 2.98[al |
| VIII'-a | $^1$H-NMR(400.1 MHz, $d_6$-DMSO): $\delta$= 7.9361 (2.9); 7.9321 (3.2); 7.9163 (3.8); 7.9123 (4.6); 7.8878 (3.4); 7.8840 (2.9); 7.8621 (3.4); 7.8582 (3.0); 7.8323 (3.3); 7.8129 (5.2); 7.7933 (2.4); 5.4970 (0.5); 4.7943 (16.0); 3.3230 (6.0); 2.5178 (2.1); 2.5134 (4.5); 2.5089 (6.2); 2.5044 (4.4); 2.5000 (2.1) | 4.66[a] |
| X-a | $^1$H-NMR(300.1 MHz, CDCl3): $\delta$= 7.6769 (3.6); 7.6646 (3.6); 7.2616 (0.4); 6.8451 (2.5); 6.8329 (2.4); 5.2962 (0.8); 2.5645 (16.0); -0.0001 (0.4) | 4.18[a] |

(continued)

| Ex N° | $^1$H-NMR Peak List | LogP |
|---|---|---|
| VIII'-b | $^1$H-NMR(300.1 MHz, $d_6$-DMSO): δ= 8.0242 (0.3); 7.8216 (0.6); 7.8068 (4.6); 7.7942 (4.9); 7.4158 (4.6); 7.4031 (4.3); 5.9477 (0.4); 5.1037 (16.0); 3.5266 (0.8); 2.5134 (4.4); 2.5083 (5.4); - 0.0002 (2.4) | 4.20[a] |
| X-b | $^1$H-NMR(300.1 MHz, $d_6$-DMSO): δ= 7.9643 (5.3); 7.9590 (2.0); 7.9427 (2.0); 7.9370 (5.9); 7.4449 (4.6); 7.4183 (4.2); 3.3350 (7.0); 2.5207 (0.9); 2.5148 (1.7); 2.5088 (2.3); 2.5029 (1.6); 2.4972 (0.8); 2.4130 (16.0); -0.0001 (0.5) | 4.55[a] |
| VIII'-c | $^1$H-NMR(400.2 MHz, $d_6$-DMSO): δ= 8.2390 (0.4); 8.2181 (0.5); 8.1387 (1.4); 8.1341 (0.4); 8.1220 (0.5); 8.1174 (1.4); 8.0729 (1.2); 8.0685 (6.8); 8.0640 (2.4); 8.0521 (2.5); 8.0476 (7.6); 8.0431 (1.3); 7.8701 (1.4); 7.8654 (0.5); 7.8534 (0.4); 7.8489 (1.2); 7.7628 (0.5); 7.7418 (0.4); 7.7040 (7.2); 7.6995 (2.4); 7.6873 (2.3); 7.6831 (6.3); 7.5265 (1.8); 5.6154 (0.8); 5.4328 (0.4); 4.8070 (16.0); 3.3789 (7.0); 2.5176 (1.4); 2.5132 (2.9); 2.5086 (3.9); 2.5041 (2.8); 2.4996 (1.3); 2.4129 (0.6); 1.2274 (0.4); 0.0000 (0.7) | 4.48 [a] |
| V-a | $^1$H-NMR(600.2 MHz, CDCl3): δ= 8.0932 (3.8); 8.0795 (4.0); 7.5267 (3.7); 7.5131 (3.5); 7.2631 (0.5); 4.1155 (8.4); 3.4975 (16.0); 0.0000 (0.7) | 3.09[al |

**PREPARATION EXAMPLES**

**Synthesis of ethyl 1-(4-{5-[chloro(difluoro)methyl]-1,2,4-oxadiazol-3-yl}-2-fluorobenzyl)-1H-pyrazole-4-carboxytate (I.01)**

Step 1: (4-15-[chloro(difluoro)methyl]-1,2,4-oxadiazol-3-yl}-2-fluorophenyl)methanol (VIII"-a)

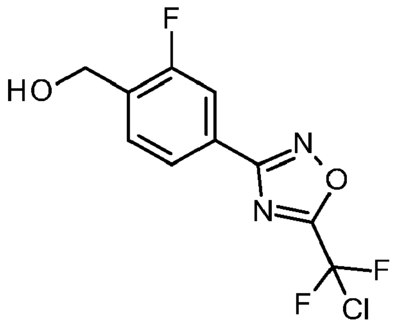

To a solution of 3-fluoro-4-(hydroxymethyl)benzonitrile (19.00 g, 125.82 mmol, 1.00 equiv, 95%) in methanol (400 mL) were added sodium bicarbonate (21.13 g, 251.64 mmol, 2.00 equiv) and hydroxylamine hydrochloride (17.36 g, 251.64 mmol, 2.00 equiv) at room temperature under nitrogen atmosphere. The resulting mixture was stirred for 5 hours at 70 °C. After cooled to room temperature, the reaction mixture was filtered and the filter cake was washed by methanol (50 mL). The filtrate was collected and concentrated under reduced pressure to afford the crude product (Z)-3-fluoro-N'-hydroxy-4-(hydroxymethyl)benzimidamide (23.20 g, 96% yield) as a light yellow solid used in the next step without further purification. Mass (M+H) = 185; $^1$H-NMR(400 MHz, DMSO-$d_6$) δ: 9.74 (s, 1H), 7.38-7.53 (m, 3H), 5.89 (s, 2H), 5.33 (s, 1H), 4.55 (s, 2H). To a solution of crude (Z)-3-fluoro-N'-hydroxy-4-(hydroxymethyl)benzenecarboximidamide (11.0 g, 57.9 mmol, 1.0 equiv) in THF (200 mL) were added pyridine (9.6 mL, 119.4 mmol, 2.0 equiv) and 2-chloro-2,2-difluoroacetic anhydride (17.8 g, 69.4 mmol, 1.2 equiv) at room temperature under nitrogen atmosphere. The resulting mixture was stirred at 70 °C for 2 hours under nitrogen atmosphere. After cooled to room temperature, the reaction mixture was concentrated under reduced pressure, quenched by brine and extracted three times with ethyl acetate. The combined organic layers were washed with brine and dried over anhydrous sodium sulfate. After filtration, the filtrate was concentrated under reduced pressure and purified by silica gel flash column chromatography, eluted with ethyl acetate/petroleum ether to afford (4-{5-[chloro(difluoro)methyl]-1,2,4-oxadiazol-3-yl}-2-fluorophenyl)methanol (10.8 g, 60% yield) as a light grey solid. LogP = 2.98 [Method A].

Step 2: 3-[4-(bromomethyl)-3-fluorophenyl]-5-[chloro(difluoro)methyl]-1,2,4-oxadiazole (VIII'-a)

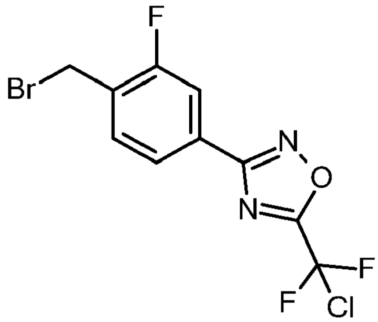

To a solution of (4-{5-[chloro(difluoro)methyl]-1,2,4-oxadiazol-3-yl}-3-fluorophenyl)methanol (11.7 g, 39.9 mmol, 1.0 equiv) in dichloromethane (150 mL) was added triphenylphosphine (15.7 g, 59.8 mmol, 1.5 equiv) and tetrabromomethane (19.8 g, 59.8 mmol, 1.5 equiv) in portions at 0 °C. After stirring at 0 °C for 2 hours, the reaction mixture was concentrated under reduced pressure. The residue was purified by preparative HPLC (acetonitrile/ water) to the title compound (7.3 g, 51% yield) as a white solid. LogP = 4.66 [Method A].

Step 3: Ethyl 1-(4-15-[chloro(difluoro)methyl]-1,2,4-oxadiazol-3-yl}-2-fluorobenzyl)-1H-pyrazole-4-carboxylate (I.01)

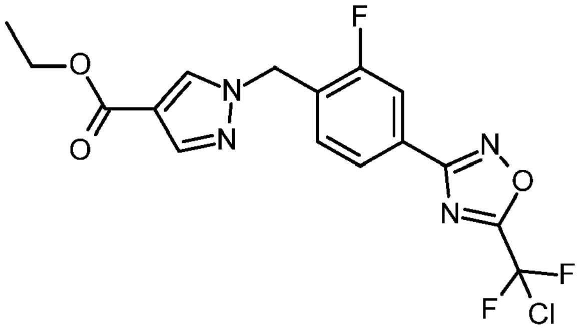

To a solution of ethyl 1*H*-pyrazole-4-carboxylate (135 mg, 0.96 mmol, 1.4 equiv) in tetrahydrofuran (10 mL) under argon was added a 2.0 M solution of potassium hexamethyldisilazide in tetrahydrofuran (0.97 mL, 0.96 mmol, 1.4 equiv) at room temperature. After 2 minutes stirring, 3-[4-(bromomethyl)-3-fluoro-phenyl]-5-[chloro(difluoro)methyl]-1,2,4-oxadiazole (300 mg, 0.87 mmol) was added in one portion. The resulting mixture was stirred for 20 hours at room temperature. The mixture was concentrated under reduced pressure and dichloromethane (10 mL) was added to the residue. The solid was filtered off and the filtrate concentrated under reduced pressure to afford a crude product, which was purified by silica gel flash column chromatography, eluted with n-heptane/EtOAc (70:30) to afford the title compound (320 mg, 100% purity, 91%) as a solid. LogP = 3.98 [Method A]. Mass (M+H) = 401.

**Synthesis of ethyl 1-[(5-{5-[chloro(difluoro)methyl]-1,2,4-oxadiazol-3-yl}-2-thienyl)methyl]-1*H*-pyrazole-4-carboxylate (I.02)**

Step 1: 5-[chloro(difluoro)methyl]-3-(5-methyl-2-thienyl)-1,2,4-oxadiazole (X-a)

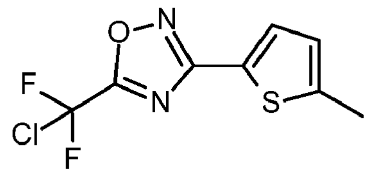

To a suspension of 5-methylthiophene-2-carbonitrile (4.39 g, 35.6 mmol) in ethanol (400 mL) was added hydroxylamine hydrochloride (9.92 g, 142 mmol, 4.0 equiv) and triethylamine (44.75 mL, 321 mmol, 9.0 equiv) at room temperature. The resulting mixture was stirred for 2 hours at 75 °C and at room temperature for 3 days. The reaction mixture was concentrated under reduced pressure to afford crude N'-hydroxy-5-methylthiophene-2-carboximidamide as a white solid used as such in the next step. LogP = 1.17 [Method B]. Mass (M+H) = 157. To a suspension of previously obtained crude N'-hydroxy-5-methylthiophene-2-carboximidamide in tetrahydrofuran (400 mL) under argon was added chloro(difluoro)acetic anhydride (12.1 g, 49.9 mmol, 1.4 equiv), followed by triethylamine (7.0 mL, 49.94 mmol, 1.4 equiv) dropwise at room temperature. The resulting mixture was stirred for 2 hours at 65 °C and at room temperature for 16 hours. The mixture was concentrated under reduced pressure to afford a crude product which was purified by silica gel flash column chromatography, eluted with n-heptane/EtOAc (85:15) to afford the title compound (7.2 g, 96% purity, 77%) as an oil. LogP = 4.18 [Method A]. Mass (M) = 250.

Step 2: 3-[5-(bromomethyl)-2-thienyl]-5-[chloro(difluoro)methyl]-1,2,4-oxadiazole (VIII'-b)

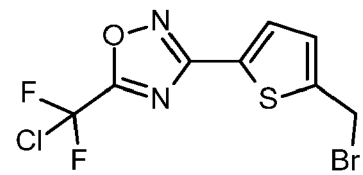

To a solution of 5-[chloro(difluoro)methyl]-3-(5-methyl-2-thienyl)-1,2,4-oxadiazole (7.2 g, 28.7 mmol) in carbon tetrachloride (100 mL) under argon was added N-bromosuccinimide (5.1 g, 28.7 mmol, 1.0 equiv) and dibenzoyl peroxide (696 mg, 2.87 mmol, 0.1 equiv) at room temperature. The resulting mixture was stirred at reflux for 22 hours. The mixture was concentrated under reduced pressure to afford a crude product which was purified by silica gel flash column chromatography, eluted with n-heptane/EtOAc (85:15) to afford the title compound (7.3 g, 90% purity, 69%) as an oil. LogP = 4.20 [Method A]. Mass (M) = 328.

Step 3: ethyl 1-[(5-15-[chloro(difluoro)methyl]-1,2,4-oxadiazol-3-yl}-2-thienyl)methyl]-1*H*-pyrazole-4-carboxylate (I.02)

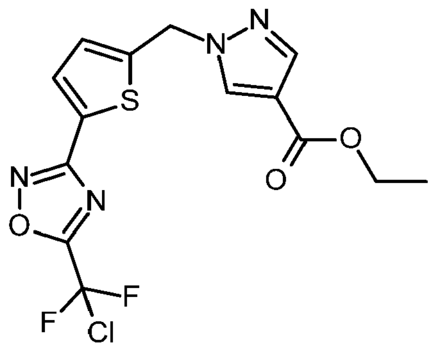

To a solution of 3-[5-(bromomethyl)-2-thienyl]-5-[chloro(difluoro)methyl]-1,2,4-oxadiazole (200 mg, 0.4 mmol) and_ethyl 1H-pyrazole-4-carboxylate (62 mg, 0.44 mmol, 1.1 equiv) in acetonitrile (20 mL) under argon was added potassium carbonate (111 mg, 0.80 mmol, 2.0 equiv) at room temperature. The resulting mixture was stirred for 18 hours at room temperature. The mixture was concentrated under reduced pressure to afford a crude product which was purified

by silica gel flash column chromatography, eluted with n-heptane/EtOAc (70:30) to afford the title compound (36 mg, 100 % purity, 23%) as a white solid. LogP = 3.81 [Method A]. Mass (M+H) = 389.

**Synthesis of 5-[chloro(difluoro)methyl]-3-{4-[(3-ethynyl-1H-pyrazol-1-yl)methyl]phenyl}-1,2,4-oxadiazole (1.03)**

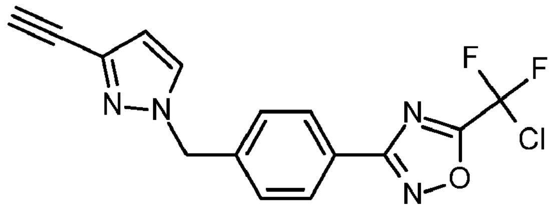

To a solution of 3-ethynyl-1H-pyrazole (113 mg, 1.22 mmol, 1.2 equiv) in tetrahydrofuran (10 mL) under argon was added a 2.0 M solution of potassium hexamethyldisilazide in tetrahydrofuran (1.22 mL, 1.22 mmol, 1.2 equiv) at room temperature. After 2 minutes stirring 3-[4-(bromomethyl)-3-fluoro-phenyl]-5-[chloro(difluoro)methyl]-1,2,4-oxadiazole (330 mg, 1.02 mmol) was added in one portion. The resulting mixture was stirred for 4 hours at room temperature. The mixture was concentrated under reduced pressure and dichloromethane (10 mL) was added to the residue. The solid was filtered off and the filtrate concentrated under reduced pressure to afford a crude product, which was purified by silica gel flash column chromatography, eluted with n-heptane/EtOAc (70:30) to afford the title compound (213 mg, 100% purity, 62%) as a solid. LogP = 3.31 [Method A]. Mass (M+H) = 335.

**Synthesis of 1-(4-{5-[Chloro(difluoro)methyl]-1,2,4-oxadiazol-3-yl}benzyl)-1,3-dimethoxyurea (I.04)**

Step 1: 3-(4-Methylphenyl)-5-(chlorodifluoromethyl)-1,2,4-oxadiazole (X-b)

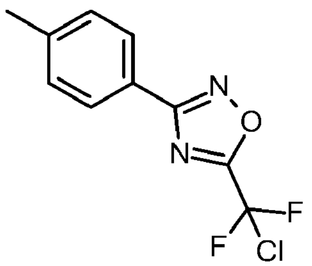

A mixture of chloro(difluoro)acetic acid (181 g, 1390 mmol) and oxalyl chloride (176 g, 1390 mmol) in dichloromethane (1000 mL) was stirred for 2 hours at room temperature. The resulting mixture was added dropwise to a solution ofN-hydroxy-4-methylbenzenecarboximidamide (105 g, 690 mmol) in pyridine (275 g, 3500 mmol) at 0 °C. The reaction mixture was stirred for 16 hours at room temperature and diluted with water. The organic layer was washed with water, brine, dried over anhydrous sodium sulfate and concentrated under reduced pressure to afford the title compound (151 g, 89% yield) used as such in the next step. LogP = 4.55 [Method A].

Step 2: 3-[4-(Bromomethyl)phenyl]-5-(chlorodifluoromethyl)-1,2,4-oxadiazole (VIII'-c)

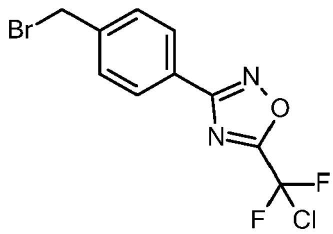

A mixture of 3-(4-methylphenyl)-5-(chlorodifluoromethyl)-1,2,4-oxadiazole (151 g, 620 mmol) and N-bromosuccinimide (110 g, 620 mmol) in carbon tetrachloride (2000 mL) was stirred for 10 minutes at room temperature before AIBN (10 g, 62 mmol) was added. The reaction mixture was stirred for 16 hours at 70 °C and diluted with water. The organic layer was washed with water, brine, dried over anhydrous sodium sulfate, concentrated under reduced pressure and purified by silica gel flash column chromatography to afford the title compound (100 g, 50% yield). LogP = 4.48 [Method A].

Step 3: 1-[4-[5-[Chloro(difluoro)methyl]-1.2.4-oxadiazol-3-yl]phenyl]-N-methoxy-methanamine (V-a)

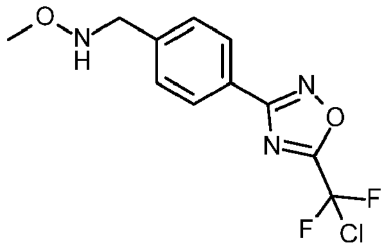

To a solution of N-[(4-{5-[chloro(difluoro)methyl]-1,2,4-oxadiazol-3-yl}phenyl)methylene]-O-methylhydroxylamine (60 g, 209 mmol, 1 equiv) in acetic acid (1200 mL) was added sodium cyanoborohydride (26 g, 417 mmol, 2 equiv) in portions at 0°C. The resulting mixture was stirred overnight at room temperature. The reaction mixture was quenched with a saturated solution of sodium bicarbonate. The two layers were separated and the aqueous phase was extracted with ethyl acetate. The combined organic layers were washed with saturated solution of sodium bicarbonate and brine, dried over anhydrous sodium sulfate, filtered and concentrated under reduced pressure. The residue was purified with silica gel chromatography (petroleum ether: ethyl acetate = 7: 1) to 1-[4-[5-[chloro(difluoro)methyl]-1,2,4-oxadiazol-3-yl]phenyl]-N-methoxy-methanamine (26 g, 41 %) as a light yellow oil. LogP = 3.09 [Method A]. Mass (M+H) = 290.

Step 4: 1-(4-{5-[Chloro(difluoro)methyl]-1,2,4-oxadiazol-3-yl}benzyl)-1,3-dimethoxyurea (1.04)

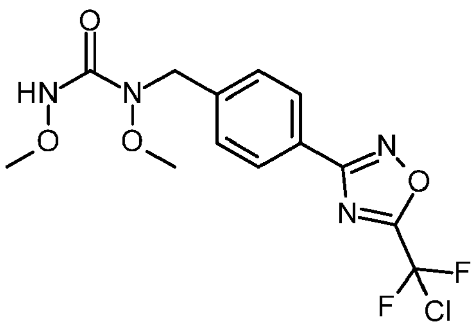

To a stirred suspension of 1-[4-[5-[chloro(difluoro)methyl]-1,2,4-oxadiazol-3-yl]phenyl]-N-methoxy-methanamine (200 mg, 0.69 mmol, 1 eq.) in THF (2.4 ml) was added 1,1'-carbonyldiimidazole (149 mg, 0.91 mmol, 1.33 eq.) in one portion. After stirring for 1.5 hour at room temperature, O-methylhydroxylamine (260 mg, 3.1 mmol, 4.5 eq.) was

added followed by triethylamine (0.43 ml, 3.1 mmol, 4.5 eq.). The mixture was stirred for 20 hours and concentrated under reduced pressure. The residue was purified by silica gel chromatography (heptane/ethyl acetate) to afford 1-(4-{5-[Chloro(difluoro)methyl]-1,2,4-oxadiazol-3-yl}benzyl)-1,3-dimethoxyurea (150 mg, 59 % yield) as a white solid. LogP = 2.92 [Method A]. Mass (M+H) = 363.

**Synthesis of N-(4-{5-[chloro(difluoro)methyl]-1,2,4-oxadiazol-3-yl}benzyl)-N,2-dimethoxypropan-amide (1.05)**

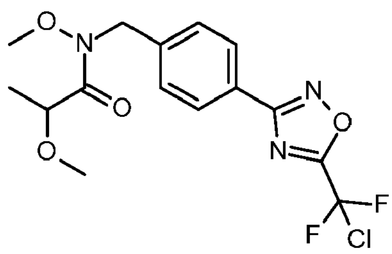

To a solution of 2-methoxypropanoic acid (431 mg, 4.14 mmol, 1.2 equiv) and 1-[bis(dimethylamino)methylene]-1H-1,2,3-triazolo[4,5-b]pyridinium 3-oxid hexafluorophosphate (1.58 g, 4.14 mmol, 1.2 equiv) in N,N-dimethylformamide (20 mL) under argon was added N,N-diisopropylethylamine (8.42 mL, 48.3 mmol, 14.0 equiv) at room temperature. After 5 minutes, N-(4-{5-[chloro(difluoro)methyl]-1,2,4-oxadiazol-3-yl}benzyl)-O-methylhydroxylamine (1.0 g, 3.45 mmol) was added in one portion. The resulting mixture was stirred for 2 hours at room temperature. The mixture was added to water/brine and extracted with EtOAc. The combined organic layers were washed with water, dried over anhydrous $Na_2SO_4$. After filtration, the filtrate was concentrated under reduced pressure to afford a crude product which was purified by silica gel flash column chromatography, eluted with n-heptane/EtOAc (60:40) to afford the title compound (1.23 g, 98% purity, 93%) as a viscous oil. LogP = 3.31 [Method A]. Mass (M+H) = 376.

**SYNERGY TESTING**

The advanced fungicidal activity of the active compound combinations according to the invention is evident from the example below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):

If

X is the efficacy when active compound A is applied at an application rate of m ppm (or g/ha),

Y is the efficacy when active compound B is applied at an application rate of n ppm (or g/ha),

E is the efficacy when the active compounds A and B are applied at application rates of m and n ppm (or g/ha), respectively, and

then

$$E = X + Y - \frac{X \cdot Y}{100}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

## Claims

1. Active compound combination comprising

(A) a compound of formula (I)

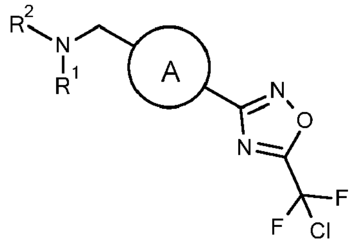

(I)

in which :

A is selected from the group consisting of

$A^1$ = 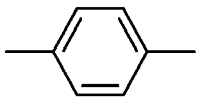 , $A^2$ = 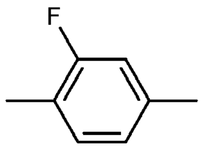 and $A^3$ = 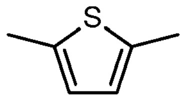 ,

$R^1$ is methoxy and
$R^2$ is (methoxyimino)carbonyl or 2-methoxypropanoyl, or
$R^1$ and $R^2$ form together with the nitrogen to which they are linked a pyrazole ring, which is substituted with one ethoxycarbonyl or ethynyl substituent;
or a salt or N-oxide thereof,
and

(B) a further active compound selected from the following groups

(1) inhibitors of the ergosterol synthesis,
(2) inhibitors of the respiratory chain at complex I or II,
(3) inhibitors of the respiratory chain at complex III,
(4) inhibitors of the mitosis and cell division,
(5) compounds capable of having a multisite action,
(6) compounds capable of inducing a host defense,
(7) inhibitors of the amino acid and/or protein biosynthesis,
(8) inhibitors of the ATP production,
(9) inhibitors of the cell wall synthesis,
(10) inhibitors of the lipid and membrane synthesis,
(11) inhibitors of the melanine biosynthesis,
(12) inhibitors of the nucleic acid synthesis,
(13) inhibitors of the signal transduction,
(14) compounds capable of acting as uncoupler,
(15) other fungicides, and
(16) biological fungicides.

2. The active compound combination according to claim 1 comprising as compound (A) a compound of the formula

(I) selected from the group consisting of the compounds of formulae (I.01), (I.02), (1.03), (1.04) and (1.05), or a salt or N-oxide thereof:

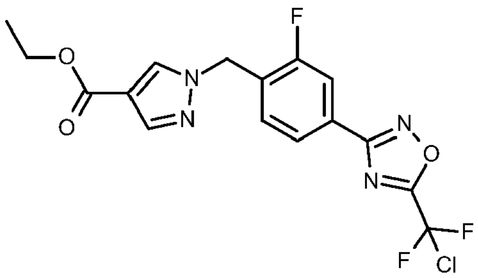
(I.01)

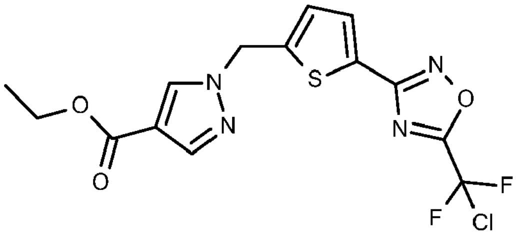
(I.02)

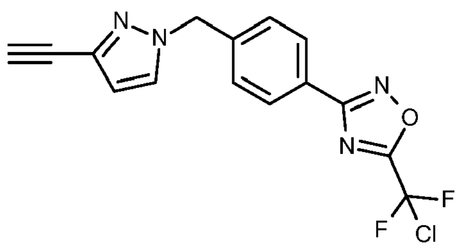
(I.03)

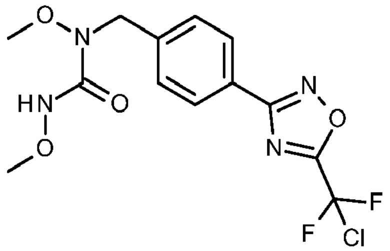
(I.04)

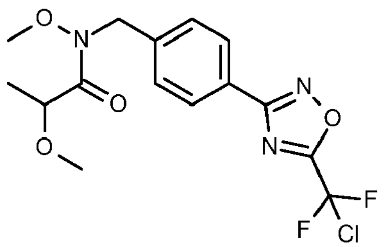
(I.05).

3. The active compound combination according to claim 1 comprising as compound (A) the compound of the formula (I.01)

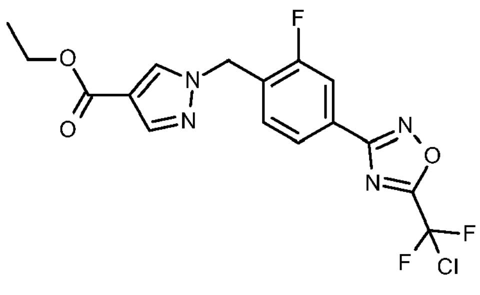
(I.01)

or a salt or N-oxide thereof.

4. The active compound combination according to claim 1 comprising as compound (A) a compound of formula (1.02)

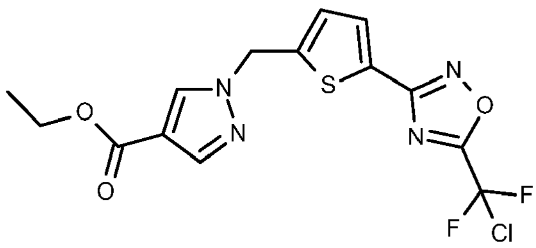

(I.02)

or a salt or N-oxide thereof.

**5.** The active compound combination according to claim 1 comprising as compound (A) a compound of formula (1.03)

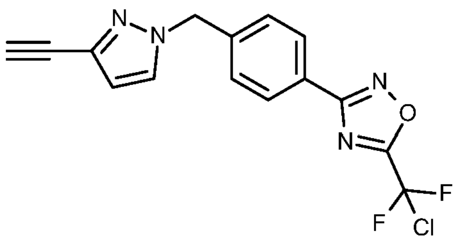

(I.03)

or a salt or N-oxide thereof.

**6.** The active compound combination according to claim 1 comprising as compound (A) a compound of formula (1.04)

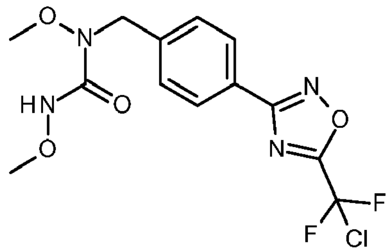

(I.04)

or a salt or N-oxide thereof.

**7.** The active compound combination according to claim 1 comprising as compound (A) a compound of formula (1.05)

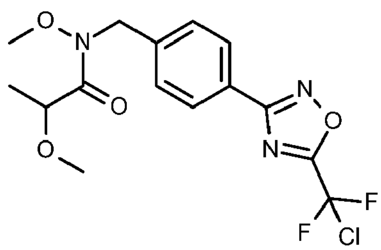

(I.05)

or a salt or N-oxide thereof.

**8.** The active compound combination according to any one of claims 1 to 7, wherein the effective weight ratio of compound (A) to compound (B) is within the range of from 1000:1 to 1:2500.

**9.** The active compound combination according to any one of claims 1 to 8, wherein the active compound (B) is selected

from the group consisting of (1.001) cyproconazole, (1.002) difenoconazole, (1.003) epoxiconazole, (1.015) ipconazole, (1.016) ipfentrifluconazole, (1.017) mefentrifluconazole, (1.018) metconazole, (1.024) prothioconazole, (1.026) spiroxamine, (1.027) tebuconazole, (1.032) (1R,2S,5S)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.063) 5 -(4-chlorobenzyl)-2-(chloromethyl)-2-methyl-1-(1H-1,2,4-triazol-1-ylmethyl)cyclopentanol, (1.067) methyl 2-[2-chloro-4-(4-chlorophenoxy)phenyl]-2-hydroxy-3-(1,2,4-triazol-1-yl)propanoate, (2.001) benzovindiflupyr, (2.002) bixafen, (2.005) cyclobutriflam, (2.007) fluindapyr, (2.008) fluopyram, (2.010) fluxapyroxad, (2.012) inpyrfluxam, (2.014) isoflucypram, (2.016) penflufen, (2.018) pydiflumetofen, (2.031) 3-(difluoromethyl)-1-methyl-N-(1,1,3-trimethyl-2,3-dihydro-1H-inden-4-yl)-1H-pyrazole-4-carboxamide, (3.003) azoxystrobin, (3.011) fenpicoxamid, (3.012) florylpicoxamid, (3.014) fluoxastrobin, (3.017) metarylpicoxamid, (3.019) metyltetraprole, (3.021) picoxystrobin, (3.022) pyraclostrobin, (3.025) trifloxystrobin, (4.007) pencycuron, (5.004) chlorothalonil, (5.005) copper hydroxide, (5.008) copper oxychloride, (5.009) copper(2+) sulfate, (5.012) folpet, (5.013) mancozeb, (6.005) isotianil, (7.005) pyrimethanil, (8.001) silthiofam, (9.002) dimethomorph, (10.001) fluoxapiprolin, (10.002) natamycin, (12.003) metalaxyl, (12.004) metalaxyl-M (mefenoxam), (13.001) fludioxonil, (13.004) proquinazid, (14.001) fluazinam, (15.025) picarbutrazox, and (16.01) *Bacillus subtilis* strain QST713/AQ713 (available as SERENADE OPTI or SERENADE ASO from Bayer CropScience LP, US, having NRRL Accession No. B21661and described in U.S. Patent No. 6,060,051).

**10.** The active compound combination according to claim 9, wherein the active compound (B) is selected from the group consisting of (1.002) difenoconazole, (1.024) prothioconazole, (1.027) tebuconazole, (1.032) (1R,2S,5S)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.063) 5-(4-chlorobenzyl)-2-(chloromethyl)-2-methyl-1-(1H-1,2,4-triazol-1-ylmethyl)cyclopentanol, (1.067) methyl 2-[2-chloro-4-(4-chlorophenoxy)phenyl]-2-hydroxy-3-(1,2,4-triazol-1-yl)propanoate, (2.002) bixafen, (2.008) fluopyram, (2.012) inpyrfluxam, (2.014) isoflucypram, (2.016) penflufen, (2.031) 3-(difluoromethyl)-1-methyl-N-(1,1,3-trimethyl-2,3-dihydro-1H-inden-4-yl)-1H-pyrazole-4-carboxamide, (3.003) azoxystrobin, (3.011) fenpicoxamid, (3.017) metarylpicoxamid, (3.025) trifloxystrobin, (4.007) pencycuron, (5.013) mancozeb, (6.005) isotianil, (10.001) fluoxapiprolin, (10.002) natamycin, (12.003) metalaxyl, (12.004) metalaxyl-M (mefenoxam), (13.001) fludioxonil, and (15.025) picarbutrazox.

**11.** A composition for controlling harmful microorganisms, preferably phytopathogenic harmful fungi, in crop protection and in the protection of materials, comprising an active compound combination according to any one of claims 1 to 10 and at least one extender and/or surfactant.

**12.** A method for controlling harmful microorganisms, preferably phytopathogenic harmful fungi, in crop protection and in the protection of materials comprising the step of applying, an active compound combination according to any one of claims 1 to 10 or a composition according to claim 11 to the harmful microorganisms and/or their habitat.

**13.** Use of an active compound combination according to any one of claims 1 to 10 or a composition according to claim 11 for control of harmful microorganisms, preferably phytopathogenic harmful fungi, in crop protection and in the protection of materials.

**14.** Seed coated with an active compound combination according to any one of claims 1 to 10 or a composition according to claim 11.

Europäisches Patentamt
European Patent Office
Office européen des brevets

# EUROPEAN SEARCH REPORT

Application Number
EP 22 19 8328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2022/207496 A1 (BAYER AG [DE]) 6 October 2022 (2022-10-06) * page 97; table 1; compounds I-005, I-013 * * page 34, line 26 - page 42, line 14 * * page 90, line 18 * * claim 11 * ----- | 1,2,6,7, 9-14 | INV. A01N43/82 A01P3/00 |
| E | WO 2022/207494 A1 (BAYER AG [DE]) 6 October 2022 (2022-10-06) * page 97; table 1; compounds I-084, I-085, I-093, I-099, I-171, I-255 * * page 54, line 23 - page 62, line 21 * * page 110, line 18 * * claim 13 * ----- | 1,2,6,7, 9-14 | |
| X<br>Y | WO 2017/055473 A1 (SYNGENTA PARTICIPATIONS AG [CH]) 6 April 2017 (2017-04-06) * page 105; table T1; compound 1.81 * * page 265; table T3; compound 322 * * page 45, line 9 - page 48, line 11 * ----- | 1-14<br>1-14 | |
| X<br>Y | WO 2018/187553 A1 (FMC CORP [US]) 11 October 2018 (2018-10-11) * page 138; table A; compound 67 * * page 147; table J; compound 70 * * page 154; table R; compound 304 * * page 118 * ----- | 1-14<br>1-14 | TECHNICAL FIELDS SEARCHED (IPC)<br>A01N<br>A01P |
| Y | WO 2019/197371 A1 (BAYER AG [DE]) 17 October 2019 (2019-10-17) * page 58; compounds IV-24 to IV-28 * ----- | 1-14 | |

1

The present search report has been drawn up for all claims

| Place of search | Date of completion of the search | Examiner |
|---|---|---|
| Munich | 7 March 2023 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 19 8328

This annex lists the patent family members relating to the patent documents cited in the above-mentioned European search report. The members are as contained in the European Patent Office EDP file on
The European Patent Office is in no way liable for these particulars which are merely given for the purpose of information.

07-03-2023

| Patent document cited in search report | Publication date | Patent family member(s) | Publication date |
|---|---|---|---|
| WO 2022207496 A1 | 06-10-2022 | NONE | |
| WO 2022207494 A1 | 06-10-2022 | NONE | |
| WO 2017055473 A1 | 06-04-2017 | BR 112018006623 A2 | 23-10-2018 |
| | | CL 2018000834 A1 | 06-07-2018 |
| | | CN 108137570 A | 08-06-2018 |
| | | CO 2018003840 A2 | 10-07-2018 |
| | | DK 3356358 T3 | 03-08-2020 |
| | | EP 3356358 A1 | 08-08-2018 |
| | | ES 2807849 T3 | 24-02-2021 |
| | | HU E050030 T2 | 30-11-2020 |
| | | IL 258012 A | 31-05-2018 |
| | | JP 6864675 B2 | 28-04-2021 |
| | | JP 2018531246 A | 25-10-2018 |
| | | PL 3356358 T3 | 02-11-2020 |
| | | SI 3356358 T1 | 30-09-2020 |
| | | US 2018273494 A1 | 27-09-2018 |
| | | US 2020172498 A1 | 04-06-2020 |
| | | US 2020181100 A1 | 11-06-2020 |
| | | UY 36925 A | 28-04-2017 |
| | | WO 2017055473 A1 | 06-04-2017 |
| | | ZA 201801828 B | 30-01-2019 |
| WO 2018187553 A1 | 11-10-2018 | AU 2018249537 A1 | 31-10-2019 |
| | | BR 112019020948 A2 | 05-05-2020 |
| | | CA 3059272 A1 | 11-10-2018 |
| | | CL 2019002853 A1 | 28-02-2020 |
| | | CN 110650956 A | 03-01-2020 |
| | | CO 2019012359 A2 | 17-01-2020 |
| | | EC SP19077553 A | 27-12-2019 |
| | | EP 3606920 A1 | 12-02-2020 |
| | | EP 3957636 A1 | 23-02-2022 |
| | | IL 269786 A | 28-11-2019 |
| | | JP 2020516598 A | 11-06-2020 |
| | | KR 20200003787 A | 10-01-2020 |
| | | PE 20200668 A1 | 11-06-2020 |
| | | PH 12019550206 A1 | 13-07-2020 |
| | | PL 3606920 T3 | 31-01-2022 |
| | | RU 2019135155 A | 04-05-2021 |
| | | SG 11201909278S A | 28-11-2019 |
| | | TW 201904950 A | 01-02-2019 |
| | | US 2020148672 A1 | 14-05-2020 |
| | | UY 37664 A | 01-10-2019 |
| | | WO 2018187553 A1 | 11-10-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 22 19 8328

This annex lists the patent family members relating to the patent documents cited in the above-mentioned European search report. The members are as contained in the European Patent Office EDP file on
The European Patent Office is in no way liable for these particulars which are merely given for the purpose of information.

07-03-2023

| Patent document cited in search report | Publication date | Patent family member(s) | Publication date |
|---|---|---|---|
| WO 2019197371 A1 | 17-10-2019 | AR 117416 A1 | 04-08-2021 |
| | | AU 2019252328 A1 | 22-10-2020 |
| | | BR 112020020663 A2 | 12-01-2021 |
| | | CA 3096497 A1 | 17-10-2019 |
| | | CO 2020012593 A2 | 18-01-2021 |
| | | EC SP20064220 A | 31-12-2020 |
| | | EP 3774748 A1 | 17-02-2021 |
| | | US 2021147371 A1 | 20-05-2021 |
| | | UY 38178 A | 31-10-2019 |
| | | WO 2019197371 A1 | 17-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2022057944 W
- EP 2022057936 W
- US 6060051 A
- US 6245551 B
- US 7094592 B
- TW 4764
- TW 5454
- TW 5096
- TW 5277
- US 5061495 A
- WO 2003000051 A
- WO 2016154297 A
- WO 2014028521 A
- WO 2013034938 A
- WO 2016020371 A
- WO 2017019448 A
- WO 2009116106 A
- US 8431120 B
- US 20100291039 A
- US 7579183 B
- JP 11253151 A
- WO 2010086790 A
- WO 2015067800 A
- WO 200364572 A
- WO 2011151819 A
- US 330576
- WO 2017205258 A
- IT 2008000196 W
- WO 2011106491 A
- WO 2013032693 A
- WO 2017066094 A
- WO 2006043635 A
- WO 2006003494 A
- WO 2010052161 A
- EP 2647626 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- CN 103265527 A
- WO 2014187846 A1
- WO 2010066780 A1
- WO 2011151146 A1
- WO 2014053450 A1
- WO 2019236274 A1
- WO 2019059412 A1
- DE 3335514
- EP 30287 A
- DE 2906507
- US 5123951 A
- EP 2248421 A
- WO 9107874 A
- EP 333131131 A
- EP 269806 A
- EP 268554 A
- EP 174562 A
- EP 346620 A
- WO 9108202 A
- WO 9507897 A
- EP 86750 A
- EP 94349 A
- EP 191736 A
- EP 0492366 A
- WO 200234048 A
- EP 0582198 A
- WO 9745016 A
- WO 9916744 A
- EP 365484 A
- CN 101838227
- WO 2004084631 A
- WO 2005015994 A
- WO 2005016001 A
- WO 2005112630 A
- WO 9838856 A
- WO 9827049 A
- WO 199000020 A
- WO 2007023719 A
- WO 2007023764 A
- WO 199813361 A
- JP 60087254 A
- WO 2008131861 A
- WO 2008131860 A
- US 5549718 A

- US 4536207 A
- US 5965545 A
- US 5702752 A
- US 5990291 A
- US 6146668 A
- WO 9717432 A
- WO 9808932 A
- WO 200147952 A
- WO 9850427 A
- WO 2009152359 A
- WO 2007024782 A
- US 6855533 B
- WO 2019103918 A
- WO 2002040677 A
- WO 2006128569 A
- WO 2006128570 A
- US 2002120964 A
- WO 2002034946 A
- WO 2010117737 A
- WO 2010117735 A
- WO 2005103266 A
- US 2005216969 A
- US 2007143876 A
- WO 2006098952 A
- US 2006230473 A
- WO 2002027004 A
- WO 11075593 A
- WO 2011075595 A
- WO 2010077816 A
- US 2006162007 A
- WO 2004053062 A
- US 2003126634 A
- WO 2010080829 A
- WO 2005074671 A
- US 2009217423 A
- WO 2006128573 A
- US 20100024077 A
- WO 2006128571 A
- WO 2006128572 A
- US 2006130175 A
- WO 2004039986 A
- US 2007067868 A
- WO 2005054479 A
- WO 2005054480 A
- WO 2012033794 A
- WO 2011022469 A
- WO 2012075426 A
- WO 2012075429 A
- US 2006070139 A
- WO 2009100188 A
- WO 2011066384 A
- WO 2011066360 A
- US 2009 A
- US 137395 A
- WO 08112019 A
- US 2008312082 A
- WO 2008054747 A
- US 20090210970 A
- WO 2009103049 A
- US 20100184079 A
- WO 2008002872 A
- WO 07091277 A
- US 2006059581 A
- WO 98044140 A
- WO 2011063413 A
- US 2005086719 A
- US 2005188434 A
- WO 2008151780 A
- US 2010050282 A
- WO 2007017186 A
- WO 2010076212 A
- US 2004172669 A
- WO 2004074492 A
- US 2008064032 A
- WO 2006108674 A
- US 2008320616 A
- WO 2006108675 A
- US 2008196127 A
- WO 2003013224 A
- US 2003097687 A
- US 6468747 B
- WO 2000026345 A
- US 20082289060 A
- WO 2000026356 A
- US 2007028322 A
- WO 2005061720 A
- US 2009300784 A
- WO 2007142840 A
- US 2008167456 A
- WO 2005103301 A
- US 2004250317 A
- WO 2002100163 A
- US 2002102582 A
- WO 2004011601 A
- US 2006095986 A
- WO 2011062904 A
- WO 2009111263 A
- US 20110138504 A
- US 2009130071 A
- WO 2009064652 A
- US 20100080887 A
- WO 2010037016 A
- WO 2011034704 A
- WO 2012051199 A
- WO 2010024976 A
- US 20110067141 A
- WO 2009102873 A
- US 2008028482 A
- WO 2005059103 A
- WO 2004072235 A
- US 2006059590 A
- WO 2011153186 A
- WO 2012134808 A
- WO 07140256 A
- US 2008260932 A
- US 2006282915 A

- WO 2006130436 A
- WO 2001031042 A
- WO 2001041558 A
- US 2003188347 A
- US 2007292854 A
- WO 2008114282 A
- WO 2002036831 A
- US 2008070260 A
- WO 2012082548 A
- WO 200244407 A
- US 2009265817 A
- US 2001029014 A
- WO 2001051654 A
- US 2010077501 A
- WO 2008122406 A
- WO 2006128568 A
- US 2005039226 A
- WO 2004099447 A
- WO 2003052073 A
- WO 2011084632 A
- WO 2011084621 A
- WO 2011063413 A2
- WO 2011066360 A1
- WO 2011066384 A1
- WO 2011075593 A1
- WO 2011075595 A1
- WO 2011084621 A1
- WO 2011084632 A1
- WO 2011153186 A1
- WO 2012033794 A2
- WO 2012051199 A2
- WO 2012075426 A1
- WO 2012075429 A1
- WO 2012082548 A2
- WO 2012071039 A1
- US 2012131692 A
- WO 2012075426 A2
- WO 2012075429 A2
- WO 2012134808 A1
- WO 2013003558 A1
- WO 2013010094 A1
- WO 2013012775 A1
- WO 2013080120 A


**Non-patent literature cited in the description**


- *Crop Protection,* 2006, vol. 25, 468-475
- *Can Jour Plant Sci,* vol. 83 (3), 519-524
- **JENSEN DF et al.** Development of a biocontrol agent for plant disease control with special emphasis on the near commercial fungal antagonist Clonostachys rosea strain 'IK726. *Australas Plant Pathol.,* 2007, vol. 36, 95-101
- **PIETR et al.** *Zesz. Nauk. A R w Szczecinie,* 1993, vol. 161, 125-137
- *J. Med. Chem.,* 1995, vol. 38 (11), 1892-1903
- *J. Heterocyc. Chem.,* 1981, vol. 18 (7), 1305-1308
- *J. Am. Chem. Soc.,* 2001, vol. 123 (25), 5962-5973
- Catalogue of pesticide formulation types and international coding system. Technical Monograph. Croplife International, May 2008
- Current Protocols in Molecular Biology. 1987
- *CHEMICAL ABSTRACTS,* 2375110-88-4
- *CHEMICAL ABSTRACTS,* 1771741-86-6
- *CHEMICAL ABSTRACTS,* 2074661-82-6
- *CHEMICAL ABSTRACTS,* 885026-50-6
- *CHEMICAL ABSTRACTS,* 872999-66-1
- *CHEMICAL ABSTRACTS,* 1225292-17-0
- *CHEMICAL ABSTRACTS,* 1440516-42-6
- *CHEMICAL ABSTRACTS,* 1204776-60-2
- *CHEMICAL ABSTRACTS,* 1461743-15-6
- *CHEMICAL ABSTRACTS,* 1226889-14-0
- *CHEMICAL ABSTRACTS,* 1449220-44-3
- *CHEMICAL ABSTRACTS,* 1332628-83-7
- *CHEMICAL ABSTRACTS,* 1477923-37-7
- *CHEMICAL ABSTRACTS,* 1105672-77-2
- *CHEMICAL ABSTRACTS,* 1232543-85-9
- *CHEMICAL ABSTRACTS,* 1268277-22-0
- *CHEMICAL ABSTRACTS,* 1233882-22-8
- *CHEMICAL ABSTRACTS,* 1108184-52-6
- *CHEMICAL ABSTRACTS,* 1542271-46-4
- *CHEMICAL ABSTRACTS,* 1370358-69-2
- *CHEMICAL ABSTRACTS,* 1181213-14-8
- *CHEMICAL ABSTRACTS,* 1253850-56-4
- *CHEMICAL ABSTRACTS,* 933798-27-7
- *CHEMICAL ABSTRACTS,* 934001-66-8
- *CHEMICAL ABSTRACTS,* 1452877-50-7
- *CHEMICAL ABSTRACTS,* 1638765-58-8
- *CHEMICAL ABSTRACTS,* 1229023-00-0
- *CHEMICAL ABSTRACTS,* 1594624-87-9
- *CHEMICAL ABSTRACTS,* 1594637-65-6
- *CHEMICAL ABSTRACTS,* 1594626-19-3
- *CHEMICAL ABSTRACTS,* 2396747-83-2
- *CHEMICAL ABSTRACTS,* 1207977-87-4
- *CHEMICAL ABSTRACTS,* 1398-61-4
- *CHEMICAL ABSTRACTS,* 9012-76-4
- *CHEMICAL ABSTRACTS,* 41858-19-9
- *CHEMICAL ABSTRACTS,* 219479-18-2
- *CHEMICAL ABSTRACTS,* 95855-00-8
- *CHEMICAL ABSTRACTS,* 205121-04-6
- *CHEMICAL ABSTRACTS,* 31541-57-8
- *CHEMICAL ABSTRACTS,* 96420-72-3
- *CHEMICAL ABSTRACTS,* 133993-74-5
- *CHEMICAL ABSTRACTS,* 54091-06-4
- **DENARIE et al.** *Ann. Rev. Biochem.,* 1996, vol. 65, 503
- **DIAZ et al.** *Mol. Plant-Microbe Interactions,* 2000, vol. 13, 268

- **HUNGRIA et al.** *Soil Biol. Biochem.,* 1997, vol. 29, 819
- **HAMEL et al.** *Planta,* 2010, vol. 232, 787
- **PROME et al.** *Pure & Appl. Chem.,* 1998, vol. 70 (1), 55
- **D'HAEZE et al.** *Glycobiol,* 2002, vol. 12 (6), 79R
- **DEMONT-CAULET et al.** *Plant Physiol.,* 1999, vol. 120 (1), 83
- **HANEL et al.** *Planta,* 2010, vol. 232, 787
- **MULLER et al.** *Plant Physiol.,* 2000, vol. 124, 733
- **ROBINA et al.** *Tetrahedron,* 2002, vol. 58, 521-530
- Docking of Chitin Oligomers and Nod Factors on Lectin Domains of the LysM-RLK Receptors in the Medicago-Rhizobium Symbiosis. **ROUGE et al.** The Molecular Immunology of Complex Carbohydrates-3. Springer Science, 2011
- **VAN DER HOLST et al.** *Curr. Opin. Struc. Biol.,* 2001, vol. 11, 608
- **WAN et al.** *Plant Cell,* 2009, vol. 21, 1053
- **COTTAZ et al.** *Meth. Eng.,* 2005, vol. 7 (4), 311
- **SAMAIN et al.** *Carbohydrate Res.,* 1997, vol. 302, 35
- **SAMAIN et al.** *J. Biotechnol.,* 1999, vol. 72, 33
- **POCHANAVANICH et al.** *Lett. Appl. Microbiol.,* 2002, vol. 35, 17
- **JAIN et al.** *J. Plant Biochem. & Biotechnol.,* 2002, vol. 11, 1
- **SHAW et al.** *Environ. Microbiol.,* 2006, vol. 11, 1867
- **RALSTON et al.** *Plant Physiol.,* 2005, vol. 137, 1375
- **MABOOD et al.** *PLANT PHYSIOL. BIOCHEM.,* 2006, vol. 44 (11), 759
- **MABOOD et al.** *AGR. J.,* 2006, vol. 98 (2), 289
- **MABOOD et al.** *FIELD CROPS RES.,* 2006, vol. 95 (2-3), 412
- **MABOOD ; SMITH.** Linoleic and linolenic acid induce the expression of nod genes in Bradyrhizobium japonicum USDA 3. *PLANT BIOL.,* 2001
- **ESTRUCH et al.** *Proc Natl Acad Sci US A.,* 1996, vol. 93 (11), 5389-94
- *ACS Medicinal Chemistry Letters,* 2017, vol. 8 (9), 919-924
- *Organic Letters,* 2004, vol. 6 (14), 2361
- *Journal of Organic Chemistry,* 2013, vol. 78, 5218
- *Tetrahedron,* 2016, vol. 72, 734
- *Org. Proc. Res. Dev.,* 2012, vol. 76, 1794
- *Journal of the American Chemical Society,* 2013, vol. 135 (23), 8668-8681
- *Tetrahedron,* 2018, vol. 74 (31), 4236-4241
- *Journal of the American Chemical Society,* 2013, vol. 135 (44), 16288-16291
- *Bioorganic & Medicinal Chemistry Letters,* 2007, vol. 17 (3), 756-760
- *Tetrahedron Letter,* 1982, vol. 23 (24), 2475
- *Journal of Organic Chemistry,* 1989, vol. 54 (23), 5574-80
- *Organic & Biomolecular Chemistry,* 2020, vol. 18 (34), 6732-6737
- *Journal of the American Chemical Society,* 2019, vol. 141 (6), 2274-2278
- **COLBY, S.R.** Calculating Synergistic and Antagonistic Responses of Herbicide Combinations. *Weeds,* 1967, vol. 15, 20-22
- *Neth. J. Plant Path.,* 1964, vol. 70, 73-80